(19) Europäisches Patentamt
European Patent Office
Office européen des brevets

(11) Publication number: **0 260 568 A2**

# EUROPEAN PATENT APPLICATION

(21) Application number: 87113049.8

(51) Int. Cl.⁴ G06F 9/44, G06F 13/42

(22) Date of filing: 07.09.87

(30) Priority: 08.09.86 US 904982

(43) Date of publication of application: 23.03.88 Bulletin 88/12

(84) Designated Contracting States: AT BE CH DE ES FR GB GR IT LI LU NL SE

(71) Applicant: Compaq Computer Corporation
20555 FM 149
Houston Texas 77070(US)

(72) Inventor: Culley, Paul R.
7342 Odinglen
Houston Texas 77095(US)

(74) Representative: Frohwitter, Bernhard, Dipl.-Ing. et al
Bardehle-Pagenberg-Dost-Altenburg Frohwitter Geissler & Partner Postfach 860620 Galileiplatz 1
8000 München 80(DE)

## (54) Computer systems speed control at continuous processor speed.

(57) A personal computer is disclosed having a high speed microprocessor which executes in a variety of selectable speed modes to provide greater compatibility with application programs written for slower speed microprocessors. A logic means is included responsive to the speed select signal which does not change the speed of the microprocessor oscillator (clock) but rather changes the length of a wait state or "STOP" state of the microprocessor. The "STOP" state of the microprocessor is varied by varying the time delay setting of a one-shot timer. The one-shot timer keeps the "STOP" request active and therefore keeps the microprocessor (CPU) from running bus cycles (executting code) until the timer times out thereby releasing the CPU STOP. By varying the length of the time delay of the one-shot timer, which halts the execution of bus cycles (code), the microprocessor simulates microprocessor speed changes which have the appearance of earlier generation computer with older microprocessors. The computer and software disclosed enhances compatability of a faster microprocessor with older applications programs written for slower microprocessor without varying the microprocessor clock rate.

Fig. 1

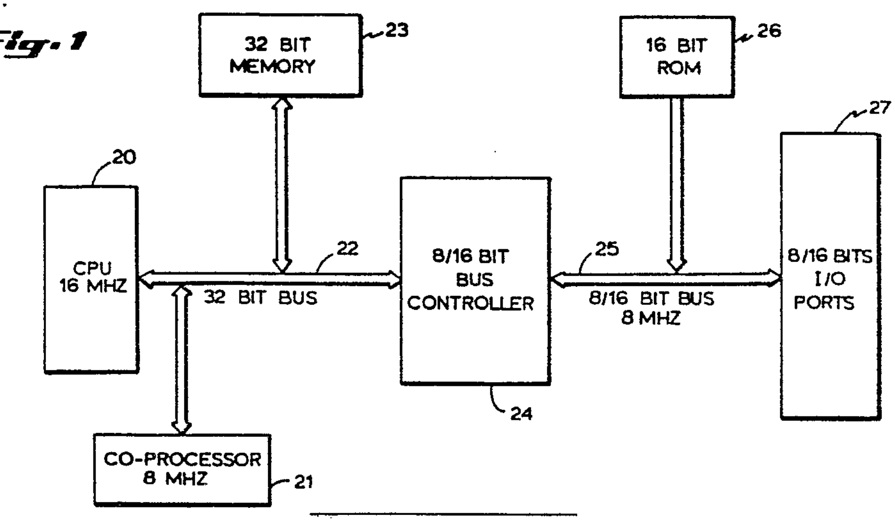


EP 0 260 568 A2

## COMPUTER SYSTEMS SPEED CONTROL AT CONTINUOUS PROCESSOR SPEED

This invention relates to personal computers designed with commercially available microprocessor chip sets. More particularly, the present invention relates to a personal computer in which the central processing unit (microprocessor) is controlled to execute programs in a variety of selectable speeds to achieve software compatibility with existing application programs which, because of their specific hardware dependency, cannot be run at higher speeds.

The present invention permits one to select speeds ranging from execution speeds which simulate those below original microprocessors such as the 8088/8086 microprocessors (manufactured by Intel); speeds which simulate advanced microprocessors such as the 80286 microprocessors (manufactured by Intel); speeds which simulate the new generation microprocessors such as the 80386 microprocessors (manufactured by Intel) and any intermediate speeds.

The introduction of the personal computer has resulted in a tremendous amount of application software programs written for both the professional and for the home entertainment markets. These personal computers are designed around commercially available microprocessor chip sets which may include a plurality of microprocessors connected in an architecture which results in varying degrees of execution throughput rates.

It has also been discovered that many of the currently used copy-protected schemes currently employed by many of the software writers are dependent on microprocessor clock rates. Many of the new personal computers employing some of the new generation microprocessors with high clock rates cannot utilize the copy-protected software without data transfer errors.

Popular microprocessor chip sets widely used by personal computer manufacturers are the Intel Corporation 8088 microprocessor; the 8086 microprocessor; and the 80286 microprocessor, all having similar instruction sets. Similar instruction sets are also available for a new generation microprocessor from Intel, the 80386 microprocessor. The 80386 microprocessor has a substantially higher execution cycle rate than its predecessors, almost three times faster than the 80286. Available also from Intel is a co-processor chip, the Intel 80287, which may be used either with the 80286 or the 80386 microprocessor chips to achieve even higher execution throughput rates. Also available is a 80387 co-processor, however, this co-processor is not commercially viable at the present time.

With the availability of a software compatible microprocessor (i.e., executes the same instruction sets), it is possible to upgrade a prior art personal computer with personal computers with higher execution speeds and maintain compatibility with some application programs written for the lower speed microprocessor chip sets. While faster software compatible microprocessors are available, it is not possible, however, to simply substitute the faster microprocessor for the slower microprocessor and thereby produce a personal computer which executes at a higher speed for all of the application programs written for the slower microprocessor.

Not all application programs written for the slower microprocessors, i.e., 8088/8086 and 80286 microprocessors, are capable of running at faster microprocessor speeds even though each instruction in the program is executed in a similar manner in these machines. The inability to run some programs at higher speeds results from the fact that programmers, when writing application programs (third party software) for the slower microprocessors, take advantage of the particular execution cycle time in structuring routines which are time dependent. For example, video game programs rely upon the normal execution cycle time for the microprocessor in generating time intervals which are necessary for the programs to perform its various functions. Running the program at higher instruction execution speeds changes the resulting time intervals and thereby renders the program non-functional. Application programs which are not dependent upon the execution speed typically can be run at those higher execution speeds and obtain the same results.

Similarly copy-protected programs rely on normal execution cycle times for the microprocessor in generating time intervals which are necessary for the program to perform its various functions. These copy-protected programs do not function properly whenever the instruction execution speeds change.

It is undeniable that providing a personal computer capable of executing application programs written for slower microprocessors in a third of the time would be of a commercial advantage in the marketplace, but such a device would not be commercially viable unless it were able to execute a majority of the application programs written for slower speed microprocessors. For example, it is possible to provide a personal computer having an Intel 80386, 80287 microprocessor pair (high speed micropro cessors) rather than an 80286, 80287 microprocessor pair (slower speed microprocessors) and run the high speed microprocessor at different clocking frequencies (rates), high speeds for those application programs which can run at the higher speeds and slower speeds for those application programs which are time dependent. Unfortunately, this simple clocking speed change does not result in a personal computer which is software compatible for all varieties of application programs.

It should also be realised that a change of the clock rate (microprocessor frequency) will not suffice because of the many other machine functions which may be affected.

Even though the previous microprocessor chip sets, (i.e. 8086, 8088, 80286) are software compatible, the internal design of the microprocessors is not the same. This difference in internal design, depending upon the design of the application program, i.e., does it contain a lot of program jumps, affects the execution speed of a given application program. The execution time at the high speed for the high speed microprocessor is not necessarily proportionally faster than the execution time when microprocessor clock is set to the slower normal frequency for the slow speed microprocessor. Stated differently, reducing the microprocessor clock from a high speed mode to the normal clock for the slow speed microprocessor while keeping all else the same does not result in the same execution time for a given application program to run on the high speed microprocessor as occurs if the same program is run on the slow speed microprocessor.

For the Intel 80386 microprocessor, simply reducing the clocking frequency to the clocking frequency of an 8088, 8086, or 80286 microprocessor results in an execution speed which is faster than it would have been for the slow speed 8088 microprocessor chip. This faster execution speed results from the internal design differences which exist between the microprocessors, and the fact that the 80386 requires 32-bit fetches from memory while the 8088 requires 8-bit fetches, the 8086 requires 16-bit fetches and the 80286 requires 32-bit fetches using two 16-bit parallel paths.

The internal design difference between these microprocessors is primarily in the amount of pre-fetch buffer memory provided in the microprocessor. In the Intel 8088, there are four bytes of pre-fetch queue, in the 8086, there are six bytes of pre-fetch queue, in the 80286, there are 8 bytes of pre-fetch queue while in the 80386 there are 12 bytes of pre-fetch queue. Each microprocessor is designed to keep its pre-fetch queue full of information in order that the microprocessor can continue to execute code, which on the average, achieves a desired execution throughput rate. When program jumps occur, the contents of the pre-fetch buffer are lost. This loss of information is reflected in wasted execution time because of the time required to obtain the pre-fetch information that is discarded at the time the program jump occurs. Thus, the 8088 microprocessor, having four bytes of pre-fetch queue running at a given clocking frequency and fetching 8-bit bytes per fetch cycle would produce different execution throughput than the 80386 having 12 bytes of pre-fetch queue running at the same clocking frequency but fetching 32-bit bytes per fetch cycle. It is because of this difference in the pre-fetch buffer capacity and the rate at which 32-bit bytes are fetched from memory that the 80386 runs at a faster speed for the same application program when the 80386 microprocessor is run at the same clocking frequency as is normally used for the slower microprocessor, e.g., 8088.

Therefore, it would be advantageous to provide a personal computer which provides for a high speed microprocessor to execute application programs which are not time dependent at high speeds, but provides a lower speed execution for those application programs which are time dependent so that the time dependent application programs appear to be running at substantially the same execution speed as they would have run on the microprocessor for which they were written.

In accordance with the present invention, there is disclosed a personal computer having a high speed microprocessor that is responsive to a mode select signal for executing at a variety of selectable speeds thereby permitting application programs written for a slower speed microprocessor to be run on a high speed processor as well as to give one the benefit of performing high speed microprocessor functions for programs not time dependent and/or for programs written with the high speed microprocessor clock rate in mind.

In accordance with the present invention the personal computer embodying the invention is further equipped with an automatic speed control feature which simulates the microprocessor speed for older generation microprocessors. The speed control system or feature automatically detects the occurrence of timing-dependent programs and adjusts the overall program execution speed, thereby simulating a system speed compatible with copy-protected software and/or floppy diskette operations.

In accordance with the present invention the speed control mechanism is also manually selectable and can be manipulated by a computer operator to achieve system speeds from those below an 8088 microprocessor through the full system speed for an 80386 microprocessor.

It is an object of the present invention to implement the invention in hardware, software or any combination thereof. It is a further object of the present invention to achieve the simulation of slower microprocessor speeds by varying the length of the "STOP" or "HOLD" state of the microprocessor. Thus the microprocessor clock rate is not changed as done in other prior art machines.

The invention embodied in the personal computer described herein further includes a 32-bit RAM memory and a 16-bit ROM memory, each memory having a word comprised of a plurality of bytes, and a microprocessor clock generator running at a constant rate of 16 MHz. The system speed is adjusted by varying the length of the microprocessor "STOP" state not the microprocessor system speed of 16 MHz.

The invention embodied in the personal computer described herein also includes a logic means responsive to the speed select signal for controlling the length of the STOP state of the high speed microprocessor when in a slower than full speed mode. In this manner, the high speed microprocessor executes time dependent application programs in a slow mode without affecting the microprocessor clock rate of 16 MHz.

For a fuller understanding of the present invention, reference should be had to the following detailed description of the preferred embodiment of the invention taken in conjunction with the accompanying drawings in which:

FIGURE 1 is a functional block diagram of the architecture of the present invention;

FIGURE 2 is a simplified logic diagram illustrating the logic sequence employed in the microprocessor speed adjustment invention;

FIGURE 3 is a timing diagram for various signals of the microprocessor speed control logic and the HOLD request and RESET request signals which occur during different cycle operations;

FIGURE 4 is a simplified schematic illustrating the basic logic steps employed to implement the microprocessor speed control.

FIGURES 5A and 5B comprise detailed partial circuit diagrams of a portion of the schematics;

FIGURE 6 comprises a detailed partial circuit diagram of a portion of the DRAM memory board - schematics; FIGURE 7 is a simplified flow diagram of the HOLD/RESET arbitration logic; and

FIGURE 8 is a block diagram of the functions included on the system board.

Similar reference numerals refer to similar parts throughout the several views of the drawings.

Through the following detailed description of the preferred embodiment of the present invention, and shown in the accompanying drawings, the following notation has been adopted for indicating signals. Since the terms "1" and "0" and "true" and "false" can be ambiguous, their use is avoided. In their place the terms "logic high" (H) and "logic low" (L), in association with "active" and "inactive" states for how the signals have been used. An asterisk (*) following a signal name indicates that the signal is "active" when low. For example, the HOLD request signal to the microprocessor is designated HRQ* and is active when at a logic low state, while the REFRESH signal designated as REFRS and is active when in a logic high state. The signals are "inactive" when in the logic state opposite to its "active" logic state. In our example, HRQ* is inactive when in the logic high state, and the signal REFRS is inactive when in the logic low state.

Certain logic circuit functions of the preferred embodiment of the present invention have been constructed using Programmable Array Logic (PAL) chips in implementing the combinational logic required to combine certain ones of the logic signals to obtain additional logic signals. For such devices and where necessary to practice the present invention, the combinational logic circuits implemented with the PAL chips are neither shown in the drawings or discussed in the specifications, however, the logic design data for producing each PAL chip contained in the invention and illustrated in the drawings is provided in this specification as an appendix. The PAL design data presents the logic equations for combining the input signals to produce the output signals indicated in the drawings. For these design equations and the type of PAL chip to be programmed, it is possible to produce the particular chip using standard manufacturing techniques suggested by the PAL chip manufacturer.

A speed control feature of the present invention has been implemented in the preferred embodiment to provide compatability with a number of software products that contain programs dependent on certain system speeds. Typically, these programs contain timing idiosyncrasies associated with diskette copy protection mechanisms. The system speed control hardware in the preferred embodiment can also automatically detect the occurrence of timing-dependent programs and thereby adjust the overal program execution speed to simulate a system speed compatible with the copy protection mechanisms. The speed control function described herein is also useful for adjusting the personal computer program execution speed to handle action software games written for 8088-based personal computers. Reduction of the system speed to simulate the system speed of an 8088-based personal computer allows these games to be played at a realistic speed.

The simulated system speed control is accomplished by reducing the system bus bandwidth using extended REFRESH cycles. Since the CPU is in a HOLD state during REFRESH cycles, the apparent execution speed of programs is reduced as the length of the REFRESH cycles are increased. The lengthening of the REFRESH cycles, however, has been carefully implemented so as not to reduce the DMA latency period that would be present during REFRESH cycles of normal length. A DMA request for access to the bus cycle is granted access to the bus immediately, since the CPU is already in the HOLD state. The amount of time added to the normal REFRESH cycle period is determined by the length of a one-shot time period output by one of the Intel 8254 timers in the system.

A RESET/HOLD arbitration circuit has been implemented in the preferred embodiment of the present invention by adding a flip-flop arbitration circuit to the HOLD and RESET lines to prevent these signals from occurring simultaneously. This arbitration circuit causes a RESET signal to wait until after any pending HOLD request is serviced or causes the HOLD signal to wait until after the RESET is completed, depending on which signal is received first at the input to the arbitration flip-flop.

The implementation of the RESET/HOLD arbitration circuit in a personal computer with an 80386 microprocessor restores compatibility to application programs, written for an 80286 microprocessor, which utilized the extended address space of the microprocessor in what is called the "protected" mode. Application programs which used the extended address space of the microprocessor in the "protected" mode can only return to the "real" mode by resetting the microprocessor. The RESET of the microprocessor in the 80286 chip was accomplished by a feature which allowed the CPU RESET without upsetting the state of the rest of the machine. Upon RESET of the microprocessor the processor returned to the "real" mode.

The chip designers of the 80386 eliminated the processor's ability to recognize and respond to a "HOLD" request from external hardware even during the processor RESET. The HOLD state is used for system REFRESH of Dynamic Random Access Memory (DRAM) and for Direct Memory Access (DMA). Thus these operations, DRAM REFRESH and DMA, cannot occur during RESET of the 80386 processor. Since third party application programs were written with these processor features in mind (i.e., DRAM REFRESH and DMA), during processor reset, the 80386 microprocessor which eliminated these feature was imcompatible with pre-existing programs.

The arbitration circuit implemented in the preferred embodiment of the invention permits the DRAM REFRESH and DMA operations to properly operate during processor reset. Thus compatibility with third party software which implemented these features is assured with the 80386 microprocessor.

A dual mapping BIOS function is implemented in the preferred embodiment by using some of the high performance Random Access Memory (RAM) to hold the BIOS stored in ROM. Utilization of the RAM to store the BIOS improves the performance of the 80386 microprocessor since the microprocessor accesses a 32-bit memory (RAM) instead of the 16-bit memory (ROM). In prior art personal computers software (BIOS) has been contained in ROM connected to the microprocessor at the microprocessor's normal data size, i.e., 8-bit ROM for 8-bit processor such as the 8088 and two 8-bit ROMs for the 16-bit microprocessor such as the 8086 and 80286 processors. These 8 and 16-bit ROMs were fast enough in access time to meet the requirements of the prior art processors so the ROM's did not affect system performance to any degree.

With the development of the 32-bit 80386 microprocessor the standard 8 and 16-bit ROMs were too slow to keep up with the microprocessor. The additon of two more ROM devices (to achieve a 32-bit bus width) presents an undesirable cost penalty, however, a 16-bit ROM on a slower 16-bit bus materially affects the speed advantage of a 32-bit microprocessor.

Implementation of a dual mapped BIOS provides a 32-bit RAM memory for the BIOS at no significant cost penalty since the 16-bit ROMs are not replaced. Use of 32-bit RAM can be fully cost justified since the RAM subsystem necessary for a 32-bit processor required a minimum of 1024 kilobytes. Since a majority of the applications software can only utilize 640 kilobytes of RAM, 384 kilobytes of high performance RAM was available for use by the BIOS.

To achieve compatability with prior art machines, the BIOS code has to remain at its original address and must be protected from an inadvertent write-over.

The dual mapped BIOS has been implemented in the preferred embodiment by adding decoding logic to the RAM subsystem to allow the system to respond to the ROM addresses. The decoding logic operates through a writable control port which switches the system from operation out of the 16-bit ROM to operation out of the RAM.

Implementation in the preferred embodiment is accomplished in the following sequence:

1) Computer power up;

2) Execution of BIOS stored in ROM begins;

3) Part of RAM system is tested;

4) BIOS copied from ROM to RAM which has been tested;

5) Control bit written by ROM code causing BIOS restored in RAM to continue start-up of machine;

6) BIOS stored in RAM is write protected;

7) Machine boot-up and continues operation out of RAM

Turning now to the Figures, and first to FIG. 1, there is shown a functional block diagram of a personal computer in accordance with the present invention. The personal computer is designed around the central processing unit (CPU) comprised of microprocessor (CPU) 20 and co-processor 21 (hereafter sometimes referred to as numeric processor). For the preferred embodiment of the present invention, microprocessor 20 is an Intel Corporation 80386 microprocessor and the numeric coprocessor 21 is an Intel Corporation 80287 microprocessor. It is also possible to substitute the 80287 microprocessor with an Intel 80387 microprocessor when those microprocessors become commercially available.

Processor 20 and co-processor 21 are functionally connected to a 32-bit data bus 22. A 32-bit Random Access Memory (RAM) 23 is also connected to the 32-bit data bus. In order to permit the 32-bit processor 20 and co-processor 21 to function with the older generation products consisting of 8-bit and 16-bit input and output devices a bus controller 24 is provided between the 8/16-bit bus 25 and the 32-bit bus 22. The bus controller 24 re-structures data from 8-bit and 16-bit devices into a data string which can be accepted and used by the 32-bit devices attached to the 32-bit bus 22.

The bus controller 24 likewise re-formats the 32-bit data in a format which can be accepted and used by the 8 and 16-bit devices attached to the 8/16-bit bus 25.

As is further shown in FIG. 1, a 16-bit Read Only Memory (ROM) 26 is functionally connected to 8/16-bit bus 25. The ROM 26 is used to store the Basic Input/Output System (BIOS). A copy of the BIOS is transferred to RAM after the computer power is turned on and a partial RAM system test is completed.

Also illustrated in FIG. 1 are the 8/16-bit input/output device ports which are functionally connected to the 8/16-bit bus 25. Data transferred from the 8 and 16 bit input/output devices to the 32-bit RAM 23 is restructured by the bus controller 24 before being stored in the 32-bit RAM.

Intel Corporation has published documentation for its 80386 and 80287 processors. This documentation is essential to an understanding of the operation of Intel's processors. Instruction sets and the information provided in Intel's manuals is presumed to be firmly understood by anyone attempting to practice this invention.

The preferred embodiment of personal computer which implements this invention contains at least the following hardware:

a) 80386 microprocessor;

b) 32 MHz clock for the 80386 microprocessor;

c) A 4 MHz or 8 MHz clock for a co-processor;

d) An 8 MHz expansion bus compatible with an 80286 processor;

e) A 4 MHz clock for the DMA subsystem

f) Random Access Memory;

g) Read Only Memory; and

h) Input/output device slots. It is to be understood that the above listing of hardware requirements is not intended to limit the scope of the invention but rather to describe the preferred embodiment.

To provide a full and complete disclosure of the invention and to permit one skilled in the art to practice the invention, the mother board schematics of the preferred embodiment are attached hereto as Appendix A and are incorporated by reference as if set forth herein in full. The memory board schematics of the preferred embodiment are attached hereto as Appendix B and are incorporated by reference as if set forth herein in full. A bill of materials for the preferred embodiment of mother board schematics is attached hereto as Appendix C and is incorporated by reference as if set forth herein in full. A memory board bill of materials for the preferred embodiment is attached hereto as Appendix D and is incorporated by reference as if set forth herein in full.

The various clock rates referred to in the schematics are CLK 16, CLK 24 and OSC. The system clocks are separated into three sections. One is the CPU clock (32 MHz) for the 80386 and it's associated circuits. Another is the 24 MHz clock which is used for the numeric co-processor. The third is the 14.31818 MHz clock which provides software compatible system timing functions, a fixed frequency signal on the expansion bus, and the 8042 keyboard processor clock reference.

The CLK 32 signal is clock for the 80386 processor (CPU). The CPU clock is provided by a crystal oscillator, CMOS buffer IC (74HC125), and an F74 flip-flop. There are three outputs from these circuits, a 32 MHz processor clock, a 16 MHz reference clock (CLK16*) (which has the same phase as the internal CPU clock), and a reset signal which meets the setup and hold time requirements for the 80386. The CPU reset is always adjusted to the 16 MHz clock so that the phase is properly matched to the CPU.

The 32 MHz clock and the CLK16* signal are provided to the 32-bit memory board for use in state machines synchronized in the CPU.

The signal BCLK is a (approximately) divide by two from CLK16*. This division takes place in the substate machine PAL D4-STAT where the clock is also re-synchronized to the CPU on each bus cycle. It is this adjusting that leads to the "approximately" part of the divide by two functions. The average frequency will be somewhat less than 8 MHz. Transitions of BCLK occur on rising edges of CLK16*.

The clock for the DMA subsystem is generated from the rising edge of the BCLK clock by toggling a 74LS74 flip-flop. The outputs (DCLK, DCLK*) will therefore have a frequency of one half that of BCLK.

The CLK 24 signal is the clock for the 80287 co-processor.

The clock source for the 80287 is developed from a 24 MHz crystal oscillator. The 24 MHz frequency (CLK 24) is divided down in single 74HC109 to provide either 12 MHz or 8 MHz for use by the numeric co-processor (80287). The 12 MHz frequency is divided again inside an 80287-3 to provide a 4 MHz operating frequency. The 8 MHz has the required 33% duty cycle for direct use by an 80287-8 giving an operating frequency of 8 MHz. The choice of frequencies is provided by switch SW1-3. Switch OFF selects 8 MHz (80287-8), switch ON selects 4 MHz (80287-3).

System bus compatibility is provided by clock rate OSC. The specific time dependent clocks in the system are generated by a crystal oscillator at a frequency of 14.31818 MHz which generates the signal OSC.

The OSC signal is provided to the system bus for compatibility with older generation computer products. The OSC signal is also divided by two by the PCLK flip-flop to provide a stable and unchanging frequency source (7.1591 MHz) to the keyboard processor (8042). The PCLK signal is in turn divided by six to provide a timing reference for the system timer (TIMCLK). This frequency is 1.19318 MHz and is compatible with the previous products for timing and speaker purposes.

The divide by six is done with a synchronous counter which cycles though the counts of 1 through 6 and back again. The counter is not specifically set on power-up but will always cycle into the legal count sequence within seven clocks.

The microprocessor addresses and data handling are generally handled in the manner set forth below. Typically the processor begins a bus cycle by placing an address and status on it's bus. This address will usually come out even while the previous cycle is still in progress. Since most devices expect to see a valid address for the duration of a bus cycle, it is necessary to latch the address seen by the system bus. Some devices (notably high speed memory) are already short on time to perform their function therefore they overlap some of their operations with others, (i.e., address decode). To allow this, the system bus also provides a set of address lines LA<23:17> which are not latched but which can provide a greater setup time to perform decoding. The typical usage of these lines is address decoding whenever the address changes, and then latch the decoded outputs.

To provide the unlatched addresses, the board contains buffers ICs which are connected to the CPU's PA<23:17> address lines and provide LA<23:17> (see FIG. 8) as an output.

To provide the latched addresses, the board contains latched ICs which are connected the to CPU's PA<19:2> and provide SA<19:2> as an output. These latches are of the fallthrough type so that when the Address Latch Enable signal (ALE) goes active the address appears at the output. When ALE goes inactive, the addresses will stay on the outputs until the next bus cycle begins.

The address lines SA0 and SA1 are handled differently. The CPU indicates which bytes are to be accessed out of the 32-bit word by the status lines BE3* to BE0* or Bus Enable three through zero. The output of this state machine are the address line SA0, SA1 and BHE*.

The signal BHE* is used on the system bus to indicate that the high half of the 16-bit data bus contains valid data.

These signals (SA0, SA1 and BHE*) are changed at the rising edge of ALE so that their timing is very similar to the other SA<19:2> address lines.

All of the address outputs listed above are disabled when the CPU responds to a HOLD request (BHLDA) so that another device can control the address bus. When this occurs, the address lines are fed back to the CPU bus (PA<23:2>> and BE<3:0>) so that the 32-bit memory board can receive the address data from the other device. The feed back operation occurs from the SA<16:0> and the LA<23:17> lines through buffers and a PAL (D4-SADI) for SA0, SA1 and BHE*.

CPU address line PA20 is handled a little differently. Because of software compatibility considerations (with 8088 products) it is sometimes necessary to restrict program access to the bottom megabyte of memory. This is done by disconnecting the PA20 line from the bus and forcing a low in it's place (by means of a 74F257). This is controlled by the line LOWA20 from the keyboard con troller. To equalize the delay with the other address lines, the output of the 74F257 is used to directly drive the LA20 line instead of being buffered again by a 74LS245.

The CPU data bus is buffered from the rest of the system by four bi-directional buffer ICs and four latches. On the CPU side of the bus, the 80386 and 80287 are connected together. Four ICs buffer the separate bytes of the data bus. The latches are used to hold read data for the CPU during separate read cycles on the system bus when the CPU attempts to read more data than the system bus allows.

The data path also contains a bi-directional buffer between the high and low half of the bus to enable routing of the data from high half to low during high writes and routing of the data from low to high half during high reads of the 8-bit bus. This function is controlled by the CPYEN* and CPYHL* lines. CPYEN enables the buffer, CPYHL* controls the direction according to the type of cycle (active for CPU writes or DMA reads).

The last item in the data path is a buffer for the processor board I/O devices. This buffer is normally active in the "TO" direction to the I/O devices and switches to the "FROM" direction when an I/O read occurs to these devices (controlled by CIORD*). This buffer is disabled when DMA operations occur to allow the bus to be used by the DMA controllers for address latching.

Table I, attached hereto as Appendix E and incorporated by reference as if set forth herein in full, illustrates the bus conversion from the CPU's BE<3:0> lines to the address lines and the data buffers that are enabled for each conversion.

Note that in Table I the "X8" term means that the system bus has indicated the cycle should be 8-bits. The BEx* lines are negative true bus enables from the CPU. The SA1 and SA0 lines are positive true and BHE* is negative true. The BENx* lines enable the data buffers to the bus and the latching function from the bus, they are negative true. The CPYEN* line enables the copy buffer from the SD<7:0> to SD<15:8>, the CPYHL* lines is also enabled when reading (high to low copy). The LAST CYCLE term is used to indicate the last cycle in a group of cycles from one CPU status, it tells the state machine to send the CPU the READY* signal.

The command cycles generated by the bus control logic are listed in Table II attached hereto as Appendix F and incorporated by reference as if set forth herein in full. The number of 62.5nsec clocks is listed for a no-wait state cycle, normal cycle, and one wait state cycle for each of the command types. Both the total cycle time and the command active (on) time are given. For cycles with more than one bus wait state, each wait state adds two additional 62.5nsec clock cycles.

If the CPU status indicates more than one bus cycle will be required for a single CPU access, then the bus state machine will run the necessary number of bus cycles (duration indicted in Table II) to complete the CPU access. For example, if the CPU status indicates a double word memory read from the 8-bit bus, then the total cycles for the access would be $4*12=48$, 62.5nsec cycles (assuming normal cycles).

In the preferred embodiment the CPU is normally held in the NOT READY state. READY* only goes active (low) when a cycle is guaranteed to be finished. The CPU next address (NA*) line is normally inactive, requiring the logic to specifically tell the CPU when to send the next address.

The cycle begins when the 80386 activates ADS* and presents the status lines. The address is decoded by the 32-bit memory board (if present) and the signal M32* is produced. The system board decodes the status lines to determine if the cycle is a valid memory cycle, producing the signal MEM*. M32* and MEM* are then combined to the signal MEM32* which is latched by the rising edge of CLK32 (the CPU clock) at the beginning of phase one in the CPU cycle following ADS* going active. If the end result of this is NOT a valid 32-bit memory cycles, the signal MYCYC* goes active.

MYCYC* is then sampled by the D4-STAT PAL on the rising edge of CLK16* (the bus clock). Unless otherwise noted all clocks referred to are CLK16* clocks. When the PAL clocks in MYCYC* it generates the signal ALE*. The PAL code is set up to allow ALE* to be active only for a signal cycle. What follows next is the propagation of the ALE* pulse through a series of flip-flops arranged in a configurable shift register. The general method is to bypass parts of the shift register to shorten the total bus cycle time depending on the type of bus cycle to be executed.

The rising edge of ALE latches the address and status for later use and does the SA1, SA0, BHE* generation. This signal BCLK will be forced to a low during ALE by the D4-STAT PAL to insure the compatibility with previous products.

The next stage is T00. It is always generated. If the command being generated is a 16-bit memory command, as signified by LM-IO and M16*, then the signal CMD* will also be set active at this time. CMD* is combined with the decoded status to generate the signal MRDC* or MWTC*. If this is the last cycle in a set, (either guaranteed by the state or because the bus size is known by M16* and a memory cycle) then the D4-SADO PAL will set the signal CLSTD* active at this time.

The next stage is T01. It is always generated. If the command being generated is not a 16-bit memory command, as signified by LM-IO and M16*, then the signal CMD* will also be set active at time time. CMD* is combined with the decoded status to generate the signal IORC*, IOWC* or INTA*. If this is the last cycle in a set, (because the bus size is known by IO16* and an I/O cycle) then the D4-SADO PAL will set the signal CLSTD* active at the time. If this is 16-bit memory cycle, and the NOWS* signal was received during T00 (LNOWS* active), then the signal BRDY* will be generated next to terminate the cycle and no other stages will be activated.

The next stage is T10. It is always generated. If the cycle is a 16-bit memory cycle, then the T40 stage will also be activated at this time. In this case, the T10 and T11 states will be ignored for the remainder of the 16-bit memory cycle.

The next stage is T11. It will always be generated. If the cycle is a 16-bit I/O cycle, then T41 will also occur at the same time as T11. If this is an 8-bit cycle, and the NOWS* signal was received earlier (LNOWS* active), then the signal BRDY* will be generated next to terminate the cycle and no other stages will be activated. Otherwise, stages T20, T21, T30 and T31 will follow if the cycle is an 8-bit bus cycle as signalled by CX16* inactive.

The next stage is T40. This stage is entered either from T31 during an 8-bit cycle, or T01 if a 16-bit memory cycle or a cycle that does not depend on the CX16* status occurs. This stage is skipped if the LNOWS* line is found active.

The next stage is T41. This is entered only from T40 (the normal case) or T10 (if a 16-bit I/O cycle is in progress). If the signal WAIT* is active at the end of T41, then T41 will be restarted, holding the bus in a wait state. Since the WAIT* signal is developed by sampling the BUSRDY* going high only every BCLK rising edge, wait states will come in increments of two clock cycles. When WAIT* goes inactive, the signal BRDY* will be generated to terminate the cycle.

At the same time as the cycle is being terminated (BRDY* is set active) several things can occur. If this is not the last cycle in the set (CLAST* inactive), then TS0* is set active by the D4-STAT PAL to start another cycle. If this is the last cycle in the set (CLAST* active) and another cycle is pending (MYCYC* is active), then TS0* is set active by the D4-STAT PAL to start another cycle. If no more cycles are to be run for the moment, then the bus state machine will remain idle waiting for another cycle.

TS0* is used to provide an adequate address setup between cycles in a group or between groups when the CPU pipelines the next cycle. After TS0* the ALE state will be entered for the next cycle.

The signal CMD* (which is used to enable on of MRDC*, MWTC*, IORC*, IOWC* or INTA*) is started at the beginning of T00 or T01 as discussed above. It will end at the end of the basic bus cycle (when BRDY* or TS0 goes active).

The signal WDEN* is used for enabling the various data buffers during write cycles. It goes active at the same time as ALE and goes inactive one cycle after CMD* goes inactive. In the case of back to back cycles, WDEN* will therefor remain active until after the last CMD*.

The signal BRDY* from the D4-STAT PAL signals the end of a set of bus cycles to the CPU. The signal CLSTD* (which goes active for one CLK16* cycle to indicate that the last cycle of a set is in progress) also generates the CLAST* signal internal to the D4-SADO PAL. CLAST* is used by the D4-SADO PAL to do the conversion from BE<3:0> to SA1, SA0 and BHE*. CLAST* is also used to tell the state machine that no more cycles are in the set. At the rising edge of ALE, CLAST* is set to the inactive state in preparation for the next CPU access.

The signal CLSTD* is also used to generate NAB* (next address from bus) which signals the CPU that it is all right to put a new address and status onto the CPU bus. Since NAB* is sampled at the beginning of phase two of a CPU clock cycles, it is synchronized to the rising edge of CLK32 at the rising edge of CLK16* by a F175 flip-flop. This assures a setup time to the CPU for NA*.

The signal CX16* is used to signal the presence of a 16-bit memory or I/O cycle. It is set active during T00 for memory cycles if M16* is active. It is also set active during T10 for I/O cycles is IO16* is active. It is set inactive at ALE in preparation for the next cycle. This signal is used to control the bus address conversion for the 8 or 16-bit bus and to adjust the timing of the expansion bus for 16-bit operations.

The signal LOE* (latch output enable) is generated during read cycles from the 8/16 bus to enable the data stored in the data latches to the CPU data bus. LOED* is first set active during ALE in the D4-SMSC PAL and is set inactive as soon as the signal BRDY* is active. LOED* is then clocked through to LOE* by the rising edge of CLK32 at the rising edge of CLK16* in a 74F175. When LOE* goes inactive, it buffers before the CPU may begin driving the bus again. The total delay to disable the latches is calculated in Table III attached hereto as Appendix G and incorporated by reference as if set forth herein in full.

The BUSRDY signal is used to add additional wait signals to a bus cycle. If a 16-bit device wants to add an additional wait state, then it must pull the BUSRDY low (inactive) by the end of the third CLK16 cycle after the falling edge of ALE. To add only one wait state, BUSRDY must return to the high state during the fourth CLK16 cycle after the falling edge of ALE. If an 8-bit device wants to add an additional wait state, then it must pull the BUSRDY low (inactive) by the end of the ninth CLK16 cycle after the falling edge of ALE. To add only one wait state, BUSRDY must return to the high state during the tenth CLK16 cycle after the falling edge of ALE. The decode logic to drive BUSRDY should use the device address and MRDC*, MWTC*, IORC* or IOWC* as inputs. Synchronous peripherals usually use the falling edge of BCLK as the time to change the state of BUSRDY.

The NOWS* signal is used to shorten the standard bus cycle. If a 16-bit memory device is to prevent the standard wait state then it must pull the NOWS* line low (active) within one CLK16 time from the falling edge of ALE. (Note that this is not possible on 16-bit I/O cycles because it is not known that an I/O cycle exists until the required time). If an 8-bit device is to prevent the standard wait states then it must pull the NOWS* line low (active) within two CLK16 times from the falling edge of the command. The decode logic to drive NOWS* should use the device address and MRDC*, MWTC*, IORC* or IOWC* as inputs. If less than the four standard wait states normally used on 8-bit bus cycles is desired, then the NOWS* line can be used to provide 1, 2, or 3 wait states by delaying the activation of NOWS*. The NOWS* line is sampled at approximately the falling edge of BCLK.

The M16* signal is used to indicate that the current address on the LA<23:17> line is covered by a 16-bit memory peripheral. The system board will only use this signal if the current cycle is a memory cycle. The addressed peripheral on the bus must pull the M16* line low as soon as the address is decoded and hold it low until the address becomes invalid. The M16* line must be correct before ALE goes away to insure that it is latched by the system board latch. Pulling this line low prevents the 16-bit to 8-bit bus conversion logic from being activated.

The I016* signal is used to indicate that the current address on the SA<9:0> lines is covered by a 16-bit I/O peripheral. The system board will only use this signal if the current cycle is an I/O cycle. The peripheral addressed on the bus must pull the I016* line low as soon as the address is decoded and hold it low until the address becomes invalid. The IO16* line must be correct by the second CLK16 cycle after ALE goes away to insure that it is latched by the system board latch. Pulling this line low prevents the 16-bit to 8-bit bus conversion logic from being activated.

The signals SMRDC* and SMWTC* are used by the 8-bit bus only. These memory signals are only enabled when the lower one megabyte of memory is addressed. They are developed from the regular MRDC* and MWTC* signals by enabling a set of tri-state buffers with the signal LOWEN*. This signal is developed by the D4-SROM PAL from the address information on the system bus. The PAL also includes the latching function required to hold the address through the entire cycle and the refresh function for any dynamic memory on the original 8-bit bus.

The state sequences for typical machine cycles for the preferred embodiment are set forth in Table IV attached hereto as Appendix H and incorporated by reference as if set forth herein in full.

The processor board of the preferred embodiment (also referred to as a mother board) contains logic to generate other types of bus cycles. A listing of other types of bus cycles is set forth in Table V attached hereto as Appendix I and incorporated by reference as if set forth herein in full.

A description of the Input/Output (I/O subsystems for the preferred embodiment is set forth in Appendix J which is attached hereto and incroporated by reference as if set forth in full.

A description of the interrupt controller subsystem and interrupts for the preferred embodiment are set forth in Appendix K which is attached hereto and incorporated by reference as if set forth herein in full.

A description of the ROM memory system for the preferred embodiment is set forth in Appendix L which is attached hereto and incorporated by reference as if set forth herein in full.

The following description for miscellaneous subsystems of the preferred embodiment are set forth in Appendix M, which are attached hereto and incorporated by reference as if set forth herein in full:

1) Expansion bus definition;
2) Bus timing information for expansion bus;
3) 32-bit expansion bus definition;

4) Bus timing information for 32-bit expansion bus;
5) Page mode dynamic RAM board;
6) Address decoding;
7) Jumper setting;
8) Bits presented by option board;
9) Detailed cycle description; and
10) Timing analysis for page DRAM board.

Turning now to FIG. 2 a simplified logic diagram illustrates the system components of the speed control device and the arbitration logic.

The Speed control of the microprocessor can be initiated by either the floppy drive motor spin-up or enable 30 or the speed control software 31. The computer operator interacts with the computer through a utility program to set the speed of the microprocessor. This action by an operator is represented in FIG. 2 by block 31.

As illustrated in FIG. 2 the floppy drive enable 30 is logically OR'ed with the software controlled speed control 31 and logically AND'ed with the speed control bypass switch 32. In the event the bypass switch 32 is closed the speed control mechanism is inoperative. The speed control command is then logically AND'ed with the speed control timer 33, therefore, the CPU HOLD output to the CPU remains active for as long as the timer remains active.

The speed control command is logically OR'ed with the arbitrated output of the arbitration logic of the DMA request 34 and the REFRESH request 35.

THE DMA request/REFRESH request is arbitrated by arbitrator logic 36 to prevent both a DMA and REFRESH request from occurring simultaneously.

The HOLD request 37 to the CPU can be generated by either the REFRESH request, DMA request or the speed control logic. As will be described infra these holds cannot occur simultaneously because of the logic which controls each function.

The speed control is initiated by the following four CPU instructions:

1) MOV AL, 92H -
2) OUT 4BH, AL
3) MOV AL, XX
4) OUT 4AH, AL

Instructions 1 and 2 above essentially disable the component 8254. "XX" in instruction 3 above is a number from 2 to 38 hex. The one-shot time delay set in the speed control timer is set by instruction 4. Address 4AH in instruction 4 above represents that timer 2 is to be set to the value in register AL. Address 4BH in instruction 2 is the control word register.

The speed adjustment software controls the setting of the one-shot timer. The source code listing of this utility program is set forth in Appendicies N and O attached hereto and incorporated by reference as if set forth herein in full.

Utilizing the utility programs set forth in Appendicies N and O the operator of the machine selects a time delay setting by selecting one of the arbitrary designations set forth below:

COMMOM
FAST
HIGH or by selecting a speed setting from 1 to 50 where the setting "1" corresponds to the slowest machine speed which can be simulated by this microprocessor and "50" corresponds to the highest speed which can be simulated by this microprocessor.

It should be noted that the designation "COMMON" will simulate a microprocessor speed equivalent to an 80286 microprocessor operating at a 6 MHz clock rate; the designation "FAST" will simulate a microprocessor speed equivalent to an 80286 microprocessor operating at an 8 MHz clock rate; the designation "HIGH" will simulate the microprocessor speed of an 80386 microprocessor operating at the 16 MHz clock rate; full speed of an 80386 microprocessor.

The arbitrary speed designation of "3" on a scale of 1 to 50 corresponds to the simulated speed of an 8088 microprocessor and the arbitrary speed designation of "50" on a sale of 1 to 50 corresponds to the designation "HIGH" described above.

The KSUBS source code attached hereto as Appendix N sets the one-shot timer by setting register AL to the required hexidecimal value which corresponds to an operator's selection of either a value of "COMMON, "FAST" or "HIGH" or by an operator's selection of a decimal number in the range of 1-50.

The timer source code attached hereto as Appendix O sets the one-shot timer by setting register AL to a hexidecimal value corresponding to the "FAST" mode whenever the floppy drive motor is enabled. Enabling the floppy drive motor reduces the apparent microprocessor speed since most floppy drive operations indicate either a transfer of data from a copy-protected diskette or other diskette operation which cannot be performed at the full 80386 processor speed.

Turning now to FIG. 3 and FIG. 4 the following sequence is illustrated in FIG. 3 (timing diagram) (the numbers in the description below corresponding to the numbers on the timing arrows shown in FIG. 3):
A 4 MHz clock rate is illustrated as "DCLK". Each square wave represents 250 microseconds.

3-1: The REFRESH request occurs once every 15 microseconds. This request is arbitrated with the Direct Memory Access (DMA) request to prevent simultaneous requests. The REFRESH request is then logically OR'ed with the other request sources to generate the CPU "HOLD" request.

3-2: Sometime after the HOLD request is generated and after the current CPU bus cycles have been completed (approximately 215 nanoseconds to 12 microseconds later) the CPU will stop executing the program and grant the HOLD acknowledge (ACK).

3-3: The HOLD ACK is logically gated with the arbitrated REFRESH request to form the REFRESH acknowledge (ACK) signal to the REFRESH controller.

3-4: The REFRESH ACK signal triggers the digital one-shot (Intel 8254 or similar logic device) which in turn sets the STOP request signal active. Since the REFRESH request is still present (high), there is no change in the CPU state.

3-5: The REFRESH controller executes the REFRESH cycle on the system bus and then releases the REFRESH request. This typically takes approximately 500 nanoseconds.

3-6: Release of the REFRESH request also releases the REFRESH ACK signal and ends the REFRESH portion of the cycle. (If the STOP request is NOT present, then the HOLD request is released and the CPU begins executing again.

3-7: During the duration of the one-shot timeout, the STOP request remains active and the CPU cannot run bus cycles (i.e., execute code). This timeout value is variable from 0 duration (e.g., CPU begins executing immediately after REFRESH, equivalent to full speed microprocessor cycle) through 15 microseconds where the CPU never gets a chance to execute because another REFRESH and STOP cycle will begin as soon as the last cycle is completed (e.g., microprocessor fully stopped). Choosing values between 0 and 15 microseconds will result in apparent speed changes of the CPU from full speed to the speed of previous generation microprocessors. If the time delay value for the one-shot timer is less than 15 microseconds the STOP request will be dropped when the one-shot times out.

3-8: Release of the STOP request causes the HOLD request to be dropped.

3-9: The CPU responds by dropping the HOLD ACK. The CPU begins executing the program again (i.e., executing code or program steps).

3-10: 15 microseconds from the original REFRESH request, the next REFRESH request will arrive and the cycle will repeat itself.

The DMA (Direct Memory Access) subsystem is not impeded from normal operation during the time the CPU is stopped to permit the simulation of a slower CPU. Devices using the DMA subsystem are therefore independent of the simulated speed of the CPU.

The use of the microprocessor HOLD or STOP permits time dependent operations to be handled by the 32-bit microprocessor which is operating at a constant clock rate, in this case 16 MHz, without slowing the microprocessor down to a slower clock rate. The use of a slower clock rate has been previously suggested however this method of operating is not acceptable in an 80386 environment because it has the effect of slowing down all operations, not just those which are time dependent. Thus in the typical application the microprocessor is placed on HOLD only for so long as necessary to simulate the microprocessor speed which is selected by an operator or the speed which is necessary to perform time dependent functions.

Alternatively, the operation of the microprocessor can be placed in a deliberately slow mode by causing the one-shot timer to be re-initiated as soon as it is released. This is accomplished in software and is initiated by the operator calling up a "Mode Speed" subroutine. The "Mode Speed" source code is provided in Appendix N as "KSUBS". Once the subroutine is called up the operator selects a speed ranging from 1 to 50, or in the alternative specific speed designations which have been arbitrarily set. In this case the following speeds have been arbitrarily set which correspond to the speeds indicated below :
COMMON - Approximately equivalent to a speed setting of an 80286 microprocessor operating at clock rate of 6 MHz FAST - Approximately equivalent to a speed setting of an 80286 microprocessor operating at a clock rate of 8 MHz

HIGH - Approximately equivalent to a speed setting of an 80386 microprocessor operating at a clock rate of 16 MHz

The manual setting of the speed as described above permits the operator of the computer to play time dependent games and also to execute time dependent programs without losing the benefit of having a 32-bit microprocessor operating at a clock rate of 16 MHz.

Example 1

The following example illustrates the approximate microprocessor speed which is simulated when the one-shot timer time delay is set at 2 microseconds:

$$\frac{1 - \frac{(0.5 + 2)}{15}}{1 - \frac{0.5}{15}} = 86\%$$

where the denominator of the above equation sets forth the normal system speed with the microprocessor operating at full system speed, i.e., the 16 MHz clock rate, and the numerator of the above equation is the effect of the slow-down on the system speed.

In the above equation normal system speed is designated by unity and the two microsecond one-shot timer setting is entered in the numerator of the equation.

The system speed which is simulated is 86% of the full 80386 microprocessor operating at the 16 MHz clock rate.

Referring now to FIG. 4 a simplified schematic of the arbitration logic and speed control logic is illustrated. The CPU HOLD request can be generated by either the arbitrated REFRESH request, the arbitrated DMA system request or the system speed control.

The system speed control is initiated by software and occurs by either a manually initiated speed selection 31 or by operation of the floppy diskette drive 30.

As illustrated in FIG. 4 the speed control is logically AND'ed with the one-shot to generate the CPU HOLD. The implementation of the one-shot provides the time delay necessary to stop the CPU for a specified time to "simulate" a microprocessor speed below that which corresponds to an 80386 microprocessor. The longer the time delay of the one-shot the slower the CPU "appears" to operate. The CPU speed is not reduced but rather only "appears to be reduced" since the CPU clock rate is not reduced but rather the CPU is stopped and started thereby generating an average CPU time which "appears" to be slower.

Referring now to FIG. 5A the one-shot timer 33 is represented by device U41. The output of device U41, SLOWQ* is logically AND'ed with SLOWD* at device U79D and inverted by device U65A to produce the SLOWH* output.

The by-pass around the automatic speed control is provided by switch 38 designated as SW1 in FIG. 5A. With switch 38 open the automatic speed control is enabled whenever the floppy drive is activated. Conversely with switch 38 closed the automatic speed control is bypassed.

FIG. 5A also illustrates flip-flop 39 also designated as device U78A. Flip-flop 39 serves as the arbitration logic for the DMA request and the REFRESH request. The flip-flop 39 also provides the CPU HOLD request to the CPU 20 for the speed control function.

Referring now to FIG. 5B the functional schematic for the RESET/HOLD arbitration logic is illustrated. The arbitration circuit operates on the HOLD and RESET signals to prevent them from occurring at the same time. The arbitration circuit causes a RESET signal to wait until after any pending HOLD is serviced or causes a HOLD signal to wait until after the RESET is complete. The arbitration circuit holds the last signal received until the first signal received is complete.

The preferred embodiment of the invention is illustrated in the drawings attached hereto as Appendicies A and B. In this embodiment the speed control system is implemented to give the user some control of the system speeds in the event that software is speed dependent. The system consists of one channel of the second 8254 timer counter and an interconnect to the HOLD request circuit. The timer channel is programmed as a one-shot which is triggered by REFRESH requests. If the 8042 keyboard controller SLOWD* line is active (LOW) then the timer output will extend the CPU HOLD time for REFRESH by the programmed value of the one-shot. During this HOLD time the CPU cannot use the bus for execution, but the DMA subsystem can continue to work. The time is clocked by DCLK giving a 250 nanosecond increment in bus HOLD time. To disable the circuit, the 8042 SLOWD* output can be set inactive (HIGH) or the 8254 timer can be stopped by programming the counter but not giving it a count value.

In order to minimize the potential for operator error because of a failure to set the speed at the proper rate for floppy diskette operations, the computer software is specifically written to sense the operation of the floppy diskette motor. In actuality the software detects a call to the diskette motor or drive and initializes the one-shot timer by setting the one-shot timer time delay. This in effect slows the operation of the computer to a rate equivalent of COMMON. Any calls to the diskette for information which is to be transferred at the 16-bit rate will result in an automatic slow-down of the microprocessor, not by slowing down the clock rate as previously done in prior art devices but by initializing the one-shot timer described above and thus placing the microprocessor on HOLD. This has the net effect of holding up execution of any bus cycles for a pre-determined period of time.

Once the transfer of data is completed the HOLD is released and the microprocessor resumes it operation and execution of bus cycles. The completion of data transfer is sensed by the software by monitoring the floppy diskette drive motor - thus after the diskette drive motor is stopped the initialization of the one-shot timer is halted and the microprocessor resumes unimpeded operation.

It has been found that copy-protected diskettes are very sensitive to the execution speed of the microprocessor primarily because the copy-protection scheme is expecting a particular timing rate. Thus as software written for an older generation machine is adapted for a faster new generation machine it becomes difficult to use the copy-protected software in the new generation machine because the software which was written to execute in a slower machine is expecting a particular execution rate which was determined by the slower clock rate. It has been found that the copy-protected software written for older, slower machines cannot be executed in newer, faster machines because of the faster clock rates. In the present invention the utilization of the one-shot timer to stop execution of the microprocessor by placing it in the HOLD or STOP state permits the older software written for the slower machines to be utilized in this new machine without slowing the clock rate down to that of the older generation machines. Thus the new generation machine which is operating at a clock rate of 16 MHz and a 32-bit rate achieves compatibility with older software which heretofore had not been compatible with a new generation machines.

The ability of a new machine to adapt to older generation software has added advantages in that there is no need for the prospective customer of the computer to wait for application programs to be written for the new machine by third party programmers writing with the new clock rate in mind. Thus a 32-bit machine operating at 16 MHz has the potential to gain ready acceptance from future users because it is fully compatible with software programs previously used by the prospective customers in the older generation machines.

The utility program which can be executed by the operator of the machine to slow donw the machine has the added advantage that it will permit the operator to vary the program speed not by changing the microprocessor clock rate but by varying the time delay of the one-shot timer. This advantage is manifested in the ability of the operator to manually and intentionally vary the speed of the machine in the event that he wants the machine to function as an older generation machine.

A switch SW1 also provided as is illustrated in FIG. 5A which permits the operator to manually select a bypass mechanism. This switch will defeat the automatic slow-down of the machine. Thus the software which is written to slow-down the operation of the machine by sensing the operation of the floppy diskette drive is defeated.

As previously described the operation of the machine can be manually set to operate at a rate much slower that the rate achieved with a 16 MHz clock rate by selecting the one-shot timer to a time delay which simulates the operation of a slower machine, i.e., an 8088 or 8086 microprocessor or an 80286 microprocessor. A source code listing is provided and is fully set forth in the Appendix H.

The source code of the software listing is provided in Appendix O for the subroutine which is executed to automatically set the speed of the machine. This automatic feature automatically detects the operation of the floppy diskette motor and sets the speed of the one-shot timer to a simulate the speed of an 80286 microprocessor operating at a clock rate of 6 MHz.

An excerpt of the schematic necessary to implement this invention is set forth in FIG. 5A and 5B, however, the entire operational schematics of the preferred embodiment are set forth in Appendicies A and B. It is to be understood that the schematics merely set forth the preferred embodiment of the invention and that further implementations of this invention may be made by one skilled in the art.

It is to be further understood that the software listings set forth in Appendicies N and O are merely illustrations of the one embodiment of the invention and that further embodiments may be realized and implemented by one skilled in the art.

To assist in the interpretation of the schematics attached hereto as Appendicies A and B, a bill of mate rials of the components used in the preferred embodiment are attached hereto as Appendicies C and D. Again it is to be understood that the components set forth in these Appendicies are merely the components used in implementing the preferred embodiment.

A simplified logic diagram is set forth in FIG. 4. The simplified logic diagram illustrates the logic flow of each of the components necessary to implement the preferred embodiment. It is to be understood that the implementation of the preferred embodiment may be accomplished in a manner other than that specifically illustrated in FIG. 4 by those skilled in the art. The auto-speed routine is executed by calling up the speed-mode routine which is set forth in Appendix N. The routine is executed by utilizing the following command "Mode Speed". Upon execution of this command the routine is automatically loaded and thereafter the operator causes the program to execute by entering a number from 1 to 50 or one of the following commands: COMMON, SLOW or FAST.

As previously indicated the utilization of one of the word commands above results in the assignment of a speed destination by the software. Upon assignment of the assigned speed setting the software causes the entry of the specified speed assignment into the one-shot timer. Consequently, a corresponding time delay is assigned to the one-shot timer thereby causing a corresponding time delay and HOLD of the execution of microprocessor bus cycles.

As previously indicated the 80386 microprocessor is intended to replace the 80286, 8088 and 8086 microprocessors manufactured by Intel. It has been determined that the 80386 microprocessor lacks some of the previous features, features which were specifically implemented in the 80286 microprocessor while at the same time implementing new features which were specifically designed to speed up the microprocessor and vest the new microprocessor with more enhanced features.

One of the features which was eliminated from the 80386 microprocessor is the ability to respond to HOLD request during RESET which in the 80286 microprocessor was intended to permit the operator to reset the microprocessor without affecting the other systems of the computer. The ability to reset the microprocessor is an important feature in that at times the microprocessor must be reset without upsetting the setting of other key registers and memory. Typically key registers and memory are reset during either a cold or warm boot of the system, however, the registers and memory should not be reset whenever the microprocessor is reset since this will result in a loss of data and information in the registers and memory.

The drawbacks of the 80386 microprocessor were realized in the implementation of the Direct Memory Access (DMA) and the microprocessor REFRESH cycle. In order to prevent the loss of data during a DMA transfer request or REFRESH which could occur when an 80386 microprocessor is executing a RESET command, it was necessary to utilize an arbitration circuit to arbitrate the execution of the DMA or REFRESH cycle, and the execution of a microprocessor RESET cycle. The arbitration circuit is set forth in FIG. 7 and also illustrated in FIG. 5A as device U78A.

The implementation set forth in FIG. 7 is only one implementation of the invention herein. Other implementations may be realized by those skilled in the art having the benefit of this disclosure. The arbitration circuit is primarily executed in hardware, however, it should be apparent to one skilled in the art that implementations of this invention can be made with software.

It should be further realized that the implementation of the arbitration circuit does not accomplish the same function previously implemented in older generation microprocessors. Older generation microprocessors did not arbitrate the microprocessor RESET cycle with the HOLD but rather processed both RESET and HOLD at the same time.

In the present invention the Dynamic RAM REFRESH and DMA controller are arbitrated to prevent these signals from occurring simultaneously and to retain the last signal received while the first signal received is processed. The Dynamic RAM REFRESH subsystem is designed to do a memory read cycle on each of 256 addresses in the memory space. The system is also capable of being driven by an external source if another bus master has control. The system consists of a timer (part of the 8254) which generates the REFRESH requests over 15.924 microseconds, arbitration logic which arbitrates whether the REFRESH controller or the DMA subsystem secures the bus, a timing generator, and a REFRESH address counter. The REFRESH request rate of 62.799 KHz provides 128 REFRESH cycles in 2.038 milliseconds or 256 cycles in 4.0764 milliseconds.

The REFRESH cycle starts when the REFCK out of the 8254 goes high. This clocks the RFK flip-flop high. The RFK flip-flop will remain high until the REFRESH request is satisfied. This line goes to the HOLD request arbitration circuit discussed above. Nothing else happens until the arbitration circuit responds with acknowledge signal REFRS*. (Note: to allow bus masters control of REFRESH, the REFRS* driver is an open collector gate with a pullup resistor).

When REFRS* goes active, it will be clocked into REFEN* flip-flop by the BCLK signal, enabling the REFRESH address from the counter onto the bus. The REFEN* signal is in turn clocked into REFRD* flip-flop by the next rising edge of BCLK, enabling the MRDC* command onto the bus. The REFRD* signal is gated with BUSRDY and clocked into the next flip-flop (REFEND) by BCLK. This allows a slow memory board to insert wait states into REFRESH cycles. The output of this flip-flop (REFEND) is gated with the REFRS* signal to end the REFRESH cycle on the next BCLK. At the same time that REFEND signal is clocked through, the REFCL* flip-flop is clocked to a low, clearing the RFK and RFQ flip-flops and ending the REFRESH cycle.

If an external bus master wishes to take the bus for long periods of time, it must perform REFRESH or risk losing the dynamic memory. The external bus master can do this by developing it's own REFRESH request timer and internal arbitration. When it is not otherwise driving the bus, but still has bus control, it can do a REFRESH cycle by pulling the REFRS* line low with an open collector gate. When the MRDC* line goes inactive from the REFRESH cycle, the REFRS* line should be released. The external bus master can then take full control.

The RFK (REFRESH request) signal is synchronized to DCLK* by RFQ flip-flop. Another flip-flop synchronizes the DREQ (DMA request) signal from the DMA subsystem to the DCLK clock. This insures that the two requests cannot arrive simultaneously. Both requests are next clocked by a pair of flip-flops (DMARQ, REFRQ) that have their Q* outputs cross connected to the other's clear inputs. This guarantees that only one of the two signals (DMARQ, REFRQ) can be active at a time.

The two request signals are also OR'ed together and run through a circuit which locks out the combined request when a HOLD acknowledge cycle is in progress but the original request has gone away. This prevents a new HOLD request from being initiated before the last one is completed. The output of the speed control circuit is also OR'ed in with the other requests in order to use up CPU bus bandwidth as a means of slowing the system down.

The (HRQ) output is fed to an F74 flip-flop which acts as another arbitration circuit. This circuit prevents processor reset from occurring during HRQ or HRQ from occurring during processor reset. This prevents the CPU from aborting a HOLD request with a subsequent lost or erroneous HOLD cycles.

After the reset arbitration, the output (HRQ*) is gated with the signal LOCK. This signal is driven from the processor LOCK* signal. The processor LOCK* is used to clear a flip-flop to set the LOCK signal active. The flip-flop output goes inactive on the falling edge of the next CPU READY* line, thus holding LOCK active for one CPU bus cycle longer than originally intended. The purpose of holding off HRQ until the new LOCK goes away is to fix any processing bug or error encountered by the 80386 CPU.

The output signal from the LOCK lockout circuit (HRQCP*) is synchronized to the CPU clock by a 74F175 (HOLD) to assure a proper setup time to the CPU. The CPU is set out in the following table:

| | |
|---|---|
| CLK16* cycle time | 62.5 |
| CLK32 to CKP16* in F32 | -5.6 |
| CKP16* to HOLD in F175 | -9.5 |
| 386 HOLD setup time | -25.0 |
| Margin ********** | +22.4 |

When the HLDA signal is received from the CPU indicating that the bus is available, then the signal REFRS* (gated from REFRQ) or HAKDMA (gated from DMARQ) is set active, enabling the appropriate subsystem. If the speed control circuit is the source of the request, then neither of the above is set active.

It should be noted that if a cycle is in progress from one requestor, and the other requestor makes a request, then on the first rising edge of BCLK after the first xxxREQ (i.e., DMAREQ or REFREQ) signal goes away, the second requestor will be acknowledged. This will occur without giving the bus back to the CPU, i.e., a DMA HOLD and a REFRESH HOLD will be run back to back. If the speed control circuit is holding the bus then holds from DMA or REFRESH will be immediately acknowledged.

When the HLDA signal is received from the CPU, the address laches and is tri-stated. The CPU bus command generator PAL (D4-SCMD) command output signals are also tri-stated. The command signals are held inactive by pullup resistors until the DMA controller, REFRESH controller, or other bus master can take over the bus. The Bus Address Latch Enable signal (BALE) is forced to the active state requiring that any other bus mast must hold an address stable for the duration of a bus cycle.

To allow the 32-bit memory board to receive addresses generated by the other subsystems, a series of buffers back feeds the CPU address bus from the system buses.

The data buffers between the CPU and system bus are turned around to work in the opposite direction from normal so that the other bus master can access the 32-bit memory as if it was a 16-bit memory.

The DMA controllers in the system operate as a separate subsystem from the main bus controller. They handle requests from the DMA peripherals, arbitrate between them, and then request access to the system address and command busses from the CPU by asserting DREQ. The system consists of two controller ICs (8237A-5), a page register for handling the high order bits of DMA address (74LS612), and various latches and logic for address routing and control.

There are two types of DMA in the preferred embodiment, byte and word DMA. One of the controllers is connected to handle byte operations, the other, word operations. In order to simplify the arbitration between sources, the HOLD request line from the byte controller is connected to a DMA request line (DRQ4) on the word controller. The word controller is programmed for cascade mode on channel 0 (to which is connected DRQ4) so that it will not actually place an address on the bus when it acknowledges the byte controllers request.

The DMA byte cycle begins when a peripheral sets a DRQ0-DRQ3 line active. The 8237 then arbitrates among any other pending requests and sets the HOLD request output active. This line (DRQ4) is connected to the word controller as discussed above which does it's arbitration. The word controller then sets it's HOLD request line active (DREQ) which is then synchronized and arbitrated by the HOLD arbitration logic discussed above.

When the system responds to the DREQ with a HAKDMA, the word 8237 will respond with a DAK4 which acts as a HOLD acknowledge to the byte controller.

The D4-SCPY PAL drives the SBHE* line in the opposite sense of SA0 in order to satisfy 16-bit devices on the bus.

The DAEN1* signal is OR'ed with the DAEN2* signal inside the D4-SCPY PAL to produce DAEN* which changes the direction of the bi-directional buffers so that the DMA address will be one the system bus.

THE SA16 line has an additional tri-state buffer. This buffer is enabled for byte type DMA and disabled for word type DMA (because the work 8237 drives SA16 in word DMA).

The selection of which internal register is to be enabled to the bus is done by three gates which encode the DAKx signals into a register address for LS612.

In the above fashion, all of the address lines on the bus are driven with appropriate data. When this is complete, 8237 drives the lines XIORC*, XIOWC*, XMWTC* and DMRDC* according to the type of cycle being run. The first three of these lines are buffered back to the IORC*, IOWC*, MWTC lines by a bi-directional buffer controlled by DAEN*. The DMRDC* line is handled differently. It is delayed by one DCLK cycle before being gated onto the XMRDC* line and then to the MRDC* line. When DMRDC* goes inactive, XMRDC* goes inactive without the DCLK delay. This action provides a greater memory address set up on read commands for block transfer modes of the 8237.

A single DCLK length wait state is added to all DMA cycles. To do this, the OR of DMRDC* and XIORC* clocks the DWQ flip-flop to inactive, setting DRDY inactive. On the next rising edge of DCLK the DXQ flip-flop is clocked active which in turn sets the DWQ flip-flop active again. On the next DCLK, DXQ will go inactive, allowing DRDY to go active and signal ready to 8237. If a peripheral wants additional wait states, it can pull the BUSRDY line low which will set the DWQ output to a low and prevent DXQ from going inactive. The wait circuit is prevented from being affected by BUSRDY except during DMA cycles by a gate which holds the DWQ flip-flop set active.

The D4-SCPY PAL enables the COPYEN* line if SA0 is high and the addressed memory is 16-bit in order to route the data between the low half and high half of the data bus. The COPYHL line moves the data from high to low on memory reads, and from low to high on memory writes.

Word DMA operations are only possible between word memory (16-bit) and word peripherals. The DMA cannot affect the odd address boundary, on either memory or I/O.

The DMA word cycle begins when a peripheral sets a DRQ5-DRQ7 line active. The 8237 then arbitrates among any other pending requests and sets the HOLD request output active. The HOLD request line (DREQ) is then synchronized and arbitrated by the HOLD arbitration logic discussed above.

When the system responds to the DREQ with a HAKDMA, the word 8237 will, after synchronizing the acknowledge, respond with a DAKx acknowledge to the peripheral.

The D4-SCPY PAL drives the SA0 and SBHE* line to a low in order to satisfy 16-bit devices on the bus.

The remainder of the word DMA operation is the same as the byte operation except for the handling of the COPYEN* and COPYHL* signals. These signals are not enabled for word based DMA.

In the preferred embodiment of this invention the BIOS stored in the 16-bit ROM is mapped into RAM. This significantly speeds up the processing time of the processor in that the processor can fetch instructions from RAM at the rate of 32-bits instead of obtaining them from ROM at the rate of 16-bits. The use of a dual mapped BIOS achieves the convenience of a 32-bit memory for BIOS without the cost ramifications of a 32-bit ROM.

The BIOS referred to herein contains the necessary code to interface with most of the system elements in a standard way, to achieve compatibility with earlier generation computers, as well as code to test the system at power up and load code from the floppy or fixed disk subsystems into dynamic memory (RAM). Prior art devices store the software (BIOS) in ROM. Typically these ROMs are connected to the CPU at the CPU's normal data size, i.e., 8-bit for 8088 microprocessors and 16-bit for 8086 and 80286 microprocessors. These 8 and 16-bit ROMs were fast enough for the earlier generation microprocessors in that the access time necessary to meet the requirements of the processor did not materially affect the system performance. With the advent of 32-bit microprocessor, the 8 and 16-bit ROMs cannot be accessed fast enough and therefore result in a considerable degradation of performance of the 80386 microprocessor.

The addition of two additional ROMs to achieve a 32-bit bus width presents an undesirable cost penalty. Since the preferred embodiment of the 80386 microprocessor based personal computer is designed to be compatible with other prior art devices, it has been designed with a 32-bit to 16-bit bus converter to produce a compatible 16-bit bus. The 16-bit bus is a slower bus designed to be compatible with prior art 80286 devices.

The design of the 32-bit RAM subsystem of the preferred embodiment resulted in a minimum RAM size of 1024 kilobytes due to the 32-bit high performance paged RAM design. Since the majority of the software on the current market is not capable of easily using more than 640 kilobytes, 384 kilobytes of memory were available for the dual-mapped BIOS without any cost penalty.

In the preferred embodiment some of the excess RAM (e.g., some of the 384 kilobytes of excess memory) was utilized to hold the ROM code and thereby improve the performance of the 80386 microprocessor. This use of the RAM to store the BIOS, after the computer is powered up, improves the performance of the 80386 microprocessor based computer by improving the access time of the microprocessor to the BIOS. This improvement in the access time is accomplished by increasing the information transferred from memory to the processor, i.e., increasing the transfer rate from 16-bits to 32-bits.

To implement the dual-mapped BIOS in the preferred embodiment, and maintain compatibility with the prior art machines, the ROM code had to remain at its original address and had to be safe from being written over by errant software even though the BIOS had been transferred to RAM. The implementation in the preferred embodiment includes decoding logic which allows the RAM subsystem to respond to the ROM addresses by the CPU and third party software. The additional decoding logic is controllable by software through a writable control port so that the system can switch from operation out of the 16-bit ROM to the 32-bit RAM once the contents of the ROM are written into the 32-bit RAM.

In the preferred embodiment, the personal computer is powered up and begins to execute code from the BIOS stored in the 16-bit ROM. During this initial time, the RAM system necessary to store the BIOS is tested. In the preferred embodiment the BIOS tests the RAM at addresses FE0000 through FFFFFF. The BIOS then initiates the copying of the BIOS into the dynamic memory (RAM).

In the preferred embodiment the BIOS is copied from ROM address space 00E0000h through 00FFFFF to RAM address space FE0000h through 00FFFFFFh.

After the BIOS is copied to RAM, the RAM memory subsystem responds to the following addresses (address range given in hexadecimal):

| ADDRESS RANGE | SIZE | ADDRESS DECODED |
|---|---|---|
| 000000-09FFFF | 640K | when appropriate jumpers are set |
| 0E0000-0FFFFF | 128K | when ROM replacement active (Note) |
| 100000-9FFFFF | 9216K | when expansion RAM is installed |
| F40000-F9FFFF | 384K | when appropriate jumpers are set |
| FA0000-FDFFFF | 256K | always |
| FE0000-FFFFFF | 128K | always (Note) |
| 80C00000 | 1 byte | diagnostic byte (read) address |
| 80C00000 | 1 byte | control byte (write) address |

Note: When ROM replacement is active, writing to this address range can be disabled.

The diagnostic byte (at 80C00000h read only) has several functions. When reading the byte, the value returned is as follows:

bit0 parity status by byte 0 (0 is error)
bit1 parity status by byte 1 (0 is error)
bit2 parity status of byte 2 (0 is error)
bit3 parity status of byte 3 (0 is error)
bit4 512K jumper status (0 is active)
bit5 640K jumper status (0 is active)
bit6 1M jumper status (0 is active)
bit7 2 or 8 Mbyte option board (0 is installed)

The 128 kbytes from 0FE0000h to 0FFFFFFh is used to simulate a system ROM. In the original 80286 products, this spaced was occupied by the system ROMs. In the present invention, for the 80386 machines, this space is occupied by RAM on this board. To provide compatibility with previous products, the system ROM is copied to this same space. To allow faster execution of ROM resident software, this board provides the ROM "replacement" function. When replacement is enabled, the RAM board decodes address range 00E0000h to 00FFFFFh and puts the 128k of ROM here, replacing the system ROM. When this is done the original ROMs are disabled.

Upon completion of this step, the BIOS initiates the writing of a control bit which causes the RAM system to take over the ROM address space and from then on the CPU executes the BIOS code out of the high speed RAM at a 32-bit bandwidth. This is accomplished by setting bits at 80C00000H thereby causing the RAM subsystem to take over address space E0000.

The PAL equation below is used in the 80386 memory board to decode addresses within the memory space and assert the M32* signal. It does all the decoding for all the expected options according to the following jumper settings.

M32* indicates that the RAM system is to handle the CPU cycle for the given address.

The jumpers 1M*, 512M*, 640K*, 2M* and 8M* are used to specify different amounts of RAM to the system. (See Memory Board schematics in Appendix B).

The signal ROM is the ROM replacement signal from the control byte.

| 512K | 640K | | |
|---|---|---|---|
| H | H | 256K | 000000-03FFFFh |
| L | H | 512K | 000000-07FFFFh |
| L | L | 640K | 000000-9FFFFFh |
| H | L | **** | ILLEGAL |

| 1M | 1024K expanded |
|---|---|
| H | No extended memory |
| L | 1024K 100000-1FFFFFh |

Daughterboard Jumpers

| 8M | 2M | | |
|---|---|---|---|
| H | H | OK | |
| H | L | 2048K | 200000-3FFFFFh |
| L | H | **** | ILLEGAL |
| L | L | 8192K | 200000-9FFFFFh |

The PAL equation used in the preferred embodiment of this invention to decode address within the memory space is:

```
M32 =
  /A31*/A23*/A22*/A21*/A20*/A19*/A18              ;000000-03FFFF 256K
+ /A31*/A23*/A22*/A21*/A20*/A19* A18*       512K ;040000-07FFFF 256K
+ /A31*/A23*/A22*/A21*/A20* A19*/A18*/A17* 640K ;080000-09FFFF 128K
+ /A31*/A23*/A22*/A21*/A20* A19* A18* A17* ROM  ;0E0000-0FFFFF 128K
+ /A31* A23* A22* A21* A20*/A19* A18*      /512K ;F40000-F7FFFF 256K
+ /A31* A23* A22* A21* A20* A19*/A18*/A17*/640K ;F80000-F9FFFF 128K
+ /A31* A23* A22* A21* A20* A19*/A18* A17        ;FA0000-FBFFFF 128K
+ /A31* A23* A22* A21* A20* A19* A18             ;FC0000-FFFFFF 256K
+ /A31*/A23*/A22*/A21* A20*                 1M   ;100000-1FFFFF 1M
+ /A31*/A23*/A22* A21*                      2M   ;200000-3FFFFF 2M
+ /A31*/A23* A22*/A21*                      8M   ;400000-5FFFFF 2M
+ /A31*/A23* A22* A21*                      8M   ;600000-7FFFFF 2M
+ /A31* A23*/A22*/A21*                      8M   ;800000-9FFFFF 2M
+  A31* A23* A22*/A21*/A20*/A19*/A18*/A17        ;DAIG 80C0000h 128K
```

Since normal system ROMs could not be written, a write protect function is included in the RAM board for two address spaces. When replacement is not enabled, only 0FE0000h to 0FFFFFFh is protected (the normal ROM space still contains the unwritable ROM). When replacement is active, both spaces can be protected. After POWERUP, the write protect function is disabled.

The write protect control byte (at 80C00000h write only) is shown below.

bit0 ROM replacement (0 replaces)
bit1 ROM space write protect (0 protects)
bit2 reserved (write a 1)
bit3 reserved (write a 1)
bit4 reserved (write a 1)
bit5 reserved (write a 1)
bit6 reserved (write a 1)
bit7 reserved (write a 1)

The control byte is also used to clear the diagnostic byte parity status. When writing this byte (with any value) the parity status bits will be reset to ones.

The following PAL equations are used in the 80386 memory board to decode the RAS signals and the parity read and write logic. In the equation below the terms used are:

RSO is the decoded RAM select signal for bank (where the ROM replacement is done).

WE0 is the write enable line to the bank 0 RAMs. This line controls the write protection of the ROM replacement RAM.

WPRT is the ROM write protect signal from the control port.

RFSH is a signal indicating a refresh cycle is to be done.

```
RS0 =
  /A31*/A23*/A22*/A21*/A20*/A19                      ;00000000H 512K
+ /A31*/A23*/A22*/A21*/A20* A19*/A18*/A17            ;00080000H 128K
+ /A31*/A23*/A22*/A21*/A20* A19* A18* A17            ;000E0000H 128K
+ /A31* A23* A22* A21* A20*                          ;00F00000H 1024K
+ RFSH                                               ; REFRESH
```

```
WE0 =
 MWE*/A31*/A23*/A22*/A21*      /A19                  ;00000000H 512K
+MWE*/A31*/A23*/A22*/A21*/A20* A19*/A18*/A17         ;00080000H 128K
+MWE*/A31*/A23*/A22*/A21*/A20* A19* A18* A17*/WPRT   ;000E0000H 128K
+MWE*/A31* A23* A22* A21* A20*/A19* A18              ;00F40000H 256K
+MWE*/A31* A23* A22* A21* A20* A19*/A18              ;00F80000H 256K
+MWE*/A31* A23* A22* A21* A20* A19* A18*/A17*        ;00FC0000H 128K
+MWE*/A31* A23* A22* A21* A20* A19* A18* A17*/WPRT   ;00FE0000H 128K
```

After the BIOS is loaded into RAM, additional system testing (i.e., disks, clock and other I/O devices) continues and the balance of the installed dynamic memory (not previously tested) is tested. Error reports are generated as appropriate.

Once the machine testing is concluded, the boot sector is loaded into the dynamic memory from the floppy diskette or the hard disk. Thereafter the execution of the boot sector code is commenced.

The instructions to transfer the BIOS from ROM to RAM are set forth in two subroutines stored in the BIOS. The source code of those subroutines is set forth in two listings bearing the titles CLEARMEM.LST and TESTHRAM.LST. The TESTHRAM.LST and CLEARMEM.LST source code listings are attached hereto as Appendicies R and S respectively and incorporated by reference as if set forth in full herein. The listing for CLEARMEM.LST contains the routine, clr_mem, which calls routine MovSysROM found in routine TESTHRAM.LST. MovSysROM will move the BIOS code in ROM to the RAM space and write the BIOS to the memory locations that replaces the ROM address space. The MovSysROM also write protects the RAM after the BIOS is written into RAM.

Complete listings of PAL equations for the ROM replacement are set forth in Appendicies P and Q. The listing entitled D4-SROMA.PAL represents a listing of the PAL equations for the ROM decode logic contained in device U26.

The listing entitled D4-RM32.PAL represents a listing of the PAL equations for the M32 PAL otherwise indicated as device U7.

The listing entitled D4-RRAS.PAL represents a listing of the PAL equations for the logic contained in device U18.

In describing the invention, reference has been made to a preferred embodiment. However, those skilled in the art and familiar with the disclosure of the invention may recognize additions, deletions, substitutions, or other modifications which would fall within the purview of the invention as defined in the appended claims.

**Claims**

1. A personal computer with a high speed microprocessor compatible with applications software written for slower speed microprocessors characterized by:

a) a high speed microprocessor;

b) a dynamic memory;

c) a read only memory;

d) a timing device to set the clock rate of the microprocessor;

e) means responsive to a mode select signal to place the execution of bus cycles on hold for a pre-determined time period;

f) a program storage device; and

g) logic means to generate mode select signal for controlling the length of the hold state of the high speed microprocessor to simulate a slower operating speed of said microprocessor.

2. The personal computer described in claim 1 further characterized by logic means monitoring a floppy diskette program storage device to initiate a slow down of the microprocessor speed by specifying a value for the pre-determined length of the microprocessor hold state.

3. The personal computer described in claim 1 characterized in that the microprocessor is a 32-bit microprocessor.

4. The personal computer described in claim 1 characterized in that the logic means includes pre-determined values for the different lengths of the hold states to simulate operating speeds of older generation microprocessors.

5. A personal computer system characterized by:

a) a microprocessor operatively coupled to the following:

i) at least one input/output device,

ii) a timing device to set the clock rate of the microprocessor,

iii) a dynamic memory to store date transfers to and from the microprocessor,

iv) means to halt the execution of bus cycles of said microprocessor for a pre-set time interval,

v) a keyboard;

b) an operating system;

c) means for varying the pre-set time that the execution of bus cycles is placed on hold;

d) means to initiate the execution of the hold for said pre-set time;

e) means to re-intiate the execution of bus cycles after completion of the hold.

6. The personal computer set forth in Claim 5 characterized in that the pre-set time interval is a fixed time and the execution of the pre-set time hold is initiated by monitoring the use of the input/output device.

7. A personal computer system with varying execution speeds,characterized by:

a) a microprocessor operatively coupled to the following:

i) at least one input/output device,

ii) a timing device to set the clock rate of the microprocessor,

iii) a memory device to store data transfers to and from the microprocessor,

iv) means to place the execution of bus cycles of said microprocessor on hold for a pre-set time,

v) means to re-initiate the execution of bus cycles after completion of the hold for said pre-set time,

vi) a keyboard, and

b) an operating system; wherein the microprocessor operates at a simulated reduction in operating speed while the timing device clock rate remains constant.

8. A personal computer system as set forth in claim 7 characterized in that the pre-set time is determined by monitoring the use of a floppy diskette drive motor.

1

## INDEX OF APPENDICIES

| Appendix | |
|---|---|
| A | Mother Board Schematics |
| B | Memory Board Schematics |
| C | Mother Board Bill of Materials |
| D | DRAM Board Bill of Materials |
| E | Table I - Bus Conversion From CPU Lines to Address Lines |
| F | Table II - CPU Command/Cycle Types |
| G | Table III - Latch Disable Delay Time |
| H | Table IV - State Sequences for Typical Cycles |
| I | Table V - Non Processor Subsystem |
| J | I/O Subsystems |
| K | Interrupt Controller |
| L | ROM Memory System |
| M | Miscellaneous |
| N | KSUBS Source Code |
| O | Timer Source Code |
| P | PAL 16L8B Listing |
| Q | PAL Design Data |
| R | TESTHRAM Source Code |
| S | Dual Mapped ROM Subroutine |
| T | Technical Reference Manual - Chapters 2 and 3 |

3.12.87

2

# APPENDIX A

# MOTHER BOARD SCHEMATICS

SPARE PARTS

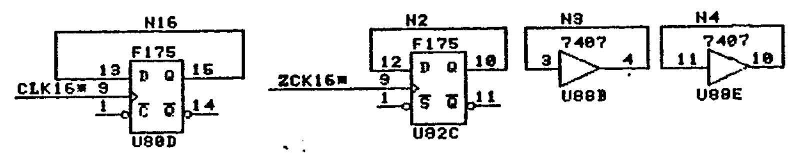


0 OHM
U76R
INSTALL 0 OHM RESISTOR
IN PINS 6 AND 10

PCB PART NUMBER: 000403
ASSY PART NUMBER: 000401

COMPAQ™ COMPUTER CORPORATION

TITLE: D4 MOTHER BOARD SCHEMATIC

| SIZE | CODE IDENT NO | DRAWING NO. | REV |
|---|---|---|---|
| B | 1716 | 000402-000 | X9 |

REVISED: JULY 26, 1986

SHEET 1 OF 13

| APPROVALS | DATE |
|---|---|
| DRAWN PAUL R. CULLEY | |
| CHECKED | |
| COG ENGR | |
| ENGR | |
| ENGR | |
| MFG | |
| QA | |
| OTHER | |
| OTHER | |

| HIGHEST USED | NOT USED | NEXT ASSY | USED ON |
|---|---|---|---|
| REFERENCE DESIGNATOR | | APPLICATION | |

THIS DOCUMENT CONTAINS INFORMATION PROPRIETARY TO COMPAQ COMPUTER CORPORATION (COMPAQ). USE OR DISCLOSURE WITHOUT THE WRITTEN PERMISSION OF AN OFFICER OF COMPAQ IS EXPRESSLY FORBIDDEN

COPYRIGHT (C) COMPAQ 1986

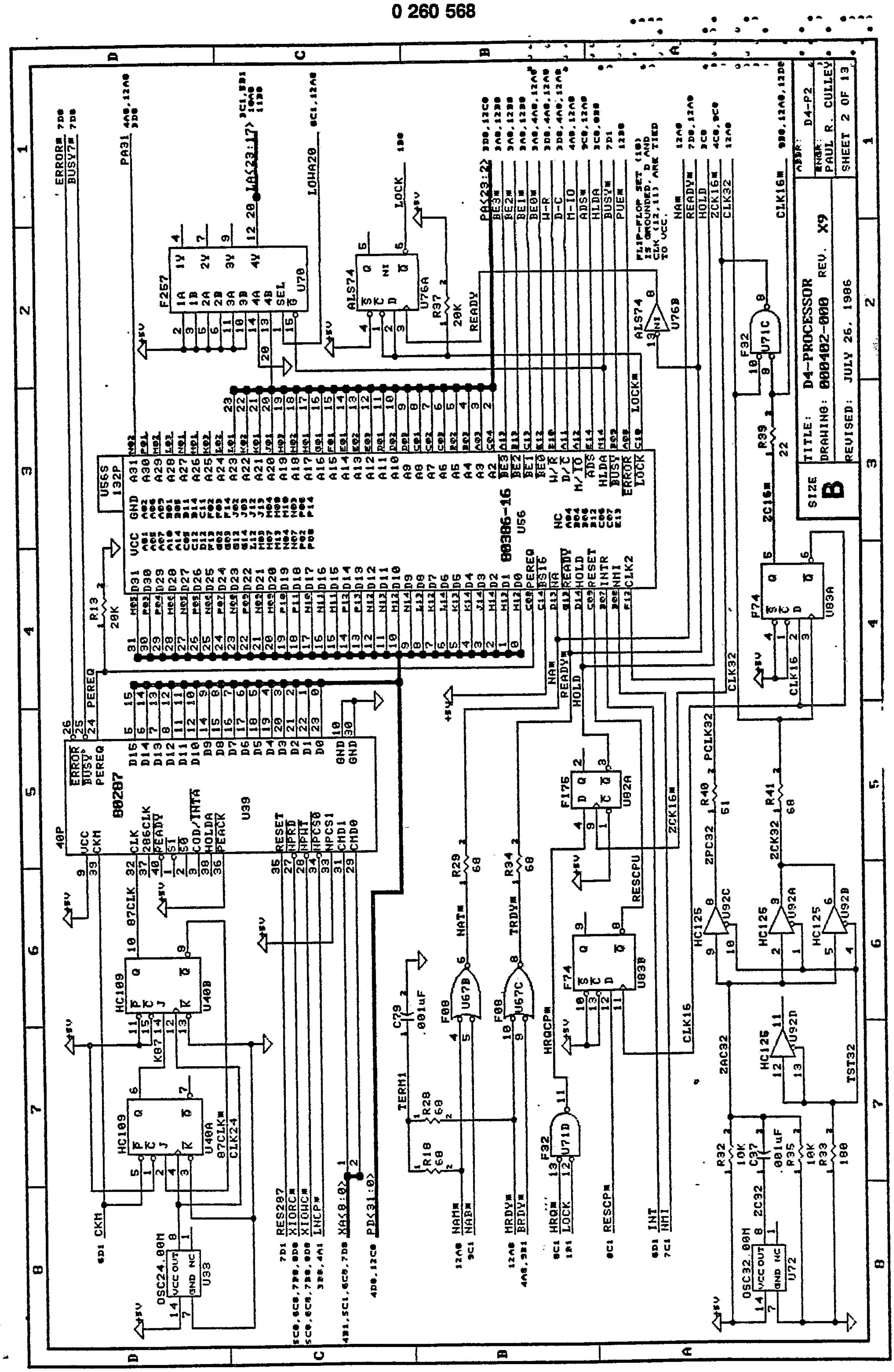
TITLE: D4-PROCESSOR
DRAWING: 000402-000 REV. X9
REVISED: JULY 26, 1986
SIZE B
ENGR: PAUL R. CULLEY
SHEET 2 OF 13
D4-P2

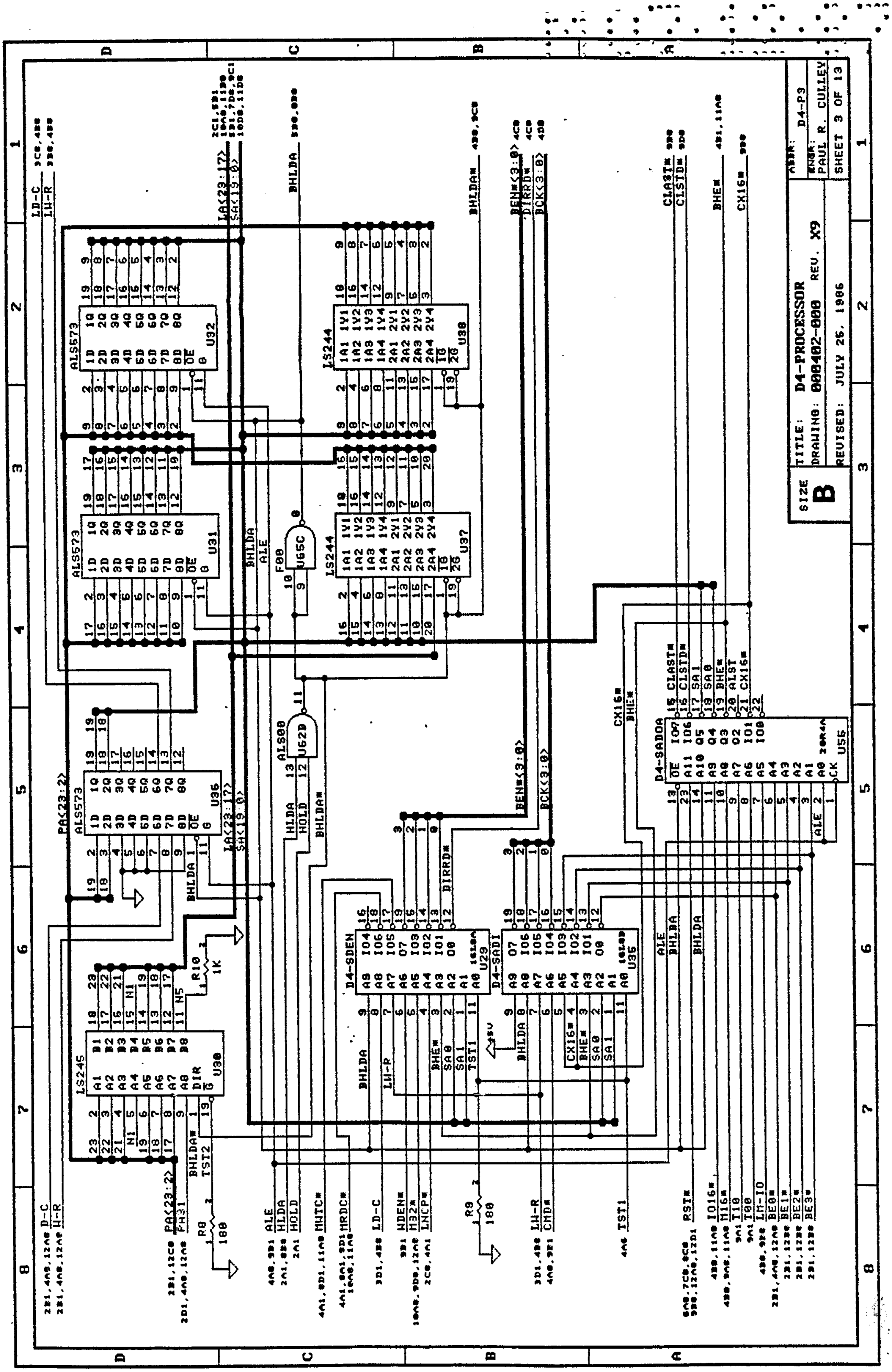

TITLE: D4-PROCESSOR
DRAWING: 000402-000 REV. X9
REVISED: JULY 25, 1986
SIZE B
ABBR: D4-P3
ENGR: PAUL R. CULLEY
SHEET 3 OF 13

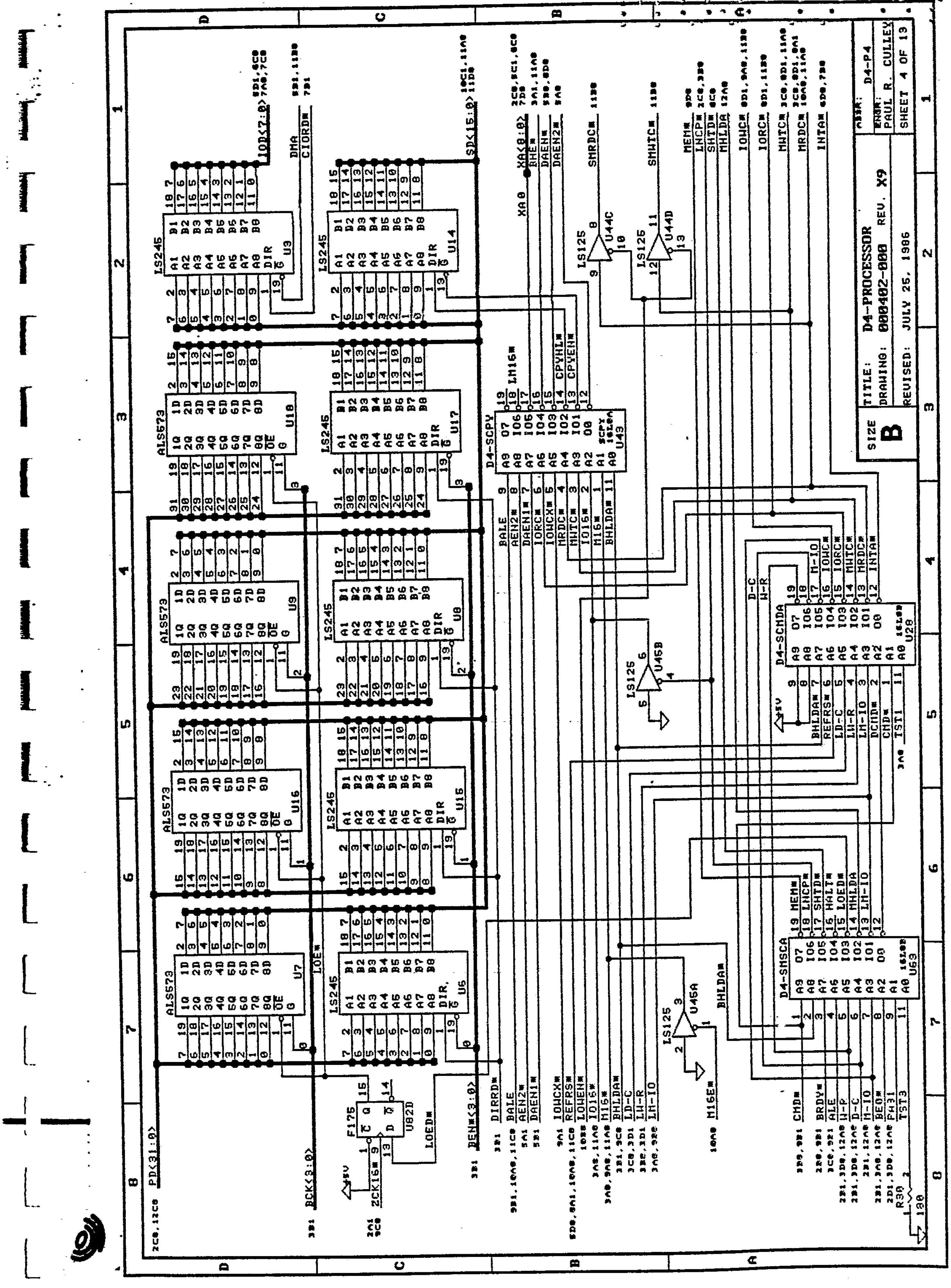
TITLE: D4-PROCESSOR
DRAWING: 000402-000 REV. X9
REVISED: JULY 25, 1986
ENGR: PAUL R. CULLEY
SHEET 4 OF 13
SIZE B

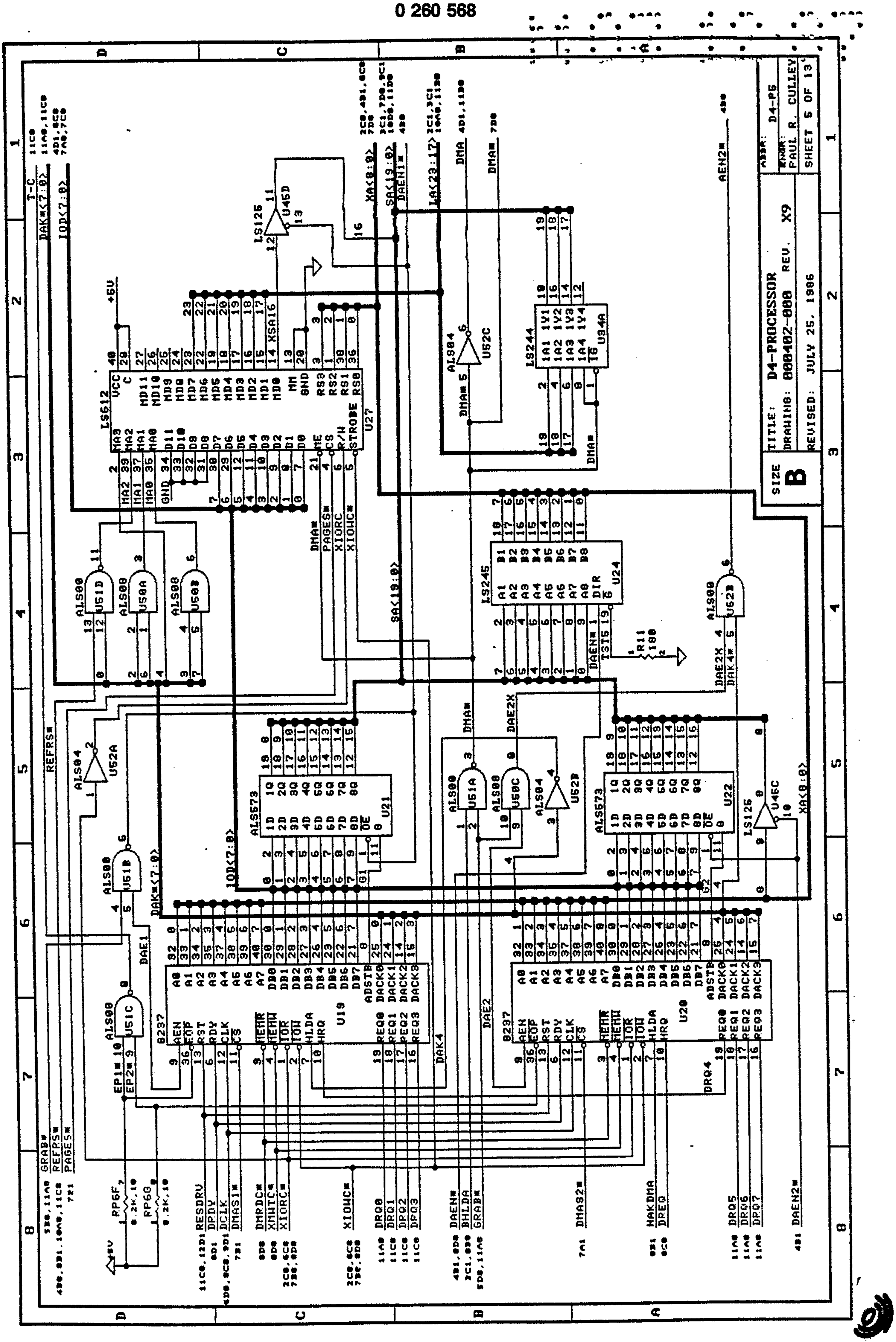
TITLE: D4-PROCESSOR
DRAWING: 000402-000
REV. X9
REVISED: JULY 25, 1986
SIZE B
D4-P5
PAUL R. CULLEY
SHEET 5 OF 13

0 260 568

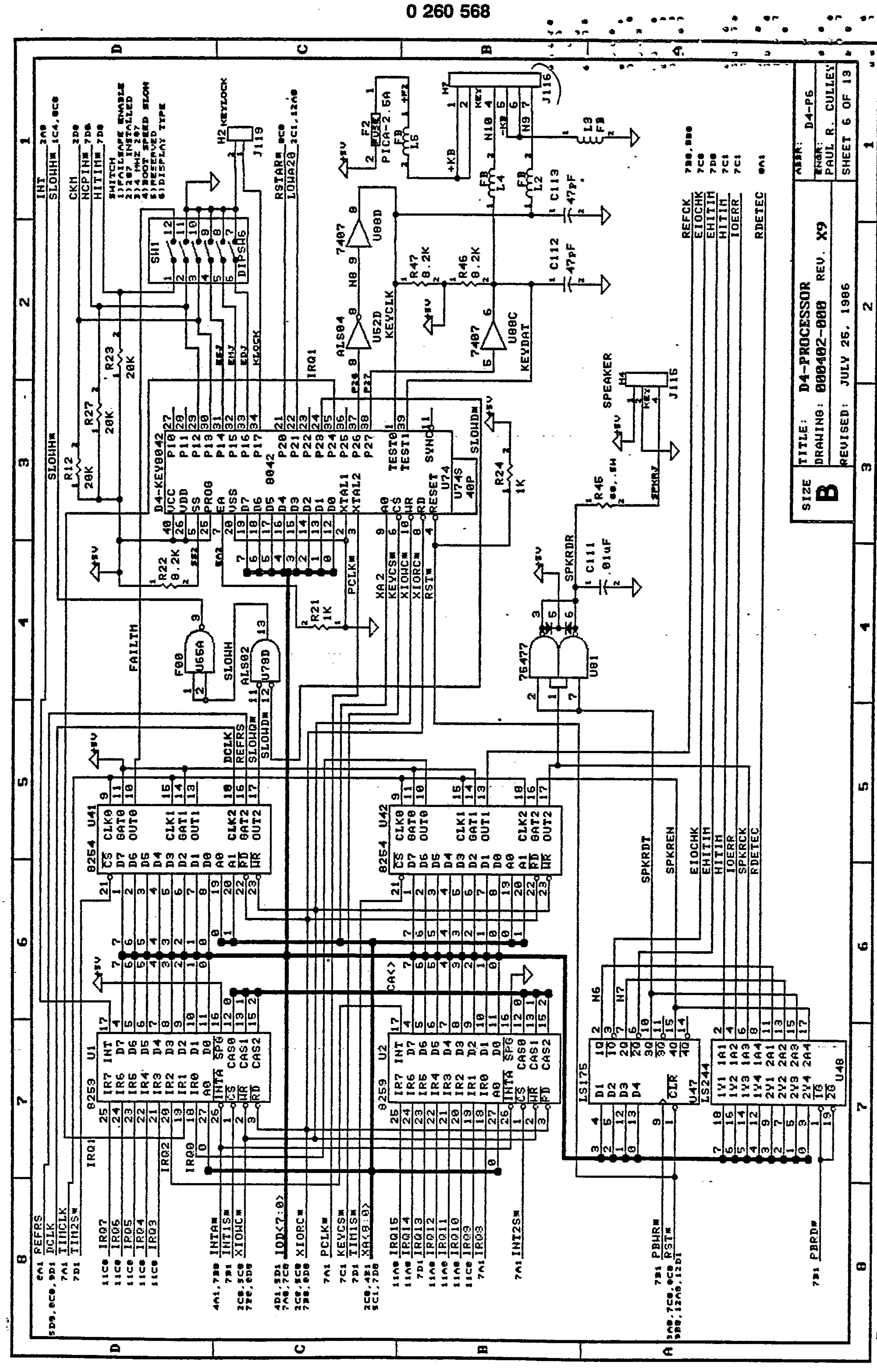
TITLE: D4-PROCESSOR
DRAWING: 000402-000 REV. X9
REVISED: JULY 26, 1986
SIZE B
ASSY: D4-P6
ENGR: PAUL R. CULLEY
SHEET 6 OF 13

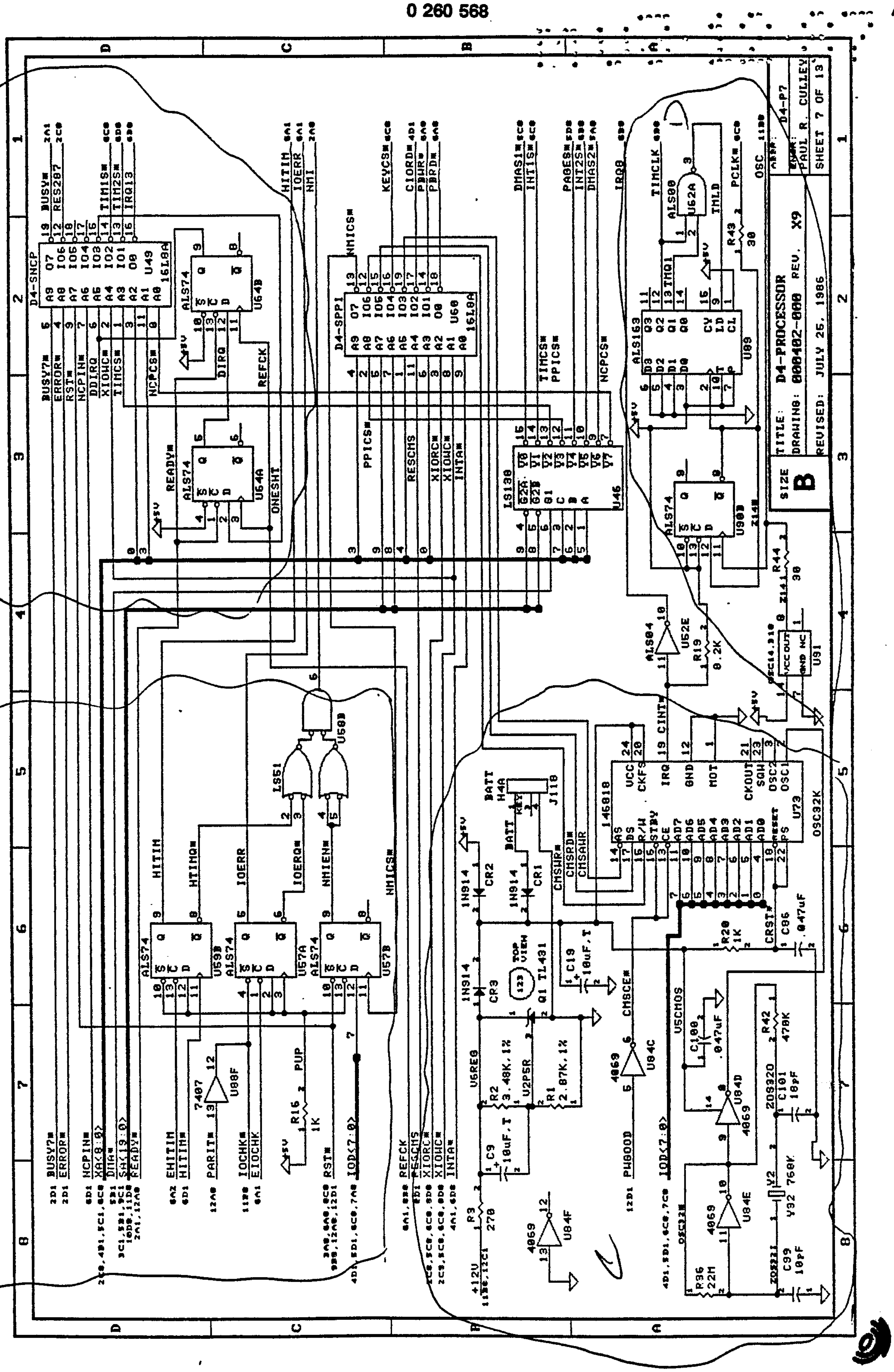
TITLE: D4-PROCESSOR
DRAWING: 000402-000 REV. X9
REVISED: JULY 25, 1986
SIZE B
ENGR: PAUL R. CULLEY
SHEET 7 OF 13
D4-P7

10

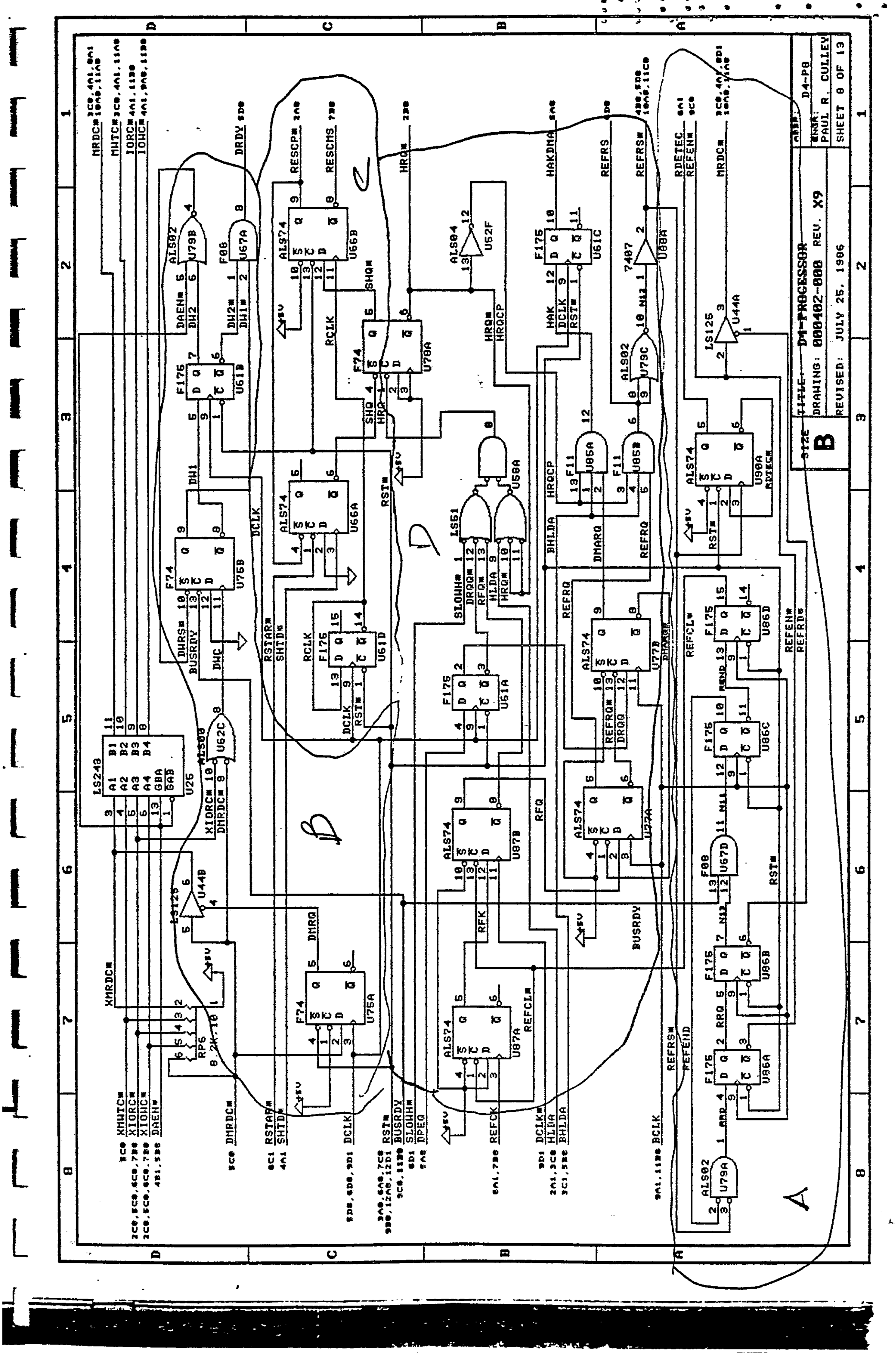
TITLE: D4-PROCESSOR
DRAWING: 000402-000 REV. X9
REVISED: JULY 25, 1986
ENGR: PAUL R. CULLEY
D4-P8
SHEET 8 OF 13
SIZE B

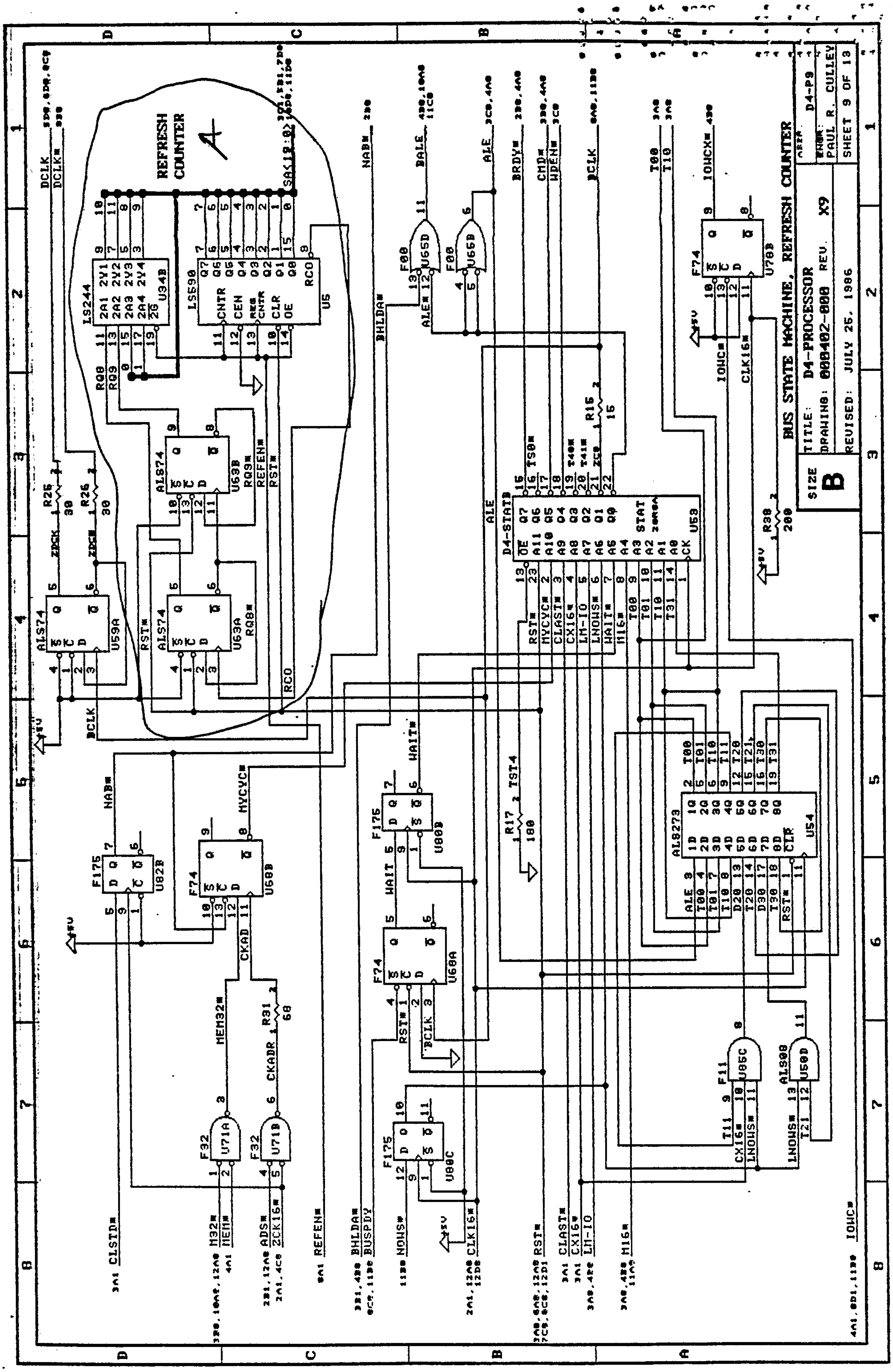
REFRESH COUNTER
BUS STATE MACHINE, REFRESH COUNTER
TITLE: D4-PROCESSOR
DRAWING: 000402-000
REV. X9
REVISED: JULY 25, 1986
PAUL R. CULLEY
D4-P9
SHEET 9 OF 13
SIZE B

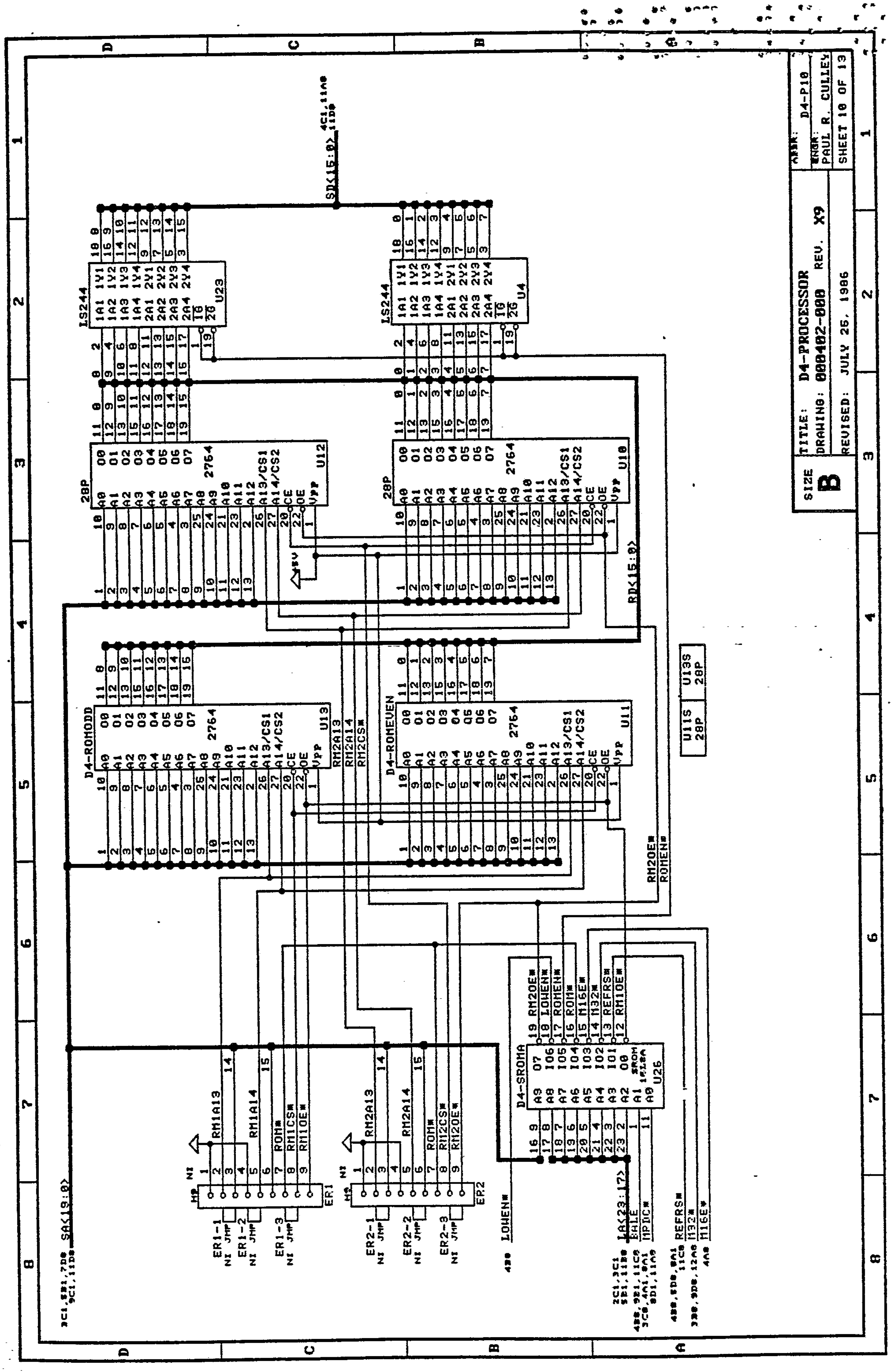
TITLE: D4-PROCESSOR
DRAWING: 000402-000 REV. X9
REVISED: JULY 25, 1986
SIZE B
ASSY: D4-P10
ENGR: PAUL R. CULLEY
SHEET 10 OF 13

13

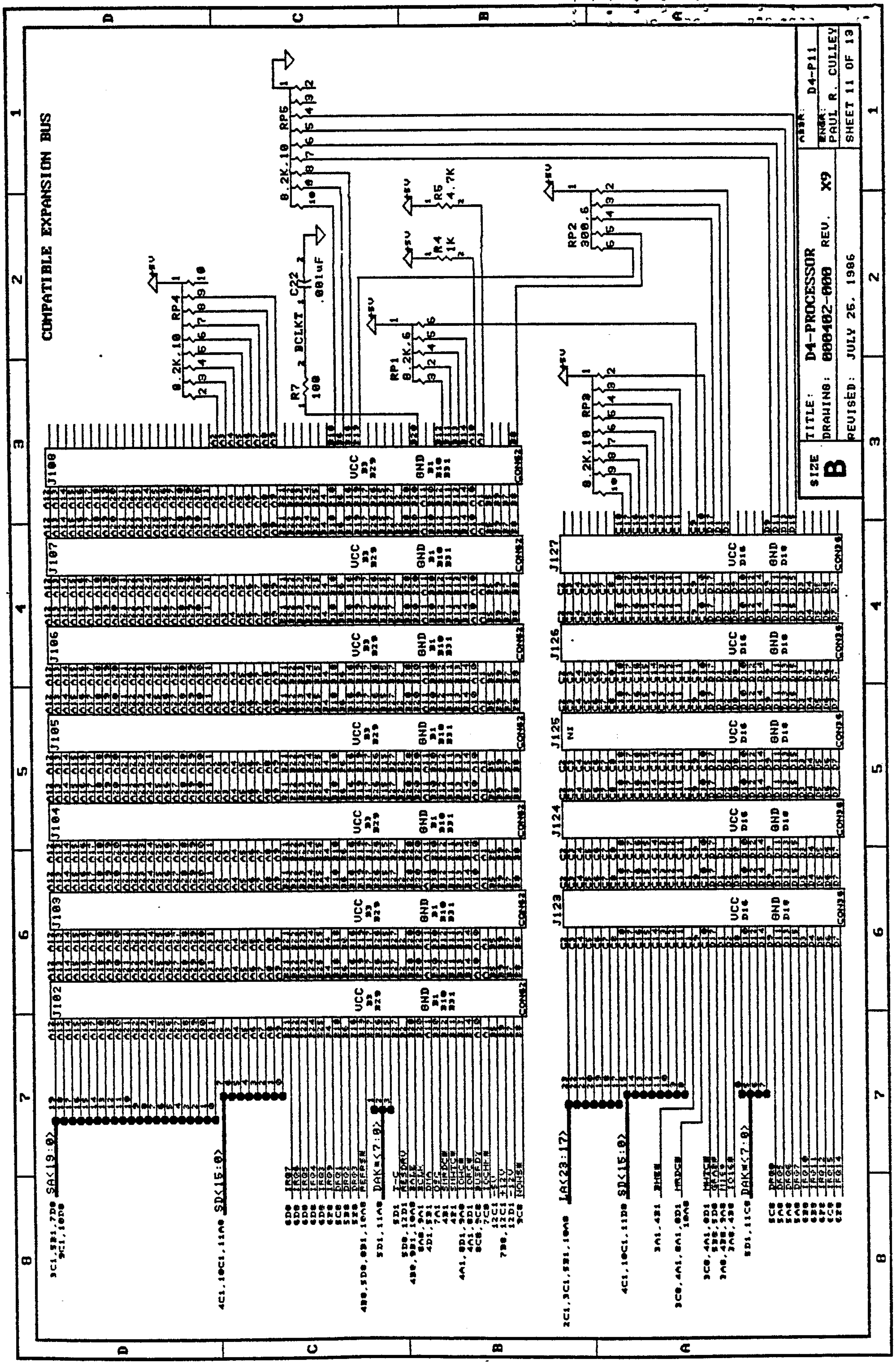

COMPATIBLE EXPANSION BUS
TITLE: D4-PROCESSOR
DRAWING: 000402-000
REV. X9
REVISED: JULY 25, 1986
SIZE B
ENGR: PAUL R. CULLEY
SHEET 11 OF 13
D4-P11

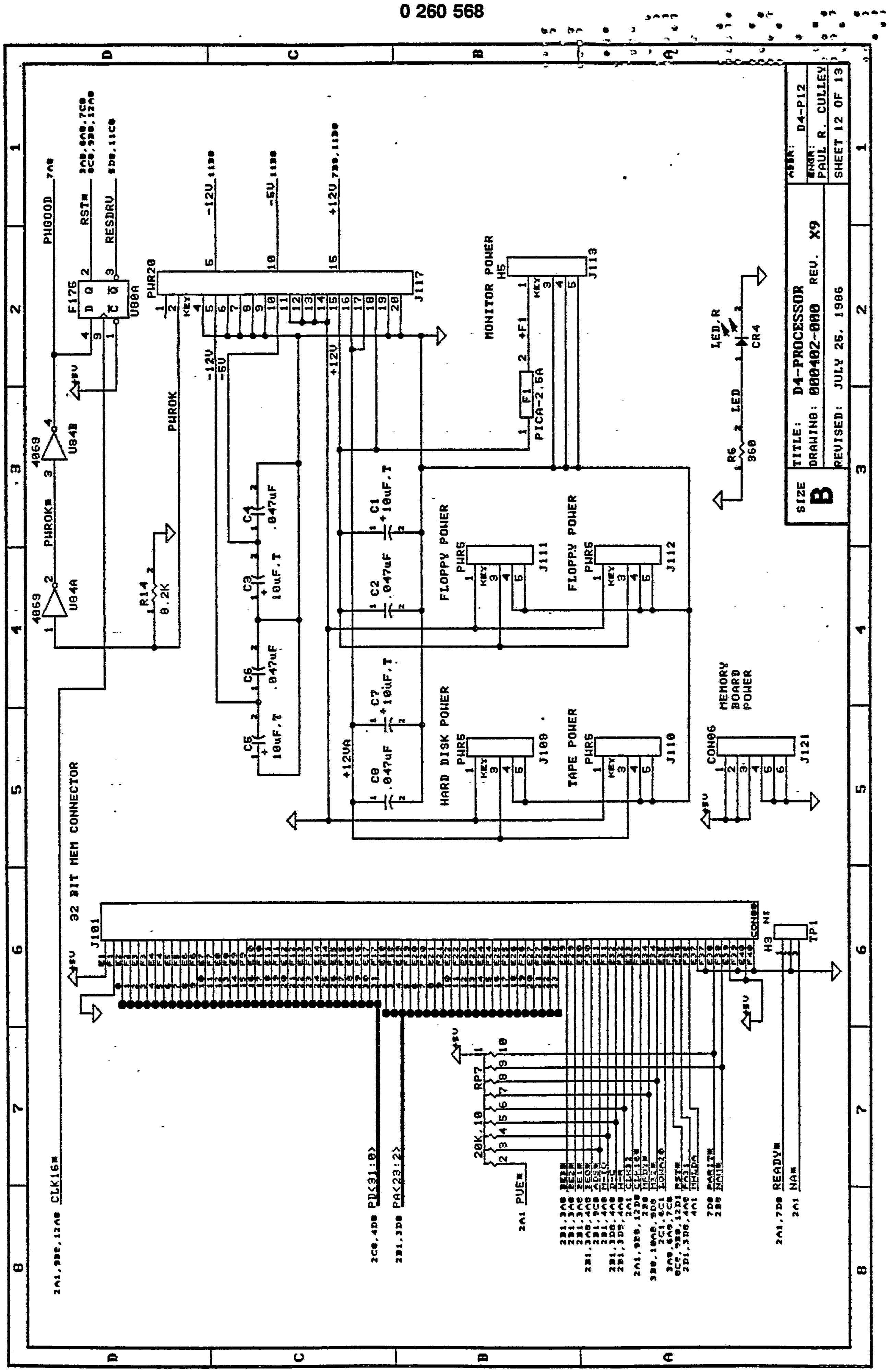
32 BIT MEM CONNECTOR
FLOPPY POWER
HARD DISK POWER
TAPE POWER
MONITOR POWER
MEMORY BOARD POWER
SIZE B
TITLE: D4-PROCESSOR
DRAWING: 000402-000 REV. X9
REVISED: JULY 25, 1986
ABBR: D4-P12
ENGR: PAUL R. CULLEY
SHEET 12 OF 13

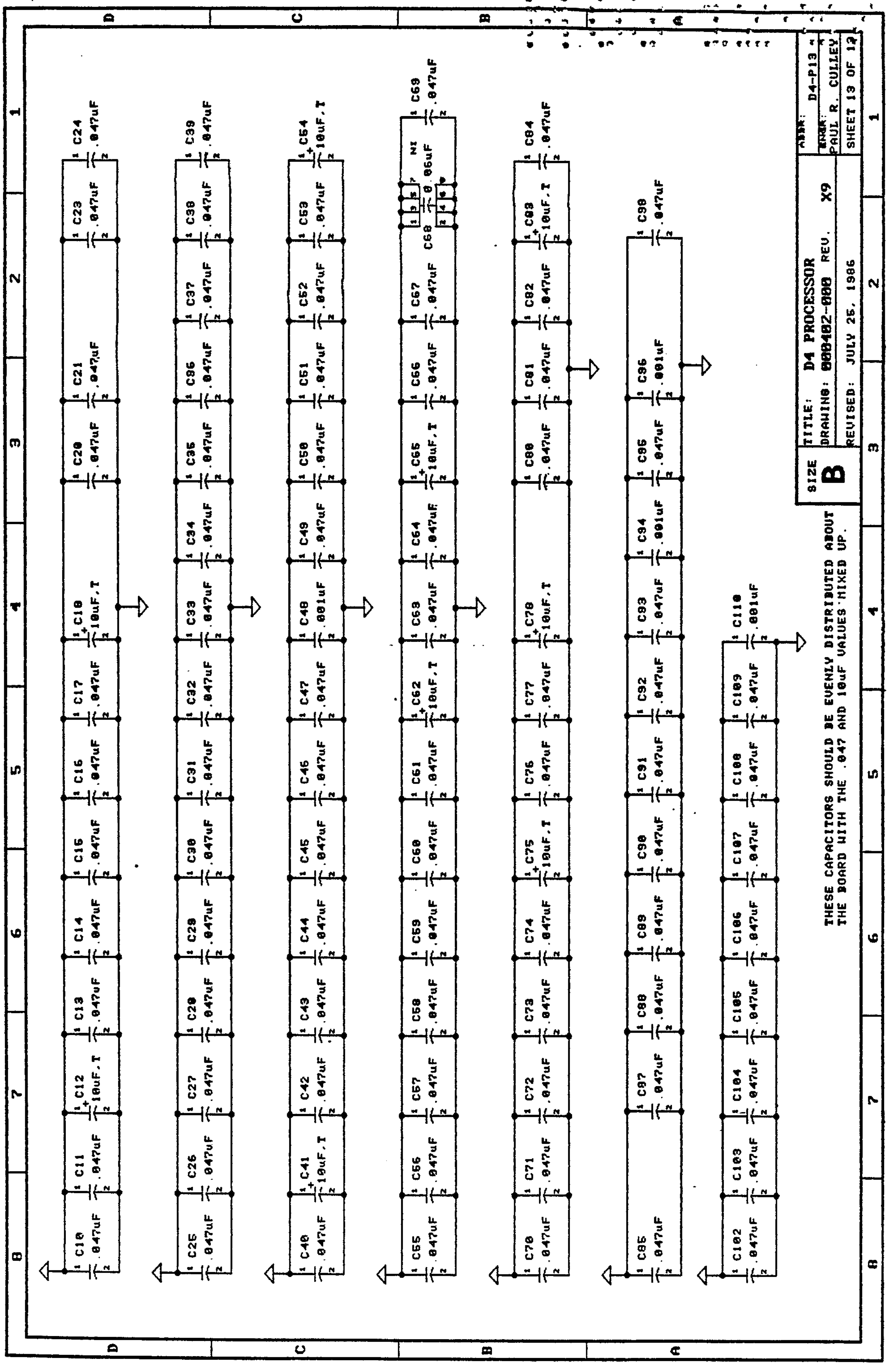
THESE CAPACITORS SHOULD BE EVENLY DISTRIBUTED ABOUT THE BOARD WITH THE .047 AND 10uF VALUES MIXED UP.
SIZE B
TITLE: D4 PROCESSOR
DRAWING: 000402-000 REV. X9
REVISED: JULY 25, 1986
ABBR: D4-P13
ENGR: PAUL R. CULLEY
SHEET 13 OF 19

APPENDIX B

MEMORY BOARD SCHEMATICS

NOTES, UNLESS OTHERWISE SPECIFIED:

1. ALL RESISTORS ARE 1/4W, 5%, AND ARE IN OHMS. ALL CAPACITORS ARE 50V AND ARE IN MICROFARADS.

| REVISIONS | | | APPROVALS | | | |
|---|---|---|---|---|---|---|
| REV | ECN NO. | DESCRIPTION OF CHANGE | DATE | DFTG. | ENGR. | REL. |
| AX | 7104 | RELEASED FOR PRE-PRODUCTION | | | | |
| A | 7382 | RELEASED FOR PRODUCTION | 8-4-86 | | | |

| APPROVALS | | DATE |
|---|---|---|
| DRAWN | PAUL CULLEY | 7/11/86 |
| CHECKED | | 8/1/86 |
| | Paul K. Culley | 7-31-86 |
| REVISED | | 7/11/86 |

COMPAQ® COMPUTER CORPORATION

TITLE:

SCHEMATIC, MEM PCB-DP3

ABBR. D4-R

| SIZE | CODE IDENT NO. | DRAWING NO. | REV |
|---|---|---|---|
| B | 1716 | 000414-000 | A |

REVISED: AUG 04, 1986 SHEET 1 OF 10

| HIGHEST USED | NOT USED | NEXT ASSY | USED ON |
|---|---|---|---|
| | | 000413 | |
| REFERENCE DESIGNATOR | | APPLICATION | |

THIS DOCUMENT CONTAINS INFORMATION PROPRIETARY TO COMPAQ COMPUTER CORPORATION (COMPAQ). USE OR DISCLOSURE WITHOUT THE WRITTEN PERMISSION OF AN OFFICER OF COMPAQ IS EXPRESSLY FORBIDDEN.
COPYRIGHT (C) COMPAQ 1984

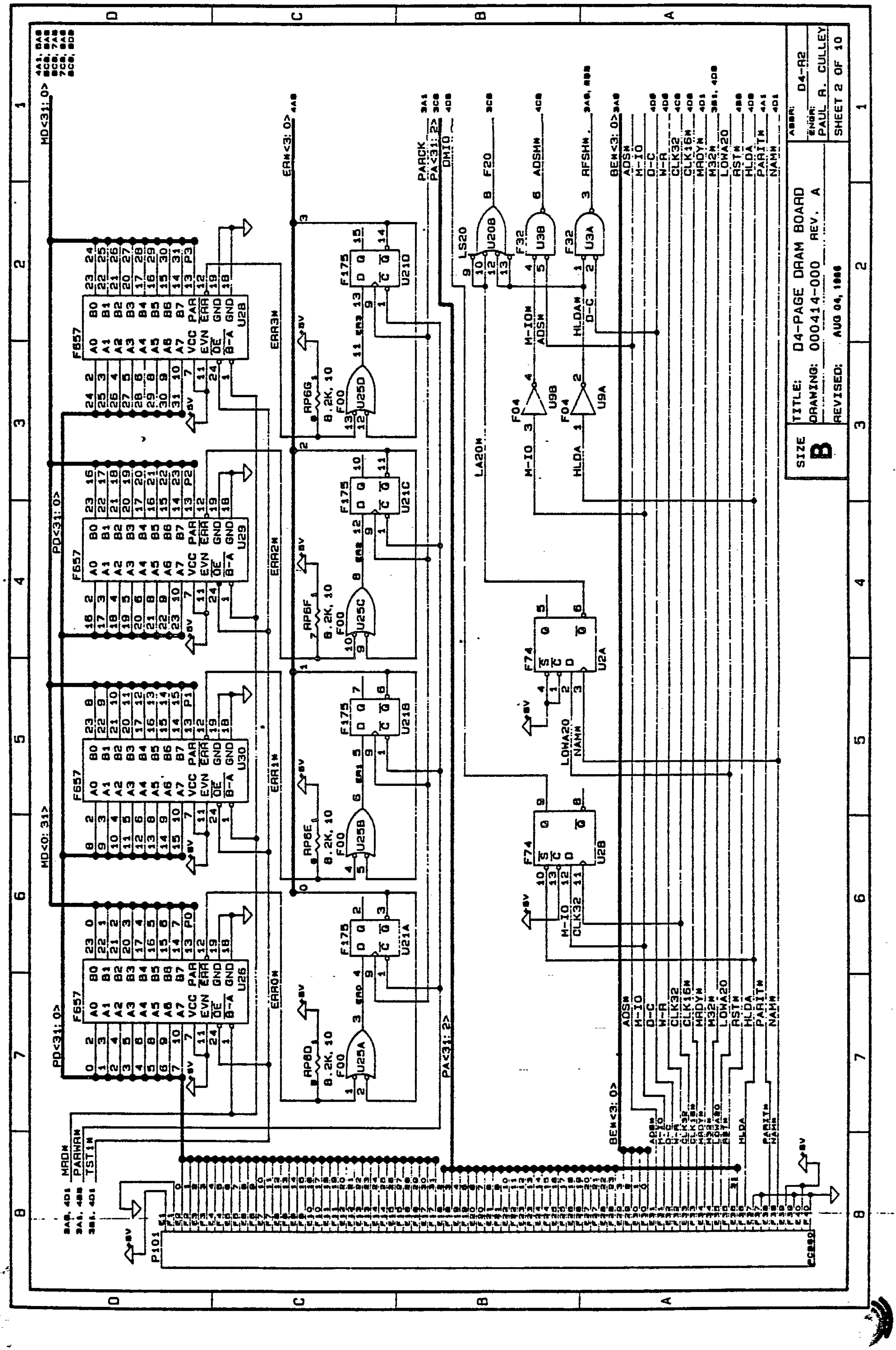
SIZE B
TITLE: D4-PAGE DRAM BOARD
DRAWING: 000414-000 REV. A
REVISED: AUG 04, 1986
ABBR: D4-R2
ENGR: PAUL R. CULLEY
SHEET 2 OF 10

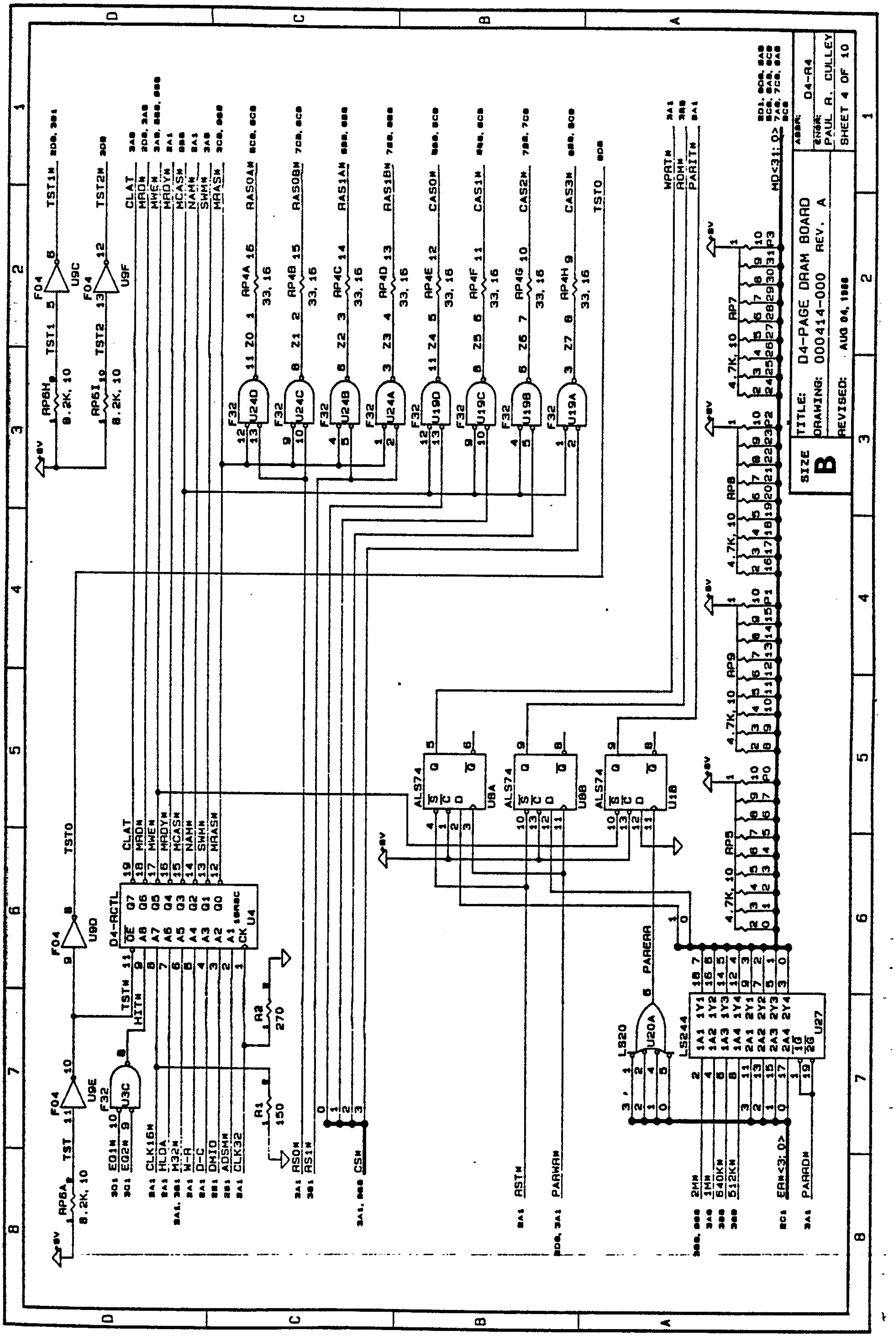
TITLE: D4-PAGE DRAM BOARD
DRAWING: 000414-000 REV. A
REVISED: AUG 04, 1986
SIZE B
ABBR: D4-R4
ENGR: PAUL R. CULLEY
SHEET 4 OF 10

20

0 260 568

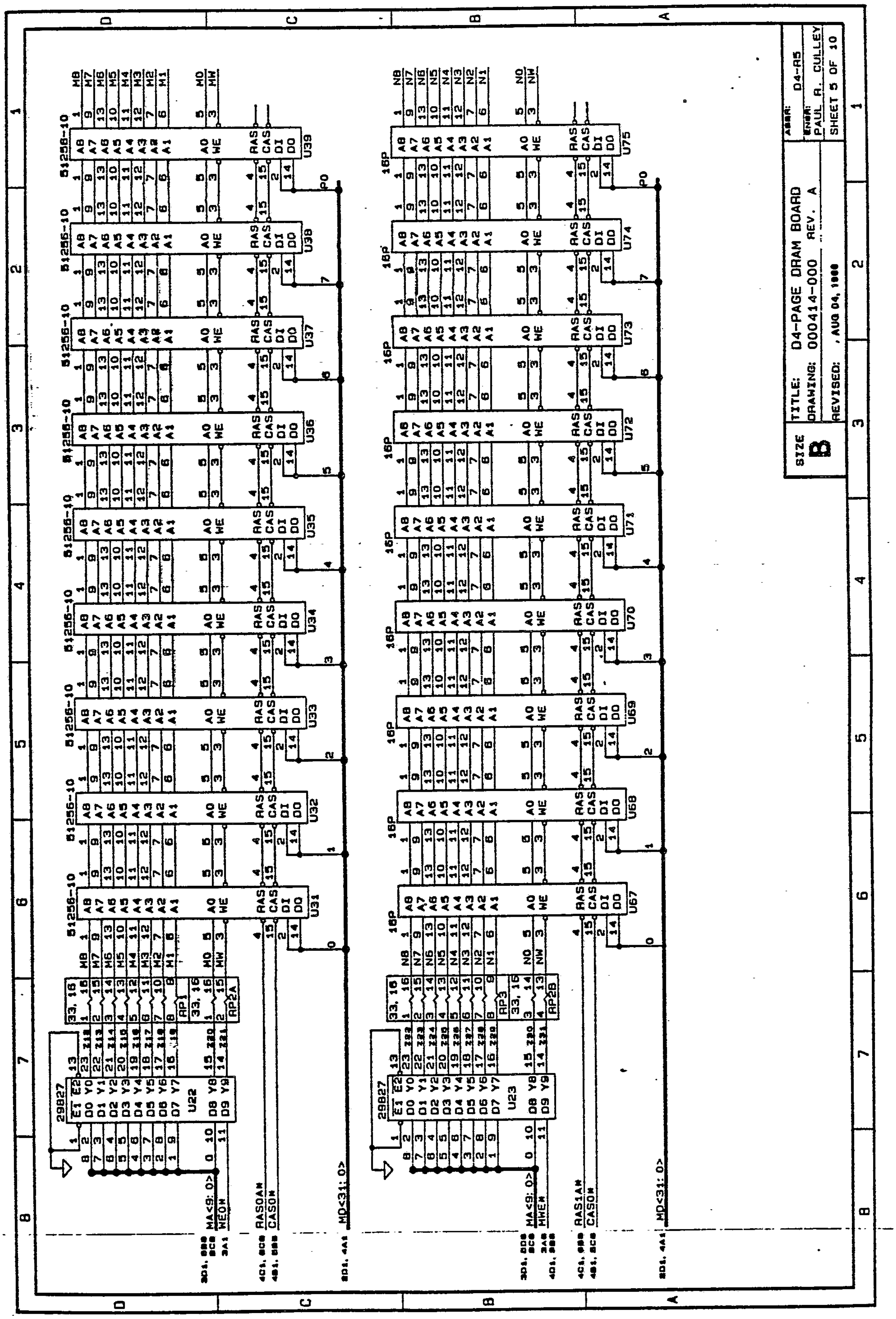
TITLE: D4-PAGE DRAM BOARD
DRAWING: 000414-000 REV. A
REVISED: , AUG 04, 1986
SIZE B
ASSM: D4-R5
ENGR: PAUL R. CULLEY
SHEET 5 OF 10

0 260 568

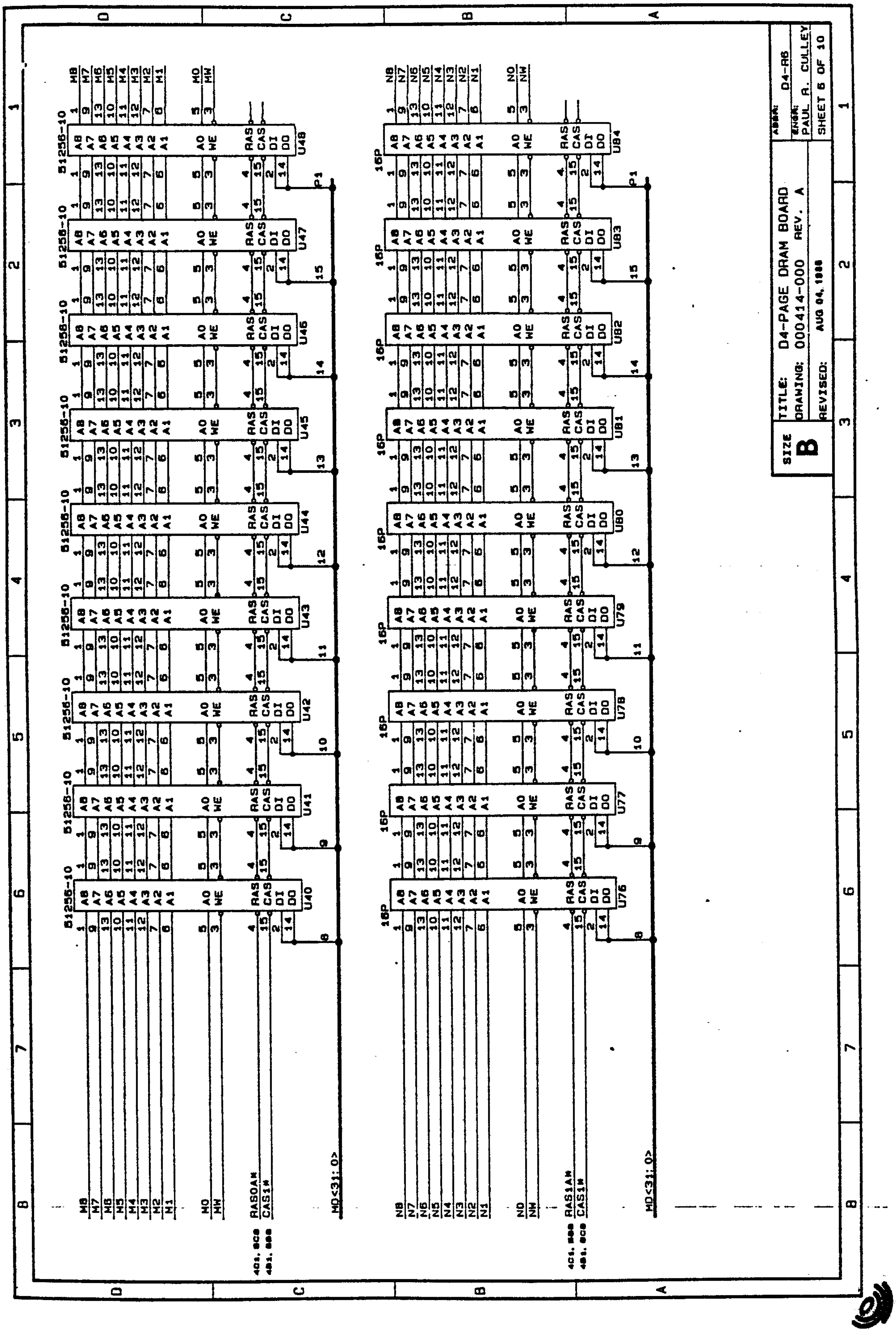

TITLE: D4-PAGE DRAM BOARD
DRAWING: 000414-000 REV. A
REVISED: AUG 04, 1988
SIZE B
ABBR: D4-R6
ENGR: PAUL R. CULLEY
SHEET 6 OF 10

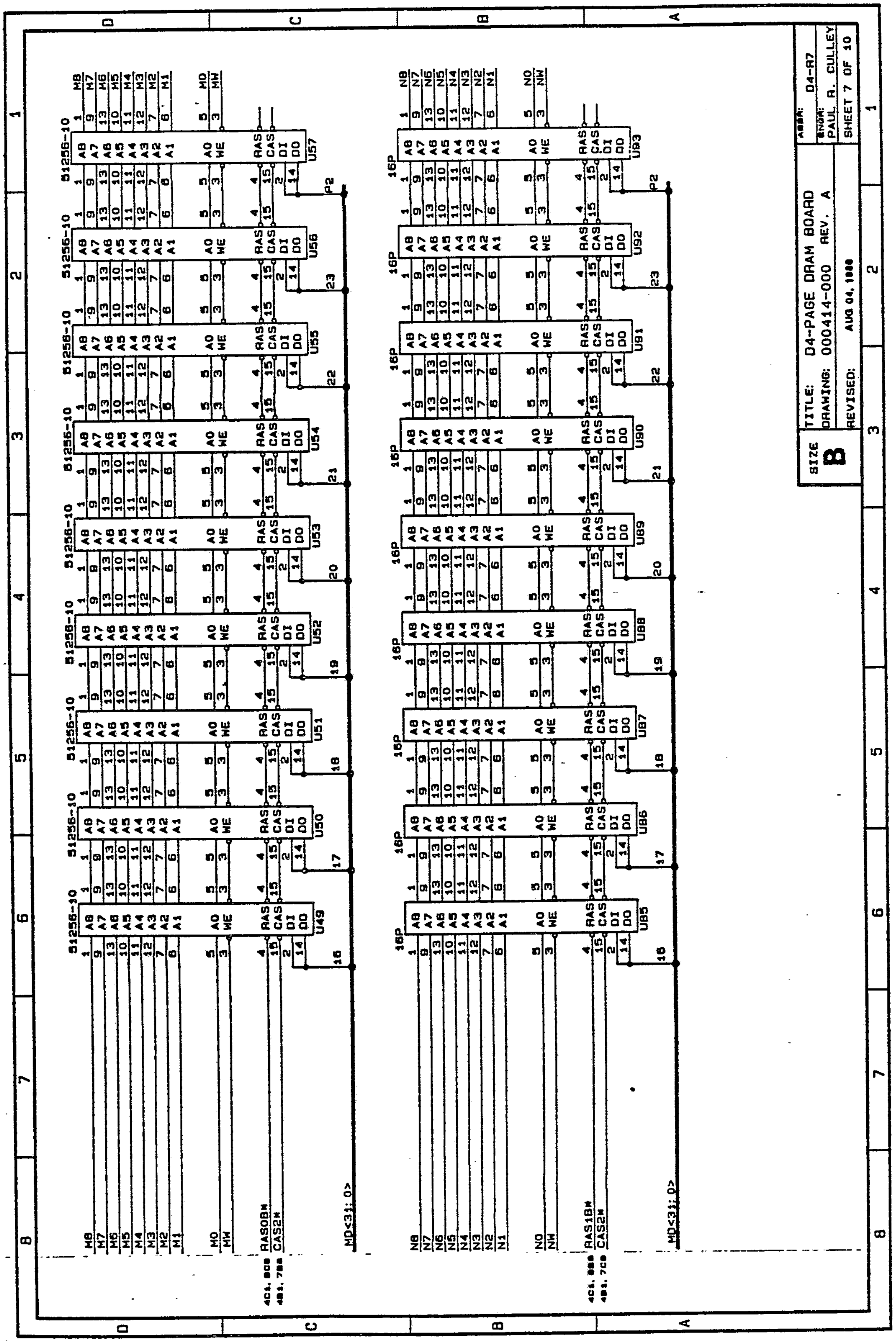
TITLE: D4-PAGE DRAM BOARD
DRAWING: 000414-000 REV. A
REVISED: AUG 04, 1986
SIZE B
ENGR: PAUL R. CULLEY
D4-R7
SHEET 7 OF 10

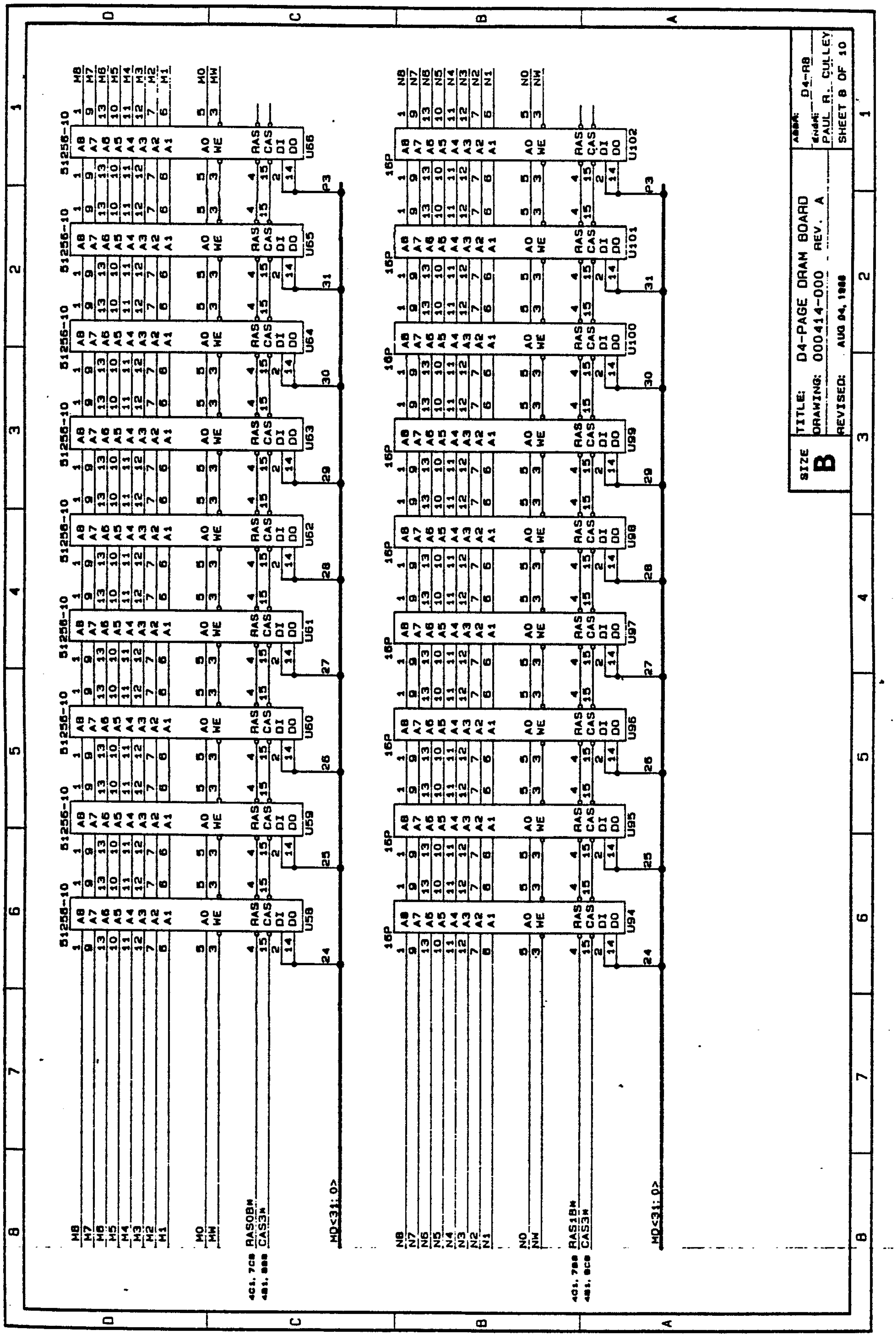
TITLE: D4-PAGE DRAM BOARD
DRAWING: 000414-000 REV. A
REVISED: AUG 04, 1988
SIZE B
D4-RB
PAUL R. CULLEY
SHEET 8 OF 10

24

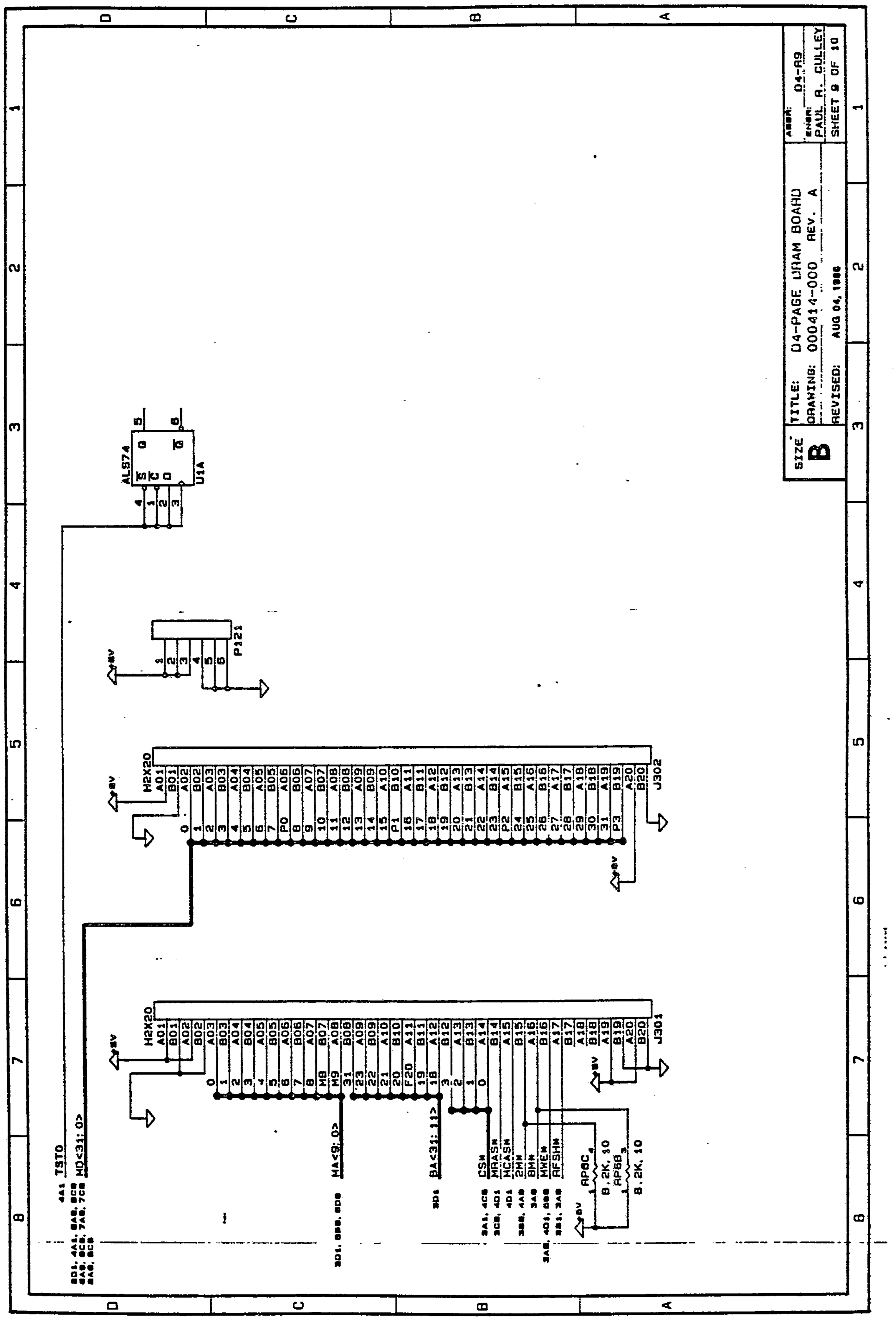
TITLE: D4-PAGE DRAM BOARD
DRAWING: 000414-000 REV. A
REVISED: AUG 04, 1986
SIZE B
ASSM: D4-A9
ENGR: PAUL A. CULLEY
SHEET 9 OF 10
ALS74
U1A
P121
H2X20
J302
J301
TSTO
MD<31:0>
MA<9:0>
BA<31:11>
CSW
MRASW
MCASW
2MW
8MW
MWEW
RFSHW
RP8C
RP8B
8.2K, 10

25

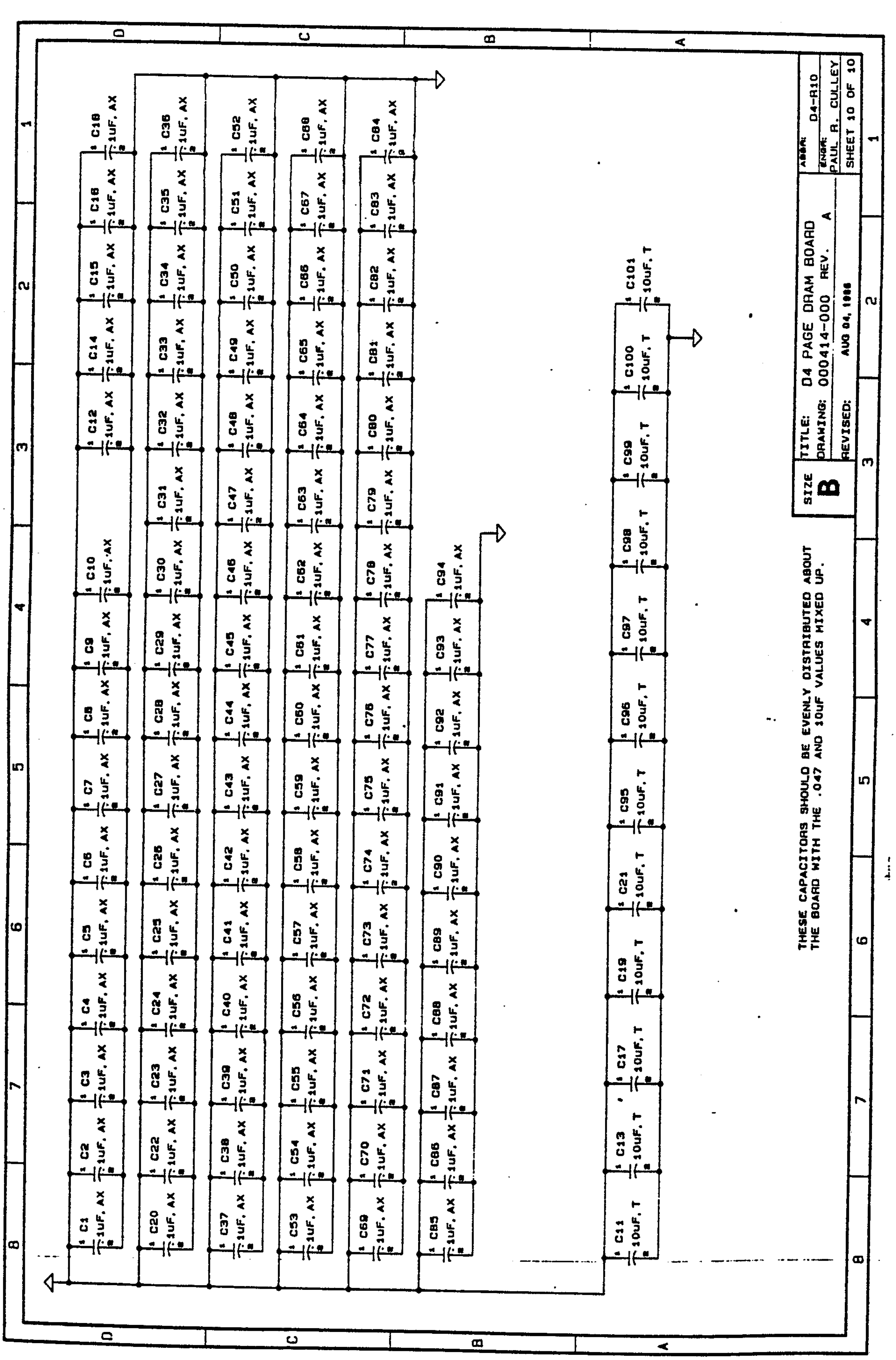
THESE CAPACITORS SHOULD BE EVENLY DISTRIBUTED ABOUT THE BOARD WITH THE .047 AND 10uF VALUES MIXED UP.
SIZE B
TITLE: D4 PAGE DRAM BOARD
DRAWING: 000414-000 REV. A
REVISED: AUG 04, 1986
ABBR: D4-R10
ENGR: PAUL R. CULLEY
SHEET 10 OF 10

APPENDIX C

MOTHER BOARD
BILL OF MATERIALS

LIST OF MATERIALS REPORT DATE: 07-31-1986 PAGE: 1

D4 MOTHER BOARD SCHEMATIC Drawing No: 000402-000 Rev: X9

| Item | Qty | Part Number | Description | | | |
|---|---|---|---|---|---|---|
| 26 | 1 | 101262-001 | XTAL, MINTR,32.768KHz | Y | 2 | |
| 43 | 1 | 100144-001 | IC, PROML INTRPT CONTR....8259 | U | 1 | |
| 43 | 1 | 100144-001 | IC, PROML INTRPT CONTR....8259 | U | 2 | |
| 99 | 1 | 100129-001 | IC, OCT BUS XCVR.......74LS245 | U | 3 | |
| 98 | 1 | 100091-001 | IC, OCT BFR/L DRVR.....74LS244 | U | 4 | |
| 100 | 1 | 101653-001 | IC, CNTR...............74LS590 | U | 5 | |
| 99 | 1 | 100129-001 | IC, OCT BUS XCVR.......74LS245 | U | 6 | |
| 55 | 1 | 101633-001 | IC, OCT D-TYPE LCH....74ALS573 | U | 7 | |
| 99 | 1 | 100129-001 | IC, OCT BUS XCVR.......74LS245 | U | 8 | |
| 55 | 1 | 101633-001 | IC, OCT D-TYPE LCH....74ALS573 | U | 9 | |
| 35 | 1 | 100079-008 | SCKT, IC,LO PF,28P,.600 | U | 10 | |
| 61 | 1 | 102669-003 | ASSY, EPROM, MEM #2 [EVEN] | U | 11 | |
| 35 | 1 | 100079-008 | SCKT, IC,LO PF,28P,.600 | U | 11 | S |
| 35 | 1 | 100079-008 | SCKT, IC,LO PF,28P,.600 | U | 12 | |
| 62 | 1 | 102667-003 | ASSY, EPROM,MEM #1 [ODD] | U | 13 | |
| 35 | 1 | 100079-008 | SCKT, IC,LO PF,28P,.600 | U | 13 | S |
| 99 | 1 | 100129-001 | IC, OCT BUS XCVR.......74LS245 | U | 14 | |
| 99 | 1 | 100129-001 | IC, OCT BUS XCVR.......74LS245 | U | 15 | |
| 55 | 1 | 101633-001 | IC, OCT D-TYPE LCH....74ALS573 | U | 16 | |
| 99 | 1 | 100129-001 | IC, OCT BUS XCVR.......74LS245 | U | 17 | |
| 55 | 1 | 101633-001 | IC, OCT D-TYPE LCH....74ALS573 | U | 18 | |
| 41 | 1 | 100147-001 | IC, DMA CONTR.............8237 | U | 19 | |
| 41 | 1 | 100147-001 | IC, DMA CONTR.............8237 | U | 20 | |
| 55 | 1 | 101633-001 | IC, OCT D-TYPE LCH....74ALS573 | U | 21 | |
| 55 | 1 | 101633-001 | IC, OCT D-TYPE LCH....74ALS573 | U | 22 | |
| 98 | 1 | 100091-001 | IC, OCT BFR/L DRVR.....74LS244 | U | 23 | |
| 99 | 1 | 100129-001 | IC, OCT BUS XCVR.......74LS245 | U | 24 | |
| 97 | 1 | 105672-001 | IC, QD BUS XCVR........74LS243 | U | 25 | |
| 71 | 1 | 108135-001 | ASSY, IC,PAL,D4-SROMA....16L8A | U | 26 | |
| 101 | 1 | 101649-001 | IC, MEM MAPPER.........74LS612 | U | 27 | |
| 65 | 1 | 108134-001 | ASSY, IC,PAL,D4-SCMDA....16L8B | U | 28 | |
| 67 | 1 | 105653-001 | ASSY, IC,PAL,D4-SDEN.....16L8A | U | 29 | |
| 99 | 1 | 100129-001 | IC, OCT BUS XCVR.......74LS245 | U | 30 | |
| 55 | 1 | 101633-001 | IC, OCT D-TYPE LCH....74ALS573 | U | 31 | |
| 55 | 1 | 101633-001 | IC, OCT D-TYPE LCH....74ALS573 | U | 32 | |
| 103 | 1 | 108066-001 | XTAL, OSCR,24.000mHz,CMOS | U | 33 | |
| 98 | 1 | 100091-001 | IC, OCT BFR/L DRVR.....74LS244 | U | 34 | AB |
| 63 | 1 | 105645-001 | ASSY, IC,PAL,D4-SADI.....16L8B | U | 35 | |
| 55 | 1 | 101633-001 | IC, OCT D-TYPE LCH....74ALS573 | U | 36 | |
| 98 | 1 | 100091-001 | IC, OCT BFR/L DRVR.....74LS244 | U | 37 | |
| 98 | 1 | 100091-001 | IC, OCT BFR/L DRVR.....74LS244 | U | 38 | |
| 36 | 1 | 100079-009 | SCKT, IC,LO PF,40P,.600 | U | 39 | |
| 89 | 1 | 108223-001 | IC, DL J(K) F/F........74HC109 | U | 40 | AB |
| 42 | 1 | 101592-001 | IC, PROML INTVL TIMER.....8254 | U | 41 | |
| 42 | 1 | 101592-001 | IC, PROML INTVL TIMER.....8254 | U | 42 | |
| 66 | 1 | 105651-001 | ASSY, IC,PAL,D4-SCPY.....16L8A | U | 43 | |
| 94 | 1 | 100131-001 | IC, QD GATED BFR.......74LS125 | U | 44 | ABCD |
| 94 | 1 | 100131-001 | IC, QD GATED BFR.......74LS125 | U | 45 | ABCD |
| 95 | 1 | 100135-001 | IC, 3-8 L DCDR/DMUXR...74LS138 | U | 46 | |
| 96 | 1 | 100151-001 | IC, QD D-TYPE F/F......74LS175 | U | 47 | |
| 98 | 1 | 100091-001 | IC, OCT BFR/L DRVR.....74LS244 | U | 48 | |
| 69 | 1 | 105657-001 | ASSY, IC,PAL,D4-SNCP.....16L8A | U | 49 | |
| 51 | 1 | 101628-001 | IC, QD 2-INP AND GATE..74ALS08 | U | 50 | ABCD |
| 48 | 1 | 101632-001 | IC, QD 2-INP NAND GATE.74ALS00 | U | 51 | ABCD |
| 50 | 1 | 101636-001 | IC, HEX INV...........74ALS04 | U | 52 | ABCDEF |

LIST OF MATERIALS REPORT DATE: 07-31-1986 PAGE: 2

D4 MOTHER BOARD SCHEMATIC Drawing No: 000402-000 Rev: X9

| Item | Qty | Part Number | Description | | | |
|---|---|---|---|---|---|---|
| 72 | 1 | 108219-001 | ASSY, IC,PAL,D4-STATB....20R8A | U | 53 | |
| 54 | 1 | 108221-001 | IC, OCT D-TYPE F/F....74ALS273 | U | 54 | |
| 64 | 1 | 108220-001 | ASSY, IC,PAL,D4-SADDA....20R4A | U | 55 | |
| 45 | 1 | 105674-002 | IC, 32-BIT MICROPRCSR.80386-16 | U | 56 | |
| 37 | 1 | 105148-001 | SCKT, IC,132 PIN,PGA | U | 56 | S |
| 52 | 1 | 101637-001 | IC, DL D-TYPE F/F......74ALS74 | U | 57 | AB |
| 93 | 1 | 100132-001 | IC, AND-OR-INVERT GATE..74LS51 | U | 58 | AB |
| 52 | 1 | 101637-001 | IC, DL D-TYPE F/F......74ALS74 | U | 59 | AB |
| 70 | 1 | 105659-001 | ASSY, IC,PAL,D4-SPPI.....16L8A | U | 60 | |
| 79 | 1 | 101156-001 | IC, QD D-TYPE F/F.......74F175 | U | 61 | ABCD |
| 48 | 1 | 101632-001 | IC, QD 2-INP NAND GATE.74ALS00 | U | 62 | ABCD |
| 52 | 1 | 101637-001 | IC, DL D-TYPE F/F......74ALS74 | U | 63 | AB |
| 52 | 1 | 101637-001 | IC, DL D-TYPE F/F......74ALS74 | U | 64 | AB |
| 74 | 1 | 101170-001 | IC, QD NAND GATE.........74F00 | U | 65 | ABCD |
| 52 | 1 | 101637-001 | IC, DL D-TYPE F/F......74ALS74 | U | 66 | AB |
| 75 | 1 | 101158-001 | IC, QD 2-INP AND GATE....74F08 | U | 67 | ABCD |
| 78 | 1 | 100527-001 | IC, DL D-TYPE F/F........74F74 | U | 68 | AB |
| 68 | 1 | 108133-001 | ASSY, IC,PAL,D4-SMSCA....16L8B | U | 69 | |
| 80 | 1 | 101639-001 | IC, QD 2-1 D SEL/MUXR...74F257 | U | 70 | |
| 77 | 1 | 101157-001 | IC, QD 2-INP OR GATE.....74F32 | U | 71 | ABCD |
| 104 | 1 | 100195-013 | XTAL, OSCR,32mHz | U | 72 | |
| 47 | 1 | 101646-001 | IC, REAL TIME CLK.....MC146818 | U | 73 | |
| 60 | 1 | 102720-002 | ASSY, IC,KYBD INTFC-M | U | 74 | |
| 36 | 1 | 100079-009 | SCKT, IC,LO PF,40P,.600 | U | 74 | S |
| 78 | 1 | 100527-001 | IC, DL D-TYPE F/F........74F74 | U | 75 | AB |
| 52 | 0 | 101637-001 | IC, DL D-TYPE F/F......74ALS74 | U | 76 | AB |
| 28 | 1 | 100111-001 | RES, 0 OHM | U | 76 | R |
| 52 | 1 | 101637-001 | IC, DL D-TYPE F/F......74ALS74 | U | 77 | AB |
| 78 | 1 | 100527-001 | IC, DL D-TYPE F/F........74F74 | U | 78 | AB |
| 49 | 1 | 101656-001 | IC, QD 2-INP NOR GATE..74ALS02 | U | 79 | ABCD |
| 79 | 1 | 101156-001 | IC, QD D-TYPE F/F.......74F175 | U | 80 | ABCD |
| 44 | 1 | 100181-001 | IC, DL PRPHL NAND DRVR...75477 | U | 81 | |
| 79 | 1 | 101156-001 | IC, QD D-TYPE F/F.......74F175 | U | 82 | ABCD |
| 78 | 1 | 100527-001 | IC DL D-TYPE F/F........74F74 | U | 83 | AB |
| 39 | 1 | 101647-001 | IC, HEX INV................4069 | U | 84 | ABCDEF |
| 76 | 1 | 101631-001 | IC, TPL 3-INP AND GATE...74F11 | U | 85 | ABC |
| 79 | 1 | 101156-001 | IC, QD D-TYPE F/F.......74F175 | U | 86 | ABCD |
| 52 | 1 | 101637-001 | IC, DL D-TYPE F/F......74ALS74 | U | 87 | AB |
| 40 | 1 | 101641-001 | IC, HEX BFR,OPEN COLL.....7407 | U | 88 | ABCDEF |
| 53 | 1 | 102605-001 | IC, 4-BIT BIN CNTR....74ALS163 | U | 89 | |
| 52 | 1 | 101637-001 | IC, DL D-TYPE F/F......74ALS74 | U | 90 | AB |
| 102 | 1 | 100195-005 | XTAL, OSCR,14.31818mHZ | U | 91 | |
| 90 | 1 | 108222-001 | IC, QD GATED BFR.......74HC125 | U | 92 | ABCD |
| 83 | 0 | 100186-001 | HDR, PCB,1ROW,3POS,STR POST | TP | 1 | |
| 73 | 1 | 100278-003 | SW, DIP,PCB,SPST,6POS | SW | 1 | |
| 32 | 1 | 100200-002 | RNET, 8.2K OHM,6PIN SIP,5RES | RP | 1 | |
| 38 | 1 | 100200-010 | RNET, 300 OHM,6 PIN SIP,5RES | RP | 2 | |
| 33 | 1 | 100201-001 | RNET, 8.2K OHM,10 PIN SIP,9RES | RP | 3 | |
| 33 | 1 | 100201-001 | RNET, 8.2K OHM,10 PIN SIP,9RES | RP | 4 | |
| 33 | 1 | 100201-001 | RNET, 8.2K OHM,10 PIN SIP,9RES | RP | 5 | |
| 33 | 1 | 100201-001 | RNET, 8.2K OHM,10 PIN SIP,9RES | RP | 6 | FG |
| 34 | 1 | 100201-009 | RNET, 20K OHM,10 PIN SIP,9RES | RP | 7 | |
| 30 | 1 | 100198-023 | RES, 2.87K OHM,1/4W,1%,MF | R | 1 | |
| 31 | 1 | 100198-002 | RES, 3.48K OHM,1/4W,1%,MF | R | 2 | |
| 23 | 1 | 100083-034 | RES, 270 OHM,1/4W,5%,CF | R | 3 | |

LIST OF MATERIALS REPORT DATE: 07-31-1986 PAGE: 3

D4 MOTHER BOARD SCHEMATIC Drawing No: 000402-000 Rev: X9

| Item | Qty | Part Number | Description | |
|---|---|---|---|---|
| 4 | 1 | 100083-026 | RES, 1K OHM,1/4W,5%,CF | R 4 |
| 5 | 1 | 100083-032 | RES, 4.7K OHM,1/4W,5%,CF | R 5 |
| 24 | 1 | 100083-044 | RES, 360 OHM,1/4W,5%,CF | R 6 |
| 20 | 1 | 100083-012 | RES, 100 OHM,1/4W,5%,CF | R 7 |
| 21 | 1 | 100083-056 | RES, 180 OHM,1/4W,5%,CF | R 8 |
| 21 | 1 | 100083-056 | RES, 180 OHM,1/4W,5%,CF | R 9 |
| 4 | 1 | 100083-026 | RES, 1K OHM,1/4W,5%,CF | R 10 |
| 21 | 1 | 100083-056 | RES, 180 OHM,1/4W,5%,CF | R 11 |
| 12 | 1 | 100083-009 | RES, 20K OHM,1/4W,5%,CF | R 12 |
| 12 | 1 | 100083-009 | RES, 20K OHM,1/4W,5%,CF | R 13 |
| 6 | 1 | 100083-030 | RES, 8.2K OHM,1/4W,5%,CF | R 14 |
| 10 | 1 | 100083-097 | RES, 15 OHM,1/4W,5%,CF | R 15 |
| 4 | 1 | 100083-026 | RES, 1K OHM,1/4W,5%,CF | R 16 |
| 21 | 1 | 100083-056 | RES, 180 OHM,1/4W,5%,CF | R 17 |
| 18 | 1 | 100083-003 | RES, 68 OHM,1/4W,5%,CF | R 18 |
| 6 | 1 | 100083-030 | RES, 8.2K OHM,1/4W,5%,CF | R 19 |
| 4 | 1 | 100083-026 | RES, 1K OHM,1/4W,5%,CF | R 20 |
| 4 | 1 | 100083-026 | RES, 1K OHM,1/4W,5%,CF | R 21 |
| 6 | 1 | 100083-030 | RES, 8.2K OHM,1/4W,5%,CF | R 22 |
| 12 | 1 | 100083-009 | RES, 20K OHM,1/4W,5%,CF | R 23 |
| 4 | 1 | 100083-026 | RES, 1K OHM,1/4W,5%,CF | R 24 |
| 15 | 1 | 100083-019 | RES, 30 OHM,1/4W,5%,CF | R 25 |
| 15 | 1 | 100083-019 | RES, 30 OHM,1/4W,5%,CF | R 26 |
| 12 | 1 | 100083-009 | RES, 20K OHM,1/4W,5%,CF | R 27 |
| 18 | 1 | 100083-003 | RES, 68 OHM,1/4W,5%,CF | R 28 |
| 18 | 1 | 100083-003 | RES, 68 OHM,1/4W,5%,CF | R 29 |
| 21 | 1 | 100083-056 | RES, 180 OHM,1/4W,5%,CF | R 30 |
| 18 | 1 | 100083-003 | RES, 68 OHM,1/4W,5%,CF | R 31 |
| 7 | 1 | 100083-008 | RES, 10K OHM,1/4W,5%,CF | R 32 |
| 21 | 1 | 100083-056 | RES, 180 OHM,1/4W,5%,CF | R 33 |
| 18 | 1 | 100083-003 | RES, 68 OHM,1/4W,5%,CF | R 34 |
| 7 | 1 | 100083-008 | RES, 10K OHM,1/4W,5%,CF | R 35 |
| 14 | 1 | 100083-085 | RES, 22MEG OHM,1/4W,5%,CF | R 36 |
| 12 | 1 | 100083-009 | RES, 20K OHM,1/4W,5%,CF | R 37 |
| 22 | 1 | 100083-059 | RES, 200 OHM,1/4W,5%,CF | R 38 |
| 13 | 1 | 100083-001 | RES, 22 OHM,1/4W,5%,CF | R 39 |
| 17 | 1 | 100083-020 | RES, 51 OHM,1/4W,5%,CF | R 40 |
| 18 | 1 | 100083-003 | RES, 68 OHM,1/4W,5%,CF | R 41 |
| 25 | 1 | 100083-051 | RES, 470K OHM,1/4W,5%,CF | R 42 |
| 15 | 1 | 100083-019 | RES, 30 OHM,1/4W,5%,CF | R 43 |
| 15 | 1 | 100083-019 | RES, 30 OHM,1/4W,5%,CF | R 44 |
| 19 | 1 | 100199-004 | RES, 68 OHM,1/2W,5%,CC | R 45 |
| 6 | 1 | 100083-030 | RES, 8.2K OHM,1/4W,5%,CF | R 46 |
| 6 | 1 | 100083-030 | RES, 8.2K OHM,1/4W,5%,CF | R 47 |
| 108 | 1 | 100234-001 | IC, REG,SH,2%,50PPM/C......431 | Q 1 |
| 46 | 1 | 000403-001 | PCB, 80386 SYSTEM BOARD | PCB. |
| 81 | 1 | 101374-001 | FERRITE BEAD, W/LEAD | L 2 |
| 81 | 1 | 101374-001 | FERRITE BEAD, W/LEAD | L 3 |
| 81 | 1 | 101374-001 | FERRITE BEAD, W/LEAD | L 4 |
| 81 | 1 | 101374-001 | FERRITE BEAD, W/LEAD | L 5 |
| 59 | 1 | 100224-003 | CONN, PCB STD EDGE,40/80 | J 101 |
| 58 | 1 | 100224-001 | CONN, PCB STD EDGE,31/62 | J 102 |
| 58 | 1 | 100224-001 | CONN, PCB STD EDGE,31/62 | J 103 |
| 58 | 1 | 100224-001 | CONN, PCB STD EDGE,31/62 | J 104 |
| 58 | 1 | 100224-001 | CONN, PCB STD EDGE,31/62 | J 105 |

0 260 568

30

LIST OF MATERIALS REPORT DATE: 07-31-1986 PAGE: 4

D4 MOTHER BOARD SCHEMATIC Drawing No: 000402-000 Rev: X9

| Item | Qty | Part Number | Description | | |
|---|---|---|---|---|---|
| 58 | 1 | 100224-001 | CONN, PCB STD EDGE,31/62 | J | 106 |
| 58 | 1 | 100224-001 | CONN, PCB STD EDGE,31/62 | J | 107 |
| 58 | 1 | 100224-001 | CONN, PCB STD EDGE,31/62 | J | 108 |
| 106 | 1 | 100218-001 | HDR. PCB,1ROW,5POS,STR POST | J | 109 |
| 106 | 1 | 100218-001 | HDR, PCB,1ROW,5POS,STR POST | J | 110 |
| 106 | 1 | 100218-001 | HDR, PCB,1ROW,5POS,STR POST | J | 111 |
| 106 | 1 | 100218-001 | HDR, PCB,1ROW,5POS,STR POST | J | 112 |
| 86 | 1 | 100186-005 | HDR, PCB,1ROW,5POS,STR POST | J | 113 |
| 84 | 1 | 100186-003 | HDR, PCB,1ROW,4POS,STR POST | J | 115 |
| 87 | 1 | 100186-008 | HDR, PCB,1ROW,7POS,STR POST | J | 116 |
| 107 | 1 | 101329-001 | HDR, 20POS,.156CTR,.045SQ POST | J | 117 |
| 85 | 1 | 102875-003 | HDR, PCB,1ROW,STR PST,FRICT LK | J | 118 |
| 82 | 1 | 100186-006 | HDR, PCB,1ROW,2POS,STR POST | J | 119 |
| 56 | 1 | 108122-001 | CONN, PCB STD EDGE,3/6 | J | 121 |
| 57 | 1 | 100224-002 | CONN, PCB STD EDGE,18/36 | J | 123 |
| 57 | 1 | 100224-002 | CONN, PCB STD EDGE,18/36 | J | 124 |
| 57 | 0 | 100224-002 | CONN, PCB STD EDGE,18/36 | J | 125 |
| 57 | 1 | 100224-002 | CONN, PCB STD EDGE,18/36 | J | 126 |
| 57 | 1 | 100224-002 | CONN, PCB STD EDGE,18/36 | J | 127 |
| 105 | 1 | 101270-002 | FUSE, SUB MINTR,2.5A,125V | F | 1 |
| 105 | 1 | 101270-002 | FUSE, SUB MINTR,2.5A,125V | F | 2 |
| 91 | 0 | 100081-001 | JMPR, PCB,2 POS | ER | 1-3 |
| 91 | 0 | 100081-001 | JMPR, PCB,2 POS | ER | 1-2 |
| 91 | 0 | 100081-001 | JMPR, PCB,2 POS | ER | 1-1 |
| 88 | 0 | 100186-010 | HDR, PCB,1ROW,9POS,STR POST | ER | 1 |
| 91 | 0 | 100081-001 | JMPR, PCB,2 POS | ER | 2-3 |
| 91 | 0 | 100081-001 | JMPR, PCB,2 POS | ER | 2-2 |
| 91 | 0 | 100081-001 | JMPR, PCB,2 POS | ER | 2-1 |
| 88 | 0 | 100186-010 | HDR, PCB,1ROW,9POS,STR POST | ER | 2 |
| 29 | 1 | 100192-001 | DIODE, GENL PRP.........1N914B | CR | 1 |
| 29 | 1 | 100192-001 | DIODE, GENL PRP.........1N914B | CR | 2 |
| 29 | 1 | 100192-001 | DIODE, GENL PRP.........1N914B | CR | 3 |
| 92 | 1 | 100254-001 | DIODE, LED,RED DIFFUSED | CR | 4 |
| 9 | 1 | 100082-005 | CAP, 10MFD,16V,20%,TANTALUM | C | 1 |
| 2 | 1 | 100085-009 | CAP, .047MFD,50V,-20/+80%CER M | C | 2 |
| 9 | 1 | 100082-005 | CAP, 10MFD,16V,20%,TANTALUM | C | 3 |
| 2 | 1 | 100085-009 | CAP, .047MFD,50V,-20/+80%CER M | C | 4 |
| 9 | 1 | 100082-005 | CAP, 10MFD,16V,20%,TANTALUM | C | 5 |
| 2 | 1 | 100085-009 | CAP, .047MFD,50V,-20/+80%CER M | C | 6 |
| 9 | 1 | 100082-005 | CAP, 10MFD,16V,20%,TANTALUM | C | 7 |
| 2 | 1 | 100085-009 | CAP, .047MFD,50V,-20/+80%CER M | C | 8 |
| 9 | 1 | 100082-005 | CAP, 10MFD,16V,20%,TANTALUM | C | 9 |
| 2 | 1 | 100085-009 | CAP, .047MFD,50V,-20/+80%CER M | C | 10 |
| 2 | 1 | 100085-009 | CAP, .047MFD,50V,-20/+80%CER M | C | 11 |
| 9 | 1 | 100082-005 | CAP, 10MFD,16V,20%,TANTALUM | C | 12 |
| 2 | 1 | 100085-009 | CAP, .047MFD,50V,-20/+80%CER M | C | 13 |
| 2 | 1 | 100085-009 | CAP, .047MFD,50V,-20/+80%CER M | C | 14 |
| 2 | 1 | 100085-009 | CAP, .047MFD,50V,-20/+80%CER M | C | 15 |
| 2 | 1 | 100085-009 | CAP, .047MFD,50V,-20/+80%CER M | C | 16 |
| 2 | 1 | 100085-009 | CAP, .047MFD,50V,-20/+80%CER M | C | 17 |
| 9 | 1 | 100082-005 | CAP, 10MFD,16V,20%,TANTALUM | C | 18 |
| 9 | 1 | 100082-005 | CAP, 10MFD,16V,20%,TANTALUM | C | 19 |
| 2 | 1 | 100085-009 | CAP, .047MFD,50V,-20/+80%CER M | C | 20 |
| 2 | 1 | 100085-009 | CAP, .047MFD,50V,-20/+80%CER M | C | 21 |
| | | | CAP, .001MFD,50V,20%,CER M | C | 22 |

LIST OF MATERIALS REPORT DATE: 07-31-1986 PAGE: 5

D4 MOTHER BOARD SCHEMATIC Drawing No: 000402-000 Rev: X9

| Item | Qty | Part Number | Description | | |
|---|---|---|---|---|---|
| 2 | 1 | 100085-009 | CAP, .047MFD,50V,-20/+80%CER M | C | 23 |
| 2 | 1 | 100085-009 | CAP, .047MFD,50V,-20/+80%CER M | C | 24 |
| 2 | 1 | 100085-009 | CAP, .047MFD,50V,-20/+80%CER M | C | 25 |
| 2 | 1 | 100085-009 | CAP, .047MFD,50V,-20/+80%CER M | C | 26 |
| 2 | 1 | 100085-009 | CAP, .047MFD,50V,-20/+80%CER M | C | 27 |
| 2 | 1 | 100085-009 | CAP, .047MFD,50V,-20/+80%CER M | C | 28 |
| 2 | 1 | 100085-009 | CAP, .047MFD,50V,-20/+80%CER M | C | 29 |
| 2 | 1 | 100085-009 | CAP, .047MFD,50V,-20/+80%CER M | C | 30 |
| 2 | 1 | 100085-009 | CAP, .047MFD,50V,-20/+80%CER M | C | 31 |
| 2 | 1 | 100085-009 | CAP, .047MFD,50V,-20/+80%CER M | C | 32 |
| 2 | 1 | 100085-009 | CAP, .047MFD,50V,-20/+80%CER M | C | 33 |
| 2 | 1 | 100085-009 | CAP, .047MFD,50V,-20/+80%CER M | C | 34 |
| 2 | 1 | 100085-009 | CAP, .047MFD,50V,-20/+80%CER M | C | 35 |
| 2 | 1 | 100085-009 | CAP, .047MFD,50V,-20/+80%CER M | C | 36 |
| 2 | 1 | 100085-009 | CAP, .047MFD,50V,-20/+80%CER M | C | 37 |
| 2 | 1 | 100085-009 | CAP, .047MFD,50V,-20/+80%CER M | C | 38 |
| 2 | 1 | 100085-009 | CAP, .047MFD,50V,-20/+80%CER M | C | 39 |
| 2 | 1 | 100085-009 | CAP, .047MFD,50V,-20/+80%CER M | C | 40 |
| 9 | 1 | 100082-005 | CAP, 10MFD,16V,20%,TANTALUM | C | 41 |
| 2 | 1 | 100085-009 | CAP, .047MFD,50V,-20/+80%CER M | C | 42 |
| 2 | 1 | 100085-009 | CAP, .047MFD,50V,-20/+80%CER M | C | 43 |
| 2 | 1 | 100085-009 | CAP, .047MFD,50V,-20/+80%CER M | C | 44 |
| 2 | 1 | 100085-009 | CAP, .047MFD,50V,-20/+80%CER M | C | 45 |
| 2 | 1 | 100085-009 | CAP, .047MFD,50V,-20/+80%CER M | C | 46 |
| 2 | 1 | 100085-009 | CAP, .047MFD,50V,-20/+80%CER M | C | 47 |
| 1 | 1 | 100085-002 | CAP, .001MFD,50V,20%,CER M | C | 48 |
| 2 | 1 | 100085-009 | CAP, .047MFD,50V,-20/+80%CER M | C | 49 |
| 2 | 1 | 100085-009 | CAP, .047MFD,50V,-20/+80%CER M | C | 50 |
| 2 | 1 | 100085-009 | CAP, .047MFD,50V,-20/+80%CER M | C | 51 |
| 2 | 1 | 100085-009 | CAP, .047MFD,50V,-20/+80%CER M | C | 52 |
| 2 | 1 | 100085-009 | CAP, .047MFD,50V,-20/+80%CER M | C | 53 |
| 9 | 1 | 100082-005 | CAP, 10MFD,16V,20%,TANTALUM | C | 54 |
| 2 | 1 | 100085-009 | CAP, .047MFD,50V,-20/+80%CER M | C | 55 |
| 2 | 1 | 100085-009 | CAP, .047MFD,50V,-20/+80%CER M | C | 56 |
| 2 | 1 | 100085-009 | CAP, .047MFD,50V,-20/+80%CER M | C | 57 |
| 2 | 1 | 100085-009 | CAP, .047MFD,50V,-20/+80%CER M | C | 58 |
| 2 | 1 | 100085-009 | CAP, .047MFD,50V,-20/+80%CER M | C | 59 |
| 2 | 1 | 100085-009 | CAP, .047MFD,50V,-20/+80%CER M | C | 60 |
| 2 | 1 | 100085-009 | CAP, .047MFD,50V,-20/+80%CER M | C | 61 |
| 9 | 1 | 100082-005 | CAP, 10MFD,16V,20%,TANTALUM | C | 62 |
| 2 | 1 | 100085-009 | CAP, .047MFD,50V,-20/+80%CER M | C | 63 |
| 2 | 1 | 100085-009 | CAP, .047MFD,50V,-20/+80%CER M | C | 64 |
| 9 | 1 | 100082-005 | CAP, 10MFD,16V,20%,TANTALUM | C | 65 |
| 2 | 1 | 100085-009 | CAP, .047MFD,50V,-20/+80%CER M | C | 66 |
| 2 | 1 | 100085-009 | CAP, .047MFD,50V,-20/+80%CER M | C | 67 |
| 3 | 0 | ??????-??? | CAP, .06MFD,PGA CAP,8 PIN | C | 68 |
| 2 | 1 | 100085-009 | CAP, .047MFD,50V,-20/+80%CER M | C | 69 |
| 2 | 1 | 100085-009 | CAP, .047MFD,50V,-20/+80%CER M | C | 70 |
| 2 | 1 | 100085-009 | CAP, .047MFD,50V,-20/+80%CER M | C | 71 |
| 2 | 1 | 100085-009 | CAP, .047MFD,50V,-20/+80%CER M | C | 72 |
| 2 | 1 | 100085-009 | CAP, .047MFD,50V,-20/+80%CER M | C | 73 |
| 2 | 1 | 100085-009 | CAP, .047MFD,50V,-20/+80%CER M | C | 74 |
| 9 | 1 | 100082-005 | CAP, 10MFD,16V,20%,TANTALUM | C | 75 |
| 2 | 1 | 100085-009 | CAP, .047MFD,50V,-20/+80%CER M | C | 76 |
| 2 | 1 | 100085-009 | CAP, .047MFD,50V,-20/+80%CER M | C | 77 |

LIST OF MATERIALS REPORT DATE: 07-31-1986 PAGE: 6
D4 MOTHER BOARD SCHEMATIC Drawing No: 000402-000 Rev: X9

| Item | Qty | Part Number | Description | | |
|---|---|---|---|---|---|
| 9 | 1 | 100082-005 | CAP, 10MFD,16V,20%,TANTALUM | C | 78 |
| 1 | 1 | 100085-002 | CAP, .001MFD,50V,20%,CER M | C | 79 |
| 2 | 1 | 100085-009 | CAP, .047MFD,50V,-20/+80%CER M | C | 80 |
| 2 | 1 | 100085-009 | CAP, .047MFD,50V,-20/+80%CER M | C | 81 |
| 2 | 1 | 100085-009 | CAP, .047MFD,50V,-20/+80%CER M | C | 82 |
| 9 | 1 | 100082-005 | CAP, 10MFD,16V,20%,TANTALUM | C | 83 |
| 2 | 1 | 100085-009 | CAP, .047MFD,50V,-20/+80%CER M | C | 84 |
| 2 | 1 | 100085-009 | CAP, .047MFD,50V,-20/+80%CER M | C | 85 |
| 2 | 1 | 100085-009 | CAP, .047MFD,50V,-20/+80%CER M | C | 86 |
| 2 | 1 | 100085-009 | CAP, .047MFD,50V,-20/+80%CER M | C | 87 |
| 2 | 1 | 100085-009 | CAP, .047MFD,50V,-20/+80%CER M | C | 88 |
| 2 | 1 | 100085-009 | CAP, .047MFD,50V,-20/+80%CER M | C | 89 |
| 2 | 1 | 100085-009 | CAP, .047MFD,50V,-20/+80%CER M | C | 90 |
| 2 | 1 | 100085-009 | CAP, .047MFD,50V,-20/+80%CER M | C | 91 |
| 2 | 1 | 100085-009 | CAP, .047MFD,50V,-20/+80%CER M | C | 92 |
| 2 | 1 | 100085-009 | CAP, .047MFD,50V,-20/+80%CER M | C | 93 |
| 1 | 1 | 100085-002 | CAP, .001MFD,50V,20%,CER M | C | 94 |
| 2 | 1 | 100085-009 | CAP, .047MFD,50V,-20/+80%CER M | C | 95 |
| 1 | 1 | 100085-002 | CAP, .001MFD,50V,20%,CER M | C | 96 |
| 1 | 1 | 100085-002 | CAP, .001MFD,50V,20%,CER M | C | 97 |
| 2 | 1 | 100085-009 | CAP, .047MFD,50V,-20/+80%CER M | C | 98 |
| 8 | 1 | 100085-013 | CAP, 10PF,50V,10%,CER M | C | 99 |
| 2 | 1 | 100085-009 | CAP, .047MFD,50V,-20/+80%CER M | C | 100 |
| 11 | 1 | 100085-014 | CAP, 18PF,50V,10%,CER M | C | 101 |
| 2 | 1 | 100085-009 | CAP, .047MFD,50V,-20/+80%CER M | C | 102 |
| 2 | 1 | 100085-009 | CAP, .047MFD,50V,-20/+80%CER M | C | 103 |
| 2 | 1 | 100085-009 | CAP, .047MFD,50V,-20/+80%CER M | C | 104 |
| 2 | 1 | 100085-009 | CAP, .047MFD,50V,-20/+80%CER M | C | 105 |
| 2 | 1 | 100085-009 | CAP, .047MFD,50V,-20/+80%CER M | C | 106 |
| 2 | 1 | 100085-009 | CAP, .047MFD,50V,-20/+80%CER M | C | 107 |
| 2 | 1 | 100085-009 | CAP, .047MFD,50V,-20/+80%CER M | C | 108 |
| 2 | 1 | 100085-009 | CAP, .047MFD,50V,-20/+80%CER M | C | 109 |
| 1 | 1 | 100085-002 | CAP, .001MFD,50V,20%,CER M | C | 110 |
| 27 | 1 | 100085-006 | CAP, .01MFD,50V,20%,CER M | C | 111 |
| 16 | 1 | 100085-024 | CAP, 47PF,50V,10%,CER M | C | 112 |
| 16 | 1 | 100085-024 | CAP, 47PF,50V,10%,CER M | C | 113 |

Total parts = 299 Total holes = 3205

APPENDIX D

DRAM MEMORY BOARD
BILL OF MATERIALS

LIST OF MATERIALS REPORT DATE: 07-23-1986 PAGE: 1
D4 PAGE DRAM BOARD SCHEMATIC Drawing No: 000414-000 Rev: X3

| Item | Qty | Part Number | Description | | | |
|---|---|---|---|---|---|---|
| 13 | 1 | 101637-001 | IC, DL D-TYPE F/F......74ALS74 | U | 1 | AB |
| 21 | 1 | 100527-001 | IC, DL D-TYPE F/F........74F74 | U | 2 | AB |
| 20 | 1 | 101157-001 | IC, QD 2-INP OR GATE.....74F32 | U | 3 | ABCD |
| 15 | 1 | 108052-001 | ASSY, IC,PAL,D4-RCTL.....16R8C | U | 4 | |
| 24 | 1 | 108024-001 | IC, OCTAL EQUAL CMP.....74F521 | U | 5 | |
| 14 | 1 | 101633-001 | IC, OCT D-TYPE LCH....74ALS573 | U | 6 | |
| 16 | 1 | 108053-001 | ASSY, IC,PAL,D4-RM32.....16L8C | U | 7 | |
| 13 | 1 | 101637-001 | IC, DL D-TYPE F/F......74ALS74 | U | 8 | AB |
| 19 | 1 | 101214-001 | IC, HEX INV..............74F04 | U | 9 | ABCDEF |
| 12 | 1 | 101628-001 | IC, QD 2-INP AND GATE..74ALS08 | U | 10 | ABCD |
| 25 | 1 | 108023-001 | IC, OCTAL LATCH.........74F573 | U | 11 | |
| 25 | 1 | 108023-001 | IC, OCTAL LATCH.........74F573 | U | 12 | |
| 24 | 1 | 108024-001 | IC, OCTAL EQUAL CMP.....74F521 | U | 13 | |
| 14 | 1 | 101633-001 | IC, OCT D-TYPE LCH....74ALS573 | U | 14 | |
| 22 | 1 | 101640-001 | IC, QD 2-1 D SEL/MUXR...74F158 | U | 15 | |
| 22 | 1 | 101640-001 | IC, QD 2-1 D SEL/MUXR...74F158 | U | 16 | |
| 22 | 1 | 101640-001 | IC, QD 2-1 D SEL/MUXR...74F158 | U | 17 | |
| 17 | 1 | 108054-001 | ASSY, IC,PAL,D4-RRAS.....16L8B | U | 18 | |
| 20 | 1 | 101157-001 | IC, QD 2-INP OR GATE.....74F32 | U | 19 | ABCD |
| 30 | 1 | 101187-001 | IC, 4-INP NAND GATE.....74LS20 | U | 20 | AB |
| 23 | 1 | 101156-001 | IC, QD D-TYPE F/F.......74F175 | U | 21 | ABCD |
| 9 | 1 | 108022-001 | IC, 10 BIT BUFFER.........29827 | U | 22 | |
| 9 | 1 | 108022-001 | IC, 10 BIT BUFFER.........29827 | U | 23 | |
| 20 | 1 | 101157-001 | IC, QD 2-INP OR GATE.....74F32 | U | 24 | ABCD |
| 18 | 1 | 101170-001 | IC, QD NAND GATE.........74F00 | U | 25 | ABCD |
| 26 | 1 | 108015-001 | IC, OCTAL PARITY XCVR...74F657 | U | 26 | |
| 31 | 1 | 100091-001 | IC, OCT BFR/L DRVR.....74LS244 | U | 27 | |
| 26 | 1 | 108015-001 | IC, OCTAL PARITY XCVR...74F657 | U | 28 | |
| 26 | 1 | 108015-001 | IC, OCTAL PARITY XCVR...74F657 | U | 29 | |
| 26 | 1 | 108015-001 | IC, OCTAL PARITY XCVR...74F657 | U | 30 | |
| 10 | 1 | 108021-001 | IC, D-RAM,256K,100nS,FAST PAGE | U | 31 | |
| 10 | 1 | 108021-001 | IC, D-RAM,256K,100nS,FAST PAGE | U | 32 | |
| 10 | 1 | 108021-001 | IC, D-RAM,256K,100nS,FAST PAGE | U | 33 | |
| 10 | 1 | 108021-001 | IC, D-RAM,256K,100nS,FAST PAGE | U | 34 | |
| 10 | 1 | 108021-001 | IC, D-RAM,256K,100nS,FAST PAGE | U | 35 | |
| 10 | 1 | 108021-001 | IC, D-RAM,256K,100nS,FAST PAGE | U | 36 | |
| 10 | 1 | 108021-001 | IC, D-RAM,256K,100nS,FAST PAGE | U | 37 | |
| 10 | 1 | 108021-001 | IC, D-RAM,256K,100nS,FAST PAGE | U | 38 | |
| 10 | 1 | 108021-001 | IC, D-RAM,256K,100nS,FAST PAGE | U | 39 | |
| 10 | 1 | 108021-001 | IC, D-RAM,256K,100nS,FAST PAGE | U | 40 | |
| 10 | 1 | 108021-001 | IC, D-RAM,256K,100nS,FAST PAGE | U | 41 | |
| 10 | 1 | 108021-001 | IC, D-RAM,256K,100nS,FAST PAGE | U | 42 | |
| 10 | 1 | 108021-001 | IC, D-RAM,256K,100nS,FAST PAGE | U | 43 | |
| 10 | 1 | 108021-001 | IC, D-RAM,256K,100nS,FAST PAGE | U | 44 | |
| 10 | 1 | 108021-001 | IC, D-RAM,256K,100nS,FAST PAGE | U | 45 | |
| 10 | 1 | 108021-001 | IC, D-RAM,256K,100nS,FAST PAGE | U | 46 | |
| 10 | 1 | 108021-001 | IC, D-RAM,256K,100nS,FAST PAGE | U | 47 | |
| 10 | 1 | 108021-001 | IC, D-RAM,256K,100nS,FAST PAGE | U | 48 | |
| 10 | 1 | 108021-001 | IC, D-RAM,256K,100nS,FAST PAGE | U | 49 | |
| 10 | 1 | 108021-001 | IC, D-RAM,256K,100nS,FAST PAGE | U | 50 | |
| 10 | 1 | 108021-001 | IC, D-RAM,256K,100nS,FAST PAGE | U | 51 | |
| 10 | 1 | 108021-001 | IC, D-RAM,256K,100nS,FAST PAGE | U | 52 | |
| 10 | 1 | 108021-001 | IC, D-RAM,256K,100nS,FAST PAGE | U | 53 | |
| 10 | 1 | 108021-001 | IC, D-RAM,256K,100nS,FAST PAGE | U | 54 | |
| 10 | 1 | 108021-001 | IC, D-RAM,256K,100nS,FAST PAGE | U | 55 | |

LIST OF MATERIALS REPORT DATE: 07-23-1986 PAGE: 2
D4 PAGE DRAM BOARD SCHEMATIC Drawing No: 000414-000 Rev: X3

| Item | Qty | Part Number | Description | | | |
|---|---|---|---|---|---|---|
| 10 | 1 | 108021-001 | IC, D-RAM,256K,100nS,FAST PAGE | U | 56 | |
| 10 | 1 | 108021-001 | IC, D-RAM,256K,100nS,FAST PAGE | U | 57 | |
| 10 | 1 | 108021-001 | IC, D-RAM,256K,100nS,FAST PAGE | U | 58 | |
| 10 | 1 | 108021-001 | IC, D-RAM,256K,100nS,FAST PAGE | U | 59 | |
| 10 | 1 | 108021-001 | IC, D-RAM,256K,100nS,FAST PAGE | U | 60 | |
| 10 | 1 | 108021-001 | IC, D-RAM,256K,100nS,FAST PAGE | U | 61 | |
| 10 | 1 | 108021-001 | IC, D-RAM,256K,100nS,FAST PAGE | U | 62 | |
| 10 | 1 | 108021-001 | IC, D-RAM,256K,100nS,FAST PAGE | U | 63 | |
| 10 | 1 | 108021-001 | IC, D-RAM,256K,100nS,FAST PAGE | U | 64 | |
| 10 | 1 | 108021-001 | IC, D-RAM,256K,100nS,FAST PAGE | U | 65 | |
| 10 | 1 | 108021-001 | IC, D-RAM,256K,100nS,FAST PAGE | U | 66 | |
| 7 | 1 | 100079-003 | SCKT, IC,LO PF,16P,.300 | U | 67 | |
| 7 | 1 | 100079-003 | SCKT, IC,LO PF,16P,.300 | U | 68 | |
| 7 | 1 | 100079-003 | SCKT, IC,LO PF,16P,.300 | U | 69 | |
| 7 | 1 | 100079-003 | SCKT, IC,LO PF,16P,.300 | U | 70 | |
| 7 | 1 | 100079-003 | SCKT, IC,LO PF,16P,.300 | U | 71 | |
| 7 | 1 | 100079-003 | SCKT, IC,LO PF,16P,.300 | U | 72 | |
| 7 | 1 | 100079-003 | SCKT, IC,LO PF,16P,.300 | U | 73 | |
| 7 | 1 | 100079-003 | SCKT, IC,LO PF,16P,.300 | U | 74 | |
| 7 | 1 | 100079-003 | SCKT, IC,LO PF,16P,.300 | U | 75 | |
| 7 | 1 | 100079-003 | SCKT, IC,LO PF,16P,.300 | U | 76 | |
| 7 | 1 | 100079-003 | SCKT, IC,LO PF,16P,.300 | U | 77 | |
| 7 | 1 | 100079-003 | SCKT, IC,LO PF,16P,.300 | U | 78 | |
| 7 | 1 | 100079-003 | SCKT, IC,LO PF,16P,.300 | U | 79 | |
| 7 | 1 | 100079-003 | SCKT, IC,LO PF,16P,.300 | U | 80 | |
| 7 | 1 | 100079-003 | SCKT, IC,LO PF,16P,.300 | U | 81 | |
| 7 | 1 | 100079-003 | SCKT, IC,LO PF,16P,.300 | U | 82 | |
| 7 | 1 | 100079-003 | SCKT, IC,LO PF,16P,.300 | U | 83 | |
| 7 | 1 | 100079-003 | SCKT, IC,LO PF,16P,.300 | U | 84 | |
| 7 | 1 | 100079-003 | SCKT, IC,LO PF,16P,.300 | U | 85 | |
| 7 | 1 | 100079-003 | SCKT, IC,LO PF,16P,.300 | U | 86 | |
| 7 | 1 | 100079-003 | SCKT, IC,LO PF,16P,.300 | U | 87 | |
| 7 | 1 | 100079-003 | SCKT, IC,LO PF,16P,.300 | U | 88 | |
| 7 | 1 | 100079-003 | SCKT, IC,LO PF,16P,.300 | U | 89 | |
| 7 | 1 | 100079-003 | SCKT, IC,LO PF,16P,.300 | U | 90 | |
| 7 | 1 | 100079-003 | SCKT, IC,LO PF,16P,.300 | U | 91 | |
| 7 | 1 | 100079-003 | SCKT, IC,LO PF,16P,.300 | U | 92 | |
| 7 | 1 | 100079-003 | SCKT, IC,LO PF,16P,.300 | U | 93 | |
| 7 | 1 | 100079-003 | SCKT, IC,LO PF,16P,.300 | U | 94 | |
| 7 | 1 | 100079-003 | SCKT, IC,LO PF,16P,.300 | U | 95 | |
| 7 | 1 | 100079-003 | SCKT, IC,LO PF,16P,.300 | U | 96 | |
| 7 | 1 | 100079-003 | SCKT, IC,LO PF,16P,.300 | U | 97 | |
| 7 | 1 | 100079-003 | SCKT, IC,LO PF,16P,.300 | U | 98 | |
| 7 | 1 | 100079-003 | SCKT, IC,LO PF,16P,.300 | U | 99 | |
| 7 | 1 | 100079-003 | SCKT, IC,LO PF,16P,.300 | U | 100 | |
| 7 | 1 | 100079-003 | SCKT, IC,LO PF,16P,.300 | U | 101 | |
| 7 | 1 | 100079-003 | SCKT, IC,LO PF,16P,.300 | U | 102 | |
| 8 | 1 | 100203-001 | RNET, 33 OHM,16PIN DIP,8RES | RP | 1 | |
| 8 | 1 | 100203-001 | RNET, 33 OHM,16PIN DIP,8RES | RP | 2 | AB |
| 8 | 1 | 100203-001 | RNET, 33 OHM,16PIN DIP,8RES | RP | 3 | |
| 8 | 1 | 100203-001 | RNET, 33 OHM,16PIN DIP,8RES | RP | 4 | ABCDEFGH |
| 5 | 1 | 100201-005 | RNET, 4.7K 10 PIN SIP 9RES | RP | 5 | |
| 6 | 1 | 100201-001 | RNET, 8.2K OHM,10 PIN SIP,9RES | RP | 6 | ABCDEFGHI |
| 5 | 1 | 100201-005 | RNET, 4.7K 10 PIN SIP 9RES | RP | 7 | |
| 5 | 1 | 100201-005 | RNET, 4.7K 10 PIN SIP 9RES | RP | 8 | |

LIST OF MATERIALS REPORT DATE: 07-23-1986 PAGE: 3
D4 PAGE DRAM BOARD SCHEMATIC Drawing No: 000414-000 Rev: X3

| Item | Qty | Part Number | Description | | |
|---|---|---|---|---|---|
| 5 | 1 | 100201-005 | RNET, 4.7K 10 PIN SIP 9RES | RP | 9 |
| 3 | 1 | 100083-022 | RES, 150 OHM,1/4W,5%,CF | R | 1 |
| 4 | 1 | 100083-034 | RES, 270 OHM,1/4W,5%,CF | R | 2 |
| 11 | 1 | 000415-001 | PCB, D4 PAGE DRAM BOARD | PCB. | |
| 32 | 1 | | PCB GOLD FINGERS | P | 101 |
| 27 | 1 | 108010-001 | HDR, PCB,2ROW,40POS,STR,BKAWY | J | 301 |
| 27 | 1 | 108010-001 | HDR, PCB,2ROW,40POS,STR,BKAWY | J | 302 |
| 29 | 1 | 100081-001 | JMPR, PCB,2 POS | E | 1 |
| 29 | 1 | 100081-001 | JMPR, PCB,2 POS | E | 2 |
| 29 | 1 | 100081-001 | JMPR, PCB,2 POS | E | 3 |
| 28 | 1 | 100186-010 | HDR, PCB,1ROW,9POS,STR POST | E | 123 |
| 1 | 1 | 101240-001 | CAP, .1MFD,50V,20%,AXIAL,CER M | C | 1 |
| 1 | 1 | 101240-001 | CAP, .1MFD,50V,20%,AXIAL,CER M | C | 2 |
| 1 | 1 | 101240-001 | CAP, .1MFD,50V,20%,AXIAL,CER M | C | 3 |
| 1 | 1 | 101240-001 | CAP, .1MFD,50V,20%,AXIAL,CER M | C | 4 |
| 1 | 1 | 101240-001 | CAP, .1MFD,50V,20%,AXIAL,CER M | C | 5 |
| 1 | 1 | 101240-001 | CAP, .1MFD,50V,20%,AXIAL,CER M | C | 6 |
| 1 | 1 | 101240-001 | CAP, .1MFD,50V,20%,AXIAL,CER M | C | 7 |
| 1 | 1 | 101240-001 | CAP, .1MFD,50V,20%,AXIAL,CER M | C | 8 |
| 1 | 1 | 101240-001 | CAP, .1MFD,50V,20%,AXIAL,CER M | C | 9 |
| 1 | 1 | 101240-001 | CAP, .1MFD,50V,20%,AXIAL,CER M | C | 10 |
| 2 | 1 | 100082-005 | CAP, 10MFD,16V,20%,TANTALUM | C | 11 |
| 1 | 1 | 101240-001 | CAP, .1MFD,50V,20%,AXIAL,CER M | C | 12 |
| 2 | 1 | 100082-005 | CAP, 10MFD,16V,20%,TANTALUM | C | 13 |
| 1 | 1 | 101240-001 | CAP, .1MFD,50V,20%,AXIAL,CER M | C | 14 |
| 1 | 1 | 101240-001 | CAP, .1MFD,50V,20%,AXIAL,CER M | C | 15 |
| 1 | 1 | 101240-001 | CAP, .1MFD,50V,20%,AXIAL,CER M | C | 16 |
| 2 | 1 | 100082-005 | CAP, 10MFD,16V,20%,TANTALUM | C | 17 |
| 1 | 1 | 101240-001 | CAP, .1MFD,50V,20%,AXIAL,CER M | C | 18 |
| 2 | 1 | 100082-005 | CAP, 10MFD,16V,20%,TANTALUM | C | 19 |
| 1 | 1 | 101240-001 | CAP, .1MFD,50V,20%,AXIAL,CER M | C | 20 |
| 2 | 1 | 100082-005 | CAP, 10MFD,16V,20%,TANTALUM | C | 21 |
| 1 | 1 | 101240-001 | CAP, .1MFD,50V,20%,AXIAL,CER M | C | 22 |
| 1 | 1 | 101240-001 | CAP, .1MFD,50V,20%,AXIAL,CER M | C | 23 |
| 1 | 1 | 101240-001 | CAP, .1MFD,50V,20%,AXIAL,CER M | C | 24 |
| 1 | 1 | 101240-001 | CAP, .1MFD,50V,20%,AXIAL,CER M | C | 25 |
| 1 | 1 | 101240-001 | CAP, .1MFD,50V,20%,AXIAL,CER M | C | 26 |
| 1 | 1 | 101240-001 | CAP, .1MFD,50V,20%,AXIAL,CER M | C | 27 |
| 1 | 1 | 101240-001 | CAP, .1MFD,50V,20%,AXIAL,CER M | C | 28 |
| 1 | 1 | 101240-001 | CAP, .1MFD,50V,20%,AXIAL,CER M | C | 29 |
| 1 | 1 | 101240-001 | CAP, .1MFD,50V,20%,AXIAL,CER M | C | 30 |
| 1 | 1 | 101240-001 | CAP, .1MFD,50V,20%,AXIAL,CER M | C | 31 |
| 1 | 1 | 101240-001 | CAP, .1MFD,50V,20%,AXIAL,CER M | C | 32 |
| 1 | 1 | 101240-001 | CAP, .1MFD,50V,20%,AXIAL,CER M | C | 33 |
| 1 | 1 | 101240-001 | CAP, .1MFD,50V,20%,AXIAL,CER M | C | 34 |
| 1 | 1 | 101240-001 | CAP, .1MFD,50V,20%,AXIAL,CER M | C | 35 |
| 1 | 1 | 101240-001 | CAP, .1MFD,50V,20%,AXIAL,CER M | C | 36 |
| 1 | 1 | 101240-001 | CAP, .1MFD,50V,20%,AXIAL,CER M | C | 37 |
| 1 | 1 | 101240-001 | CAP, .1MFD,50V,20%,AXIAL,CER M | C | 38 |
| 1 | 1 | 101240-001 | CAP, .1MFD,50V,20%,AXIAL,CER M | C | 39 |
| 1 | 1 | 101240-001 | CAP, .1MFD,50V,20%,AXIAL,CER M | C | 40 |
| 1 | 1 | 101240-001 | CAP, .1MFD,50V,20%,AXIAL,CER M | C | 41 |
| 1 | 1 | 101240-001 | CAP, .1MFD,50V,20%,AXIAL,CER M | C | 42 |
| 1 | 1 | 101240-001 | CAP, .1MFD,50V,20%,AXIAL,CER M | C | 43 |
| 1 | 1 | 101240-001 | CAP, .1MFD,50V,20%,AXIAL,CER M | C | 44 |

LIST OF MATERIALS REPORT DATE: 07-23-1986 PAGE: 4
D4 PAGE DRAM BOARD SCHEMATIC Drawing No: 000414-000 Rev: X3

| Item | Qty | Part Number | Description | | |
|---|---|---|---|---|---|
| 1 | 1 | 101240-001 | CAP, .1MFD,50V,20%,AXIAL,CER M | C | 45 |
| 1 | 1 | 101240-001 | CAP, .1MFD,50V,20%,AXIAL,CER M | C | 46 |
| 1 | 1 | 101240-001 | CAP, .1MFD,50V,20%,AXIAL,CER M | C | 47 |
| 1 | 1 | 101240-001 | CAP, .1MFD,50V,20%,AXIAL,CER M | C | 48 |
| 1 | 1 | 101240-001 | CAP, .1MFD,50V,20%,AXIAL,CER M | C | 49 |
| 1 | 1 | 101240-001 | CAP, .1MFD,50V,20%,AXIAL,CER M | C | 50 |
| 1 | 1 | 101240-001 | CAP, .1MFD,50V,20%,AXIAL,CER M | C | 51 |
| 1 | 1 | 101240-001 | CAP, .1MFD,50V,20%,AXIAL,CER M | C | 52 |
| 1 | 1 | 101240-001 | CAP, .1MFD,50V,20%,AXIAL,CER M | C | 53 |
| 1 | 1 | 101240-001 | CAP, .1MFD,50V,20%,AXIAL,CER M | C | 54 |
| 1 | 1 | 101240-001 | CAP, .1MFD,50V,20%,AXIAL,CER M | C | 55 |
| 1 | 1 | 101240-001 | CAP, .1MFD,50V,20%,AXIAL,CER M | C | 56 |
| 1 | 1 | 101240-001 | CAP, .1MFD,50V,20%,AXIAL,CER M | C | 57 |
| 1 | 1 | 101240-001 | CAP, .1MFD,50V,20%,AXIAL,CER M | C | 58 |
| 1 | 1 | 101240-001 | CAP, .1MFD,50V,20%,AXIAL,CER M | C | 59 |
| 1 | 1 | 101240-001 | CAP, .1MFD,50V,20%,AXIAL,CER M | C | 60 |
| 1 | 1 | 101240-001 | CAP, .1MFD,50V,20%,AXIAL,CER M | C | 61 |
| 1 | 1 | 101240-001 | CAP, .1MFD,50V,20%,AXIAL,CER M | C | 62 |
| 1 | 1 | 101240-001 | CAP, .1MFD,50V,20%,AXIAL,CER M | C | 63 |
| 1 | 1 | 101240-001 | CAP, .1MFD,50V,20%,AXIAL,CER M | C | 64 |
| 1 | 1 | 101240-001 | CAP, .1MFD,50V,20%,AXIAL,CER M | C | 65 |
| 1 | 1 | 101240-001 | CAP, .1MFD,50V,20%,AXIAL,CER M | C | 66 |
| 1 | 1 | 101240-001 | CAP, .1MFD,50V,20%,AXIAL,CER M | C | 67 |
| 1 | 1 | 101240-001 | CAP, .1MFD,50V,20%,AXIAL,CER M | C | 68 |
| 1 | 1 | 101240-001 | CAP, .1MFD,50V,20%,AXIAL,CER M | C | 69 |
| 1 | 1 | 101240-001 | CAP, .1MFD,50V,20%,AXIAL,CER M | C | 70 |
| 1 | 1 | 101240-001 | CAP, .1MFD,50V,20%,AXIAL,CER M | C | 71 |
| 1 | 1 | 101240-001 | CAP, .1MFD,50V,20%,AXIAL,CER M | C | 72 |
| 1 | 1 | 101240-001 | CAP, .1MFD,50V,20%,AXIAL,CER M | C | 73 |
| 1 | 1 | 101240-001 | CAP, .1MFD,50V,20%,AXIAL,CER M | C | 74 |
| 1 | 1 | 101240-001 | CAP, .1MFD,50V,20%,AXIAL,CER M | C | 75 |
| 1 | 1 | 101240-001 | CAP, .1MFD,50V,20%,AXIAL,CER M | C | 76 |
| 1 | 1 | 101240-001 | CAP, .1MFD,50V,20%,AXIAL,CER M | C | 77 |
| 1 | 1 | 101240-001 | CAP, .1MFD,50V,20%,AXIAL,CER M | C | 78 |
| 1 | 1 | 101240-001 | CAP, .1MFD,50V,20%,AXIAL,CER M | C | 79 |
| 1 | 1 | 101240-001 | CAP, .1MFD,50V,20%,AXIAL,CER M | C | 80 |
| 1 | 1 | 101240-001 | CAP, .1MFD,50V,20%,AXIAL,CER M | C | 81 |
| 1 | 1 | 101240-001 | CAP, .1MFD,50V,20%,AXIAL,CER M | C | 82 |
| 1 | 1 | 101240-001 | CAP, .1MFD,50V,20%,AXIAL,CER M | C | 83 |
| 1 | 1 | 101240-001 | CAP, .1MFD,50V,20%,AXIAL,CER M | C | 84 |
| 1 | 1 | 101240-001 | CAP, .1MFD,50V,20%,AXIAL,CER M | C | 85 |
| 1 | 1 | 101240-001 | CAP, .1MFD,50V,20%,AXIAL,CER M | C | 86 |
| 1 | 1 | 101240-001 | CAP, .1MFD,50V,20%,AXIAL,CER M | C | 87 |
| 1 | 1 | 101240-001 | CAP, .1MFD,50V,20%,AXIAL,CER M | C | 88 |
| 1 | 1 | 101240-001 | CAP, .1MFD,50V,20%,AXIAL,CER M | C | 89 |
| 1 | 1 | 101240-001 | CAP, .1MFD,50V,20%,AXIAL,CER M | C | 90 |
| 1 | 1 | 101240-001 | CAP, .1MFD,50V,20%,AXIAL,CER M | C | 91 |
| 1 | 1 | 101240-001 | CAP, .1MFD,50V,20%,AXIAL,CER M | C | 92 |
| 1 | 1 | 101240-001 | CAP, .1MFD,50V,20%,AXIAL,CER M | C | 93 |
| 1 | 1 | 101240-001 | CAP, .1MFD,50V,20%,AXIAL,CER M | C | 94 |
| 2 | 1 | 100082-005 | CAP, 10MFD,16V,20%,TANTALUM | C | 95 |
| 2 | 1 | 100082-005 | CAP, 10MFD,16V,20%,TANTALUM | C | 96 |
| 2 | 1 | 100082-005 | CAP, 10MFD,16V,20%,TANTALUM | C | 97 |
| 2 | 1 | 100082-005 | CAP, 10MFD,16V,20%,TANTALUM | C | 98 |
| 2 | 1 | 100082-005 | CAP, 10MFD,16V,20%,TANTALUM | C | 99 |

LIST OF MATERIALS REPORT DATE: 07-23-1986 PAGE: 5
D4 PAGE DRAM BOARD SCHEMATIC Drawing No: 000414-000 Rev: X3

| Item | Qty | Part Number | Description | | |
|---|---|---|---|---|---|
| 2 | 1 | 100082-005 | CAP, 10MFD,16V,20%,TANTALUM | C | 100 |
| 2 | 1 | 100082-005 | CAP, 10MFD,16V,20%,TANTALUM | C | 101 |

Total parts = 222 Total holes = 2109

| X8 | BEx* 3210 | SA 10 | BHE | LAST CYCLE | BENx* 3210 | CPYEN* | |
|---|---|---|---|---|---|---|---|
| X | 1110 | 00 | 1 | 1 | 1110 | 1 | LOW BYTE ON 8 OR 16 BUS |
| 1 | 1101 | 01 | 0 | 1 | 1101 | 0 | HIGH BYTE ON 8 BUS |
| 0 | 1101 | 01 | 0 | 1 | 1101 | 1 | HIGH BYTE ON 16 BUS |
| X | 1011 | 10 | 1 | 1 | 1011 | 1 | LOW BYTE ON 8 OR 16 BUS |
| 1 | 0111 | 11 | 0 | 1 | 0111 | 0 | HIGH BYTE ON 8 BUS |
| 0 | 0111 | 11 | 0 | 1 | 0111 | 1 | HIGH BYTE ON 16 BUS |
| 0 | 1100 | 00 | 0 | 1 | 1100 | 1 | WORD ON 16 BUS |
| | | | | | | | WORD ON 8 BUS: |
| 1 | 1100 | 00 | 0 | 0 | 1100 | 1 | LOW BYTE |
| 1 | 1100 | 01 | 0 | 1 | 1101 | 0 | HIGH BYTE |
| | | | | | | | 2 SPLIT BYTES ON 16 BUS: |
| 0 | 1001 | 01 | 0 | 0 | 1101 | 1 | LOW WORD HIGH BYTE |
| 0 | 1001 | 10 | 1 | 1 | 1011 | 1 | HIGH WORD LOW BYTE |
| | | | | | | | 2 SPLIT BYTES ON 8 BUS: |
| 1 | 1001 | 01 | 0 | 0 | 1101 | 0 | LOW WORD HIGH BYTE |
| 1 | 1001 | 10 | 1 | 1 | 1011 | 1 | HIGH WORD LOW BYTE |
| 0 | 0011 | 10 | 0 | 1 | 0011 | 1 | WORD ON 16 BUS |
| | | | | | | | WORD ON 8 BUS: |
| 1 | 0011 | 10 | 0 | 0 | 0011 | 1 | LOW BYTE |
| 1 | 0011 | 11 | 0 | 1 | 0111 | 0 | HIGH BYTE |
| | | | | | | | 3 BYTE ON 16 BUS: |
| 0 | 1000 | 00 | 0 | 0 | 1100 | 1 | LOW WORD |
| 0 | 1000 | 10 | 1 | 1 | 1011 | 1 | HIGH WORD LOW BYTE |
| | | | | | | | 3 BYTE ON 8 BUS: |
| 1 | 1000 | 00 | 0 | 0 | 1100 | 1 | LOW WORD LOW BYTE |
| 1 | 1000 | 01 | 0 | 0 | 1101 | 0 | LOW WORD HIGH BYTE |
| 1 | 1000 | 10 | 1 | 1 | 1011 | 1 | HIGH WORD LOW BYTE |
| | | | | | | | 3 BYTE ON 16 BUS: |
| 0 | 0001 | 01 | 0 | 0 | 1101 | 1 | LOW WORD HIGH BYTE |
| 0 | 0001 | 10 | 0 | 1 | 0011 | 1 | HIGH WORD |
| | | | | | | | 3 BYTE ON 8 BUS: |
| 1 | 0001 | 01 | 0 | 0 | 1101 | 0 | LOW WORD HIGH BYTE |
| 1 | 0001 | 10 | 0 | 0 | 0011 | 1 | HIGH WORD LOW BYTE |
| 1 | 0001 | 11 | 0 | 1 | 0111 | 0 | HIGH WORD HIGH BYTE |
| | | | | | | | 4 BYTE ON 16 BUS: |
| 0 | 0000 | 00 | 0 | 0 | 1100 | 1 | LOW WORD |
| 0 | 0000 | 10 | 0 | 1 | 0011 | 1 | HIGH WORD |
| | | | | | | | 4 BYTE ON 8 BUS: |
| 1 | 0000 | 00 | 0 | 0 | 1100 | 1 | LOW WORD LOW BYTE |
| 1 | 0000 | 01 | 0 | 0 | 1101 | 0 | LOW WORD HIGH BYTE |
| 1 | 0000 | 10 | 0 | 0 | 0011 | 1 | HIGH WORD LOW BYTE |
| 1 | 0000 | 11 | 0 | 1 | 0111 | 0 | HIGH WORD HIGH BYTE |

# APPENDIX E

## TABLE I
## BUS CONVERSION FROM CPU LINES TO ADDRESS LINES

APPENDIX F

TABLE II
CPU COMMAND/CYCLE TYPES

PROCESSOR BOARD CPU COMMAND/CYCLE TYPES

The command cycles generated by the bus control logic are listed below. The number of 62.5nsec clocks is listed for a no-wait state cycle, normal cycle, and 1 wait state cycle for each of the command types. Both the total cycle time and the command active (on) time are given. For cycles with more than one bus wait state, each wait state adds two additional 62.5nsec clock cycles. The 32 bit memory board is documented seperately.

| | | No-wait cycle:on | Normal cycle:on | 1-wait cycle:on |
|---|---|---|---|---|
| CPU MEM READ | 16 BUS | 4:2 | 6:4 | 8:6 |
| CPU MEM READ | 8 BUS | 6:3 | 12:9 | 14:11 |
| CPU MEM WRITE | 16 BUS | 4:2 | 6:4 | 8:6 |
| CPU MEM WRITE | 8 BUS | 6:3 | 12:9 | 14:11 |
| CPU I/O READ | 16 BUS | 6:3 | 6:3 | 8:5 |
| CPU I/O READ | 8 BUS | 6:3 | 12:9 | 14:11 |
| CPU I/O WRITE | 16 BUS | 6:3 | 6:3 | 8:5 |
| CPU I/O WRITE | 8 BUS | 6:3 | 12:9 | 14:11 |
| CPU INTA READ | | n/a | 12:9 | n/a |
| CPU HALT | | n/a | 6:4 | n/a |
| CPU SHUTDOWN | | n/a | 6:4 | n/a |

If the CPU status indicates more than one bus cycle will be required for a single CPU access, then the bus state machine will run the necessary number of bus cycles (duration indicated above) to complete the CPU access. For example, if the CPU status indicates a double-word memory read from the 8 bit bus, then the total cycles for the access would be 4*12=48, 62.5 nsec cycles (assuming normal cycles).

CPU ACCESS TO SYSTEM (8/16) BUS

For the following discussion, it should be noted that the CPU is normally held in the NOT READY state, READY* only goes active (low) when a cycle is guaranteed to be finished. Also, the CPU next address (NA*) line is normally inactive, requireing the logic to specifically tell the CPU when it is ok to send the next address.

The cycle begins when the 80386 activates ADS* and presents the status lines. The address is decoded by the 32 bit memory board (if present) and the signal M32* is produced. The system board decodes the status lines to determine if the cycle is a valid memory cycle, producing the signal MEM*. M32* and MEM* are then combined to the signal MEM32* which is latched by the rising edge of CLK32 (the CPU clock) at the beginning of phase one in the CPU cycle following ADS* going active. If the end result of this is NOT a valid 32 bit memory cycle, the signal MYCYC* goes active.

APPENDIX G

TABLE III

LATCH DIABLE DELAY TIME

Data Latches off the CPU data bus

| | |
|---|---|
| CLK32 cycle time | 31.2 |
| CLK32 to CKP16* in F32 | - 5.6 |
| CKP16* to LOE* in F175 | - 9.5 |
| LOE* to disable in ALS573 | -13.0 |
| MARGIN ************ | + 3.1 |

The following are some timing checks of the critical setup times to the CPU.

NA* setup during bus cycles

| | |
|---|---|
| CLK32 cycle time | 31.2 |
| CLK32 to CKP16* in F32 | - 5.6 |
| CKP16* to NAB* in F175 | - 9.5 |
| NAB* to NA* in F08 | - 5.6 |
| 386 NA* setup time | -10.0 |
| MARGIN ************ | + 0.5 |

READY* setup during bus cycles

| | |
|---|---|
| CLK16* cycle time | 62.5 |
| CLK32 to CLK16* in F74 | - 9.5 |
| CLK16* to BRDY* in PAL | -12.0 |
| BRDY* to READY* in F08 | - 5.6 |
| 386 READY* setup time | -20.0 |
| MARGIN ************ | +15.4 |

APPENDIX H

TABLE IV
STATE SEQUENCES
FOR TYPICAL CYCLES

46

STATE SEQUENCES FOR TYPICAL CYCLES.

The "cmd" is the time that the command (MRDC, IOWC, etc) is valid. The "NA" is the time when CLASTD* is set active. The "done" is when BRDY* is set active. TSx is either the next TS0 state (if another cycle is pending, or an idle cycle (as far as the bus state machine is concerned). Each state lasts 62.5 nsec.

```
+-------------------------------------------------------------+
| NO WAIT STATE 16 BIT MEMORY                                 |
| TS0 ALE T00 T01 TSx                                         |
|         cmd cmd                                             |
|         NA      done                                        |
| NORMAL WAIT STATE 16 BIT MEMORY                             |
| TS0 ALE T00 T01 T40 T41 TSx                                 |
|         cmd cmd cmd cmd                                     |
|         NA              done                                |
| NORMAL WAIT STATE 16 BIT I/O or NO WAIT STATE 16 BIT I/O    |
| TS0 ALE T00 T01 T40 T41 TSx                                 |
|             cmd cmd cmd                                     |
|             NA          done                                |
| EXTRA WAIT STATE 16 BIT MEMORY                              |
| TS0 ALE T00 T01 T40 T41 T41 T41 TSx                         |
|         cmd cmd cmd cmd cmd cmd                             |
|         NA                      done                        |
| EXTRA WAIT STATE 16 BIT I/O                                 |
| TS0 ALE T00 T01 T40 T41 T41 T41 TSx                         |
|             cmd cmd cmd cmd cmd                             |
|             NA                  done                        |
| NO WAIT STATE 8 BIT MEMORY or I/O                           |
| TS0 ALE T00 T01 T40 T41 TSx                                 |
|             cmd cmd cmd                                     |
|             NA      done                                    |
| NORMAL WAIT STATE 8 BIT MEMORY or I/O                       |
| TS0 ALE T00 T01 T10 T11 T20 T21 T30 T31 T40 T41 TSx         |
|             cmd cmd cmd cmd cmd cmd cmd cmd cmd             |
|             NA                                  done        |
| EXTRA WAIT STATE 8 BIT MEMORY or I/O                        |
| TS0 ALE T00 T01 T10 T11 T20 T21 T30 T31 T40 T41 T41 T41 TSx |
|             cmd cmd cmd cmd cmd cmd cmd cmd cmd cmd cmd     |
|             NA                                          done|
+-------------------------------------------------------------+
```

APPENDIX I

TABLE V

NON PROCESSOR SUBSYSTEMS

NON PROCESSOR SUBSYSTEMS

PROCESSOR BOARD DMA CYCLE TYPES

| | | | | |
|---|---|---|---|---|
| DMA MEM READ BYTE | 16 | RAM | LOW | BYTE |
| DMA MEM READ BYTE | 16 | RAM | HIGH | BYTE |
| DMA MEM READ BYTE | 8 | BUS | LOW | BYTE |
| DMA MEM READ BYTE | 8 | BUS | HIGH | BYTE |
| DMA MEM WRITE BYTE | 16 | RAM | LOW | BYTE |
| DMA MEM WRITE BYTE | 16 | RAM | HIGH | BYTE |
| DMA MEM WRITE BYTE | 8 | BUS | LOW | BYTE |
| DMA MEM WRITE BYTE | 8 | BUS | HIGH | BYTE |
| DMA MEM READ WORD | 16 | RAM | | |
| DMA MEM WRITE WORD | 16 | RAM | | |
| REFRESH READ | | | | |

SYSTEM BUS MASTER CYCLE TYPES

| | | | | |
|---|---|---|---|---|
| BUS MASTER MEM READ BYTE | 16 | RAM | LOW | BYTE |
| BUS MASTER MEM READ BYTE | 16 | RAM | HIGH | BYTE |
| BUS MASTER MEM READ BYTE | 8 | BUS | LOW | BYTE |
| BUS MASTER MEM READ BYTE | 8 | BUS | HIGH | BYTE |
| BUS MASTER MEM WRITE BYTE | 16 | RAM | LOW | BYTE |
| BUS MASTER MEM WRITE BYTE | 16 | RAM | HIGH | BYTE |
| BUS MASTER MEM WRITE BYTE | 8 | BUS | LOW | BYTE |
| BUS MASTER MEM WRITE BYTE | 8 | BUS | HIGH | BYTE |
| BUS MASTER MEM READ WORD | 16 | RAM | | |
| BUS MASTER MEM WRITE WORD | 16 | RAM | | |
| BUS MASTER I/O READ BYTE | 16 | BUS | LOW | BYTE |
| BUS MASTER I/O READ BYTE | 16 | BUS | HIGH | BYTE |
| BUS MASTER I/O READ BYTE | 8 | BUS | LOW | BYTE |
| BUS MASTER I/O READ BYTE | 8 | BUS | HIGH | BYTE |
| BUS MASTER I/O WRITE BYTE | 16 | BUS | LOW | BYTE |
| BUS MASTER I/O WRITE BYTE | 16 | BUS | HIGH | BYTE |
| BUS MASTER I/O WRITE BYTE | 8 | BUS | LOW | BYTE |
| BUS MASTER I/O WRITE BYTE | 8 | BUS | HIGH | BYTE |
| BUS MASTER I/O READ WORD | 16 | BUS | | |
| BUS MASTER I/O WRITE WORD | 16 | BUS | | |

# APPENDIX J

## I/O SUSBSYTEMS

## I/O SUBSYSTEMS

The I/O subsystems consist of the 8259A interrupt controllers, the 8254 timer/counters and their associated circuits, the CMOS clock/RAM IC (MC146818), the 8042 keyboard interface, and the peripheral interface circuits. Also located within the I/O space on the processor board, are the DMA controllers and the DMA Page registers which are used to determine the top eight address bits during DMA operations.

The address decoding is done with three ICs, a 74LS138 which decodes the bits SA<9:5>, (D4-SNCP) PAL which breaks out the two timers, and a (D4-SPPI) PAL which decodes other addresses. Below are the PAL equations for the decode PALs:

```
NMICS  = PPICS* SA4* /SA3* /SA0* XIOWC   ;NMI enable latch write (70h)

CMSAWR = CMSAWR* XIOWC                   ;CMOS address write (70h)
       + RESCMS                          ;or during powerup

CMSRD  = PPICS* SA4* /SA3* SA0* XIORC    ;CMOS data read (71h)

CMSWR  = PPICS* SA4* /SA3* SA0* XIOWC    ;CMOS data write (71h)

KEYCS  = PPICS* /SA4* /SA3* /SA0         ;8042 (60h, 64h)

PBWR   = PPICS* /SA4* /SA3* SA0* XIOWC   ;Port B write (61h)

PBRD   = PPICS* /SA4* /SA3* SA0* XIORC   ;Port B read (61h)

CIORD  = /SA9* /SA8* XIORC               ;0-FFH except 80287
       + INTA                            ;or Interrupt ack

TIM1CS = TIMCS* /SA3                     ;Standard timer

TIM2CS = TIMCS* SA3                      ;Special 386 timer
```

Following is an address and bit map of the devices in the I/O subsystem.

| ADDRESS HEX | ADDRESS BITS 9 | 8 | 7 | 6 | 5 | 4 | 3 | 2 | 1 | 0 | DEVICE |
|---|---|---|---|---|---|---|---|---|---|---|---|
| 00h-0Fh | 0 | 0 | 0 | 0 | 0 | x | Y | Y | Y | Y | 8237A-5 byte DMA controller |
| 20h-21h | 0 | 0 | 0 | 0 | 1 | x | x | x | x | Y | 8259A Interrupt 2 controller |
| 40h | 0 | 0 | 0 | 1 | 0 | x | 0 | x | 0 | 0 | 8254-1 System clock Timer 0 |
| 41h | 0 | 0 | 0 | 1 | 0 | x | 0 | x | 0 | 1 | 8254-1 Refresh request Timer 1 |
| 42h | 0 | 0 | 0 | 1 | 0 | x | 0 | x | 1 | 0 | 8254-1 Speaker Timer 2 |
| 43h | 0 | 0 | 0 | 1 | 0 | x | 0 | x | 1 | 1 | 8254-1 Command Mode register |
| 48h | 0 | 0 | 0 | 1 | 0 | x | 1 | x | 0 | 0 | 8254-2 Failsafe clock Timer 0 |
| 49h | 0 | 0 | 0 | 1 | 0 | x | 1 | x | 0 | 1 | 8254-2 Extra Timer 1 |
| 4Ah | 0 | 0 | 0 | 1 | 0 | x | 1 | x | 1 | 0 | 8254-2 Speed control Timer 2 |
| 4Bh | 0 | 0 | 0 | 1 | 0 | x | 1 | x | 1 | 1 | 8254-2 Command Mode register |
| 60h | 0 | 0 | 0 | 1 | 1 | 0 | 0 | 0 | x | 0 | 8042 data I/O register |
| 61h | 0 | 0 | 0 | 1 | 1 | 0 | 0 | x | x | 1 | Port B/C In/Outputs |
| 64h | 0 | 0 | 0 | 1 | 1 | 0 | 0 | 1 | x | 0 | 8042 status/command register |
| 70h | 0 | 0 | 0 | 1 | 1 | 1 | 0 | x | x | 0 | CMOS address register |
| 70h | 0 | 0 | 0 | 1 | 1 | 1 | 0 | x | x | 0 | NMI enable register (bit 8 low) |
| 71h | 0 | 0 | 0 | 1 | 1 | 1 | 0 | x | x | 1 | CMOS data I/O register |
| 80h | 0 | 0 | 1 | 0 | 0 | x | 0 | 0 | 0 | 0 | DMA Page register SPARE |
| 81h | 0 | 0 | 1 | 0 | 0 | x | 0 | 0 | 0 | 1 | DMA Page register CH 2 page |
| 82h | 0 | 0 | 1 | 0 | 0 | x | 0 | 0 | 1 | 0 | DMA Page register CH 3 page |
| 83h | 0 | 0 | 1 | 0 | 0 | x | 0 | 0 | 1 | 1 | DMA Page register CH 1 page |
| 84h | 0 | 0 | 1 | 0 | 0 | x | 0 | 1 | 0 | 0 | DMA Page register SPARE |
| 85h | 0 | 0 | 1 | 0 | 0 | x | 0 | 1 | 0 | 1 | DMA Page register SPARE |
| 86h | 0 | 0 | 1 | 0 | 0 | x | 0 | 1 | 1 | 0 | DMA Page register SPARE |
| 87h | 0 | 0 | 1 | 0 | 0 | x | 0 | 1 | 1 | 1 | DMA Page register CH 0 page |
| 88h | 0 | 0 | 1 | 0 | 0 | x | 1 | 0 | 0 | 0 | DMA Page register SPARE |
| 89h | 0 | 0 | 1 | 0 | 0 | x | 1 | 0 | 0 | 1 | DMA Page register CH 6 page |
| 8Ah | 0 | 0 | 1 | 0 | 0 | x | 1 | 0 | 1 | 0 | DMA Page register CH 7 page |
| 8Bh | 0 | 0 | 1 | 0 | 0 | x | 1 | 0 | 1 | 1 | DMA Page register CH 5 page |
| 8Ch | 0 | 0 | 1 | 0 | 0 | x | 1 | 1 | 0 | 0 | DMA Page register SPARE |
| 8Dh | 0 | 0 | 1 | 0 | 0 | x | 1 | 1 | 0 | 1 | DMA Page register SPARE |
| 8Eh | 0 | 0 | 1 | 0 | 0 | x | 1 | 1 | 1 | 0 | DMA Page register SPARE |
| 8Fh | 0 | 0 | 1 | 0 | 0 | x | 1 | 1 | 1 | 1 | DMA Page register REFRESH page |
| A0h-A1h | 0 | 0 | 1 | 0 | 1 | x | x | x | x | Y | 8259a Interrupt 2 controller |
| C0h-CFh | 0 | 0 | 1 | 1 | 0 | Y | Y | Y | Y | x | 8237a-5 word DMA controller |
| F0h | 0 | 0 | 1 | 1 | 1 | x | 0 | x | x | 0 | Clear numeric processor busy |
| F1h | 0 | 0 | 1 | 1 | 1 | x | 0 | x | x | 1 | Reset numeric processor |
| F8h-FFh | 0 | 0 | 1 | 1 | 1 | 1 | 1 | Y | Y | x | 80287 command ports |

I/O subsystem Bit usage:

```
ADDR 61h   Port B  <<READ/WRITE>>
    0  r/w  + Timer 2 Gate speaker
    1  r/w  + Speaker data
    2  r/w  + Disable/Clear failsafe timer
    3  r/w  + Disable/Clear I/O channel error
    4  ro   + refresh detect
    5  ro   + Timer channel 2 output
    6  ro   + I/O channel error
    7  ro   + Fail safe timer interrupt

ADDR 70h   CMOS clock address/NMI Mask register
    0-5     CMOS address bits
    7       -NMI enable
```

3·12·87

APPENDIX K

INTERRUPT CONTROLLER

## INTERRUPT CONTROLLER

The 8259A interrupt controllers subsystem handles interrupt requests from the system bus, the system timer, the keyboard, and the numeric coprocessor. Interrupt requests from controller 2 are cascaded into IRQ2 of controller 1. Controller 1 is a MASTER controller, controller 2 is a SLAVE as indicated by the SP/EN input to the devices. The arbitration between controllers is communicated over the CASx lines during the time between the interrupt acknowledge cycles. The interrupt levels for each line are shown below in priority order:

| SW int | Interrupt | |
|---|---|---|
| INT 8 | IRQ0-1 | SYSTEM TIMER (8253 TIMER 0) |
| INT 9 | IRQ1-1 | KEYBOARD CHAR AVAILABLE |
| na | IRQ2-1 | Interrupt from CTLR2 |
| INT 70 | IRQ8-2 | CMOS clock interrupt |
| INT 71 | IRQ9-2 | BUS PIN B04 (software redirected to INT A) |
| INT 72 | IRQ10-2 | BUS PIN D03 |
| INT 73 | IRQ11-2 | BUS PIN D04 |
| INT 74 | IRQ12-2 | BUS PIN D05 |
| INT 75 | IRQ13-2 | Numeric Coprocessor (Software redirected to INT 2) |
| INT 76 | IRQ14-2 | BUS PIN D07 |
| INT 77 | IRQ15-2 | BUS PIN D06 |
| INT B | IRQ3-1 | BUS PIN B25 |
| INT C | IRQ4-1 | BUS PIN B24 |
| INT D | IRQ5-1 | BUS PIN B23 |
| INT E | IRQ6-1 | BUS PIN B22 |
| INT F | IRQ7-1 | BUS PIN B21 |

The interrupt controllers are located on the I/O data bus IOD<7:0> in order to provide adequate buffering from the system bus. Because of this, the interrupt acknowledge cycle requires the D4-SPPI PAL to decode the CIORD* signal active.

APPENDIX L

ROM MEMORY SYSTEM

ROM MEMORY SYSTEM

The ROM memory system on the memory board consists of four sockets for 28 pin ROMs or EPROMs and decoding logic to enable them. The ROMs can be either 8K, 16K, or 32K x 8 bits in size depending on the arrangement of jumpers xx to xx. The ROM sockets are arranged in two sets of ROMs (16 bits wide) designated SYSTEM ROMs 1 (always present and including address (OFFFF0h) and system ROMs 2 (located at lower address than SYSTEM ROMs 1). There is also a jumper for each bank to select between static and dynamic ROMs. The jumper setting for each type of device is shown below.

| | |
|---|---|
| 8k ROM | PROGRAMMABLE active HI CS ON 26,27 |
| 16k ROM | PROGRAMMABLE active HI CS ON 27 |
| 32k ROM | |
| 8K EPROM | INTEL 2764 TYPE |
| 16K EPROM | INTEL 27128 TYPE |
| 32K EPROM | INTEL 27256 TYPE |

| | Standard configuration |
|---|---|
| ROMS1 (system ROMs): use jump block ER1: | 1 2=3 4=5 6 7=8 9 |
| ROMS2 (option ROMs): use jump block ER2: | 1 2=3 4 5=6 7 8=9 |

| | | | |
|---|---|---|---|
| 8k Device | 1=2 3 | 4=5 6 | |
| 16k Device | 1 2=3 | 4=5 6 | |
| 32k Device | 1 2=3 | 4 5=6 | |
| Static device | | | 7=8 9 |
| Dynamic device | | | 7 8=9 |

The addresses of the ROMs for the three ROM size configurations are shown below.

| address | 8k devices | 16k devices | 32k devices |
|---|---|---|---|
| 0E0000H | SYSTEM ROMs 2 | SYSTEM ROMs 2 | SYSTEM ROMs 2 |
| 0E2000H | SYSTEM ROMs 2 | SYSTEM ROMs 2 | SYSTEM ROMs 2 |
| 0E4000H | SYSTEM ROMs 2a | SYSTEM ROMs 2 | SYSTEM ROMs 2 |
| 0E6000H | SYSTEM ROMs 2a | SYSTEM ROMs 2 | SYSTEM ROMs 2 |
| 0E8000H | SYSTEM ROMs 2b | SYSTEM ROMs 2a | SYSTEM ROMs 2 |
| 0EA000H | SYSTEM ROMs 2b | SYSTEM ROMs 2a | SYSTEM ROMs 2 |
| 0EC000H | SYSTEM ROMs 2c | SYSTEM ROMs 2a | SYSTEM ROMs 2 |
| 0EE000H | SYSTEM ROMs 2c | SYSTEM ROMs 2a | SYSTEM ROMs 2 |
| 0F0000H | SYSTEM ROMs 1 | SYSTEM ROMs 1 | SYSTEM ROMs 1 |
| 0F2000H | SYSTEM ROMs 1 | SYSTEM ROMs 1 | SYSTEM ROMs 1 |
| 0F4000H | SYSTEM ROMs 1a | SYSTEM ROMs 1 | SYSTEM ROMs 1 |
| 0F6000H | SYSTEM ROMs 1a | SYSTEM ROMs 1 | SYSTEM ROMs 1 |
| 0F8000H | SYSTEM ROMs 1b | SYSTEM ROMs 1a | SYSTEM ROMs 1 |
| 0FE000H | SYSTEM ROMs 1b | SYSTEM ROMs 1a | SYSTEM ROMs 1 |
| 0FC000H | SYSTEM ROMs 1c | SYSTEM ROMs 1a | SYSTEM ROMs 1 |
| 0FE000H | SYSTEM ROMs 1c | SYSTEM ROMs 1a | SYSTEM ROMs 1 |

The designation "1a", "1b", "1c" etc. means that the contents of the ROM can be found duplicated at this address.

ROM/EPROM speed requirement

The required speed for the ROM or EPROM is given below:

Address access time for ROM/EPROM

| | |
|---|---|
| 5 x CLK16 cycle | 312 |
| ALE delay in F175 | - 10 |
| address latch delay als573 | - 20 |
| buffer prop delay ls244 | - 20 |
| DATA latch setup time | - 10 |
| ACCESS TIME ******** | 252 |

OE access time for ROM/EPROM

OE/CS access time for ROM/EPROM (jumpered dynamic)

| | |
|---|---|
| 4 x CLK16 cycle | 250 |
| CMD* from CLK16* in PAL | - 15 |
| MRDC* from CMD* in PAL | - 25 |
| OE* from MRDC* in PAL | - 25 |
| buffer prop delay ls244 | - 20 |
| DATA latch setup time | - 10 |
| ACCESS TIME ******** | 155 |

CS access time for ROM/EPROM (jumpered static)

| | |
|---|---|
| 5 x CLK16 cycle | 312 |
| ALE delay in F175 | - 10 |
| BALE delay from ALE in F32 | - 10 |
| ROM* from BALE in PAL | - 25 |
| buffer prop delay ls244 | - 20 |
| DATA latch setup time | - 10 |
| ACCESS TIME ******** | 227 |

APPENDIX M

MISCELLANEOUS

EXPANSION BUS DEFINITION

| BUS Pin | Signal Name | Description |
|---|---|---|

A01 IOCHK* This input signal is used to signal the CPU about parity or other serious errors on adapter cards plugged into the expansion bus. This signal should be driven low by an open collector type output capable of sinking 20 mA when an uncorrectable system error occurs.

A02-A09 SD7-SD0 These bidirectional signals are the low 8 bits of the system data bus. They should be used exclusively by all eight bit devices to transfer data. Sixteen bit devices should use these lines to transfer only the low half of a data word when the address line A0 is low. These may be driven by an expansion bus adapter acting as a bus master.

A10 BUSRDY This input signal is used to lengthen a bus cycle from it's standard time if a bus adapter cannot respond quickly enough. It should be pulled low by an open collector type device as soon as a slow addressed device is selected and held low until the device has responded. Bus cycles are lengthened by an integral number of (BCLK) cycles. This line should not be held low for more than 2.5 microseconds. This line should be driven by an open collector device capable of sinking 20 mA.

A11 AEN This output signal when inactive (low) indicates that the CPU or other adapter mounted bus master has control of the bus. When active, the DMA controller has control of the bus. It is often used to disable devices which must not respond during a DMA cycle.

A12-A31 SA19-SA0 These bidirectional signals address memory or I/O devices within the system. They form the low order 20 bits of the 24 bit address bits that the system offers. These lines are enabled onto the bus while BALE is high and are latched when BALE goes from a high to a low state. These may be driven by an expansion bus adapter acting as a bus master.

B02 RESDRV This output signal is used to reset the hardware during powerup or power failure. It is active high.

B04 IRQ9
B21 IRQ7
B22 IRQ6
B23 IRQ5
B24 IRQ4
B25 IRQ3
D03 IRQ10
D04 IRQ11
D05 IRQ12
D06 IRQ15
D07 IRQ14 These input lines are used to interrupt the CPU to request some service. The interrupt is recognized when the line goes from a low to a high and remains there until the appropriate interrupt service routine is executed.

B06 DRQ2
B16 DRQ3
B18 DRQ1
D09 DRQ0
D11 DRQ5
D13 DRQ6
D15 DRQ7 These input lines are used to request a DMA service from the DMA subsystem or to gain control of the system bus from the main CPU (Dma ReQuest). The request is made when the line goes from a low to a high and must remain there until the appropriate DAKx (Dma AcKnowedge) line goes active.

B08 NOWS* This input line (No Wait State) is used to inform the system that standard wait states can be deleted for cycles when this line is made active. The line must be pulled low before the falling edge of BCLK in order to be recognized. This line should be driven by an open collector device capable of sinking 20 mA.

B11 SMWTC* This output line (standard memory write) is active (low) only when an address from 000000h to 0FFFFFh is decoded. This line is derived from MWTC*.

B12 SMRDC* This output line (standard memory read) is active (low) only when an address from 000000h to 0FFFFFh is decoded. This line is derived from MRDC*.

B13 IOWC* This output line (I/O write) indicates (when low) when an I/O device is to accept the data from the data bus. It may be driven by an expansion bus adapter acting as a bus master.

B14 IORC* This output line (I/O read) indicates (when low) when an I/O device is to send data to the data bus. It may be driven by an expansion bus adapter acting as a bus master.

B15 DAK3*
B17 DAK1*
B26 DAK2*
D8 DAK0*
D10 DAK5*
D12 DAK6*
D14 DAK7* These output lines (Dma AcKnowedge) indicate that a request for a DMA service from the DMA subsystem has been recognized. The acknowledge is indicated by a LOW on this line. This line should be used to decode the DMA device with the IORC* or IOWC* line to indicate selection. If used to signal acceptance of a bus master request, this signal indicates when it is legal to pull GRAB* low.

B19 REFRESH* This output signal is used to indicate (when low) a refresh cycle in progress. It should be used to enable the SA0-SA7 address lines to the row address inputs of all banks of dynamic memory so that when the MRDC* goes active, the entire system memory is refreshed at one time. It may be driven by an expansion bus adapter acting as a bus master.

B20 BCLK This output signal is provided to allow synchronization to the main processor clock. Its frequency will be approximately 8MHz with a duty cycle of 50%.

B27 T/C This output signal (when high) indicates that the terminal count of a DMA operation has been reached. It should be decoded with the appropriate DACKx line for proper operation.

B28 BALE This output signal (when high) indicates that a valid address is present on the LAxx address lines. The LAxx address lines or any decodes developed from them should be latched at the falling edge of BALE. This line is always high when a DMA or bus master operation is occurring.

B30 OSC This output signal is a clock for use in timing applications. It's frequency is 14.31818 MHz and duty cycle is appoximately 50%.

C1 SBHE* This output signal (System Bus High Enable) indicates (when low) that the high half of the SDx data bus should transfer the data on adapters which support the full 16 bit data bus. It may be driven by an expansion bus adapter acting as a bus master.

C2-C8 LA23-LA17 These output signals (Latchable Address) are used to decode memory which must respond with zero or one wait state. They are only guaranteed to be valid when BALE is high. These may be driven by an expansion bus adapter acting as a bus master.

C9 MRDC* This output line (memory read) indicates (when low) when a memory device is to send data to the data bus. This signal is active over the entire address space of the system. It may be driven by an expansion bus adapter acting as a bus master.

C10 MWTC* This output line (memory write) indicates (when low) when a memory device is to accept the data from the data bus. This signal is active over the entire address space of the system. It may be driven by an expansion bus adapter acting as a bus master.

C11-C18 SD08-SD15 These bidirectional signals are the high 8 bits of the system data bus. Sixteen bit devices should use these lines to transfer the high half of a data word when the line SBHE* is low. These may be driven by an expansion bus adapter acting as a bus master.

D1 M16* This input line (Memory is 16 bits) signals the system that the addressed memory is capable of transferring 16 bits of data at once. When this line is made active, during a memory read or write, the standard one wait state memory cycle will be run. This line should be derived from the LAxx address lines. This line should be driven low by an open collector device capable of sinking 20 mA.

D2 IO16* This input line (I/O is 16 bits) signals the system that the addressed I/O device is capable of transferring 16 bits of data at once. When this line is made active, during an I/O read or write, the standard one wait state I/O cycle will be run. This line should be driven low by an open collector device capable of sinking 20 mA.

D17 GRAB* This input signal is used to indicate that an adapter mounted bus master is controlling the bus. An adapter may pull this line low when the appropriate DAKx line is made active, signalling that a master request is granted. The system address, data and control lines will be floated, allowing the adapter to begin controlling them one full BCLK period after GRAB is made active. At least one more full BCLK period should be allowed after putting a valid address on the bus before activating any of the control lines. This line should be driven by an open collector device capable of sinking 20 mA.

B01,B10,B31,D18 GND These lines are connected to the system AC and DC ground. The maximum current allowed on any single contact is 1.5 amps.

B03,B29,D16 +5 Vdc These lines are connected to the system power supply for 5 volts. In addition to the maximum power available from the supply, the maximum current allowed on any single contact is 1.5 amps.

B5 -5 Vdc This line is connected to the system power supply for minus 5 volts. This supply is intended for low current usage only.

B7 -12 Vdc This line is connected to the system power supply for minus 12 volts. This supply is intended for low current usage only.

B9 +12 Vdc This line is connected to the system power supply for 12 volts. In addition to the maximum power available from the supply, the maximum current allowed on this contact is 1.5 amps.

BUS TIMING INFORMATION

This information assumes that the system clocks are at a constant 8mHz. Since in some cases this is not true, some cycles may have more time available than indicated.

CPU 8 bit command active time (standard wait state)
9 x CLK16 cycle 567

CPU 8 bit command active time (NO standard wait state)
3 x CLK16 cycle 187

CPU 16 bit memory command active time (standard wait state)
4 x CLK16 cycle 250

CPU 16 bit I/O command active time (standard wait state)
3 x CLK16 cycle 187

CPU 16 bit memory command active time (NO wait state)
2 x CLK16 cycle 125

CPU extra wait state size
2 x CLK16 cycle 125

Address access time from SAx address lines, 16 bit bus read cycle.

| | | |
|---|---|---|
| 5 x CLK16 cycle | | 312 |
| ALE* active delay in PAL | | - 15 |
| ALE* TO ALE in F00 | | - 6 |
| address latch delay als573 | | - 20 |
| Latch setup time als573 | | - 10 |
| CMD from CLK16* in PAL | | + 6 |
| BCKx from CMD in PAL | | + 8 |
| ACCESS TIME | ******** | 275 |

Address access time from SA19-SA0 address lines, 8 bit bus read cycle.

| | | |
|---|---|---|
| 11 x CLK16 cycle | | 687 |
| ALE* active delay in PAL | | - 15 |
| ALE* TO ALE in F00 | | - 6 |
| address latch delay als573 | | - 20 |
| Copy buffer delay ls245 | | - 15 |
| Latch setup time als573 | | - 10 |
| CMD from CLK16* in PAL | | + 6 |
| BCKx from CMD in PAL | | + 8 |
| ACCESS TIME | ******** | 635 |

Access time from BALE active, 16 bit bus read cycle.

| | | |
|---|---|---|
| 5 x CLK16 cycle | | 312 |
| ALE* active delay in PAL | | - 15 |
| BALE from ALE in F00 | | - 9 |
| Latch setup time als573 | | - 10 |
| CMD from CLK16* in PAL | | + 6 |
| BCKx from CMD in PAL | | + 8 |
| ACCESS TIME | ******** | 292 |

MRDC* Access time, 16 bit bus read cycle.

| | | |
|---|---|---|
| 4 x CLK16 cycle | | 250 |
| MRDC* from CMD in PAL | | - 15 |
| Latch setup time als573 | | - 10 |
| BCKx from CMD in PAL | | + 8 |
| ACCESS TIME | ******** | 233 |

IORC* access time, 16 bit bus read cycle.

| | | |
|---|---|---|
| 3 x CLK16 cycle | | 187 |
| IORC* from CMD in PAL | | - 15 |
| Latch setup time als573 | | - 10 |
| BCKx from CMD in PAL | | + 8 |
| ACCESS TIME | ******** | 170 |

MRDC*, IORC*, access time, 8 bit bus read cycle.

| | | |
|---|---|---|
| 9 x CLK16 cycle | | 567 |
| MRDC* from CMD in PAL | | - 15 |
| Copy buffer delay ls245 | | - 18 |
| Latch setup time als573 | | - 10 |
| BCKx from CMD in PAL | | + 8 |
| ACCESS TIME | ******** | 532 |

SMRDC* access time, 8 bit bus read cycle.

| | | |
|---|---|---|
| 9 x CLK16 cycle | | 567 |
| MRDC* from CMD in PAL | | - 15 |
| SMRDC* from MRDC* in LS125 | | - 18 |
| Copy buffer delay ls245 | | - 18 |
| Latch setup time als573 | | - 10 |
| BCKx from CMD in PAL | | + 8 |
| ACCESS TIME | ******** | 514 |

Data hold time from MRDC*, IORC*, 8 and 16 bit cycles

| | | |
|---|---|---|
| data hold from BCKx ALS573 | | 7 |
| BCKx delay from CMD in PAL max | | 15 |
| DCMD from CMD in PAL min | | - 8 |
| command from CMD in PAL min | | - 8 |
| Required data hold | ********** | 6 |

LAx address valid to 16 bit memory command setup

| | | |
|---|---|---|
| 3 * CLK16 | | 187 |
| CPU address out from CLK16 max | | - 40 |
| Address buffer delay ALS245 max | | - 17 |
| CMD from CLK16* in PAL | | + 6 |
| command from CMD in PAL | | + 5 |
| SETUP | ********* | 141 |

LAx address valid to M16* active requirement

| | | |
|---|---|---|
| 3 * CLK16 | | 187 |
| CPU address out from CLK16 max | | - 40 |
| Address buffer delay ALS245 max | | - 17 |
| ALE* active delay in PAL min | | + 5 |
| ALE* TO ALE in F00 | | + 2 |
| M16* setup required to ALE in PAL | | - 15 |
| SETUP | ********* | 122 |

BALE valid to 16 bit memory command setup

| | | |
|---|---|---|
| 1 * CLK16 | | 62 |
| ALE* active delay in PAL | | - 15 |
| BALE from ALE* in F00 | | - 9 |
| CMD from CLK16* in PAL | | + 6 |
| command from CMD in PAL | | + 5 |
| SETUP | ********* | 49 |

BALE valid to required M16*

| | | |
|---|---|---|
| 1 * CLK16 | | 62 |
| ALE* active delay in PAL | | - 15 |
| BALE from ALE* in F00 | | - 9 |
| M16* setup in PAL | | - 15 |
| SETUP | ********* | 23 |

SAx address valid to 16 bit memory command setup

| | | |
|---|---|---|
| 1 * CLK16 | | 62 |
| ALE* active delay in PAL | | - 15 |
| BALE from ALE* in F00 | | - 9 |
| CMD from CLK16* in PAL | | + 6 |
| command from CMD in PAL | | + 5 |
| address latch delay ALS573 | | - 20 |
| SETUP | ********* | 29 |

SAx address valid to I/O, 8 bit command setup

| | | |
|---|---|---|
| 2 * CLK16 | | 125 |
| ALE* active delay in PAL | | - 15 |
| BALE from ALE* in F00 | | - 9 |
| CMD from CLK16* in PAL | | + 6 |
| command from CMD in PAL | | + 5 |
| address latch delay ALS573 | | - 20 |
| SETUP | ********* | 92 |

SA<19-0> address hold from command

| | | |
|---|---|---|
| 1 * CLK16 | | 62 |
| CMD from CLK16* in PAL | | - 15 |
| command from CMD in PAL | | - 15 |
| ALE* active delay in PAL min | | + 5 |
| ALE* TO ALE in F00 | | + 2 |
| address latch delay als573 min | | + 7 |
| HOLD | ********* | 46 |

CPU write data setup to MWTC* active, 16 bit bus memory cycle.

| | | |
|---|---|---|
| CLK16 time | | 62 |
| MWTC* in PAL delay min | | 5 |
| BENx delay in PAL max | | - 25 |
| data buffer delay LS245 | | - 40 |
| SETUP | ********* | 2 |

CPU write data setup to IOWC* active

| | | |
|---|---|---|
| 2 * CLK16 | | 125 |
| MWTC* in PAL delay min | | 5 |
| BENx delay in PAL max | | - 25 |
| data buffer delay LS245 | | - 40 |
| SETUP | ********* | 65 |

CPU write data setup to MWTC*, IOWC* active, 8 bit bus

| | | |
|---|---|---|
| MWTC* to CPYEN* in PAL delay | | - 25 |
| data buffer delay LS245 | | - 40 |
| SETUP | ********* | - 65 |

CPU write data setup to MWTC*, IOWC*, inactive, 16 bit bus memory cycle.

| | | |
|---|---|---|
| 5 * CLK16 time max | | 312 |
| BENx* delay in PAL max | | - 25 |
| data buffer delay LS245 | | - 40 |
| MWTC* in PAL delay min | | 5 |
| SETUP | ********* | 252 |

CPU write data setup to MWTC*, IOWC*, inactive, 8 bit bus memory cycle LOW BYTE.

| | | |
|---|---|---|
| 9 * CLK16 time max | | 562 |
| BENx* delay in PAL max | | - 25 |
| data buffer delay LS245 | | - 40 |
| MWTC* in PAL delay min | | 5 |
| SETUP | ********* | 502 |

CPU write data setup to MWTC*, IOWC*, inactive, 8 bit bus memory cycle HIGH BYTE.

| | | |
|---|---|---|
| 9 * CLK16 time max | | 562 |
| COPYEN* delay in PAL max | | - 25 |
| data buffer delay LS245 | | - 40 |
| SETUP | ********* | 497 |

Refresh MRDC* active time

| | | |
|---|---|---|
| DCLK cycle time | | 250 |

Refresh address setup to MRDC* active

| | | |
|---|---|---|
| 2 * CLK16 | | 125 |
| ls590 delay max | | - 45 |
| LS244 DELAY (SA8,SA9) | | - 18 |
| ls125 delay min | | + 7 |
| SETUP (SA8,SA9) | ********* | 69 |

BAD ORIGINAL

| | | |
|---|---|---|
| SETUP (SA0-7) | ********** | 87 |

Refresh address hold from MRDC* inactive

| | | |
|---|---|---|
| ls590 delay min | | + 5 |
| ls125 delay max | | - 20 |
| SETUP | ********** | - 15 |

Refresh wait state BUSRDY low delay from MRDC* active

| | | |
|---|---|---|
| 2 * CLK16 | | 125 |
| f175 delay max | | - 10 |
| ls125 delay max | | - 20 |
| f125 setup max | | - 3 |
| Max allowed delay | ********** | 92 |

Refresh wait state BUSRDY high setup to BCLK rising

| | | |
|---|---|---|
| f125 setup max | | 5 |
| SETUP | ********** | 5 |

CPU memory or I/O command wait state
BUSRDY high setup to BCLK rising

| | | |
|---|---|---|
| F74 setup max | | 3 |
| SETUP | ********** | 5 |

CPU 16 bit memory command wait state
BUSRDY low delay from command active

| | | |
|---|---|---|
| 3 * CLK16 | | 187 |
| CMD from CLK16* in PAL | | - 15 |
| command from CMD in PAL | | - 15 |
| F74 preset delay | | - 11 |
| F175 setup max | | - 3 |
| Max allowed delay | ********** | 143 |

CPU 16 bit I/O command wait state
BUSRDY low delay from command active

| | | |
|---|---|---|
| 2 * CLK16 | | 125 |
| CMD from CLK16* in PAL | | - 15 |
| command from CMD in PAL | | - 15 |
| F74 preset delay | | - 11 |
| F175 setup max | | - 3 |
| Max allowed delay | ********** | 81 |

CPU 8 bit command wait state
BUSRDY low delay from command active

| | | |
|---|---|---|
| 8 * CLK16 | | 500 |
| CMD from CLK16* in PAL | | - 15 |
| command from CMD in PAL | | - 15 |
| F74 delay max | | - 11 |
| F175 setup max | | - 3 |
| Max allowed delay | ********** | 456 |

CPU minimum command active from BUSRDY high after added wait state.

| | | |
|---|---|---|
| 2 * CLK16 | | 125 |
| CMD from CLK16* in PAL | | + 6 |
| command from CMD in PAL | | + 8 |
| F74 setup min | | + 0 |
| Command active | ********** | 139 |

```
CPU maximum command active from BUSRDY high after added wait state.
        4 * CLK16                                       250
        CMD from CLK16* in PAL                        + 15
        command from CMD in PAL                       + 15
        F74 setup max                                 +  3
        Command active          **********             283

NOWS* delay from MRDC* or MWTC* 16 bit memory cycles
        1 * CLK16                                        62
        CMD from CLK16* in PAL                        - 15
        command from CMD in PAL                       - 15
        F74 setup min                                 -  3
        Max allowed delay       **********              29

DMA memory read, I/O write command additional wait state
BUSRDY low delay from memory read command active
        4 * CLK16                                       250
        f74 delay max                                 - 11
        ls125 delay max                               - 20
        LS243 delay max                               - 18
        f74 delay BUSRDY to DRD1 max                  - 11
        f175 setup                                    -  3
        Max allowed delay       **********             187

DMA I/O read, memory write command additional wait state
BUSRDY low delay from I/O read command active
        8 * CLK16                                       500
        I/O write delay from DCLK max                 -190
        ls243 delay max                               - 15
        f74 delay BUSRDY to DRD1 max                  - 11
        f175 setup                                    -  3
        Max allowed delay       **********             281

DMA MRDC* active time
        2 x DCLK cycle                                  500

DMA IORC* active time
        3 x DCLK cycle                                  750

DMA MWTC*, IOWC* active time
        2 x DCLK cycle                                  500
        8237 Write command shrinkage                    100
        Active cycle time       **********             400

System memory read access time from MRDC* (Non CPU cycles)
        M-IO from MRDC* in PAL                           15
        4 x CLK32 (DMIO to MCAS*)                       125
        MCAS* to CASx* in F32 delay max                  15
        CAS access time in RAM max                       25
        Data buffer delay F657 (mem card)                10
        Data buffer delay LS245                          15
        Data buffer delay ALS245 (copy buf)              15
        Access time             **********             220
```

```
Data setup to MWTC* for system RAM (Non CPU cycles)
        M-IO from MWTC* in PAL                          - 10
        4 x CLK32 (DMIO to MCAS*)                       -125
        MCAS* to CASx* in F32 delay max                 - 10
        Data buffer delay F657 (mem card)                 10
        Data buffer delay LS245                           15
        Data buffer delay ALS245 (copy buf)               15
        Data setup before MWTC* **********              -100

Required I/O data access time from IORC* for DMA write to RAM
        4 * CLK16 cycle time (IORC* to MWTC*)            250
        System RAM data setup before MWTC*               100
        DMA I/O read access time *********               350

DATA valid after IOWC* low during DMA read from RAM
        DMRQ* from DCLK in F74 delay                      11
        XMRDC*  from DMRQ* in ls125 delay                 18
        MRDC* from XMRDC* in ls243                        15
        System memory access time from MRDC*             220
        XIOWC* from DCLK in 8237 min?                   - 70
        IOWC* from XIOWC* in LS243                      - 15
        DMA data valid from IOWC* low   ******** 179

DATA setup to IOWC* high during DMA read from RAM
        2 x DCLK cycle time                              500
        DMA controller Write low shrinkage             - 100
        DMA data valid from IOWC* low                  - 179
        Data setup to IOWC* high         ******** 221
```

32 BIT EXPANSION BUS DEFINITION

| BUS Pin | Signal Name | Description |
|---|---|---|

E38 PARIT*

This input signal is used to signal the CPU about parity errors. This signal has a 20kohm pullup resistor and may be driven low by either an open collector type output or a normal output capable of sinking 4.0 mA and sourcing 1.0 mA when an uncorrectable system error occurs.

E2-F5 PD0-PD7

These bidirectional signals are the 8 bits of the processor data bus selected at an address that ends in 00 (binary). They should be used for the transfer of memory data when the 32 bit bus is selected. These lines should be driven during 32 bus memory read cycles when qualified by the BE0* signal going active. At other times this bus should not be driven. During a write cycle the data on these lines is valid only when BE0* is active. The bus should have a maximum of 1.0mA load in the low state and 0.4mA load in the high state when driven by the motherboard and a maximum capacitive loading of 40pF. The 32 bit board must be able to drive 120pF and sink 4.0mA and source 1.0mA when driving these lines.

E6-F9 PD8-PD15

These bidirectional signals are the 8 bits of the processor data bus selected at an address that ends in 01 (binary). These lines are qualified by BE1* similar to PD0-PD7 and BE0* described above. The electical parameters are the same as PD0-PD7 described above.

E10-F13 PD16-PD23

These bidirectional signals are the 8 bits of the processor data bus selected at an address that ends in 10 (binary). These lines are qualified by BE2* similar to PD0-PD7 and BE0* described above. The electical parameters are the same as PD0-PD7 described above.

E14-F17 PD24-PD31

These bidirectional signals are the 8 bits of the processor data bus selected at an address that ends in 11 (binary). These lines are qualified by BE3* similar to PD0-PD7 and BE0* described above. The electical parameters are the same as PD0-PD7 described above.

E18-F28 PA2-PA23

These output signals (in addition to PA31) address memory devices and special control registers on the 32 bit memory bus. They form the high order 22 bits of the 24 bit standard address that the system offers. The bus should have a maximum of 1.0mA load in the low state and 0.4mA load in the high state and a maximum capacitive loading of 40pF.

E36 PA31

This output signal (in addition to PA2-PA23) addresses special control registers or system memory on the 32 bit memory bus. The line should have a maximum of 1.0mA load in the low state and 0.4mA load in the high state and a maximum capacitive loading of 40pF.

E35 LOWA20

This output signal (when low) indicates when the address line PA20 should be ignored and the address decoded as if the PA20 line was low. When high, the PA20 line is decoded as normal. This is used to provide software compatibility for those programs that expect only a 1 megabyte address space. The line should have a maximum of 1.0mA load in the low state and 0.4mA load in the high state and a maximum capacitive loading of 40pF.

F30 BE0*

This output signal (when low) indicates when the 32 bit memory board should operate on the PD0-PD7 data lines. The line should have a maximum of 1.0mA load in the low state and 0.4mA load in the high state and a maximum capacitive loading of 40pF.

E30 BE1*

This output signal (when low) indicates when the 32 bit memory board should operate on the PD8-PD15 data lines. The line should have a maximum of 1.0mA load in the low state and 0.4mA load in the high state and a maximum capacitive loading of 40pF.

F29 BE2*

This output signal (when low) indicates when the 32 bit memory board should operate on the PD16-PD23 data lines. The line should have a maximum of 1.0mA load in the low state and 0.4mA load in the high state and a maximum capacitive loading of 40pF.

E29 BE3*

This output signal (when low) indicates when the 32 bit memory board should operate on the PD24-PD31 data lines. The line should have a maximum of 1.0mA load in the low state and 0.4mA load in the high state and a maximum capacitive loading of 40pF.

B02 RST*

This output signal is used to reset the hardware during powerup or power failure. This signal is not synchronous with the CLK32 or CLK16* lines. It is active low.

E33 CLK32

This output signal is the main processor clock. Its frequency will be 32mHz with a duty cycle of about 50%. This line should be used as the timing reference for all processor memory cycles. The line should have a maximum of 1.0mA load in the low state and 0.4mA load in the high state and a maximum capacitive loading of 40pF.

F33 CLK16*

This output signal provides a reference for the internal processor clock phase. Its frequency will be 16mHz with a duty cycle of about 50%. This line will be high during CPU phase one and low during phase two. The line should have a maximum of 1.0mA load in the low state and 0.4mA load in the high state and a maximum capacitive loading of 40pF.

F34 M32*

This input signal (when low) indicates that the 32 bit memory board has decoded an address which it will handle. This line should be decoded ONLY off the address and LOWA20 lines as it will be used during both CPU cycles and other bus master cycles. This signal has a 20kohm pullup resistor to hold it inactive when a 32 bit board is not installed and should be driven by an output capable of sinking 4.0 mA and sourcing 1.0 mA with a 50pF load.

F36 BHLDA

This output signal when inactive (low) indicates that the CPU has control of the bus. When active, some other bus master has control of the bus. This line should be used to determine the protocal used by the memory board for a memory cycle. The signal should have a maximum of 1.0mA load in the low state and 0.4mA load in the high state and a maximum capacitive loading of 40pF.

E31 ADS*

This output signal (when rising) indicates that valid status and address has been put on the bus by the CPU and the 32 bit memory board should begin (or complete) it's cycle if it is selected (M32* set low). This line is always high when a DMA or bus master operation is occurring. The signal should have a maximum of 1.0mA load in the low state and 0.4mA load in the high state and a maximum capacitive loading of 40pF.

F31 M-IO

This output signal is one of the status lines which indicate the type of cycle that is in progress. Refer to the status cycle type table for the type of cycle indicated. The signal should have a maximum of 1.0mA load in the low state and 0.4mA load in the high state and a maximum capacitive loading of 40pF.

E32 D-C

This output signal is one of the status lines which indicate the type of cycle that is in progress. Refer to the status cycle type table for the type of cycle indicated. The signal should have a maximum of 1.0mA load in the low state and 0.4mA load in the high state and a maximum capacitive loading of 40pF.

F32 W-R

This output signal is one of the status lines which indicate the type of cycle that is in progress. Refer to the status cycle type table for the type of cycle indicated. The signal should have a maximum of 1.0mA load in the low state and 0.4mA load in the high state and a maximum capacitive loading of 40pF.

E34 MRDY*

This input signal is used to signal the end of a memory cycle when the 32 bit board is accessed by the CPU. This signal has a 20kohm pullup resistor to hold it inactive when a 32 bit board is not installed and should be driven by an output capable of sinking 4.0 mA and sourcing 1.0 mA with a 50pF load.

F38 NAM*

This input signal is used to signal the CPU when the 32 bit board is finished with the address and status information and the CPU may put out it's next address. This signal has a 20kohm pullup resistor to hold it inactive when a 32 bit board is not installed and should be driven by an output capable of sinking 4.0 mA and sourcing 1.0 mA with a 50pF load.

F37 READY*

This output signal indicates the end of a CPU cycle by either the 32 bit memory board or the system board. The signal should have a maximum of 1.0mA load in the low state and 0.4mA load in the high state and a maximum capacitive loading of 40pF.

E37 NA*

This output signal indicates when the system board or the memory board is done with the address and status information and the CPU may put out it's next address. The signal should have a maximum of 1.0mA load in the low state and 0.4mA load in the high state and a maximum capacitive loading of 40pF.

F1,F39,F40 GND

These lines are connected to the system AC and DC ground. The maximum current allowed on any single contact is 1.5 amps.

E1,E39,E40 +5 Vdc

These lines are connected to the system power supply for 5 volts. In addition to the maximum power available from the supply, the maximum current allowed on any single contact is 1.5 amps.

Cycle types as indicated by status:

| BHLDA | M-IO | D-C | W-R | |
|---|---|---|---|---|
| L | L | L | L | CPU Interrupt Acknowledge |
| L | L | L | H | Code never produced |
| L | L | H | L | CPU I/O read |
| L | L | H | H | CPU I/O write |
| L | H | L | L | CPU Memory code read |
| L | H | L | H | CPU halt or shutdown |
| L | H | H | L | CPU Memory data read |
| L | H | H | H | CPU Memory data write |
| H | L | L | L | Code never produced |
| H | L | L | H | Non CPU refresh read |
| H | L | H | L | Non CPU memory write |
| H | L | H | H | Non CPU memory read (note 1) |
| H | H | L | L | Code never produced |
| H | H | L | H | Non CPU refresh cycle (Before or after) |
| H | H | H | L | Non CPU not produced (note 1) |
| H | H | H | H | Non CPU No cycle in progress |

Note 1: possible occurance on transition to/from memory write.
Note 2: other status lines are not guaranteed to be high until after the transition of BHLDA from low to high

BUS TIMING INFORMATION

| | | |
|---|---|---|
| **Status inactive setup to BHLDA high** | | |
| D4-SMSC turnon pal min | | 4 |
| SETUP | ********* | 4 |
| **Status inactive hold to BHLDA low** | | |
| CLK16* cycle time | | 62 |
| 386 HOLDA delay min | | + 4 |
| D4-SMSC delay max | | - 15 |
| HOLD | ********* | 51 |
| **Refresh cycle time (M-IO low time)** | | |
| 2 * BCLK cycle | | 250 |
| ls125 delay delta | | +/- 10 |
| D4-SCMD pal min | | +/- 5 |
| CYCLE time max | ********* | 235 |
| CYCLE time min | ********* | 265 |
| **Refresh address setup to M-IO low** | | |
| BCLK cycle | | 125 |
| ls590 delay max | | - 25 |
| ls244 delay max | | - 18 |
| ls245 delay max | | - 18 |
| ls125 delay min | | + 7 |
| D4-SCMD pal min | | + 5 |
| SETUP | ********* | 76 |

Refresh address hold from M-IO high

| | | |
|---|---|---|
| 1s590 delay min | | + 5 |
| 1s245 delay min | | + 5 |
| 1s125 delay max | | - 20 |
| D4-SCMD pal max | | - 15 |
| HOLD | ********** | - 25 |

Data setup before M-IO low during BHLDA high write cycle

| | | |
|---|---|---|
| MWTC* to M-IO in D4-SCMD pal delay min | | + 5 |
| 286 product data setup to MWTC* | | - 48 |
| data delay in 1s245 | | - 18 |
| SETUP | ********** | - 61 |

Required data access time from M-IO during BHLDA high read cycles

| | | |
|---|---|---|
| 286 product access time from MRDC* | | 200 |
| D4-SCMD pal max | | - 15 |
| data delay in 1s245 max | | - 18 |
| REQUIRED ACCESS TIME | ********** | 167 |

Minimum cycle time (M-IO low) during BHLDA high

| | |
|---|---|
| 286 product MRDC* low | 250 |

Minimum total cycle time (M-IO low to M-IO low) during BHLDA high

| | |
|---|---|
| 286 product MRDC* low | 375 |

Maximum cycle time (M-IO low) during BHLDA high

| | |
|---|---|
| 286 product MRDC* low | 10000 |

Required MRDY* setup to CLK32 during CPU cycle

| | | |
|---|---|---|
| 386 setup time min | | 20 |
| F08 delay max | | 7 |
| SETUP | ********** | 27 |

Required MRDY* hold from CLK32 during CPU cycle

| | | |
|---|---|---|
| 386 hold time min | | 3 |
| F08 delay min | | - 2 |
| HOLD | ********** | 1 |

Required NAM* setup to CLK32 during CPU cycle

| | | |
|---|---|---|
| 386 setup time min | | 10 |
| F08 delay max | | 7 |
| SETUP | ********** | 17 |

Required NAM* hold from CLK32 during CPU cycle

| | | |
|---|---|---|
| 386 hold time min | | 20 |
| F08 delay min | | - 2 |
| HOLD | ********** | 18 |

Other setup, hold, and delay times from the CPU should be taken directly from the INTEL 80386 specifications.

The 32 bit bus is intended for use by a memory board which is able to respond to CPU requests for data up to 32 bits at a time. This board is also expected to operate at very high cycle rates. Since the master CPU operates at 16mHz clock rate, and uses two clock cycles for a fastest possible memory cycle, the memory board would have to do full speed memory cycles in 125 nsec. Since the CPU allows pipelining of the address and status for the next cycle during the current cycle, the memory board should take advantage of this to gain an effective clock cycle to do address decoding etc. The remainder of this discussion assumes the use of CPU pipelining.

The 32 bit memory board is required to indicate to the system board when an address from the 32 bit bus will be handled by the memory board (assumeing that the cycle type is a memory cycle). This is accomplished by the M32* line. The system board combines this line with the status from the CPU and determines if a legal 32 bit memory cycle is being started. If it is, the system board will do nothing with the CPU, leaving all control to the memory board. If the status indicates some cycle other than memory (even if M32* is active) or if M32* is inactive, the system board logic will run the complete cycle to the CPU including the driving of the NA* and READY* signals.

The system board uses the CPU pipelining ability to get a start on operations. Since the system board cannot know if the next cycle is for the 32 bit memory or system board, it always starts the CPU pipelining with the NAB* signal. Therefore it is required that the memory board understand this and not finish a pipelined memory cycle before the system board is done with a system cycle.

The expected way that the memory board determines that it can run a cycle is to wait for the rising edge of ADS*. This will ensure the completion of any system board cycle and prevent collision of the control logic on the two systems. Memory operations not requireing the driving of MRDY* or the presence of valid write data, can be done before the rising edge of ADS*. Since NAM* will have no direct effect on the CPU until after a previous cycle is complete, it may be driven whenever necessary. Note that since M32* is to be a direct decode from address, it must be driven regardless of ADS*.

If the 32 bit memory board is to operate with no wait states, it will be necessary to drive NAM* as soon as a valid memory cycle is detected (NAM* must be synchronized with the CPU clock). If wait states are inserted then NAM* can be driven later in the memory cycle.

When the 32 bit memory board is finished with a cycle, it must assert MRDY* to tell the CPU that it is complete. During a read cycle, the data should be gated onto the bus during this time.

During non processor cycles (BHLDA is high) the memory board must run the memory cycles at least as fast as the original 286 memory boards because there is no way to add wait states to external bus masters from the 32 bit board. The required access time and cycle time are listed in the timing tables.

When BHLDA is high, the protocal for accessing the memory changes. The M-IO line becomes a memory strobe, and the D-C and W-R lines become equivalent to a refresh control signal and a write enable signal. Note that on the leading edge of BHLDA, that the other status lines may not be valid. Therefor it will be necessary to provide some sort of glitch protection during this transition. Also be aware that the data is not guaranteed to be valid until some time after the M-IO line (memory strobe) appears. This is probably not a problem for dynamic memory, because the RAS to CAS delay will exceed the data setup time, but may be a problem for other memory designs.

PAGE MODE D4 DYNAMIC RAM BOARD

The dynamic memory subsystem for D4 is designed to get the most out of the 80386 processor and still use relatively inexpensive dynamic memories. To do this, the memory subsystem provides the following features:

32 bit wide memory data path.

One megabyte of standard memory using 256k x 1 DRAM ICs and One megabyte of upgrade memory and one of two option boards.

Option RAM board design allows two megabytes of additional memory using 256k x 1 DRAM ICs.

2nd Option RAM board design allows eight megabytes of additional memory using 1024k x 1 DRAM ICs or 256k x 4 DRAM ICs.

16 mHz operation of the processor/memory interface.

Two wait states on the first CPU memory cycle following a hold or idle state. (INITIAL CYCLE).

Zero wait states when sequential memory cycles fall within the same 2048 byte address page. (PAGE HIT CYCLE).

Two wait states when sequential memory cycles do NOT fall within the same 2048 byte address page. (PAGE MISS CYCLE).

Seperate Parity checking on each byte of the 32 bit double word.

Diagnostic port allows the determination of the specific bytes within the double word on which a parity error occurred.

ROM "replacement" ability; 128k bytes of the RAM may be used to replace the system ROMs to increase the speed of the ROMs to RAM speed.

The ROM "replacement" RAM area can be protected from being written by errant software.

This "Page Mode" usage of the dynamic RAM generally averages to about one wait state with typical software or an average cycle time of 187 nsec. Note that "sequential" memory cycles means that the CPU begins requesting a new memory cycle before the current cycle is complete. If the CPU inserts an idle state between cycles because it is busy, the memory system will terminate the "PAGE HIT CYCLE" and revert to an "INITIAL CYCLE".

The system responds to the system DMA and refresh as expected, but since these are much slower than CPU cycles the memory subsystem runs standard multiplexed RAM cycles with no wait states on refresh or DMA.

The memory system can execute 11 different types of memory cycles depending on the conditions of the CPU and DMA. A listing of cycles follows;

1) Initial read cycle from Idle or bus Hold.
2) Initial read cycle from system board cycle.
3) Initial write cycle from Idle or bus Hold.
4) Initial write cycle from system board cycle.
5) Read Page Hit cycle.
6) Write Page Hit cycle.
7) Read Page Miss cycle.
8) Write Page Miss cycle.
9) Refresh cycle.
10) DMA read cycle.
11) DMA write cycle.

The logic for the state to state transitions and the generation of the master memory strobes is contained entirely within one PAL (Programmed Array Logic) device (D4-RCTL). The logic for determining the hit/miss status of a cycle consists of two latches to remember the previous page address and two identity comparitors to check that the current address matches. Since the CPU is operated in the "pipelined address" mode, the address changes before the memory cycle is finished. The column (address within the page) address and byte enables are therefore latched by two more latches. Address multiplexing is accomplished by three multiplexor ICs, and the multiplexed address is buffered by additional buffers (one for each bank of 36 DRAMs). Two additional PAL devices are used to decode the system address, one provides the signal (M32*) which tells everybody that the memory board will control the bus, and the other decodes the address for the two banks of memory on the main memory board.

Data buffering and parity checking is done by four parity trancievers. These devices seperate the memory data bus from the cpu data bus and generate the parity for the DRAMs during write cycles and check the parity during read cycles. The logic that controls the buffers always generates or checks all four bytes even when only a single byte in memory is being accessed. For write operations, the resulting data is ignored by the DRAMs which are not selected. For read operations, a set of pullup resistors on the data bits assures a legal (EVEN) parity check. This also implies that an incomplete bank of DRAM which was enabled, would not cause parity errors during software tests.

ADDRESS DECODING

The memory subsystem responds to the following addresses (address range given in hexadecimal):

| ADRESS RANGE | size | BANK | address decoded; |
|---|---|---|---|
| 000000-03FFFF | 256K | 0 | always. |
| 040000-07FFFF | 256K | 0 | when the 512k jumper is active (2-3). |
| 080000-09FFFF | 128K | 0 | when the 640k jumper is active (5-6). |
| 0E0000-0FFFFF | 128K | 0 | when ROM replacement active (Note 3). |
| 100000-13FFFF | 256K | 0 | (Note 1). |
| 100000-13FFFF | 256K | 1 | (Note 2). |
| 140000-1FFFFF | 768k | 1 | when the 1M jumper is active (8-9). |
| 200000-2FFFFF | 1024k | 2 | bank 2 on 2M option board when present. |
| 300000-3FFFFF | 1024k | 3 | bank 3 on 2M option board when present. |
| 200000-5FFFFF | 4096k | 2 | bank 2 on 8M option board when present. |
| 600000-9FFFFF | 4096k | 3 | bank 3 on 8M option board when present. |
| F40000-F7FFFF | 256k | 0 | when the 512k jumper is inactive (1-2). |
| F80000-F9FFFF | 128k | 0 | when the 640k jumper is inactive (4-5). |
| FA0000-FDFFFF | 256k | 0 | always. |
| FE0000-FFFFFF | 128k | 0 | always (Note 3). |
| 80C00000 | 1 byte | | diagnostic byte (read) address. |
| 80C00000 | 1 byte | | control byte (write) address. |

Note 1) Actually addresses 000000-03FFFF when LOWA20 is inactive.
Note 2) This is not addressed when LOWA20 is inactive.
Note 3) When ROM replacement is active, writing to this address range can be disabled.

The diagnostic byte (at 80C00000h read only) has several functions. When reading the byte, the value returned is as follows:

| | |
|---|---|
| bit 0 | parity status of byte 0 (0 is error) |
| bit 1 | parity status of byte 1 (0 is error) |
| bit 2 | parity status of byte 2 (0 is error) |
| bit 3 | parity status of byte 3 (0 is error) |
| bit 4 | 512k jumper status (0 is active) |
| bit 5 | 640k jumper status (0 is active) |
| bit 6 | 1M jumper status (0 is active) |
| bit 7 | 2 or 8 Mbyte option board (0 is installed) |

The control byte (at 80C00000h write only) is shown below.

| | |
|---|---|
| bit 0 | ROM replacement (0 replaces) |
| bit 1 | ROM space write protect (0 protects) |
| bit 2 | reserved (write a 1) |
| bit 3 | reserved (write a 1) |
| bit 4 | reserved (write a 1) |
| bit 5 | reserved (write a 1) |
| bit 6 | reserved (write a 1) |
| bit 7 | reserved (write a 1) |

The control byte is also used to clear the diagnostic byte parity status. When writing this byte (with any value) the parity status bits will be reset to ones.

The 128 kbytes from 0FE0000h to 0FFFFFFh is used to simulate a system ROM. In the original 286 products, this space was occupied (double mapped) by the system ROMs. For the D4 machines, this space is occupied by RAM on this board. To provide compatibility with previous products, the system ROM should be copied to this space. To allow faster execution of ROM resident software, this board provides the ROM "replacement" function. When replacement is enabled, the RAM board decodes address range 00E0000h to 00FFFFFh and puts the 128k of RAM here, replacing the system ROM. After POWERUP, the ROM replacement function is disabled.

Because normal system ROMs could not be written, a write protect function is being included in the RAM board for the two address spaces mentioned above. When replacement is not enabled, only 0FE0000h to 0FFFFFFh is protected (the normal rom space still contains the unwritable ROM). When replacement is active, both spaces can be protected. After POWERUP, the write protect funtion is disabled.

The diagnostic byte parity status should only be read with the system board IOCHK disabled because reading the port may cause a parity error. As a result of this, the status will only be accurate the first time it is read after a parity clear operation. Before doing a memory test, the control byte should be written to clear the parity status, and after reading the diagnostic byte, the status should be cleared again.

In normal operation, if a parity error occurs, the PARIT* line from the memory card is set active which in turn sets the IOCHK* line to the system active. The IOCHK* line (error) from the memory card is automatically cleared by the first write to memory covered by the board (normally the stack push from the NMI). The parity status is still available until the diagnostic byte is read, so the byte (and board if it is the memory board) in error can be determined.

## JUMPER SETTINGS

E123 jumpers

| | | | |
|---|---|---|---|
| 1=2 3 4=5 6 7=8 9 | 256K | base | 000000-03FFFFh |
| | 0K | extended | |
| 1 2=3 4=5 6 7=8 9 | 512K | base | 000000-07FFFFh |
| | 0K | extended | |
| 1 2=3 4 5=6 7=8 9 | 640K | base | 000000-9FFFFFh |
| | 0K | extended | |
| 1=2 3 4=5 6 7 8=9 | 256K | base | 000000-03FFFFh |
| | 1024K | extended | 100000-1FFFFFh |
| 1 2=3 4=5 6 7 8=9 | 512K | base | 000000-07FFFFh |
| | 1024K | extended | 100000-1FFFFFh |
| 1 2=3 4 5=6 7 8=9 | 640K | base | 000000-9FFFFFh |
| | 1024K | extended | 100000-1FFFFFh |

The following jumper settings are to be avoided at all cost:

| | |
|---|---|
| 1 2 3=4 5 6 7 8 9 | destroy power supply |
| 1 2 3 4 5 6=7 8 9 | destroy power supply |

## OPTION BOARD PRESENT BITS

| 8M | 2M | | | |
|---|---|---|---|---|
| H | H | 0K | | |
| H | L | 2048K | 200000-3FFFFFh | |
| L | H | 6144K | 400000-9FFFFFh | (NOTE: The 8 Meg board asserts |
| L | L | 8192K | 200000-9FFFFFh | both 8M and 2M strobes) |

DETAIL CYCLE DESCRIPTION

INITIAL READ CYCLES FROM IDLE. All CPU memory cycles start with the processor presenting an address, status, and address strobe (ADS*). The memory system decides whether to respond to these in the D4-RM32 PAL. This device decodes the address and jumpers and asserts the M32* line active. The system board uses this line to disable itself and the memory board control PAL (D4-RCTL) uses the line (in combination with the status and ADS*) to start a cycle.

In the initial cycle case, the control state machine begins by switching the DRAM address multipexor to the ROW address via the signal SWMUX*. One CLK32 cycle later, the Master Row Address Strobe (MRAS*) is asserted. MRAS* is combined with a decoded bank select signal (RSx*) to form the complete RASx* strobe for the memories.

The bank select signal is decoded in a PAL (D4-RRAS) from a set of latched row addresses. The row address latches are of the "fall through" type, they are open to address changes when MRAS* is inactive (high). The main purpose of the latches is to provide a memory of the last row address for development of the hit/miss signal but they also buffer the processor address for the bank decode PALs to prevent overloading of the CPU.

Once RASx* is active, the SWMUX* signal changes back to the column address (one CLK32 cycle later to satisfy row address hold times). At the same time, the NAM* signal (next address) is set active to tell the CPU that it may put the next address onto the bus (two CLK32 cycles later).

After one CLK32 cycle, the column address latch is closed to prevent the column address from changing during the CAS* cycle. Also the MRD* signal is set active to enable the data buffer to the CPU. After an additional clock cycle, the master Column Address Strobe (MCAS*) is set active, enabling DRAM output buffers. At the same time, the processor ready signal is set active (MRDY*) (and the NAM* is set inactive) signalling the presence of data and the end of the cycle to the CPU. Also at the same time, the processor begins to put the next address and status on the bus (if it is ready to).

Two clock cycles later, the memory cycle ends by bringing the MCAS*, MRD*, and MRDY* inactive, and CLAT signal active. During the two cycles, the data from the DRAMS propagates through the data buffers and parity logic and is set up to the CPU. The parity status is checked at the end of this period by the rising edge of MRD*.

The total time from CPU address strobe to the end of MRDY* is eight CLK32 cycles, or four processor states. Since the CPU can execute a memory access in two states, we have inserted two wait states.

INITIAL READ FROM SYSTEM BOARD. The only difference from the initial read from idle is that the memory cycle must wait to begin until the system board is finished with it's cycle. This is determined by ADS* going high. The cycle starts as before with SWM* going active, but MRAS* does not go active until ADS* is sensed inactive. Since the system board can respond to wait states on the system bus, this period of time could be rather long. Once MRAS* goes active, the cycle completes as before.

READ HIT CYCLE. The hit cycles begin during the previous memory cycle (of any CPU type). The M32* signal is active as before and the new row address must be the same as the last row address held in the row latches. The equality is determined by the signal HIT* being active. The ADS*, M32*, status, and HIT* are sampled at the same edge of CLK32 that terminates the previous cycle. If all is well (READ HIT), the MRAS* signal will continue active. Since the MRAS* signal and the particular RASx* signal is still active, the DRAM has already decoded the row address and internally fetched it to the column selector. All that is necessary is to wait till the column address has changed and settled and the CAS* precharge time has elapsed before another read can occur.

Since the CPU must remain in pipelined state, the NAM* signal is set active again at the beginning of the READ HIT cycle.

The column latch is closed again (CLAT goes inactive) one CLK32 cycle after the beginning of the cycle to prevent the column address from changing during the CAS* cycle. Also the MRD* signal is set active to enable the data buffer to the CPU. After an additional clock cycle, the master Column Address Strobe (MCAS*) is set active, enabling DRAM output buffers. At the same time, the processor ready signal is set active (MRDY*) (and the NAM* is set inactive) signalling the presence of data and the end of the cycle to the CPU. Also at the same time, the processor begins to put the next address and status on the bus (if it is ready to).

Two clock cycles later, the memory cycle ends by bringing the MCAS*, MRD*, and MRDY* inactive, and CLAT signal active. During the two cycles, the data from the DRAMS propagates through the data buffers and parity logic and is set up to the CPU. The parity status is checked at the end of this period by the rising edge of MRD*.

The total time from the end of the previous CPU memory cycle to the end of MRDY* is four CLK32 cycles, or two processor states. Since the CPU can execute a memory access in two states, we have inserted zero wait states.

READ MISS CYCLES. The miss cycles begin during the previous memory cycle (of any CPU type). The M32* signal is active as before and the new row address are different than the last row address held in the row latches. The inequality is determined by the signal HIT* being inactive. The ADS*, M32*, status, and HIT* are sampled at the same edge of CLK32 that terminates the previous cycle. If all is not well (READ MISS), the MRAS* signal will be set inactive.

Once MRAS* is set inactive, the RAS* precharge time must be met. To do this, the control state machine waits two CLK32 cycles and then begins by switching the DRAM address multipexor to the ROW address via the signal SWMUX*. One CLK32 cycle later, the Master Row Address Strobe (MRAS*) is asserted.

Once MRAS* is active, the SWMUX* signal changes back to the column address (one CLK32 cycle later to satisfy row address hold times). At the same time, the NAM* signal (next address) is set active to tell the CPU that it may put the next address onto the bus (two CLK32 cycles later).

After one CLK32 cycle, the column address latch is closed to prevent the column address from changing during the CAS* cycle. Also the MRD* signal is set active to enable the data buffer to the CPU. After an additional clock cycle, the master Column Address Strobe (MCAS*) is set active, enabling DRAM output buffers. At the same time, the processor ready signal is set active (MRDY*) (and the NAM* is set inactive) signalling the presence of data and the end of the cycle to the CPU. Also at the same time, the processor begins to put the next address and status on the bus (if it is ready to).

Two clock cycles later, the memory cycle ends by bringing the MCAS*, MRD*, and MRDY* inactive, and CLAT signal active. During the two cycles, the data from the DRAMS propagates through the data buffers and parity logic and is set up to the CPU. The parity status is checked at the end of this period by the rising edge of MRD*.

The total time from the end of the previous CPU memory cycle to the end of MRDY* is eight CLK32 cycles, or four processor states. Since the CPU can execute a memory access in two states, we have inserted two wait states.

WRITE CYCLES. The four types of write cycles are very similar to the read cycles discussed above. The difference is in two places. Instead of MRD* being set active, the MWE* signal is set. The MCAS* is enabled one clock cycle later to allow an adequate data setup time to the DRAM ICs and only lasts for one CLK32 cycle.

REFRESH. The three types of non CPU cycles are signaled by the MHLDA signal. When this signal goes active, the meaning of the status lines from the system board is changed. As a result, the memory board operates differently.

The status line which controls the actual memory cycle is (M-IO). Since this line is completely asynchronous to the CLK32 clock, synchronization is necessary to prevent metastable states and glitches which would destroy the contents of the DRAM. The M-IO line is fed through a 74F74 flip flop which is clocked by CLK32 before being sent to the D4-RCTL PAL state machine as the signal DMIO.

Refresh is determined by the state of the D-C line (refresh when low). When the state machine senses D-C low and DMIO active, MRAS* is set active. Because the address multiplexor was not switched to the row address, the column address lines are fed to the DRAM. The reason for this is that the column lines are the low order address lines from the system board, and they contain the refresh row address.

One CLK32 cycle later the SWM* signal is set active. This changes the DRAM address, but has no effect on the refresh cycle. The SWM* (and CLAT) signals are being used only as state lines to count time in the state machine.

One CLK32 cycle later the CLAT signal is set inactive and one more clock later the SWM* is set inactive. After one more clock, the MRAS* signal is set inactive giving a total time of four clocks for MRAS* active. The CLAT signal remains low until DMIO is inactive to prevent the MRAS* cycle from restarting.

DMA READ CYCLE. The DMA read cycle begins when HLDA goes active and D-C remains high. The SWM* is set active to get the row address to the DRAM and the state machine then waits for the DMIO, M32*, and W-R lines to go active signaling a DMA cycle. When this occurs, the MRAS* goes active to strobe in the row addresses. One clock later, SWM* goes inactive to set up the column addresses to the DRAM. After one more clock, MCAS* goes active and the data begins to come out of the DRAM.

On the next clock, the CLAT signal goes inactive and on the next clock MRAS* goes inactive. This leaves MRAS* active for four CLK32 cycles. The CLAT signal will remain inactive (low) and the MCAS* will remain active until DMIO goes inactive. Holding MRD* and MCAS* active insures that the data will remain until the DMA device needs it.

DMA WRITE CYCLE. The DMA write cycle begins when HLDA goes active and D-C remains high. The SWM* is set active to get the row address to the DRAM and the state machine then waits for the DMIO, M32*, and W-R lines to go active signaling a DMA cycle. When this occurs, the MRAS* goes active to strobe in the row addresses. One clock later, SWM* goes inactive to set up the column addresses to the DRAM. After one more clock, MCAS* goes active and the data is written to the DRAM.

On the next clock, the CLAT signal goes inactive and on the next clock MRAS* goes inactive. This leaves MRAS* active for four CLK32 cycles. On the following clock, the MCAS* signal goes inactive to terminate the write cycle. The CLAT signal will remain inactive (low) until after DMIO goes inactive to prevent the cycle from repeating.

ALL DMA CYCLES. On all of the above DMA cycles, SWM* will go active whenever the HOLDA and D-C lines are high. To prevent interference with the CPU cycles at the end of the hold state, the NAM* line is used as a state memory of the hold state. NAM* goes active one clock cycle after SWM* goes active (during HOLDA) and remains active until HOLDA goes inactive. The CPU portion of the state machine will do nothing unusual until both NAM* and SWM* go inactive.

TIMING ANALYSIS FOR PAGE DRAM BOARD

M32* setup to CLK32 for cycle start.

| | |
|---|---|
| 2 x CLK32 | 62.5 |
| CPU address delay | - 40.0 |
| D4-RM32 PAL delay | - 12.0 |
| D4-RCTL PAL setup | - 12.0 |
| MARGIN ********** | - 1.5 |

HIT* setup to CLK32 for cycle start.

| | |
|---|---|
| 2 x CLK32 | 62.5 |
| CPU address delay | - 40.0 |
| F521 delay | - 11.0 |
| F32 delay | - 6.6 |
| D4-RCTL PAL setup | - 12.0 |
| MARGIN ********** | - 7.1 |

NAM* output setup to CLK32 on system board.

| | |
|---|---|
| CLK32 | 31.2 |
| D4-RCTL PAL delay | - 10.0 |
| F32 delay (sys board) | - 6.6 |
| CPU setup (sys board) | - 10.0 |
| MARGIN ********** | 4.6 |

```
Read data access from RAS*
        5 x CLK32                               156.2
        MRAS* delay D4-RCTL                   - 10.0
        F32 + 33 res delay (200pF load)       - 12.0
        DRAM delay from RAS                   -100.0
        data delay through F657               -  8.0
        data setup to 386                     - 10.0
        MARGIN   **********                   + 16.2

Read data access from CAS*
        2 x CLK32                                62.5
        MCAS* delay D4-RCTL                   - 10.0
        F32 + 33 res delay (200pF load)       - 12.0
        DRAM delay from CAS                   - 25.0
        data delay through F657               -  8.0
        data setup to 386                     - 10.0
        MARGIN   **********                   -  2.5

Read data access from Column address
        4 x CLK32                               125.0
        CLAT delay D4-RCTL                    - 10.0
        F573 delay                            - 13.0
        F158 delay                            -  7.0
        BUF + 33 res delay (300pF load)       - 25.0
        DRAM delay from col add               - 45.0
        data delay through F657               -  8.0
        data setup to 386                     - 10.0
        MARGIN   **********                   +  7.0

Parity check access from CAS*
        2 x CLK32                                62.5
        F32 + 33 res delay (200pF load)       - 12.0
        DRAM delay from CAS                   - 25.0
        err delay through F657                - 22.5
        F00 delay                             -  6.6
        F175 setup                            -  3.0
        F32 delay MIN                         +  3.0
        MARGIN   **********                   -  3.6

Row address setup to RAS*
        1 x CLK32                                31.2
        F158 delay                            -  9.5
        BUF + 33 res delay (300pF load)       - 25.0
        F32 + 33 res delay (200pF load)       +  5.0
        MARGIN   **********                      1.7

Column address setup to CAS*
        2 x CLK32                                62.5
        F573 delay                            - 13.0
        F158 delay                            -  7.0
        BUF + 33 res delay (300pF load)       - 25.0
        F32 + 33 res delay (200pF load)       +  5.0
        MARGIN   **********                     22.5
```

Write data setup to CAS*

| | | |
|---|---|---|
| 3 x CLK32 | | 93.7 |
| MCAS* delay D4-RCTL | + | 4.0 |
| F32 + 33 res delay (200pF load) | + | 5.0 |
| CPU data delay | - | 50.0 |
| parity delay in F657 | - | 16.0 |
| MARGIN ********** | | 36.7 |

DMA Read data delay (external bus master).

| | | |
|---|---|---|
| 286 product access from MRDC* | | 200 |
| MRDC* to M-IO delay | - | 15 |
| data delay in 1s245 max | - | 18 |
| 4 x CLK32 | - | 125 |
| MCAS* delay D4-RCTL | - | 10.0 |
| F32 + 33 res delay (200pF load) | - | 12.0 |
| DRAM delay from CAS | - | 25.0 |
| data delay through F657 | - | 8.0 |
| MARGIN ********** | - | 13.0 |

DMA write data setup to CAS*

| | | |
|---|---|---|
| 4 x CLK32 | | 125 |
| parity delay in F657 | - | 16.0 |
| System board data setup | - | 61.0 |
| MARGIN ********** | | 48.0 |

APPENDIX N

KSUBS SOURCE CODE

```
;*****************************************************************************
;
;  Name:          KSUBS - Keyboard I/O ROM Support
;
;  Group:         ROM
;
;  Revision:      A
;
;  Date:          May 25, 1986
;
;  Author:        Lance Pontiff
;
;*****************************************************************************
;
;  CHANGES:
;
;    DATE      REVISION                  DESCRIPTION
;  --------    --------    ------------------------------------------------
;  05/25/86    Original     New module for 386 ROM.
;
;*****************************************************************************
;
;  FUNCTIONAL DESCRIPTION:
;
;       This module contains keyboard support routines.
;
;-----------------------------------------------------------------------------

        .286P
        page
;
;  Publics
;
        public  get_key
        public  chk_key
        public  read_status
        public  old_key
        public  new_key
        public  new_status
        public  set_typematic
        public  put_key
        public  set_cpu
        public  read_cpu
        public  read_kbd

;
;  Externals
;
        extrn   getbyte:near            ;
        extrn   chkbuf:near             ;       check key buffer static
        extrn   chkLED:near             ;       update kbd LEDs if necessary
        extrn   ts_kbd:near             ;       kbd use semaphore
        extrn   kbdrdy:near             ;       wait til 8042 is ready

        extrn   ram400:word             ;       ram segment
        extrn   keybit1:byte            ;       keyboard bit status
        extrn   keybit2:byte            ;       other keyboard ststus bits
        extrn   enhbits:byte            ;       enhanced kbd status bits
        extrn   keybfbeg:word           ;       actual start of keyboard buffer
        extrn   keybfend:word           ;       actual end of buffer
        extrn   keybftop:word           ;       holds addr of keyboard buffer
        extrn   keybfbot:word           ;       addr of end of keyboard buffer
```

```
        extrn   keytail:word            ;       holds keyboard buffer tail
        extrn   kbd_led:byte            ;       kbd LEDs ram indicator

        include key_def.equ
        include flag_def.equ
        include pop_f.mac
        include cnt_def.equ

;
; Local Equates
;
SET_SPEED       equ     0f0h            ;       set CPU speed
READ_SPEED      equ     0f1h            ;       read current CPU speed
GET_TYPE        equ     0f2h            ;       determine keyboard type

KBD_11          equ     0               ;       11 bit keyboard in use
KBD_9           equ     1               ;       9 bit keyboard in use

ROM     segment byte    public  'ROM'
        assume  cs:ROM, ds:seg ram400

        page
;*****************************************************************************
;       Read character from keyboard
;-----------------------------------------------------------------------------
get_key proc    near
        call    chkLED                  ;       update LEDs if necessary
getkey:
        cli                             ;;;     mask interrupts
        call    chkbuf                  ;;; Q:  key available?
        sti                             ;;;     enable interrupts
        jnz     gotkey                  ;    Y: ax = key, si=si+2
        mov     ax,9002h                ;    N: Perform keyboard Device Wait
        clc                             ;       default = ROM timeout
        int     15h                     ;
wait_key:
        cli                             ;;;     disable interrupts
        call    chkbuf                  ;;; Q:  key available?
        sti                             ;;;     enable interrupts
        nop                             ;;;     allow interrupts to occur
        jz      wait_key                ;    N: wait for a key
                                        ;    Y: place key in queue
;*****************************************************************************
;       Following code performs keyboard queue wrapping
;-----------------------------------------------------------------------------
gotkey:
        cmp     si,[keybfbot]           ;;;     do we need to loop around?
        jne     savehead                ;;; N:  leave alone
        mov     si,[keybftop]           ;;; Y:  set to top of buffer
savehead:
        mov     [keyhead],si            ;;;     save new head pointer
        sti                             ;       allow interrupts
        ret                             ;       *** RETURN ***
get_key endp


        page
;*****************************************************************************
;       Check status of buffer
;-----------------------------------------------------------------------------
chk_key proc    near
        call    chkLED                  ;       update kbd LEDs if necessary
        cli                             ;       mask interrupts
        call    chkbuf                  ;;;     check buffer status
        sti                             ;;;
```

```
        ret                                 ;       *** RETURN ***
chk_key endp



;*******************************************************************************
;       Return shift status in al register
;-------------------------------------------------------------------------------
read_status     proc    near
        mov     al,[keybit1]                ;       get shift status byte
        ret                                 ;       *** RETURN ***
read_status     endp

        page


;
;       Return with ZF=0 if the key in ax can be converted to an older
;       compatible key scan/ascii pair with the converted key in ax.
;       Return with ZF=1 otherwise.
;
;       Algorithm is as follows:
;
;       1. If ah = 00h then return ax unmodified
;       2. If ax = e00d then ax = 1c0d
;       3. If ax = e02f then ax = 352f
;       4. If ah > 84h then cannot convert key
;       5. If al = f0h then cannot convert key
;       6. If al = e0h then al = 0
;
old_key proc    near
        cmp     ah,0                        ;   Q:  ALT <num> <num> <num> key?
        je      oldret                      ;    Y:
        cmp     ax,0e00dh                   ;   Q:  new Enter key?
        jne     not_enter                   ;    N:
        mov     ax,1c0dh                    ;    Y: convert key
        jmp     short oldret                ;
not_enter:
        cmp     ax,0e02fh                   ;   Q:  new Keypad / key?
        jne     not_slash                   ;    N:
        mov     ax,352fh                    ;    Y: convert key
        jmp     short oldret                ;
not_slash:
        cmp     ah,84h                      ;   Q:  new extened code?
        ja      no_key                      ;    Y: cannot convert key
        cmp     al,0f0h                     ;   Q:  new extended code?
        je      no_key                      ;    Y: cannot convert key
        cmp     al,0e0h                     ;   Q:  redundant keypad key?
        jne     oldret                      ;    N:
        mov     al,0                        ;    Y: convert to old code
oldret:
        mov     si,-1                       ;       make ZF=0
        jmp     short ret_old               ;
no_key:
        xor     si,si                       ;       make ZF=1
ret_old:
        test    si,si                       ;       set/reset ZF
        ret                                 ;       *** RETURN ***
old_key endp

        page

;
;       If the ASCII code is f0h, replace it with 0.
```

```
;
new_key proc    near
        cmp     ah,0                    ;   Q:  ALT <num> <num> <num> key?
        je      not_filler              ;    Y:
        cmp     al,0f0h                 ;   Q:  new ALT extended code?
        jne     not_filler              ;    N:
        mov     al,0                    ;    Y: replace f0h with 0!
not_filler:
        ret                             ;       *** RETURN ***
new_key endp



;
;       Return the new status information associated with the enhanced
;       keyboard.
;
new_status      proc    near
        mov     al,keybit2              ;       get left ALT and CTRL status
        and     al,3                    ;       mask off other stuff
        mov     ah,enhbits              ;       get right ALT and CTRL status
        and     ah,0ch                  ;       mask off other stuff
        or      ah,al                   ;       ah = left and right ALT and CTRL
        mov     al,keybit1              ;       get old shift status byte
        ret                             ;       *** RETURN ***
new_status      endp


        page
;
;       Set keyboard typematic rate/delay.  Send keyboard command F3
;       followed by the rate/delay byte.
;
set_typematic   proc    near
        cmp     al,5                    ;   Q:  al is 5? (mandatory!)
        jne     bad_type                ;    N: don't do function
        cmp     bh,3                    ;   Q:  legal delay value?
        ja      bad_type                ;    N:
        cmp     bl,31                   ;   Q:  legal rate value?
        ja      bad_type                ;    N:
        push    cx                      ;    Y: protect cx
kbd_wait:
        call    ts_kbd                  ;   Q:  kbd command in progress?
        jnz     kbd_wait                ;    Y: wait til finished
        and     kbd_led,not RCVD_ACK    ;    N: reset ack received
        call    kbdrdy                  ;       wait til 8042 is ready
        mov     al,0f3h                 ;       get set typematic kbd command
        out     60h,al                  ;
        mov     cx,-1                   ;       timeout value
getack1:
        test    kbd_led,RCVD_ACK        ;   Q:  received ACK?
        jnz     gotack1                 ;    Y:
        loop    getack1                 ;    N: keep waiting
        call    kbdrdy                  ;       *** TIMEOUT ***
        mov     al,0f4h                 ;       get kbd enable command
        out     60h,al                  ;       send it to kbd
        jmp     short reset_ip          ;
gotack1:
        and     kbd_led,not RCVD_ACK    ;       reset received ACK flag
        call    kbdrdy                  ;       make sure kbd ready
        mov     al,bh                   ;       get delay value
        shl     al,5                    ;       shift to bits 6 and 5
        or      al,bl                   ;       mask in rate value
        out     60h,al                  ;       send rate/delay value
        mov     cx,-1                   ;       get timeout value
getack2:
```

```
        test     kbd_led,RCVD_ACK          ;   Q:  received ACK?
        jnz      reset_ip                  ;    Y:
        loop     getack2                   ;    N: keep waiting
        call     kbdrdy                    ;       *** TIMEOUT ***
        mov      al,0f4h                   ;       get kbd enable command
        out      60h,al                    ;       send it to kbd
reset_ip:
        and      kbd_led,not KCMD_IP       ;       reset kbd command in progress
        pop      cx                        ;       restore cx
bad_type:
        ret                                ;       *** RETURN ***
set_typematic   endp


        page
;
;       Place the scan code/character specified in register CH and CL,
;       respectively, into the keyboard buffer.  If successful, return
;       with AL = 0 and CF = 0.  If the buffer is full, return with
;       Al = 1 and CF = 1.
;
put_key proc    near
        cli                                ;;;     disable interrupts
        mov     si,keytail                 ;;;     get next available slot
        mov     [si],cx                    ;;;     place pair in kbd buffer
        inc     si                         ;;;     get next available slot
        inc     si                         ;;;
        cmp     si,keybfbot                ;;; Q:  need to wrap around?
        jne     savetail                   ;;;  N: save new tail
        mov     si,keybftop                ;;;  Y: get new tail
savetail:
        cmp     si,keyhead                 ;;; Q:  buffer was full?
        je      kbdfull                    ;;;  Y: don't update tail
        mov     keytail,si                 ;;;  N: set new tail
        xor     al,al                      ;;;     note success
        clc                                ;;;
        jmp     short put_end              ;;;
kbdfull:
        mov     al,1                       ;;;     note failure
        stc                                ;;;
put_end:
        sti                                ;;;     enable interrupts
        ret                                ;       *** RETURN ***
put_key endp


        page
;*************************************************************************
;       Set the CPU speed according to the value in al
;-------------------------------------------------------------------------
set_cpu proc    near
        push    ax                         ;       protect ax
        cmp     al,AUTO_                   ;   Q:  set AUTO speed?
        je      set_auto                   ;    Y:
        cmp     al,COUNT_                  ;   Q:  set COUNT speed?
        je      set_count                  ;    Y:
        test    al,al                      ;   Q:  set to common speed?
        jne     chk_fast                   ;    N:
        in      al,SPEEDIO                 ;    Y: get speed info
        and     al,not S_BIT               ;       reset the S bit
        and     al,not CNTMSK              ;       clear COUNT field
        or      al,COMM_SP                 ;       set COUNT to COMMON
        out     SPEEDIO,al                 ;
        mov     ah,COMM_SP                 ;       get COMMON speed count
        jmp     short setout               ;
chk_fast:
```

```
        dec     al                      ;  Q:  set to FAST speed?
        jne     chk_high                ;   N:
        in      al,SPEEDIO              ;   Y: get speed info
        and     al,not S_BIT            ;      reset the S bit
        and     al,not CNTMSK           ;      clear COUNT field
        or      al,FAST_SP              ;      set COUNT to FAST
        out     SPEEDIO,al              ;
        mov     ah,FAST_SP              ;      get FAST speed count
        jmp     short setout            ;
chk_high:
        dec     al                      ;  Q:  set to HIGH speed?
        jne     chk_toggle              ;   N:
        in      al,SPEEDIO              ;   Y: get speed info
        and     al,not A_BIT            ;      reset the A bit
        or      al,S_BIT                ;      set the S bit
        out     SPEEDIO,al              ;
        mov     ah,HIGH_SP              ;      get HIGH speed count
        jmp     short setout            ;
chk_toggle:
        dec     al                      ;  Q:  toggle CPU speed?
        jne     setret                  ;   N:
        in      al,SPEEDIO              ;   Y: get speed info
        mov     ah,0                    ;      assume HIGH speed needed
        test    al,S_BIT                ;  Q:  already in HIGH speed?
        jz      xor_S                   ;   N: set to HIGH speed
        mov     ah,al                   ;   Y: get COUNT value
        and     ah,CNTMSK               ;   Y: mask off A and S bits
xor_S:
        xor     al,S_BIT                ;      toggle the S bit
        out     SPEEDIO,al              ;
        jmp     short setout            ;
set_auto:
        in      al,SPEEDIO              ;      get speed info
        and     al,not A_BIT            ;      reset the A bit
        or      al,(A_BIT+S_BIT)        ;      set the A and S bits
        out     SPEEDIO,al              ;
        mov     ah,HIGH_SP              ;      get HIGH speed count
        jmp     short setout            ;
set_count:
        cmp     cx,1                    ;  Q:  cx < 1?
        jb      setret                  ;   Y: bad COUNT, don't use
        cmp     cx,50                   ;  Q:  cx > 50?
        ja      setret                  ;   Y: bad count, don't use
        mov     ax,50                   ;      COUNT = 50 - cx + 2
        sub     ax,cx                   ;
        inc     ax                      ;
        inc     ax                      ;
        mov     ah,al                   ;      ah = COUNT
        in      al,SPEEDIO              ;      get speed info
        and     al,not S_BIT            ;      reset the S bit
        and     al,not CNTMSK           ;      clear COUNT field
        or      al,ah                   ;      set COUNT to COMMON
        out     SPEEDIO,al              ;
        jmp     short setout            ;
setout:
        mov     al,92h                  ;      set timer 2 command
        cli                             ;;;    disable interrupts
        out     FCNT_MODE,al            ;;;
        jmp     $+2                     ;;;
        jmp     $+2                     ;;;
        jmp     $+2                     ;;;
        cmp     ah,HIGH_SP              ;;; Q: set to HIGH speed?
        je      no_cnt                  ;;;  Y: don't set timer 2
        mov     al,ah                   ;;;  N: get counter value
        out     FCNT_2,al               ;;;    set counter value
no_cnt:
```

```
setret:
        pop     ax                      ;       restore ax
        ret                             ;       *** RETURN ***
set_cpu endp

        page

;*******************************************************************************
;       Read the current CPU speed
;-------------------------------------------------------------------------------
read_cpu        proc    near
        in      al,SPEEDIO              ;
        test    al,S_BIT                ;   Q:  HIGH speed?
        jnz     S_set                   ;    Y:
        mov     ah,COMMON_              ;    N: assume COMMON speed
        and     al,not (A_BIT+S_BIT)    ;       mask off A and S bits
        cmp     al,COMM_SP              ;   Q:  COMMON speed?
        je      retcpu                  ;    Y:
        mov     ah,FAST_                ;    N: assume FAST speed
        cmp     al,FAST_SP              ;   Q:  FAST speed?
        je      retcpu                  ;    Y:
        xor     ah,ah                   ;       ax = COUNT
        mov     cx,50                   ;       cx = 50 - COUNT + 2
        sub     cx,ax                   ;
        inc     cx                      ;
        inc     cx                      ;
        mov     ah,COUNT_               ;       return COUNT speed
        jmp     short retcpu            ;
S_set:
        mov     ah,AUTO_                ;       assume AUTO speed
        test    al,A_BIT                ;   Q:  is it AUTO speed?
        jnz     retcpu                  ;    Y:
        mov     ah,HIGH_                ;    N: must be HIGH speed
retcpu:
        mov     al,ah                   ;       return info in al
        xor     ah,ah                   ;       return info in ax
        ret                             ;       *** RETURN ***
read_cpu        endp

        page

;*******************************************************************************
;       Determine the attached keyboard
;-------------------------------------------------------------------------------
read_kbd        proc    near
        call    getbyte                 ;       read COMPAQ special 8042 byte
        mov     ah,-1                   ;   Q:  8042 timeout?
        jz      kbdout                  ;    Y: return -1
        mov     ah,KBD_11               ;    N: assume 11 bit keyboard
        test    al,KBD_TYPE             ;   Q:  11 bit keyboard indeed?
        jz      kbdout                  ;    Y:
        mov     ah,KBD_9                ;    N: return 9 bit keyboard
kbdout:
        mov     al,ah                   ;       al = keyboard type
        xor     ah,ah                   ;       ax = keyboard type
        ret                             ;       *** RETURN ***
read_kbd        endp

ROM     ends
        end
```

```
Microsoft (R) Macro Assembler  Version 4.00                8/7/86 10:26:25
KSUBS   Copyright (c) 1982,83,84,85,86 COMPAQ Computer Corp.  Page     1-1

                page    58,132
                title   KSUBS   Copyright (c) 1982,83,84,85,86 COMPAQ Computer Corp.
        ;*****************************************************************************
        ;
        ;  Name:          KSUBS - Keyboard I/O ROM Support
        ;
        ;  Group:         ROM
        ;
        ;  Revision:      A
        ;
        ;  Date:          May 25, 1986
        ;
        ;  Author:        Lance Pontiff
        ;
        ;*****************************************************************************
        ;
        ;  CHANGES:
        ;
        ;    DATE      REVISION                  DESCRIPTION
        ;  --------    --------    -------------------------------------------------
        ;  05/25/86    Original    New module for 386 ROM.
        ;
        ;*****************************************************************************
        ;
        ;  FUNCTIONAL DESCRIPTION:
        ;
        ;      This module contains keyboard support routines.
        ;
        ;-----------------------------------------------------------------------------

                .286P
```

```
Microsoft (R) Macro Assembler  Version 4.00              8/7/86 10:26:25

KSUBS   Copyright (c) 1982,83,84,85,86 COMPAQ Computer Corp.  Page     1-2

                                   page
                          ;
                          ;  Publics
                          ;
                                   public  get_key
                                   public  chk_key
                                   public  read_status
                                   public  old_key
                                   public  new_key
                                   public  new_status
                                   public  set_typematic
                                   public  put_key
                                   public  set_cpu
                                   public  read_cpu
                                   public  read_kbd

                          ;
                          ;  Externals
                          ;
                                   extrn   getbyte:near       ;
                                   extrn   chkbuf:near        ;       check key buffer static
                                   extrn   chkLED:near        ;       update kbd LEDs if necessary
                                   extrn   ts_kbd:near        ;       kbd use semaphore
                                   extrn   kbdrdy:near        ;       wait til 8042 is ready

                                   extrn   ram400:word        ;       ram segment
                                   extrn   keybit1:byte       ;       keyboard bit status
                                   extrn   keybit2:byte       ;       other keyboard ststus bits
                                   extrn   enhbits:byte       ;       enhanced kbd status bits
                                   extrn   keybfbeg:word      ;       actual start of keyboard buffer
                                   extrn   keybfend:word      ;       actual end of buffer.
                                   extrn   keybftop:word      ;       holds addr of keyboard buffer
                                   extrn   keybfbot:word      ;       addr of end of keyboard buffer
                                   extrn   keyhead:word       ;       holds keyboard buffer head
                                   extrn   keytail:word       ;       holds keyboard buffer tail
                                   extrn   kbd_led:byte       ;       kbd LEDs ram indicator

                       C           include key_def.equ
                       C  ;
                       C  ;        Equates for 8042 keyboard controller.
                       C  ;
 = 0064                C  KEY_STATUS     =       64H        ; 8042 status registers (read-only).
 = 0060                C  KEY_OUT_BUFF   =       60H        ; 8042 output buffer (read-only).
 = 0060                C  KEY_IN_BUFF    =       60H        ; 8042 input buffer (write-only).
 = 0064                C  KEY_CMD        =       64H        ; 8042 command register.
                       C  ;
                       C  ;        Equates for KEY_CMD
                       C  ;
 = 0020                C  KCMD_RD        =       20H        ; Read 8042 command byte.
 = 0060                C  KCMD_WT        =       60H        ; Next byte is a command.
 = 00AA                C  KCMD_SELF_TEST =       0AAH       ; Keyboard self test command.
 = 00AB                C  KCMD_INTF_TEST =       0ABH       ; Keyboard interface test.
 = 00AC                C  KCMD_DIAG_DUMP =       0ACH       ; Keyboard diagnostic dump.
 = 00AD                C  KCMD_DISABLE   =       0ADH       ; Disable keyboard command.
```

```
Microsoft (R) Macro Assembler  Version 4.00              8/7/86 10:26:25
KSUBS   Copyright (c) 1982,83,84,85,86 COMPAQ Computer Corp.  Page     1-3

 = 00AE                 C  KCMD_ENABLE     =      0AEH          ; Enable keyboard command.
 = 00C0                 C  KCMD_RD_INPUT   =      0C0H          ; Read keyboard input port.
 = 00D0                 C  KCMD_RD_OUTPUT  =      0D0H          ; Read keyboard output port.
 = 00D1                 C  KCMD_WT_OUTPUT  =      0D1H          ; Write keyboard output port.
 = 00E0                 C  KCMD_RD_TINPUTS =      0E0H          ; Read keyboard T inputs.
 = 00F0                 C  KCMD_PULSE_OUT  =      0F0H          ; Pulse output port.
                        C  ;
                        C  ;        Keyboard Commands
                        C  ;
 = 00FF                 C  KCMD_RESET      =      0FFh          ; Reset keyboard.
 = 00FE                 C  KCMD_RESEND     =      0FEH          ; Resend transmission.
 = 00FD                 C  KCMD_NOP        =      0FDH          ; NOP.
 = 00F6                 C  KCMD_DEFAULT    =      0F6H          ; Set default values.
 = 00F5                 C  KCMD_DIS_KBD    =      0F5H          ; Disable keyboard.
 = 00F4                 C  KCMD_ENA_KBD    =      0F4H          ; Enable keyboard.
 = 00F3                 C  KCMD_SETTYPE    =      0F3H          ; Set typematic rate.
 = 00EE                 C  KCMD_ECHO       =      0EEH          ; Echo characters.
 = 00ED                 C  KCMD_LEDS       =      0EDH          ; Reset mode LED's.
                        C  ;
                        C  ;       Below are special commands for the COMPAQ 8042.
                        C  ;       These 8042 commands are not IBM AT compatible.
                        C  ;
 = 00A3                 C  CPU_HIGH        =      0A3H          ; Enable 386 CPU speed variation
 = 00A5                 C  CPU_READ        =      0A5H          ; Read CPU speed and attached keyboard
                        C  ;
                        C  ;       When the special COMPAQ 8042 command "CPU READ" above is
                        C  ;       issued to the 8042, a byte of information with the definitions
                        C  ;       below is returned.  All other bit positions are undefined.
                        C  ;
 = 0004                 C  HIGH_CPU        =      00000100B     ; CPU currently set to high speed
 = 0008                 C  SLOW_CPU        =      00001000B     ; CPU currently set to slow speed
 = 000C                 C  FAST_CPU        =      00001100B     ; CPU currently set to fast speed
 = 0020                 C  KBD_TYPE        =      00100000B     ; 0/1 - 11 bit keyboard/9bit keyboard
                        C  ;
                        C  ;       Below are the count values used to regulate the 386 CPU speed.
                        C  ;
 = 0024                 C  COMM_SP         =      24h           ; COMMON speed count value - 286/6  MHz
 = 0022                 C  FAST_SP         =      22h           ; FAST speed count value   - 286/8  MHz
 = 0000                 C  HIGH_SP         =      00h           ; HIGH speed count value   - 386/16 MHz
 = 0031                 C  IBMPC_SP        =      31h           ; approximate PC speed
                        C  ;
                        C  ;       Below are defines to represent the various 386 speeds.
                        C  ;
 = 0000                 C  COMMON_         =      0
 = 0001                 C  FAST_           =      1
 = 0002                 C  HIGH_           =      2
 = 0003                 C  TOGGLE_         =      3
 = 0008                 C  AUTO_           =      8
 = 0009                 C  COUNT_          =      9
                        C  ;
                        C  ;       DMA page 86h is used to maintain the current values of the AUTO bit,
                        C  ;       SPEED bit, and the COUNT value as defined below.
                        C  ;
 = 0086                 C  SPEEDIO         =      86h
```

```
 = 0080             C  A_BIT          =     10000000b
 = 0040             C  S_BIT          =     01000000b
 = 003F             C  CNTMSK         =     00111111b
                    C  ;
                    C  ;        Initial 8042 command setup
                    C  ;
 = 005D             C  INIT_KSETUP    =     05DH          ; PC compatible, disable kbd,
                    C                                     ; Inhibit override, system flag,
                    C                                     ; enable output buffer interrupt.
 = 0045             C  FIN_SETUP      =     045H          ; Do not override key lock.
                    C  ;
 = 0055             C  KEY_TEST_OK    =     055H          ; Successful self test response.
                    C  ;
                    C  ;        Equates for KEY_STATUS
                    C  ;
 = 0001             C  KSTAT_OUT_FULL  =    00000001B     ; 8042 output buffer full.
 = 0002             C  KSTAT_IN_FULL   =    00000010B     ; 8042 input buffer full.
 = 0004             C  KSTAT_SYS_FLAG  =    00000100B     ; 8042 system flag.
 = 0008             C  KSTAT_CMD_DATA  =    00001000B     ; 8042 cmd or data mode.
 = 0010             C  KSTAT_INHIBIT   =    00010000B     ; 8042 keyboard inhibit flag.
 = 0020             C  KSTAT_TTO       =    00100000B     ; 8042 transmit time out.
 = 0040             C  KSTAT_RTO       =    01000000B     ; 8042 receive time out.
 = 0080             C  KSTAT_P_ERROR   =    10000000B     ; 8042 parity error.
                    C  ;
                    C  ;        Equates for KEY_INPUT
                    C  ;
 = 0080             C  KIN_KEY_LOCK    =    10000000B     ; Keyboard lock switch.
 = 0040             C  KIN_P_DISPLAY   =    01000000B     ; Primary display.
 = 0020             C  KIN_MANUF       =    00100000B     ; Manufacturing jumper.
 = 0010             C  KIN_CPU_SPEED   =    00010000B     ; CPU speed 0=AUTO 1=HIGH
 = 0004             C  KIN_287         =    00000100B     ; 287 present 0=TRUE 1=FALSE
                    C  ;
                    C  ;        Equates for KEY_OUTPUT
                    C  ;
 = 0001             C  KOUT_CPU_RESET  =    00000001B     ; CPU reset.
 = 0002             C  KOUT_A20        =    00000010B     ; A20 output.
 = 000C             C  KOUT_CPU_SPEED  =    00001100B     ; CPU speed - x0=slow 01=high 11=fast
 = 0010             C  KOUT_OUT_FULL   =    00010000B     ; Output buffer full.
 = 0020             C  KOUT_IN_FULL    =    00100000B     ; Input buffer full.
 = 0040             C  KOUT_CLK_OUT    =    01000000B     ; Keyboard output clock.
 = 0080             C  KOUT_DATA_OUT   =    10000000B     ; Keyboard data output.
                    C  ;
 = 0004             C  K_CPU_HIGH      =    00000100B     ; High CPU speed
 = 0008             C  K_CPU_SLOW      =    00001000B     ; Slow CPU speed
 = 000C             C  K_CPU_FAST      =    00001100B     ; Fast CPU speed
                    C  ;
                    C  ;        Input for KEYBIT1 keyboard variable in RAM 40:17
                    C  ;
 = 0080             C  INSRTON         =    80H           ;INS         MODE IN EFFECT
 = 0040             C  CAPSLOK         =    40H           ;CAPS_LOCK   MODE IN EFFECT
 = 0020             C  NUMLOCK         =    20H           ;NUM_LOCK    MODE IN EFFECT
 = 0010             C  SCRLOCK         =    10H           ;SCROLL_LOCK MODE IN EFFECT
 = 0008             C  ALTKEY          =    08H           ;ALT         KEY BEING HELD DOWN
 = 0004             C  CTRLKEY         =    04H           ;CTRL        KEY BEING HELD DOWN
```

```
Microsoft (R) Macro Assembler  Version 4.00                 9/7/86 10:26:25

KSUBS   Copyright (c) 1982,83,84,85,86 COMPAQ Computer Corp.  Page     1-5

 = 0002                    C  LEFTSHF       =      02H          ;LEFT_SHIFT  KEY BEING HELD DOWN
 = 0001                    C  RIGTSHF       =      01H          ;RIGHT_SHIFT KEY BEING HELD DOWN
                           C  ;
                           C  ;      Input for KEYBIT2 keyboard variable in RAM 40:18
                           C  ;
 = 0080                    C  INSKEY        =      80H          ;INS         KEY BEING HELD DOWN
 = 0040                    C  CAPKEY        =      40H          ;CAPS_LOCK   KEY BEING HELD DOWN
 = 0020                    C  NUMKEY        =      20H          ;NUM_LOCK    KEY BEING HELD DOWN
 = 0010                    C  SCRLKEY       =      10H          ;SCROLL_LOCK KEY BEING HELD DOWN
 = 0008                    C  WOWKEY        =      08H          ;CTRL+NUM_LOCK MODE IN EFFECT
 = 0004                    C  SYSREQ        =      04H          ;SYS_REQ     KEY BEING HELD DOWN
 = 0002                    C  LEFTALT       =      02H          ;LEFT ALT    KEY IS DOWN
 = 0001                    C  LEFTCTRL      =      01H          ;LEFT CTRL   KEY IS DOWN
                           C  ;
                           C  ;      Bit definitions for ENHBITS variable in RAM 40:96
                           C  ;
 = 0080                    C  RID_IP        =      80H          ;READ ID IN PROGRESS
 = 0040                    C  RID_1ST       =      40H          ;RECEIVED FIRST ID BYTE
 = 0020                    C  F_NUM_LK      =      20H          ;FORCE NUM LOCK ON
 = 0010                    C  ENH_KBD       =      10H          ;ENHANCED KEYBOARD IS INSTALLED
 = 0008                    C  RIGTALT       =      08H          ;RIGHT ALT KEY IS DOWN
 = 0004                    C  RIGTCTRL      =      04H          ;RIGHT CTRL KEY IS DOWN
 = 0002                    C  GOT_E0        =      02H          ;LAST CODE WAS 'E0' CODE
 = 0001                    C  GOT_E1        =      01H          ;LAST CODE WAS 'E1' CODE
                           C  ;
                           C  ;      Bit definitions for KBD_LED variable in RAM 40:97
                           C  ;
 = 0040                    C  KCMD_IP       =      40H          ;KEYBOARD COMMAND IN PROGRESS
 = 0020                    C  IP_287        =      20H          ;287 ERROR FIXUP IN PROGRESS
 = 0010                    C  RCVD_ACK      =      10H          ;RECEIVED ACK FROM KEYBOARD
 = 0004                    C  CAP_LED       =      04H          ;CAPS LOCK   LED IS ON
 = 0002                    C  NUM_LED       =      02H          ;NUM LOCK    LED IS ON
 = 0001                    C  SCRL_LED      =      01H          ;SCROLL LOCK LED IS ON
                           C  ;

                           C         include flag_def.equ
                           C  ;
                           C  ;      80286 flag equates
                           C  ;
 = 0200                    C  I             =      0200H        ; INTERRUPT ENABLE FLAG
 = 0080                    C  S             =      0080H        ; SIGN FLAG
 = 0040                    C  Z             =      0040H        ; ZERO FLAG
 = 0001                    C  C             =      0001H        ; CARRY FLAG

                           C         include pop_f.mac
                           C  pop_f  macro   addr               ; Simulate pop flag.
                           C         local   new_pc             ;
                           C         local   do_iret            ;
                           C  ;
                           C         push    cs                 ; Save CS in stack.
                           C         call    do_iret            ; Go pop flags.
                           C         jmp     new_pc             ; Continue normal code.
                           C  do_iret:
                           C         iret                       ; IRET pops CS:IP, flags.
```

```
Microsoft (R) Macro Assembler  Version 4.00                8/7/86 10:26:25

KSUBS   Copyright (c) 1982,83,84,85,86 COMPAQ Computer Corp.  Page     1-6

                         C  new_pc:
                         C           ENDM

                         C           include cnt_def.equ
                         C  ;*************************************************************************
                         C  ;        8254 programmable interval timers
                         C  ;*************************************************************************
                         C  ;
                         C  ;        PC XT/AT Compatible timer
                         C  ;
                         C  ;*************************************************************************
 = 0040                  C  CNT_0          =       40H            ; 8254's COUNTER 0 I/O ADDRESS
 = 0041                  C  CNT_1          =       41H            ; 8254's COUNTER 1 I/O ADDRESS
 = 0042                  C  CNT_2          =       42H            ; 8254's COUNTER 2 I/O ADDRESS
 = 0043                  C  CNT_MODE       =       43H            ; 8254's MODE REGISTER I/O ADDRESS
                         C  ;
 = 0036                  C  CNT0_MODE      =       36H            ; SEL CNT_0, LD LSB FIRST, SQUARE WAVE
 = 0000                  C  CNT0_SETUP     =       00000H         ; INTR TIMER DIVISOR FOR 18.2 Hz
 = 0054                  C  CNT1_MODE      =       54H            ; COUNTER 1, LSB, MODE 2, BIN COUNT
 = 0012                  C  CNT1_SETUP     =       12H            ; REFRESH COUNT DIVISOR, 2 BYTES.
 = 00B6                  C  CNT2_MODE      =       0B6H           ; SEL CNT_2, LSB FIRST, SQUARE WAVE
 = 0533                  C  CNT2_SETUP     =       0533H          ; INITIAL TIMER 2 DIVISOR.
                         C  ;
 = 0000                  C  LATCH_CNT0     =       00H            ; CMD TO LATCH CNT_0'S COUNTER.
 = 0040                  C  LATCH_CNT1     =       40H            ; CMD TO LATCH CNT_1'S COUNTER.
 = 0080                  C  LATCH_CNT2     =       80H            ; CMD TO LATCH CNT_2'S COUNTER.
                         C  ;
                         C  ;*************************************************************************
                         C  ;
                         C  ;       COMPAQ defined failsafe timer
                         C  ;
                         C  ;       Timer 0 is gated into NMI to interrupt applications that run with
                         C  ;          interrupts disabled.
                         C  ;       Timer 1 is not defined.
                         C  ;       Timer 2 is used to put the processor in slow mode by generating
                         C  ;          lots of refresh cycles.
                         C  ;
                         C  ;*************************************************************************
                         C  ;
 = 0048                  C  FCNT_0         =       48H            ; 8254's COUNTER 0 I/O ADDRESS
 = 0049                  C  FCNT_1         =       49H            ; 8254's COUNTER 1 I/O ADDRESS
 = 004A                  C  FCNT_2         =       4AH            ; 8254's COUNTER 2 I/O ADDRESS
 = 004B                  C  FCNT_MODE      =       4BH            ; 8254's MODE REGISTER I/O ADDRESS
                         C  ;
 = 0012                  C  FCNT0_MODE     =       12H            ; COUNTER 0, LSB FIRST, ONE-SHOT
 = 0022                  C  FCNT0_SETUP    =       22H
 = 0042                  C  FCNT1_MODE     =       42H            ; COUNTER 1, LSB FIRST, ONE-SHOT
 = 0022                  C  FCNT1_SETUP    =       22H
 = 0092                  C  FCNT2_MODE     =       92H            ; COUNTER 2, LSB FIRST, ONE-SHOT
 = 0022                  C  FCNT2_SETUP    =       22H
                         C  ;
```

```
Microsoft (R) Macro Assembler  Version 4.00                 8/7/86 10:26:25

KSUBS   Copyright (c) 1982,83,84,85,86 COMPAQ Computer Corp.  Page     1-7

                                ; Local Equates
                                ;
 = 00F0                         SET_SPEED       equ     0f0h            ;       set CPU speed
 = 00F1                         READ_SPEED      equ     0f1h            ;       read current CPU speed
 = 00F2                         GET_TYPE        equ     0f2h            ;       determine keyboard type

 = 0000                         KBD_11          equ     0               ;       11 bit keyboard in use
 = 0001                         KBD_9           equ     1               ;       9 bit keyboard in use

 0000                           ROM     segment byte    public  'ROM'
                                        assume  cs:ROM, ds:seg_ram400
```

```
Microsoft (R) Macro Assembler  Version 4.00                8/7/86 10:26:25
KSUBS   Copyright (c) 1982,83,84,85,86 COMPAQ Computer Corp.  Page     1-8

                                   page
                          ;*****************************************************************
                          ;        Read character from keyboard
                          ;-----------------------------------------------------------------
 0000                     get_key proc    near
 0000  E8 0000 E                  call    chkLED              ;       update LEDs if necessary
 0003                     getkey:
 0003  FA                         cli                         ;;;     mask interrupts
 0004  E8 0000 E                  call    chkbuf              ;;; Q:  key available?
 0007  FB                         sti                         ;;;     enable interrupts
 0008  75 0E                      jnz     gotkey              ;   Y:  ax = key, si=si+2
 000A  B8 9002                    mov     ax,9002h            ;   N:  Perform keyboard Device Wait
 000D  F8                         clc                         ;       default = ROM timeout
 000E  CD 15                      int     15h                 ;
 0010                     wait_key:
 0010  FA                         cli                         ;;;     disable interrupts
 0011  E8 0000 E                  call    chkbuf              ;;; Q:  key available?
 0014  FB                         sti                         ;;;     enable interrupts
 0015  90                         nop                         ;;;     allow interrupts to occur
 0016  74 F8                      jz      wait_key            ;   N:  wait for a key
                                                              ;   Y:  place key in queue
                          ;*****************************************************************
                          ;        Following code performs keyboard queue wrapping
                          ;-----------------------------------------------------------------
 0018                     gotkey:
 0018  3B 36 0000 E               cmp     si,[keybfbot]       ;;;     do we need to loop around?
 001C  75 04                      jne     savehead            ;;; N:  leave alone
 001E  8B 36 0000 E               mov     si,[keybftop]       ;;; Y:  set to top of buffer
 0022                     savehead:
 0022  89 36 0000 E               mov     [keyhead],si        ;;;     save new head pointer
 0026  FB                         sti                         ;       allow interrupts
 0027  C3                         ret                         ;       *** RETURN ***
                          get_key endp
```

```
Microsoft (R) Macro Assembler  Version 4.00                8/7/86 10:26:25
KSUBS   Copyright (c) 1982,83,84,85,86 COMPAQ Computer Corp.  Page     1-9

                                        page
                                ;*************************************************************
                                ;       Check status of buffer
                                ;------------------------------------------------------------
 0028                           chk_key proc    near
 0028  E8 0000 E                        call    chkLED          ;       update kbd LEDs if necessary
 002B  FA                               cli                     ;       mask interrupts
 002C  E8 0000 E                        call    chkbuf          ;;;     check buffer status
 002F  FB                               sti                     ;;;
 0030  C3                               ret                     ;       *** RETURN ***
                                chk_key endp


                                ;*************************************************************
                                ;       Return shift status in al register
                                ;------------------------------------------------------------
 0031                           read_status     proc    near
 0031  A0 0000 E                        mov     al,[keybit1]    ;       get shift status byte
 0034  C3                               ret                     ;       *** RETURN ***
                                read_status     endp
```

```
Microsoft (R) Macro Assembler  Version 4.00                8/7/86 10:26:25
KSUBS   Copyright (c) 1982,83,84,85,86 COMPAQ Computer Corp.  Page    1-10

                                     page

                                ;
                                ;       Return with ZF=0 if the key in ax can be converted to an older
                                ;       compatible key scan/ascii pair with the converted key in ax.
                                ;       Return with ZF=1 otherwise.
                                ;
                                ;       Algorithm is as follows:
                                ;
                                ;       1. If ah = 00h then return ax unmodified
                                ;       2. If ax = e00d then ax = 1c0d
                                ;       3. If ax = e02f then ax = 352f
                                ;       4. If ah > 84h then cannot convert key
                                ;       5. If al = f0h then cannot convert key
                                ;       6. If al = e0h then al = 0
                                ;
 0035                           old_key proc    near
 0035  80 FC 00                         cmp     ah,0            ; Q: ALT <num> <num> <num> key?
 0038  74 23                            je      oldret          ;  Y:
 003A  3D E00D                          cmp     ax,0e00dh       ; Q: new Enter key?
 003D  75 05                            jne     not_enter       ;  N:
 003F  B8 1C0D                          mov     ax,1c0dh        ;  Y: convert key
 0042  EB 19                            jmp     short oldret    ;
 0044                           not_enter:
 0044  3D E02F                          cmp     ax,0e02fh       ; Q: new Keypad / key?
 0047  75 05                            jne     not_slash       ;  N:
 0049  B8 352F                          mov     ax,352fh        ;  Y: convert key
 004C  EB 0F                            jmp     short oldret    ;
 004E                           not_slash:
 004E  80 FC 84                         cmp     ah,84h          ; Q: new extened code?
 0051  77 0F                            ja      no_key          ;  Y: cannot convert key
 0053  3C F0                            cmp     al,0f0h         ; Q: new extended code?
 0055  74 0B                            je      no_key          ;  Y: cannot convert key
 0057  3C E0                            cmp     al,0e0h         ; Q: redundant keypad key?
 0059  75 02                            jne     oldret          ;  N:
 005B  B0 00                            mov     al,0            ;  Y: convert to old code
 005D                           oldret:
 005D  BE FFFF                          mov     si,-1           ;     make ZF=0
 0060  EB 02                            jmp     short ret_old   ;
 0062                           no_key:
 0062  33 F6                            xor     si,si           ;     make ZF=1
 0064                           ret_old:
 0064  85 F6                            test    si,si           ;     set/reset ZF
 0066  C3                               ret                     ;     *** RETURN ***
                                old_key endp
```

```
Microsoft (R) Macro Assembler  Version 4.00                8/7/86 10:26:25
KSUBS   Copyright (c) 1982,83,84,85,86 COMPAQ Computer Corp.  Page     1-11

                                        page

                                ;
                                ;       If the ASCII code is f0h, replace it with 0.
                                ;
0067                            new_key proc    near
0067  80 FC 00                          cmp     ah,0            ;  Q: ALT <num> <num> <num> key?
006A  74 06                             je      not_filler      ;     Y:
006C  3C F0                             cmp     al,0f0h         ;  Q: new ALT extended code?
006E  75 02                             jne     not_filler      ;     N:
0070  B0 00                             mov     al,0            ;     Y: replace f0h with 0!
0072                            not_filler:
0072  C3                                ret                     ;     *** RETURN ***
                                new_key endp

                                ;
                                ;       Return the new status information associated with the enhanced
                                ;       keyboard.
                                ;
0073                            new_status      proc    near
0073  A0 0000 E                         mov     al,keybit2      ;       get left ALT and CTRL status
0076  24 03                             and     al,3            ;       mask off other stuff
0078  8A 26 0000 E                      mov     ah,enhbits      ;       get right ALT and CTRL status
007C  80 E4 0C                          and     ah,0ch          ;       mask off other stuff
007F  0A E0                             or      ah,al           ;       ah = left and right ALT and CTRL
0081  A0 0000 E                         mov     al,keybit1      ;       get old shift status byte
0084  C3                                ret                     ;       *** RETURN ***
                                new_status      endp
```

```
Microsoft (R) Macro Assembler  Version 4.00                8/7/86 10:26:25

KSUBS   Copyright (c) 1982,83,84,85,86 COMPAQ Computer Corp.  Page    1-12

                                        page
                                ;
                                ;       Set keyboard typematic rate/delay.  Send keyboard command F3
                                ;       followed by the rate/delay byte.
                                ;
 0085                           set_typematic   proc    near
 0085  3C 05                            cmp     al,5                    ;  Q: al is 5? (mandatory!)
 0087  75 5B                            jne     bad_type                ;   N: don't do function
 0089  80 FF 03                         cmp     bh,3                    ;  Q: legal delay value?
 008C  77 56                            ja      bad_type                ;   N:
 008E  80 FB 1F                         cmp     bl,31                   ;  Q: legal rate value?
 0091  77 51                            ja      bad_type                ;   N:
 0093  51                               push    cx                      ;   Y: protect cx
 0094                           kbd_wait:
 0094  E8 0000 E                        call    ts_kbd                  ;  Q: kbd command in progress?
 0097  75 FB                            jnz     kbd_wait                ;   Y: wait til finished
 0099  80 26 0000 E EF                  and     kbd_led,not RCVD_ACK    ;   N: reset ack received
 009E  E8 0000 E                        call    kbdrdy                  ;      wait til 8042 is ready
 00A1  B0 F3                            mov     al,0f3h                 ;      get set typematic kbd command
 00A3  E6 60                            out     60h,al                  ;
 00A5  B9 FFFF                          mov     cx,-1                   ;      timeout value
 00A8                           getack1:
 00A8  F6 06 0000 E 10                  test    kbd_led,RCVD_ACK        ;  Q: received ACK?
 00AD  75 0B                            jnz     gotack1                 ;   Y:
 00AF  E2 F7                            loop    getack1                 ;   N: keep waiting
 00B1  E8 0000 E                        call    kbdrdy                  ;      *** TIMEOUT ***
 00B4  B0 F4                            mov     al,0f4h                 ;      get kbd enable command
 00B6  E6 60                            out     60h,al                  ;      send it to kbd
 00B8  EB 24                            jmp     short reset_ip          ;
 00BA                           gotack1:
 00BA  80 26 0000 E EF                  and     kbd_led,not RCVD_ACK    ;      reset received ACK flag
 00BF  E8 0000 E                        call    kbdrdy                  ;      make sure kbd ready
 00C2  8A C7                            mov     al,bh                   ;      get delay value
 00C4  C0 E0 05                         shl     al,5                    ;      shift to bits 6 and 5
 00C7  0A C3                            or      al,bl                   ;      mask in rate value
 00C9  E6 60                            out     60h,al                  ;      send rate/delay value
 00CB  B9 FFFF                          mov     cx,-1                   ;      get timeout value
 00CE                           getack2:
 00CE  F6 06 0000 E 10                  test    kbd_led,RCVD_ACK        ;  Q: received ACK?
 00D3  75 09                            jnz     reset_ip                ;   Y:
 00D5  E2 F7                            loop    getack2                 ;   N: keep waiting
 00D7  E8 0000 E                        call    kbdrdy                  ;      *** TIMEOUT ***
 00DA  B0 F4                            mov     al,0f4h                 ;      get kbd enable command
 00DC  E6 60                            out     60h,al                  ;      send it to kbd
 00DE                           reset_ip:
 00DE  80 26 0000 E BF                  and     kbd_led,not KCMD_IP     ;      reset kbd command in progress
 00E3  59                               pop     cx                      ;      restore cx
 00E4                           bad_type:
 00E4  C3                               ret                             ;      *** RETURN ***
                                set_typematic   endp
```

```
Microsoft (R) Macro Assembler  Version 4.00              8/7/86 10:26:25

KSUBS   Copyright (c) 1982,83,84,85,86 COMPAQ Computer Corp.   Page    1-13

                                   page
                              ;
                              ;    Place the scan code/character specified in register CH and CL,
                              ;    respectively, into the keyboard buffer.  If successful, return
                              ;    with AL = 0 and CF = 0.  If the buffer is full, return with
                              ;    Al = 1 and CF = 1.
                              ;
 00E5                         put_key proc    near
 00E5  FA                          cli                        ;;;     disable interrupts
 00E6  8B 36 0000 E                mov     si,keytail         ;;;     get next available slot
 00EA  89 0C                       mov     [si],cx            ;;;     place pair in kbd buffer
 00EC  46                          inc     si                 ;;;     get next available slot
 00ED  46                          inc     si                 ;;;
 00EE  3B 36 0000 E                cmp     si,keybfbot        ;;; Q:  need to wrap around?
 00F2  75 04                       jne     savetail           ;;;  N: save new tail
 00F4  8B 36 0000 E                mov     si,keybftop        ;;;  Y: get new tail
 00F8                         savetail:
 00F8  3B 36 0000 E                cmp     si,keyhead         ;;; Q:  buffer was full?
 00FC  74 09                       je      kbdfull            ;;;  Y: don't update tail
 00FE  89 36 0000 E                mov     keytail,si         ;;;  N: set new tail
 0102  32 C0                       xor     al,al              ;;;     note success
 0104  F8                          clc                        ;;;
 0105  EB 03                       jmp     short put_end      ;;;
 0107                         kbdfull:
 0107  B0 01                       mov     al,1               ;;;     note failure
 0109  F9                          stc                        ;;;
 010A                         put_end:
 010A  FB                          sti                        ;;;     enable interrupts
 010B  C3                          ret                        ;       *** RETURN ***
                              put_key endp
```

```
                              page
                        ;****************************************************************
                        ;       Set the CPU speed according to the value in al
                        ;----------------------------------------------------------------
 010C                   set_cpu_proc    near
 010C  50                       push    ax              ;       protect ax
 010D  3C 08                    cmp     al,AUTO_        ;   Q:  set AUTO speed?
 010F  74 4F                    je      set_auto        ;    Y:
 0111  3C 09                    cmp     al,COUNT_       ;   Q:  set COUNT speed?
 0113  74 57                    je      set_count       ;    Y:
 0115  84 C0                    test    al,al           ;   Q:  set to common speed?
 0117  75 0E                    jne     chk_fast        ;    N:
 0119  E4 86                    in      al,SPEEDIO      ;    Y: get speed info
 011B  24 BF                    and     al,not S_BIT    ;       reset the S bit
 011D  24 C0                    and     al,not CNTMSK   ;       clear COUNT field
 011F  0C 24                    or      al,COMM_SP      ;       set COUNT to COMMON
 0121  E6 86                    out     SPEEDIO,al      ;
 0123  B4 24                    mov     ah,COMM_SP      ;       get COMMON speed count
 0125  EB 64                    jmp     short setout    ;
 0127                   chk_fast:
 0127  FE C8                    dec     al              ;   Q:  set to FAST speed?
 0129  75 0E                    jne     chk_high        ;    N:
 012B  E4 86                    in      al,SPEEDIO      ;    Y: get speed info
 012D  24 BF                    and     al,not S_BIT    ;       reset the S bit
 012F  24 C0                    and     al,not CNTMSK   ;       clear COUNT field
 0131  0C 22                    or      al,FAST_SP      ;       set COUNT to FAST
 0133  E6 86                    out     SPEEDIO,al      ;
 0135  B4 22                    mov     ah,FAST_SP      ;       get FAST speed count
 0137  EB 52                    jmp     short setout    ;
 0139                   chk_high:
 0139  FE C8                    dec     al              ;   Q:  set to HIGH speed?
 013B  75 0C                    jne     chk_toggle      ;    N:
 013D  E4 86                    in      al,SPEEDIO      ;    Y: get speed info
 013F  24 7F                    and     al,not A_BIT    ;       reset the A bit
 0141  0C 40                    or      al,S_BIT        ;       set the S bit
 0143  E6 86                    out     SPEEDIO,al      ;
 0145  B4 00                    mov     ah,HIGH_SP      ;       get HIGH speed count
 0147  EB 42                    jmp     short setout    ;
 0149                   chk_toggle:
 0149  FE C8                    dec     al              ;   Q:  toggle CPU speed?
 014B  75 53                    jne     setret          ;    N:
 014D  E4 86                    in      al,SPEEDIO      ;    Y: get speed info
 014F  B4 00                    mov     ah,0            ;       assume HIGH speed needed
 0151  A8 40                    test    al,S_BIT        ;   Q:  already in HIGH speed?
 0153  74 05                    jz      xor_S           ;    N: set to HIGH speed
 0155  8A E0                    mov     ah,al           ;    Y: get COUNT value
 0157  80 E4 3F                 and     ah,CNTMSK       ;    Y: mask off A and S bits
 015A                   xor_S:
 015A  34 40                    xor     al,S_BIT        ;       toggle the S bit
 015C  E6 86                    out     SPEEDIO,al      ;
 015E  EB 2B                    jmp     short setout    ;
 0160                   set_auto:
 0160  E4 86                    in      al,SPEEDIO      ;       get speed info
 0162  24 7F                    and     al,not A_BIT    ;       reset the A bit
```

```
Microsoft (R) Macro Assembler  Version 4.00                8/7/86 10:26:25

KSUBS   Copyright (c) 1982,83,84,85,86 COMPAQ Computer Corp.  Page     1-15

 0164  0C C0                     or      al,(A_BIT+S_BIT)     ;       set the A and S bits
 0166  E6 86                     out     SPEEDIO,al           ;
 0168  B4 00                     mov     ah,HIGH_SP           ;       get HIGH speed count
 016A  EB 1F                     jmp     short setout         ;
 016C                  set_count:
 016C  83 F9 01                  cmp     cx,1                 ;  Q:  cx < 1?
 016F  72 2F                     jb      setret               ;   Y: bad COUNT, don't use
 0171  83 F9 32                  cmp     cx,50                ;  Q:  cx > 50?
 0174  77 2A                     ja      setret               ;   Y: bad count, don't use
 0176  B8 0032                   mov     ax,50                ;      COUNT = 50 - cx + 2
 0179  2B C1                     sub     ax,cx                ;
 017B  40                        inc     ax                   ;
 017C  40                        inc     ax                   ;
 017D  8A E0                     mov     ah,al                ;       ah = COUNT
 017F  E4 86                     in      al,SPEEDIO           ;       get speed info
 0181  24 BF                     and     al,not S_BIT         ;       reset the S bit
 0183  24 C0                     and     al,not CNTMSK        ;       clear COUNT field
 0185  0A C4                     or      al,ah                ;       set COUNT to COMMON
 0187  E6 86                     out     SPEEDIO,al           ;
 0189  EB 00                     jmp     short setout         ;
 018B                  setout:
 018B  B0 92                     mov     al,92h               ;       set timer 2 command
 018D  FA                        cli                          ;;;     disable interrupts
 018E  E6 4B                     out     FCNT_MODE,al         ;;;
 0190  EB 00                     jmp     $+2                  ;;;
 0192  EB 00                     jmp     $+2                  ;;;
 0194  EB 00                     jmp     $+2                  ;;;
 0196  80 FC 00                  cmp     ah,HIGH_SP           ;;; Q:  set to HIGH speed?
 0199  74 04                     je      no_cnt               ;;;  Y: don't set timer 2
 019B  8A C4                     mov     al,ah                ;;;  N: get counter value
 019D  E6 4A                     out     FCNT_2,al            ;;;     set counter value
 019F                  no_cnt:
 019F  FB                        sti                          ;;;     enable interrupts
 01A0                  setret:
 01A0  58                        pop     ax                   ;       restore ax
 01A1  C3                        ret                          ;       *** RETURN ***
                       set_cpu endp
```

```
Microsoft (R) Macro Assembler  Version 4.00                  8/7/86 10:26:25
KSUBS   Copyright (c) 1982,83,84,85,86 COMPAQ Computer Corp.  Page     1-16

                                        page
                                ;************************************************************
                                ;       Read the current CPU speed
                                ;------------------------------------------------------------
 01A2                           read_cpu        proc    near
 01A2  E4 86                            in      al,SPEEDIO
 01A4  A8 40                            test    al,S_BIT                ;   Q:  HIGH speed?
 01A6  75 1B                            jnz     S_set                   ;    Y:
 01A8  B4 00                            mov     ah,COMMON_              ;    N: assume COMMON speed
 01AA  24 3F                            and     al,not (A_BIT+S_BIT)    ;       mask off A and S bits
 01AC  3C 24                            cmp     al,COMM_SP              ;   Q:  COMMON speed?
 01AE  74 1B                            je      retcpu                  ;    Y:
 01B0  B4 01                            mov     ah,FAST_                ;    N: assume FAST speed
 01B2  3C 22                            cmp     al,FAST_SP              ;   Q:  FAST speed?
 01B4  74 15                            je      retcpu                  ;    Y:
 01B6  32 E4                            xor     ah,ah                   ;       ax = COUNT
 01B8  B9 0032                          mov     cx,50                   ;       cx = 50 - COUNT + 2
 01BB  2B C8                            sub     cx,ax                   ;
 01BD  41                               inc     cx                      ;
 01BE  41                               inc     cx                      ;
 01BF  B4 09                            mov     ah,COUNT_               ;       return COUNT speed
 01C1  EB 08                            jmp     short retcpu            ;
 01C3                           S_set:
 01C3  B4 08                            mov     ah,AUTO_                ;       assume AUTO speed
 01C5  A8 80                            test    al,A_BIT                ;   Q:  is it AUTO speed?
 01C7  75 02                            jnz     retcpu                  ;    Y:
 01C9  B4 02                            mov     ah,HIGH_                ;    N: must be HIGH speed
 01CB                           retcpu:
 01CB  8A C4                            mov     al,ah                   ;       return info in al
 01CD  32 E4                            xor     ah,ah                   ;       return info in ax
 01CF  C3                               ret                             ;       *** RETURN ***
                                read_cpu        endp
```

114

```
Microsoft (R) Macro-Assembler  Version 4.00                 8/7/86 10:24:25
KSUBS   Copyright (c) 1982,83,84,85,86 COMPAQ Computer Corp.  Page     1-17

                                      page

                              ;*****************************************************************
                              ;       Determine the attached keyboard
                              ;------------------------------------------------------------------
 01D0                         read_kbd        proc    near
 01D0  E8 0000 E                      call    getbyte         ;       read COMPAQ special 8042 byte
 01D3  B4 FF                          mov     ah,-1           ;   Q:  8042 timeout?
 01D5  74 08                          jz      kbdout          ;    Y: return -1
 01D7  B4 00                          mov     ah,KBD_11       ;    N: assume 11 bit keyboard
 01D9  A8 20                          test    al,KBD_TYPE     ;   Q:  11 bit keyboard indeed?
 01DB  74 02                          jz      kbdout          ;    Y:
 01DD  B4 01                          mov     ah,KBD_9        ;    N: return 9 bit keyboard
 01DF                         kbdout:
 01DF  8A C4                          mov     al,ah           ;       al = keyboard type
 01E1  32 E4                          xor     ah,ah           ;       ax = keyboard type
 01E3  C3                             ret                     ;       *** RETURN ***
                              read_kbd        endp

 01E4                         ROM     ends
                                      end
```

Microsoft (R) Macro Assembler Version 4.00 8/7/86 10:26:25

KSUBS Copyright (c) 1982,83,84,85,86 COMPAQ Computer Corp. Symbols-1

Macros:

| N a m e | Lines |
|---|---|
| POP_F | 7 |

Segments and Groups:

| N a m e | Size | Align | Combine | Class |
|---|---|---|---|---|
| ROM | 01E4 | BYTE | PUBLIC | 'ROM' |

Symbols:

| N a m e | Type | Value | Attr | |
|---|---|---|---|---|
| ALTKEY | Number | 0008 | | |
| AUTO_ | Number | 0008 | | |
| A_BIT | Number | 0080 | | |
| BAD_TYPE | L NEAR | 00E4 | ROM | |
| C | Number | 0001 | | |
| CAPKEY | Number | 0040 | | |
| CAPSLOK | Number | 0040 | | |
| CAP_LED | Number | 0004 | | |
| CHKBUF | L NEAR | 0000 | | External |
| CHKLED | L NEAR | 0000 | | External |
| CHK_FAST | L NEAR | 0127 | ROM | |
| CHK_HIGH | L NEAR | 0139 | ROM | |
| CHK_KEY | N PROC | 0028 | ROM | Global Length = 0009 |
| CHK_TOGGLE | L NEAR | 0149 | ROM | |
| CNT0_MODE | Number | 0036 | | |
| CNT0_SETUP | Number | 0000 | | |
| CNT1_MODE | Number | 0054 | | |
| CNT1_SETUP | Number | 0012 | | |
| CNT2_MODE | Number | 00B6 | | |
| CNT2_SETUP | Number | 0533 | | |
| CNTMSK | Number | 003F | | |
| CNT_0 | Number | 0040 | | |
| CNT_1 | Number | 0041 | | |
| CNT_2 | Number | 0042 | | |
| CNT_MODE | Number | 0043 | | |
| COMMON_ | Number | 0000 | | |
| COMM_SP | Number | 0024 | | |
| COUNT_ | Number | 0009 | | |
| CPU_HIGH | Number | 00A3 | | |
| CPU_READ | Number | 00A5 | | |
| CTRLKEY | Number | 0004 | | |
| ENHBITS | V BYTE | 0000 | | External |
| ENH_KBD | Number | 0010 | | |
| FAST_ | Number | 0001 | | |

```
Microsoft (R) Macro Assembler  Version 4.00           8/7/86 10:26:25

KSUBS   Copyright (c) 1982,83,84,85,86 COMPAQ Computer Corp.   Symbols-2

FAST_CPU . . . . . . . . . . . .     Number   000C
FAST_SP  . . . . . . . . . . . .     Number   0022
FCNT0_MODE . . . . . . . . . . .     Number   0012
FCNT0_SETUP  . . . . . . . . . .     Number   0022
FCNT1_MODE . . . . . . . . . . .     Number   0042
FCNT1_SETUP  . . . . . . . . . .     Number   0022
FCNT2_MODE . . . . . . . . . . .     Number   0092
FCNT2_SETUP  . . . . . . . . . .     Number   0022
FCNT_0 . . . . . . . . . . . . .     Number   0048
FCNT_1 . . . . . . . . . . . . .     Number   0049
FCNT_2 . . . . . . . . . . . . .     Number   004A
FCNT_MODE  . . . . . . . . . . .     Number   004B
FIN_SETUP  . . . . . . . . . . .     Number   0045
F_NUM_LK . . . . . . . . . . . .     Number   0020

GETACK1  . . . . . . . . . . . .     L NEAR   00A8    ROM
GETACK2  . . . . . . . . . . . .     L NEAR   00CE    ROM
GETBYTE  . . . . . . . . . . . .     L NEAR   0000            External
GETKEY . . . . . . . . . . . . .     L NEAR   0003    ROM
GET_KEY  . . . . . . . . . . . .     N PROC   0000    ROM     Global  Length = 0028
GET_TYPE . . . . . . . . . . . .     Number   00F2
GOTACK1  . . . . . . . . . . . .     L NEAR   00BA    ROM
GOTKEY . . . . . . . . . . . . .     L NEAR   0018    ROM
GOT_E0 . . . . . . . . . . . . .     Number   0002
GOT_E1 . . . . . . . . . . . . .     Number   0001

HIGH_  . . . . . . . . . . . . .     Number   0002
HIGH_CPU . . . . . . . . . . . .     Number   0004
HIGH_SP  . . . . . . . . . . . .     Number   0000

I  . . . . . . . . . . . . . . .     Number   0200
IBMPC_SP . . . . . . . . . . . .     Number   0031
INIT_KSETUP  . . . . . . . . . .     Number   005D
INSKEY . . . . . . . . . . . . .     Number   0080
INSRTON  . . . . . . . . . . . .     Number   0080
IP_287 . . . . . . . . . . . . .     Number   0020

KBDFULL  . . . . . . . . . . . .     L NEAR   0107    ROM
KBDOUT . . . . . . . . . . . . .     L NEAR   01DF    ROM
KBDRDY . . . . . . . . . . . . .     L NEAR   0000            External
KBD_11 . . . . . . . . . . . . .     Number   0000
KBD_9  . . . . . . . . . . . . .     Number   0001
KBD_LED  . . . . . . . . . . . .     V BYTE   0000            External
KBD_TYPE . . . . . . . . . . . .     Number   0020
KBD_WAIT . . . . . . . . . . . .     L NEAR   0094    ROM
KCMD_DEFAULT . . . . . . . . . .     Number   00F6
KCMD_DIAG_DUMP . . . . . . . . .     Number   00AC
KCMD_DISABLE . . . . . . . . . .     Number   00AD
KCMD_DIS_KBD . . . . . . . . . .     Number   00F5
KCMD_ECHO  . . . . . . . . . . .     Number   00EE
KCMD_ENABLE  . . . . . . . . . .     Number   00AE
KCMD_ENA_KBD . . . . . . . . . .     Number   00F4
KCMD_INTF_TEST . . . . . . . . .     Number   00AB
KCMD_IF  . . . . . . . . . . . .     Number   0040
```

Microsoft (R) Macro Assembler Version 4.00 8/7/86 10:26:25

KSUBS Copyright (c) 1982,83,84,85,86 COMPAQ Computer Corp. Symbols-3

```
KCMD_LEDS . . . . . . . . . . . .     Number  00ED
KCMD_NOP  . . . . . . . . . . . .     Number  00FD
KCMD_PULSE_OUT  . . . . . . . . .     Number  00F0
KCMD_RD . . . . . . . . . . . . .     Number  0020
KCMD_RD_INPUT . . . . . . . . . .     Number  00C0
KCMD_RD_OUTPUT  . . . . . . . . .     Number  00D0
KCMD_RD_TINPUTS . . . . . . . . .     Number  00E0
KCMD_RESEND . . . . . . . . . . .     Number  00FE
KCMD_RESET  . . . . . . . . . . .     Number  00FF
KCMD_SELF_TEST  . . . . . . . . .     Number  00AA
KCMD_SETTYPE  . . . . . . . . . .     Number  00F3
KCMD_WT . . . . . . . . . . . . .     Number  0060
KCMD_WT_OUTPUT  . . . . . . . . .     Number  00D1
KEYBFBEG  . . . . . . . . . . . .     V WORD  0000       External
KEYBFBOT  . . . . . . . . . . . .     V WORD  0000       External
KEYBFEND  . . . . . . . . . . . .     V WORD  0000       External
KEYBFTOP  . . . . . . . . . . . .     V WORD  0000       External
KEYBIT1 . . . . . . . . . . . . .     V BYTE  0000       External
KEYBIT2 . . . . . . . . . . . . .     V BYTE  0000       External
KEYHEAD . . . . . . . . . . . . .     V WORD  0000       External
KEYTAIL . . . . . . . . . . . . .     V WORD  0000       External
KEY_CMD . . . . . . . . . . . . .     Number  0064
KEY_IN_BUFF . . . . . . . . . . .     Number  0060
KEY_OUT_BUFF  . . . . . . . . . .     Number  0060
KEY_STATUS  . . . . . . . . . . .     Number  0064
KEY_TEST_OK . . . . . . . . . . .     Number  0055
KIN_287 . . . . . . . . . . . . .     Number  0004
KIN_CPU_SPEED . . . . . . . . . .     Number  0010
KIN_KEY_LOCK  . . . . . . . . . .     Number  0080
KIN_MANUF . . . . . . . . . . . .     Number  0020
KIN_P_DISPLAY . . . . . . . . . .     Number  0040
KOUT_A20  . . . . . . . . . . . .     Number  0002
KOUT_CLK_OUT  . . . . . . . . . .     Number  0040
KOUT_CPU_RESET  . . . . . . . . .     Number  0001
KOUT_CPU_SPEED  . . . . . . . . .     Number  000C
KOUT_DATA_OUT . . . . . . . . . .     Number  0080
KOUT_IN_FULL  . . . . . . . . . .     Number  0020
KOUT_OUT_FULL . . . . . . . . . .     Number  0010
KSTAT_CMD_DATA  . . . . . . . . .     Number  0008
KSTAT_INHIBIT . . . . . . . . . .     Number  0010
KSTAT_IN_FULL . . . . . . . . . .     Number  0002
KSTAT_OUT_FULL  . . . . . . . . .     Number  0001
KSTAT_P_ERROR . . . . . . . . . .     Number  0080
KSTAT_RTO . . . . . . . . . . . .     Number  0040
KSTAT_SYS_FLAG  . . . . . . . . .     Number  0004
KSTAT_TTO . . . . . . . . . . . .     Number  0020
K_CPU_FAST  . . . . . . . . . . .     Number  000C
K_CPU_HIGH  . . . . . . . . . . .     Number  0004
K_CPU_SLOW  . . . . . . . . . . .     Number  0008

LATCH_CNT0  . . . . . . . . . . .     Number  0000
LATCH_CNT1  . . . . . . . . . . .     Number  0040
LATCH_CNT2  . . . . . . . . . . .     Number  0080
LEFTALT . . . . . . . . . . . . .     Number  0002
```

Microsoft (R) Macro Assembler Version 4.00 8/7/86 10:26:25

KSUBS Copyright (c) 1982,83,84,85,86 COMPAQ Computer Corp. Symbols-4

```
LEFTCTRL . . . . . . . . . . . .     Number  0001
LEFTSHF  . . . . . . . . . . . .     Number  0002

NEW_KEY  . . . . . . . . . . . .     N PROC  0067   ROM    Global  Length = 000C
NEW_STATUS . . . . . . . . . . .     N PROC  0073   ROM    Global  Length = 0012
NOT_ENTER  . . . . . . . . . . .     L NEAR  0044   ROM
NOT_FILLER . . . . . . . . . . .     L NEAR  0072   ROM
NOT_SLASH  . . . . . . . . . . .     L NEAR  004E   ROM
NO_CNT . . . . . . . . . . . . .     L NEAR  019F   ROM
NO_KEY . . . . . . . . . . . . .     L NEAR  0062   ROM
NUMKEY . . . . . . . . . . . . .     Number  0020
NUMLOCK  . . . . . . . . . . . .     Number  0020
NUM_LED  . . . . . . . . . . . .     Number  0002

OLDRET . . . . . . . . . . . . .     L NEAR  005D   ROM
OLD_KEY  . . . . . . . . . . . .     N PROC  0035   ROM    Global  Length = 0032

PUT_END  . . . . . . . . . . . .     L NEAR  010A   ROM
PUT_KEY  . . . . . . . . . . . .     N PROC  00E5   ROM    Global  Length = 0027

RAM400 . . . . . . . . . . . . .     V WORD  0000          External
RCVD_ACK . . . . . . . . . . . .     Number  0010
READ_CPU . . . . . . . . . . . .     N PROC  01A2   ROM    Global  Length = 002E
READ_KBD . . . . . . . . . . . .     N PROC  01D0   ROM    Global  Length = 0014
READ_SPEED . . . . . . . . . . .     Number  00F1
READ_STATUS  . . . . . . . . . .     N PROC  0031   ROM    Global  Length = 0004
RESET_IP . . . . . . . . . . . .     L NEAR  00DE   ROM
RETCPU . . . . . . . . . . . . .     L NEAR  01CB   ROM
RET_OLD  . . . . . . . . . . . .     L NEAR  0064   ROM
RID_1ST  . . . . . . . . . . . .     Number  0040
RID_IP . . . . . . . . . . . . .     Number  0080
RIGTALT  . . . . . . . . . . . .     Number  0008
RIGTCTRL . . . . . . . . . . . .     Number  0004
RIGTSHF  . . . . . . . . . . . .     Number  0001

S  . . . . . . . . . . . . . . .     Number  0080
SAVEHEAD . . . . . . . . . . . .     L NEAR  0022   ROM
SAVETAIL . . . . . . . . . . . .     L NEAR  00F8   ROM
SCRLKEY  . . . . . . . . . . . .     Number  0010
SCRLOCK  . . . . . . . . . . . .     Number  0010
SCRL_LED . . . . . . . . . . . .     Number  0001
SETOUT . . . . . . . . . . . . .     L NEAR  01BB   ROM
SETRET . . . . . . . . . . . . .     L NEAR  01A0   ROM
SET_AUTO . . . . . . . . . . . .     L NEAR  0160   ROM
SET_COUNT  . . . . . . . . . . .     L NEAR  016C   ROM
SET_CPU  . . . . . . . . . . . .     N PROC  010C   ROM    Global  Length = 0096
SET_SPEED  . . . . . . . . . . .     Number  00F0
SET_TYPEMATIC  . . . . . . . . .     N PROC  0085   ROM    Global  Length = 0060
SLOW_CPU . . . . . . . . . . . .     Number  0008
SPEEDIO  . . . . . . . . . . . .     Number  0086
SYSREQ . . . . . . . . . . . . .     Number  0004
S_BIT  . . . . . . . . . . . . .     Number  0040
S_SET  . . . . . . . . . . . . .     L NEAR  01C3   ROM
```

```
Microsoft (R) Macro Assembler  Version 4.00              8/7/86 10:26:25

KSUBS   Copyright (c) 1982,83,84,85,86 COMPAQ Computer Corp.  Symbols-5

TOGGLE_ . . . . . . . . . . . . .      Number  0003
TS_KBD . . . . . . . . . . . . . .     L NEAR  0000          External

WAIT_KEY . . . . . . . . . . . . .     L NEAR  0010    ROM
WOWKEY . . . . . . . . . . . . . .     Number  0008

XOR_S  . . . . . . . . . . . . . .     L NEAR  015A    ROM

Z  . . . . . . . . . . . . . . . .     Number  0040

    678 Source  Lines
    682 Total   Lines
    214 Symbols

  44390 Bytes symbol space free

      0 Warning Errors
      0 Severe  Errors
```

APPENDIX O

TIMER SOURCE CODE

```
;*****************************************************************************
;
;   Name:         TIMER - Hardware Timer Interrupt  INT 8
;
;   Group:        ROM
;
;   Revision:     A
;
;   Date:         May 25, 1986
;
;   Author:       Lance Pontiff
;
;*****************************************************************************
;
;  CHANGES:
;
;   DATE      REVISION                      DESCRIPTION
;  --------   --------   ------------------------------------------------------
;  01/28/85   original   Adapted from DeskPro Rev E ROM.
;
;*****************************************************************************
;
;  FUNCTIONAL DESCRIPTION:
;
;       Hardware timer interrupt routine.  Interrupts about 18.2 times
;       per second.
;               Increments 32 bit timer counter (timems, timels)
;               If counter = 1800b0h then resets to zero and sets
;                       timerol to 1 to indicate 24 passed
;               Check floppy motor time out counter.  If counted down
;                       to zero turns off motor drive
;               Enables 8259a interrupt controller again
;               Does timer tick int 1ch for user routine
;               Returns from interrupt
;
;       Since the user could put a long program in, interrupts
;       are enabled thus using the 8259a
;
;*****************************************************************************

        page
;
;  Publics
;
        public  _timer                  ;       system timer interrupt entry
;
;  Externals
;
        extrn   ram400:word             ;       ram segment
        extrn   timels:word             ;       low word of timer count
        extrn   timems:word             ;       high word of timer count
        extrn   timerol:byte            ;       timer rolled past 24 hrs if 1
        extrn   timeout:byte            ;       disk motor timeout
        extrn   motor:byte              ;       disk motor status
;
;  Equates
;
        include pic_def.equ             ;       8259a PIC equates
        include disk_def.equ            ;       765-related equates
        include key_def.equ             ;
        include cnt_def.equ

        page
ROM     segment byte public 'ROM'
```

```
        assume  cs:ROM, ds:seg ram400

        page
;*****************************************************************************
;
;       Call interrupt 1c which points to a dummy interrupt return if
;       the user has not specified a subroutine to be called periodically.
;
;       Unwind interrrupt controller before we call user routine
;*****************************************************************************
goint1c:
;
; Perform INT 1CH, send EOI to PIC, last restore stack to original state. (glb)
;
        int     1ch                     :::     go to user timer routine
;
        mov     al,EOI                  :::     reset master interrupt chip
        out     PIC1_CMD,al             :::
;
        pop     dx                      :::     restore used registers
        pop     ax                      :::
        pop     ds                      :::
;
        iret                            :::     *** RETURN ***

;*****************************************************************************
;     S Y S T E M   T I M E R   I N T E R R U P T   E N T R Y   P O I N T
;-----------------------------------------------------------------------------
;
;       This interrupt occurs 18.2 times per second
;
_timer  proc    far
        push    ds                      :::     Push registers this order
        push    ax                      :::     save used registers
        push    dx                      :::

        mov     ax,seg ram400           :::     load ds to point to ram area
        mov     ds,ax                   :::
;*****************************************************************************
;       Increment the 32 bit counter
;*****************************************************************************
        inc     [timels]                ::: Q:  bump the ls word, rollover?
        jnz     chk24                   :::  N: branch to 24 hour check
        inc     [timems]                :::  Y: ripple carry
chk24:
        cmp     [timems],18h            ::: Q:  reached 24 hour count 1800b0h?
        jnz     chkdisk                 :::  N: branch if not at 24 hour count
        mov     ax,00b0h                :::  Y: prepare to compare
        sub     ax,[timels]             ::: Q:  high reached?
        jnz     chkdisk                 :::  N: branch if not at 24 hour count
                                        :::  Y: count reached 1800b0h 24 hours
        mov     [timels],ax             :::     reset 32 bit counter
        mov     [timems],ax             :::
        inc     ax                      :::     ax=1
        mov     [timerol],al            :::     set 24 hour flag
;*****************************************************************************
;       Check if disk motors running
;*****************************************************************************
chkdisk:
        mov     al,[timeout]            :::     get timeout count
        cmp     al,-1                   ::: Q:  max count?
        jne     check_to                :::  N: check for timeout
        test    [motor],7               ::: Q:  any motors running?
        jz      check_to                :::  N:
```

BAD ORIGINAL

123

```
        test    al,A_BIT                ;;; Q:  AUTO bit set?
        jz      check_to                ;;;  N: don't slow CPU down
        test    al,S_BIT                ;;; Q:  CPU in HIGH speed?
        jz      check_to                ;;;  N:
        mov     al,92h                  ;;;  Y: set CPU to FAST speed
        out     FCNT_MODE,al            ;;;
        jmp     $+2                     ;;;
        jmp     $+2                     ;;;
        jmp     $+2                     ;;;
        mov     al,FAST_SP              ;;;     get FAST speed count
        out     FCNT_2,al               ;;;
check_to:
        dec     [timeout]               ;;; Q:  disk timeout?
        jnz     gointlc                 ;;;  N:
        mov     al,MOTOR_OFF_DA         ;;;  Y: turn off motors, leave dma on
        mov     dx,DIGOUTREG            ;;;
        out     dx,al                   ;;;
        test    [motor],7               ;;; Q:  any motors running?
        jz      mtroff                  ;;;  N:
        in      al,SPEEDIO              ;;;  Y: get speed information
        test    al,A_BIT                ;;; Q:  AUTO bit set?
        jz      mtroff                  ;;;  N: don't slow CPU down
        test    al,S_BIT                ;;; Q:  CPU in HIGH speed?
        jz      mtroff                  ;;;  N:
        mov     al,92h                  ;;;  Y: set CPU to HIGH speed
        out     FCNT_MODE,al            ;;;
mtroff:
        and     [motor],0f0h            ;;;     turn off motor status bits
        jmp     gointlc
_timer  endp

ROM     ends
        end
```

124

```
PAGE    55,132
;*****************************************************************************
TITLE   MODE_SPE (C)Copyright COMPAQ Computer Corporation 1983,84,85,86
;*****************************************************************************
;
;   Title:      MODE - COMPAQ DOS 3.1
;
;   Module:     MODE_SPE
;
;   Version:    3.10
;
;   Date:       MARCH 8, 1985
;
;   Author:     Randy Spurlock
;               (From V2.10 by Caldwell Crosswy)
;
;*****************************************************************************
;  CHANGES:
;
;     DATE     REVISION                 DESCRIPTION
;   --------   --------    ------------------------------------------------
;   03/08/85   Original
;   06/05/86   3.10        EGH - Added 386 speed commands
;*****************************************************************************
;   Functional Description:
;
;   This module handles the speed options of the MODE utility. This module
;   is called when the main module determines that the speed option format
;   has been selected.
;*****************************************************************************
        SUBTTL  Code Segment
        PAGE
;*****************************************************************************
;                  Define the Code Segment for this module                   ;
;----------------------------------------------------------------------------;
CODE    SEGMENT BYTE PUBLIC 'CODE'
        ASSUME  CS:CODE,DS:CODE,ES:CODE,SS:CODE
        SUBTTL  Include Files
        PAGE
;----------------------------------------------------------------------------;
;             Process any Include Files needed by this module                ;
;----------------------------------------------------------------------------;
INCLUDE BIOS.MAC                        ;Include BIOS macros
INCLUDE DOS.EQU                         ;Include DOS equates
INCLUDE DOS.MAC                         ;Include DOS macros
INCLUDE MODE.EQU                        ;Include MODE equates
INCLUDE MODE.MAC                        ;Include MODE macros
        SUBTTL  Internals/Externals
        PAGE
;----------------------------------------------------------------------------;
;           Define any Internals/Externals needed by this module             ;
;----------------------------------------------------------------------------;
        PUBLIC  MODE_SPE                ;SPEED options(MODE_SPE)
        EXTRN   GET_PARM:NEAR           ;Get parameter routine
        EXTRN   MATCH:NEAR              ;Match string routine
        EXTRN   ASC_BIN:NEAR            ;ASCII to binary routine
        EXTRN   BIN_ASC:NEAR            ;Binary to ASCII routine
        EXTRN   MOV_BLK:NEAR            ;Move block routine
        EXTRN   DISPLAY:NEAR            ;Message display routine
        EXTRN   DEL_TAB_4:WORD          ;Delimiter table offset
        EXTRN   COMMAND_LINE:WORD       ;Command line area
        EXTRN   PARAMETER:WORD          ;Parameter storage area
        EXTRN   SPE_SIZE:ABS            ;Speed table entry size
```

BAD ORIGINAL

```
        EXTRN   SPE_TABLE:NEAR           ;Speed string table
        EXTRN   SPD_TABLE:WORD           ;Speed value table
        EXTRN   STR_TABLE:WORD           ;Speed string table
        EXTRN   SPE_LENGTH:ABS           ;Speed string length
        EXTRN   MACHINE_TYPE:BYTE        ;Machine type byte
        EXTRN   INVALID_PARMS:WORD       ;Invalid parameters msg.
        EXTRN   SPEED_MSG:WORD           ;Speed setting msg.
        EXTRN   SPEED_STRING:WORD        ;Speed offset in msg.
        SUBTTL  Equates
        PAGE
;----------------------------------------------------------------------;
;           Define any special equates needed by this module           ;
;----------------------------------------------------------------------;
COM             EQU     00H              ;Common speed value
FAS             EQU     01H              ;Fast speed value
HIG             EQU     02H              ;High speed value
AUT             EQU     08H              ;Auto speed value
SET             EQU     09H              ;Set speed value
SET_SPEED       EQU     0F0H             ;Set speed func. code
GET_SPEED       EQU     0F1H             ;Get speed func. code
TURBO_IN_PORT   EQU     062H             ;Turbo input port addr.
TURBO_OUT_PORT  EQU     0CFH             ;Turbo output port addr.
SPEED_MASK      EQU     01H              ;Speed bit mask value
SPE_MIN         EQU     01               ;Minimum 386 speed value
SPE_MAX         EQU     50               ;Maximum 386 speed value
;
MODE_SPE        PROC    NEAR             ;Define the entry point
        TEST    DS:[MACHINE_TYPE],COMPAQ;Check for a COMPAQ
        JNZ     TYPE_CHECK               ;Jump if a COMPAQ type
        JMP     SPE_RETURN               ;Go return if not COMPAQ
;
TYPE_CHECK      LABEL   NEAR             ;Here to check type
        TEST    DS:[MACHINE_TYPE],PORT_PLUS;Check for a portable/plus
        JZ      CONT_SPEED               ;Jump if not portable/plus
        JMP     SPE_RETURN               ;Invalid type, go return
;
CONT_SPEED      LABEL   NEAR             ;Here to continue speed
        MOV     AL,PARM_TERM             ;Get parm. terminator
        MOV     AH,BUFF_TERM             ;Get buffer terminator
        MOV     BX,OFFSET DEL_TAB_4      ;Get delimiter table
        MOV     CL,PARM_SIZE             ;Get buffer size
        XOR     CH,CH                    ;Use the buffer size
        XOR     DX,DX                    ;Zero starting offset
        MOV     SI,OFFSET COMMAND_LINE   ;Get input offset
        MOV     DI,OFFSET PARAMETER      ;Get parameter offset
        CALL    GET_PARM                 ;Try to get a parameter
        JC      INVALID                  ;Jump if no parameters
;
        MOV     AL,PARM_TERM             ;Get parm. terminator
        MOV     AH,BUFF_TERM             ;Get buffer terminator
        CALL    GET_PARM                 ;Try to get a parameter
        JC      SHOW_SPEED               ;Go get speed if none
;
        TEST    AL,AL                    ;Check for a null parm.
        JNZ     SPE_CHK                  ;Jump if not null parm.
        MOV     AL,PARM_TERM             ;Get parm. terminator
        MOV     AH,BUFF_TERM             ;Get buffer terminator
        CALL    GET_PARM                 ;Try to get actual parm.
        JC      SHOW_SPEED               ;Jump if no parameters
;
        OR      AL,AL                    ;Check for null parm.
        JZ      INVALID                  ;Jump if null entered
;
SPE_CHK         LABEL   NEAR             ;Here to check speed
        MOV     AH,SPE_SIZE              ;Get speed table size
        MOV     AL,PARM_TERM             ;Get parm. terminator
```

BAD ORIGINAL

```
        MOV     SI,OFFSET SPE_TABLE     ;Get speed table offset
        CALL    MATCH                   ;Check for a match
        JNC     SET_SPD                 ;Go set speed
;
        MOV     SI,OFFSET PARAMETER     ;Get parameter offset
        MOV     AL,PARM_TERM            ;Get parameter term.
        CALL    ASC_BIN                 ;Convert the parameter
        JC      INVALID                 ;Jump if non-numeric
;
        CMP     AX,SPE_MIN              ;Check against minimum
        JB      INVALID                 ;Jump if below minimum
        CMP     AX,SPE_MAX              ;Check against maximum
        JA      INVALID                 ;Jump if above maximum
;
        CBW                             ;Extend AL to AX
        MOV     CX,AX                   ;Put speed value into CX
        MOV     AL,4                    ;Set speed match
;
SET_SPD         LABEL   NEAR            ;Here to set speed
        CBW                             ;Extend AL to AX
        MOV     BX,AX                   ;Move AX to BX
;
        TEST    DS:[MACHINE_TYPE],DESKPRO;Check for a deskpro
        JZ      SPC_SPEED               ;Jump if not a deskpro
;
STD_SPEED       LABEL   NEAR            ;Here for deskpro type
        CMP     AL,FAS                  ;Check for fast speed
        JG      SPE_RETURN              ;Jump if greater than fast
;
        MOV     AL,BYTE PTR DS:[SPD_TABLE+BX]
        OUT     TURBO_OUT_PORT,AL       ;Set the requested speed
        JMP     SHORT SPE_RETURN        ;Go return to caller
;
SPC_SPEED       LABEL   NEAR            ;Here for magnum type
        TEST    DS:[MACHINE_TYPE],LIGHTNING;Check for a lightning
        JNZ     SET_SPC                 ;Jump if lightning
        CMP     AL,HIG                  ;Check for high speed
        JG      SPE_RETURN              ;Jump if greater than high
;
SET_SPC         LABEL   NEAR
        MOV     AL,BYTE PTR DS:[SPD_TABLE+BX]
        MOV     AH,SET_SPEED            ;Get set speed code
        KEYBOARD                        ;Set the requested speed
        JMP     SHORT SPE_RETURN        ;Go return to caller
;
INVALID         LABEL   NEAR            ;Here if invalid parameters
        MOV     DX,OFFSET INVALID_PARMS ;Get error msg. offset
        CALL    DISPLAY                 ;Display the error msg.
        JMP     SHORT SPE_RETURN        ;Go return to caller
;
SHOW_SPEED      LABEL   NEAR            ;Here to get speed
        TEST    DS:[MACHINE_TYPE],DESKPRO;Check for a deskpro
        JZ      SPC_GET                 ;Jump if not a deskpro
;
STD_GET         LABEL   NEAR            ;Here for a deskpro
        IN      AL,TURBO_IN_PORT        ;Input status byte
        AND     AL,SPEED_MASK           ;Mask off all but speed
        JMP     SHORT GET_STR           ;Go get speed string
;
SPC_GET         LABEL   NEAR            ;Here for a magnum
        MOV     AH,GET_SPEED            ;Get speed function code
        KEYBOARD                        ;Get current speed
        CMP     AL,SET                  ;Set speed value?
        JNE     GET_STR                 ;Go get string
        CALL    BIN_ASC                 ;Convert value to ASCII
        XCHG    AL,AH                   ;Exchange digits
```

BAD ORIGINAL

```
        MOV     DI,OFFSET SPEED_STRING  ;Get offset into msg.
        STOSW                           ;Store value in message
        JMP     SHORT DIS_SPEED         ;Go display speed
GET_STR         LABEL   NEAR            ;Here to get speed str.
        SHL     AL,1                    ;Shift for index value
        CBW                             ;Extend to a full word
        MOV     BX,AX                   ;Move index to BX reg.
        MOV     SI,DS:[STR_TABLE+BX]    ;Get pointer to speed
        MOV     AX,SPE_LENGTH           ;Get speed msg. length
        XCHG    AL,AH                   ;Put length in AH
        MOV     DI,OFFSET SPEED_STRING  ;Get offset into msg.
        CALL    MOV_BLK                 ;Move speed to message
;
DIS_SPEED       LABEL   NEAR            ;Here to display speed
        MOV     DX,OFFSET SPEED_MSG     ;Get speed msg. offset
        CALL    DISPLAY                 ;Display the message
;
SPE_RETURN      LABEL   NEAR            ;Here to return
        RET                             ;Return to the caller
;
MODE_SPE        ENDP                    ;End of MODE_SPE proc.
CODE            ENDS                    ;End of the code segment
                END                     ;End of mode_spe module
```

```
Microsoft (R) Macro Assembler  Version 4.00                  8/7/86 10:26:43
TIMER   Copyright (c) 1982,83,84,85,86 COMPAQ Computer Corp.  Page     1-1

                page    58,132
                title   TIMER   Copyright (c) 1982,83,84,85,86 COMPAQ Computer Corp.
;******************************************************************************
;
; Name:         TIMER - Hardware Timer Interrupt  INT 8
;
; Group:        ROM
;
; Revision:     A
;
; Date:         May 25, 1986
;
; Author:       Lance Pontiff
;
;******************************************************************************
;
;CHANGES:
;
;  DATE     REVISION                DESCRIPTION
;
;01/28/85   original   Adapted from DeskPro Rev E ROM.
;
;******************************************************************************
;
;FUNCTIONAL DESCRIPTION:
;
;       Hardware timer interrupt routine.  Interrupts about 18.2 times
;       per second.
;               Increments 32 bit timer counter (timems, timels)
;               If counter = 1800b0h then resets to zero and sets
;                       timerol to 1 to indicate 24 passed
;               Check floppy motor time out counter.  If counted down
;                       to zero turns off motor drive
;               Enables 8259a interrupt controller again
;               Does timer tick int 1ch for user routine
;               Returns from interrupt
;
;       Since the user could put a long program in, interrupts
;       are enabled thus using the 8259a
;
;******************************************************************************
```

```
Microsoft (R) Macro Assembler  Version 4.00                8/7/86 10:26:43
TIMER   Copyright (c) 1982,83,84,85,86 COMPAQ Computer Corp.  Page     1-2

                                page
                        ;  Publics
                        ;
                                public  _timer              ;       system timer interrupt entry
                        ;
                        ;  Externals
                        ;
                                extrn   ram400:word         ;       ram segment
                                extrn   timels:word         ;       low word of timer count
                                extrn   timems:word         ;       high word of timer count
                                extrn   timerol:byte        ;       timer rolled past 24 hrs if 1
                                extrn   timeout:byte        ;       disk motor timeout
                                extrn   motor:byte          ;       disk motor status
                        ;
                        ;  Equates
                        ;
                      C         include pic_def.equ         ;       8259a PIC equates
                      C ;*********************************************************************
                      C ;       8259 programmable interrupt controllers
                      C ;*********************************************************************
                      C ;
                      C ;       Master interrupt controller parameters
                      C ;
 = 0020               C PIC1_CMD        =       20H         ; 8259A command register.
 = 0021               C PIC1_INIT       =       21H         ; 8259A initialization register.
 = 0020               C PIC1_STAT       =       20H         ; 8259A status (who interrupted)
 = 0021               C PIC1_MASK       =       21H         ; 8259A operation control word #1.
                      C ;
 = 0011               C PIC1_ICW1_VAL   =       11H         ; Edge trig, 8 interval, cascade, ICW4.
 = 0008               C PIC1_ICW2_VAL   =       08H         ; Interrupt vector address.
 = 0004               C PIC1_ICW3_VAL   =       04H         ; Slave id.
 = 0001               C PIC1_ICW4_VAL   =       01H         ; 8088 mode, norm EOI, non-buf, no nest.
                      C ;
                      C ;       Slave interrupt controller parameters
                      C ;
 = 00A0               C PIC2_CMD        =       0A0H        ; 8259A command register.
 = 00A1               C PIC2_INIT       =       0A1H        ; 8259A initialization register.
 = 00A0               C PIC2_STAT       =       0A0H        ; 8259A status (who interrupted)
 = 00A1               C PIC2_MASK       =       0A1H        ; 8259A operation control word #1.
                      C ;
 = 0011               C PIC2_ICW1_VAL   =       11H         ; Edge trig, 8 interval, cascade, ICW4.
 = 0070               C PIC2_ICW2_VAL   =       70H         ; Interrupt vector address.
 = 0002               C PIC2_ICW3_VAL   =       02H         ; Master id.
 = 0001               C PIC2_ICW4_VAL   =       01H         ; 8088 mode, norm EOI, non-buf, no nest.
                      C ;
 = 00FF               C MASK_DISABLE    =       0FFH        ; Mask register, no levels allowed.
 = 000B               C READ_ISR        =       0BH         ; Command to read PIC In-Service-Reg.
 = 0020               C EOI             =       20H         ; End-Of-Interrupt (non-specific).
                      C ;
 = 00FE               C IRQ0_ENABLE     =       11111110B   ; Mask to enable IRQ0.
 = 00FD               C IRQ1_ENABLE     =       11111101B   ; Mask to enable IRQ1.
 = 00FB               C IRQ2_ENABLE     =       11111011B   ; Mask to enable IRQ2.
 = 00F7               C IRQ3_ENABLE     =       11110111B   ; Mask to enable IRQ3.
```

```
Microsoft (R) Macro Assembler - Version 4.00          8/7/86 10:26:43
TIMER   Copyright (c) 1982,83,84,85,86 COMPAQ Computer Corp.  Page     1-3

 = 00EF                  C  IRQ4_ENABLE    =     11101111B       ; Mask to enable IRQ4.
 = 00DF                  C  IRQ5_ENABLE    =     11011111B       ; Mask to enable IRQ5.
 = 00BF                  C  IRQ6_ENABLE    =     10111111B       ; Mask to enable IRQ6.
 = 007E                  C  IRQ7_ENABLE    =     01111110B       ; Mask to enable IRQ7.
                         C  ;
 = 00FE                  C  IRQ8_ENABLE    =     11111110B       ; Mask to enable IRQ8.
 = 00FD                  C  IRQ9_ENABLE    =     11111101B       ; Mask to enable IRQ9.
 = 00FB                  C  IRQ10_ENABLE   =     11111011B       ; Mask to enable IRQ10.
 = 00F7                  C  IRQ11_ENABLE   =     11110111B       ; Mask to enable IRQ11.
 = 00EF                  C  IRQ12_ENABLE   =     11101111B       ; Mask to enable IRQ12.
 = 00DF                  C  IRQ13_ENABLE   =     11011111B       ; Mask to enable IRQ13.
 = 00BF                  C  IRQ14_ENABLE   =     10111111B       ; Mask to enable IRQ14.
 = 007F                  C  IRQ15_ENABLE   =     01111111B       ; Mask to enable IRQ15.
                         C  ;
                         C          include disk_def.equ        ;       765-related equates
                         C  ;*************************************************************************
                         C  ;         765 (i8272) disk controller
                         C  ;*************************************************************************
                         C  ;
 = 03F2                  C  DIGOUTREG      =     03f2h           ; Digital output register's i/o address
 = 03F7                  C  DIGINREG       =     03f7h           ; Digital input register's i/o address
 = 0080                  C  DSKCHG         =     80h             ; Change line - ms bit of diginreg
 = 03F4                  C  SREG765        =     03f4h           ; 765's status register i/o address
 = 03F5                  C  DREG765        =     03f5h           ; 765's data register i/o address
 = 0080                  C  MULTI_TRACK    =     80h             ; Increment to next track bit
 = 0000                  C  RESET          =     00h             ; Reset the 765 device
 = 000C                  C  NOT_RESET      =     0ch             ; Release reset
 = 000C                  C  MOTOR_OFF_DA   =     0ch             ; Motors off, enable dma+int, sel drv a
 = 001C                  C  MOTOR_ON       =     1ch             ; Turn the drive motor on
 = 03F2                  C  DISKSEL        =     03f2h           ; Disk select register
                            ;
                         C          include key_def.equ         ;
                         C  ;
                         C  ;       Equates for 8042 keyboard controller.
                         C  ;
 = 0064                  C  KEY_STATUS     =     64H             ; 8042 status registers (read-only).
 = 0060                  C  KEY_OUT_BUFF   =     60H             ; 8042 output buffer (read-only).
 = 0060                  C  KEY_IN_BUFF    =     60H             ; 8042 input buffer (write-only).
 = 0064                  C  KEY_CMD        =     64H             ; 8042 command register.
                         C  ;
                         C  ;       Equates for KEY_CMD
                         C  ;
 = 0020                  C  KCMD_RD        =     20H             ; Read 8042 command byte.
 = 0060                  C  KCMD_WT        =     60H             ; Next byte is a command.
 = 00AA                  C  KCMD_SELF_TEST =     0AAH            ; Keyboard self test command.
 = 00AB                  C  KCMD_INTF_TEST =     0ABH            ; Keyboard interface test.
 = 00AC                  C  KCMD_DIAG_DUMP =     0ACH            ; Keyboard diagnostic dump.
 = 00AD                  C  KCMD_DISABLE   =     0ADH            ; Disable keyboard command.
 = 00AE                  C  KCMD_ENABLE    =     0AEH            ; Enable keyboard command.
 = 00C0                  C  KCMD_RD_INPUT  =     0C0H            ; Read keyboard input port.
 = 00D0                  C  KCMD_RD_OUTPUT =     0D0H            ; Read keyboard output port.
 = 00D1                  C  KCMD_WT_OUTPUT =     0D1H            ; Write keyboard output port.
 = 00E0                  C  KCMD_RD_TINPUTS =    0E0H            ; Read keyboard T inputs.
 = 00F0                  C  KCMD_PULSE_OUT =     0F0H            ; Pulse output port.
```

```
Microsoft (R) Macro Assembler  Version 4.00                 9/7/86 10:26:43
TIMER   Copyright (c) 1982,83,84,85,86 COMPAQ Computer Corp.  Page     1-4

                              C  ;
                              C  ;      Keyboard Commands
                              C  ;
 = 00FF                       C  KCMD_RESET      =     0FFh         ; Reset keyboard.
 = 00FE                       C  KCMD_RESEND     =     0FEH         ; Resend transmission.
 = 00FD                       C  KCMD_NOP        =     0FDH         ; NOP.
 = 00F6                       C  KCMD_DEFAULT    =     0F6H         ; Set default values.
 = 00F5                       C  KCMD_DIS_KBD    =     0F5H         ; Disable keyboard.
 = 00F4                       C  KCMD_ENA_KBD    =     0F4H         ; Enable keyboard.
 = 00F3                       C  KCMD_SETTYPE    =     0F3H         ; Set typematic rate.
 = 00EE                       C  KCMD_ECHO       =     0EEH         ; Echo characters.
 = 00ED                       C  KCMD_LEDS       =     0EDH         ; Reset mode LED's.
                              C  ;
                              C  ;      Below are special commands for the COMPAQ 8042.
                              C  ;      These 8042 commands are not IBM AT compatible.
                              C  ;
 = 00A3                       C  CPU_HIGH        =     0A3H         ; Enable 386 CPU speed variation
 = 00A5                       C  CPU_READ        =     0A5H         ; Read CPU speed and attached keyboard
                              C  ;
                              C  ;      When the special COMPAQ 8042 command "CPU READ" above is
                              C  ;      issued to the 8042, a byte of information with the definitions
                              C  ;      below is returned.  All other bit positions are undefined.
                              C  ;
 = 0004                       C  HIGH_CPU        =     00000100B    ; CPU currently set to high speed
 = 0008                       C  SLOW_CPU        =     00001000B    ; CPU currently set to slow speed
 = 000C                       C  FAST_CPU        =     00001100B    ; CPU currently set to fast speed
 = 0020                       C  KBD_TYPE        =     00100000B    ; 0/1 - 11 bit keyboard/9bit keyboard
                              C  ;
                              C  ;      Below are the count values used to regulate the 386 CPU speed.
                              C  ;
 = 0024                       C  COMM_SP         =     24h          ; COMMON speed count value ÷ 286/6  MHz
 = 0022                       C  FAST_SP         =     22h          ; FAST speed count value   - 286/8  MHz
 = 0000                       C  HIGH_SP         =     00h          ; HIGH speed count value   - 386/16 MHz
 = 0031                       C  IBMPC_SP        =     31h          ; approximate PC speed
                              C  ;
                              C  ;      Below are defines to represent the various 386 speeds.
                              C  ;
 = 0000                       C  COMMON_         =     0
 = 0001                       C  FAST_           =     1
 = 0002                       C  HIGH_           =     2
 = 0003                       C  TOGGLE_         =     3
 = 0008                       C  AUTO_           =     8
 = 0009                       C  COUNT_          =     9
                              C  ;
                              C  ;      DMA page 86h is used to maintain the current values of the AUTO bit,
                              C  ;      SPEED bit, and the COUNT value as defined below.
                              C  ;
 = 0086                       C  SPEEDIO         =     86h
 = 0080                       C  A_BIT           =     10000000b
 = 0040                       C  S_BIT           =     01000000b
 = 003F                       C  CNTMSK          =     00111111b
                              C  ;
                              C  ;      Initial 8042 command setup
                              C  ;
```

```
 = 005D              C  INIT_KSETUP    =     05DH         ; PC compatible, disable kbd,
                     C                                    ; Inhibit override, system flag,
                     C                                    ; enable output buffer interrupt.
 = 0045              C  FIN_SETUP      =     045H         ; Do not override key lock.
                     C  ;
 = 0055              C  KEY_TEST_OK    =     055H         ; Successful self test response.
                     C  ;
                     C  ;      Equates for KEY_STATUS
                     C  ;
 = 0001              C  KSTAT_OUT_FULL  =    00000001B    ; 8042 output buffer full.
 = 0002              C  KSTAT_IN_FULL   =    00000010B    ; 8042 input buffer full.
 = 0004              C  KSTAT_SYS_FLAG  =    00000100B    ; 8042 system flag.
 = 0008              C  KSTAT_CMD_DATA  =    00001000B    ; 8042 cmd or data mode.
 = 0010              C  KSTAT_INHIBIT   =    00010000B    ; 8042 keyboard inhibit flag.
 = 0020              C  KSTAT_TTO       =    00100000B    ; 8042 transmit time out.
 = 0040              C  KSTAT_RTO       =    01000000B    ; 8042 receive time out.
 = 0080              C  KSTAT_P_ERROR   =    10000000B    ; 8042 parity error.
                     C  ;
                     C  ;      Equates for KEY_INPUT
                     C  ;
 = 0080              C  KIN_KEY_LOCK    =    10000000B    ; Keyboard lock switch.
 = 0040              C  KIN_P_DISPLAY   =    01000000B    ; Primary display.
 = 0020              C  KIN_MANUF       =    00100000B    ; Manufacturing jumper.
 = 0010              C  KIN_CPU_SPEED   =    00010000B    ; CPU speed 0=AUTO 1=HIGH
 = 0004              C  KIN_287         =    00000100B    ; 287 present 0=TRUE 1=FALSE
                     C  ;
                     C  ;      Equates for KEY_OUTPUT
                     C  ;
 = 0001              C  KOUT_CPU_RESET  =    00000001B    ; CPU reset.
 = 0002              C  KOUT_A20        =    00000010B    ; A20 output.
 = 000C              C  KOUT_CPU_SPEED  =    00001100B    ; CPU speed - x0=slow 01=high 11=fast
 = 0010              C  KOUT_OUT_FULL   =    00010000B    ; Output buffer full.
 = 0020              C  KOUT_IN_FULL    =    00100000B    ; Input buffer full.
 = 0040              C  KOUT_CLK_OUT    =    01000000B    ; Keyboard output clock.
 = 0080              C  KOUT_DATA_OUT   =    10000000B    ; Keyboard data output.
                     C  ;
 = 0004              C  K_CPU_HIGH      =    00000100B    ; High CPU speed
 = 0008              C  K_CPU_SLOW      =    00001000B    ; Slow CPU speed
 = 000C              C  K_CPU_FAST      =    00001100B    ; Fast CPU speed
                     C  ;
                     C  ;      Input for KEYBIT1 keyboard variable in RAM 40:17
                     C  ;
 = 0080              C  INSRTON         =    80H          ;INS          MODE IN EFFECT
 = 0040              C  CAPSLOK         =    40H          ;CAPS_LOCK    MODE IN EFFECT
 = 0020              C  NUMLOCK         =    20H          ;NUM_LOCK     MODE IN EFFECT
 = 0010              C  SCRLOCK         =    10H          ;SCROLL_LOCK MODE IN EFFECT
 = 0008              C  ALTKEY          =    08H          ;ALT          KEY BEING HELD DOWN
 = 0004              C  CTRLKEY         =    04H          ;CTRL         KEY BEING HELD DOWN
 = 0002              C  LEFTSHF         =    02H          ;LEFT_SHIFT   KEY BEING HELD DOWN
 = 0001              C  RIGTSHF         =    01H          ;RIGHT_SHIFT KEY BEING HELD DOWN
                     C  ;
                     C  ;      Input for KEYBIT2 keyboard variable in RAM 40:18
                     C  ;
 = 0080              C  INSKEY          =    80H          ;INS          KEY BEING HELD DOWN
```

```
 = 0040          C  CAPKEY        =    40H       ;CAPS_LOCK   KEY BEING HELD DOWN
 = 0020          C  NUMKEY        =    20H       ;NUM_LOCK    KEY BEING HELD DOWN
 = 0010          C  SCRLKEY       =    10H       ;SCROLL_LOCK KEY BEING HELD DOWN
 = 0008          C  WOWKEY        =    08H       ;CTRL+NUM_LOCK MODE IN EFFECT
 = 0004          C  SYSREQ        =    04H       ;SYS REQ     KEY BEING HELD DOWN
 = 0002          C  LEFTALT       =    02H       ;LEFT ALT    KEY IS DOWN
 = 0001          C  LEFTCTRL      =    01H       ;LEFT CTRL   KEY IS DOWN
                 C  ;
                 C  ;       Bit definitions for ENHBITS variable in RAM 40:96
                 C  ;
 = 0080          C  RID_IP        =    80H       ;READ ID IN PROGRESS
 = 0040          C  RID_1ST       =    40H       ;RECEIVED FIRST ID BYTE
 = 0020          C  F_NUM_LK      =    20H       ;FORCE NUM LOCK ON
 = 0010          C  ENH_KBD       =    10H       ;ENHANCED KEYBOARD IS INSTALLED
 = 0008          C  RIGTALT       =    08H       ;RIGHT ALT KEY IS DOWN
 = 0004          C  RIGTCTRL      =    04H       ;RIGHT CTRL KEY IS DOWN
 = 0002          C  GOT_E0        =    02H       ;LAST CODE WAS 'E0' CODE
 = 0001          C  GOT_E1        =    01H       ;LAST CODE WAS 'E1' CODE
                 C  ;
                 C  ;       Bit definitions for KBD_LED variable in RAM 40:97
                 C  ;
 = 0040          C  KCMD_IP       =    40H       ;KEYBOARD COMMAND IN PROGRESS
 = 0020          C  IP_287        =    20H       ;287 ERROR FIXUP IN PROGRESS
 = 0010          C  RCVD_ACK      =    10H       ;RECEIVED ACK FROM KEYBOARD
 = 0004          C  CAP_LED       =    04H       ;CAPS LOCK   LED IS ON
 = 0002          C  NUM_LED       =    02H       ;NUM LOCK    LED IS ON
 = 0001          C  SCRL_LED      =    01H       ;SCROLL LOCK LED IS ON
                 C  ;

                 C          include cnt_def.equ
                 C  ;*********************************************************************
                 C  ;       8254 programmable interval timers
                 C  ;*********************************************************************
                 C  ;
                 C  ;       PC XT/AT Compatible timer
                 C  ;
                 C  ;*********************************************************************
 = 0040          C  CNT_0         =    40H       ; 8254's COUNTER 0 I/O ADDRESS
 = 0041          C  CNT_1         =    41H       ; 8254's COUNTER 1 I/O ADDRESS
 = 0042          C  CNT_2         =    42H       ; 8254's COUNTER 2 I/O ADDRESS
 = 0043          C  CNT_MODE      =    43H       ; 8254's MODE REGISTER I/O ADDRESS
                 C  ;
 = 0036          C  CNT0_MODE     =    36H       ; SEL CNT_0, LD LSB FIRST, SQUARE WAVE
 = 0000          C  CNT0_SETUP    =    00000H    ; INTR TIMER DIVISOR FOR 18.2 Hz
 = 0054          C  CNT1_MODE     =    54H       ; COUNTER 1, LSB, MODE 2, BIN COUNT
 = 0012          C  CNT1_SETUP    =    12H       ; REFRESH COUNT DIVISOR, 2 BYTES.
 = 00B6          C  CNT2_MODE     =    0B6H      ; SEL CNT_2, LSB FIRST, SQUARE WAVE
 = 0533          C  CNT2_SETUP    =    0533H     ; INITIAL TIMER 2 DIVISOR.
                 C  ;
 = 0000          C  LATCH_CNT0    =    00H       ; CMD TO LATCH CNT_0'S COUNTER.
 = 0040          C  LATCH_CNT1    =    40H       ; CMD TO LATCH CNT_1'S COUNTER.
 = 0080          C  LATCH_CNT2    =    80H       ; CMD TO LATCH CNT_2'S COUNTER.
                 C  ;
                 C  ;*********************************************************************
```

```
Microsoft (R) Macro Assembler  Version 4.00              8/7/86 10:26:43

TIMER   Copyright (c) 1982,83,84,85,86 COMPAQ Computer Corp.  Page     1-7

                            C  ;
                            C  ;        COMPAQ defined failsafe timer
                            C  ;
                            C  ;        Timer 0 is gated into NMI to interrupt applications that run with
                            C  ;           interrupts disabled.
                            C  ;        Timer 1 is not defined.
                            C  ;        Timer 2 is used to put the processor in slow mode by generating
                            C  ;           lots of refresh cycles.
                            C  ;
                            C  ;*************************************************************************
                            C  ;
 = 0048                     C  FCNT_0          =       48H             ; 8254's COUNTER 0 I/O ADDRESS
 = 0049                     C  FCNT_1          =       49H             ; 8254's COUNTER 1 I/O ADDRESS
 = 004A                     C  FCNT_2          =       4AH             ; 8254's COUNTER 2 I/O ADDRESS
 = 004B                     C  FCNT_MODE       =       4BH             ; 8254's MODE REGISTER I/O ADDRESS
                            C  ;
 = 0012                     C  FCNT0_MODE      =       12H             ; COUNTER 0, LSB FIRST, ONE-SHOT
 = 0022                     C  FCNT0_SETUP     =       22H
 = 0042                     C  FCNT1_MODE      =       42H             ; COUNTER 1, LSB FIRST, ONE-SHOT
 = 0022                     C  FCNT1_SETUP     =       22H
 = 0092                     C  FCNT2_MODE      =       92H             ; COUNTER 2, LSB FIRST, ONE-SHOT
 = 0022                     C  FCNT2_SETUP     =       22H
                            C  ;
```

```
Microsoft (R) Macro Assembler Version 4.00                8/7/86 10:26:43
TIMER   Copyright (c) 1982,83,84,85,86 COMPAQ Computer Corp.  Page     1-8

                                page
 0000                   ROM     segment byte public 'ROM'
                                assume  cs:ROM, ds:seg ram400
```

```
Microsoft (R) Macro Assembler  Version 4.00            8/7/86 10:26:43
TIMER   Copyright (c) 1982,83,84,85,86 COMPAQ Computer Corp.  Page    1-9

                                    page
                            ;**************************************************************
                            ;
                            ;       Call interrupt 1c which points to a dummy interrupt return if
                            ;       the user has not specified a subroutine to be called periodically.
                            ;
                            ;       Unwind interrupt controller before we call user routine
                            ;**************************************************************
 0000                       gointic:
                            ;
                            ; Perform INT 1CH, send EOI to PIC, last restore stack to original state. (glb)
                            ;
 0000  CD 1C                        int     1ch             ;;;     go to user timer routine
                            ;
 0002  B0 20                        mov     al,EOI          ;;;     reset master interrupt chip
 0004  E6 20                        out     PIC1_CMD,al     ;;;
                            ;
 0006  5A                           pop     dx              ;;;     restore used registers
 0007  58                           pop     ax              ;;;
 0008  1F                           pop     ds              ;;;
                            ;
 0009  CF                           iret                    ;;;     *** RETURN ***

                            ;**************************************************************
                            ;       S Y S T E M   T I M E R   I N T E R R U P T   E N T R Y   P O I N T
                            ;
                            ;
                            ;       This interrupt occurs 18.2 times per second
                            ;
 000A                       _timer  proc    far             ;;;     Push registers this order
 000A  1E                           push    ds              ;;;     save used registers
 000B  50                           push    ax              ;;;
 000C  52                           push    dx              ;;;

 000D  B8 ---- E                    mov     ax,seg ram400   ;;;     load ds to point to ram area
 0010  8E D8                        mov     ds,ax           ;;;
                            ;**************************************************************
                            ;       Increment the 32 bit counter
                            ;**************************************************************
 0012  FF 06 0000 E                 inc     [timels]        ;;; Q:  bump the ls word, rollover?
 0016  75 04                        jnz     chk24           ;;; N:  branch to 24 hour check
 0018  FF 06 0000 E                 inc     [timems]        ;;; Y:  ripple carry
 001C                       chk24:
 001C  83 3E 0000 E 18              cmp     [timems],18h    ;;; Q:  reached 24 hour count 1800b0h?
 0021  75 13                        jnz     chkdisk         ;;; N:  branch if not at 24 hour count
 0023  B8 00B0                      mov     ax,00b0h        ;;; Y:  prepare to compare
 0026  2B 06 0000 E                 sub     ax,[timels]     ;;; Q:  high reached?
                                    jnz     chkdisk         ;;; N:  branch if not at 24 hour count
                                                            ;;; Y:  count reached 1800b0h 24 hours
```

```
Microsoft (R) Macro Assembler  Version 4.00                 9/7/86 10:26:43
TIMER   Copyright (c) 1982,83,84,85,86 COMPAQ Computer Corp.  Page    1-10

                         ;**********************************************************************
                         ;       Check if disk motors running
                         ;**********************************************************************
 0036                    chkdisk:
 0036  A0 0000 E                  mov     al,[timeout]      ;;;     get timeout count
 0039  3C FF                      cmp     al,-1             ;;; Q:  max count?
 003B  75 1F                      jne     check_to          ;;;  N: check for timeout
 003D  F6 06 0000 E 07            test    [motor],7         ;;; Q:  any motors running?
 0042  74 18                      jz      check_to          ;;;  N:
 0044  E4 86                      in      al,SPEEDIO        ;;;     get speed information
 0046  A8 80                      test    al,A_BIT          ;;; Q:  AUTO bit set?
 0048  74 12                      jz      check_to          ;;;  N: don't slow CPU down
 004A  A8 40                      test    al,S_BIT          ;;; Q:  CPU in HIGH speed?
 004C  74 0E                      jz      check_to          ;;;  N:
 004E  B0 92                      mov     al,92h            ;;;  Y: set CPU to FAST speed
 0050  E6 4B                      out     FCNT_MODE,al      ;;;
 0052  EB 00                      jmp     $+2               ;;;
 0054  EB 00                      jmp     $+2               ;;;
 0056  EB 00                      jmp     $+2               ;;;
 0058  B0 22                      mov     al,FAST_SP        ;;;     get FAST speed count
 005A  E6 4A                      out     FCNT_2,al         ;;;
 005C                    check_to:
 005C  FE 0E 0000 E               dec     [timeout]         ;;; Q:  disk timeout?
 0060  75 9E                      jnz     gointic           ;;;  N:
 0062  B0 0C                      mov     al,MOTOR_OFF_DA   ;;;  Y: turn off motors, leave dma on
 0064  BA 03F2                    mov     dx,DIGOUTREG      ;;;
 0067  EE                         out     dx,al             ;;;
 0068  F6 06 0000 E 07            test    [motor],7         ;;; Q:  any motors running?
 006D  74 0E                      jz      mtroff            ;;;  N:
 006F  E4 86                      in      al,SPEEDIO        ;;;  Y: get speed information
 0071  A8 80                      test    al,A_BIT          ;;; Q:  AUTO bit set?
 0073  74 08                      jz      mtroff            ;;;  N: don't slow CPU down
 0075  A8 40                      test    al,S_BIT          ;;; Q:  CPU in HIGH speed?
 0077  74 04                      jz      mtroff            ;;;  N:
 0079  B0 92                      mov     al,92h            ;;;  Y: set CPU to HIGH speed
 007B  E6 4B                      out     FCNT_MODE,al      ;;;
 007D                    mtroff:
 007D  80 26 0000 E F0            and     [motor],0F0h      ;;;     turn off motor status bits
 0082  E9 0000 R                  jmp     gointic
                         _timer   endp

 0085                    ROM      ends
                                  end
```

```
Microsoft (R) Macro Assembler  Version 4.00              8/7/86 10:26:43
TIMER   Copyright (c) 1982,83,84,85,86 COMPAQ Computer Corp.   Symbols-1

Segments and Groups:

                N a m e                 Size    Align   Combine Class

ROM . . . . . . . . . . . . . . . . .   0085    BYTE    PUBLIC  'ROM'

Symbols:

                N a m e                 Type    Value   Attr

ALTKEY . . . . . . . . . . . . . .      Number  0008
AUTO_  . . . . . . . . . . . . . .      Number  0008
A_BIT  . . . . . . . . . . . . . .      Number  0080

CAPKEY . . . . . . . . . . . . . .      Number  0040
CAPSLOK  . . . . . . . . . . . . .      Number  0040
CAP_LED  . . . . . . . . . . . . .      Number  0004
CHECK_TO . . . . . . . . . . . . .      L NEAR  005C    ROM
CHK24  . . . . . . . . . . . . . .      L NEAR  001C    ROM
CHKDISK  . . . . . . . . . . . . .      L NEAR  0036    ROM
CNT0_MODE  . . . . . . . . . . . .      Number  0036
CNT0_SETUP . . . . . . . . . . . .      Number  0000
CNT1_MODE  . . . . . . . . . . . .      Number  0054
CNT1_SETUP . . . . . . . . . . . .      Number  0012
CNT2_MODE  . . . . . . . . . . . .      Number  00B6
CNT2_SETUP . . . . . . . . . . . .      Number  0533
CNTMSK . . . . . . . . . . . . . .      Number  003F
CNT_0  . . . . . . . . . . . . . .      Number  0040
CNT_1  . . . . . . . . . . . . . .      Number  0041
CNT_2  . . . . . . . . . . . . . .      Number  0042
CNT_MODE . . . . . . . . . . . . .      Number  0043
COMMON_  . . . . . . . . . . . . .      Number  0000
COMM_SP  . . . . . . . . . . . . .      Number  0024
COUNT_ . . . . . . . . . . . . . .      Number  0009
CPU_HIGH . . . . . . . . . . . . .      Number  00A3
CPU_READ . . . . . . . . . . . . .      Number  00A5
CTRLKEY  . . . . . . . . . . . . .      Number  0004

DIGINREG . . . . . . . . . . . . .      Number  03F7
DIGOUTREG  . . . . . . . . . . . .      Number  03F2
DISKSEL  . . . . . . . . . . . . .      Number  03F2
DRE0765  . . . . . . . . . . . . .      Number  03F5
DSKCHG . . . . . . . . . . . . . .      Number  0080

ENH_KBD  . . . . . . . . . . . . .      Number  0010
EOI  . . . . . . . . . . . . . . .      Number  0020

FAST_  . . . . . . . . . . . . . .      Number  0001
FAST_CPU . . . . . . . . . . . . .      Number  000C
FAST_SP  . . . . . . . . . . . . .      Number  0022
FCNT0_MODE . . . . . . . . . . . .      Number  0012
FCNT0_SETUP  . . . . . . . . . . .      Number  0022
FCNT1_MODE . . . . . . . . . . . .      Number  0042
FCNT1_SETUP  . . . . . . . . . . .      Number  0022
```

```
Microsoft (R) Macro Assembler  Version 4.00              8/7/86 10:26:43
TIMER   Copyright (c) 1982,83,84,85,86 COMPAQ Computer Corp.  Symbols-2

FCNT2_MODE . . . . . . . . . . .     Number  0092
FCNT2_SETUP  . . . . . . . . . .     Number  0022
FCNT_0 . . . . . . . . . . . . .     Number  0048
FCNT_1 . . . . . . . . . . . . .     Number  0049
FCNT_2 . . . . . . . . . . . . .     Number  004A
FCNT_MODE  . . . . . . . . . . .     Number  004B
FIN_SETUP  . . . . . . . . . . .     Number  0045
F_NUM_LK . . . . . . . . . . . .     Number  0020

GOINTIC  . . . . . . . . . . . .     L NEAR  0000    ROM
GOT_E0 . . . . . . . . . . . . .     Number  0002
GOT_E1 . . . . . . . . . . . . .     Number  0001

HIGH . . . . . . . . . . . . . .     Number  0002
HIGH_CPU . . . . . . . . . . . .     Number  0004
HIGH_SP  . . . . . . . . . . . .     Number  0000

IBMPC_SP . . . . . . . . . . . .     Number  0031
INIT_KSETUP  . . . . . . . . . .     Number  005D
INSKEY . . . . . . . . . . . . .     Number  0080
INSRTON  . . . . . . . . . . . .     Number  0080
IP_287 . . . . . . . . . . . . .     Number  0020
IRQ0_ENABLE  . . . . . . . . . .     Number  00FE
IRQ10_ENABLE . . . . . . . . . .     Number  00FB
IRQ11_ENABLE . . . . . . . . . .     Number  00F7
IRQ12_ENABLE . . . . . . . . . .     Number  00EF
IRQ13_ENABLE . . . . . . . . . .     Number  00DF
IRQ14_ENABLE . . . . . . . . . .     Number  00BF
IRQ15_ENABLE . . . . . . . . . .     Number  007F
IRQ1_ENABLE  . . . . . . . . . .     Number  00FD
IRQ2_ENABLE  . . . . . . . . . .     Number  00FB
IRQ3_ENABLE  . . . . . . . . . .     Number  00F7
IRQ4_ENABLE  . . . . . . . . . .     Number  00EF
IRQ5_ENABLE  . . . . . . . . . .     Number  00DF
IRQ6_ENABLE  . . . . . . . . . .     Number  00BF
IRQ7_ENABLE  . . . . . . . . . .     Number  007E
IRQ8_ENABLE  . . . . . . . . . .     Number  00FE
IRQ9_ENABLE  . . . . . . . . . .     Number  00FD

KBD_TYPE . . . . . . . . . . . .     Number  0020
KCMD_DEFAULT . . . . . . . . . .     Number  00F6
KCMD_DIAG_DUMP . . . . . . . . .     Number  00AC
KCMD_DISABLE . . . . . . . . . .     Number  00AD
KCMD_DIS_KBD . . . . . . . . . .     Number  00F5
KCMD_ECHO  . . . . . . . . . . .     Number  00EE
KCMD_ENABLE  . . . . . . . . . .     Number  00AE
KCMD_ENA_KBD . . . . . . . . . .     Number  00F4
KCMD_INTF_TEST . . . . . . . . .     Number  00AB
KCMD_IP  . . . . . . . . . . . .     Number  0040
KCMD_LEDS  . . . . . . . . . . .     Number  00ED
KCMD_NOP . . . . . . . . . . . .     Number  00FD
KCMD_PULSE_OUT . . . . . . . . .     Number  00F0
KCMD_RD  . . . . . . . . . . . .     Number  0020
KCMD_RD_INPUT  . . . . . . . . .     Number  00C0
```

```
Microsoft (R) Macro Assembler  Version 4.00                8/7/86 10:24:43

TIMER   Copyright (c) 1982,83,84,85,86 COMPAQ Computer Corp,  Symbols-3

KCMD_RD_OUTPUT . . . . . . . . . .        Number  00D0
KCMD_RD_TINPUTS . . . . . . . . .         Number  00E0
KCMD_RESEND . . . . . . . . . . .         Number  00FE
KCMD_RESET . . . . . . . . . . .          Number  00FF
KCMD_SELF_TEST . . . . . . . . .          Number  00AA
KCMD_SETTYPE . . . . . . . . . .          Number  00F3
KCMD_WT  . . . . . . . . . . . .          Number  0060
KCMD_WT_OUTPUT . . . . . . . . .          Number  00D1
KEY_CMD  . . . . . . . . . . . .          Number  0064
KEY_IN_BUFF  . . . . . . . . . .          Number  0060
KEY_OUT_BUFF . . . . . . . . . .          Number  0060
KEY_STATUS . . . . . . . . . . .          Number  0064
KEY_TEST_OK  . . . . . . . . . .          Number  0055
KIN_287 . . . . . . . . . . . . .         Number  0004
KIN_CPU_SPEED  . . . . . . . . .          Number  0010
KIN_KEY_LOCK . . . . . . . . . .          Number  0080
KIN_MANUF  . . . . . . . . . . .          Number  0020
KIN_P_DISPLAY  . . . . . . . . .          Number  0040
KOUT_A20 . . . . . . . . . . . .          Number  0002
KOUT_CLK_OUT . . . . . . . . . .          Number  0040
KOUT_CPU_RESET . . . . . . . . .          Number  0001
KOUT_CPU_SPEED . . . . . . . . .          Number  000C
KOUT_DATA_OUT  . . . . . . . . .          Number  0080
KOUT_IN_FULL . . . . . . . . . .          Number  0020
KOUT_OUT_FULL  . . . . . . . . .          Number  0010
KSTAT_CMD_DATA . . . . . . . . .          Number  0008
KSTAT_INHIBIT  . . . . . . . . .          Number  0010
KSTAT_IN_FULL  . . . . . . . . .          Number  0002
KSTAT_OUT_FULL . . . . . . . . .          Number  0001
KSTAT_P_ERROR  . . . . . . . . .          Number  0080
KSTAT_RTO  . . . . . . . . . . .          Number  0040
KSTAT_SYS_FLAG . . . . . . . . .          Number  0004
KSTAT_TTO  . . . . . . . . . . .          Number  0020
K_CPU_FAST . . . . . . . . . . .          Number  000C
K_CPU_HIGH . . . . . . . . . . .          Number  0004
K_CPU_SLOW . . . . . . . . . . .          Number  0008

LATCH_CNT0 . . . . . . . . . . .          Number  0000
LATCH_CNT1 . . . . . . . . . . .          Number  0040
LATCH_CNT2 . . . . . . . . . . .          Number  0080
LEFTALT  . . . . . . . . . . . .          Number  0002
LEFTCTRL . . . . . . . . . . . .          Number  0001
LEFTSHF  . . . . . . . . . . . .          Number  0002

MASK_DISABLE . . . . . . . . . .          Number  00FF
MOTOR  . . . . . . . . . . . . .          V BYTE  0000         External
MOTOR_OFF_DA . . . . . . . . . .          Number  000C
MOTOR_ON . . . . . . . . . . . .          Number  001C
MTROFF . . . . . . . . . . . . .          L NEAR  007D    ROM
MULTI_TRACK  . . . . . . . . . .          Number  0080

NOT_RESET  . . . . . . . . . . .          Number  000C
NUMKEY . . . . . . . . . . . . .          Number  0020
NUMLOCK  . . . . . . . . . . . .          Number  0020
```

```
Microsoft (R) Macro Assembler  Version 4.00                8/7/86 10:26:43
TIMER   Copyright (c) 1982,83,84,85,86 COMPAQ Computer Corp.  Symbols-4

NUM_LED . . . . . . . . . . . .      Number  0002

PIC1_CMD . . . . . . . . . . . .     Number  0020
PIC1_ICW1_VAL . . . . . . . . .      Number  0011
PIC1_ICW2_VAL . . . . . . . . .      Number  0008
PIC1_ICW3_VAL . . . . . . . . .      Number  0004
PIC1_ICW4_VAL . . . . . . . . .      Number  0001
PIC1_INIT . . . . . . . . . . .      Number  0021
PIC1_MASK . . . . . . . . . . .      Number  0021
PIC1_STAT . . . . . . . . . . .      Number  0020
PIC2_CMD . . . . . . . . . . . .     Number  00A0
PIC2_ICW1_VAL . . . . . . . . .      Number  0011
PIC2_ICW2_VAL . . . . . . . . .      Number  0070
PIC2_ICW3_VAL . . . . . . . . .      Number  0002
PIC2_ICW4_VAL . . . . . . . . .      Number  0001
PIC2_INIT . . . . . . . . . . .      Number  00A1
PIC2_MASK . . . . . . . . . . .      Number  00A1
PIC2_STAT . . . . . . . . . . .      Number  00A0

RAM400 . . . . . . . . . . . . .     V WORD  0000            External
RCVD_ACK . . . . . . . . . . . .     Number  0010
READ_ISR . . . . . . . . . . . .     Number  000B
RESET . . . . . . . . . . . . .      Number  0000
RID_IST . . . . . . . . . . . .      Number  0040
RID_IP . . . . . . . . . . . . .     Number  0080
RIGTALT . . . . . . . . . . . .      Number  0008
RIGTCTRL . . . . . . . . . . . .     Number  0004
RIGTSHF . . . . . . . . . . . .      Number  0001

SCRLKEY . . . . . . . . . . . .      Number  0010
SCRLOCK . . . . . . . . . . . .      Number  0010
SCRL_LED . . . . . . . . . . . .     Number  0001
SLOW_CPU . . . . . . . . . . . .     Number  0008
SPEEDIO . . . . . . . . . . . .      Number  0086
SREG765 . . . . . . . . . . . .      Number  03F4
SYSREQ . . . . . . . . . . . . .     Number  0004
S_BIT . . . . . . . . . . . . .      Number  0040

TIMELS . . . . . . . . . . . . .     V WORD  0000            External
TIMEMS . . . . . . . . . . . . .     V WORD  0000            External
TIMEOUT . . . . . . . . . . . .      V BYTE  0000            External
TIMEROL . . . . . . . . . . . .      V BYTE  0000            External
TOGGLE_ . . . . . . . . . . . .      Number  0003

WOWKEY . . . . . . . . . . . . .     Number  0008

_TIMER . . . . . . . . . . . . .     F PROC  000A    ROM     Global  Length = 007B


    434 Source  Lines
    438 Total   Lines
    204 Symbols

  44482 Bytes symbol space free
```

142

0 Severe Errors

APPENDIX P

PAL 16L8B LISTING

```
PAL16L8B                                        PAL DESIGN SPECIFICATION
D4-RM32 108053-001                              PAUL R. CULLEY    04/02/86
D4 PAGE RAM BOARD M32 decode logic
Copyright Compaq Computer Houston, Texas 1986

A31  A23  A22  A21  A20  A19  A18  A17  FA20  GND
/2M /M32A /M32B /ROM  /512K /640K /1M  /8M  /M32C  VCC

IF (/A22 * /A21) M32A =
  /A31*/A23*/A22*/A21*/A20*/A19*/A18                ;000000-03FFFF 256K
+ /A31*/A23*/A22*/A21*      /A19*/A18*    /FA20     ;000000-03FFFF 256K
+ /A31*/A23*/A22*/A21*/A20*/A19* A18*        512K   ;040000-07FFFF 256K
+ /A31*/A23*/A22*/A21*/A20* A19*/A18*/A17* 640K     ;080000-09FFFF 128K
+ /A31*/A23*/A22*/A21*/A20* A19* A18* A17* ROM      ;0E0000-0FFFFF 128K
+ /A31*/A23*/A22*/A21* A20*                  1M     ;100000-1FFFFF 1M
+ /A31* A23*/A22*/A21*                       8M     ;800000-9FFFFF 2M

IF (A22 * /A21) M32B =
  /A31*/A23* A22*/A21*                       8M     ;400000-5FFFFF 2M
+  A31* A23* A22*/A21*/A20*/A19*/A18*/A17           ;DIAG 8000000h 128K

IF (A21) M32C =
  /A31* A23* A22* A21* A20*/A19* A18*     /512K     ;F40000-F7FFFF 256K
+ /A31* A23* A22* A21* A20* A19*/A18*/A17*/640K     ;F80000-F9FFFF 128K
+ /A31* A23* A22* A21* A20* A19*/A18* A17           ;FA0000-FBFFFF 128K
+ /A31* A23* A22* A21* A20* A19* A18                ;FC0000-FFFFFF 256K
+ /A31*/A23* A22* A21*                       8M     ;600000-7FFFFF 2M
+ /A31*/A23*/A22* A21*                       2M     ;200000-3FFFFF 2M

FUNCTION TABLE

A31 A23 A22 A21 A20 A19 A18 A17 FA20 /512K /640K /1M /2M /8M /ROM
/M32A /M32B /M32C
;
;                                      / / /
;                 F                    M M M
;A A A A A A A A A  5 6         R      3 3 3
;3 2 2 2 2 1 1 1 2  1 4 1 2 8 O       2 2 2
;1 3 2 1 0 9 8 7 0  2 0 M M M M       A B C
-----------------------------------------------------------------
 H H H L L L L L L  L L L L L L   Z L Z  DIAG
 H L H L H L L L L  L L L L L L   Z H Z  OFF
 H L H H L L L L H  H L L L L L   Z Z H  OFF
 H L L L L L L L H  L L L L L L   H Z Z  OFF
 L L L L L L L L H  L L L L L L   L Z Z  256K
 L L L L H L L L L  L L L L L L   L Z Z  256K
 L L L L L L H L L  L L L L L L   L Z Z  512K
 L L L L L H L L L  L L L L L L   L Z Z  640K
 L L L L L H H H L  L L L L L L   L Z Z  128K AT 0E0000h
 L H H H H L H L L  H L L L L L   Z Z L  256K AT F40000h
 L H H H H H L L L  H H L L L L   Z Z L  128K AT F80000h
 L H H H H H L H L  L L L L L L   Z Z L  128K AT FA0000h
 L H H H H H H L L  L L L L L L   Z Z L  256K AT FC0000h
 L L L L H H H H H  L L L L L L   L Z Z  1M AT 100000h
 L L L H L L L L L  L L L L L L   Z Z L  2M AT 200000h
 L L H L L L L L L  L L L L L L   Z L Z  2M AT 400000h
 L L H H L L L L L  L L L L L L   Z Z L  2M AT 600000h
 L H L L L L L L L  L L L L L L   L Z Z  2M AT 800000h
 L H L L L L L L L  L L L L H L   H Z Z  2M AT 800000h OFF
 L L L H L L L L L  L L L H L L   Z Z H  2M AT 200000h OFF
 L L L L H L L L H  L L H L L L   H Z Z  1M AT 100000h OFF
 L L L L L H H H L  L L L L L H   H Z Z  128K AT 0E0000h OFF
```

DESCRIPTION

```
This PAL is used in the D4 (386) memory board to decode addresses within the
memory space and assert the M32* signal.  It does all the decoding for all the
expected options according to the following jumper settings:

512K 640K                                 1M
H    H   256K    000000-03FFFFh            H        NO EXTENDED MEMORY
L    H   512K    000000-07FFFFh            L        1024K    100000-1FFFFFh
L    L   640K    000000-9FFFFFh
H    L   ****    ILLEGAL

8M 2M
H  H     OK
H  L     2048K   200000-3FFFFFh
L  H     6144K   400000-9FFFFFh  (NOTE: The 8 Meg board asserts both 8M and 2M
L  L     8192K   200000-9FFFFFh    strobes)

When FA20 is low, the address line A20 should be considered to be low.
When FA20 is high, A20 is decoded as usual.
The above set of m32 outputs are wire ORed to form the signal M32*.  The
actual equation for M32 is shown below.

M32 =
   /A31*/A23*/A22*/A21*/A20*/A19*/A18                  ;000000-03FFFF 256K
 + /A31*/A23*/A22*/A21*     /A19*/A18*   /FA20         ;000000-03FFFF 256K
 + /A31*/A23*/A22*/A21*/A20*/A19* A18*        512K     ;040000-07FFFF 256K
 + /A31*/A23*/A22*/A21*/A20* A19*/A18*/A17* 640K       ;080000-09FFFF 128K
 + /A31*/A23*/A22*/A21*/A20* A19* A18* A17* ROM        ;0E0000-0FFFFF 128K
 + /A31* A23* A22* A21* A20*/A19* A18*      /512K      ;F40000-F7FFFF 256K
 + /A31* A23* A22* A21* A20* A19*/A18*/A17*/640K       ;F80000-F9FFFF 128K
 + /A31* A23* A22* A21* A20* A19*/A18* A17             ;FA0000-FBFFFF 128K
 + /A31* A23* A22* A21* A20* A19* A18                  ;FC0000-FFFFFF 256K
 + /A31*/A23*/A22*/A21* A20*                 1M        ;100000-1FFFFF 1M
 + /A31*/A23*/A22* A21*                      2M        ;200000-3FFFFF 2M
 + /A31*/A23* A22*/A21*                      8M        ;400000-5FFFFF 2M
 + /A31*/A23* A22* A21*                      8M        ;600000-7FFFFF 2M
 + /A31* A23*/A22*/A21*                      8M        ;800000-9FFFFF 2M
 +  A31* A23* A22*/A21*/A20*/A19*/A18*/A17             ;DIAG 80C0000h 128K
```

```
PAL16L8B                                       PAL DESIGN SPECIFICATION
D4-RRAS 108054-001                             PAUL R. CULLEY    05/20/86
D4 PAGE RAM BOARD RAS decode logic
Copyright Compaq Computer Houston, Texas 1986

 A31   A23   A22   A21   A20   A19    A18    A17   FA20 GND
/RFSH /RSO /MWE /MRD /WEO /PARRD /PARWR /ROM /RS1  VCC

RSO =
   /A31* /A23* /A22* /A21* /A20* /A19                  ;00000000H 512K
 + /A31* /A23* /A22* /A21* /FA20* /A19                 ;00100000H 512K
 + /A31* /A23* /A22* /A21* /A20*  A19* /A18* /A17      ;00080000H 128K
 + /A31* /A23* /A22* /A21* /A20*  A19*  A18*  A17      ;000E0000H 128K
 + /A31*  A23*  A22*  A21*  A20                        ;00F00000H 1024K
 +  RFSH                                               ; REFRESH

RS1 =
   /A31* /A23* /A22* /A21*  A20* FA20                  ;00100000H 1024K
 +  RFSH                                               ; REFRESH

PARWR =
   MWE* A31*  A23*  A22* /A21* /A20* /A19* /A18* /A17  ;80C00000H 128K

PARRD =
   MRD* A31*  A23*  A22* /A21* /A20* /A19* /A18* /A17  ;80C00000H 128K

WEO =
  MWE*/A31* /A23* /A22* /A21*        /A19              ;00000000H 512K
 +MWE*/A31* /A23* /A22* /A21* /A20*  A19* /A18* /A17   ;00080000H 128K
 +MWE*/A31* /A23* /A22* /A21* /A20*  A19*  A18*  A17* /ROM ;000E0000H 128K
 +MWE*/A31*  A23*  A22*  A21*  A20* /A19*  A18         ;00F40000H 256K
 +MWE*/A31*  A23*  A22*  A21*  A20*  A19* /A18         ;00F80000H 256K
 +MWE*/A31*  A23*  A22*  A21*  A20*  A19*  A18* /A17   ;00FC0000H 128K
 +MWE*/A31*  A23*  A22*  A21*  A20*  A19*  A18*  A17* /ROM ;00FE0000H 128K

FUNCTION TABLE

A31 A23 A22 A21 A20 A19 A18 A17 FA20 /ROM /MWE /MRD /RFSH
/RSO /RS1 /PARWR /PARRD /WEO
;
;                           /       P P
;                 F /   / / R   / / A A /
;A A A A A A A A A R   M M F   R R R R W
;3 2 2 2 2 1 1 1 2 O   W R S   S S W R E
;1 3 2 1 0 9 8 7 0 M   E D H   0 1 R D O
------------------------------------------------------------
 L L L L L L L L H L   L H H   L H H H L 000000H 512K
 L L L L H L L L L L   L H H   L H H H L 100000H 512K
 L L L L L H L L H L   L H H   L H H H L 080000H 128K
 L L L L L H H H H L   L H H   L H H H H 0E0000H 128K
 L L L L L H H H H H   L H H   L H H H L 0E0000H 128K
 L H H H H L H L H L   L H H   L H H H L F40000H 256K
 L H H H H H L L H L   L H H   L H H H L F80000H 256K
 L H H H H H H L H L   L H H   L H H H L FC0000H 128K
 L H H H H H H H H L   L H H   L H H H H FE0000H 128K
 L H H H H H H H H H   L H H   L H H H L FE0000H 128K
 L L L L H L L L H L   H H H   H L H H H 100000H 1024K
 H H H L L L L L H L   L H H   H H L H H 80C00000H 128K
 H H H L L L L L H L   H L H   H H H L H 80C00000H 128K
 H H H H H H H H H L   H H L   L L H H H REFRESH
------------------------------------------------------------

DESCRIPTION

This PAL is used in the D4 (386) memory board to decode the RAS signals and
the parity read and write logic.
```

APPENDIX Q

PAL DESIGN DATA

```
PAL16L8A                                          PAL DESIGN SPECIFICATION
D4-SROMA 108135-001                               PAUL R. CULLEY    06/26/86
System ROM decode logic
Copyright 1986 Compaq Computer Houston, Texas

BALE  LA23   LA22  LA21 LA20 LA19  LA18   LA17   SA16   GND
/MRDC /ROM1OE /RFSH /M32 /M16E /ROM /ROMEN /LOWEN /ROM2OE VCC

M16E  = /LA23*/LA22*/LA21*/LA20* LA19* LA18* LA17         ;00E0000h-00FFFFFh
      +  LA23* LA22* LA21* LA20* LA19* LA18* LA17         ;0FE0000h-0FFFFFFh
      +  M32

ROM   = /LA23*/LA22*/LA21*/LA20* LA19* LA18* LA17* BALE ;00E0000h-00FFFFFh
      +  LA23* LA22* LA21* LA20* LA19* LA18* LA17* BALE ;0FE0000h-0FFFFFFh
      + /LA23*/LA22*/LA21*/LA20* LA19* LA18* LA17* ROM  ;DEGLITCH
      +  LA23* LA22* LA21* LA20* LA19* LA18* LA17* ROM  ;DEGLITCH
      + /BALE* ROM                                      ;LATCH TERM

ROM1OE = ROM *  SA16 * MRDC                             ;00F0000h-00FFFFFh
                                                        ;0FF0000h-0FFFFFFh

ROM2OE = ROM * /SA16 * MRDC                             ;00E0000h-00EFFFFh
                                                        ;0FE0000h-0FEFFFFh

ROMEN  = ROM * MRDC                                     ;BUFFER ENABLE

LOWEN = /LA23* /LA22* /LA21* /LA20* BALE       ; BOTTOM ONE MEGABYTE AND BALE
      + /LA23* /LA22* /LA21* /LA20* LOWEN      ; DEGLITCH TERM
      + /BALE* LOWEN                           ; LATCH TERM
      + RFSH                                   ; AND REFRESH

FUNCTION TABLE

BALE LA23 LA22 LA21 LA20 LA19 LA18 LA17 SA16 /MRDC /RFSH /M32
/ROM /ROM1OE /ROM2OE /ROMEN /M16E /LOWEN

;                         R R
;                         O O R   L
;B L L L L L L L S M R    M M O M O
;A A A A A A A A A R F M  R 1 2 M 1 W
;L 2 2 2 2 1 1 1 1 D S 3  O O O E 6 E
;E 3 2 1 0 9 8 7 6 C H 2  M E E N E N
-------------------------------------------------------
 H L L L L L L L L H H L  H H H H L L   ;INACTIVE
 L L L L L L L L L H H H  H H H H H L   ;INACTIVE
 L L L L L H H H L H H H  H H H H L L   ;ROM2 ADDRESS, NO READ, NO ALE
 H L L L L H H H L H H H  L H H H L L   ;ROM2 ADDRESS, NO READ, ALE
 L L L L L L L L L L H H  L H L L H L   ;ROM2 READ, HOLD ADDRESS ON ROM
 H L L L L L L L L H H H  H H H H H L   ;INACTIVE
 L L L L L L L L L H H H  H H H H H L   ;INACTIVE
 L H H H H H H H H H H H  H H H H L L   ;ROM1 ADDRESS, NO READ, NO ALE
 H H H H H H H H H H H H  L H H H L H   ;ROM1 ADDRESS, NO READ, ALE
 L H H H H L L L H L H H  L L H L H H   ;ROM1 READ, HOLD ADDRESS ON ROM
 H L L L L L L L H H H H  H H H H H L   ;INACTIVE
 H H L L L H H H H H H H  H H H H H H   ;INACTIVE
 H L H L L H H H H H H H  H H H H H H   ;INACTIVE
 H L L H L H H H H H H H  H H H H H H   ;INACTIVE
 H L L L H H H H H H H H  H H H H H H   ;INACTIVE
 H L L L L L H H H H H H  H H H H H L   ;INACTIVE
 H L L L L H L H H H H H  H H H H H L   ;INACTIVE
 H L L L L H H L H H H H  H H H H H L   ;INACTIVE
 H L H H H H H H H H H H  H H H H H H   ;INACTIVE
 H H L H H H H H H H H H  H H H H H H   ;INACTIVE
 H H H L H H H H H H H H  H H H H H H   ;INACTIVE
 H H H H L H H H H H H H  H H H H H H   ;INACTIVE
 H H H H H L H H H H H H  H H H H H H   ;INACTIVE
 H H H H H H L H H H L H  H H H H H L   ;INACTIVE
 H H H H H H H L H H H H  H H H H H H   ;INACTIVE
-------------------------------------------------------

DESCRIPTION

This PAL is used in the D4 (386) processor board to decode ROM addresses
within the two ranges 0FE0000h-0FFFFFFh and 00E0000h-00FFFFFh.  It also
generates the signal that controls the ROM data buffer RD<15..0> and the
signal M16 (memory is 16 bits) during ROM accesses.
The signal LOWEN* is generated by this PAL to indicate when the low one
megabyte of the system is being accessed.
```

APPENDIX R

TESTHRAM SOURCE CODE

```
Microsoft (R) Macro Assembler  Version 4.00                8/13/86 11:49:46
TESTHRAM        Copyright (C) 1985,86 COMPAQ Computer Corp.        Page     1-1

                        page    58,132
                        title   TESTHRAM        Copyright (C) 1985,86 COMPAQ Computer Corp.
                ;*****************************************************************************
                ;
                ;  Name:        TESTHRAM - Test LIGHTNING high memory
                ;
                ;  Group:       ROM
                ;
                ;  Revision:    C
                ;
                ;  Date:        5/15/86
                ;
                ;  Author:      G L Brasher
                ;
                ;*****************************************************************************
                ;
                ; Changes:
                ;
                ;  Date      Revision               Description
                ;  --------  --------   ----------------------------------------------
                ;  05/15/86  Original   Adapted from Deskpro 286 Rev. E.
                ;  06/24/86     B       Display base/high 1M as KB OK.  (glb)
                ;  07/18/86     C       Update bp on exiting TestHighSysMem.  (glb)
                ;
                ;*****************************************************************************
                ;
                ; Functional Description:
                ;    This module sizes LIGHTNING high memory based on the diagnostic byte
                ;      of the 32-bit memory board and tests the highest 128k of memory.
                ;
                ;*****************************************************************************
                .286P
```

```
Microsoft (R) Macro Assembler  Version 4.00                 8/13/86 11:49:46
TESTHRAM        Copyright (C) 1985,86 COMPAQ Computer Corp.        Page     1-2

                                    page
                             ;*****************************************************************
                             ;
                             ;      Public Declarations
                             ;
                             ;*****************************************************************
                             ;
                                    public  SizeHighMem              ; Size all of high memory
                                    public  TestHighSysMem           ; Test high system memory
                                    public  MovSysROM                ; Move System ROM to high system memory
                                    public  Set32Break               ; Set 32-bit break segments
                                    public  ReadDIAG                 ; Read DIAG byte into ah
                             ;
 0000                        ROM    SEGMENT BYTE PUBLIC 'ROM'
                                    ASSUME  cs:ROM
                             ;
                             ;*************************************************************
                             ;
                             ;      External References
                             ;
                             ;*************************************************************
                             ;
                                    extrn   MemTestLinear            ; Memory test
                             ;
                             ;*************************************************************
                             ;
                             ;      Includes
                             ;
                             ;*************************************************************
                             ;
                          C  .list

                          C         include ppi_def.equ
                          C  ;*****************************************************************
                          C  ;
                          C  ;      Port 61H uses discrete buffers to provide some of the same
                          C  ;      signals provided on the COMPAQs and DESKPRO by the 8255
                          C  ;      programmable peripheral interface (PPI).  Since all memory
                          C  ;      in Magnum resides on a peripheral card, no parity errors are
                          C  ;      generated from the mother board.
                          C  ;
                          C  ;*****************************************************************
 = 0061                   C  PPI             =       61H          ; Input portion of old PPI.
 = 0061                   C  PPO             =       61H          ; Output portion of old PPI.
                          C  ;
                          C  ;      BIT equates for INPUT port at 61H (old PPI port B)
                          C  ;
 = 0001                   C  PPI_SPKR_GATE   =       00000001B    ; Bit 0 = timer 2 output enable gate.
 = 0002                   C  PPI_SPKR_DATA   =       00000010B    ; Bit 1 = speaker data.
 = 0004                   C  PPI_ENB_PCHECK  =       00000100B    ; Bit 2 = Not used in Magnum.
 = 0008                   C  PPI_ENB_IOCHECK =       00001000B    ; Bit 3 = parity check enable.
 = 0010                   C  PPI_REFRSH      =       00010000B    ; Bit 4 = refresh input.
 = 0020                   C  PPI_t2OUT       =       00100000B    ; Bit 5 = timer 2 output.
```

```
Microsoft (R) Macro Assembler  Version 4.00                8/13/86 11:49:46
TESTHRAM        Copyright (C) 1985,86 COMPAQ Computer Corp.        Page     1-3

 = 0040                   C  PPI_IOCHECK     =       01000000B      ; Bit 6 = parity error on bus.
 = 0080                   C  PPI_PCHECK      =       10000000B      ; Bit 7 = Not used in Magnum.
                          C  ;
                          C  ;        Bit equates for OUTPUT port at 61H (old PPI port B)
                          C  ;        0=enabled, for pcheck and iocheck.
                          C  ;
 = 0001                   C  PPO_SPKR_GATE   =       00000001B      ; Bit 0 = timer 2 output enable gate.
 = 0002                   C  PPO_SPKR_DATA   =       00000010B      ; Bit 1 = speaker data output.
 = 0004                   C  PPO_ENB_PCHECK  =       00000100B      ; Bit 2 = Not used in Magnum.
 = 0008                   C  PPO_ENB_IOCHECK =       00001000B      ; Bit 3 = parity check enable.
                          C  ;
 = 000C                   C  PPO_INIT        =       00001100B      ; Initially, disable everything.

                             .list
                             ;
```

```
Microsoft (R) Macro-Assembler  Version 4.00                8/13/86 11:49:46

TESTHRAM        Copyright (C) 1985,86 COMPAQ Computer Corp.        Page     1-4

                                        page
                                ;**************************************************************
                                ;
                                ;       SizeHighMem     High memory is felt from HIGH_MAX_SEG down to
                                ;                       HIGH_MIN_SEG (a span of 1M bytes)
                                ;
                                ;               Entry:  CPU is in protected mode
                                ;                       32-bit LIGHTNING memory board is installed
                                ;                       DS contains DATA descriptor
                                ;
                                ;               Exit:   High_Segment = starting segment of high user memory
                                ;                       High_Size    = Size in kbytes of high user memory
                                ;
                                ;               Regs:   ax, bx, cx, di
                                ;
                                ;**************************************************************
 0000                           SizeHighMem     proc    near
                                ;
 0000  B8 0050                          mov     ax,DIAGSEL              ; Move DIAG selector to ax
 0003  1E                               push    ds                      ; Preserve ds
 0004  8E D8                            mov     ds,ax                   ; Set ds to diag byte descriptor
                                ;
 0006  C6 06 0000 FF                    mov     byte ptr ds:[0],0FFh    ; Reset ROM replace, write protect
                                ;
 000B  1F                               pop     ds                      ; Restore ds
                                ;
 000C  C7 06 0081 R 0000                mov     [High_Size],0000h       ; Defaults for High_Size, High_User_Seg
 0012  C6 06 0080 R FA                  mov     [High_Segment],HIGH_USER_SEG
                                ;
                                ;       Feel for high memory size
                                ;
 0017  33 DB                            xor     bx,bx                   ; bx will hold kbytes found
 0019  B1 FF                            mov     cl,HIGH_MAX_SEG         ; cl is starting segment
 001B  B5 F0                            mov     ch,HIGH_MIN_SEG         ; ch is last segment to check
                                ;
 001D  33 FF                            xor     di,di                   ; Working offset
 001F  06                               push    es                      ; Preserve es
                                ;
 0020                           SizeHighMem_Loop:
 0020  88 0E 004C R                     mov     [RAM_desc.base_high],cl ; Set descriptor to target segment
 0024  B8 0048                          mov     ax,RAMSEL
 0027  8E C0                            mov     es,ax                   ; Load selector
                                ;
 0029  26: C7 05 0000                   mov     word ptr es:[di],0000h  ; Reset the first word
                                                                        ; Set the second word
 002E  26: C7 45 02 FFFF                mov     word ptr es:[di+2],0FFFFh
                                ;
 0034  FC                               cld                             ; Charge the bus to FC
 0035  FC                               cld                             ;
 0036  26: 8B 05                        mov     ax,es:[di]              ; Read the first word
 0039  FC                               cld                             ; Charge the bus to FC
 003A  FC                               cld
 003B  FC                               cld
 003C  FC                               cld
```

```
Microsoft (R) Macro Assembler  Version 4.00              8/13/86 11:49:46
TESTHRAM        Copyright (C) 1985,86 COMPAQ Computer Corp.        Page     1-5

 003D  FC                         cld
 003E  0B C0                      or      ax,ax              ; Q: Is RAM at this segment?
 0040  26: 89 05                  mov     es:[di],ax         ;    Clear any parity error from board
 0043  74 04                      jz      Size_1             ; Y: RAM found at this segment
                                                             ; N:
 0045  FE C1                      inc     cl                 ; Increment cl to last good segment
 0047  EB 0B                      jmp     short Size_2       ; Jump to continue

 0049                      Size_1:
 0049  83 C3 40                   add     bx,64              ; Add 64k bytes to bx
 004C  3A CD                      cmp     cl,ch              ; Q: Last segment tested?
 004E  74 04                      je      Size_2             ; Y: Exit high memory sizing loop
                           ;                                   N:
 0050  FE C9                      dec     cl                 ; Dec cl to next segment to check
 0052  EB CC                      jmp     SizeHighMem_Loop   ; Continue in loop to size high memory
                           ;
 0054                      Size_2:
 0054  81 EB 0080                 sub     bx,HIGH_SYS_SIZE   ; Subtract high system memory
 0058  76 08                      jbe     Size_3             ; Q: System size or less found?  Y: Jump
                           ;
 005A  89 1E 0081 R               mov     [High_Size],bx     ; Store high user size
 005E  88 0E 0080 R               mov     [High_Segment],cl  ; Store high user segment
                           ;
 0062                      Size_3:
 0062  07                         pop     es                 ; Restore es
 0063  C3                         ret                        ; *** Return ***
                           ;
                           SizeHighMem    endp
                           ;
```

155

```
Microsoft (R) Macro Assembler  Version 4.00                8/13/86 11:49:46
TESTHRAM        Copyright (C) 1985,86 COMPAQ Computer Corp.        Page     1-6

                                  page
                                ;****************************************************************
                                ;
                                ;       TestHighSysMem  Test High System Memory
                                ;
                                ;               Entry:  CPU is in protected mode
                                ;                       32-bit LIGHTNING memory board is installed
                                ;                       DS contains DATA descriptor
                                ;
                                ;               Exit:   ax == 0000h if no high system memory errors
                                ;                       ax != 0000h if high system memory errors detected
                                ;                               Base_Err.badhigh - hi  8 bits of error address
                                ;                               Base_Err.badlow  - lo 16 bits of error address
                                ;                               Base_Err.badbit  - erroneous bad bits
                                ;
                                ;****************************************************************
 0064                           TestHighSysMem  proc    near
                                ;
 0064  B4 FE                            mov     ah,HIGH_SYS_SEG         ; Segment of high system memory
 0066  C7 06 0076 R 0080                mov     Test_Size,HIGH_SYS_SIZE ; Size of high system memory
                                                                        ; Set 32-bit memory break segment
 006C  C6 06 0083 R FF                  mov     memory_break,HIGH_MAX_SEG
                                ;(B)    mov     Kb_Mesg,FALSE           ; Do not display "KB OK" message
 0071  C6 06 0086 R 01                  mov     Kb_Mesg,TRUE            ; Display "KB OK" message       (B)
 0076  BD 0080                          mov     bp,BASE_MIN             ; Set bp to minimum base memory (B)
 0079  E8 0000 E                        call    MemTest                 ; Test Test_Size of memory starting
                                                                        ;   at segment in ah
 007C  81 C5 0080                       add     bp,BASE_MIN             ; Update bp, KB OK              (C)
                                ;
 0080  0B C0                            or      ax,ax                   ; Q: High system memory error?
 0082  74 12                            jz      TestHighSysMem_Exit     ; N: Jump to exit if not
                                ;                                       ; Y:
 0084  88 2E 005A R                     mov     Base_Err.badhigh,ch     ; Store error address, bad data bits
 0088  89 16 005B R                     mov     Base_Err.badlow,dx
 008C  88 0E 005D R                     mov     Base_Err.badbit,cl
 0090  81 0E 0058 R 0041                or      Test_Status,(B_ERR + HALT_ERR)
                                ;
 0096                           TestHighSysMem_Exit:
 0096  C3                               ret                             ; *** Return ***
                                ;
                                TestHighSysMem  endp
                                ;
```

```
Microsoft (R) Macro Assembler  Version 4.00                8/13/86 11:49:46
TESTHRAM        Copyright (C) 1985,86 COMPAQ Computer Corp.        Page     1-7

                                        page
                                ;*****************************************************************
                                ;
                                ;       MovSysROM       Move System ROM to high memory set up high memory
                                ;                       allocation table.
                                ;
                                ;               Entry:  CPU is in protected mode
                                ;                       32-bit LIGHTNING memory board is installed
                                ;                       DS contains DATA descriptor
                                ;
                                ;               Exit:   00F0000h - 00FFFFFh is copied to
                                ;                       0FF0000h - 0FFFFFFh
                                ;                       RAM_desc, DIAG_desc modified
                                ;
                                ;*****************************************************************
                                ;
 0097                           MovSysROM       proc    near
                                ;
 0097  B0 7F                            mov     al,MEM_7F               ; Update power-up sequence
 0099  E6 84                            out     u_dma,al
                                                                        ; Modify DIAG_desc to be the source
                                                                        ; descriptor and RAM_desc to be the
                                                                        ; destination descriptor.
                                ;
                                ;       Set up DIAG 386 descriptor
                                ;
 009B  C7 06 0050 R FFFF                mov     [DIAG_desc.limit_386],FULL_SIZE
 00A1  C7 06 0052 R 0000                mov     [DIAG_desc.base_low_386],0
 00A7  C6 06 0054 R 0F                  mov     [DIAG_desc.base_386],SYS_ROM_SEG
 00AC  C6 06 0055 R 92                  mov     [DIAG_desc.access_386],DS_acc
 00B1  C6 06 0056 R 00                  mov     [DIAG_desc.gd_limit_386],DIAG_GD_LIMIT
 00B6  C6 06 0057 R 00                  mov     [DIAG_desc.base_high_386],0
                                ;
                                ;       Set up RAM descriptor
                                ;
 00BB  C7 06 0048 R FFFF                mov     [RAM_desc.limit],FULL_SIZE
 00C1  C7 06 004A R 0000                mov     [RAM_desc.base_low],0
 00C7  C6 06 004C R FF                  mov     [RAM_desc.base_high],HIGH_MAX_SEG
 00CC  C6 06 004D R 92                  mov     [RAM_desc.access],DS_acc
 00D1  C7 06 004E R 0000                mov     [RAM_desc.res],0
                                ;
 00D7  06                               push    es                      ; Preserve es, ds
 00D8  1E                               push    ds
                                ;
 00D9  B8 0050                          mov     ax,DIAGSEL
 00DC  8E D8                            mov     ds,ax                   ; ds -> System ROM selector
 00DE  B8 0048                          mov     ax,RAMSEL
 00E1  8E C0                            mov     es,ax                   ; es -> high system RAM selector
                                ;
 00E3  33 F6                            xor     si,si                   ; Zero si, di
 00E5  33 FF                            xor     di,di
                                ;
 00E7  B9 4000                          mov     cx,16384                ; Number of words in a segment
                                ;
```

157

```
Microsoft (R) Macro Assembler  Version 4.00                8/13/86 11:49:46
TESTHRAM         Copyright (C) 1985,86 COMPAQ Computer Corp.          Page     1-8

 00EA  FC                            cld                              ; String op's forward
                                ;
                                     OSP
 00EB  66                       1    db      66h                      ; 16/32 operand size prefix
 00EC  F3/ A5                        rep     movsw                    ; Word move System ROM to high memory
                                ;
 00EE  BB FFE0                       mov     bx,ALLOC_PTR             ; Move allocation table pointer to di
 00F1  8B 3F                         mov     di,[bx]                  ; mov di,[OFFFE0h]
                                ;
 00F3  BB FFE2                       mov     bx,CPU_REV_PTR           ; Move cpu revision pointer to bx
 00F6  8B 37                         mov     si,[bx]                  ; mov si,[OFFFE2h]
                                ;
 00F8  1F                            pop     ds                       ; Restore ds
                                ;
                                ;    Set up DIAG 386 descriptor for DIAG byte access
                                ;
 00E9  C7 06 0050 R 0001             mov     [DIAG_desc.limit_386],DIAG_LIMIT
 00FF  C7 06 0052 R 0000             mov     [DIAG_desc.base_low_386],DIAG_BASE_LOW
 0105  C6 06 0054 R C0               mov     [DIAG_desc.base_386],DIAG_BASE
 010A  C6 06 0055 R 92               mov     [DIAG_desc.access_386],DIAG_ACCESS
 010F  C6 06 0056 R 00               mov     [DIAG_desc.gd_limit_386],DIAG_GD_LIMIT
 0114  C6 06 0057 R 80               mov     [DIAG_desc.base_high_386],DIAG_BASE_HIGH
                                ;
 0119  8B 1E 0081 R                  mov     bx,[High_Size]           ; Move high user memory to bx
                                ;
 011D  1E                            push    ds                       ; Preserve ds
 011E  B8 0050                       mov     ax,DIAGSEL
 0121  8E D8                         mov     ds,ax                    ; ds -> DIAG byte selector
                                ;
 0123  E4 61                         in      al,PPI                   ; Read parity enable/disable
 0125  50                            push    ax                       ; Preserve on stack
 0126  0C 08                         or      al,(PPI_ENB_IOCHECK)     ; Disable I/O parity check
 0128  E6 61                         out     PPO,al
                                ;
 012A  A0 0000                       mov     al,byte ptr ds:[0]       ; Read diag byte
 012D  C6 06 0000 FF                 mov     byte ptr ds:[0],OFFh     ; Reset pending parity
                                ;
 0132  24 F0                         and     al,0F0h                  ; Mask bits 3:0 of diag byte
 0134  26: 88 45 01                  mov     es:[di.INSTALL],al       ; Store diag byte in INSTALL
                                ;
 0138  58                            pop     ax                       ; Restore I/O parity check to previous
 0139  E6 61                         out     PPO,al                   ;    value
                                ;
 013B  26: C6 05 10                  mov     es:[di.ALLOC_FE],FREE_FE ; Set ALLOC_FE to all free
 013F  C1 E3 06                      shl     bx,6                     ; Convert segments to paragraphs
 0142  26: 89 5D 02                  mov     es:[di.HIGH_TOTAL],bx    ; Set total high user memory
 0146  26: 89 5D 04                  mov     es:[di.HIGH_AVAIL],bx    ; Set available high user memory
 014A  B5 FE                         mov     ch,HIGH_SYS_SEG          ; cx = segment address
 014C  32 C9                         xor     cl,cl
 014E  C1 E1 04                      shl     cx,4                     ; Convert cx to 1M paragraph offset
 0151  26: 89 4D 06                  mov     es:[di.HIGH_START],cx    ; Set starting segment
                                ;
 0155  8B FE                         mov     di,si                    ; Move cpu revision pointer to di
                                     mov_ax_gs                        ; Get component, revision from gs
```

```
Microsoft (R) Macro Assembler  Version 4.00               8/13/86 11:49:46
TESTHRAM        Copyright (C) 1985,86 COMPAQ Computer Corp.        Page     1-9

0157  8C E8             1          db      8Ch, 0E8h
0159  26: 88 25                    mov     es:[di.COMPONENT],ah      ; Store component
015C  26: 88 45 01                 mov     es:[di.CPU_REVISION],al   ; Store revision
                        ;
0160  B9 7FFF                      mov     cx,(SYS_ROM_SIZE - 1)     ; Recalculate ROM checksum
0163  BE 8000                      mov     si,SYS_ROM_OFFSET
0166  32 E4                        xor     ah,ah
0168  FC                           cld                               ; String op's increment
                        ;
0169                    MovSysROM_Loop:
0169  26: AC                       lods    byte ptr es:[si]          ; Read a byte
016B  02 E0                        add     ah,al                     ; Add in to checksum
016D  E2 FA                        loop    MovSysROM_Loop            ; Add all (ROM - 1) bytes
                        ;
016F  F6 D4                        not     ah                        ; Complement the checksum
0171  FE C4                        inc     ah                        ; Increment checksum
0173  26: 88 24                    mov     es:[si],ah                ; Store checksum
                        ;
                                                                     ; Replace System ROM and write protect
0176  C6 06 0000 FC                mov     byte ptr ds:[0],NOT (WRITEABLE + NOREPLACE)
017B  1F                           pop     ds                        ; Now executing out of RAM
017C  07                           pop     es
                        ;
017D  C3                           ret                               ; *** Return ***
                        ;
                        MovSysROM          endp
                        ;
```

```
Microsoft (R) Macro Assembler  Version 4.00                  8/13/86 11:49:46
TESTHRAM        Copyright (C) 1985,86 COMPAQ Computer Corp.        Page     1-10

                                         page
                                ;**********************************************************************
                                ;
                                ;       Set32Break      Set base and extended memory 32-bit/16-bit
                                ;                       break segments.  Determined via DIAG byte.
                                ;
                                ;               Entry:  CPU is in protected mode
                                ;                       32-bit LIGHTNING memory board is installed
                                ;                       DS contains DATA descriptor
                                ;
                                ;               Exit:   base_32_break = base segment of 32-bit memory break
                                ;                       ext_32_break  = ext segment of 32-bit memory break
                                ;
                                ;**********************************************************************
                                ;
 017E                           Set32Break      proc    near
                                ;
 017E  E8 01C0 R                        call    ReadDIAG                ; Read DIAG byte into ah
 0181  8A EC                            mov     ch,ah                   ; ch == [DIAG]
                                ;
 0183  BB 0280                          mov     bx,640                  ; Determine base memory 32-bit break
 0186  F6 C5 20                         test    ch,J640                 ; Q: 640k jumper active?
 0189  74 0B                            jz      set_base_break          ; Y: Set base break to 640k
                                ;                                       N:
 018B  BB 0200                          mov     bx,512
 018E  F6 C5 10                         test    ch,J512                 ; Q: 512k jumper active?
 0191  74 03                            jz      set_base_break          ; Y: Set base break to 512k
                                ;                                       N:
 0193  BB 0100                          mov     bx,256                  ; Default to 256k base break
                                ;
 0196                           set_base_break:
 0196  B8 0400                          mov     ax,1024                 ; Convert kb in bx to segment in dl
 0199  F7 E3                            mul     bx
 019B  FE CA                            dec     dl                      ; Make dl (segment - 1)
 019D  88 16 0084 R                     mov     [base_32_break],dl
                                ;
 01A1  BB 0400                          mov     bx,1024                 ; Determine extended memory break
 01A4  F6 C5 40                         test    ch,J1MEG                ; Q: 1 Meg jumper active?
 01A7  75 0B                            jnz     set_ext_break           ; N: Set break to 1 Meg
                                ;                                       Y:
 01A9  BB 0800                          mov     bx,2*1024               ; Set bx to 2 Meg break address
 01AC  F6 C5 80                         test    ch,J2MEG                ; Q: 2 Meg jumper active?
 01AF  75 03                            jnz     set_ext_break           ; N: Set break to 2 Meg
                                ;                                       Y:
 01B1  BB 2800                          mov     bx,10*1024              ; Set break address to 10 Meg
                                ;
 01B4                           set_ext_break:
 01B4  B8 0400                          mov     ax,1024                 ; Convert kb in bx to segment in dl
 01B7  F7 E3                            mul     bx
 01B9  FE CA                            dec     dl                      ; Make dl (segment - 1)
 01BB  88 16 0085 R                     mov     [ext_32_break],dl       ; Save extended 32-bit bread segment
                                ;
 01BF  C3                               ret                             ; *** Return ***
```

```
                    !
                    Set32Break      endp
```

```
Microsoft (R) Macro Assembler  Version 4.00                8/13/86 11:49:46
TESTHRAM        Copyright (C) 1985,86 COMPAQ Computer Corp.        Page     1-12

                                          page
                                  ;*********************************************************
                                  ;
                                  ;       ReadDIAG        Read DIAG byte.
                                  ;
                                  ;               Entry:  CPU is in protected mode
                                  ;                       32-bit LIGHTNING memory board is installed
                                  ;                       DS contains DATA descriptor
                                  ;
                                  ;               Exit:   ah == [DIAG]
                                  ;
                                  ;               Regs:   ax
                                  ;
                                  ;*********************************************************
                                  ;
 01C0                             ReadDIAG        proc    near
                                  ;
                                  ;       Set up DIAG 386 descriptor for DIAG byte access
                                  ;
 01C0  C7 06 0050 R 0001                  mov     [DIAG_desc.limit_386],DIAG_LIMIT
 01C6  C7 06 0052 R 0000                  mov     [DIAG_desc.base_low_386],DIAG_BASE_LOW
 01CC  C6 06 0054 R C0                    mov     [DIAG_desc.base_386],DIAG_BASE
 01D1  C6 06 0055 R 92                    mov     [DIAG_desc.access_386],DIAG_ACCESS
 01D6  C6 06 0056 R 00                    mov     [DIAG_desc.gd_limit_386],DIAG_GD_LIMIT
 01DB  C6 06 0057 R 80                    mov     [DIAG_desc.base_high_386],DIAG_BASE_HIGH
                                  ;
 01E0  1E                                 push    ds                      ; Preserve ds
 01E1  B8 0050                            mov     ax,DIAGSEL
 01E4  8E D8                              mov     ds,ax                   ; ds -> DIAG byte selector
                                  ;
 01E6  E4 61                              in      al,PPI                  ; Read parity enable/disable
 01E8  8A E0                              mov     ah,al                   ; Save current PPI setting in ah
 01EA  0C 08                              or      al,(PPI_ENB_IOCHECK)    ; Disable I/O parity check
 01EC  E6 61                              out     PPO,al
                                  ;
 01EE  A0 0000                            mov     al,byte ptr ds:[0]      ; Read diag byte into al
 01F1  C6 06 0000 FF                      mov     byte ptr ds:[0],0FFh    ; Reset pending parity
                                  ;
 01F6  86 E0                              xchg    ah,al                   ; Move DIAG byte to al, PPI to al
 01F8  E6 61                              out     PPO,al                  ; Set PPI to original setting
 01FA  1F                                 pop     ds                      ; Restore ds
                                  ;
 01FB  C3                                 ret                             ; *** Return ***
                                  ;
                                  ReadDIAG        endp
                                  ;
 01FC                             ROM     ends
                                          end
```

Microsoft (R) Macro Assembler Version 4.00 8/13/86 11:49:46

TESTHRAM Copyright (C) 1985,86 COMPAQ Computer Corp. Symbols-1

Macros:

| N a m e | Lines |
|---|---|
| MOV_AX_GS | 1 |
| MOV_CR0_EAX | 1 |
| MOV_EAX_CR0 | 1 |
| MOV_GS_AX | 1 |
| MOV_GS_DX | 1 |
| OSP | 1 |
| POP_FS | 1 |
| POP_GS | 1 |
| PUSH_FS | 1 |
| PUSH_GS | 1 |

Structures and Records:

| N a m e | Width Shift | # fields Width | Mask | Initial |
|---|---|---|---|---|
| CPU_REV_COM | 0002 | 0002 | | |
| COMPONENT | 0000 | | | |
| CPU_REVISION | 0001 | | | |
| DESC | 0008 | 0005 | | |
| LIMIT | 0000 | | | |
| BASE_LOW | 0002 | | | |
| BASE_HIGH | 0004 | | | |
| ACCESS | 0005 | | | |
| RES | 0006 | | | |
| DESC_386 | 0008 | 0006 | | |
| LIMIT_386 | 0000 | | | |
| BASE_LOW_386 | 0002 | | | |
| BASE_386 | 0004 | | | |
| ACCESS_386 | 0005 | | | |
| GD_LIMIT_386 | 0006 | | | |
| BASE_HIGH_386 | 0007 | | | |
| HIGH_MEMORY | 0008 | 0005 | | |
| ALLOC_FE | 0000 | | | |
| INSTALL | 0001 | | | |
| HIGH_TOTAL | 0002 | | | |
| HIGH_AVAIL | 0004 | | | |
| HIGH_START | 0006 | | | |
| MEM_ERR | 0004 | 0003 | | |
| BADHIGH | 0000 | | | |
| BADLOW | 0001 | | | |
| BADBIT | 0003 | | | |
| TIG_DESC | 0008 | 0005 | | |
| OFFST | 0000 | | | |
| CS_SEL | 0002 | | | |
| TIG_UN | 0004 | | | |
| TIG_ACC | 0005 | | | |
| TIG_RES | 0006 | | | |

```
Microsoft (R) Macro Assembler  Version 4.00                 8/13/86 11:49:46
TESTHRAM        Copyright (C) 1985,86 COMPAQ Computer Corp.        Symbols-2

Segments and Groups:

                N a m e                 Size    Align   Combine Class

DATA . . . . . . . . . . . . . . . .   021D    AT      1C00
ROM  . . . . . . . . . . . . . . . .   01FC    BYTE    PUBLIC  'ROM'

Symbols:

                N a m e                 Type    Value   Attr

A20OFF . . . . . . . . . . . . . . .   Number  00DD
A20_ERR  . . . . . . . . . . . . . .   Number  0010
A20_ON . . . . . . . . . . . . . . .   Number  00DF
ALLOC_PTR  . . . . . . . . . . . . .   Number  FFE0
ASC_ZERO . . . . . . . . . . . . . .   Number  0030

BASE_32_BREAK  . . . . . . . . . . .   L BYTE  0084    DATA
BASE_ERR . . . . . . . . . . . . . .   L 0004  005A    DATA
BASE_FIRST . . . . . . . . . . . . .   Number  0002
BASE_HAL_ERR . . . . . . . . . . . .   L 0004  005E    DATA
BASE_LAST  . . . . . . . . . . . . .   Number  0009
BASE_MIN . . . . . . . . . . . . . .   Number  0080
BASE_SEG_INCR  . . . . . . . . . . .   Number  0001
BCS_DESC . . . . . . . . . . . . . .   L 0008  0038    DATA
BHAL_ERR . . . . . . . . . . . . . .   Number  0004
BRAM_40  . . . . . . . . . . . . . .   Number  0040
BRAM_41  . . . . . . . . . . . . . .   Number  0041
BRAM_42  . . . . . . . . . . . . . .   Number  0042
BRAM_43  . . . . . . . . . . . . . .   Number  0043
BRAM_44  . . . . . . . . . . . . . .   Number  0044
BRAM_45  . . . . . . . . . . . . . .   Number  0045
BRAM_46  . . . . . . . . . . . . . .   Number  0046
BRAM_47  . . . . . . . . . . . . . .   Number  0047
BRAM_SEG . . . . . . . . . . . . . .   Number  0040
BRSEL  . . . . . . . . . . . . . . .   Number  0020
BT_B9  . . . . . . . . . . . . . . .   Number  00B9
BT_BA  . . . . . . . . . . . . . . .   Number  00BA
BT_BB  . . . . . . . . . . . . . . .   Number  00BB
BT_BC  . . . . . . . . . . . . . . .   Number  00BC
B_ERR  . . . . . . . . . . . . . . .   Number  0001

CMEM_D0  . . . . . . . . . . . . . .   Number  00D0
CMEM_D1  . . . . . . . . . . . . . .   Number  00D1
CMEM_D2  . . . . . . . . . . . . . .   Number  00D2
CMEM_D3  . . . . . . . . . . . . . .   Number  00D3
CMEM_D4  . . . . . . . . . . . . . .   Number  00D4
CMOS_BASE  . . . . . . . . . . . . .   L WORD  006A    DATA
CMOS_EXT . . . . . . . . . . . . . .   L WORD  006C    DATA
CMOS_SIZE  . . . . . . . . . . . . .   L WORD  006E    DATA
CON  . . . . . . . . . . . . . . . .   Number  0004
CPU_REV_PTR  . . . . . . . . . . . .   Number  FFE2
CSSEL  . . . . . . . . . . . . . . .   Number  0030
CS_ACC . . . . . . . . . . . . . . .   Number  009A
```

Microsoft (R) Macro Assembler Version 4.00 8/13/86 11:49:46

TESTHRAM Copyright (C) 1985,86 COMPAQ Computer Corp. Symbols-3

```
CS_DESC . . . . . . . . . . . . .       L 0008  0030    DATA

DATA_SEG . . . . . . . . . . . .        Number  1C00
DIAGSEL  . . . . . . . . . . . .        Number  0050
DIAG_2F  . . . . . . . . . . . .        Number  002F
DIAG_ACCESS  . . . . . . . . . .        Number  0092
DIAG_BASE  . . . . . . . . . . .        Number  00C0
DIAG_BASE_HIGH . . . . . . . . .        Number  0080
DIAG_BASE_LOW  . . . . . . . . .        Number  0000
DIAG_DESC  . . . . . . . . . . .        L 0008  0050    DATA
DIAG_GD_LIMIT  . . . . . . . . .        Number  0000
DIAG_LIMIT . . . . . . . . . . .        Number  0001
DIGIT_LEN  . . . . . . . . . . .        Number  0005
DISP_STRING  . . . . . . . . . .        L WORD  0087    DATA    Length = 000B
DK_A0  . . . . . . . . . . . . .        Number  00A0
DK_A1  . . . . . . . . . . . . .        Number  00A1
DK_A2  . . . . . . . . . . . . .        Number  00A2
DK_A3  . . . . . . . . . . . . .        Number  00A3
DK_A4  . . . . . . . . . . . . .        Number  00A4
DK_A5  . . . . . . . . . . . . .        Number  00A5
DK_A6  . . . . . . . . . . . . .        Number  00A6
DK_A7  . . . . . . . . . . . . .        Number  00A7
DK_A8  . . . . . . . . . . . . .        Number  00A8
DK_A9  . . . . . . . . . . . . .        Number  00A9
DK_AA  . . . . . . . . . . . . .        Number  00AA
DK_AB  . . . . . . . . . . . . .        Number  00AB
DK_AC  . . . . . . . . . . . . .        Number  00AC
DK_AD  . . . . . . . . . . . . .        Number  00AD
DK_AE  . . . . . . . . . . . . .        Number  00AE
DK_AF  . . . . . . . . . . . . .        Number  00AF
DPLO . . . . . . . . . . . . . .        Number  0000
DPL1 . . . . . . . . . . . . . .        Number  0020
DPL2 . . . . . . . . . . . . . .        Number  0040
DPL3 . . . . . . . . . . . . . .        Number  0060
DSSEL  . . . . . . . . . . . . .        Number  0018
DS_ACC . . . . . . . . . . . . .        Number  0092
DS_DESC  . . . . . . . . . . . .        L 0008  0018    DATA

EHAL_ERR . . . . . . . . . . . .        Number  0008
EM . . . . . . . . . . . . . . .        Number  0004
ERR_RST  . . . . . . . . . . . .        Number  0003
ES_DESC  . . . . . . . . . . . .        L 0008  0020    DATA
EXT_32_BREAK . . . . . . . . . .        L BYTE  0085    DATA
EXT_ERR  . . . . . . . . . . . .        L 0004  0062    DATA
EXT_FIRST  . . . . . . . . . . .        Number  0010
EXT_HAL_ERR  . . . . . . . . . .        L 0004  0066    DATA
EXT_LAST . . . . . . . . . . . .        Number  00FD
EXT_MIN  . . . . . . . . . . . .        Number  0000
EXT_SEG_INCR . . . . . . . . . .        Number  0001
EX_DOWN  . . . . . . . . . . . .        Number  0004
E_ERR  . . . . . . . . . . . . .        Number  0002

FALSE  . . . . . . . . . . . . .        Number  0000
FOUND_BASE . . . . . . . . . . .        L WORD  0070    DATA
```

```
FOUND_EXT . . . . . . . . . . . .   L WORD  0072  DATA
FOUND_SIZE  . . . . . . . . . . .   L WORD  0074  DATA
FREE_FE . . . . . . . . . . . . .   Number  0010
FULL_SIZE . . . . . . . . . . . .   Number  FFFF
FX_B0 . . . . . . . . . . . . . .   Number  00B0
FX_B1 . . . . . . . . . . . . . .   Number  00B1
FX_B2 . . . . . . . . . . . . . .   Number  00B2
FX_B3 . . . . . . . . . . . . . .   Number  00B3
FX_B4 . . . . . . . . . . . . . .   Number  00B4
FX_B5 . . . . . . . . . . . . . .   Number  00B5
FX_B6 . . . . . . . . . . . . . .   Number  00B6
FX_B7 . . . . . . . . . . . . . .   Number  00B7
FX_B8 . . . . . . . . . . . . . .   Number  00B8

GDT . . . . . . . . . . . . . . .   L 0008  0000  DATA
GDTLIM  . . . . . . . . . . . . .   Number  0057
GDTSEL  . . . . . . . . . . . . .   Number  0008
GDT_DESC  . . . . . . . . . . . .   L 0008  0008  DATA
GOOD_SIZE . . . . . . . . . . . .   L WORD  0078  DATA

HALT_ERR  . . . . . . . . . . . .   Number  0040
HAL_ERR . . . . . . . . . . . . .   Number  0002
HIGH_MAX_SEG  . . . . . . . . . .   Number  00FF
HIGH_MIN_SEG  . . . . . . . . . .   Number  00F0
HIGH_SEGMENT  . . . . . . . . . .   L BYTE  0080  DATA
HIGH_SIZE . . . . . . . . . . . .   L WORD  0081  DATA
HIGH_SYS_SEG  . . . . . . . . . .   Number  00FE
HIGH_SYS_SIZE . . . . . . . . . .   Number  0080
HIGH_USER_SEG . . . . . . . . . .   Number  00FA
HIGH_USER_SIZE  . . . . . . . . .   Number  0100

IDTSEL  . . . . . . . . . . . . .   Number  0010
IDT_DESC  . . . . . . . . . . . .   L 0008  0010  DATA
IG_ACC  . . . . . . . . . . . . .   Number  0086
IRQ0_SEL  . . . . . . . . . . . .   Number  0008
IRQ8_SEL  . . . . . . . . . . . .   Number  0070

J1MEG . . . . . . . . . . . . . .   Number  0040
J2MEG . . . . . . . . . . . . . .   Number  0080
J512  . . . . . . . . . . . . . .   Number  0010
J640  . . . . . . . . . . . . . .   Number  0020

KBD_TO  . . . . . . . . . . . . .   Number  1000
KB_MESG . . . . . . . . . . . . .   L BYTE  0086  DATA
KEY_80  . . . . . . . . . . . . .   Number  0080
KEY_81  . . . . . . . . . . . . .   Number  0081
KEY_82  . . . . . . . . . . . . .   Number  0082
KEY_83  . . . . . . . . . . . . .   Number  0083
KEY_84  . . . . . . . . . . . . .   Number  0084
KEY_86  . . . . . . . . . . . . .   Number  0086
KEY_87  . . . . . . . . . . . . .   Number  0087
KEY_88  . . . . . . . . . . . . .   Number  0088
KEY_89  . . . . . . . . . . . . .   Number  0089
KEY_8A  . . . . . . . . . . . . .   Number  008A
```

```
Microsoft (R) Macro Assembler  Version 4.00                8/13/86 11:49:46

TESTHRAM        Copyright (C) 1985,86 COMPAQ Computer Corp.        Symbols-5

KEY_8B . . . . . . . . . . . . . .     Number  008B
KEY_8C . . . . . . . . . . . . . .     Number  008C
KEY_8D . . . . . . . . . . . . . .     Number  008D

MEMORY_BREAK . . . . . . . . . . .     L BYTE  0083    DATA
MEMTEST  . . . . . . . . . . . . .     L NEAR  0000    ROM     External
MEM_60 . . . . . . . . . . . . . .     Number  0060
MEM_61 . . . . . . . . . . . . . .     Number  0061
MEM_62 . . . . . . . . . . . . . .     Number  0062
MEM_63 . . . . . . . . . . . . . .     Number  0063
MEM_64 . . . . . . . . . . . . . .     Number  0064
MEM_65 . . . . . . . . . . . . . .     Number  0065
MEM_66 . . . . . . . . . . . . . .     Number  0066
MEM_67 . . . . . . . . . . . . . .     Number  0067
MEM_68 . . . . . . . . . . . . . .     Number  0068
MEM_69 . . . . . . . . . . . . . .     Number  0069
MEM_6A . . . . . . . . . . . . . .     Number  006A
MEM_6B . . . . . . . . . . . . . .     Number  006B
MEM_6C . . . . . . . . . . . . . .     Number  006C
MEM_6D . . . . . . . . . . . . . .     Number  006D
MEM_6E . . . . . . . . . . . . . .     Number  006E
MEM_6F . . . . . . . . . . . . . .     Number  006F
MEM_70 . . . . . . . . . . . . . .     Number  0070
MEM_71 . . . . . . . . . . . . . .     Number  0071
MEM_72 . . . . . . . . . . . . . .     Number  0072
MEM_73 . . . . . . . . . . . . . .     Number  0073
MEM_74 . . . . . . . . . . . . . .     Number  0074
MEM_7C . . . . . . . . . . . . . .     Number  007C
MEM_7D . . . . . . . . . . . . . .     Number  007D
MEM_7E . . . . . . . . . . . . . .     Number  007E
MEM_7F . . . . . . . . . . . . . .     Number  007F
MM_ERR . . . . . . . . . . . . . .     Number  0080
MOVSYSROM  . . . . . . . . . . . .     N PROC  0097    ROM     Global  Length = 00E7
MOVSYSROM_LOOP . . . . . . . . . .     L NEAR  0169    ROM
MP . . . . . . . . . . . . . . . .     Number  0002
M_DMA  . . . . . . . . . . . . . .     Number  0085
M_RESET_00 . . . . . . . . . . . .     Number  0000
M_RUN_01 . . . . . . . . . . . . .     Number  0001

NOREPLACE  . . . . . . . . . . . .     Number  0001
NORMAL . . . . . . . . . . . . . .     Number  0007

OK_MEM . . . . . . . . . . . . . .     Number  0000
OK_RST . . . . . . . . . . . . . .     Number  0002
OPT_E0 . . . . . . . . . . . . . .     Number  00E0
OPT_E1 . . . . . . . . . . . . . .     Number  00E1
OPT_E2 . . . . . . . . . . . . . .     Number  00E2
OPT_E3 . . . . . . . . . . . . . .     Number  00E3

PE . . . . . . . . . . . . . . . .     Number  0001
PPI  . . . . . . . . . . . . . . .     Number  0061
PPI_ENB_IOCHECK  . . . . . . . . .     Number  0008
PPI_ENB_PCHECK . . . . . . . . . .     Number  0004
PPI_IOCHECK  . . . . . . . . . . .     Number  0040
```

```
PPI_PCHECK . . . . . . . . . . . .      Number  0080
PPI_REFRSH . . . . . . . . . . . .      Number  0010
PPI_SPKR_DATA  . . . . . . . . . .      Number  0002
PPI_SPKR_GATE  . . . . . . . . . .      Number  0001
PPI_T2OUT  . . . . . . . . . . . .      Number  0020
PPO  . . . . . . . . . . . . . . .      Number  0061
PPO_ENB_IOCHECK  . . . . . . . . .      Number  0008
PPO_ENB_PCHECK . . . . . . . . . .      Number  0004
PPO_INIT . . . . . . . . . . . . .      Number  000C
PPO_SPKR_DATA  . . . . . . . . . .      Number  0002
PPO_SPKR_GATE  . . . . . . . . . .      Number  0001
PRES . . . . . . . . . . . . . . .      Number  0080
PROT_75  . . . . . . . . . . . . .      Number  0075
PROT_76  . . . . . . . . . . . . .      Number  0076
PROT_77  . . . . . . . . . . . . .      Number  0077
PROT_78  . . . . . . . . . . . . .      Number  0078
PROT_79  . . . . . . . . . . . . .      Number  0079
PROT_7A  . . . . . . . . . . . . .      Number  007A
PROT_7B  . . . . . . . . . . . . .      Number  007B

RAMI_30  . . . . . . . . . . . . .      Number  0030
RAMI_31  . . . . . . . . . . . . .      Number  0031
RAMI_32  . . . . . . . . . . . . .      Number  0032
RAMI_33  . . . . . . . . . . . . .      Number  0033
RAMI_34  . . . . . . . . . . . . .      Number  0034
RAMI_35  . . . . . . . . . . . . .      Number  0035
RAMI_36  . . . . . . . . . . . . .      Number  0036
RAMI_37  . . . . . . . . . . . . .      Number  0037
RAMI_38  . . . . . . . . . . . . .      Number  0038
RAMI_39  . . . . . . . . . . . . .      Number  0039
RAMI_3A  . . . . . . . . . . . . .      Number  003A
RAMI_3B  . . . . . . . . . . . . .      Number  003B
RAMSEL . . . . . . . . . . . . . .      Number  0048
RAM_DESC . . . . . . . . . . . . .      L 0008  0048    DATA
RAM_ERR_BEEPS  . . . . . . . . . .      Number  0000
RAM_IDT  . . . . . . . . . . . . .      L BYTE  009D    DATA
RAM_IDTLIM . . . . . . . . . . . .      Number  017F
RD . . . . . . . . . . . . . . . .      Number  0002
READDIAG . . . . . . . . . . . . .      N PROC  01C0    ROM     Global  Length = 003C
RESET_00 . . . . . . . . . . . . .      Number  0000
RESET_01 . . . . . . . . . . . . .      Number  0001
RESET_02 . . . . . . . . . . . . .      Number  0002
RESET_03 . . . . . . . . . . . . .      Number  0003
RESET_04 . . . . . . . . . . . . .      Number  0004
RESET_05 . . . . . . . . . . . . .      Number  0005
RESET_06 . . . . . . . . . . . . .      Number  0006
RESET_07 . . . . . . . . . . . . .      Number  0007
RESET_08 . . . . . . . . . . . . .      Number  0008
RESET_09 . . . . . . . . . . . . .      Number  0009
RESET_0A . . . . . . . . . . . . .      Number  000A
RESET_0B . . . . . . . . . . . . .      Number  000B
RESET_0C . . . . . . . . . . . . .      Number  000C
RESET_0F . . . . . . . . . . . . .      Number  000F
RST286 . . . . . . . . . . . . . .      Number  00FE
```

```
Microsoft (R) Macro Assembler  Version 4.00                8/13/86 11:49:46
TESTHRAM        Copyright (C) 1985,86 COMPAQ Computer Corp.        Symbols-7

RUN_10 . . . . . . . . . . . . .      Number  0010
RUN_11 . . . . . . . . . . . . .      Number  0011
RUN_12 . . . . . . . . . . . . .      Number  0012
RUN_13 . . . . . . . . . . . . .      Number  0013
RUN_14 . . . . . . . . . . . . .      Number  0014
RUN_15 . . . . . . . . . . . . .      Number  0015
RUN_16 . . . . . . . . . . . . .      Number  0016
RUN_17 . . . . . . . . . . . . .      Number  0017

SANITY_OD  . . . . . . . . . . .      Number  000D
SANITY_OE  . . . . . . . . . . .      Number  000E
SAN_10 . . . . . . . . . . . . .      Number  0010
SAN_11 . . . . . . . . . . . . .      Number  0011
SAN_12 . . . . . . . . . . . . .      Number  0012
SAN_13 . . . . . . . . . . . . .      Number  0013
SAN_14 . . . . . . . . . . . . .      Number  0014
SAN_15 . . . . . . . . . . . . .      Number  0015
SAN_16 . . . . . . . . . . . . .      Number  0016
SAN_17 . . . . . . . . . . . . .      Number  0017
SAN_18 . . . . . . . . . . . . .      Number  0018
SAN_19 . . . . . . . . . . . . .      Number  0019
SAN_1A . . . . . . . . . . . . .      Number  001A
SAN_1B . . . . . . . . . . . . .      Number  001B
SAN_1C . . . . . . . . . . . . .      Number  001C
SAN_1D . . . . . . . . . . . . .      Number  001D
SAN_1E . . . . . . . . . . . . .      Number  001E
SAN_1F . . . . . . . . . . . . .      Number  001F
SAN_20 . . . . . . . . . . . . .      Number  0020
SAN_21 . . . . . . . . . . . . .      Number  0021
SAN_22 . . . . . . . . . . . . .      Number  0022
SAN_23 . . . . . . . . . . . . .      Number  0023
SAN_24 . . . . . . . . . . . . .      Number  0024
SAN_25 . . . . . . . . . . . . .      Number  0025
SAN_26 . . . . . . . . . . . . .      Number  0026
SAN_27 . . . . . . . . . . . . .      Number  0027
SAN_28 . . . . . . . . . . . . .      Number  0028
SAN_29 . . . . . . . . . . . . .      Number  0029
SAN_2A . . . . . . . . . . . . .      Number  002A
SAN_2B . . . . . . . . . . . . .      Number  002B
SAN_2C . . . . . . . . . . . . .      Number  002C
SAN_2D . . . . . . . . . . . . .      Number  002D
SB_90  . . . . . . . . . . . . .      Number  0090
SB_91  . . . . . . . . . . . . .      Number  0091
SB_92  . . . . . . . . . . . . .      Number  0092
SB_93  . . . . . . . . . . . . .      Number  0093
SB_94  . . . . . . . . . . . . .      Number  0094
SB_95  . . . . . . . . . . . . .      Number  0095
SB_96  . . . . . . . . . . . . .      Number  0096
SEG_512  . . . . . . . . . . . .      Number  00F4
SEG_640  . . . . . . . . . . . .      Number  00F8
SET32BREAK . . . . . . . . . . .      N PROC  017E    ROM     Global   Length = 0042
SET_BASE_BREAK . . . . . . . . .      L NEAR  0196    ROM
SET_EXT_BREAK  . . . . . . . . .      L NEAR  01B4    ROM
SIZEHIGHMEM  . . . . . . . . . .      N PROC  0000    ROM     Global   Length = 0064
```

```
SIZEHIGHMEM_LOOP . . . . . . . . .      L NEAR  0020   ROM
SIZE_1 . . . . . . . . . . . . . .      L NEAR  0049   ROM
SIZE_1MEG . . . . . . . . . . . .       Number  0400
SIZE_2 . . . . . . . . . . . . . .      L NEAR  0054   ROM
SIZE_2MEG . . . . . . . . . . . .       Number  0800
SIZE_3 . . . . . . . . . . . . . .      L NEAR  0062   ROM
SIZE_512 . . . . . . . . . . . . .      Number  0100
SIZE_640 . . . . . . . . . . . . .      Number  0080
SIZE_8MEG . . . . . . . . . . . .       Number  2000
SIZE_BASE . . . . . . . . . . . .       L WORD  007A   DATA
SIZE_EXT . . . . . . . . . . . . .      L WORD  007C   DATA
SIZE_FINAL . . . . . . . . . . . .      L WORD  007E   DATA
SSSEL . . . . . . . . . . . . . .       Number  0028
SS_DESC . . . . . . . . . . . . .       L 0008  0028   DATA
SYS_ROM_OFFSET . . . . . . . . . .      Number  8000
SYS_ROM_SEG . . . . . . . . . . .       Number  000F
SYS_ROM_SIZE . . . . . . . . . . .      Number  8000

TESTHIGHSYSMEM . . . . . . . . . .      N PROC  0064   ROM    Global  Length = 0033
TESTHIGHSYSMEM_EXIT . . . . . . .       L NEAR  0096   ROM
TEST_SIZE . . . . . . . . . . . .       L WORD  0076   DATA
TEST_STATUS . . . . . . . . . . .       L WORD  0058   DATA
TEST_STR_LEN . . . . . . . . . . .      Number  000B
TRAM_ERR . . . . . . . . . . . . .      Number  0001
TRG_ACC . . . . . . . . . . . . .       Number  0087
TRUE . . . . . . . . . . . . . . .      Number  0001

U_DMA . . . . . . . . . . . . . .       Number  0084

VDU_50 . . . . . . . . . . . . . .      Number  0050
VDU_51 . . . . . . . . . . . . . .      Number  0051
VDU_52 . . . . . . . . . . . . . .      Number  0052
VDU_53 . . . . . . . . . . . . . .      Number  0053
VDU_54 . . . . . . . . . . . . . .      Number  0054
VDU_55 . . . . . . . . . . . . . .      Number  0055
VDU_56 . . . . . . . . . . . . . .      Number  0056
VDU_57 . . . . . . . . . . . . . .      Number  0057
VDU_58 . . . . . . . . . . . . . .      Number  0058
VDU_59 . . . . . . . . . . . . . .      Number  0059
VDU_5A . . . . . . . . . . . . . .      Number  005A
VDU_5B . . . . . . . . . . . . . .      Number  005B
VDU_5C . . . . . . . . . . . . . .      Number  005C
VDU_5D . . . . . . . . . . . . . .      Number  005D
VDU_5E . . . . . . . . . . . . . .      Number  005E
VDU_5F . . . . . . . . . . . . . .      Number  005F
VIDSEL . . . . . . . . . . . . . .      Number  0040
VID_DESC . . . . . . . . . . . . .      L 0008  0040   DATA
VID_SEG . . . . . . . . . . . . .       Number  B000

WR . . . . . . . . . . . . . . . .      Number  0002
WRITEABLE . . . . . . . . . . . .       Number  0002


   1089 Source  Lines
   1095 Total   Lines
```

35526 Bytes symbol space free

0 Warning Errors
0 Severe Errors

CONFIDENTIAL
Aug 13, 1986
Gary Brasher

There are two 2 listings on this diskette. File CLEARMEM.LST contains the routine, clr_mem, that calls routine MovSysROM in file TESTHRAM.LST. MovSysROM will move the ROM code to RAM space and write to the memory location that replaces the ROM address space with RAM and write protects that RAM.

# APPENDIX S

## DUAL MAPPED
## ROM SUBROUTINE

```
Microsoft (R) Macro Assembler  Version 4.00                8/13/86 11:48:24
clr_mem Copyright (C) 1985,86 COMPAQ Computer Corp.        Page     1-1

                        page    58,132
                        title   clr_mem Copyright (C) 1985,86 COMPAQ Computer Corp.
                ;*****************************************************************************
                ;
                ;   Name:       clr_mem
                ;
                ;   Group:      ROM
                ;
                ;   Revision:   A
                ;
                ;   Date:       May 25, 1986
                ;
                ;   Author:     Steve Preston
                ;
                ;*****************************************************************************
                ;
                ;  Changes:
                ;
                ;    Date     Revision                    Description
                ;  --------   --------   -----------------------------------------------
                ;  05/14/86   Original   Adapted from Deskpro 286 Rev. E System ROM.
                ;*****************************************************************************
                ;
                ;  Functional Description:
                ;
                ;       This module clears Base Memory above 64K and all extended memory
                ;       32 bits at a time.
                ;
                ;*****************************************************************************
                .286P
```

```
Microsoft (R) Macro Assembler  Version 4.00             8/13/86 11:48:24
clr_mem Copyright (C) 1985,86 COMPAQ Computer Corp.     Page     1-2

                              page
                         ;**********************************************************************
                         ;
                         ;      Public Declarations
                         ;
                         ;**********************************************************************
                         ;
                              public  clr_mem                 ; Test protected mode
                         ;
                         ;**********************************************************************
                         ;      RAM External References
                         ;
                         ;**********************************************************************
                         ;
                              extrn   ram400:word
                              extrn   memsize:word            ; Base memory size (KB)
                              extrn   rst_off:word            ; For saving sp
                              extrn   rst_seg:word            ; For saving ss

 0000                    ROM  segment byte public 'ROM'
                              assume  cs:ROM
                         ;
                         ;**********************************************************************
                         ;
                         ;      External References
                         ;
                         ;**********************************************************************
                         ;
                              extrn   goprot:near             ; Go to protected mode (Test_Mem.asm)
                              extrn   out_err_code:near       ; Report error code. (test_utl.asm)
                              extrn   SizeHighMem:near        ; Size high memory. (mem_utl.asm)
                              extrn   sb_err_msg:byte         ; System board error message.
                              extrn   sb_err_len:abs
                              extrn   sb_err_beeps:abs
                              extrn   MovSysROM:near          ; Copy System ROM to high memory
                              extrn   real_idt:word           ; Real mode idt
                              extrn   Gate_A20:near           ; Disable Gate A20
                         ;
                         ;**********************************************************************
                         ;
                         ;      Equates
                         ;
                         ;**********************************************************************
                       C .list

                       C      include mach_def.equ
                       C ;**********************************************************************
                       C ;
                       C ;      Machine dependencies
                       C ;
                       C ;**********************************************************************
                         ;
```

```
                     C  mov_eax_cr0     macro
                     C          db      0Fh, 20h, 00h
                     C          endm
                     C  ;
                     C  mov_cr0_eax     macro
                     C          db      0Fh, 22h, 00h
                     C          endm
                     C  ;
                     C  mov_gs_dx       macro
                     C          db      8Eh, 0EAh
                     C          endm
                     C  ;
                     C  mov_ax_gs       macro
                     C          db      8Ch, 0E8h
                     C          endm
                     C  ;
                     C  mov_gs_ax       macro
                     C          db      8Eh, 0E8h
                     C          endm
                     C  ;
                     C  OSP     macro
                     C          db      66h                     ; 16/32 operand size prefix
                     C          endm
                     C  ;
                     C  push_fs macro
                     C          db      0Fh, 0A0h
                     C          endm
                     C  ;
                     C  push_gs macro
                     C          db      0Fh, 0A8h
                     C          endm
                     C  ;
                     C  pop_fs  macro
                     C          db      0Fh, 0A1h
                     C          endm
                     C  ;
                     C  pop_gs  macro
                     C          db      0Fh, 0A9h
                     C          endm
                     C  ;

                     C          include mem_def.equ             ; Memory test equates
                     C  ;*********************************************************************
                     C  ;
                     C  ;       Memory test definitions, equates, structures, data segment
                     C  ;
                     C  ;*********************************************************************
                     C  ;
                     C  ;       Structures
                     C  ;
                     C  ;*********************************************************************
                     C  desc            struc
0000  ????           C  limit           dw                      ; Offset of last byte in segment
```

```
Microsoft (R) Macro Assembler  Version 4.00              8/13/86 11:48:24

clr_mem Copyright (C) 1985,86 COMPAQ Computer Corp.      Page     1-4

 0002  ????          C  base_low       dw      ?           ; low 16 bits of 24-bit address
 0004  ??            C  base_high      db      ?           ; high 8 bits of 24-bit address
 0005  ??            C  access         db      ?           ; access rights byte
 0006  ????          C  res            dw      ?           ; reserved word
 0008                C  desc           ends
                     C  ;
                     C  desc_386       struc               ; 386 descriptor
 0000  ????          C  limit_386      dw      ?           ; limit bits 15:0
 0002  ????          C  base_low_386   dw      ?           ; low 16 bits of 32-bit address
 0004  ??            C  base_386       db      ?           ; mid 8 bits of 32-bit address
 0005  ??            C  access_386     db      ?           ; access rights byte
 0006  ??            C  gd_limit_386   db      ?           ; grand, operand, limit bits 19:16
 0007  ??            C  base_high_386  db      ?           ; high 8 bits of 32-bit address
 0008                C  desc_386       ends
                     C  ;
                     C  ;       Trap or Interrupt Gate
                     C  TIG_desc       struc
 0000  ????          C          offst    dw    ?           ; offset to code with code segment
 0002  ????          C          CS_sel   dw    ?           ; code segment selector
 0004  ??            C          TIG_un   db    ?           ; unused
 0005  ??            C          TIG_acc  db    ?           ; access
 0006  ????          C          TIG_res  dw    ?           ; reserved
 0008                C  TIG_desc       ends
                     C  ;
                     C  ;       Memory Error structure
                     C  mem_err        struc
 0000  ??            C          badhigh  db    ?           ; high byte of addr of bad byte
 0001  ????          C          badlow   dw    ?           ; low word of addr of bad byte
 0003  ??            C          badbit   db    ?           ; erroneous bit of bad byte
 0004                C  mem_err        ends
```

```
Microsoft (R) Macro Assembler  Version 4.00              8/13/86 11:48:24

clr_mem Copyright (C) 1985,86 COMPAQ Computer Corp.      Page      1-5

                             C          page
                             C    ;
                             C    ;     Equates
                             C    ;
 = 0001                      C    TRUE            equ      1
 = 0000                      C    FALSE           equ      0
                             C
 = 0000                      C    RAM_ERR_BEEPS   equ      0000H          ; # of beeps for ram error message
                             C
 = 8000                      C    SYS_ROM_OFFSET  equ      08000H         ; offset for start of system ROM.
 = 8000                      C    SYS_ROM_SIZE    equ      08000H         ; system ROM size in bytes.
                             C
 = 0005                      C    DIGIT_LEN       equ      5              ; # of digits in mem test KB OK display
 = 000B                      C    TEST_STR_LEN    equ      11             ; # of chars in output string for mem test
 = 0007                      C    NORMAL          equ      07H            ; normal video attrib
 = 0030                      C    ASC_ZERO        equ      30H            ; ascii zero '0'
                             C
 = 00DF                      C    A20_ON   equ    0DFH                    ; enable gate A20
 = 00DD                      C    A20OFF   equ    0DDH                    ; disable gate A20
 = 00FE                      C    RST286   equ    0FEH                    ; processor reset
 = 1000                      C    KBD_TO   equ    1000H                   ; about 20ms
                             C    ;
                             C    ;     Reset Codes
                             C    ;
 = 0002                      C    OK_RST   equ    02H                     ; mem ok
 = 0003                      C    ERR_RST  equ    03H                     ; mem error
                             C    ;
                             C    ;     test_mem error codes
                             C    ;
 = 0000                      C    OK_MEM          equ      00H            ; no error
 = 0001                      C    TRAM_ERR        equ      01H            ; RAM test error from Mem_Test
 = 0002                      C    HAL_ERR         equ      02H            ; High Address Line Error.
                             C    ;
                             C    ;     Test_Status error codes
                             C    ;
 = 0001                      C    B_ERR           equ      01H            ; Base Memory Error
 = 0002                      C    E_ERR           equ      02H            ; Extended Memory Error
 = 0004                      C    BHAL_ERR        equ      04H            ; Base Memory High Addr line error- system bd.
 = 0008                      C    EHAL_ERR        equ      08H            ; Extended Mem High Addr line error.
 = 0010                      C    A20_ERR         equ      10H            ; unable to set A20 line
 = 0040                      C    HALT_ERR        equ      40H            ; Halt cpu due to memory error
 = 0080                      C    MM_ERR          equ      80H            ; memory miscompare error
                             C
                             C    ;   Access rights bits
 = 0080                      C    PRES     equ    80H                     ; present bit
 = 0000                      C    DPL0     equ    00H                     ; DPL = 0;
 = 0020                      C    DPL1     equ    20H                     ; DPL = 1;
 = 0040                      C    DPL2     equ    40H                     ; DPL = 2;
 = 0060                      C    DPL3     equ    60H                     ; DPL = 3;
                             C
 = 0092                      C    DS_acc   equ    92H                     ; Data Segment - DPL = 0, writeable,expand up
 = 0004                      C    EX_down  equ    04H                     ; Expand down bit for Data Segment
 = 0002                      C    WR       equ    02H                     ; Writeable bit for Data Segment
                             C
```

```
 = 009A              C  CS_acc  equ     9AH                 ; Code Segment - DPL = 0, readable,non-conforming
 = 0004              C  CON     equ     04H                 ; Conforming bit for Code Segment
 = 0002              C  RD      equ     02H                 ; Readable bit for Code Segment
                     C
 = 0086              C  IG_acc  equ     86H                 ; Interrupt Gate - DPL =0
 = 0087              C  TrG_acc equ     87H                 ; Trap Gate - DPL = 0
                     C  ;
                     C  ;       Machine status word bit positions
                     C  ;
 = 0001              C  PE      equ     1                   ; Protection enable
 = 0002              C  MP      equ     2                   ; Monitor processor extension
 = 0004              C  EM      equ     4                   ; Emulate processor extension
                     C  ;
                     C  ;      Segment sizes
                     C  ;
 = FFFF              C  FULL_SIZE       equ     0FFFFh
                     C  ;**************************************************************************
                     C  ;
                     C  ;       DIAG byte equates, address 80C00000h, segment length 1 byte
                     C  ;       access rights are same as RAM desc
                     C  ;
                     C  ;**************************************************************************
 = 0001              C  DIAG_LIMIT      equ     00001h      ; DIAG segment limit bits 15:00
 = 0000              C  DIAG_BASE_LOW   equ     00000h      ; DIAG base bits 15:00
 = 00C0              C  DIAG_BASE       equ     0C0h        ; DIAG base bits 23:16
 = 0092              C  DIAG_ACCESS     equ     10010010b   ; DIAG access byte
 = 0000              C  DIAG_GD_LIMIT   equ     000h        ; DIAG G, D,    limit bits 19:16
 = 0080              C  DIAG_BASE_HIGH  equ     080h        ; DIAG base bits 31:24
                     C  ;
 = 0001              C  NOREPLACE       equ     00000001b   ; High system memory can be written
 = 0002              C  WRITEABLE       equ     00000010b   ; System ROM is not replaced
                     C  ;
 = 000F              C  SYS_ROM_SEG     equ     00Fh        ; Starting System ROM segment
                     C  ;
 = 00FF              C  HIGH_MAX_SEG    equ     0FFh        ; Maximum high system memory segment
 = 00F0              C  HIGH_MIN_SEG    equ     0F0h        ; Minimum high system memory segment
 = 00FE              C  HIGH_SYS_SEG    equ     0FEh        ; Segment of high system memory
 = 0080              C  HIGH_SYS_SIZE   equ     128         ; Size of high system memory (k)
                     C  ;
 = 00FA              C  HIGH_USER_SEG   equ     0FAh        ; Starting high user memory segment
 = 0100              C  HIGH_USER_SIZE  equ     256         ; Minimum high user memory (k)
                     C  ;
 = 0020              C  J640            equ     00100000b   ; 640k Jumper inactive
 = 0080              C  SIZE_640        equ     128         ; Additional high memory if J640 inactive
 = 00F8              C  SEG_640         equ     0F8h        ; Starting segment if J640 inactive
                     C  ;
 = 0010              C  J512            equ     00010000b   ; 512k Jumper inactive
 = 0100              C  SIZE_512        equ     256         ; Additional high memory if J512 inactive
 = 00F4              C  SEG_512         equ     0F4h        ; Starting segment if J512 inactive
                     C  ;
 = 0040              C  J1MEG           equ     01000000b   ; 1Meg jumper inactive
 = 0400              C  SIZE_1MEG       equ     1024        ; 1Meg in k bytes
                     C  ;
 = 0080              C  J2MEG           equ     10000000b   ; 2/8Meg jumper inactive
```

```
Microsoft (R) Macro Assembler  Version 4.00          8/13/86 11:48:24

clr_mem Copyright (C) 1985,86 COMPAQ Computer Corp.          Page     1-7

 = 0800            C  SIZE_2MEG        equ     2*1024        ; 2Meg in k bytes
 = 2000            C  SIZE_8MEG        equ     8*1024        ; 8Meg in k bytes
                   C  ;
                   C  high_memory      struc                 ; Structure for allocating high memory
 0000  ??          C  ALLOC_FE         db      ?             ; Number of free 4k blocks, segment FEh
 0001  ??          C  INSTALL          db      ?             ; Bits 7:4 copy of 32-bit memory diag byte
                   C                                         ; Bits 3:0 = 0000b, 32-bit memory installed
 0002  ????        C  HIGH_TOTAL       dw      ?             ; Total number of 16-byte blocks of high memory
 0004  ????        C  HIGH_AVAIL       dw      ?             ; Number of 16-byte blocks of high memory available
 0006  ????        C  HIGH_START       dw      ?             ; Segment of first byte of used high memory
 0008              C  high_memory      ends
                   C  ;
 = FFE0            C  ALLOC_PTR        equ     0FFE0h        ; Pointer to high memory alloc table
 = 0010            C  FREE_FE          equ     10h           ; All 4k pages in seg 0FEh are free
                   C  ;
 = FFE2            C  CPU_REV_PTR      equ     0FFE2h        ; Pointer to cpu component, revision
                   C  ;
                   C  cpu_rev_com      struc
 0000  ??          C  COMPONENT        db      ?             ; Cpu component
 0001  ??          C  CPU_REVISION     db      ?             ; Cpu revision
 0002              C  cpu_rev_com      ends
                   C  ;
                   C  ;*************************************************************************
                   C  ;
                   C  ;        GDT selectors
                   C  ;
                   C  ;*************************************************************************
 = 0008            C  GDTSEL  equ      1 * size desc         ; selector for GDT segment
 = 0010            C  IDTSEL  equ      2 * size desc         ; selector for IDT segment
 = 0018            C  DSSEL   equ      3 * size desc         ; selector for DATA Segment
 = 0020            C  BRSEL   equ      4 * size desc         ; selector for BIOS RAM Segment
 = 0028            C  SSSEL   equ      5 * size desc         ; selector for SS Segment
 = 0030            C  CSSEL   equ      6 * size desc         ; selector for CS
 = 0040            C  VIDSEL  equ      8 * size desc         ; selector for Video RAM area
 = 0048            C  RAMSEL  equ      9 * size desc         ; selector for general RAM selector
 = 0050            C  DIAGSEL equ      10 * size desc        ; selector for diag byte on 32-bit memory board
                   C  ;
                   C  ;        IDT selectors
                   C  ;
 = 0008            C  IRQ0_SEL         equ     08H           ; normal irq0 setting
 = 0070            C  IRQ8_SEL         equ     70H           ; normal irq8 setting
                   C  ;
                   C  ;        Segments
                   C  ;
 = 1C00            C  DATA_SEG         equ     01C00H        ; scratch area
 = 0040            C  BRAM_SEG         equ     00040H        ; start of area for memory test
 = B000            C  VID_SEG          equ     0B000H        ; video ram area
                   C  ;
                   C  ;        Minimum Memory sizes from testing
                   C  ;
 = 0080            C  BASE_MIN         equu    0080H         ; 128K minimum for base memory
 = 0000            C  EXT_MIN          equ     0000H         ; 0K minimum for extended memory
                   C  ;
                   C  ;        Memory Test Ranges
```

```
Microsoft (R) Macro Assembler  Version 4.00               8/13/86 11:48:24
clr_mem Copyright (C) 1985,86 COMPAQ Computer Corp.       Page     1-8

                          C  ;
 = 0002                   C  BASE_FIRST      equu    02H         ; First segment for Base mem test - High byte
 = 0009                   C  BASE_LAST       equ     09H         ; Last segment for Base mem test - High byte
 = 0001                   C  BASE_SEG_INCR   equ     01H         ;  64K blocks for Base memory sizing
                          C
 = 0010                   C  EXT_FIRST       equ     10H         ; First seg of Extended Mem - High byte of addr
 = 00FD                   C  EXT_LAST        equ     0FDH        ; Last seg of Extended Mem -  High byte
 = 0001                   C  EXT_SEG_INCR    equ     01H         ; 64K blocks for Extended memory sizing
                          C  ;
                          C  ;               DATA SEGMENT
                          C  ;
```

```
Microsoft (R) Macro Assembler  Version 4.00              8/13/86 11:48:24

clr_mem Copyright (C) 1985,86 COMPAQ Computer Corp.      Page      1-9

                                C          page
 0000                           C   DATA   segment at DATA_SEG
                                C          assume  ds:DATA
                                C   ;
                                C   ;      Global Descriptor Table
                                C   ;
 0000  ????                     C   GDT             desc    <>          ; dummy descriptor
 0002  ????                     C
 0004  ??                       C
 0005  ??                       C
 0006  ????                     C
                                C
 0008  ????                     C   GDT_desc        desc    <>          ; GDT descriptor of itself
 000A  ????                     C
 000C  ??                       C
 000D  ??                       C
 000E  ????                     C
                                C
 0010  ????                     C   IDT_desc        desc    <>          ; IDT descriptor
 0012  ????                     C
 0014  ??                       C
 0015  ??                       C
 0016  ????                     C
                                C
 0018  ????                     C   DS_desc         desc    <>          ; Data Segment descr
 001A  ????                     C
 001C  ??                       C
 001D  ??                       C
 001E  ????                     C
                                C
 0020  ????                     C   ES_desc         desc    <>          ; BIOS RAM Segment descr
 0022  ????                     C
 0024  ??                       C
 0025  ??                       C
 0026  ????                     C
                                C
 0028  ????                     C   SS_desc         desc    <>          ; SS descr
 002A  ????                     C
 002C  ??                       C
 002D  ??                       C
 002E  ????                     C
                                C
 0030  ????                     C   CS_desc         desc    <>          ; CS descriptor (current)
 0032  ????                     C
 0034  ??                       C
 0035  ??                       C
 0036  ????                     C
                                C
 0038  ????                     C   BCS_desc        desc    <>          ; BIOS CS descriptor
 003A  ????                     C
 003C  ??                       C
 003D  ??                       C
 003E  ????                     C
                                C
```

```
Microsoft (R) Macro Assembler  Version 4.00          8/13/86 11:48:24
clr_mem Copyright (C) 1985,86 COMPAQ Computer Corp.      Page     1-10

 0040  ????                C  VID_desc        desc    <>            ; Video RAM memory
 0042  ????                C
 0044  ??                  C
 0045  ??                  C
 0046  ????                C
                           C
 0048  ????                C  RAM_desc        desc    <>            ; Test RAM descriptor
 004A  ????                C
 004C  ??                  C
 004D  ??                  C
 004E  ????                C
                           C
 0050  ????                C  DIAG_desc       desc_386 <>           ; Diag byte descriptor
 0052  ????                C
 0054  ??                  C
 0055  ??                  C
 0056  ??                  C
 0057  ??                  C
                           C
                           C  ;
 = 0057                    C  GDTLIM  equ     $-GDT-1               ; limit of GDT
                           C  ;
```

```
Microsoft (R) Macro Assembler  Version 4.00              8/13/86 11:48:24
clr_mem Copyright (C) 1985,86 COMPAQ Computer Corp.      Page     1-11

                          C          page
                          C   ;
                          C   ;      Temporary storage
                          C   ;
                          C
 0058  ????               C   Test_Status     dw       ?             ; status of Memory Test 0 => no error
 005A  ??                 C   Base_Err        mem_err <>             ; error return from Base memory test
 005B  ????               C
 005D  ??                 C
                          C
 005E  ??                 C   Base_HAL_Err    mem_err <>             ; error return from Base HAL test
 005F  ????               C
 0061  ??                 C
                          C
 0062  ??                 C   Ext_Err         mem_err <>             ; error return from Extended memory test
 0063  ????               C
 0065  ??                 C
                          C
 0066  ??                 C   Ext_HAL_Err     mem_err <>             ; error return from Extended HAL test
 0067  ????               C
 0069  ??                 C
                          C
                          C
 006A  ????               C   CMOS_Base       dw       ?             ; Size of Base Memory as stored in CMOS RAM
 006C  ????               C   CMOS_Ext        dw       ?             ; Size of Extended Mem as stored in CMOS RAM
 006E  ????               C   CMOS_Size       dw       ?             ; Size from CMOS RAM
                          C
 0070  ????               C   Found_Base      dw       ?             ; Size of Base Mem as Found by SizeMem
 0072  ????               C   Found_Ext       dw       ?             ; Size of Extended Mem as Found by SizeMem
 0074  ????               C   Found_Size      dw       ?
                          C
 0076  ????               C   Test_Size       dw       ?
                          C
 0078  ????               C   Good_Size       dw       ?
                          C
 007A  ????               C   Size_Base       dw       ?             ; Final Size of Base Memory
 007C  ????               C   Size_Ext        dw       ?             ; Final Size of Extended Memory
 007E  ????               C   Size_Final      dw       ?
                          C
 0080  ??                 C   High_Segment    db       ?             ; Starting segment of High Memory
 0081  ????               C   High_Size       dw       ?             ; Size of High Memory
                          C   ;
 0083  ??                 C   memory_break    db       ?             ; Break segment for MemTest routine
 0084  ??                 C   base_32_break   db       ?             ; Break segment of base 32-bit memory
 0085  ??                 C   ext_32_break    db       ?             ; Break segment of ext 32-bit memory
                          C   ;
 0086  ??                 C   Kb_Mesg         db       ?             ; Set to TRUE for "KB OK" display
                          C   ;
                          C   ;      string for displaying K bytes OK during testing
 0087  000B[              C   Disp_String     dw       TEST_STR_LEN dup (?)
           ????
                     ]    C
                          C
                          C   ;
```

183

```
Microsoft (R) Macro Assembler  Version 4.00              8/13/86 11:48:24
clr_mem Copyright (C) 1985,86 COMPAQ Computer Corp.      Page     1-12

                        C          page
                        C  ;
                        C  ;       RAM_IDT - Interrupt descriptor table
                        C  ;               This idt is located in RAM for ease of modification.
                        C  ;
 009D                   C  RAM_IDT          label   byte
 009D  ????             C          TIG_desc         <>
 009F  ????             C
 00A1  ??               C
 00A2  ??               C
 00A3  ????             C
                        C
 00A5  ????             C          TIG_desc         <>
 00A7  ????             C
 00A9  ??               C
 00AA  ??               C
 00AB  ????             C
                        C
 00AD  ????             C          TIG_desc         <>
 00AF  ????             C
 00B1  ??               C
 00B2  ??               C
 00B3  ????             C
                        C
 00B5  ????             C          TIG_desc         <>
 00B7  ????             C
 00B9  ??               C
 00BA  ??               C
 00BB  ????             C
                        C
 00BD  ????             C          TIG_desc         <>
 00BF  ????             C
 00C1  ??               C
 00C2  ??               C
 00C3  ????             C
                        C
 00C5  ????             C          TIG_desc         <>
 00C7  ????             C
 00C9  ??               C
 00CA  ??               C
 00CB  ????             C
                        C
 00CD  ????             C          TIG_desc         <>
 00CF  ????             C
 00D1  ??               C
 00D2  ??               C
 00D3  ????             C
                        C
 00D5  ????             C          TIG_desc         <>             ; # 8
 00D7  ????             C
 00D9  ??               C
 00DA  ??               C
 00DB  ????             C
                        C
```

```
Microsoft (R) Macro Assembler  Version 4.00            8/13/86 11:48:24
clr_mem Copyright (C) 1985,86 COMPAQ Computer Corp.    Page     1-13

 00DD  ????               C          TIG_desc       <>
 00DF  ????               C
 00E1  ??                 C
 00E2  ??                 C
 00E3  ????               C
                          C
 00E5  ????               C          TIG_desc       <>
 00E7  ????               C
 00E9  ??                 C
 00EA  ??                 C
 00EB  ????               C
                          C
 00ED  ????               C          TIG_desc       <>
 00EF  ????               C
 00F1  ??                 C
 00F2  ??                 C
 00F3  ????               C
                          C
 00F5  ????               C          TIG_desc       <>
 00F7  ????               C
 00F9  ??                 C
 00FA  ??                 C
 00FB  ????               C
                          C
 00FD  ????               C          TIG_desc       <>
 00FF  ????               C
 0101  ??                 C
 0102  ??                 C
 0103  ????               C
                          C
 0105  ????               C          TIG_desc       <>
 0107  ????               C
 0109  ??                 C
 010A  ??                 C
 010B  ????               C
                          C
 010D  ????               C          TIG_desc       <>
 010F  ????               C
 0111  ??                 C
 0112  ??                 C
 0113  ????               C
                          C
 0115  ????               C          TIG_desc       <>             ; # 16
 0117  ????               C
 0119  ??                 C
 011A  ??                 C
 011B  ????               C
                          C
 011D  ????               C          TIG_desc       <>
 011F  ????               C
 0121  ??                 C
 0122  ??                 C
 0123  ????               C
                          C
```

```
Microsoft (R) Macro Assembler  Version 4.00           8/13/86 11:48:24
clr_mem Copyright (C) 1985,86 COMPAQ Computer Corp.    Page     1-14

 0125  ????               C          TIG_desc      <>
 0127  ????               C
 0129  ??                 C
 012A  ??                 C
 012B  ????               C
                          C
 012D  ????               C          TIG_desc      <>
 012F  ????               C
 0131  ??                 C
 0132  ??                 C
 0133  ????               C
                          C
 0135  ????               C          TIG_desc      <>
 0137  ????               C
 0139  ??                 C
 013A  ??                 C
 013B  ????               C
                          C
 013D  ????               C          TIG_desc      <>
 013F  ????               C
 0141  ??                 C
 0142  ??                 C
 0143  ????               C
                          C
 0145  ????               C          TIG_desc      <>
 0147  ????               C
 0149  ??                 C
 014A  ??                 C
 014B  ????               C
                          C
 014D  ????               C          TIG_desc      <>
 014F  ????               C
 0151  ??                 C
 0152  ??                 C
 0153  ????               C
                          C
 0155  ????               C          TIG_desc      <>             ; # 24
 0157  ????               C
 0159  ??                 C
 015A  ??                 C
 015B  ????               C
                          C
 015D  ????               C          TIG_desc      <>
 015F  ????               C
 0161  ??                 C
 0162  ??                 C
 0163  ????               C
                          C
 0165  ????               C          TIG_desc      <>
 0167  ????               C
 0169  ??                 C
 016A  ??                 C
 016B  ????               C
                          C
```

```
Microsoft (R) Macro Assembler  Version 4.00              8/13/86 11:48:24
clr_mem Copyright (C) 1985,86 COMPAQ Computer Corp.      Page     1-15

 016D  ????                 C        TIG_desc       <>
 016F  ????                 C
 0171  ??                   C
 0172  ??                   C
 0173  ????                 C
                            C
 0175  ????                 C        TIG_desc       <>
 0177  ????                 C
 0179  ??                   C
 017A  ??                   C
 017B  ????                 C
                            C
 017D  ????                 C        TIG_desc       <>
 017F  ????                 C
 0181  ??                   C
 0182  ??                   C
 0183  ????                 C
                            C
 0185  ????                 C        TIG_desc       <>
 0187  ????                 C
 0189  ??                   C
 018A  ??                   C
 018B  ????                 C
                            C
 018D  ????                 C        TIG_desc       <>
 018F  ????                 C
 0191  ??                   C
 0192  ??                   C
 0193  ????                 C
                            C
 0195  ????                 C        TIG_desc       <>           ; # 32
 0197  ????                 C
 0199  ??                   C
 019A  ??                   C
 019B  ????                 C
                            C
 019D  ????                 C        TIG_desc       <>
 019F  ????                 C
 01A1  ??                   C
 01A2  ??                   C
 01A3  ????                 C
                            C
 01A5  ????                 C        TIG_desc       <>
 01A7  ????                 C
 01A9  ??                   C
 01AA  ??                   C
 01AB  ????                 C
                            C
 01AD  ????                 C        TIG_desc       <>
 01AF  ????                 C
 01B1  ??                   C
 01B2  ??                   C
 01B3  ????                 C
                            C
```

188

```
Microsoft (R) Macro Assembler  Version 4.00         8/13/86 11:48:24
clr_mem Copyright (C) 1985,86 COMPAQ Computer Corp.  Page     1-16

 01B5  ????             C        TIG_desc       <>
 01B7  ????             C
 01B9  ??               C
 01BA  ??               C
 01BB  ????             C
                        C
 01BD  ????             C        TIG_desc       <>
 01BF  ????             C
 01C1  ??               C
 01C2  ??               C
 01C3  ????             C
                        C
 01C5  ????             C        TIG_desc       <>
 01C7  ????             C
 01C9  ??               C
 01CA  ??               C
 01CB  ????             C
                        C
 01CD  ????             C        TIG_desc       <>
 01CF  ????             C
 01D1  ??               C
 01D2  ??               C
 01D3  ????             C
                        C
 01D5  ????             C        TIG_desc       <>        ; # 40
 01D7  ????             C
 01D9  ??               C
 01DA  ??               C
 01DB  ????             C
                        C
 01DD  ????             C        TIG_desc       <>
 01DF  ????             C
 01E1  ??               C
 01E2  ??               C
 01E3  ????             C
                        C
 01E5  ????             C        TIG_desc       <>
 01E7  ????             C
 01E9  ??               C
 01EA  ??               C
 01EB  ????             C
                        C
 01ED  ????             C        TIG_desc       <>
 01EF  ????             C
 01F1  ??               C
 01F2  ??               C
 01F3  ????             C
                        C
 01F5  ????             C        TIG_desc       <>
 01F7  ????             C
 01F9  ??               C
 01FA  ??               C
 01FB  ????             C
                        C
```

```
 01FD  ????              C          TIG_desc        <>
 01FF  ????              C
 0201  ??                C
 0202  ??                C
 0203  ????              C
                         C
 0205  ????              C          TIG_desc        <>
 0207  ????              C
 0209  ??                C
 020A  ??                C
 020B  ????              C
                         C
 020D  ????              C          TIG_desc        <>
 020F  ????              C
 0211  ??                C
 0212  ??                C
 0213  ????              C
                         C
 0215  ????              C          TIG_desc        <>              ; # 48
 0217  ????              C
 0219  ??                C
 021A  ??                C
 021B  ????              C
                         C
                         C
 = 017F                  C  RAM_IDTLIM      =       $-RAM_IDT-1     ; RAM IDT limit
                         C
 021D                    C  DATA    ends
                         C  ;

                            .list
                            ;
```

```
Microsoft (R) Macro Assembler  Version 4.00                 8/13/86 11:48:24
clr_mem Copyright (C) 1985,86 COMPAQ Computer Corp.         Page     1-18

                                        page
                                ;*****************************************************************
                                ;
                                ;       clr_mem - clears base memory and extended memory
                                ;
                                ;*****************************************************************
 0000                           clr_mem proc    near
 0000  60                               pusha
 0001  1E                               push    ds
 0002  06                               push    es
 0003  B0 D0                            mov     al,CMEM_D0              ; Power up sequence code
 0005  E6 84                            out     u_dma,al
                                ;
 0007  B8 0040                          mov     ax,BRAM_SEG
 000A  8E D8                            mov     ds,ax                   ; ds points to BIOS RAM area
                                ;
 000C  89 26 0000 E                     mov     [rst_off],sp            ; Save ss:sp
 0010  8C 16 0000 E                     mov     [rst_seg],ss
                                ;
 0014                           prot_mode:                              ; Go to protected mode
 0014  B0 D1                            mov     al,CMEM_D1              ; Power up sequence code
 0016  E6 84                            out     u_dma,al
                                ;
 0018  E8 0000 E                        call    goprot                  ; Q: Go to protected mode?
 001B  74 03                            jz      clear_ext               ; Y: Now in prot mode, begin
 001D  E9 00E4 R                        jmp     cm_A20_err              ; N: Set error code and (halt).
                                ;
                                ;               Clear extended memory
                                ;
 0020                           clear_ext:
 0020  B0 D2                            mov     al,CMEM_D2              ; Power up sequence code
 0022  E6 84                            out     u_dma,al
                                ;
                                ;               Get empirical extended memory size from CMOS
                                ;
 0024  EB 00                            jmp     $+2
 0026  EB 00                            jmp     $+2
 0028  EB 00                            jmp     $+2
 002A  B0 B1                            mov     al,(CMOS_EMP_HIGH+NMI_DISABLE)
 002C  E6 70                            out     RTC_CMD,al
 002E  EB 00                            jmp     $+2
 0030  EB 00                            jmp     $+2
 0032  EB 00                            jmp     $+2
 0034  E4 71                            in      al,RTC_DATA             ; High byte of emp ext mem
 0036  8A E0                            mov     ah,al
                                ;
 0038  EB 00                            jmp     $+2
 003A  EB 00                            jmp     $+2
 003C  EB 00                            jmp     $+2
 003E  B0 B0                            mov     al,(CMOS_EMP_LOW+NMI_DISABLE)
 0040  E6 70                            out     RTC_CMD,al
 0042  EB 00                            jmp     $+2
 0044  EB 00                            jmp     $+2
 0046  EB 00                            jmp     $+2
```

```
 0048  E4 71              in      al,RTC_DATA          ; Low byte of emp ext mem
                                                       ; ax = emp ext mem (KB)
 004A  33 D2              xor     dx,dx                ; dx:ax = dword value
 004C  BB 0040            mov     bx,64                ; bx = 64
 004F  F7 F3              div     bx                   ; ax = # of segments in ext mem
                      ;
 0051  8A F8              mov     bh,al                ; # of ext mem segments to clear
 0053  B3 10              mov     bl,10h               ; Start seg for ext mem clear
 0055  E8 00F1 R          call    clr_it
                      ;
 0058  E8 0000 E          call    SizeHighMem          ; Size high memory
 005B  A1 0081 R          mov     ax,[High_Size]       ; Determine # of high memory segments
 005E  05 0080            add     ax,HIGH_SYS_SIZE     ; Add high system size
 0061  33 D2              xor     dx,dx
 0063  BB 0040            mov     bx,64
 0066  F7 F3              div     bx                   ; Convert dx:ax to segments
 0068  8A F8              mov     bh,al
 006A  8A 1E 0080 R       mov     bl,[High_Segment]    ; Starting high memory segment
 006E  E8 00F1 R          call    clr_it               ; Clear high memory
                      ;
 0071  E8 0000 E          call    MovSysROM            ; Move System ROM, do ROM replacement
                                                       ; Now executing ROM code in RAM
```

19·1

```
Microsoft (R) Macro Assembler  Version 4.00                8/13/86 11:48:24
clr_mem Copyright (C) 1985,86 COMPAQ Computer Corp.        Page     1-20

                                        page
                                ;*****************************************************************
                                ;
                                ;       Return cpu to real mode
                                ;
                                ;       NOTE!  ss:sp are reloaded in clear_base.
                                ;
                                ;*****************************************************************
 0074                           cm_reset:
 0074  B0 D3                            mov     al,CMEM_D3              ; Power up sequence code
 0076  E6 84                            out     u_dma,al
                                ;                                         Reload all selectors
 0078  B8 0028                          mov     ax,SSSEL                ; ax = real mode selector
 007B  8E D8                            mov     ds,ax                   ; Load ds cashe
 007D  8E C0                            mov     es,ax                   ; Load es cashe
 007F  8E D0                            mov     ss,ax                   ; Load ss cashe
                                ;
                                ;       Reset the PE bit to return to real mode.
                                ;
                                        mov_eax_cr0                     ; Move cr0 to eax
 0081  0F 20 00                1        db      0Fh, 20h, 00h
                                ;
                                        OSP
 0084  66                      1        db      66h                     ; 16/32 operand size prefix
 0085  25 FFFE                          and     ax,0FFFEh               ; <and eax,07ffffffeh>
 0088  7FFF                             dw      7FFFh
                                ;
                                        mov_cr0_eax                     ; Set real mode
 008A  0F 22 00                1        db      0Fh, 22h, 00h
                                ;
 008D  EA                               db      0EAh                    ; <jmp far ROM:real_cs> - Load cs cashe
 008E  0092 R                           dw      real_cs                 ; Destination offset
 0090  ---- R                           dw      ROM                     ; Destination segement
                                ;
 0092                           real_cs:
                                                                        ; CPU now in real mode
 0092  2E: 0F 01 1E 0000 E              lidt    qword ptr cs:real_idt   ; Load real idt
                                ;
 0098  B0 D4                            mov     al,CMEM_D4              ; Power up sequence code
 009A  E6 84                            out     u_dma,al
                                ;                                       ; Fall thru to clear base memory
```

```
Microsoft (R) Macro Assembler  Version 4.00              8/13/86 11:48:24
clr_mem Copyright (C) 1985,86 COMPAQ Computer Corp.      Page     1-21

                                        page
                                ;*****************************************************************
                                ;
                                ;       Now clear base memory (including the GDT/IDT loaded in by goprot).
                                ;
                                ;*****************************************************************
                                ;
 009C                           clear_base:
 009C  B8 0040                          mov     ax,BRAM_SEG
 009F  8E D8                            mov     ds,ax               ; ds points to BIOS RAM area
                                ;
 00A1  8E 16 0000 E                     mov     ss,[rst_seg]        ; Load ss:sp
 00A5  8B 26 0000 E                     mov     sp,[rst_off]
 00A9  E8 0000 E                        call    Gate_A20            ; Disable gate A20
                                ;
 00AC  A1 0000 E                        mov     ax,[memsize]        ; Get size of base mem (KB)
 00AF  33 D2                            xor     dx,dx               ; dx:ax = dword value
 00B1  BB 0040                          mov     bx,64               ; bx = 64
 00B4  F7 F3                            div     bx                  ; ax = # of segments in base mem
                                ;
 00B6  3D 0000                          cmp     ax,0
 00B9  75 03                            jne     do_base
 00BB  EB 23 90                         jmp     cm_exit             ; This should never happen
                                ;
 00BE                           do_base:
 00BE  2D 0001                          sub     ax,1                ; Skip first segment of base memory
 00C1  8A F8                            mov     bh,al               ; # of base mem segments to clear
 00C3  BA 1000                          mov     dx,1000h            ; Start clearing with 2nd 64K
 00C6                           base_seg_loop:
 00C6  80 FF 00                         cmp     bh,0                ; Check # of segs to clear
 00C9  74 15                            je      cm_exit             ; If none left go to prot mode
                                ;
 00CB  8E C2                            mov     es,dx               ; Load in RAM selector - ES
                                ;
                                        OSP
 00CD  66                   1           db      66h                 ; 16/32 operand size prefix
 00CE  33 C0                            xor     ax,ax
 00D0  B9 4000                          mov     cx,16384            ; 1 segment worth of dwords
 00D3  33 FF                            xor     di,di               ; di = 0
 00D5  FC                               cld
                                ;
                                        OSP
 00D6  66                   1           db      66h                 ; 16/32 operand size prefix
 00D7  F3/ AB                           rep     stosw               ; Fill ES segment with 0
                                ;
 00D9  FE CF                            dec     bh                  ; 1 less segment to clear
 00DB  80 C6 10                         add     dh,10h              ; DX = next segment to clear
 00DE  EB E6                            jmp     base_seg_loop       ; Go to next segment
 00E0                           cm_exit:
 00E0  07                               pop     es
 00E1  1F                               pop     ds
 00E2  61                               popa
 00E3  C3                               ret                         ; *** Return ***
                                ;
```

```
Microsoft (R) Macro Assembler  Version 4.00                8/13/86 11:48:24
clr_mem Copyright (C) 1985,86 COMPAQ Computer Corp.        Page     1-22

 00E4                          cm_A20_err:
 00E4  BA 0000 E                    mov     dx,sb_err_beeps
 00E7  BB 0000 E                    mov     bx,offset sb_err_msg
 00EA  B9 0000 E                    mov     cx,sb_err_len
 00ED  E8 0000 E                    call    out_err_code       ; Display message, and
 00F0  F4                           hlt                        ; Halt.
                               ;
                               clr_mem endp
```

19

```
Microsoft (R) Macro Assembler  Version 4.00           8/13/86 11:48:24
clr_mem Copyright (C) 1985,86 COMPAQ Computer Corp.   Page     1-23

                                    page
                              ;*************************************************************
                              ;
                              ;     clr_it  - clears memory from protected mode
                              ;
                              ;           INPUT:  bh = # of consecutive segments to clear
                              ;                   bl = high byte of 24bit address of start segment.
                              ;                        ( same as segment # )
                              ;
                              ;           OUTPUT: none
                              ;*************************************************************
 00F1                         clr_it  proc    near
                              ;
 00F1  50                             push    ax
 00F2  53                             push    bx
 00F3  51                             push    cx
 00F4  57                             push    di
 00F5  1E                             push    ds
 00F6  06                             push    es
                              ;
 00F7  B8 0018                        mov     ax,DSSEL
 00FA  8E D8                          mov     ds,ax              ; DATA segment- contains GDT
                              ;
 00FC  C7 06 004A R 0000              mov     RAM_desc.base_low,0  ; Clear out RAM seg addr
                              ;
 0102                         ci_seg_loop:
 0102  80 FF 00                       cmp     bh,0               ; Check # of segs to clear
 0105  74 1B                          je      ci_exit
                              ;
 0107  88 1E 004C R                   mov     RAM_desc.base_high,bl ; Seg high byte of seg addr
 010B  B8 0048                        mov     ax,RAMSEL
 010E  8E C0                          mov     es,ax              ; Load in RAM selector - ES
                              ;
                                      OSP
 0110  66                   1         db      66h                ; 16/32 operand size prefix
 0111  33 C0                          xor     ax,ax
 0113  B9 4000                        mov     cx,16384           ; 1 segment worth of dwords
 0116  33 FF                          xor     di,di              ; di = 0
 0118  FC                             cld
                              ;
                                      OSP
 0119  66                   1         db      66h                ; 16/32 operand size prefix
 011A  F3/ AB                         rep     stosw              ; Fill ES segment with 0
                              ;
 011C  FE CF                          dec     bh                 ; 1 less segment to clear
 011E  FE C3                          inc     bl                 ; High byte of next segment
 0120  EB E0                          jmp     ci_seg_loop        ; Go to next segment
                              ;
 0122                         ci_exit:
 0122  07                             pop     es
 0123  1F                             pop     ds
 0124  5F                             pop     di
 0125  59                             pop     cx
 0126  5B                             pop     bx
```

```
Microsoft (R) Macro Assembler  Version 4.00          8/13/86 11:48:24
clr_mem Copyright (C) 1985,86 COMPAQ Computer Corp.  Page     1-24

0127  58                        pop     ax
0128  C3                        ret
                            ;
                            clr_it  endp

0129                        ROM     ends
                                    end
```

Microsoft (R) Macro Assembler Version 4.00    8/13/86 11:48:24

clr_mem Copyright (C) 1985,86 COMPAQ Computer Corp.    Symbols-1

Macros:

| N a m e | Lines |
|---|---|
| MOV_AX_GS | 1 |
| MOV_CR0_EAX | 1 |
| MOV_EAX_CR0 | 1 |
| MOV_GS_AX | 1 |
| MOV_GS_DX | 1 |
| OSP | 1 |
| POP_FS | 1 |
| POP_GS | 1 |
| PUSH_FS | 1 |
| PUSH_GS | 1 |

Structures and Records:

| N a m e | Width Shift | # fields Width | Mask | Initial |
|---|---|---|---|---|
| CPU_REV_COM | 0002 | 0002 | | |
| COMPONENT | 0000 | | | |
| CPU_REVISION | 0001 | | | |
| DESC | 0008 | 0005 | | |
| LIMIT | 0000 | | | |
| BASE_LOW | 0002 | | | |
| BASE_HIGH | 0004 | | | |
| ACCESS | 0005 | | | |
| RES | 0006 | | | |
| DESC_386 | 0008 | 0006 | | |
| LIMIT_386 | 0000 | | | |
| BASE_LOW_386 | 0002 | | | |
| BASE_386 | 0004 | | | |
| ACCESS_386 | 0005 | | | |
| GD_LIMIT_386 | 0006 | | | |
| BASE_HIGH_386 | 0007 | | | |
| HIGH_MEMORY | 0008 | 0005 | | |
| ALLOC_FE | 0000 | | | |
| INSTALL | 0001 | | | |
| HIGH_TOTAL | 0002 | | | |
| HIGH_AVAIL | 0004 | | | |
| HIGH_START | 0006 | | | |
| MEM_ERR | 0004 | 0003 | | |
| BADHIGH | 0000 | | | |
| BADLOW | 0001 | | | |
| BADBIT | 0003 | | | |
| TIG_DESC | 0008 | 0005 | | |
| OFFST | 0000 | | | |
| CS_SEL | 0002 | | | |
| TIG_UN | 0004 | | | |
| TIG_ALL | 0005 | | | |
| TIG_RES | 0006 | | | |

Microsoft (R) Macro Assembler , Version 4.00 8/13/86 11:48:24

clr_mem Copyright (C) 1985,86 COMPAQ Computer Corp. Symbols-2

Segments and Groups:

| N a m e | Size | Align | Combine | Class |
|---|---|---|---|---|
| DATA . . . . . . . . . . . . . . . . | 021D | AT | 1C00 | |
| ROM . . . . . . . . . . . . . . . . | 0129 | BYTE | PUBLIC | 'ROM' |

Symbols:

| N a m e | Type | Value | Attr |
|---|---|---|---|
| A20OFF . . . . . . . . . . . . . . | Number | 00DD | |
| A20_ERR . . . . . . . . . . . . . . | Number | 0010 | |
| A20_ON . . . . . . . . . . . . . . | Number | 00DF | |
| ALLOC_PTR . . . . . . . . . . . . . | Number | FFE0 | |
| ALTKEY . . . . . . . . . . . . . . | Number | 0008 | |
| ASC_ZERO . . . . . . . . . . . . . | Number | 0030 | |
| AUTO_ . . . . . . . . . . . . . . | Number | 0008 | |
| A_BIT . . . . . . . . . . . . . . | Number | 0080 | |
| BAD_TIME . . . . . . . . . . . . . | Number | 0004 | |
| BASE_32_BREAK . . . . . . . . . . . | L BYTE | 0084 | DATA |
| BASE_ERR . . . . . . . . . . . . . | L 0004 | 005A | DATA |
| BASE_FIRST . . . . . . . . . . . . | Number | 0002 | |
| BASE_HAL_ERR . . . . . . . . . . . | L 0004 | 005E | DATA |
| BASE_LAST . . . . . . . . . . . . . | Number | 0009 | |
| BASE_MIN . . . . . . . . . . . . . | Number | 0080 | |
| BASE_SEG_INCR . . . . . . . . . . . | Number | 0001 | |
| BASE_SEG_LOOP . . . . . . . . . . . | L NEAR | 00C6 | ROM |
| BCS_DESC . . . . . . . . . . . . . | L 0008 | 0038 | DATA |
| BHAL_ERR . . . . . . . . . . . . . | Number | 0004 | |
| BRAM_40 . . . . . . . . . . . . . . | Number | 0040 | |
| BRAM_41 . . . . . . . . . . . . . . | Number | 0041 | |
| BRAM_42 . . . . . . . . . . . . . . | Number | 0042 | |
| BRAM_43 . . . . . . . . . . . . . . | Number | 0043 | |
| BRAM_44 . . . . . . . . . . . . . . | Number | 0044 | |
| BRAM_45 . . . . . . . . . . . . . . | Number | 0045 | |
| BRAM_46 . . . . . . . . . . . . . . | Number | 0046 | |
| BRAM_47 . . . . . . . . . . . . . . | Number | 0047 | |
| BRAM_SEG . . . . . . . . . . . . . | Number | 0040 | |
| BRSEL . . . . . . . . . . . . . . | Number | 0020 | |
| BT_B9 . . . . . . . . . . . . . . | Number | 00B9 | |
| BT_BA . . . . . . . . . . . . . . | Number | 00BA | |
| BT_BB . . . . . . . . . . . . . . | Number | 00BB | |
| BT_BC . . . . . . . . . . . . . . | Number | 00BC | |
| B_ERR . . . . . . . . . . . . . . | Number | 0001 | |
| CAPKEY . . . . . . . . . . . . . . | Number | 0040 | |
| CAPSLOK . . . . . . . . . . . . . | Number | 0040 | |
| CAP_LED . . . . . . . . . . . . . | Number | 0004 | |
| CCC_VDU . . . . . . . . . . . . . | Number | 0004 | |
| CI_EXIT . . . . . . . . . . . . . | L NEAR | 0122 | ROM |
| CI_SEG_LOOP . . . . . . . . . . . | L NEAR | 0102 | ROM |
| CLEAR_BASE . . . . . . . . . . . . | L NEAR | 009C | ROM |

19

```
Microsoft (R) Macro Assembler  Version 4.00              8/13/86 11:48:24

clr_mem Copyright (C) 1985,86 COMPAQ Computer Corp.       Symbols-3

CLEAR_EXT . . . . . . . . . . . . . .    L NEAR   0020   ROM
CLR_IT  . . . . . . . . . . . . . . .    N PROC   00F1   ROM     Length = 0038
CLR_MEM . . . . . . . . . . . . . . .    N PROC   0000   ROM     Global  Length = 00F1
CMEM_D0 . . . . . . . . . . . . . . .    Number   00D0
CMEM_D1 . . . . . . . . . . . . . . .    Number   00D1
CMEM_D2 . . . . . . . . . . . . . . .    Number   00D2
CMEM_D3 . . . . . . . . . . . . . . .    Number   00D3
CMEM_D4 . . . . . . . . . . . . . . .    Number   00D4
CMOS_ACFG . . . . . . . . . . . . . .    Number   002D
CMOS_BASE . . . . . . . . . . . . . .    L WORD   006A   DATA
CMOS_CENTURY  . . . . . . . . . . . .    Number   0032
CMOS_CHK_HIGH . . . . . . . . . . . .    Number   002E
CMOS_CHK_LOW  . . . . . . . . . . . .    Number   002F
CMOS_CONFIG . . . . . . . . . . . . .    Number   0014
CMOS_DIAGS  . . . . . . . . . . . . .    Number   000E
CMOS_DISK_TYPE  . . . . . . . . . . .    Number   0012
CMOS_DRV_C  . . . . . . . . . . . . .    Number   0019
CMOS_DRV_D  . . . . . . . . . . . . .    Number   001A
CMOS_EMP_HIGH . . . . . . . . . . . .    Number   0031
CMOS_EMP_LOW  . . . . . . . . . . . .    Number   0030
CMOS_EXT  . . . . . . . . . . . . . .    L WORD   006C   DATA
CMOS_EXT_HIGH . . . . . . . . . . . .    Number   0018
CMOS_EXT_LOW  . . . . . . . . . . . .    Number   0017
CMOS_FLOP_TYPE  . . . . . . . . . . .    Number   0010
CMOS_INV_CHECK  . . . . . . . . . . .    Number   0040
CMOS_INV_CONFIG . . . . . . . . . . .    Number   0020
CMOS_MISC_FLAGS . . . . . . . . . . .    Number   0033
CMOS_REAL_HIGH  . . . . . . . . . . .    Number   0016
CMOS_REAL_LOW . . . . . . . . . . . .    Number   0015
CMOS_RST_CODE . . . . . . . . . . . .    Number   000F
CMOS_SIZE . . . . . . . . . . . . . .    L WORD   006E   DATA
CM_A20_ERR  . . . . . . . . . . . . .    L NEAR   00E4   ROM
CM_EXIT . . . . . . . . . . . . . . .    L NEAR   00E0   ROM
CM_RESET  . . . . . . . . . . . . . .    L NEAR   0074   ROM
CNTMSK  . . . . . . . . . . . . . . .    Number   003F
COLOR_40_VDU  . . . . . . . . . . . .    Number   0010
COLOR_80_VDU  . . . . . . . . . . . .    Number   0020
COMMON_ . . . . . . . . . . . . . . .    Number   0000
COMM_SP . . . . . . . . . . . . . . .    Number   0024
CON . . . . . . . . . . . . . . . . .    Number   0004
COUNT . . . . . . . . . . . . . . . .    Number   0009
CPU_HIGH  . . . . . . . . . . . . . .    Number   00A3
CPU_READ  . . . . . . . . . . . . . .    Number   00A5
CPU_REV_PTR . . . . . . . . . . . . .    Number   FFE2
CSSEL . . . . . . . . . . . . . . . .    Number   0030
CS_ACC  . . . . . . . . . . . . . . .    Number   009A
CS_DESC . . . . . . . . . . . . . . .    L 0008   0030   DATA
CTRLKEY . . . . . . . . . . . . . . .    Number   0004

DATA_SEG  . . . . . . . . . . . . . .    Number   1C00
DEFAULT_CONFIG  . . . . . . . . . . .    Number   0000
DIAGSEL . . . . . . . . . . . . . . .    Number   0050
DIAG_2F . . . . . . . . . . . . . . .    Number   002F
DIAG_ACCESS . . . . . . . . . . . . .    Number   0022
```

```
Microsoft (R) Macro Assembler  Version 4.00                8/13/86 11:48:24
clr_mem Copyright (C) 1985,86 COMPAQ Computer Corp.        Symbols-4

DIAG_BASE . . . . . . . . . . .      Number  00C0
DIAG_BASE_HIGH . . . . . . . . .     Number  0080
DIAG_BASE_LOW . . . . . . . . .      Number  0000
DIAG_DESC . . . . . . . . . . .      L 0008  0050    DATA
DIAG_GD_LIMIT . . . . . . . . .      Number  0000
DIAG_LIMIT . . . . . . . . . .       Number  0001
DIGIT_LEN . . . . . . . . . . .      Number  0005
DISK_ONE_T1 . . . . . . . . . .      Number  0010
DISK_ONE_T10 . . . . . . . . .       Number  00A0
DISK_ONE_T11 . . . . . . . . .       Number  00B0
DISK_ONE_T12 . . . . . . . . .       Number  00C0
DISK_ONE_T13 . . . . . . . . .       Number  00D0
DISK_ONE_T14 . . . . . . . . .       Number  00E0
DISK_ONE_T15 . . . . . . . . .       Number  00F0
DISK_ONE_T2 . . . . . . . . . .      Number  0020
DISK_ONE_T3 . . . . . . . . . .      Number  0030
DISK_ONE_T4 . . . . . . . . . .      Number  0040
DISK_ONE_T5 . . . . . . . . . .      Number  0050
DISK_ONE_T6 . . . . . . . . . .      Number  0060
DISK_ONE_T7 . . . . . . . . . .      Number  0070
DISK_ONE_T8 . . . . . . . . . .      Number  0080
DISK_ONE_T9 . . . . . . . . . .      Number  0090
DISK_ONE_TYPE . . . . . . . . .      Number  000F
DISK_TWO_T1 . . . . . . . . . .      Number  0001
DISK_TWO_T10 . . . . . . . . .       Number  000A
DISK_TWO_T11 . . . . . . . . .       Number  000B
DISK_TWO_T12 . . . . . . . . .       Number  000C
DISK_TWO_T13 . . . . . . . . .       Number  000D
DISK_TWO_T14 . . . . . . . . .       Number  000E
DISK_TWO_T15 . . . . . . . . .       Number  000F
DISK_TWO_T2 . . . . . . . . . .      Number  0002
DISK_TWO_T3 . . . . . . . . . .      Number  0003
DISK_TWO_T4 . . . . . . . . . .      Number  0004
DISK_TWO_T5 . . . . . . . . . .      Number  0005
DISK_TWO_T6 . . . . . . . . . .      Number  0006
DISK_TWO_T7 . . . . . . . . . .      Number  0007
DISK_TWO_T8 . . . . . . . . . .      Number  0008
DISK_TWO_T9 . . . . . . . . . .      Number  0009
DISK_TWO_TYPE . . . . . . . . .      Number  00F0
DISP_STRING . . . . . . . . . .      L WORD  0087    DATA    Length = 000B
DK_A0 . . . . . . . . . . . . .      Number  00A0
DK_A1 . . . . . . . . . . . . .      Number  00A1
DK_A2 . . . . . . . . . . . . .      Number  00A2
DK_A3 . . . . . . . . . . . . .      Number  00A3
DK_A4 . . . . . . . . . . . . .      Number  00A4
DK_A5 . . . . . . . . . . . . .      Number  00A5
DK_A6 . . . . . . . . . . . . .      Number  00A6
DK_A7 . . . . . . . . . . . . .      Number  00A7
DK_A8 . . . . . . . . . . . . .      Number  00A8
DK_A9 . . . . . . . . . . . . .      Number  00A9
DK_AA . . . . . . . . . . . . .      Number  00AA
DK_AB . . . . . . . . . . . . .      Number  00AB
DK_AC . . . . . . . . . . . . .      Number  00AC
DK_AD . . . . . . . . . . . . .      Number  00AD
```

200

```
DK_AE  . . . . . . . . . . . . . . .    Number   00AE
DK_AF  . . . . . . . . . . . . . . .    Number   00AF
DO_BASE  . . . . . . . . . . . . . .    L NEAR   00BE    ROM
DPL0 . . . . . . . . . . . . . . . .    Number   0000
DPL1 . . . . . . . . . . . . . . . .    Number   0020
DPL2 . . . . . . . . . . . . . . . .    Number   0040
DPL3 . . . . . . . . . . . . . . . .    Number   0060
DSSEL  . . . . . . . . . . . . . . .    Number   0018
DS_ACC . . . . . . . . . . . . . . .    Number   0092
DS_DESC  . . . . . . . . . . . . . .    L 0008   0018    DATA
DUAL_F . . . . . . . . . . . . . . .    Number   0001

EHAL_ERR . . . . . . . . . . . . . .    Number   0008
EM . . . . . . . . . . . . . . . . .    Number   0004
ENH_KBD  . . . . . . . . . . . . . .    Number   0010
ERR_RST  . . . . . . . . . . . . . .    Number   0003
ES_DESC  . . . . . . . . . . . . . .    L 0008   0020    DATA
EXT_15M_HIGH . . . . . . . . . . . .    Number   003C
EXT_1M_HIGH  . . . . . . . . . . . .    Number   0004
EXT_1_5M_HIGH  . . . . . . . . . . .    Number   0006
EXT_2M_HIGH  . . . . . . . . . . . .    Number   0008
EXT_32_BREAK . . . . . . . . . . . .    L BYTE   0085    DATA
EXT_512K_HIGH  . . . . . . . . . . .    Number   0002
EXT_ERR  . . . . . . . . . . . . . .    L 0004   0062    DATA
EXT_FIRST  . . . . . . . . . . . . .    Number   0010
EXT_HAL_ERR  . . . . . . . . . . . .    L 0004   0066    DATA
EXT_LAST . . . . . . . . . . . . . .    Number   00FD
EXT_LOW  . . . . . . . . . . . . . .    Number   0000
EXT_MIN  . . . . . . . . . . . . . .    Number   0000
EXT_SEG_INCR . . . . . . . . . . . .    Number   0001
EX_DOWN  . . . . . . . . . . . . . .    Number   0004
E_ERR  . . . . . . . . . . . . . . .    Number   0002

FAILED_DRIVEC  . . . . . . . . . . .    Number   0008
FALSE  . . . . . . . . . . . . . . .    Number   0000
FAST_  . . . . . . . . . . . . . . .    Number   0001
FAST_CPU . . . . . . . . . . . . . .    Number   000C
FAST_SP  . . . . . . . . . . . . . .    Number   0022
FIN_SETUP  . . . . . . . . . . . . .    Number   0045
FLOP_ONE_48  . . . . . . . . . . . .    Number   0010
FLOP_ONE_96  . . . . . . . . . . . .    Number   0020
FLOP_ONE_TYPE  . . . . . . . . . . .    Number   000F
FLOP_TWO_48  . . . . . . . . . . . .    Number   0001
FLOP_TWO_96  . . . . . . . . . . . .    Number   0002
FLOP_TWO_TYPE  . . . . . . . . . . .    Number   00F0
FOUND_BASE . . . . . . . . . . . . .    L WORD   0070    DATA
FOUND_EXT  . . . . . . . . . . . . .    L WORD   0072    DATA
FOUND_SIZE . . . . . . . . . . . . .    L WORD   0074    DATA
FOUR_FLOP  . . . . . . . . . . . . .    Number   00C0
FREE_FE  . . . . . . . . . . . . . .    Number   0010
FULL_SIZE  . . . . . . . . . . . . .    Number   FFFF
FX_B0  . . . . . . . . . . . . . . .    Number   0080
FX_B1  . . . . . . . . . . . . . . .    Number   0081
FX_B2  . . . . . . . . . . . . . . .    Number   0082
```

```
FX_B3 . . . . . . . . . . . . . .     Number  00B3
FX_B4 . . . . . . . . . . . . . .     Number  00B4
FX_B5 . . . . . . . . . . . . . .     Number  00B5
FX_B6 . . . . . . . . . . . . . .     Number  00B6
FX_B7 . . . . . . . . . . . . . .     Number  00B7
FX_B8 . . . . . . . . . . . . . .     Number  00B8
F_NUM_LK . . . . . . . . . . . . .    Number  0020

GATE_A20 . . . . . . . . . . . . .    L NEAR  0000   ROM    External
GDT  . . . . . . . . . . . . . . .    L 0008  0000   DATA
GDTLIM . . . . . . . . . . . . . .    Number  0057
GDTSEL . . . . . . . . . . . . . .    Number  0008
GDT_DESC . . . . . . . . . . . . .    L 0008  0008   DATA
GOOD_SIZE . . . . . . . . . . . .     L WORD  0078   DATA
GOPROT . . . . . . . . . . . . . .    L NEAR  0000   ROM    External
GOT_287  . . . . . . . . . . . . .    Number  0002
GOT_DRIVES . . . . . . . . . . . .    Number  0001
GOT_E0 . . . . . . . . . . . . . .    Number  0002
GOT_E1 . . . . . . . . . . . . . .    Number  0001

HALT_ERR . . . . . . . . . . . . .    Number  0040
HAL_ERR  . . . . . . . . . . . . .    Number  0002
HIGH . . . . . . . . . . . . . . .    Number  0002
HIGH_CPU . . . . . . . . . . . . .    Number  0004
HIGH_MAX_SEG . . . . . . . . . . .    Number  00FF
HIGH_MIN_SEG . . . . . . . . . . .    Number  00F0
HIGH_SEGMENT . . . . . . . . . . .    L BYTE  0080   DATA
HIGH_SIZE  . . . . . . . . . . . .    L WORD  0081   DATA
HIGH_SP  . . . . . . . . . . . . .    Number  0000
HIGH_SYS_SEG . . . . . . . . . . .    Number  00FE
HIGH_SYS_SIZE  . . . . . . . . . .    Number  0080
HIGH_USER_SEG  . . . . . . . . . .    Number  00FA
HIGH_USER_SIZE . . . . . . . . . .    Number  0100

IBMPC_SP . . . . . . . . . . . . .    Number  0031
IDTSEL . . . . . . . . . . . . . .    Number  0010
IDT_DESC . . . . . . . . . . . . .    L 0008  0010   DATA
IO_ACC . . . . . . . . . . . . . .    Number  0086
INIT_KSETUP  . . . . . . . . . . .    Number  005D
INSKEY . . . . . . . . . . . . . .    Number  0080
INSRION  . . . . . . . . . . . . .    Number  0080
IP_287 . . . . . . . . . . . . . .    Number  0020
IRQ0_SEL . . . . . . . . . . . . .    Number  0008
IRQ8_SEL . . . . . . . . . . . . .    Number  0070

J1MEG  . . . . . . . . . . . . . .    Number  0040
J2MEG  . . . . . . . . . . . . . .    Number  0080
J512 . . . . . . . . . . . . . . .    Number  0010
J640 . . . . . . . . . . . . . . .    Number  0020

KBD_TO . . . . . . . . . . . . . .    Number  1000
KBD_TYPE . . . . . . . . . . . . .    Number  0020
KB_MESG  . . . . . . . . . . . . .    L BYTE  0084   DATA
KCMU_DEFAULT . . . . . . . . . . .    Number  00F6
```

202

```
Microsoft (R) Macro Assembler  Version 4.00                8/13/86 11:48:24

clr_mem Copyright (C) 1985,86 COMPAQ Computer Corp.        Symbols-7

KCMD_DIAG_DUMP . . . . . . . . . .        Number  00AC
KCMD_DISABLE . . . . . . . . . . .        Number  00AD
KCMD_DIS_KBD . . . . . . . . . . .        Number  00F5
KCMD_ECHO  . . . . . . . . . . . .        Number  00EE
KCMD_ENABLE  . . . . . . . . . . .        Number  00AE
KCMD_ENA_KBD . . . . . . . . . . .        Number  00F4
KCMD_INTF_TEST . . . . . . . . . .        Number  00AB
KCMD_IP  . . . . . . . . . . . . .        Number  0040
KCMD_LEDS  . . . . . . . . . . . .        Number  00ED
KCMD_NOP . . . . . . . . . . . . .        Number  00FD
KCMD_PULSE_OUT . . . . . . . . . .        Number  00F0
KCMD_RD  . . . . . . . . . . . . .        Number  0020
KCMD_RD_INPUT  . . . . . . . . . .        Number  00C0
KCMD_RD_OUTPUT . . . . . . . . . .        Number  00D0
KCMD_RD_TINPUTS  . . . . . . . . .        Number  00E0
KCMD_RESEND  . . . . . . . . . . .        Number  00FE
KCMD_RESET . . . . . . . . . . . .        Number  00FF
KCMD_SELF_TEST . . . . . . . . . .        Number  00AA
KCMD_SETTYPE . . . . . . . . . . .        Number  00F3
KCMD_WT  . . . . . . . . . . . . .        Number  0060
KCMD_WT_OUTPUT . . . . . . . . . .        Number  00D1
KEY_80 . . . . . . . . . . . . . .        Number  0080
KEY_81 . . . . . . . . . . . . . .        Number  0081
KEY_82 . . . . . . . . . . . . . .        Number  0082
KEY_83 . . . . . . . . . . . . . .        Number  0083
KEY_84 . . . . . . . . . . . . . .        Number  0084
KEY_86 . . . . . . . . . . . . . .        Number  0086
KEY_87 . . . . . . . . . . . . . .        Number  0087
KEY_88 . . . . . . . . . . . . . .        Number  0088
KEY_89 . . . . . . . . . . . . . .        Number  0089
KEY_8A . . . . . . . . . . . . . .        Number  008A
KEY_8B . . . . . . . . . . . . . .        Number  008B
KEY_8C . . . . . . . . . . . . . .        Number  008C
KEY_8D . . . . . . . . . . . . . .        Number  008D
KEY_CMD  . . . . . . . . . . . . .        Number  0064
KEY_IN_BUFF  . . . . . . . . . . .        Number  0060
KEY_OUT_BUFF . . . . . . . . . . .        Number  0060
KEY_STATUS . . . . . . . . . . . .        Number  0064
KEY_TEST_OK  . . . . . . . . . . .        Number  0055
KIN_287  . . . . . . . . . . . . .        Number  0004
KIN_CPU_SPEED  . . . . . . . . . .        Number  0010
KIN_KEY_LOCK . . . . . . . . . . .        Number  0080
KIN_MANUF  . . . . . . . . . . . .        Number  0020
KIN_P_DISPLAY  . . . . . . . . . .        Number  0040
KOUT_A20 . . . . . . . . . . . . .        Number  0002
KOUT_CLK_OUT . . . . . . . . . . .        Number  0040
KOUT_CPU_RESET . . . . . . . . . .        Number  0001
KOUT_CPU_SPEED . . . . . . . . . .        Number  000C
KOUT_DATA_OUT  . . . . . . . . . .        Number  0080
KOUT_IN_FULL . . . . . . . . . . .        Number  0020
KOUT_OUT_FULL  . . . . . . . . . .        Number  0010
KSTAT_CMD_DATA . . . . . . . . . .        Number  0008
KSTAT_INHIBIT  . . . . . . . . . .        Number  0010
KSTAT_IN_FULL  . . . . . . . . . .        Number  0002
```

201

```
Microsoft (R) Macro Assembler  Version 4.00               8/13/86 11:48:24
clr_mem Copyright (C) 1985,86 COMPAQ Computer Corp.       Symbols-8

KSTAT_OUT_FULL . . . . . . . . . .     Number   0001
KSTAT_P_ERROR  . . . . . . . . . .     Number   0080
KSTAT_RTO  . . . . . . . . . . . .     Number   0040
KSTAT_SYS_FLAG . . . . . . . . . .     Number   0004
KSTAT_TTO  . . . . . . . . . . . .     Number   0020
K_CLICK  . . . . . . . . . . . . .     Number   0002
K_CPU_FAST . . . . . . . . . . . .     Number   000C
K_CPU_HIGH . . . . . . . . . . . .     Number   0004
K_CPU_SLOW . . . . . . . . . . . .     Number   0008

LEFTALT  . . . . . . . . . . . . .     Number   0002
LEFTCTRL . . . . . . . . . . . . .     Number   0001
LEFTSHF  . . . . . . . . . . . . .     Number   0002

MEMORY_BREAK . . . . . . . . . . .     L BYTE   0083   DATA
MEMSIZE  . . . . . . . . . . . . .     V WORD   0000          External
MEM_60 . . . . . . . . . . . . . .     Number   0060
MEM_61 . . . . . . . . . . . . . .     Number   0061
MEM_62 . . . . . . . . . . . . . .     Number   0062
MEM_63 . . . . . . . . . . . . . .     Number   0063
MEM_64 . . . . . . . . . . . . . .     Number   0064
MEM_640K . . . . . . . . . . . . .     Number   0080
MEM_65 . . . . . . . . . . . . . .     Number   0065
MEM_66 . . . . . . . . . . . . . .     Number   0066
MEM_67 . . . . . . . . . . . . . .     Number   0067
MEM_68 . . . . . . . . . . . . . .     Number   0068
MEM_69 . . . . . . . . . . . . . .     Number   0069
MEM_6A . . . . . . . . . . . . . .     Number   006A
MEM_6B . . . . . . . . . . . . . .     Number   006B
MEM_6C . . . . . . . . . . . . . .     Number   006C
MEM_6D . . . . . . . . . . . . . .     Number   006D
MEM_6E . . . . . . . . . . . . . .     Number   006E
MEM_6F . . . . . . . . . . . . . .     Number   006F
MEM_70 . . . . . . . . . . . . . .     Number   0070
MEM_71 . . . . . . . . . . . . . .     Number   0071
MEM_72 . . . . . . . . . . . . . .     Number   0072
MEM_73 . . . . . . . . . . . . . .     Number   0073
MEM_74 . . . . . . . . . . . . . .     Number   0074
MEM_7C . . . . . . . . . . . . . .     Number   007C
MEM_7D . . . . . . . . . . . . . .     Number   007D
MEM_7E . . . . . . . . . . . . . .     Number   007E
MEM_7F . . . . . . . . . . . . . .     Number   007F
MEM_DISCREP  . . . . . . . . . . .     Number   0010
MM_ERR . . . . . . . . . . . . . .     Number   0080
MONO_VDU . . . . . . . . . . . . .     Number   0030
MOVSYSROM  . . . . . . . . . . . .     L NEAR   0000   ROM    External
MP . . . . . . . . . . . . . . . .     Number   0002
M_DMA  . . . . . . . . . . . . . .     Number   0085
M_RESET_00 . . . . . . . . . . . .     Number   0000
M_RUN_01 . . . . . . . . . . . . .     Number   0001

NMI_DISABLE  . . . . . . . . . . .     Number   0080
NOREPLACE  . . . . . . . . . . . .     Number   0001
NORMAL . . . . . . . . . . . . . .     Number   0007
```

205

```
Microsoft (R) Macro Assembler  Version 4.00           8/13/86 11:48:24

clr_mem Copyright (C) 1985,86 COMPAQ Computer Corp.   Symbols-9

NO_DISK_ONE . . . . . . . . . . .   Number  0000
NO_DISK_TWO . . . . . . . . . . .   Number  0000
NUMKEY . . . . . . . . . . . . .    Number  0020
NUMLOCK . . . . . . . . . . . . .   Number  0020
NUM_FLOPS . . . . . . . . . . . .   Number  003F
NUM_LED . . . . . . . . . . . . .   Number  0002

OK_MEM . . . . . . . . . . . . .    Number  0000
OK_RST . . . . . . . . . . . . .    Number  0002
ONE_FLOP . . . . . . . . . . . .    Number  0000
OPT_E0 . . . . . . . . . . . . .    Number  00E0
OPT_E1 . . . . . . . . . . . . .    Number  00E1
OPT_E2 . . . . . . . . . . . . .    Number  00E2
OPT_E3 . . . . . . . . . . . . .    Number  00E3
OTHER_VDU . . . . . . . . . . . .   Number  0000
OUT_ERR_CODE . . . . . . . . . .    L NEAR  0000   ROM   External

PE . . . . . . . . . . . . . . .    Number  0001
PPI . . . . . . . . . . . . . . .   Number  0061
PPI_ENB_IOCHECK . . . . . . . . .   Number  0008
PPI_ENB_PCHECK . . . . . . . . .    Number  0004
PPI_IOCHECK . . . . . . . . . . .   Number  0040
PPI_PCHECK . . . . . . . . . . .    Number  0080
PPI_REFRSH . . . . . . . . . . .    Number  0010
PPI_SPKR_DATA . . . . . . . . . .   Number  0002
PPI_SPKR_GATE . . . . . . . . . .   Number  0001
PPI_T2OUT . . . . . . . . . . . .   Number  0020
PPO . . . . . . . . . . . . . . .   Number  0061
PPO_ENB_IOCHECK . . . . . . . . .   Number  0008
PPO_ENB_PCHECK . . . . . . . . .    Number  0004
PPO_INIT . . . . . . . . . . . .    Number  000C
PPO_SPKR_DATA . . . . . . . . . .   Number  0002
PPO_SPKR_GATE . . . . . . . . . .   Number  0001
PRES . . . . . . . . . . . . . .    Number  0080
PRIM_VDU . . . . . . . . . . . .    Number  0030
PROT_75 . . . . . . . . . . . . .   Number  0075
PROT_76 . . . . . . . . . . . . .   Number  0076
PROT_77 . . . . . . . . . . . . .   Number  0077
PROT_78 . . . . . . . . . . . . .   Number  0078
PROT_79 . . . . . . . . . . . . .   Number  0079
PROT_7A . . . . . . . . . . . . .   Number  007A
PROT_7B . . . . . . . . . . . . .   Number  007B
PROT_MODE . . . . . . . . . . . .   L NEAR  0014   ROM

RAM400 . . . . . . . . . . . . .    V WORD  0000         External
RAMI_30 . . . . . . . . . . . . .   Number  0030
RAMI_31 . . . . . . . . . . . . .   Number  0031
RAMI_32 . . . . . . . . . . . . .   Number  0032
RAMI_33 . . . . . . . . . . . . .   Number  0033
RAMI_34 . . . . . . . . . . . . .   Number  0034
RAMI_35 . . . . . . . . . . . . .   Number  0035
RAMI_36 . . . . . . . . . . . . .   Number  0036
RAMI_37 . . . . . . . . . . . . .   Number  0037
RAMI_38 . . . . . . . . . . . . .   Number  [illegible]
```

```
RAMI_39 . . . . . . . . . . . . . .    Number  0039
RAMI_3A . . . . . . . . . . . . . .    Number  003A
RAMI_3B . . . . . . . . . . . . . .    Number  003B
RAMSEL . . . . . . . . . . . . . .     Number  0048
RAM_DESC . . . . . . . . . . . . .     L 0008  0048    DATA
RAM_ERR_BEEPS . . . . . . . . . .      Number  0000
RAM_IDT . . . . . . . . . . . . .      L BYTE  009D    DATA
RAM_IDTLIM . . . . . . . . . . . .     Number  017F
RCVD_ACK . . . . . . . . . . . . .     Number  0010
RD . . . . . . . . . . . . . . . .     Number  0002
REAL_256K_HIGH . . . . . . . . . .     Number  0001
REAL_256K_LOW . . . . . . . . . .      Number  0000
REAL_512K_HIGH . . . . . . . . . .     Number  0002
REAL_512K_LOW . . . . . . . . . .      Number  0000
REAL_640K_HIGH . . . . . . . . . .     Number  0002
REAL_640K_LOW . . . . . . . . . .      Number  0080
REAL_CS . . . . . . . . . . . . .      L NEAR  0092    ROM
REAL_IDT . . . . . . . . . . . . .     V WORD  0000    ROM     External
RESET_00 . . . . . . . . . . . . .     Number  0000
RESET_01 . . . . . . . . . . . . .     Number  0001
RESET_02 . . . . . . . . . . . . .     Number  0002
RESET_03 . . . . . . . . . . . . .     Number  0003
RESET_04 . . . . . . . . . . . . .     Number  0004
RESET_05 . . . . . . . . . . . . .     Number  0005
RESET_06 . . . . . . . . . . . . .     Number  0006
RESET_07 . . . . . . . . . . . . .     Number  0007
RESET_08 . . . . . . . . . . . . .     Number  0008
RESET_09 . . . . . . . . . . . . .     Number  0009
RESET_0A . . . . . . . . . . . . .     Number  000A
RESET_0B . . . . . . . . . . . . .     Number  000B
RESET_0C . . . . . . . . . . . . .     Number  000C
RESET_0F . . . . . . . . . . . . .     Number  000F
RID_1ST . . . . . . . . . . . . .      Number  0040
RID_IP . . . . . . . . . . . . . .     Number  0080
RIGTALT . . . . . . . . . . . . .      Number  0008
RIGTCTRL . . . . . . . . . . . . .     Number  0004
RIGTSHF . . . . . . . . . . . . .      Number  0001
RST286 . . . . . . . . . . . . . .     Number  00FE
RST_BLK_MOV . . . . . . . . . . .      Number  0009
RST_BOOT . . . . . . . . . . . . .     Number  0004
RST_MEM_ERR . . . . . . . . . . .      Number  0003
RST_MEM_OK . . . . . . . . . . . .     Number  0002
RST_MEM_SIZ . . . . . . . . . . .      Number  0001
RST_NORMAL . . . . . . . . . . . .     Number  0000
RST_OFF . . . . . . . . . . . . .      V WORD  0000            External
RST_PROT_ERR . . . . . . . . . . .     Number  0007
RST_PROT_OK . . . . . . . . . . .      Number  0006
RST_SEG . . . . . . . . . . . . .      V WORD  0000            External
RST_VECT . . . . . . . . . . . . .     Number  000A
RST_VECTI . . . . . . . . . . . .      Number  0005
RTCA_DIV . . . . . . . . . . . . .     Number  0070
RTCA_RS . . . . . . . . . . . . .      Number  000F
RTCA_UIP . . . . . . . . . . . . .     Number  0080
RTCB_24_12 . . . . . . . . . . . .     Number  0002
```

Microsoft (R) Macro Assembler Version 4.00 8/13/86 11:48:24

clr_mem Copyright (C) 1985,86 COMPAQ Computer Corp. Symbols-11

```
RTCB_AIE . . . . . . . . . . . . . .   Number  0020
RTCB_DM  . . . . . . . . . . . . . .   Number  0004
RTCB_DSE . . . . . . . . . . . . . .   Number  0001
RTCB_PIE . . . . . . . . . . . . . .   Number  0040
RTCB_SET . . . . . . . . . . . . . .   Number  0080
RTCB_SQWE  . . . . . . . . . . . . .   Number  0008
RTCB_UIE . . . . . . . . . . . . . .   Number  0010
RTCC_AF  . . . . . . . . . . . . . .   Number  0020
RTCC_IRQF  . . . . . . . . . . . . .   Number  0080
RTCC_PF  . . . . . . . . . . . . . .   Number  0040
RTCC_UF  . . . . . . . . . . . . . .   Number  0010
RTCD_VAL_CMOS  . . . . . . . . . . .   Number  0080
RTC_ALRM_HRS . . . . . . . . . . . .   Number  0005
RTC_ALRM_MINS  . . . . . . . . . . .   Number  0003
RTC_ALRM_SECS  . . . . . . . . . . .   Number  0001
RTC_CMD  . . . . . . . . . . . . . .   Number  0070
RTC_DATA . . . . . . . . . . . . . .   Number  0071
RTC_DATE . . . . . . . . . . . . . .   Number  0007
RTC_HRS  . . . . . . . . . . . . . .   Number  0004
RTC_LOST_POWER . . . . . . . . . . .   Number  0080
RTC_MINS . . . . . . . . . . . . . .   Number  0002
RTC_MONTH  . . . . . . . . . . . . .   Number  0008
RTC_REGA . . . . . . . . . . . . . .   Number  000A
RTC_REGB . . . . . . . . . . . . . .   Number  000B
RTC_REGC . . . . . . . . . . . . . .   Number  000C
RTC_REGD . . . . . . . . . . . . . .   Number  000D
RTC_SECS . . . . . . . . . . . . . .   Number  0000
RTC_WEEKDAY  . . . . . . . . . . . .   Number  0006
RTC_YEAR . . . . . . . . . . . . . .   Number  0009
RUN_10 . . . . . . . . . . . . . . .   Number  0010
RUN_11 . . . . . . . . . . . . . . .   Number  0011
RUN_12 . . . . . . . . . . . . . . .   Number  0012
RUN_13 . . . . . . . . . . . . . . .   Number  0013
RUN_14 . . . . . . . . . . . . . . .   Number  0014
RUN_15 . . . . . . . . . . . . . . .   Number  0015
RUN_16 . . . . . . . . . . . . . . .   Number  0016
RUN_17 . . . . . . . . . . . . . . .   Number  0017

SANITY_OD  . . . . . . . . . . . . .   Number  000D
SANITY_OE  . . . . . . . . . . . . .   Number  000E
SAN_10 . . . . . . . . . . . . . . .   Number  0010
SAN_11 . . . . . . . . . . . . . . .   Number  0011
SAN_12 . . . . . . . . . . . . . . .   Number  0012
SAN_13 . . . . . . . . . . . . . . .   Number  0013
SAN_14 . . . . . . . . . . . . . . .   Number  0014
SAN_15 . . . . . . . . . . . . . . .   Number  0015
SAN_16 . . . . . . . . . . . . . . .   Number  0016
SAN_17 . . . . . . . . . . . . . . .   Number  0017
SAN_18 . . . . . . . . . . . . . . .   Number  0018
SAN_19 . . . . . . . . . . . . . . .   Number  0019
SAN_1A . . . . . . . . . . . . . . .   Number  001A
SAN_1B . . . . . . . . . . . . . . .   Number  001B
SAN_1C . . . . . . . . . . . . . . .   Number  001C
SAN_1D . . . . . . . . . . . . . . .   Number  001D
```

Microsoft (R) Macro Assembler Version 4.00 8/13/86 11:48:24

clr_mem Copyright (C) 1985,86 COMPAQ Computer Corp. Symbols-12

| | | | | |
|---|---|---|---|---|
| SAN_1E | Number | 001E | | |
| SAN_1F | Number | 001F | | |
| SAN_20 | Number | 0020 | | |
| SAN_21 | Number | 0021 | | |
| SAN_22 | Number | 0022 | | |
| SAN_23 | Number | 0023 | | |
| SAN_24 | Number | 0024 | | |
| SAN_25 | Number | 0025 | | |
| SAN_26 | Number | 0026 | | |
| SAN_27 | Number | 0027 | | |
| SAN_28 | Number | 0028 | | |
| SAN_29 | Number | 0029 | | |
| SAN_2A | Number | 002A | | |
| SAN_2B | Number | 002B | | |
| SAN_2C | Number | 002C | | |
| SAN_2D | Number | 002D | | |
| SB_90 | Number | 0090 | | |
| SB_91 | Number | 0091 | | |
| SB_92 | Number | 0092 | | |
| SB_93 | Number | 0093 | | |
| SB_94 | Number | 0094 | | |
| SB_95 | Number | 0095 | | |
| SB_96 | Number | 0096 | | |
| SB_ERR_BEEPS | Number | 0000 | | External |
| SB_ERR_LEN | Number | 0000 | | External |
| SB_ERR_MSG | V BYTE | 0000 | ROM | External |
| SCRLKEY | Number | 0010 | | |
| SCRLOCK | Number | 0010 | | |
| SCRL_LED | Number | 0001 | | |
| SEG_512 | Number | 00F4 | | |
| SEG_640 | Number | 00F8 | | |
| SETUP_FLAG | Number | 0040 | | |
| SIZEHIGHMEM | L NEAR | 0000 | ROM | External |
| SIZE_1MEG | Number | 0400 | | |
| SIZE_2MEG | Number | 0800 | | |
| SIZE_512 | Number | 0100 | | |
| SIZE_640 | Number | 0080 | | |
| SIZE_8MEG | Number | 2000 | | |
| SIZE_BASE | L WORD | 007A | DATA | |
| SIZE_EXT | L WORD | 007C | DATA | |
| SIZE_FINAL | L WORD | 007E | DATA | |
| SLOW_CPU | Number | 0008 | | |
| SPEEDIO | Number | 0086 | | |
| SSSEL | Number | 0028 | | |
| SS_DESC | L 0008 | 0028 | DATA | |
| SYSREQ | Number | 0004 | | |
| SYS_ROM_OFFSET | Number | 8000 | | |
| SYS_ROM_SEG | Number | 000F | | |
| SYS_ROM_SIZE | Number | 8000 | | |
| S_BIT | Number | 0040 | | |
| TEST_SIZE | L WORD | 0076 | DATA | |
| TEST_STATUS | L WORD | 0058 | DATA | |
| TEST_STR_LEN | Number | [illegible] | | |

```
Microsoft (R) Macro Assembler  Version 4.00              8/13/86 11:48:24

clr_mem Copyright (C) 1985,86 COMPAQ Computer Corp.      Symbols-13

THREE_FLOP . . . . . . . . . . . . .     Number  0080
TOGGLE_ . . . . . . . . . . . . . .      Number  0003
TRAM_ERR . . . . . . . . . . . . .       Number  0001
TRG_ACC  . . . . . . . . . . . . .       Number  0087
TRUE . . . . . . . . . . . . . . .       Number  0001
TWO_FLOP . . . . . . . . . . . . .       Number  0040

U_DMA. . . . . . . . . . . . . . .       Number  0084

VDU_50 . . . . . . . . . . . . . .       Number  0050
VDU_51 . . . . . . . . . . . . . .       Number  0051
VDU_52 . . . . . . . . . . . . . .       Number  0052
VDU_53 . . . . . . . . . . . . . .       Number  0053
VDU_54 . . . . . . . . . . . . . .       Number  0054
VDU_55 . . . . . . . . . . . . . .       Number  0055
VDU_56 . . . . . . . . . . . . . .       Number  0056
VDU_57 . . . . . . . . . . . . . .       Number  0057
VDU_58 . . . . . . . . . . . . . .       Number  0058
VDU_59 . . . . . . . . . . . . . .       Number  0059
VDU_5A . . . . . . . . . . . . . .       Number  005A
VDU_5B . . . . . . . . . . . . . .       Number  005B
VDU_5C . . . . . . . . . . . . . .       Number  005C
VDU_5D . . . . . . . . . . . . . .       Number  005D
VDU_5E . . . . . . . . . . . . . .       Number  005E
VDU_5F . . . . . . . . . . . . . .       Number  005F
VIDSEL . . . . . . . . . . . . . .       Number  0040
VID_DESC . . . . . . . . . . . . .       L 0008  0040     DATA
VID_SEG  . . . . . . . . . . . . .       Number  B000

WOWKEY . . . . . . . . . . . . . .       Number  0008
WR . . . . . . . . . . . . . . . .       Number  0002
WRITEABLE. . . . . . . . . . . . .       Number  0002


   1338 Source  Lines
   1351 Total   Lines
    659 Symbols

  27608 Bytes symbol space free

      0 Warning Errors
      0 Severe  Errors
```

**APPENDIX T**

TECHNICAL REFERENCE MANUAL
CHAPTERS 2 and 3

# TABLE OF CONTENTS

## CHAPTER 2
## SYSTEM BOARD


2.1 INTRODUCTION 2-1

2.2 CENTRAL PROCESSING UNIT 2-4
- Modes of Operation 2-4
- Real Mode 2-4
- Protected Mode 2-5
- Virtual Mode 2-5

2.3 CPU OPERATIONS 2-6
- CPU Bus 2-9
- 32-Bit Memory Expansion Bus 2-11
- 8-/16-Bit Expansion Bus 2-18
- System Bus Arbitration 2-35
- CPU Speed Controls 2-35
- I/O Subsystem 2-36

2.4 SYSTEM BOARD PROGRAMMABLE DEVICES 2-37
- DMA Operations 2-40
- DMA Controller 2-41
- DMA Memory Page Register 2-42
- Transferring Data from Memory to Memory 2-46
- Transferring Data from I/O Devices to Memory 2-46
  - Status 2-46
  - Command 2-47
  - Mode 2-47
  - Write Single Mask Bit 2-48
  - Write All Mask Bits 2-48
  - Software DRQX Request 2-49
  - Base and Current Address - Channels 0 - 3 2-49
  - Base and Current Word Count - Channels 0 - 3 2-49
  - Current Address (Read) - Channels 0 - 3 2-50

## TABLE OF CONTENTS (Continued)


| | |
|---|---|
| Transferring Data from I/O Devices to Memory (Continued) | |
| Current Word Count - Channels 0 - 3 | 2-50 |
| Temporary | 2-50 |
| Reset Pointer Flip-Flop | 2-50 |
| Master Reset | 2-50 |
| Reset Mask | 2-51 |
| Refresh Operations | 2-51 |
| Interrupt Controllers | 2-51 |
| Nonmaskable Interrupts (NMI) | 2-52 |
| Interrupts (INTR) | 2-53 |
| 8259 Programming Examples | 2-57 |
| Fail-Safe Timer | 2-57 |
| Interval Timers | 2-57 |
| Interval Timer Architecture | 2-59 |
| Programming the Interval Timer | 2-60 |
| Interval Timer Operating Modes and Initial Values | 2-61 |
| Interval Timer Control Word Format | 2-62 |
| Interval Timer Counter-Latch Command | 2-62 |
| Interval Timer Read-Back Command | 2-63 |
| 80287 Numeric Coprocessor | 2-64 |
| System ROMS | 2-64 |
| Real-Time Clock and Configuration Memory | 2-64 |
| Status Register Byte 0Ah | 2-68 |
| Status Register Byte 0Bh | 2-68 |
| Status Register Byte 0Ch--Read-Only | 2-69 |
| Status Register Byte 0Dh--Read Only | 2-69 |
| Configuration Byte 0Eh--Diagnostic Status Byte | 2-69 |
| Configuration Byte 0Fh--Reset Code Byte | 2-70 |
| Configuration Byte 10h--Diskette Drive Type | 2-70 |
| Configuration Byte 12h--Fixed Disk Drive Type | 2-71 |
| Configuration Byte 14h--Equipment Installed | 2-71 |
| Configuration Bytes 15h and 16h--Base Memory Size | 2-72 |
| Configuration BYtes 17h and 18h--Extended Memory Size | 2-72 |

## TABLE OF CONTENTS (Continued)


Real-Time Clock and Configuration Memory (Continued)

- Configuration Byte 19h --Drive C Type 2-73
- Configuration Byte 1Ah --Drive D Type 2-73
- Configuration Byte 20h--Additional Flags 2-73
- Configuration Bytes 2Eh and 2Fh--Memory Checksum 2-73
- Configuration Bytes 30h and 31h--Memory Over 1 MB 2-74
- Configuration Byte 32h--Date, Century 2-74
- Configuration Byte 33h--System Information 2-74

Keyboard Controller and Interface 2-75

- 8042-to-Keyboard Interface 2-76
- 11-Bit Data Transmission Format 2-77
- 8042 Port Functions 2-78
- Programming the 8042 2-80
- Port 60h, Data I/O Register 2-81
- Port 64h, Command/Status Register 2-81

8042 Programming Example 2-85

Switches 2-89

System Connectors 2-90

2.5 SCHEMATICS 2-95


213

# Chapter 2
# SYSTEM BOARD

## 2.1 INTRODUCTION

This chapter describes the architecture and basic theory of operation of the COMPAQ DESKPRO 386 system board components. The operation and characteristics of the 32-bit memory and the 8-/16-bit expansion buses are also described.

Figure 2-1 is a block diagram of the functions included on the system board. Figure 2-2 shows the physical layout of the major components and interconnections of the system board.

2M

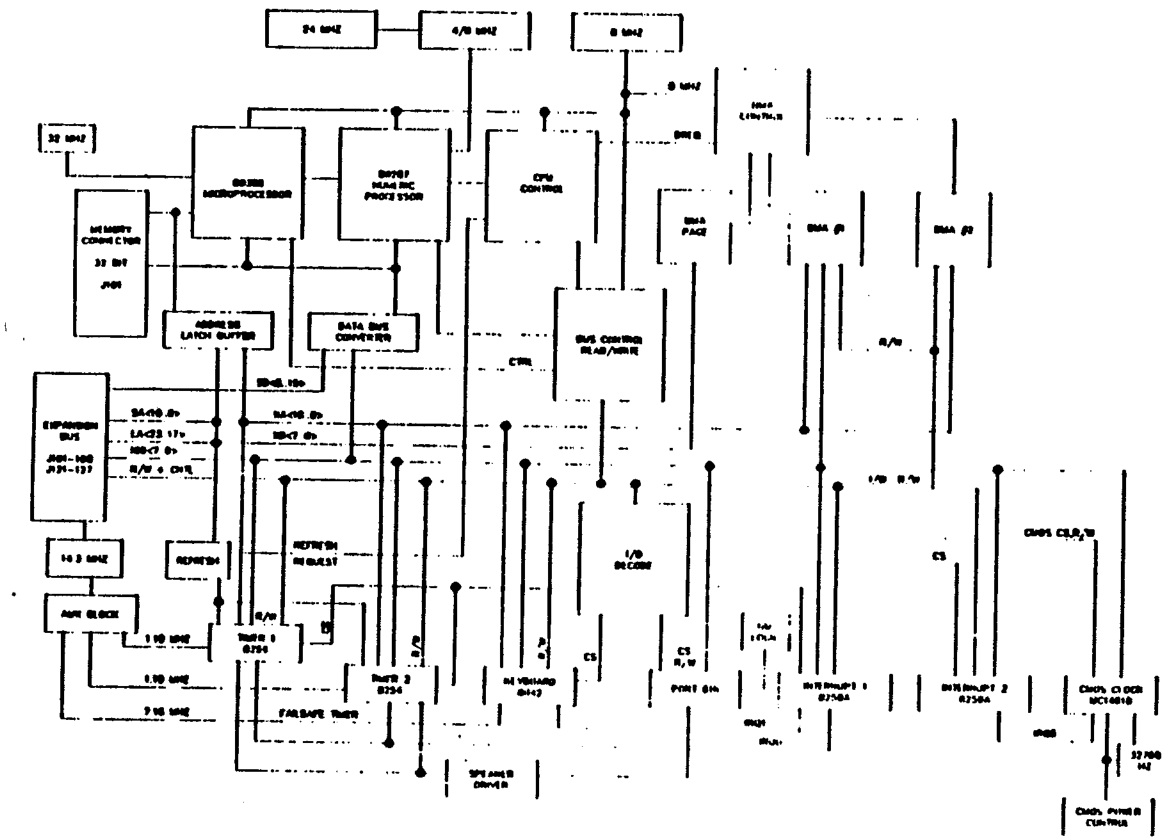

Figure 2-1. Functional Block Diagram of System Board

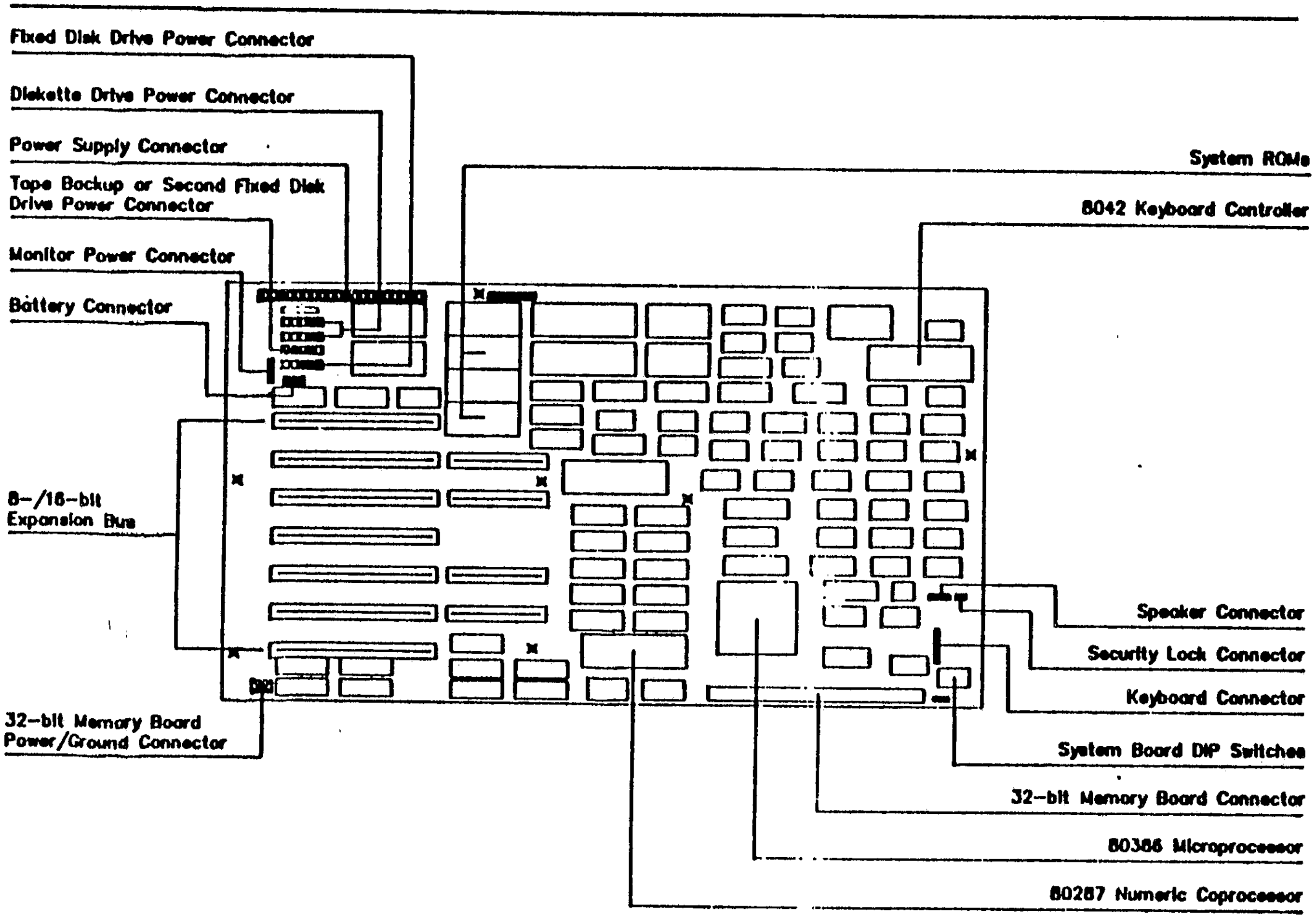


Figure 2-2. System Board Layout Highlighting Major Components and Interconnections

## 2.2 CENTRAL PROCESSING UNIT

The central processing unit (CPU) of the COMPAQ DESKPRO 386 is the 80386 microprocessor--the most advanced member of the Intel microprocessor family. This processor uses a 32-bit architecture and advanced functions to provide the power and capability traditionally associated with minicomputer architectures. The 32-bit architecture includes the internal registers and the address and data buses. The preeminent aspect of the 80386, however, is that it provides this greatly increased performance while maintaining upward compatibility with software written for other, less powerful members of the Intel microprocessor family--the 8088/8086 and the 80286. The 80386 can execute existing software, without modifications, at a significantly higher speed than can its predecessors. The system is capable of even greater performance and functionality running new software written to take advantage of its advanced features. Much of the compatibility of the 80386 depends on its modes of operation.

## Modes of Operation

The 80386 allows software compatibility by providing the same operating modes as the 80286. The Real and Protected modes of the 80386 are fully compatible with the 80286 instructions that use 8- and 16-bit operands. In addition, the 80386 extends register width as well as address and data paths to 32 bits. This improves performance on large integer calculations, data transfers, and large memory models. These additional functions are transparent to applications not taking advantage of them.

### Real Mode

When power is applied or a reset operation occurs, the 80386 enters the Real mode and provides all the capabilities and limitations of this mode, which is compatible with the 80286. The Real mode allows only 1 MB of physical memory to be addressed and does not provide any memory protection features. Memory is addressed via the segment registers with the traditional 64-KB limitation on segment size. The major distinction between the Real mode of the 80386 and that of the 80286 microprocessor is that 32-bit operands can be used with the extended instruction set of the 80386. This 80386 superset of the 80286 instruction set allows operations such as multiplication to use 32-bit register or memory operands. Data transfers from one location of memory to another can occur 32 bits at a time, potentially improving the data-transfer speed twofold.

217

## Protected Mode

The 80386 Protected mode offers features compatible with the 80286, and fully supports the following 80286 features--the memory protection, addressing via segment selectors, and 16-bit instruction set. It also allows for improved functions unique to the 80386. For example, larger segment sizes (that is, 4 gigabytes (GB) on the 80386 as compared with 64 KB on the 80286), memory paging, I/O protection, the Virtual 8086 mode, and the Protected mode's full 32-bit extended instruction set offer functions beyond the capability of the 80286. These functions allow much more powerful software products, which were until now limited to minicomputers, to be implemented in the COMPAQ DESKPRO 386. Many of these applications, such as artificial intelligence expert systems, require a large linear address space and exceptional CPU performance to accommodate their size and complexity.

## Virtual Mode

The 80386 also offers the Virtual mode to provide significantly improved compatibility and protection for concurrent execution of Real mode applications with future Protected mode operating systems. The Virtual mode allows applications written for the 8088, 8086, or 80286 Real mode to be executed within the privilege levels defined by the Protected mode. In contrast, the 80286 does not allow for security in Real mode applications, because the microprocessor must be in the Real mode to execute these applications.

The Virtual mode, in combination with memory paging, allows the Real mode address space to be simulated anywhere in the physical address space of the 80386. In addition, the 80386 I/O protection features permit the operating system to trap all or a selected set of I/O ports for device protection.

The COMPAQ Expanded Memory Manager (CEMM) illustrates the innovative use of these features. CEMM is described in Chapter 4, Software Aspects and BIOS.

## 2.3 CPU OPERATIONS

The increased CPU clock rate, optimizations of the internal 32-bit architecture, and the enhanced instruction set are the basis of the improved performance of the 80386.

The 80386 is driven by a 32-MHz clock. A 16-MHz clock synchronized to the same phase of the 32-MHz clock is also generated for a number of other operations in the system that must be synchronized to the CPU. The internal and external cycles of the 80386 are measured relative to the 62.5-nanoseconds (ns) period of the 16-MHz clock.

Improvements in the internal architecture of the 80386 include a 32-bit prefetch mechanism, instruction pipelining, and a minimized number of CPU cycles required to execute complex instructions such as multiplication.

The COMPAQ DESKPRO 386 hardware system, including the memory expansion bus and the memory subsystem, has been optimized to take advantage of these architectural improvements for maximum performance.

Table 2-1 describes the CPU status signals.

219

Table 2-1. Description of Status Signals

| CPU Signal Name | I/O | Description |
|---|---|---|
| READY- (TRANSFER ACKNOWLEDGE) | I | This signal indicates when the current bus cycle is completed. The processor samples READY- on every bus cycle until it is active, indicating a completed cycle. The CPU normally remains in the not-ready state. |
| HOLD (BUS HOLD REQUEST) | I | When a device other than the CPU has control of the bus, HOLD is active. RESCPU always has a higher priority than HOLD. HOLD is used for devices requesting access to the CPU bus. |
| HLDA (BUS HOLD ACKNOWLEDGE) | O | When the CPU relinquishes control of the bus to another device, HLDA is active. HLDA is driven by the CPU only; it is not bidirectional. |
| RESCPU (SYSTEM RESET) | I | The RESCPU signal resets the 80386. The specific steps involved in the power-on sequence are described in the section entitled "Power-On System Initialization" in Chapter 4. |
| ADS- (ADDRESS STATUS) | O | This output signal (when rising) indicates that a valid status and address has been put on the bus by the CPU and the 32-bit memory board should begin (or complete) its cycle if it is selected (M32- set low). This line is always high during a DMA or bus master operation. |
| M/IO (MEMORY or I/O) | O | This signal characterizes the type of cycle in progress as either memory or I/O. Refer to Table 2-2 for the type of cycle indicated. |

Note: Input (I) and output (O) designations are with respect to the CPU

(Continued)

Table 2-1. Description of Status Signals (Concluded)

| CPU Signal Name | I/O | Description |
|---|---|---|
| D/C (DATA-CONTROL) | O | This signal chracterizes the type of cycle in progress as either data or control. Refer to Table 2-2 for the type of cycle indicated. |
| W/R (WRITE-READ) | O | This signal characterizes the type of cycle in progress as either a read or write cycle. Refer to Table 2-2 for the type of cycle indicated. |
| NA- (NEXT ADDRESS) | I | This input signal indicates to the CPU when the system board is done with the address and status information. This indicates that the CPU may put the address and status for the next cycle on the bus. |
| BEx- (BYTE ENABLE) | O | These output signals (BE0-, BE1-, BE2-, and BE3-) are used by the CPU to indicate which of the 4 bytes of a 32-bit memory access to use. BE0- selects the least-significant byte. |
| PEREQ | I | The 80287 uses PEREQ to request a memory access by the 80386. |
| BUSY- (COPROCESSOR BUSY) | I | The 80287 activates BUSY- to indicate to the 80386 that an instruction execution is in progress. |
| ERROR Not Used<br>BS16- (Not used)<br>LOCK- (Not used) | | |

Note: Input (I) and output (O) designations are with respect to the CPU.

## CPU Bus

CPU bus refers collectively to the control, address, data, and status signals of the 80386 microprocessor interface.

The CPU bus is a 32-bit non-multiplexed address and data bus. When a cycle begins, the CPU places an address and status signals on the bus. The status signals define the type of cycle that is to take place. These signals are used by the bus controller to interface with the 32-bit memory expansion bus and the 8-/16-bit expansion bus. The 8-/16-bit expansion bus signals are fully compatible in function and timing with those provided by the 8-/16-bit bus in 8-MHz 80286-based systems. Thus, the bus controller maintains compatibility with existing hardware expansion products designed for 80286-based systems.

All memory accesses to the CPU bus are done on a 32-bit basis. The CPU uses signals BE0-, BE1-, BE2-, and BE3- to indicate which of the 4 bytes in a 32-bit double-word are to be accessed. Figure 2-3 shows how the signals correspond to the four bytes. These CPU signals are used by the expansion bus controller to generate the SA0, SA1, and BHE signals. These signals are compatible with the expansion bus used in 8-MHz 80286-based products. Table 2-2 gives the bus cycle status definition for the BHLDA, M/IO, D/C, and W/R status signals.

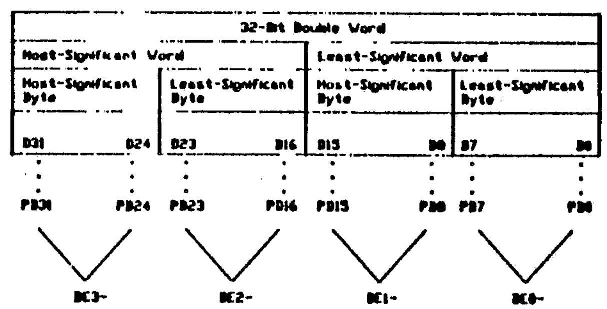


Figure 2-3. Organization of a 32-Bit Double Word

Table 2-2. Bus Cycle Definitions

| BHLDA | M/IO | D/C | W/R | Cycle Type |
|---|---|---|---|---|
| 0 | 0 | 0 | 0 | CPU Interrupt Acknowledge |
| 0 | 0 | 0 | 1 | Invalid Cycle Type |
| 0 | 0 | 1 | 0 | CPU I/O Read |
| 0 | 0 | 1 | 1 | CPU I/O Write |
| 0 | 1 | 0 | 0 | CPU Memory Instruction Prefetch Read |
| 0 | 1 | 0 | 1 | CPU Halt or Shutdown |
| 0 | 1 | 1 | 0 | CPU Memory Data Read |
| 0 | 1 | 1 | 1 | CPU Memory Data Write |
| 1 | 0 | 0 | 0 | Invalid Cycle Type |
| 1 | 0 | 0 | 1 | Non-CPU Refresh Read |
| 1 | 0 | 1 | 0 | Non-CPU Memory Write |
| 1 | 0 | 1 | 1 | Non-CPU Memory Read (See Note) |
| 1 | 1 | 0 | 0 | Invalid Cycle Type |
| 1 | 1 | 0 | 1 | Non-CPU Refresh Cycle |
| 1 | 1 | 1 | 0 | Non-CPU Cycle (See Note) |
| 1 | 1 | 1 | 1 | Non-CPU, No Cycle in Progress |

Note: This cycle can occur during the transition to and from memory write cycles.

223

## 32-Bit Memory Expansion Bus

The 32-bit memory expansion bus is an essential component of the COMPAQ DESKPRO 386 system. The bus optimizes the memory subsystem to take advantage of the 32-bit architecture of the 80386. Without the size and speed of the memory expansion bus, the 80386 would be limited to a performance equivalent to that of the 80286 products. This bus is not intended to be a general-purpose, industry standard 32-bit bus. It is simply a mechanism to optimize the performance of the COMPAQ DESKPRO 386 memory subsystem for the 80386 architecture.

The memory expansion bus is intended for use by 32-bit high-speed memory expansion boards. These boards are designed to take advantage of the speed and bus pipelining features of the 80386. With the CPU operating at 16 MHz, and each 32-bit memory operation using two cycles, the memory system is required to perform a full memory cycle in 125 ns. Generally, the memory system interfacing with this bus should take advantage of the bus pipelining. Bus pipelining produces a gain of one clock cycle, which allows the microprocessor to perform address decoding while executing the previous bus cycle.

The memory expansion bus is implemented by an 80-pin connector on the system board. A second power/ground connector is also provided to improve the power distribution to the large memory subsystem. The address and status signals on the memory expansion bus are generated directly by the CPU. This close coupling minimizes the signal delay between the CPU and memory control circuitry residing on the memory board.

It should be noted that the signals on the memory expansion bus are limited to those associated with memory cycles. No I/O-related signals exist on the memory expansion bus. Also note that the memory expansion bus limits the addressing of physical memory to 16 MB. The PA31 signal on the bus addresses special memory-mapped registers in the COMPAQ DESKPRO 386 memory board. Table 2-3 describes each of the signals on the memory expansion bus. Refer to the section entitled "Connectors" later in this chapter for the connector pinout.

224

Table 2-3. 32-Bit Memory Expansion Bus Signals

| Signal Name | I/O | Description |
|---|---|---|
| PARIT- | I | This input signal is used to signal the CPU about parity errors. It has a 20-kilo-ohm (kohm) pull-up resistor and can be driven low by either an open-collector-type output or a normal output capable of sinking 4.0 mA and sourcing 1.0 mA when a memory parity error occurs. |
| PD0<br>PD1<br>PD2<br>PD3<br>PD4<br>PD5<br>PD6<br>PD7 | I/O | These bidirectional signals are the 8 bits of the CPU data bus selected at an address that ends in 00 (binary). They should be used for the transfer of memory data when the 32-bit bus is selected. These lines should be driven during 32-bit memory read cycles when qualified by the BE0- signal going active. At other times this bus should not be driven. During a write cycle, the data on these lines is valid only when BE0- is active. The bus should have a maximum 1.0-mA load in the low state and 0.4-mA load in the high state when driven by the system board and a maximum capacitive loading of 40 picofarad (pF). The 32-bit system memory board must be able to drive 120 pF, sink 4.0 mA, and source 1.0 mA when driving these lines. |
| PD8<br>PD9<br>PD10<br>PD11<br>PD12<br>PD13<br>PD14<br>PD15 | I/O | These bidirectional signals are the 8 bits of the CPU data bus selected at an address that ends in 01 (binary). These lines are qualified by BE1- in the same way BE0- qualifies PD0 through PD7, described previously. The electrical parameters are the same as those for PD0 through PD7. |
| PD16<br>PD17<br>PD18<br>PD19<br>PD20<br>PD21<br>PD22<br>PD23 | I/O | These bidirectional signals are the 8 bits of the CPU data bus selected at an address that ends in 10 (binary). These lines are qualified by BE2- in the same way BE0- qualifies PD0 through PD7, described previously. The electrical parameters are the same as those for PD0 through PD7. |

(Continued)

205

Table 2-3. 32-Bit Memory Expansion Bus Signals

| Signal Name | I/O | Description |
|---|---|---|
| PD24<br>PD25<br>PD26<br>PD27<br>PD28<br>PD29<br>PD30<br>PD31 | I/O | These bidirectional signals are the 8 bits of the CPU data bus selected at an address that ends in 11 (binary). These lines are qualified by BE3- in the same way BE0- qualifies PD0 through PD7, described previously. The electrical parameters are the same as those for PD0 through PD7. |
| PA2<br>PA3<br>PA4<br>PA5<br>PA6<br>PA7<br>PA8<br>PA9<br>PA10<br>PA11<br>PA12<br>PA13<br>PA14<br>PA15<br>PA16<br>PA17<br>PA18<br>PA19<br>PA20<br>PA21<br>PA22<br>PA23 | I/O | These output signals (and PA31) address memory devices and special control registers on the 32-bit memory bus. They form the high-order 22 bits of the 24-bit standard address that the system offers. The bus should have a maximum 1.0-mA load in the low state and 0.4-mA load in the high state with a maximum capacitive loading of 40 pF. |
| PA31 | O | This output signal (in addition to PA2 through PA23) addresses special control registers or system memory on the 32-bit memory bus. The line should have a maximum 1.0-mA load in the low state and 0.4-mA load in the high state with a maximum capacitive loading of 40 pF. |

(Continued)

Table 2-3. 32-Bit Memory Expansion Bus Signals

| Signal Name | I/O | Description |
|---|---|---|
| LOWA20 | O | This output signal (when low) indicates when the address line PA20 should be ignored and the address decoded as if the PA20 line was low. When high, the PA20 line is decoded normally. This signal provides software compatibility for those programs that expect only a 1-MB address space. The line should have a maximum 1.0-mA load in the low state and 0.4-mA load in the high state with a maximum capacitive loading of 40 pF. |
| BE0- | O | This output signal (when low) indicates when the 32-bit system memory board should operate on the PD0 through PD7 data lines. The line should have a maximum 1.0-mA load in the low state and 0.4-mA load in the high state with a maximum capacitive loading of 40 pF. |
| BE1- | O | This output signal (when low) indicates when the 32-bit system memory board should operate on the PD8 through PD15 data lines. The line should have a maximum 1.0-mA load in the low state and 0.4-mA load in the high state with a maximum capacitive loading of 40 pF. |
| BE2- | O | This output signal (when low) indicates when the 32-bit system memory board should operate on the PD16 through PD23 data lines. The line should have a maximum 1.0-mA load in the low state and a 0.4-mA load in the high state with a maximum capacitive loading of 40 pF. |
| BE3- | O | This output signal (when low) indicates when the 32-bit system memory board should operate on the PD24 through PD31 data lines. The line should have a maximum 1.0-mA load in the low state and 0.4-mA load in the high state with a maximum capacitive loading of 40 pF. |
| RST- | O | This output signal is used to reset the hardware during power-on or power failure. This signal is not synchronous with the CLK32 or CLK16- lines. It is active low. |
| CLK32 | O | This output signal is for the main processor clock. Its frequency is 32 MHz with a duty cycle of approximately 50 percent. This line should be used as the timing reference for all CPU memory cycles. The line should have a maximum 1.0-mA load in the low state and 0.4-mA load in the high state with a maximum capacitive loading of 40 pF. |
| CLK16- | O | This output signal provides a reference for the internal processor clock phase. Its frequency is 16-MHz with a duty cycle of approximately 50 percent. This line is high during CPU phase one and low during phase two. The line should have a maximum 1.0-mA load in the low state and 0.4-mA load in the high state with a maximum capacitive loading of 40 pF. |
| M32- | I | This input signal (when low) indicates that the 32-bit memory system board has decoded an address that it will handle. This line should be decoded ONLY from the address and LOWA20 lines as it is used during both CPU cycles and other bus master cycles. It should be driven by an output capable of sinking 4.0 mA and sourcing 1.0 mA with a 50-pF load. |

(Continued)

Table 2-3. 32-Bit Memory Expansion Bus Signals

| Signal Name | I/O | Description |
|---|---|---|
| BHLDA | O | This output signal, when inactive (low), indicates that the CPU has control of the bus. When active, some other bus master has control of the bus. This line should be used to determine the protocol used by the memory board for a memory cycle. The signal should have a maximum 1.0-mA load in the low state and a 0.4-mA load in the high state with a maximum capacitive loading of 40 pF. |
| ADS- | O | This output signal (when rising) indicates that valid status and address has been put on the bus by the CPU and that the 32-bit system memory board should begin (or complete) its cycle if it is selected (M32 set low). This line is always high when a direct memory access (DMA) or bus master operation is occurring. The signal should have a maximum 1.0-mA load in the low state and a 0.4-mA load in the high state with a maximum capacitive loading of 40 pF. |
| M/IO | O | This output signal is one of the status lines that indicate the type of cycle in progress. Refer to Table 2-2 for the type of cycle indicated. The signal should have a maximum 1.0-mA load in the low state and a 0.4-mA load in the high state with a maximum capacitive loading of 40 pF. |
| D/C | O | This output signal is one of the status lines that indicate the type of cycle in progress. Refer to Table 2-2 for the type of cycle indicated. The signal should have a maximum 1.0-mA load in the low state and a 0.4-mA load in the high state with a maximum capacitive loading of 40 pF. |
| W/R | O | This output signal is one of the status lines that indicate the type of cycle in progress. Refer to Table 2-2 for the type of cycle indicated. The signal should have a maximum 1.0-mA load in the low state and 0.4-mA load in the high state with a maximum capacitive loading of 40 pF. |
| MRDY- | I | This input signal is used to signal the end of a memory cycle when the 32-bit system memory board is accessed by the CPU. This signal has a 20-kohm pull-up resistor to hold it inactive when a 32-bit board is not installed. It should be driven by an output capable of sinking 4.0 mA and sourcing 1.0 mA with a 50-pF load. |
| NAM- | I | This input signal is used to signal the CPU when the 32-bit system memory board is finished with the address and status information and that the CPU may put out its next address. This signal has a 20-kohm pull-up resistor to hold it inactive when a 32-bit system memory board is not installed. It should be driven by an output capable of sinking 4.0 mA and sourcing 1.0 mA with a 50-pF load. |

(Continued)

Table 2-3. 32-Bit Memory Expansion Bus Signals (Concluded)

| Signal Name | I/O | Description |
|---|---|---|
| GND | -- | These lines are connected to the system DC ground. Ti·· maximum current allowed on any single contact is 1.5 amperes (A). |
| +5 VDC | -- | These lines are connected to the system power supply for 5 volts (V). In addition to the maximum power available from the supply, the maximum current allowed on any single contact is 1.5 A. |

In order to provide maximum flexibility to the memory subsystem, the 32-bit memory expansion bus has operational priority over the 8-/16-bit expansion bus. Memory cycles relevant to the memory subsystem connected to the 32-bit bus do not appear on the 8-/16-bit bus. Memory boards connected to the memory expansion bus indicate to the bus controller, via the M32- signal, whether a memory cycle is decoded and processed by the memory board. M32- is active when the memory bus is processing the request. In the case of cycles other than memory cycles, or when M32- is not activated by the 32-bit memory board, the bus controller presents the entire cycle, in a form compatible to the 8-/16-bit expansion bus.

The bus controller uses the CPU bus pipelining to present to the bus the address of the next cycle while completing the final cycle of the previous operation. Since the system board does not know whether the next cycle is to be directed to the 32-bit or 8-/16-bit bus, it always starts the CPU pipelining with the NA- signal. NA- is derived either from the NAM- signal on the 32-bit memory bus or equivalent (NAB) condition from other devices on the board or expansion bus., It is required that the 32-bit memory not complete a pipelined memory cycle before the bus controller is finished with a system cycle. The memory board should use the rising edge of ADS- to ensure completion of any bus controller cycle in progress.

If the 32-bit memory board is to operate with no wait states, it must drive the NAM- signal as soon as a valid memory cycle is detected. If wait states are inserted, the NAM- signal can be driven later in the memory cycle. Once a memory cycle completes, the memory board must assert the MRDY- signal to indicate the completion of the memory cycle. During a read cycle, the data signals should be driven with the appropriate information. The required access time and cycle times of the memory board are listed in Table 2-4. Figure 2-4 shows the timing characteristics of typical 32-bit memory cycles.

Table 2-4. Memory Expansion Bus Timing Requirements

| Cycle | Time (In Nanoseconds) |
|---|---|
| From status inactive setup to BHLDA high | 4 |
| From status inactive hold to BHLDA low | 51 |
| Refresh cycle time (M/IO low) | min 235<br>max 265 |
| Refresh address set-up to M/IO low | 76 |
| Refresh address hold after M/IO high | 210 |
| Data valid after M/IO low during BHLDA high write cycle | 61 |
| Required data access time from M/IO during BHLDA high read cycles | 167 |
| Minimum cycle time (M/IO low) during BHLDA high | 250 |
| Minimum total cycle time (M/IO low to M/IO high) during BHLDA high | 375 |

(Continued)

Table 2-4. Memory Expansion Bus Timing Requirements (Concluded)

| Cycle | Time (In Nanoseconds) |
|---|---|
| Required MRDY- set-up to CLK32 during CPU cycle | 27 |
| Required MRDY- hold from CLK32 during CPU cycle | 1 |
| Required NAM- set-up to CLK32 during CPU cycle | 17 |
| Required NAM- hold from CLK32 during CPU cycle | 18 |

Note: Refer to Intel 80386 specification for additional timing information.

## 8-/16-Bit Expansion Bus

The 8-/16-bit expansion bus is essential for the COMPAQ DESKPRO 386 to provide an interface fully compatible with I/O and memory expansion boards designed for existing 8-MHz 80286-based systems. This bus, however, is intended primarily for use by I/O devices. Access to memory via the 16-bit bus severely constrains the COMPAQ DESKPRO 386 system performance for data or programs loaded with the 16-bit memory. The bus controller on the system board has the responsibility of monitoring the CPU signals. The bus controller decodes and translates the bus cycles to match, in function and timing, the 8-/16-bit bus of 8-MHz 80286-based systems. The bus controller uses the signals from the CPU to generate the 8-/16-bit expansion bus signals.

Table 2-5 lists the 8-/16-bit expansion bus signals and provides a description of each. Refer to the section entitled "Connnectors" to see the pinout for this connector.

Table 2-5. 8-/16-Bit Expansion Bus Signals

| Signal Name | Description |
|---|---|
| IOCHK- | This input signal is used to signal the CPU about parity or other serious errors on expansion memory boards plugged into the expansion bus. This signal should be driven low by an open-collector-type output capable of sinking 20 mA when an uncorrectable system error occurs. |
| SD0<br>SD1<br>SD2<br>SD3<br>SD4<br>SD5<br>SD6<br>SD7 | These bidirectional signals are the low 8 bits of the system data bus. They should be used exclusively by all 8-bit devices to transfer data. Also 16-bit devices should use these lines to transfer only the low byte of a data word when the address line A0 is low. These signals can be driven by an expansion board acting as a bus master. |
| SD8<br>SD9<br>SD10<br>SD11<br>SD12<br>SD13<br>SD14<br>SD15 | These bidirectional signals are the high 8 bits of the system data bus. Also, 16-bit devices should use these lines to transfer the high half of a data word when the line SBHE- is low. They can be driven by an expansion bus board acting as a bus master. |
| BUSRDY | This input signal lengthens a bus cycle from its standard time when an expansion board cannot respond quickly enough. It should be pulled low by an open-collector-type device as soon as a slow addressed device is selected and held low until the device has responded. Bus cycles are lengthened by an integral number of (BCLK) cycles. This line should not be held low for more than 2.5 microseconds (us). This line should be driven by an open-collector device capable of sinking 20 mA. |
| AEN | This output signal when inactive (low) indicates that the CPU or other bus master has control of the bus. When active, the DMA controller has control of the bus. This signal is often used to disable devices that must not respond during a DMA cycle. |

(Continued)

232

Table 2-5. 8-/16-Bit Expansion Bus Signals

| Signal Name | Description |
|---|---|
| SA0<br>SA1<br>SA2<br>SA3<br>SA4<br>SA5<br>SA6<br>SA7<br>SA8<br>SA9<br>SA10<br>SA11<br>SA12<br>SA13<br>SA14<br>SA15<br>SA16<br>SA17<br>SA18<br>SA19 | These bidirectional signals address memory or I/O devices within the system. They form the low-order 20 bits of the 24-bit address bits that the system offers. These lines are enabled onto the bus while BALE is high and are latched when BALE goes from a high to a low state. These signals can be driven by an expansion bus board acting as a bus master. |
| RESDRV | This output signal resets the hardware during power-on or power failure. |

(Continued)

Table 2-5. 8-/16-Bit Expansion Bus Signals

| Signal Name | Description |
|---|---|
| IRQ3<br>IRQ4<br>IRQ5<br>IRQ7<br>--<br>IRQ9<br>IRQ10<br>IRQ11<br>IRQ12<br>--<br>IRQ14<br>IRQ15 | These input signals interrupt the CPU to request some service. The interrupt is recognized when a line goes from a low to a high state and remains there until the appropriate interrupt service routine is executed. |
| DRQ0<br>DRQ1<br>DRQ2<br>DRQ3<br>--<br>DRQ5<br>DRQ6<br>DRQ7 | These input signals (Dma ReQuest) are used to request a DMA service from the DMA subsystem or to gain control of the system bus from the main CPU. The request is made when a line goes from a low to a high state and remains there until the appropriate DAKx (Dma AcKnowledge) line goes active. |
| NOWS- | This input signal (No Wait State) informs the system that standard wait states can be deleted for cycles when this signal is made active. The line must be pulled low before the falling edge of BCLK in order to be recognized. It should be driven by an open-collector device capable of sinking 20 mA. |
| SMWTC- | This output signal (Standard Memory Write) is active (low) only when an address from 000000h to 0FFFFFh is decoded. This signal is derived from MWTC-. |
| SMRDC- | This output signal (Standard Memory Read) is active (low) only when an address from 000000h to 0FFFFFh is decoded. This signal is derived from MRDC-. |
| IOWC- | This output signal (I/O Write) indicates (when low) when an I/O device is to accept the data from the data bus. It can be driven by an expansion bus adapter acting as a bus master. |
| IORC- | This output signal (I/O Read) indicates (when low) when an I/O device is to send data to the data bus. It can be driven by an expansion bus board acting as a bus master. |

(Continued)

Table 2-5. 8-/16-Bit Expansion Bus Signals

| Signal Name | Description |
|---|---|
| DAK0-<br>DAK1-<br>DAK2-<br>DAK3-<br>--<br>DAK5-<br>DAK6-<br>DAK7- | These output signals (Dma AcKnowledge) indicate that a request for a DMA service from the DMA subsystem has been recognized. The acknowledge is indicated by a low on one of these lines. One of these lines should be used to decode the DMA device with the IORC- or IOWC- line to indicate selection. If used to signal acceptance of a bus master request, this signal indicates when it is legal to pull GRAB- low. |
| REFRESH- | This output signal indicates (when low) a refresh cycle in progress. It should be used to enable the SA0 through SA7 address lines to the row address inputs of all banks of dynamic memory so that when the MRDC goes active, the entire system memory is refreshed at one time. It can be driven by an expansion bus board acting as a bus master. |
| BCLK | This output signal allows synchronization with the main processor clock. Its frequency is approximately 8 MHz with a duty cycle of 50 percent. |
| T/C | This output signal (when high) indicates that the terminal count of a DMA operation has been reached. It should be decoded with the appropriate DAKx line for proper operation. |
| BALE | This output signal (when high) indicates that a valid address is present on the LAxx address lines. The LAxx address lines or any decodes developed from them should be latched at the falling edge of BALE. This line is always high when a DMA or bus master operation is occurring. |
| OSC | This output signal is a clock for use in timing applications. Its frequency is 14.31818 MHz with a duty cycle of approximately 50 percent. |
| SBHE- | This output signal (System Bus High Enable) indicates (when low) that the high half of the SDx data bus should transfer the data on boards that support the full 16-bit data bus. It can be driven by an expansion bus board acting as a bus master. |
| LA17<br>LA18<br>LA19<br>LA20<br>LA21<br>LA22<br>LA23 | These output signals (Latchable Address) decode memory which must respond with 0 or 1 wait state. They are guaranteed to be valid only when BALE is high. They can be driven by an expansion bus board acting as a bus master. |

(Continued)

235

Table 2-5. 8-/16-Bit Expansion Bus Signals

| Signal Name | Description |
|---|---|
| MRDC- | This output signal (Memory Read) indicates (when low) when a memory device is to send data to the data bus. This signal is active over the entire address space of the system. It may be driven by an expansion bus board acting as a bus master. |
| MWTC- | This output signal (Memory Write) indicates (when low) when a memory device is to accept the data from the data bus. This signal is active over the entire address space of the system. It may be driven by an expansion bus board acting as a bus master. |
| M16- | This input signal (Memory is 16 bits) notifies the system that the addressed memory is capable of transferring 16 bits of data at once. When this line is made active during a memory read or write, the standard, 1-wait-state memory cycle is run. This line should be derived from the LAxx address lines. It should be driven low by an open-collector device capable of sinking 20 mA. |
| IO16- | This input signal (I/O is 16 bits) signals the system that the addressed I/O device is capable of transferring 16 bits of data at once. When this line is made active during an I/O read or write, the standard, 1-wait-state I/O cycle is run. This line should be driven low by an open-collector device capable of sinking 20 mA. |
| GRAB- | This input signal indicates that a board-mounted bus master is controlling the bus. A board pulls this line low when the appropriate DAKx line is made active, signalling that a master request is granted. The system address and data and control lines are floated, allowing the board to begin controlling them one full BCLK period after GRAB- becomes active. At least one more full BCLK period should be allowed after putting a valid address on the bus before activating any of the control lines. This line should be driven by an open-collector device capable of sinking 20 mA. |
| GND | These lines are connected to the system DC ground. The maximum current allowed on any single contact is 1.5 A. |

(Continued)

Table 2-5. 8-/16-Bit Expansion Bus Signals (Concluded)

| Signal Name | Description |
|---|---|
| +5 VDC | These lines are connected to the system power supply for 5 V. In addition to the maximum power available from the supply, the maximum current allowed on any single contact is 1.5 A. |
| -5 VDC | This line is connected to the system power supply for minus 5 V. This supply is intended for low current usage only. |
| -12 VDC | This line is connected to the system power supply for minus 12 V. This supply is intended for low current usage only. |
| +12 VDC | This line is connected to the system power supply for plus 12 V. The maximum current allowed on this contact is 1.5 A. |

When the CPU begins a bus cycle, it asserts its address and status signals. Due to the pipelining, the address signals are asserted typically while the previous bus cycle is taking place. Because most devices on the expansion bus expect the address signals to be valid during the entire bus operation, the address lines are latched to provide signals SA2 through SA19 to the expansion bus. The ALE signal latches the address lines. A set of unlatched address lines LA17 through LA23 is also provided on the expansion bus for high-speed devices to provide a greater set-up time for these devices. A set of buffers connected to the CPU address signals PA17 through PA23 provides the unlatched address signals to the expansion bus.

Address lines SA0 and SA1 as well as the BHE signals of the expansion bus are generated by the bus controller using the BE0- through BE3- CPU status signals. These signals indicate which bytes are to be accessed from the full 32-bit double-word memory access. The SA0, SA1, and SBHE- signals are asserted on the bus at the rising edge of ALE, making their timing very similar to that of the other address signals (for example, SA2 through SA19) on the bus. All the address signals on the bus are disabled when the CPU responds to a HOLD request so that another device (such as the DMA controller) can control the address bus.

Address line PA20 requires special handling to maintain compatibility with 80286-based products. The PA20 signal can be disconnected from the bus and driven low via the LOWA20 signal from the keyboard controller Driving LOWA20 low allows for Real mode compatibility with certain application programs written for the 8088/8086 that expect automatic segment wraparound at the end of the 1-MB address space.

In addition to using the CPU status lines to convert to the 80286 bus standard, the bus controller uses these status lines to define the type and number of cycles that are to occur on the 8-/16-bit bus. For example, if a double-word read (32 bits) occurs via the 8-bit bus, the bus controller generates the appropriate cycles for four consecutive 8-bit read operations.

Table 2-6 gives the 8- and 16-bit cycle definitions according to the state of the CPU status signals. The IO16- signal is active low and, when active, indicates that the device accessed on the expansion bus is a 16-bit device. The BEx- and SBHE- signals are active low. The SA0 and SA1 signals are active high.

Table 2-6. 8-/16-Bit Cycle Definitions

| IO16-(Note 1) | BE3- | BE2- | BE1- | BE0- | SA1 | SA0 | SBHE- | Cycle Type |
|---|---|---|---|---|---|---|---|---|
| X(Note 2) | 1 | 1 | 1 | 0 | 0 | 0 | 1 | Low byte on 8- or 16-bit bus |
| 1 | 1 | 1 | 0 | 1 | 0 | 1 | 0 | High byte on 8-bit bus |
| 0 | 1 | 1 | 0 | 1 | 0 | 1 | 0 | High byte on 16-bit bus |
| X | 1 | 0 | 1 | 1 | 1 | 0 | 1 | Low byte on 8- or 16-bit bus |
| 1 | 0 | 1 | 1 | 1 | 1 | 1 | 0 | High byte on 8-bit bus |
| 0 | 0 | 1 | 1 | 1 | 1 | 1 | 0 | High byte on 16-bit bus |
| 0 | 1 | 1 | 0 | 0 | 0 | 0 | 0 | Word on 16-bit bus |
| 1 | 1 | 1 | 0 | 0 | 0 | 0 | 0 | Word on 8-bit bus (low byte) |
| 1 | 1 | 1 | 0 | 0 | 0 | 1 | 0 | Word on 8-bit bus (high byte) |
| 0 | 1 | 0 | 0 | 1 | 0 | 1 | 0 | 2 bytes split on 16-bit bus (low word, high byte) |
| 0 | 1 | 0 | 0 | 1 | 1 | 0 | 1 | 2 bytes split on 16-bit bus (high word, low byte) |
| 1 | 1 | 0 | 0 | 1 | 0 | 1 | 0 | 2 bytes split on 8-bit bus (low word, high byte) |
| 1 | 1 | 0 | 0 | 1 | 1 | 0 | 1 | 2 bytes split on 8-bit bus (high word, low byte) |
| 0 | 0 | 0 | 1 | 1 | 1 | 0 | 0 | Word on 16-bit bus |
| 1 | 0 | 0 | 1 | 1 | 1 | 0 | 0 | Word on 8-bit bus (low byte) |
| 1 | 0 | 0 | 1 | 1 | 1 | 1 | 0 | Word on 8-bit bus (high byte) |

Notes: 1. IO16- signal during I/O cycles; MEM16- signal during memory cycle.
2. X means that the value of the signal does not matter for that cycle.

(Continued)

239

Table 2-6. 8-/16-Bit Cycle Definitions (Concluded)

| IO16-(Note 1) | BE3- | BE2- | BE1- | BE0- | SA1 | SA0 | SBHE- | Cycle Type |
|---|---|---|---|---|---|---|---|---|
| 0 | 1 | 0 | 0 | 0 | 0 | 0 | 0 | 3 bytes on 16-bit bus (low word) |
| 0 | 1 | 0 | 0 | 0 | 1 | 0 | 1 | 3 bytes on 16-bit bus (high word, low byte) |
| 1 | 1 | 0 | 0 | 0 | 0 | 0 | 0 | 3 bytes on 8-bit bus (low word, low byte) |
| 1 | 1 | 0 | 0 | 0 | 0 | 1 | 0 | 3 bytes on 8-bit bus (low word, high byte) |
| 1 | 1 | 0 | 0 | 0 | 1 | 0 | 1 | 3 bytes on 8-bit bus (high word, low byte) |
| 0 | 0 | 0 | 0 | 1 | 0 | 1 | 0 | 3 bytes on 16-bit bus (low word, high byte) |
| 0 | 0 | 0 | 0 | 1 | 1 | 0 | 0 | 3 bytes on 16-bit bus (high word) |
| 1 | 0 | 0 | 0 | 1 | 0 | 1 | 0 | 3 bytes on 8-bit bus (low word, high byte) |
| 1 | 0 | 0 | 0 | 1 | 1 | 0 | 0 | 3 bytes on 8-bit bus (high word, low byte) |
| 1 | 0 | 0 | 0 | 1 | 1 | 1 | 0 | 3 bytes on 8-bit bus (high word, high byte) |
| 0 | 0 | 0 | 0 | 0 | 0 | 0 | 0 | 4 bytes on 16-bit bus (low word) |
| 0 | 0 | 0 | 0 | 0 | 1 | 0 | 0 | 4 bytes on 16-bit bus (high word) |
| 1 | 0 | 0 | 0 | 0 | 0 | 0 | 0 | 4 bytes on 8-bit bus (low word, low byte) |
| 1 | 0 | 0 | 0 | 0 | 0 | 1 | 0 | 4 bytes on 8-bit bus (low word, high byte) |
| 1 | 0 | 0 | 0 | 0 | 1 | 0 | 0 | 4 bytes on 8-bit bus (high word, low byte) |
| 1 | 0 | 0 | 0 | 0 | 1 | 1 | 0 | 4 bytes on 8-bit bus (high word, high byte) |

Notes: 1. IO16- signal during I/O cycles; MEM16- signal during memory cycle.
2. X means that the value of this signal does not matter for that cycle.

The bus controller is also capable of generating a number of non-CPU bus cycles. Table 2-7 lists those cycles.

Table 2-7. Non-CPU Bus Cycles

| System Board DMA Cycle Types: | Bus | Access Types |
|---|---|---|
| DMA memory read byte | 16-bit RAM | Low byte |
| DMA memory read byte | 16-bit RAM | High byte |
| DMA memory read byte | 8-bit bus | Low or high byte |
| DMA memory write byte | 8-bit bus | High byte |
| DMA memory write byte | 16-bit RAM | Low byte |
| DMA memory write byte | 16-bit RAM | High byte |
| DMA memory write byte | 8-bit bus | Low or high byte |
| DMA memory read word | 16-bit RAM | -- |
| DMA memory write word | 16-bit RAM | -- |
| Refresh Read | -- | -- |
| **8-/16-Bit Master Cycle Types:** | **Bus** | **Access Types** |
| Bus master memory read byte | 16-bit RAM | Low byte |
| Bus master memory read byte | 16-bit RAM | High byte |
| Bus master memory read byte | 8-bit bus | Low byte |
| Bus master memory read byte | 8-bit bus | High byte |
| Bus master memory write byte | 16-bit RAM | Low byte |
| Bus master memory write byte | 16-bit RAM | High byte |
| Bus master memory write byte | 8-bit bus | Low byte |
| Bus master memory write byte | 8-bit bus | High byte |
| Bus master memory read word | 16-bit RAM | -- |

(Continued)

Table 2-7 Non-CPU Bus Cycles (Concluded)

| 8-/16 Bit Master Cycle Types: | Bus | Access Types |
|---|---|---|
| Bus master memory write word | 16-bit RAM | -- |
| Bus master I/O read byte | 16-bit bus | Low byte |
| Bus master I/O read byte | 16-bit bus | High byte |
| Bus master I/O read byte | 8-bit bus | Low byte |
| Bus master I/O read byte | 8-bit bus | High byte |
| Bus master I/O write byte | 16-bit bus | Low byte |
| Bus master I/O write byte | 16-bit bus | High byte |
| Bus master I/O write byte | 8-bit bus | Low byte |
| Bus master I/O write byte | 8-bit bus | High byte |
| Bus master I/O read word | 16-bit bus | -- |
| Bus master I/O write word | 16-bit bus | -- |

The primary reason to avoid frequent memory operations via the 8-/16-bit bus is that they take significantly longer than equivalent operations on the 32-bit bus. This degradation occurs when the bus controller executes multiple bus memory cycles per CPU memory cycle at the 8-MHz expansion bus clock rate. For example, to execute a double-word read (4 bytes) from an 8-bit device on the 8-MHz 8-/16-bit bus with 1 wait state, the bus controller must perform four memory accesses. Each memory access takes the equivalent of 14 CPU clock cycles at the 16-MHz rate. The total time required for such an operation via the 8-bit bus would be 3.5 us (56 x 62.5 ns) in contrast to the 125 ns (2 x 62.5 ns) required for this operation via the 32-bit, 16-MHz

241

memory expansion bus. Table 2-8 gives the number of 16-MHz cycles (62.5-ns cycle time) for various types of memory and I/O operations on the 8-MHz 8-/16-bit expansion bus. Adding a wait state to a cycle requires two additional 62.5-ns clock cycles.

Table 2-8. Number of Expansion Bus Cycles for Typical CPU Operations

| Operation | Bus Size (In Bits) | Number of Cycles Required: 0 Wait State | 1 Additional Wait State | Standard Wait State |
|---|---|---|---|---|
| Memory Read | 16 | 4 | 8 | 6 |
| Memory Read | 8 | 6 | 14 | 12 |
| Memory Write | 16 | 4 | 8 | 6 |
| Memory Write | 8 | 6 | 14 | 12 |
| I/O Read | 16 | 6 | 8 | 6 |
| I/O Read | 8 | 6 | 14 | 12 |
| I/O Write | 16 | 6 | 8 | 6 |
| I/O Write | 8 | 6 | 14 | 12 |

Note: A standard wait state occurs if the device being accessed does not specify the number of wait states that should be generated by the system.

Figure 2-4 compares the bus timing for a double-word, 0-wait-state read operation via the 32-bit bus with the timing for the same operation via the 8-bit bus. The timing is relative to the 16-MHz CPU clock rate. Table 2-9 shows the timing characteristics of the 8-/16-bit expansion bus.

0 260 568

242

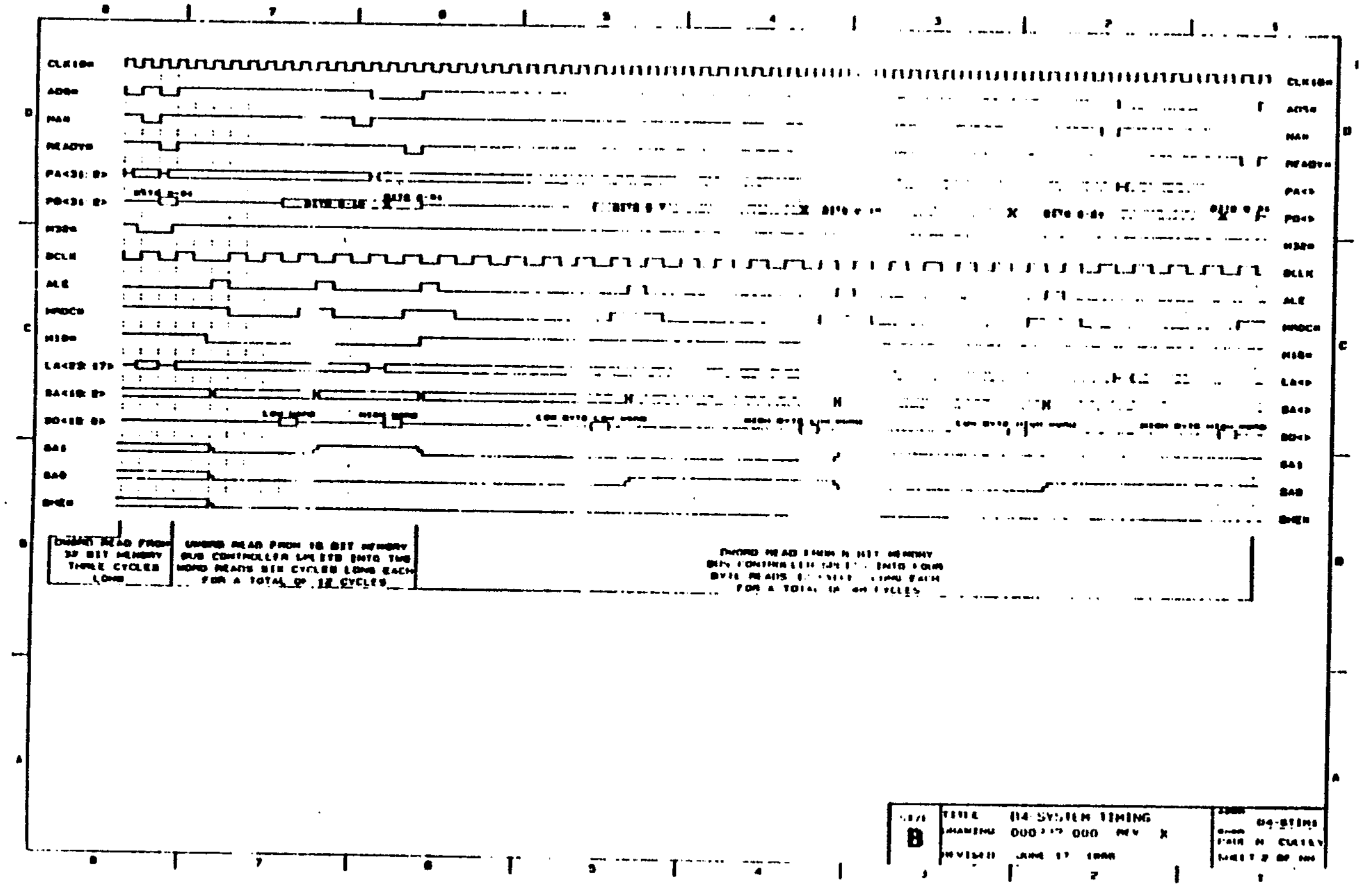

Figure 2-4. Typical 32-Bit Memory Read Bus Timing

0 260 568

BAD ORIGINAL

243

Table 2-9. 8-/16-Bit Expansion Bus Timing Characteristics

| Cycle | Time (In Nanoseconds) |
|---|---|
| CPU 8-bit memory command active time (standard wait state) | 567 |
| CPU 8-bit memory command active time (0 wait state) | 187 |
| CPU 16-bit memory command active (standard wait state) | 250 |
| CPU 16-bit memory command active (0 wait state) | 125 |
| CPU 16-bit I/O command active time (standard wait state) | 187 |
| CPU extra wait state time. | 125 |
| Address access time from SAx address, 16-bit bus read cycle | 275 |
| Address access time from SA0 through SA19 addresses, 8-bit bus read cycle | 635 |
| Access time from BALE active, 16-bit bus read cycle | 292 |
| MRDC- access time, 16-bit bus read cycle | 233 |
| IORC- access time, 16-bit bus read cycle | 170 |

Note: A standard wait state occurs if the device being accessed does not specify the number of wait states that should be generated by the system.

(Continued)

Table 2-9. 8-/16-Bit Expansion Bus Timing Characteristics

| Cycle | Time (In Nanoseconds) |
|---|---|
| MRDC-, IORC- access time, 8-bit bus read cycle | 532 |
| MRDC- access time, 8-bit bus read cycle | 514 |
| Data hold time from MRDC-, IORC- | 6 |
| LAx address valid to 16-bit memory command set-up | 141 |
| LAx address valid to M16- active requirement | 122 |
| BALE valid to 16-bit memory command set-up | 49 |
| BALE valid to M16 set-up | 23 |
| SAx address valid to 16-bit memory command set-up | 29 |
| SAx address valid to I/O, 8-bit command set-up | 92 |
| SA0 through SA19 address hold from command | 46 |

Note: A standard wait state occurs if the device being accessed does not specify the number of wait states that should be generated by the system.

(Continued)

Table 2-9. 8-/16-Bit Expansion Bus Timing Characteristics

| Cycle | Time (In Nanoseconds) |
|---|---|
| CPU write data set-up to MWTC- active, 16-bit bus memory cycle | 2 |
| CPU write data set-up to IOWC- active | 65 |
| CPU write data valid after MWTC-, IOWC- active, 8-bit bus | 65 |
| CPU write data set-up to MWTC-, IOWC- inactive, 16-bit bus memory cycle | 252 |
| CPU write data set-up to MWTC-,IOWC- inactive, 8-bit bus memory cycle | 497 |
| Refresh MRDC- active time | 250 |
| Refresh address set-up to MRDC- active | 69 |
| Refresh address hold after MRDC- active | 235 |
| Maximum allowed delay for refresh wait state BUSRDY low from MRDC- active | 92 |

Note: A standard wait state occurs if the device being accessed does not specify the number of wait states that should be generated by the system.

(Continued)

Table 2-9. 8-/16-Bit Expansion Bus Timing Characteristics

| Cycle | Time (In Nanoseconds) |
|---|---|
| Refresh wait state BUSRDY set-up to BCLK rising edge | 5 |
| CPU memory or I/O command wait state BUSRDY high set-up to BCLK rising edge | 5 |
| Maximum allowed delay for CPU 16-bit memory command wait state BUSRDY low from command active | 143 |
| Maximum allowed delay for CPU 16-bit I/O command wait state BUSRDY low from command active | 81 |
| Maximum allowed delay for CPU 8-bit command wait state BUSRDY low from command active | 440 |
| CPU minimum command active from BUSRDY high after added wait state | 139 |
| CPU maximum command active from BUSRDY high after added wait state | 283 |
| Maximum NOWS delay from MRDC- or MWTC- 16-bit memory cycles | 29 |

Note: A standard wait state occurs if the device being accessed does not specify the number of wait states that should be generated by the system.

(Continued)

205

Table 2-9. 8-/16-Bit Expansion Bus Timing Characteristics (Concluded)

| Cycle | Time (In Nanoseconds) |
|---|---|
| Maximum DMA memory read and I/O write command additional wait state BUSRDY low delay from memory read command active | 187 |
| Maximum DMA I/O read and memory write command additional wait state BUSRDY low delay from I/O read command active | 281 |
| DMA MRDC- active time | 500 |
| DMA IORC- active time | 750 |
| DMA MWTC-, IOWC- active time | 400 |
| System memory read access time from MRDC- (non-CPU write cycles) | 100 |
| Data valid after MWTC- low for system RAM (non-CPU cycles) | 290 |
| Required I/O data access time from IORC- for DMA write to RAM | 360 |
| Data valid after IOWC- low during DMA read from RAM | 179 |
| Data set-up to IOWC- high during DMA read from RAM | 221 |

Note: A standard wait state occurs if the device being accessed does not specify the number of wait states that should be generated by the system.

Figures 2-5 and 2-6 illustrate the role of the bus controller by showing a number of 8- and 16-bit 8-MHz bus cycles relative to typical CPU cycles at the 16-MHz rate. It is this function--translating the CPU cycles and signals into those compatible with the 80286 expansion bus--that makes the COMPAQ DESKPRO 386 bus controller an essential factor in ensuring compatibility with existing hardware expansion products.

246

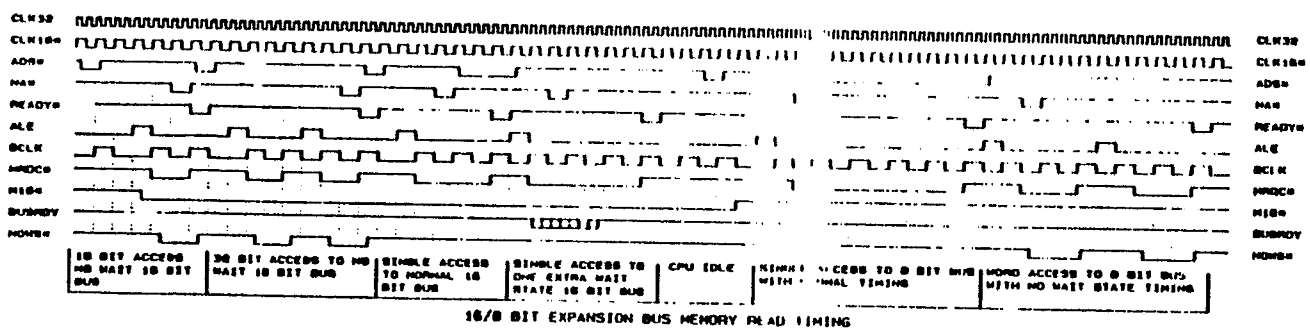


Figure 2.5 Typical 8-/16-bit Bus Memory Timing

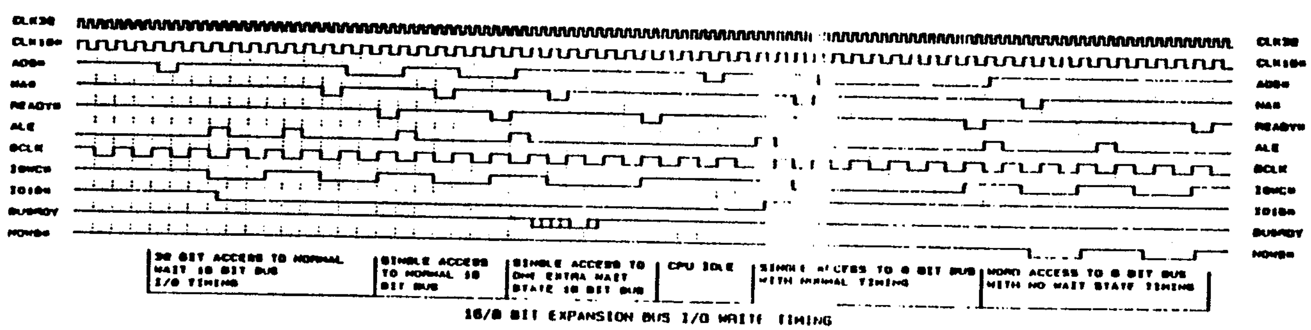


Figure 2-6. Typical 8-/16-bit Bus I/O Timing

BAD ORIGINAL

## System Bus Arbitration

In the COMPAQ DESKPRO 386, a number of functions require access to the system bus. These functions include RAM refresh, DMA operations, bus master operations, and CPU speed control functions. Bus arbitration is required when two or more functions simultaneously request access to the bus.

A peripheral obtains access to the bus by asserting the HOLD signal. The HOLD signal tells the processor to release the bus for access by the peripheral. The HLDA signal from the processor indicates when the bus is available for use. During the HOLD state, the processor tristates its address and data signals. The CPU HOLD request set-up time is 22.4 ns.

Once a peripheral has been granted access to the bus, a second bus request will not be acknowledged until the first edge of the 8-MHz clock after the first peripheral relinquishes the bus.

## CPU Speed Controls

Another innovative feature in the COMPAQ DESKPRO 386 is a simulated system speed control. This feature has been implemented to provide compatibility with a small number of software products that contain programs dependent on certain system speeds. Typically, these programs contain timing idiosyncrasies associated with diskette copy protection mechanisms.

The COMPAQ DESKPRO 386 slows the processor speed when the program accesses the diskette drive to allow for compatibility with diskette-based copy protection schemes. This function is also useful for adjusting the COMPAQ DESKPRO 386 to handle action software games written for 8088-based personal computers. Reduction of the COMPAQ DESKPRO 386 system speed to simulate the system speed of an 8088-based personal computer allows these games to be played at a realistic speed.

The simulated CPU speed control is accomplished by reducing the system bus bandwidth using extended refresh cycles. Since the CPU is in a HOLD state during refresh cycles, the execution speed of programs is reduced as the length of the refresh cycles is increased. The lengthening of the refresh cycles, however, has been carefully implemented so as not to increase the DMA latency period that would be present during refresh cycles of normal length. A DMA request for access to the bus taking place during the extension of a refresh cycle is granted access to the bus immediately, since the CPU is already in the HOLD state. The amount of time added to the normal refresh cycle period is determined by the length of a one-shot time period output by one of the Intel 8254 timers in the system. The programming of the speed control timer is described in Chapter 4.

## I/O Subsystem

The COMPAQ DESKPRO 386 can use 16 address lines (A<15..0>) and the control lines (M/IO- and R/W-) to specify up to 64K I/O locations.

I/O addresses on the system board range from 00h to 0FFh. I/O addresses on adapter boards range from 100h to 0FFFh.

Address line A31 is also decoded to provide I/O ports 800000F8h to 800000FFh for the 80287 numeric coprocessor. A31 is normally 0 for 8- and 16-bit port I/O associated with the expansion bus.

The primary I/O-decoding devices are PAL devices that use control lines and address lines to provide the device select lines (by port number) for the system board programmable devices. Figure 2-7 is a simplified block diagram of I/O address decoding for the system board.

Expansion boards (for memory, disk, and video) must have their own I/O decoding for the I/O-mapped devices on that board. The decoding is described in the chapter on each specific device.

249

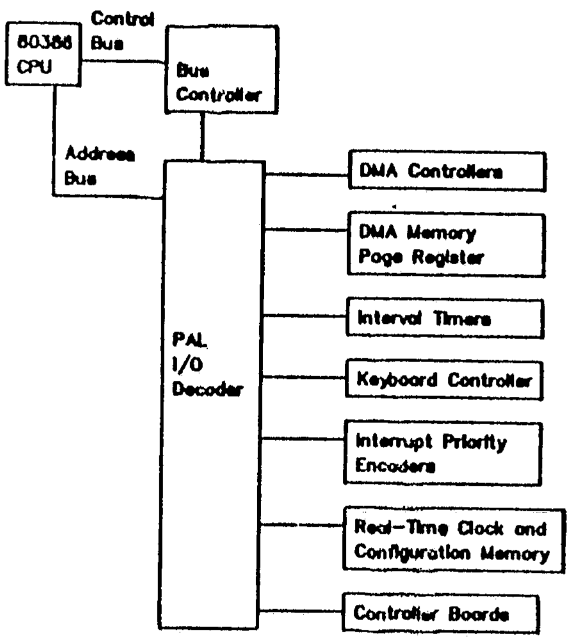


Figure 2-7. I/O Address Decoding Simplified Block Diagram

## 2.4 SYSTEM BOARD PROGRAMMABLE DEVICES

The COMPAQ DESKPRO 386 BIOS (basic input/output system) controls the following system board programmable devices:

- Direct Memory Access (DMA) Controllers (Intel 8237A-5)
- DMA Memory Page Register (S74LS612)
- Interrupt Priority Encoder (Intel 8259A)
- Interval Timer 1 and 2 (Intel 8254-2)
- Keyboard Controller (Intel 8042 microcomputer)
- Real-Time Clock and Configuration Memory Device (Motorola MC146818)
- Numeric coprocessor (Intel 80287)

These devices are all I/O mapped. Table 2-10 gives the general memory map for the COMPAQ DESKPRO 386. Table 2-11 summarizes the port addresses used by the programmable devices on the system board. Chapter 4, Software Aspects and BIOS, describes the COMPAQ DESKPRO 386 BIOS.

Table 2-10. System Board I/O Map

| Port | Address Bits 9 8 | 7 6 5 4 | 3 2 1 0 | Device |
|---|---|---|---|---|
| 00h..0Fh | 0 0 | 0 0 0 X | Y Y Y Y | 8237A-5 Byte DMA Controller |
| 20h..21h | 0 0 | 0 0 1 X | X X X Y | 8259A Interrupt Controller 1 |
| 40h | 0 0 | 0 1 0 X | 0 0 0 0 | Programmable Interval Timer 1, 8254-2 System Clock (Counter 0) |
| 41h | 0 0 | 0 1 0 X | 0 0 0 1 | Programmable Interval Timer 1, 8254-2 Refresh Request (Counter 1) |
| 42h | 0 0 | 0 1 0 X | 0 0 1 0 | Programmable Interval Timer 1, 8254-2 Speaker Tone (Counter 2) |
| 43h | 0 0 | 0 1 0 X | 0 0 1 1 | Programmable Interval Timer 1, 8254-2 Command Mode Register |
| 48h | 0 0 | 0 1 0 X | 1 0 0 0 | Programmable Interval Timer 2, 8254-2 Failsafe Clock (Counter 0) |
| 49h | 0 0 | 0 1 0 X | 1 0 0 1 | Programmable Interval Timer 2, 8254-2 Not Used (Counter 1) |
| 4Ah | 0 0 | 0 1 0 X | 1 0 1 0 | Programmable Interval Timer 2, 8254-2 Refresher Request Extend, Speed Control (Counter 2) |
| 4Bh | 0 0 | 0 1 0 X | 1 0 1 1 | Programmable Interval Timer 2, 8254-2 Command Mode Register |
| 60h | 0 0 | 0 1 1 0 | 0 0 X 0 | 8042 Data I/O Register |
| 61h | 0 0 | 0 1 1 0 | 0 X X 1 | NMI Status (See NMI Interrupts) |
| 64h | 0 0 | 0 1 1 0 | 0 1 X 0 | 8042 Status/Command Register |
| 70h | 0 0 | 0 1 1 1 | 0 X X 0 | RTC Address Register Data bits (6..0) |
| 70h | 0 0 | 0 1 1 1 | 0 X X 0 | NMI Enable Register (bit 7 = 0) |
| 71h | 0 0 | 0 1 1 1 | 0 X X 1 | RTC Data I/O Register |
| 80h | 0 0 | 1 0 0 X | 0 0 0 0 | DMA Page Register Reserved |
| 81h | 0 0 | 1 0 0 X | 0 0 0 1 | DMA Page Register CH 2 Page |
| 82h | 0 0 | 1 0 0 X | 0 0 1 0 | DMA Page Register CH 3 Page |
| 83h | 0 0 | 1 0 0 X | 0 0 1 1 | DMA Page Register CH 1 Page |
| 84h | 0 0 | 1 0 0 X | 0 1 0 0 | DMA Page Register Reserved |

Notes: X = Don't care. The value of these bits do not affect the I/O address decoding.
Y = Register dependent.

(Continued)

251

Table 2-10. System Board I/O Map (Concluded)

| Port | Address Bits 9 8 | 7 6 5 4 | 3 2 1 0 | Device |
|---|---|---|---|---|
| 85h | 0 0 | 1 0 0 X | 0 1 0 1 | DMA Page Register Reserved |
| 86h | 0 0 | 1 0 0 X | 0 1 1 0 | DMA Page Register Reserved |
| 87h | 0 0 | 1 0 0 X | 0 1 1 1 | DMA Page Register CH 0 Page |
| 88h | 0 0 | 1 0 0 X | 1 0 0 0 | DMA Page Register Spare |
| 89h | 0 0 | 1 0 0 X | 1 0 0 1 | DMA Page Register CH 6 Page |
| 8Ah | 0 0 | 1 0 0 X | 1 0 1 0 | DMA Page Register CH 7 Page |
| 8Bh | 0 0 | 1 0 0 X | 1 0 1 1 | DMA Page Register CH 5 Page |
| 8Ch | 0 0 | 1 0 0 X | 1 1 0 0 | DMA Page Register Reserved |
| 8Dh | 0 0 | 1 0 0 X | 1 1 0 1 | DMA Page Register Reserved |
| 8Eh | 0 0 | 1 0 0 X | 1 1 1 0 | DMA Page Register Reserved |
| 8Fh | 0 0 | 1 0 0 X | 1 1 1 1 | DMA Page Register Refresh Page |
| A0h..A1h | 0 0 | 1 0 1 X | X X X Y | 8259A Interrupt Controller 2 |
| C0h..CFh | 0 0 | 1 1 0 Y | Y Y Y X | 8237A-5 Word DMA Controller |
| F0h | 0 0 | 1 1 1 X | 0 X X 0 | Clear 80287 Busy |
| F1h | 0 0 | 1 1 1 X | 0 X X 1 | Reset 80287 |
| F8h..FFh or 800000F8h..800000FFh | 0 0 | 1 1 1 1 | 1 Y Y X | 80287 Command Ports |

Notes: X = Don't care. The value of these bits do not affect the I/O address decoding.
Y = Register dependent.

Table 2-11. System and Controller Boards Addresses

| Address Range (hex) | Function Addressed |
|---|---|
| 000 - 01F | DMA Controller 1 |
| 020 - 03F | Interrupt Controller 1 |
| 040 - 047 | Interval Timer 1 |
| 048 - 05F | Interval Timer 2 |
| 060 - 06F | 8042 Keyboard Controller |
| 070 - 07F | Real-Time Clock, NMI |
| 080 - 08F | DMA Page Registers |
| 0A0 - 0BF | Interrupt Controller 2 |
| 0C0 - 0DF | DMA Controller 2 |
| 0F0 - 0FF | 80287 Numeric Coprocessor |
| 1F0 - 1F8 | Fixed Disk Controller |
| 200 - 207 | Game Controllers |
| 2F8 - 27F | Parallel Port 2 |
| 2F8 - 2FE | Serial Port 2 |
| 300 - 31F | Not Used |
| 378 - 37F | Parallel Port 1 |
| 380 - 38F | Not Used |
| 3A0 - 3AF | Not Used |
| 3B0 - 3BB | Non-COMPAQ Monochrome Adapter |
| 3D0 - 3DF | COMPAQ Video Display Controller Board |
| 3F0 - 3F7 | Diskette Controller |
| 3F8 - 3FE | Serial Port 1 |

The system includes two Intel 8237 DMA controllers arranged identically to those in 80286-based systems. These controllers handle and prioritize DMA requests from I/O peripherals on the expansion bus. A complete set of page registers is also provided for handling the high order of the DMA address.

## DMA Operations

Direct memory access (DMA) is a method of directly accessing memory without involving the CPU. DMA is normally used to transfer blocks of data to or from an I/O device. DMA reduces the amount of CPU interactions with memory, freeing the CPU for other processing tasks.

Two types of DMA operations are supported: byte and word operations. DMA channels and their functions are given in Table 2-12. All four channels (designated 0. 1, 2, and 3) of Controller 1 are dedicated to performing byte operations. Of the four channels (designated 4, 5, 6, and 7) of Controller 2, channels 5, 6, and 7 are dedicated for word operations. Thus, all HOLD requests for Controller 1 are processed via channel 4 of Controller 2. This causes all channels in Controller 1 (channels 0, 1, 2, and 3) to operate at a higher priority than those in Controller 2 (channels 5, 6, 7). Channel 4 of Controller 2 is not available for normal DMA.

253

Table 2-12. DMA Channels Assigned to the Controllers

| Channel | Function |
|---|---|
| Controller 1--Byte Transfers: | |
| 0 | Spare |
| 1 | Spare |
| 2 | Diskette Data Transfers |
| 3 | Spare |
| Controller 2--Word Transfers: | |
| 4 | Cascade for Controller 1 |
| 5 | Spare |
| 6 | Spare |
| 7 | Spare |

## DMA Controller

The system board uses two Intel 8237 DMA controllers, with four bidirectional data channels each. The DMA controllers operate at 3 MHz (DCLK).

The DMA controllers hold (or define) only 16 bits of the 24-bit address. The other 8 address bits are contained in the DMA Memory Page Register (74LS612). See the "DMA Memory Page Register" section for more information.

DMA Controller 1 is used for byte (8-bit) data transfers, as shown in Figure 2-8. DMA Controller 2 is used for word (16-bit) data transfers. Unlike the CPU, DMA Controller 2 can transfer words only on an even boundary.

Together the DMA controller and page register define a 24-bit address that allows data transfers within the 16-MB address space of the COMPAQ DESKPRO 386.

254

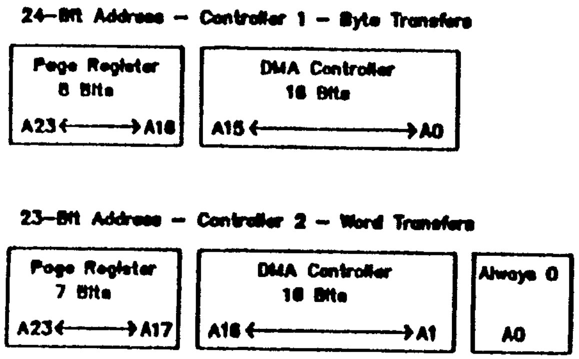


Figure 2-8. Memory Address Derived from Page Register and DMA Register Contents

A16 from the DMA Memory Page Register is disabled when DMA Controller 2 is selected. A0 is not connected to DMA Controller 2. A0 is always 0 when word-length transfers are selected. Not connecting A0 means: 1) that the size of the block of data that can be moved or addressed is measured in 16-bit words, rather than 8-bit bytes and 2) the words must always be on an even boundary.

DMA Controller 1 can move as much as 64 KB of data per DMA transfer. DMA Controller 2 can move as much as 64 K words, or 128 KB of data per DMA transfer.

## DMA Memory Page Register

The DMA memory page register contains the eight most-significant bits of the 24-bit address. It works in conjunction with the DMA controllers to define the complete (24-bit) address for the DMA channels. Table 2-13 gives the port address assigned to each page register. See the section on the DMA controllers for more information.

Table 2-13. Port Address for DMA Channels

| DMA Channel | Page Register I/O Port Address |
|---|---|
| 0 | 087h |
| 1 | 083h |
| 2 | 081h |
| 3 | 082h |
| 4 | None |
| 5 | 08Bh |
| 6 | 089h |
| 7 | 08Ah |
| Refresh | 08Fh (See Note) |

Note: The DMA memory page register for the refresh channel must be programmed with 00h for proper system operation.

The DMA controllers are complex devices with several registers for commands and status. Table 2-14 shows the I/O-map and the commands and formats of the registers.

**Note:** See "Reset Pointer Flip-Flop" for an explanation of 16-bit data transfers to the DMA controllers.

256

Table 2-14. DMA Controller Registers

| Register Function | Bits | Port Address Controller 1 | Port Address Controller 2 | Read/Write |
|---|---|---|---|---|
| Status | 8 | 08h | D0h | Read |
| Command | 8 | 08h | D0h | Write |
| Mode | 6 | 0Bh | D6h | Write |
| Write Single Mask Bit | 4 | 0Ah | D4h | Write |
| Write All Mask Bits | 4 | 0Fh | DEh | Write |
| Software DRQx Request | 4 | 09h | D2h | Write |
| Base and Current Address - CH 0 | 16 | 00h | C0h | Write |
| Current Address - CH 0 | 16 | 00h | C0h | Read |
| Base and Current Word Count - CH 0 | 16 | 01h | C2h | Write |
| Current Word Count - CH 0 | 16 | 01h | C2h | Read |
| Base and Current Address - CH 1 | 16 | 02h | C4h | Write |
| Current Address - CH 1 | 16 | 02h | C4h | Read |
| Base and Current Word Count - CH 1 | 16 | 03h | C6h | Write |
| Current Word Count - CH 1 | 16 | 03h | C6h | Read |
| Base and Current Address - CH 2 | 16 | 04h | C8h | Write |
| Current Address - CH 2 | 16 | 04h | C8h | Read |
| Base and Current Word Count - CH 2 | 16 | 05h | CAh | Write |
| Current Word Count - CH 2 | 16 | 05h | CAh | Read |
| Base and Current Address - CH 3 | 16 | 06h | CCh | Write |
| Current Address - CH 3 | 16 | 06h | CCh | Read |
| Base and Current Word Count - CH 3 | 16 | 07h | CEh | Write |
| Current Word Count - CH 2 | 16 | 07h | CEh | Read |

(Continued)

257

Table 2-14. DMA Controller Registers (Concluded)

| Register Function | Bits | Port Address Controller 1 | Port Address Controller 2 | Read/Write |
|---|---|---|---|---|
| Current Word Count - CH 3 | 16 | 07h | CEh | Read |
| Temporary | 16 | 0Dh | DAh | Read |
| Reset Pointer Flip-flop | (Note) | 0Ch | D8h | Write |
| Master Reset | (Note) | 0Dh | DAh | Write |
| Reset Mask Register | (Note) | 0Eh | DCh | Write |

Note: This is not a register, but a direct command to the DMA Controller.

## Transferring Data from Memory to Memory

The hardware does not support memory-to-memory block transfers.

## Transferring Data from I/O Devices to Memory

DMA controllers and I/O devices use the DRQx and DAKx signals as "handshaking". When an I/O device has a byte or word of data to send, the I/O device makes its DRQx line active. When the DAKx line from the DMA controller goes active, the device puts its data on the data bus.

STATUS

The Status register bits are set (= 1) to indicate that a channel has requested DMA access or that a DMA process is completed.

BIT
76543210

- 0: 1= CH 0 DMA process completed
- 1: 1= CH 1 DMA process completed
- 2: 1= CH 2 DMA process completed
- 3: 1= CH 3 DMA process completed
- 4: 1= CH 0 DMA requested
- 5: 1= CH 1 DMA requested
- 6: 1= CH 2 DMA requested
- 7: 1= CH 3 DMA requested

## COMMAND

The Command register bits control the DMA operation. All bits are reset (=0) by the master clear instruction or a system reset. This register must be programmed to 00 for proper system operation.

```
BIT
76543210
       └── 0 = Memory-to-memory disabled
           1 = Memory-to-memory enabled
      └─── 0 = CH 0 address hold disabled
           1 = CH 0 address hold enabled
     └──── 0 = Controller enabled
           1 = Controller disabled
    └───── 0 = Normal timing
           1 = Compress timing
           X = If bit 0 = 1
   └────── 0 = Fixed priority
           1 = Rotating priority
  └─────── 0 = Late write selection
           1 = Extended write selection
           X = If bit 3 = 1
 └──────── 0 = DRQx sense active high
           1 = DRQx sense active low
└───────── 0 = DAKx sense active low
           1 = DAKx sense active high
```

## MODE

Each channel has a 6-bit register associated with it. The first ? bits of the byte written to this register specify which channel is being selected. These registers specify the operating mode for each channel.

```
BIT
76543210
      └┴── 00 = Select CH 0
           01 = Select CH 1
           10 = Select CH 2
           11 = Select CH 3
    └┴──── 00 = Verify transfer
           01 = Write transfer
           10 = Read transfer
           11 = Illegal
           XX = If bits <7..6> = 11
   └────── 0 = Autoinitialization disabled
           1 = Autoinitialization enabled
  └─────── 0 = Address increment selected
           1 = Address decrement selected
└┴──────── 00 = DEMAND mode selected
           01 = SINGLE mode selected
           10 = BLOCK mode selected
           11 = CASCADE mode selected
```

260

If the BLOCK or DEMAND mode is selected for a channel, the total transfer time must not exceed 15 us or RAM will not be properly refreshed.

## WRITE SINGLE MASK BIT

This command sets (=1) or resets (=0) a single mask bit. When a mask bit is set, that channel's DRQx is disabled. The WRITE ALL MASK BITS command can set or reset all the mask bits.

```
    BIT
76543210
|||||||└┴── 00 = Select CH 0 mask bit
|||||         01 = Select CH 1 mask bit
|||||         10 = Select CH 2 mask bit
|||||         11 = Select CH 3 mask bit
||||└────── 0 = Reset mask bit
||||          1 = Set mask bit
└┴┴┴─────── 00000 (not used)
```

## WRITE ALL MASK BITS

This command sets (=1) or resets (=0) all the mask bits. When a bit is set, that channel's DRQx is disabled. The WRITE SINGLE MASK BIT command can set or reset a single mask bit.

```
    BIT
76543210
|||||||└── 0 = Reset CH 0 mask bit
|||||||      1 = Set CH 0 mask bit
||||||└─── 0 = Reset CH 1 mask bit
||||||       1 = Set CH 1 mask bit
|||||└──── 0 = Reset CH 2 mask bit
|||||        1 = Set CH 2 mask bit
||||└───── 0 = Reset CH 3 mask bit
||||         1 = Set CH 3 mask bit
└┴┴┴────── 0000 (not used)
```

26c

262



## SOFTWARE DRQx REQUEST

The DMA controller can respond to software requests for DMA as well as hardware requests from DRQx lines. The channel must be in the BLOCK mode, and the appropriate registers (base addr

esses and so forth) must be set before initiating this request.

```
     BIT
76543210
|||||||└┴── 00 = Select CH 0 mask bit
|||||||     01 = Select CH 1 mask bit
|||||||     10 = Select CH 2 mask bit
|||||||     11 = Select CH 3 mask bit
|||||└───── 0 = Reset request bit
|||||       1 = Set request bit
└┴┴┴┴────── 00000 (not used)
```

## BASE AND CURRENT ADDRESS - CHANNELS 0-3

These 16-bit registers specify the starting destination address for the memory transfer. This is a write-only register. The two bytes are loaded into these registers as a two-part operation. The first write to this register loads the eight least-significant bits (lower byte). The second consecutive write loads the eight most-significant bits (upper byte). See the RESET POINTER FLIP-FLOP command.

## BASE AND CURRENT WORD COUNT - CHANNELS 0-3

These 16-bit registers specify the number of words to be transferred. The number of word transfers that can occur is one more than the specified number. This is a write-only register. The 16-bit contents are loaded into these registers as a two-part operation.

The first write to this register loads the eight least-significant bits. The second consecutive write loads the eight most-significant bits. See the RESET POINTER FLIP-FLOP command.

### CURRENT ADDRESS (READ) CHANNELS 0-3

These 16-bit registers specify either the current address or the destination address for the next data transfer. This address is the same as the base address plus address increments or decrements made after each data transfer. These are read-only registers. The 16-bit contents are read from these registers as a two-part operation. The first read from this register returns the eight least-significant bits. The second consecutive read returns the eight most-significant bits. See the RESET POINTER FLIP-FLOP command.

### CURRENT WORD COUNT - CHANNELS 0-3

This register indicates the number of words remaining to be transferred. These are read-only registers. The 16-bit contents are read from these registers as a two-part operation. The first read from this register returns the eight least-significant bits. The second consecutive read returns the eight most-significant bits. See the RESET POINTER FLIP-FLOP command.

### TEMPORARY

This register is not used in this hardware configuration.

### RESET POINTER FLIP-FLOP

This is a direct command to the DMA controller to reset the pointer flip-flop that keeps track of 16-bit data transfers. This command is given to reset the pointer to a known state so that the DMA controller will load the high- and low-order bytes in the proper sequence. Use this command before writing a 16-bit base address or other 16-bit command or data to the DMA controller.

### MASTER RESET

This is a direct command to the DMA controller to reset the DMA controller. It has the same effect as a hardware reset; the command, status, request, temporary, and pointer flip-flop registers are reset (=0), and the mask register bits are set (=1).

RESET MASK

This is a direct command to the DMA controller to reset the mask register, enabling all four channels to receive DRQs (data requests).

## Refresh Operations

The normal (non-extended) RAM refresh is designed to perform a memory read cycle on each of the 256 addresses in the memory space addressed by SA0 to SA7. Refresh operations are used to refresh memory on the 32-bit memory bus and the 8-/16-bit expansion bus. In order to simplify the design of 8-/16-bit memory expansion boards, SA8 and SA9 are driven to the signal states of SA0 and SA1, respectively. SA10 and SA11 have two additional counter bits allocated for future RAM refresh requirements. The remaining addresses are in an undefined state during the refresh cycle. The refresh operations are driven by a 69.799-kHz clock rate generated by programmable timer counter 1 of 8254 number 1. The refresh rate is 128 refresh cycles in 2.038 ms.

## Interrupt Controllers

The 80386 processor has two signals for interrupts, labelled NMI (nonmaskable interrupt) and INTR (maskable interrupts). A maskable interrupt is an interrupt that can be enabled or disabled by the processor. A nonmaskable interrupt cannot be masked off within the processor, but can be masked under software control by external hardware on the system board.

## Nonmaskable Interrupts (NMI)

NMI interrupts are caused by:

- Parity errors on the system board, memory boards, or any expansion boards which pull the IOCHK- line low
- Timeout of the fail-safe timer on interval timer 2 which pulls the HITIM- line low
- System software generating a software interrupt to the NMI routine (BIOS call) such as redirection of the 80287 exception interrupt.

When an NMI interrupt is caused by hardware, port 61h indicates the source of the interrupt. Bits set to 1 in port 61h show which device requested an NMI interrupt. After the NMI interrupt routine processes the interrupt, the NMI status bits (6 and 7) are reset.

If bit 6 is set, the interrupt comes from the hardware IOCHK- line. To reset the hardware IOCHK-latch, pulse bit 3 of port 61h high.

If bit 7 is set, the interrupt comes from the fail-safe timer (interval timer 2). To reset the fail-safe timer interrupt latch bit, pulse bit 2 of port 61h high.

The following bit map shows the bit values for port 61h.

265

PORT 61h

BIT 76543210

- Bit 0 — Gate signal for interval timer 1, counter 2 (speaker)
  0 = Counter 2 disabled
  1 = Counter 2 enabled
  Read and write
- Bit 1 — Speaker data
  Read and write
- Bit 2 — 0 = Fail-safe NMI enabled
  1 = Fail-safe NMI disabled and cleared
  Read and write
- Bit 3 — 0 = IOCHK- NMI enabled
  1 = IOCHK- NMI disabled and cleared
  Read and write
- Bit 4 — 0 = RAM refresh occurring now
  1 = RAM not in refresh cycle
  Read only
- Bit 5 — State of interval timer 1, counter 2 output signal (speaker). Read only.
- Bit 6 — 0 = No NMI interrupt from IOCHK-
  1 = IOCHK- is low (active), NMI interrupt requested
  Read only
- Bit 7 — 0 = No NMI interrupt from fail-safe timer (HITIM- signal)
  1 = HITIM- is low (active), NMI interrupt requested
  Read only

The mask register for the NMI interrupt is at I/O-address 70h shown below. The most-significant bit enables or disables the IOCHK- and fail-safe timer interrupts. Write an 80h to port 70h to mask the NMI signal. This port is shared with the real-time clock and configuration memory device (the lower 6 bits). Do not modify the contents of this register without considering the effects on the state of the other bits.

Port 70h

BIT 76543210

- Bits 0–6 — Real-time clock
- Bit 7 — 0 = NMI enabled
  1 = NMI disabled

## Interrupts (INTR)

All hardware interrupts to the CPU are channeled through the interrupt controllers (Intel 8259A). These devices generate interrupts on the 80386's interrupt line (INTR), which can be masked in the 80386 with the CLI instruction.

266

The interrupt controllers are 8-input devices that can accept interrupt signals from several devices, then prioritize them and interrupt the processor. The processor then automatically reads the interrupt controller to determine the source of the highest-priority interrupt and calls the appropriate interrupt routine.

Two interrupt controllers (a master and a slave) are used so that 16 levels of interrupt are possible. The slave (interrupt controller 2) interrupts the master (interrupt controller 1) to cause an interrupt. Interrupt controller 1 can be programmed in the fully nested mode, so that interrupt controller 2 sends the correct interrupt vector to the CPU for the source of the interrupt. Figure 2-9 shows a diagram of the interrupt controller circuit.

The base I/O address for Interrupt Controller 1 is 20h; for Interrupt Controller 2, A0h. Table 2-14 lists the initial interrupt controller values set up at power-on by the BIOS.

Table 2-15. Initial Interrupt Controller Values

| Port | Value | Description of Contents |
|---|---|---|
| 20h | 11h | Cntlr 1, ICW1 |
| 21h | 08h | Cntlr 1, ICW2 vector address for 000020h |
| 21h | 04h | Cntlr 1, ICW3 indicates slave connection |
| 21h | 01h | Cntlr 1, ICW4 8086 mode |
| A0h | 11h | Cntlr 2, ICW1 |
| A1h | 70h | Cntlr 2, ICW2 vector address for 0001C0h |
| A1h | 02h | Cntlr 2, ICW3 indicates slave ID |
| A1h | 01h | Cntlr 2, ICW4 8086 mode |
| 21h | B8h | Cntlr 1, Interrupt mask (may vary with option) |
| A1h | 80h | Cntlr 2, Interrupt mask (may vary with option) |

267

Table 2-16 lists the 16 possible sources for an interrupt and their priorities. The highest-priority interrupt is processed first.

Table 2-16. Interrupts and Their Priorities

| Priority | Label | Controller | Typical Interrupt Source |
|---|---|---|---|
| 1 | NMI | (Note) | Parity error detected |
| 2 | IRQ0 | 1 | Interval timer 1, counter 0 output |
| 3 | IRQ1 | 1 | Keyboard |
| | IRQ2 | 1 | Interrupt from controller 2 |
| 4 | IRQ8 | 2 | Real-time clock |
| 5 | IRQ9 | 2 | Expansion bus pin B04 |
| 6 | IRQ10 | 2 | Expansion bus pin D03 |
| 7 | IRQ11 | 2 | Expansion bus pin D04 |
| 8 | IRQ12 | 2 | Expansion bus pin D05 |
| 9 | IRQ13 | 2 | 80287 Coprocessor error |
| 10 | IRQ14 | 2 | Fixed disk drive controller --expansion bus pin D07 |
| 11 | IRQ15 | 2 | Expansion bus pin D06 |
| 12 | IRQ3 | 1 | Serial port 2--pin B25 |
| 13 | IRQ4 | 1 | Serial port 1--pin B24 |
| 14 | IRQ5 | 1 | Parallel port 2--pin B23 |
| 15 | IRQ6 | 1 | Diskette drive controller (B22) |
| 16 | IRQ7 | 1 | Parallel port 1--pin B21 |

Note: The NMI signal is controlled through I/O port 70h, bit 7. NMI also handles the fail-safe timer.

268

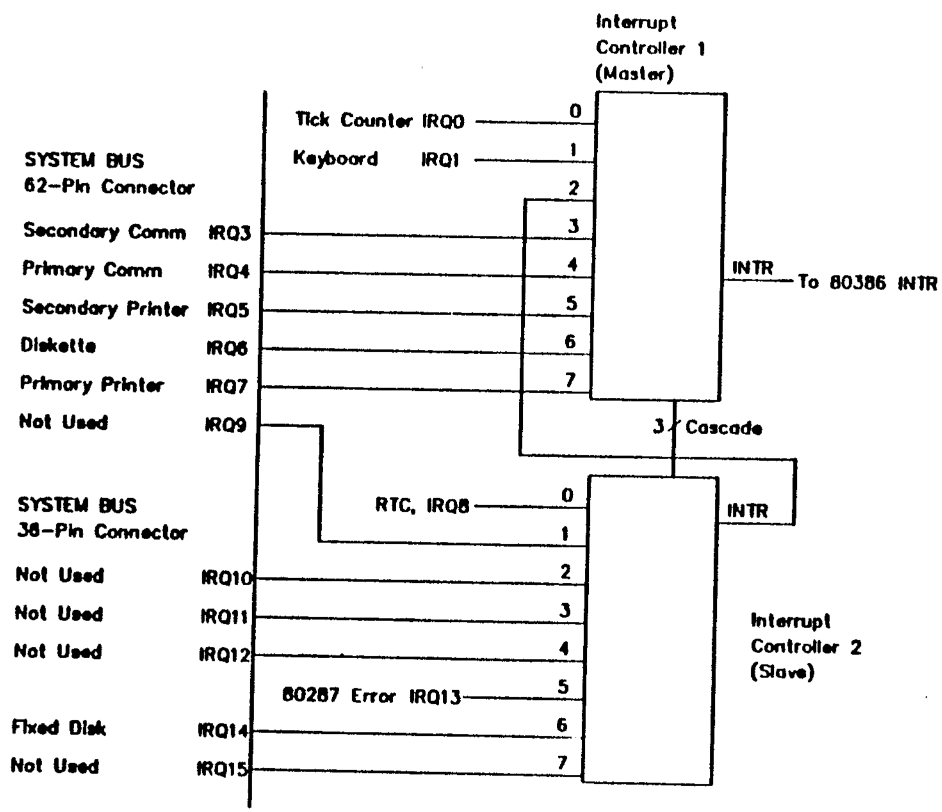


Figure 2-9. Interrupt Controller Functional Diagram

269

## 8259 Programming Examples

The following example illustrates an end-of-interrupt (EOI) sequence:

```
mov   al, 20h          ; Get EOI value
out   20h, al          ; Send EOI command to
                       ; 8259A OCW3
```

The following example masks IRQ2. IRQ2 is masked by setting bit 2 to 1 in the 8259A OCW1.

```
cli                    ; Mask all interrupts
in    al,21h           ; Get current mask from OCW1
or    al,00000100b     ; Bit 2 is IRQ2
jmp $ + 2              ; Allow time between
jmp $ + 2              ; Outputs to 8259A
out   21h, al          ; Output mask value to OCW1
sti                    ; Reenable all interrupts
```

## Fail-Safe Timer

The fail-safe timer output signal can be independently enabled or disabled via the I/O port 61h bit 2. This function is not currently used in the COMPAQ DESKPRO 386 and is intended for future operating systems use.

## Interval Timers

The purpose of a programmable interval timer is to generate pulses at software-controllable intervals.

The system board has two 8254-2 interval timers. Each 8254 provides three frequencies, or counters, for the system. The three counters count down a 16-bit value at a rate of 1.193 million counts-per-second and give an output pulse on the OUT pins.

Interval timer 1, counter 0, is connected to the 8259A interrupt controller 1 IRQ0, and provides a system timer interrupt for a time-of-day, diskette timeout, or other system timing functions. Counter 1 generates a refresh-request signal. Counter 2 generates the tone for the speaker.

Interval timer 2, counter 0, is the "fail-safe timer" that can generate interrupts on the NMI line at regular intervals. This interrupt can be used by operating systems to prevent the system from locking up. The interval timer 2, counter 0 output is enabled or disabled by DIP switch 1 on the system board.

Interval timer 2, counter 1, is not used.

270

Interval timer 2, counter 2, is used to extend the refresh-request period. Counter 2 is placed in the one-shot mode, and is triggered by the refresh-request signal. If the SLOWD- signal from the 8042 keyboard controller is active, then the counter 2 output will extend the CPU hold time for refresh by the programmed period of the one-shot. The one-shot timeout period has 250-ns increments, with a range of 02h to 35h. To enable the one-shot, select Mode 1 (one-shot) operation by writing OUT 48h, 92h. To specify a time-period, write OUT 4Ah, xxh, where xxh is a value between 02h and 35h.

Since the interval timer 2, counter 2, function is dependent upon the refresh-request signal from another interval timer counter, changing the refresh-request frequency will affect the period of the counter 2 output signal.

Timer 2 counter 2 is configured for the one-shot mode and is not enabled (that is, a counter value is not programmed) until a speed reduction in the system is required. At such time the value programmed depends on the system speed desired.

Table 2-17 lists the interval timer functions.

Table 2-17. Interval Timer Functions

| Function | Interval Timer 1 Counter 0 System Timer | Interval Timer 2 Counter 0 Fail-safe Timer |
|---|---|---|
| Gate | Always on | Always on |
| Clock In | 1.193 MHz | 1.193 MHz |
| Clock Out | 8259A IRQ0 | NMI Interrupt (HITIM- signal) |
| Function | Counter 1 Refresh Request | Counter 1 Reserved |
| Gate | Always on | Not used |
| Clock In | 1.193 MHz | 1.193 MHz |
| Clock Out | Request refresh (REFCK) | Not used |
| Function | Counter 2 Speaker Tone | Counter 2 Speed Control |
| Gate | Programmable (Port 61h) | 8042 SLOWD- signal |
| Clock In | 1.193 MHz | 4 MHz (DCLK) |
| Clock Out | Speaker input | HOLD delay (SLOWQ-) |

Table 2-18 gives the COMPAQ DESKPRO 386 system speed values that correspond to the equivalent speeds of an 8088-based personal computer and the 6-MHz and the 8-MHz 80286-based products. These values can be entered with the COMPAQ MS-DOS MODE command (MODE SPEED=XX)

or can be used with the "Set System Speed" BIOS function (CX=XX) to simulate the computing speed (that is, the processor/memory system speed) of other personal computer products. The COMPAQ MS-DOS MODE command is on the USER PROGRAMS diskette. The range of speed values is from 1 to 50, where 50 approximates the full COMPAQ DESKPRO 386 speed. Note that the 6- and 8-MHz 80286-based product equivalent speed values are listed for relative reference to other speed values. The commands MODE SPEED=COMMON and MODE SPEED=FAST select the 6- and 8-MHz 80286-based products' equivalent speeds, respectively.

Table 2-18. Simulated System Speed Values

| Simulated Speed | Decimal Value | Hex Value |
|---|---|---|
| 8088-based personal computer | 3 | 3 |
| 6-MHz 80286-based products | 16 | 10 |
| 8-MHz 80286-based products | 18 | 12 |

Note that the values in decimal are suitable for using directly with the MODE command. To use the "Set System Speed" BIOS function, the speed values should be placed in the CX register in their hexadecimal equivalent.

Please refer to Chapter 4, Software Aspects and BIOS, for more information.

## Interval Timer Architecture

The interval timer contains three identical counters. Figure 2-10 shows the architecture of the interval timer.

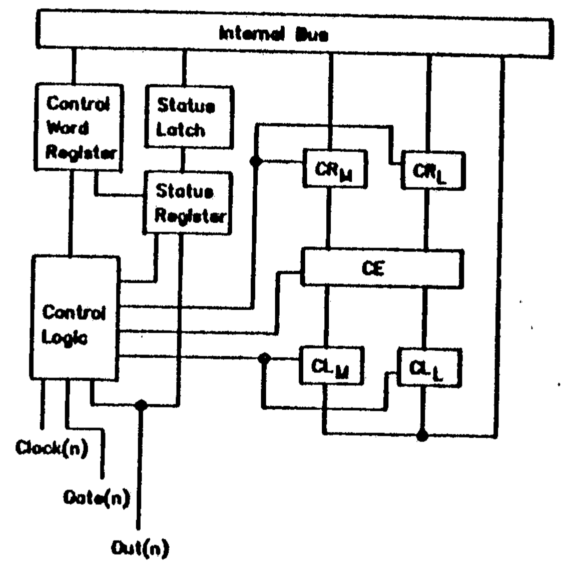


Figure 2-10. Counter Architecture

272

CRm and CRl contain the most- and least-significant bytes of the 16-bit initial count value. These registers are cleared when they are both transferred into CE.

CE is the actual "Counting Element" latch that contains the value being counted down.

OLm and OLl contain the most- and least-significant bytes of the CE value, unless a latch command is given. In this case, the OLm and OLl registers hold the count until read.

## Programming the Interval Timer

The interval timer is an I/O-mapped device. Table 2-19 lists the ports used. Several commands are available:

- Control Word specifies:
  - which counter to read or write
  - the operating mode
  - the count format (binary or BCD)
- Counter-Latch latches the current count so that it can be read by the system. The count down process continues.
- Read-Back reads the count value, programmed mode, the current state of the OUT pins, and the state of the Null Count Flag of the selected counter.

Table 2-19. Interval Timer Port Assignments

| Port | Timer | Function |
|---|---|---|
| 40h | 1 | Read or write count for counter 0 (system clock) |
| 41h | 1 | Read or write count for counter 1 (refresh request) |
| 42h | 1 | Read or write count for counter 2 (speaker tone) |
| 43h | 1 | Input for Control Word, Counter-Latch, or Read-Back commands (command mode register) |
| 48h | 2 | Read or write count for counter 0 (fail-safe timer) |
| 49h | 2 | Read or write count for counter 1 (not used) |
| 4Ah | 2 | Read or write count for counter 2 (speed control) |
| 4Bh | 2 | Input for Control Word, Counter-Latch, or Read-Back commands (command mode register) |

273

## Interval Timer Operating Modes and Initial Values

Table 2-20 lists the six operating modes for the interval counters.

Table 2-20. Interval Timer Operating Modes

| Mode | Function |
|---|---|
| 0 | Out signal on end-of-count (= 0) |
| 1 | Hardware retriggerable one-shot |
| 2 | Rate generator (divide-by-n counter) |
| 3 | Square-wave output |
| 4 | Software-triggered strobe |
| 5 | Hardware-triggered strobe |

Table 2-21 lists initial values for the interval timer counters set up at power-on by the BIOS.

Table 2-21. Interval Timer Initial Values

| Counter | Mode | Control Word | Count | Frequency |
|---|---|---|---|---|
| Interval Timer 1: | | | | |
| 0 | 3 | 36h | 65536 | 18.207 Hz |
| 1 | 2 | 54h (See Note 1) | 19 | 62.799 kHz |
| 2 | 3 | 86h | 1336 | 893.10 Hz |
| Interval Timer 2 (See Note 2): | | | | |
| 0 | x | x | x | x Hz |
| 1 | x | x | x | x Hz |
| 2 | 1 | 92h | 02-35h | 4 MHz |

Notes: 1. Only the least-significant byte of the divisor is loaded.
2. Timer 2 is not programmed at power-on.

Programming the interval timer is a simple process:

1. Write a control word.
2. Write an initial count for each counter.
3. Load the least- and most-significant bytes of the 16-bit counter in two steps (writes).

## Interval Timer Control Word Format

The Control Word specifies the counter, the operating mode, the order and size of the COUNT value, and whether it counts down in a 16-bit or binary-coded decimal (BCD) format.

```
   BIT
76543210
||||||||
|||||||└── 0 = Binary Countdown
|||||||    1 = BCD Countdown
||||└┴┴─── 000 = Mode 0
||||       001 = Mode 1
||||       010 = Mode 2
||||       011 = Mode 3
||||       100 = Mode 4
||||       101 = Mode 5
||└┴────── 00 = Counter-Latch command
||         01 = R/W least-significant byte
||         10 = R/W most-significant byte
||         11 = R/W least-, then most-significant byte
└┴──────── 00 = Select counter 0
           01 = Select counter 1
           10 = Select counter 2
           11 = Read-Back command
```

## Interval Timer Counter-Latch Command

The Counter-Latch command latches the count at the time the command is received. The count is held in the OL registers until read.

```
   BIT
76543210
||||└┴┴┴── 0000 (Not used)
||└┴────── 00 = Designates this byte as
||              a Counter-Latch command
└┴──────── 00 = Latch Counter 0
           01 = Latch Counter 1
           10 = Latch Counter 2
           11 = Select Read-Back command
                (See Read-Back command)
```

275

## Interval Timer Read-Back Command

The Read-Back command causes the count or status of the counters to be latched in the OL registers until read. A single Read-Back can latch the count or status of all three counters.

```
   BIT
76543210
||||||||
|||||||└─ 0 (Reserved)
||||||└── 1 = Select Counter 0
|||||└─── 1 = Select Counter 1
||||└──── 1 = Select Counter 2
|||└───── 0 = Latch Status of selected counters
||└────── 0 = Latch Count of selected counters
└┴─────── 11 = Specifies this command
```

The status byte latched into OL has the format:

```
   BIT
76543210
||||||||
|||||||└─ 0 = BINARY count down format
|||||||   1 = BCD count down format
||||└┴┴── 000 = Mode 0
||||      001 = Mode 1
||||      010 = Mode 2
||||      011 = Mode 3
||||      100 = Mode 4
||||      101 = Mode 5
||└┴───── 00 = Counter-Latch command
||        01 = R/W least-significant byte
||        10 = R/W most-significant byte
||        11 = R/W least, then most-significant byte
|└─────── Returned Status:
|         0 = CR contents not moved into CE
|         1 = CR contents are moved into CE
└──────── 0 = OUT Pin is 0 (low)
          1 = OUT Pin is 1 (high)
```

276

## 80287 Numeric Coprocessor

The 80287 Numeric Coprocessor is a high-performance numeric processor extension that adds floating-point, extended integer, and BCD data-type support to the 80386. The 8-MHz 80287 provides a significant performance improvement for floating-point-intensive applications, such as engineering, CAD/CAM, spreadsheet, or scientific applications.

The 80287 automatically executes all numeric instructions as they are encountered. The 80287 responds to particular I/O addresses (800000F8h to 800000FFh) automatically generated by the 80386.

The 80287's ERROR- signal is connected to IRQ13 (INT 75h). INT 75h performs an EOI function to the 8259A interrupt controller and resets the 80287 error condition by writing a 0 to the port at F0h. An INT 02h (NMI) is then performed for compatibility with 8087 exception handlers. This method is used to provide compatibility with 8088-/8086- coprocessor exceptions.

An output to port F0h will clear the numeric coprocessor BUSY- signal. An output to port F1h will reset the 80287. This is the only way to return the 80287 to Real mode operation after the execution of a FSETPM instruction.

A socket is provided on the system board for the 80287. System board DIP switch 2 indicates whether an 80287 is installed. System board DIP switch 3 selects an operating speed for the numeric coprocessor of 8 MHz for the 80287-8 or 4 MHz for the 80287-3. See the section entitled "Switches" in this chapter.

If, during power-on initialization, the 80287-installed switch (DIP switch 2) disagrees with the physical installation, the following message appears:

702 - Coprocessor Detection Error, Please Check Installation

## System ROMs

The COMPAQ DESKPRO 386 system board contains two 16-KB ROMs, one for odd addresses and one for even. The ROMs are addressed via the 16-bit bus at address F00000h. An image of the ROMs is doubly mapped at F80000h. See the section entitled "ROM Mapping" in Chapter 3 for more information regarding dual mapping of the ROM and RAM.

277

## Real-Time Clock and Configuration Memory

The COMPAQ DESKPRO 386 system board uses the Motorola MC146818 device as its real-time clock (RTC) and configuration memory. This device has a total of 64 bytes of memory. The first 14 memory locations are used for the RTC. The remaining 50 memory locations are used for the system configuration.

A value can be written to or read from all 64 registers except:

- Status registers C and D, which are read only
- Bit 7 of status register A, which is read only
- The high-order bit of the seconds byte, which is read only

Figure 2-11 shows the address map for the MC146818 real-time clock.

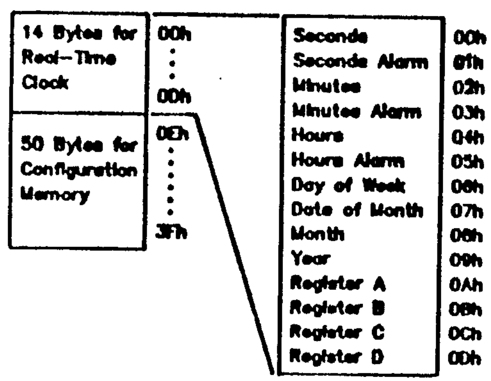


Figure 2-11. MC146818 Memory Map

To prevent a loss of time or system configuration, the MC146818 uses power obtained from a battery mounted inside the computer. The battery maintains the time and system configuration during power loss for as long as three years. The system does NOT charge the battery.

NOTE: If the battery is disconnected or fails for any reason, the time and system configuration must be reprogrammed into the MC146818.

To reset the time or system configuration, run the COMPAQ SETUP Utility. To reset the time, use either the SETCLOCK (DOS) command or the appropriate INT 1Ah (BIOS) command.

The MC146818 is an I/O-mapped device. Use the 80386 OUT and IN instructions to write or read to the memory in this device. Note that the port 70h is shared between the NMI mask register and the configuration memory address register. To leave the NMI mask enabled, make sure that bit 7 of the RTC address is set to 0.

To write a value into configuration memory:

1. Use OUT 70h, AL to specify the memory location to change. 70h is the port number; AL is the memory location.
2. Use OUT 71h, AL to specify the data for the memory location. 71h is the port number; AL is the data.

Do not use word output instructions such as OUT 70h, AX to simultaneously load the memory location and data. Word outputs cause back-to-back bus cycles that do not allow the MC146818 sufficient recovery time.

To read the contents of a memory location:

1. Use OUT 70h, AL to specify the memory location to read. 70h is the port number; AL is the memory location.

2. Use IN AL, 71h to read the data stored in that location. The returned data is placed in the AL register of the 80386.

Table 2-22 summarizes the types of information stored in the MC146818's memory locations.

Table 2-22. MC146818 Real-Time Clock Memory Locations

| Register | Function |
|---|---|
| 00h | Seconds |
| 01h | Seconds alarm |
| 02h | Minutes |
| 03h | Minutes alarm |
| 04h | Hour |
| 05h | Hour alarm |
| 06h | Day of week |
| 07h | Date of month |
| 08h | Month |
| 09h | Year |
| 0Ah | Status register A |
| 0Bh | Status register B |
| 0Ch | Status register C |
| 0Dh | Status register D |
| 0Eh | Diagnostic byte |

(Continued)

Table 2-22. MC146818 Real-Time Clock Memory Locations (Concluded)

| Register | Function |
|---|---|
| 0Fh | Reset code byte |
| 10h | Diskette drive type |
| 11h | Reserved |
| 12h | Fixed disk drive type |
| 13h | Reserved |
| 14h | Equipment installed |
| 15h,16h | Base memory size |
| 17h,18h | Extended memory installed |
| 19h | Drive C type if extended drive type |
| 1Ah | Drive D type if extended drive type |
| 1Bh-2Ch | Reserved |
| 20h | Additional flags |
| 2Eh,2Fh | Checksum value |
| 30h,31h | Memory more than 1 MB |
| 32h | Century, part of time and date function |
| 33h | System information |
| 34h-3Fh | Reserved |

**STATUS REGISTER BYTE 0Ah**

BIT 76543210

- Bits 3–0: These bits specify the divider frequency for the clock. The default value is 0110 (1.024 kHz)
- Bits 6–4: These bits specify the time base frequency. The default value is 010 (32.768 kHz)
- Bit 7:
  - 0 = OK to read device
  - 1 = Time update in progress

**STATUS REGISTER BYTE 0Bh**

BIT 76543210

- Bit 0:
  - 0 = No Daylight Savings Time (default)
  - 1 = Daylight Savings Time Selected
- Bit 1:
  - 0 = 12-hour Mode
  - 1 = 24-hour Mode (default)
- Bit 2:
  - 0 = Time and Date in BCD Format (default)
  - 1 = Time and Date in Binary Format
- Bit 3:
  - 0 = Output Disabled (default)
  - 1 = Enables Frequency Output Selected by Status Register A
- Bit 4:
  - 0 = Disable End-of-update Interrupt (default)
  - 1 = Enable End-of-update Interrupt
- Bit 5:
  - 0 = Disable Alarm Interrupt (default)
  - 1 = Enable Alarm Interrupt
- Bit 6:
  - 0 = Interrupt Disabled (default)
  - 1 = Enable Interrupt at frequency specified by Status Register A
- Bit 7:
  - 0 = Normal Operation
  - 1 = Disable Time Updating so that time can be set

STATUS REGISTER BYTE 0Ch--READ-ONLY

```
  BIT
76543210
||||└┴┴┴── 0000 (Not used)
|||└────── 1 = End-of-update Interrupt Flag
||└─────── 1 = Alarm Interrupt Flag
|└──────── 1 = Periodic Interrupt Flag
└───────── 1 = Interrupt Output Signal Active
```

STATUS REGISTER BYTE 0Dh--READ-ONLY

```
  BIT
76543210
|└┴┴┴┴┴┴── 000000 (Not used)
└───────── 1 = Real-time Clock has not lost power
           0 = Real-time Clock has lost power
```

NOTE: Reading the status register automatically resets bit 7.

CONFIGURATION BYTE 0Eh--DIAGNOSTIC STATUS BYTE

```
  BIT
76543210
||||||└┴── 00 (Not used)
|||||└──── 1 = Time is not valid
||||└───── 1 = Fixed Disk Drive Controller Error
|||└────── 1 = The amount of memory detected
|||            during the system initialization
|||            is not the same as the amount
|||            specified in the configuration
|||            memory
||└─────── 1 = System initialization equipment
||             check does not match the
||             equipment specified in the
||             configuration memory
|└──────── 1 = Checksum bad--ROM error
└───────── 1 = Real-time clock has lost power
```

282

CONFIGURATION BYTE 0Fh--RESET CODE BYTE

The reset code tells the system what to do after the CPU is reset. The reset code identifies the type of, or reason for, reset. The reset code also provides a method of resetting the system without losing previously stored data or to return the system to the Real mode from the Protected mode. Although the reset logic to return the processor to Real mode exists in COMPAQ DESKPRO 386, it is there only for compatibility with 80286-based products. The 80386 itself provides an alternate method (resetting the PE bit) that is much more efficient.

```
   BIT
76543210
└┴┴┴┴┴┴┴── 00h = Normal power-on reset
           04h = Proceed to load DOS from disk
           05h = Jump to reset vector 0040:0067
                 after initializing both 8259
                 interrupt controllers.
           09h = Block Move return
           0Ah = Jump to reset vector 0040:0067
                 without initializing the 8259
                 interrupt controllers.
```

CONFIGURATION BYTE 10h--DISKETTE DRIVE TYPE

```
   BIT
76543210
││││└┴┴┴── Secondary (drive 2) Diskette Drive Type:
││││       0000 = No diskette drive
││││       0001 = 360-KB Diskette Drive
││││       0010 = 1.2-MB Diskette Drive
││││       0011 = Reserved
││││         :
││││       1111 = Reserved
└┴┴┴────── Primary (drive 1) Diskette Drive Type
           (same values as above)
```

223

## CONFIGURATION BYTE 12h--FIXED DISK DRIVE TYPE

| Bits | Function |
|---|---|
| 7..4 | Value defines first fixed disk drive type: |

| Value | Type |
|---|---|
| 0000 | None |
| 0001..1110 | 1..14 |
| 1111 | Other type--see byte 19h |

| Bits | Function |
|---|---|
| 3..0 | Value defines second fixed disk drive type (use table above) and byte 1Ah. |

**NOTE:** This byte identifies the type of fixed disk drive used, not the capacity. The 40-MB and 130-MB drives available for the COMPAQ DESKPRO 386 are drive types 17 and 25, respectively. As a result, byte 12h always contains FFh when these drives are used.

## CONFIGURATION BYTE 14h--EQUIPMENT INSTALLED

BIT
76543210

0 = No diskette drives are installed
1 = Diskette drives are installed

0 = No 80287 coprocessor
1 = 80287 coprocessor is installed

00 (Not used)

Type of video display controller and operating mode
00 = Reserved
01 = Color/Graphics, 40-column
10 = Color/Graphics, 80-column
11 = Monochrome/text

Number of diskette drives installed
00 = 1 drive
01 = 2 drives
10 = Reserved
11 = Reserved

## CONFIGURATION BYTES 15h AND 16h--BASE MEMORY SIZE

Bytes 15h and 16h comprise a 16-bit value that specifies the base memory size in increments of 1 KB (1024 bytes). The word is stored with the least-significant byte at the lower address (15h in this case).

The following table lists the valid memory sizes for the base memory size:

| Byte 16h | Byte 15h | Memory Size (in Kilobytes) |
|---|---|---|
| 00h | 80h | 128 |
| 01h | 00h | 256 |
| 02h | 00h | 512 |
| 02h | 80h | 640 |

## CONFIGURATION BYTES 17h AND 18h--EXTENDED MEMORY SIZE

Bytes 17h and 18h comprise a 16-bit value that specifies the extended memory size in increments of 1KB (1024 bytes). The word is stored with the least-significant byte at the lower address (17h in this case). The extended memory size does not include the COMPAQ Built-in Memory or the 128 KB reserved for system use. See Chapter 3, Memory, for a description of the memory architecture.

The following table lists the valid extended memory sizes for memory on all memory option boards:

| Byte 18h | Byte 17h | Memory Size (in Kilobytes) |
|---|---|---|
| 02h | 00h | 512 |
| 04h | 00h | 1024 |
| 06h | 00h | 1536 |
| 08h | 00h | 2048 |
| . | . | -- |
| . | . | -- |
| 38h | 00h | 14336 |

CONFIGURATION BYTE 19h --DRIVE C TYPE

If the disk drive is an extended drive type (type 15 or greater) bits <4..7> of byte 12h contain 1111b.

The type of drive in drive C appears in byte 19h. For a 40-MB fixed disk drive type 17, this byte contains 11h, or the hex value of the type. For a 130-MB fixed disk drive type 25, this byte contains 19h.

CONFIGURATION BYTE 1Ah --DRIVE D TYPE

If the disk drive is an extended drive type (type 15 or greater) bits <4..7> of byte 12h contain 1111b.

The type of drive in drive D appears in byte 1Ah. For a 130-MB fixed disk drive type 25, this byte contains 19h, or the hex value of the type. For a 40-MB fixed disk drive type 17, this byte contains 11h.

CONFIGURATION BYTE 2Dh--ADDITIONAL FLAGS

This byte allows the configuration of special features.

| BIT | Value |
|---|---|
| 0 | 0 = Non-dual-mode monitor installed<br>1 = COMPAQ Dual-Mode Monitor installed |
| 1 | 0 = Disable keyclick<br>1 = Enable keyclick |
| 2 | 0 = Non-COMPAQ video display controller installed<br>1 = COMPAQ video display controller installed |
| 7–3 | 00000 = Reserved |

CONFIGURATION BYTES 2Eh AND 2Fh--MEMORY CHECKSUM

Value stored is the checksum for memory addresses 10h..2Dh.

Byte 2Eh = High byte of checksum

Byte 2Fh = Low byte of checksum

## CONFIGURATION BYTES 30h AND 31h--MEMORY OVER 1 MB

Value indicates amount of system memory in excess of 1 MB. These bytes are updated by the BIOS during the power-on sequence.

| Byte 31h | Byte 30h | Memory Size (In Kilobytes) |
|---|---|---|
| 02h | 00h | 512 |
| 04h | 00h | 1024 |
| 06h | 00h | 1536 |
| 08h | 00h | 2048 |
| 0Ah | 00h | 2560 |
| 0Ch | 00h | 3072 |
| 0Eh | 00h | 3584 |
| 10h | 00h | 4096 |
| 12h | 00h | 4608 |
| 14h | 00h | 5120 |
| 16h | 00h | 5632 |
| 18h | 00h | 6144 |
| 1Ah | 00h | 6656 |
| 1Ch | 00h | 7168 |
| 1Eh | 00h | 7680 |
| . | . | . |
| . | . | . |
| 38h | 00h | 14336 |

## CONFIGURATION BYTE 32h--DATE, CENTURY

This is the century part of the current time and date encoded in BCD (binary-coded decimal). The BIOS sets and reads this value.

## CONFIGURATION BYTE 33h--SYSTEM INFORMATION

```
  BIT
76543210
||||||||
||└┴┴┴┴┴── 000000 (Reserved)
||
|└──────── Used by SETUP program
|
└───────── 1 = More than 1 MB of memory
               is installed
```

207

## Keyboard Controller and Interface

The COMPAQ DESKPRO 386 supports two keyboards. They are the:

- COMPAQ Enhanced Keyboard (101 keys domestic/102 keys international)
- COMPAQ 84-Key Keyboard

For both keyboards, an Intel 8042 single-chip microcomputer provides:

- An output port for system-function control and keyboard communication
- An input port to read system-function status
- A test port to read the status of the keyboard clock and data lines

The 8042 has internal ROM that is custom-programmed with keyboard scan codes and operating instructions. Figure 2-12 is a simplified functional block diagram of the keyboard controller.

The 8042 communicates with the keyboard in a bidirectional, serial format with a synchronizing clock. The 8042 receives serial data, checks its parity, translates the 11-bit scan codes from the keyboard into system codes, and interrupts the 80386 to transfer data into the system. Both the COMPAQ 84-Key Keyboard and the Enhanced Keyboard use 11-bit scan codes.

Chapter 5, Keyboards, contains the following information for both keyboards:

- Keycodes
- Specifications
- Responses to 8042 commands

The remainder of this section covers the operation of the 8042.

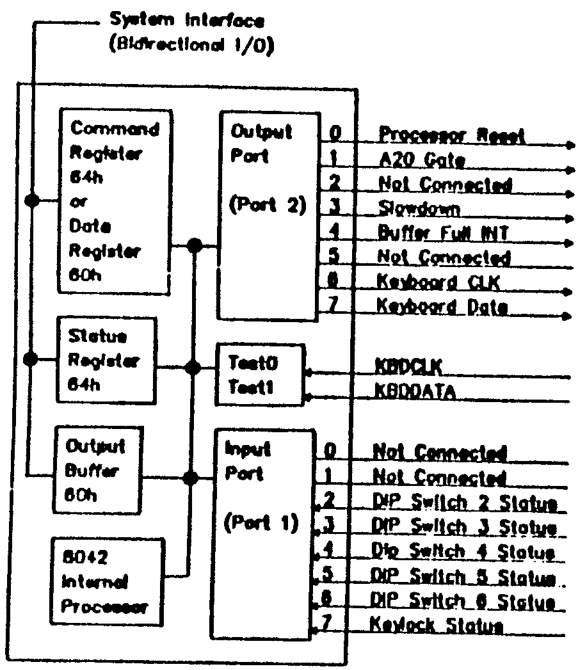


Figure 2-12. Keyboard Controller Functional Block Diagram

## 8042-to-Keyboard Interface

The 8042 and the keyboard are connected by a four-conductor, shielded cable that carries a power line (+5 VDC), a ground line, a data signal, and a clock signal.

The 8042 and the keyboard communicate in a "handshaking" fashion, using the data and clock lines for synchronous serial communication. The data and clock lines are driven by open-collector drivers at both ends of the cable in a wired-OR fashion.

The keyboard supplies the synchronizing clock for data transmissions in either direction.

See Chapter 5, Keyboards, for a complete description of the keyboard scan codes.

0 260 568

229

Figure 2-13 shows a simplified schematic of the data and clock circuits.

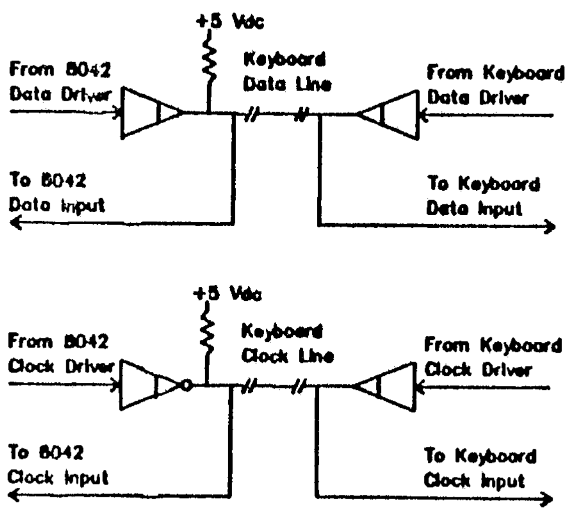


Figure 2-13. Simplified Schematic of the Data and Clock Circuits

## 11-Bit Data Transmission Format

The COMPAQ DESKPRO 386 keyboards transmit and receive data in an 11-bit data format. The 8042 automatically tests for keyboard type by monitoring the data format. Figure 2-14 shows 11-bit data formats with sample data transfers.

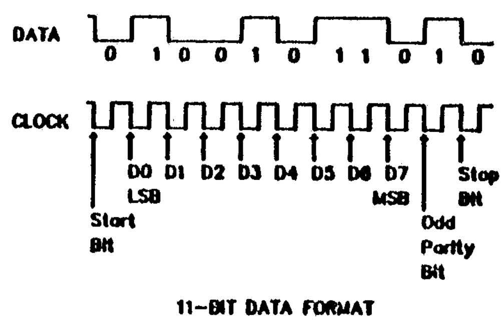


Figure 2-14. 11-bit Data Formats

Table 2-23 lists the 11-bit data transfer timing parameters.

Table 2-22. Keyboard Data Timing Parameters

| Parameter | 11-Bit |
|---|---|
| Clock timing (minimum), Falling edge to falling edge | 60 us |
| Clock timing (minimum), Falling edge to rising edge | 5 us |
| Transmission time (maximum) First edge to completion | 2 ms |
| Time data must be valid before falling clock edge | 0 us |
| Time data must be valid after falling clock edge | 5 us |

## 8042 Port Functions

The 8042 has three ports:

- An 8-bit output port for system function control and keyboard communication
- An 8-bit input port to read system function status
- A 2-bit test port to read the status of the keyboard clock and data lines

To write to the output port:

1. Write command D1h (next byte is a value byte) to I/O address 64h.
2. Write the desired value for the output port to port address 60h.

To read the 8042 output port value:

1. Write command D0h (transfer the current output port values to the 8042 output buffer) to port address 64h.
2. Read the 8042 output buffer (port address 60h).

Before outputting commands and data to port 64h and 60h, the code should first make sure that the 8042 input buffer is empty. See the section entitled "8042 Programming Example" for more information.

When programming the state of A20 via the 8042 output port, the program should be careful to wait until A20 has been set to the desired value. That is, A20 should be enabled or disabled before program operations that require A20 to be in the specified state continue. For example, several programs enable A20 when entering the Protected mode to access memory beyond address 10000h. These programs must wait until A20 is actually enabled by the hardware before proceeding to access memory beyond address 10000h.

291

The recommended method to ensure that A20 has been set to the desired value is to issue a null command (FFh) to the 8042 following the completion of the write output port (D1h) command sequence. When the 8042 accepts the null command, the program can be assured that the previous command (write output port) has completed and that A20 has been set by the hardware to the desired value.

Figure 2-15 shows the bit values for the output port of the 8042.

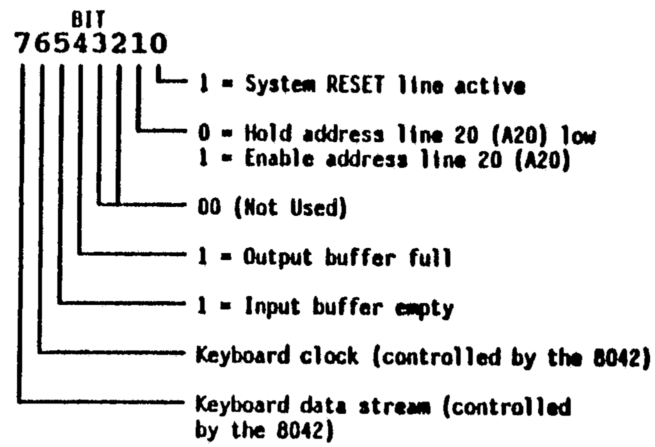


Figure 2-15. 8042 Output Port - Bit Definition

To read the 8042 input port value, send the following commands or values to the 8042 (port address 64h):

1. Write command C0h (transfer the current input port values to the 8042 output buffer).
2. Read the 8042 output buffer (port address 60h).

Figure 2-16 shows the format of the byte returned from the 8042 input port.

BIT 76543210

- Bits 1–0: 00 (Not Used)
- Bit 2: 0 = 80287 installed; 1 = 80287 not installed
- Bit 3: 0 = 4-MHz 80287 speed; 1 = 8-MHz 80287 speed
- Bit 4: 0 = AUTO speed selected; 1 = HIGH speed selected
- Bit 5: 0 = System board DIP switch 5 ON; 1 = System board DIP switch 5 OFF
- Bit 6: 0 = COMPAQ dual-scan display; 1 = Non-COMPAQ display
- Bit 7: Security Lock; 0 = Locked; 1 = Unlocked

Figure 2-16. 8042 Input Port - Bit Definition

To read the 8042 TEST input port value, send the following commands or values to the 8042 (port address 64h):

1. Write command E0h (transfer the current test input port values to the 8042 output buffer).
2. Read the 8042 output buffer (port address 60h).

Figure 2-17 shows the format of the byte returned by the 8042 TEST input port.

BIT 76543210

- Bit 0: Test0--Keyboard clock stream
- Bit 1: Test1--Keyboard data stream
- Bits 7–2: 000000 (Not used)

Figure 2-17. 8042 Test Input Port - Bit Definition

## Programming the 8042

The 8042 is I/O-mapped at port addresses 60h and 64h.

Prior to writing a command or data to ports 60h or 64h, the 8042 Status register must indicate "Input Buffer Empty". Also, prior to reading data from port 60h, test the 8042 Status register to ensure a "Data in Buffer" condition.

## Port 60h, Data I/O Register

Use the 80386's IN instruction to read data from the 8042's output buffer. Data in the data I/O register is from the keyboard, unless the 8042 has been given a command such as 20h, Read Command byte.

Use the 80386's OUT instruction to send data to the keyboard, unless the 8042 has been given a multi-byte command such as 60h, Write Command Byte. To give a multi-byte command to the keyboard, write the first command byte to port 64h and the second command byte to port 60h.

## Port 64h, Command/Status Register

The following pages describe the format for command/status register (port 64h) I/O interactions with the 8042.

Use the 80386's IN instruction to read the status of the 8042 and the keyboard (input from port 64h).

Use the 80386's OUT instruction to give a command to the 8042 (output to port 64h). Writing to this address indicates that the next byte written to port 60h is a command.

Most commands involve a single write step. However, some commands do require a second step, such as a subsequent 8042 register read or write.

Figure 2-18 shows the 8042 status register. Figure 2-19 shows the 8042 command byte. Table 2-24 lists the 8042 command codes.

| Bit | Function |
|---|---|
| 0 | 0 = No new data in buffer<br>1 = Data in buffer (input port 60h) |
| 1 | 0 = Input buffer empty (output port 60h or 64h)<br>1 = Input buffer full (output port 60h or 64h) |
| 2 | 0 = Power-on reset (cold start)<br>1 = Software reset (warm start) |
| 3 | 0 = Output buffer has data<br>1 = Output buffer has command |
| 4 | 0 = Security lock engaged<br>1 = Security lock not engaged |
| 5 | 1 = Transmission time-out error (see table below) |
| 6 | 1 = Receive time-out error. Keyboard data transmission started, but did not finish in 2 ms |
| 7 | 1 = Parity error detected (11-bit format only). If an error is detected, a Resend command is sent to the keyboard once only, as an attempt to recover. |

Transmission time-out error:

| Bit 5 | Bit 6 | Bit 7 | Cause |
|---|---|---|---|
| 1 | 0 | 0 | No clock |
| 1 | 1 | 0 | Clock ok; no response |
| 1 | 0 | 1 | Clock ok; parity error |

Figure 2-18. 8042 Status Register (Input Port 64h)

| Bit | Function |
|---|---|
| 0 | 0 = Do not generate interrupt<br>1 = Generate interrupt when output buffer full |
| 1 | 0 (Reserved) |
| 2 | System flag--the value written to this bit is written into the corresponding bit of the status register. |
| 3 | 0 = Obey Security Lock state<br>1 = Ignore Security Lock |
| 4 | 0 = Enable keyboard<br>1 = Disable keyboard |
| 5 | 0 = Use 11-bit keyboard codes (80386- and 80286-based products)<br>1 = Use 8088-/8086-compatible keyboard codes |
| 6 | 0 = Do not convert keyboard codes<br>1 = Convert keyboard codes to the 8088/8086 scan codes |
| 7 | 0 (Reserved) |

Figure 2-19. 8042 Command Byte

295

Table 2-24. 8042 Command Codes (Output Port 64h)

| Code | Function |
|---|---|
| 20h | Put the current command byte on port 60h |
| 60h | Load a new command byte. This is part of a 2-byte operation. To write a new command byte:<br>1) Write 60h to port 64h<br>2) Write the command byte to port 60h |
| A3h | Enable system speed control |
| A4h | Toggle--the 8042 changes its speed-control output port bits between the COMMON mode speed and the speed selected by system board dip switch 4 |
| A5h | Special Read--the 8042 places the real value of port 2 except for bits 4 and 5 which are given a new definition in the output buffer. No output-buffer full is generated.<br>If bit 5 = 0, a 9-bit keyboard is in use<br>If bit 5 = 1, an 11-bit keyboard is in use<br>If bit 4 = 0, the output-buffer-full interrupt is disabled<br>If bit 4 = 1, the output-buffer-full interrupt is enabled |
| AAh | Initialization--the 8042 initializes ports 1 and 2, disables the keyboard and clears the buffer pointers. It then places 55h in the output buffer. |
| ABh | Interface Test--directs the 8042 to test the data and clock lines of the keyboard interface. The output buffer (input port 60h) receives the test results, according to:<br>00h - No error detected<br>01h - The keyboard clock line is stuck low<br>02h - The keyboard clock line is stuck high<br>03h - The keyboard data line is stuck low<br>04h - The keyboard data line is stuck high<br>05h - COMPAQ diagnostic feature<br>Note: The keyboard data line test does not check for line stuck low for 9-bit keyboards. |
| ACh | Diagnostic Dump--Reserved for diagnostic purposes. |
| ADh | Disable Keyboard--sets bit 4 of the 8042's command byte, which disables the keyboard interface. Data is not sent or received until the keyboard is enabled. |

(Continued)

29b

Table 2-24. 8042 Command Codes (Output Port 64h) (Concluded)

| Code | Function |
|---|---|
| AEh | Enable Keyboard--resets bit 4 of the 8042's command byte, which enables the keyboard interface. |
| C0h | Read Input Port--directs the 8042 to transfer the status of the input port and place it in the output buffer (input port 60h). Use this command only when the output buffer is empty. |
| D0h | Read Output Port--directs the 8042 to transfer the current byte in the output port to the output buffer (input port 60h). Use the Read Output Port command only when the output buffer is empty. |
| D1h | Write Output Port--place the next byte written to the 8042 data register (output port 60h) on the 8042 output port. The system speed bits are not set by this command--use commands A1h to A6h for speed functions.<br>**CAUTION**<br>**Setting bit 0 of the 8042 output port 0 puts the system in a reset state until the power is turned off.** |
| E0h | Read Test0 and Test1 Inputs--directs the 8042 to put the current state of Test0 and Test1 into the output buffer (output port 60h). Test0 is bit 0 and Test1 is bit 1. |
| EDh | This is a two-part command to control the state of the Num Lock, Caps Lock, and Scroll Lock LED indicators on the keyboard. The second byte of the command contains the state to which the LED indicators are to be set. The second byte is as follows:<br>bit 0 - 0 = Scroll Lock LED indicator off<br>1 = Scroll Lock LED indicator on<br>bit 1 - 0 = Num Lock LED indicator off<br>1 = Num Lock LED indicator on<br>bit 2 - 0 = Caps Lock LED indicator off<br>1 = Caps Lock LED indicator on<br>bits 3 - 7 = Reserved, should be set to 0. |
| F0h-FFh | Pulse Output Port--the 8042's output port, bits <3..0>, can be pulsed (strobed low) for approximately 2 us. Bits <3..0> of this command byte each represent one bit, or signal of the output port to be pulsed. Note that bit 0 of the 8042's output port 0 is connected to the system reset. Pulsing bit 0 will reset the system. |

## 8042 Programming Example

The following assembly language commands are used to communicate with the 8042:

| | | |
|---|---|---|
| in | al, 64h | read 8042 status register |
| out | 64h, al | output command in al to 8042 |
| in | al, 60h | read keyboard data |
| out | 60h, al | output data in al to keyboard |

In general, before outputting commands and data to ports 64h and 60h, the code should first ensure that the 8042 input buffer is empty and therefore ready to receive a byte. The 8042 input and output status is obtained by reading port 64h.

The following program shows how to "check the keyboard LED indicator status" within a keyboard interrupt handler. The program below does not specify how to handle the following two error conditions:

1. The timeout if the keyboard input buffer never goes empty.
2. The condition if an acknowledgement (ACK) is never received.

The steps involved are:

1. Make sure the 8042 input buffer is empty.
2. Output the ADh command to 8042 (port 64h) to disable keyboard interface.
3. Read the scan code from port 60h.
4. Wait until the 8042 input buffer is empty.
5. Output the EDh command to keyboard (port 60h).
6. Wait until ACK is received from keyboard (port 60h).
7. When the 8042 input buffer is empty, output the option byte.
8. Wait until the second ACK byte is received.
9. When 8042 input buffer is empty, output the AEh command to the 8042.

292

```
REVD_ACK    equ    1        ;     ACK received flag
KBD_TO      equ   -1        ;     KBD timeout value
;
;    Define the data segment
;
data segment
    assume ds:data
kbdflg      db     ?        ;     Keyboard flag byte
optbyt      db     ?        ;     Option byte value
data ends
;
;    Define the code segment
;
code segment
    assume cs:code
_keyint proc   far
     sti                    ;     Enable processor interrupts
;
     Save registers
;
     pusha                  ;     Save general registers
     push     ds            ;     Protect interrupted ds register
     mov      ax,data       ;     Get data segment
     mov      ds,ax         ;     ...into DS
;
;    Disable keyboard interface (AD command) until keyboard
;    interrupt has been processed.  When interrupt processing
;    is complete, enable the interface again by sending an AE command.
;
     call     kbdrdy        ;     Wait until 8042 ready for input
     mov      al,0ADh       ;     Disable keyboard interface
     out      64h,al        ;     Write to 8042 command register
     jmp $ + 2              ;     Allow time between
     jmp $ + 2              ;     Outputs to 8042
     in       al,60h        ;     Get scan code from data register
```

299

```
        push    ax                  ;       Save scancode
        mov     al,20h              ;       Perform EOI
        out     20h,al              ;       ...to master PIC 8259a
        pop     ax                  ;       Restore scan code in al
        cmp     al,0FAh             ;       Q: Receive ACK?
        jne     notack              ;       N:
        or      kbdflg,RCVD_ACK;            Y: Set ACK received
        jmp     keyout              ;       Return from interrupt
notack:
        cmp     al,3Ah              ;       Q: CAPS LOCK make scan code?
        je      capslock            ;       Y: Go handle it
;
;       Test and handle other scan codes here
;       .
;       .
;       .
;
capslock:
        and     kbdflg,not RCVD_ACK  ;  Reset ACK received flag
        call    kbdrdy               ;  Wait until 8042 ready for input
        mov     al,0EDh              ;  Get Set LEDs command
        out     60h,al               ;  Output to kbd data register
getack1:
        test    kbdflg,RCVD_ACK      ;  Q: Received 1st ACK?
        jz      getack1              ;  N: Wait for it
        and     kbdflg,not RCVD_ACK  ;  Y: Reset ACK received flag
        call    kbdrdy               ;  Wait until 8042 ready for input
        mov     al,optbyt            ;  Get option byte
        out     60h,al               ;  Output it to kbd data register
getack2:
        test    kbdflg, RCVD_ACK     ;  Q: Received 2nd ACK
        jz      getack2              ;  N: Wait for it
```

```
keyout:
;
;       Keyboard interrupt processing complete. Enable the keyboard
        interface.
;
        call    kbdrdy
        mov     al,0AEh                 ;   AL=enable interface command
        out     64h,al                  ;   Output to 8042 command register
        pop     ds                      ;   Restore interrupted ds
        popa                            ;   Restore general registers
        iret                            ;   *** RETURN ***
_keyint endp

;*********************************************************************
;Routine to wait until the 8042 is ready for more input.  The routine
;exits with ZF=1 if the 8042 is ready, otherwise ZF=0 if timeout.
;*********************************************************************
kbdrdy pro    near
        push    cx                      ;   Protect cx
        mov     cx,KBD_TO               ;   CX = Time Out value
kbdsta:
        in      al,64h                  ;   Get keyboard status
        test    al,2                    ;   Q: 8042 input buffer is full?
        loopnz kbdsta                   ;   Y: Wait
        pop     cx                      ;   Either ready or timeout
        ret                             ;   *** RETURN ***
kbdrdy  endp

code    ends
        ends
```

301

## Switches

This section is separate for ease of reference.

Switch SW1 is used to configure the system board. Table 2-25 lists the SW1 switch settings. Switches 1,2,3, and 6 should reflect the hardware configuration of the system. Switch 4, the speed control switch, selects the default system speed. HIGH is the full 16-MHz 80386 speed all the time. AUTO is normally at the full 16-MHz CPU speed, but automatically switches to the simulated 8-MHz 80286 speed during diskette operations. This allows time-dependent copy protection schemes to work correctly.

Table 2-25. Switch SW1 on the System Board

| Switch | Setting | Description |
|---|---|---|
| 1 | ON | Fail-safe timer enabled (standard) |
| | OFF | Fail-safe timer disabled |
| 2 | ON | 80287 numeric coprocessor installed |
| | OFF | 80287 numeric coprocessor not installed (standard) |
| 3 | ON | 4-MHz 80287 numeric coprocessor clock speed |
| | OFF | 8-MHz 80287 numeric coprocessor clock speed (standard) |
| 4 | ON | AUTO power-on system speed mode (standard) |
| | OFF | HIGH power-on system speed mode |
| 5 | OFF | Reserved |
| 6 | ON | COMPAQ Dual-Mode Monitor or COMPAQ Color Monitor (standard) |
| | OFF | Non-COMPAQ monochrome display |

0 260 568

## System Connectors

Figures 2-20 through 2-30 show the COMPAQ DESKPRO 386 system board connectors.

| Signal | Pin | Pin | Signal |
|---|---|---|---|
| M16– | D01 | C01 | SBHE– |
| IO16– | D02 | C02 | LA23 |
| IRQ10 | D03 | C03 | LA22 |
| IRQ11 | D04 | C04 | LA21 |
| IRQ12 | D05 | C05 | LA20 |
| IRQ15 | D06 | C06 | LA19 |
| IRQ14 | D07 | C07 | LA18 |
| DACK0– | D08 | C08 | LA17 |
| DRQ0 | D09 | C09 | MRDC– |
| DACK5– | D10 | C10 | MWTC– |
| DRQ5 | D11 | C11 | SD8 |
| DACK6– | D12 | C12 | SD9 |
| DRQ6 | D13 | C13 | SD10 |
| DACK7– | D14 | C14 | SD11 |
| DRQ7 | D15 | C15 | SD12 |
| +5 Vdc | D16 | C16 | SD13 |
| GRAB– | D17 | C17 | SD14 |
| SIGNAL GROUND | D18 | C18 | SD15 |

| Signal | Pin | Pin | Signal |
|---|---|---|---|
| GROUND | B01 | A01 | IOCHK– |
| RESDRV | B02 | A02 | SD7 |
| +5 Vdc | B03 | A03 | SD6 |
| IRQ9 | B04 | A04 | SD5 |
| –5 Vdc | B05 | A05 | SD4 |
| DRQ2 | B06 | A06 | SD3 |
| –12 Vdc | B07 | A07 | SD2 |
| NOWS– | B08 | A08 | SD1 |
| +12 Vdc | B09 | A09 | SD0 |
| GROUND | B10 | A10 | BUSRDY |
| SMWTC– | B11 | A11 | AEN |
| SMRDC– | B12 | A12 | SA19 |
| IOWC– | B13 | A13 | SA18 |
| IORC– | B14 | A14 | SA17 |
| DAK3– | B15 | A15 | SA16 |
| DRQ3 | B16 | A16 | SA15 |
| DAK1– | B17 | A17 | SA14 |
| DRQ1 | B18 | A18 | SA13 |
| REFRESH– | B19 | A19 | SA12 |
| BCLK | B20 | A20 | SA11 |
| IRQ7 | B21 | A21 | SA10 |
| IRQ6 | B22 | A22 | SA9 |
| IRQ5 | B23 | A23 | SA8 |
| IRQ4 | B24 | A24 | SA7 |
| IRQ3 | B25 | A25 | SA6 |
| DAK2– | B26 | A26 | SA5 |
| T/C | B27 | A27 | SA4 |
| BALE | B28 | A28 | SA3 |
| +5 Vdc | B29 | A29 | SA2 |
| OSC | B30 | A30 | SA1 |
| SIGNAL GROUND | B31 | A31 | SA0 |

Figure 2-20. 8-/16-Bit Expansion Bus Connector

303

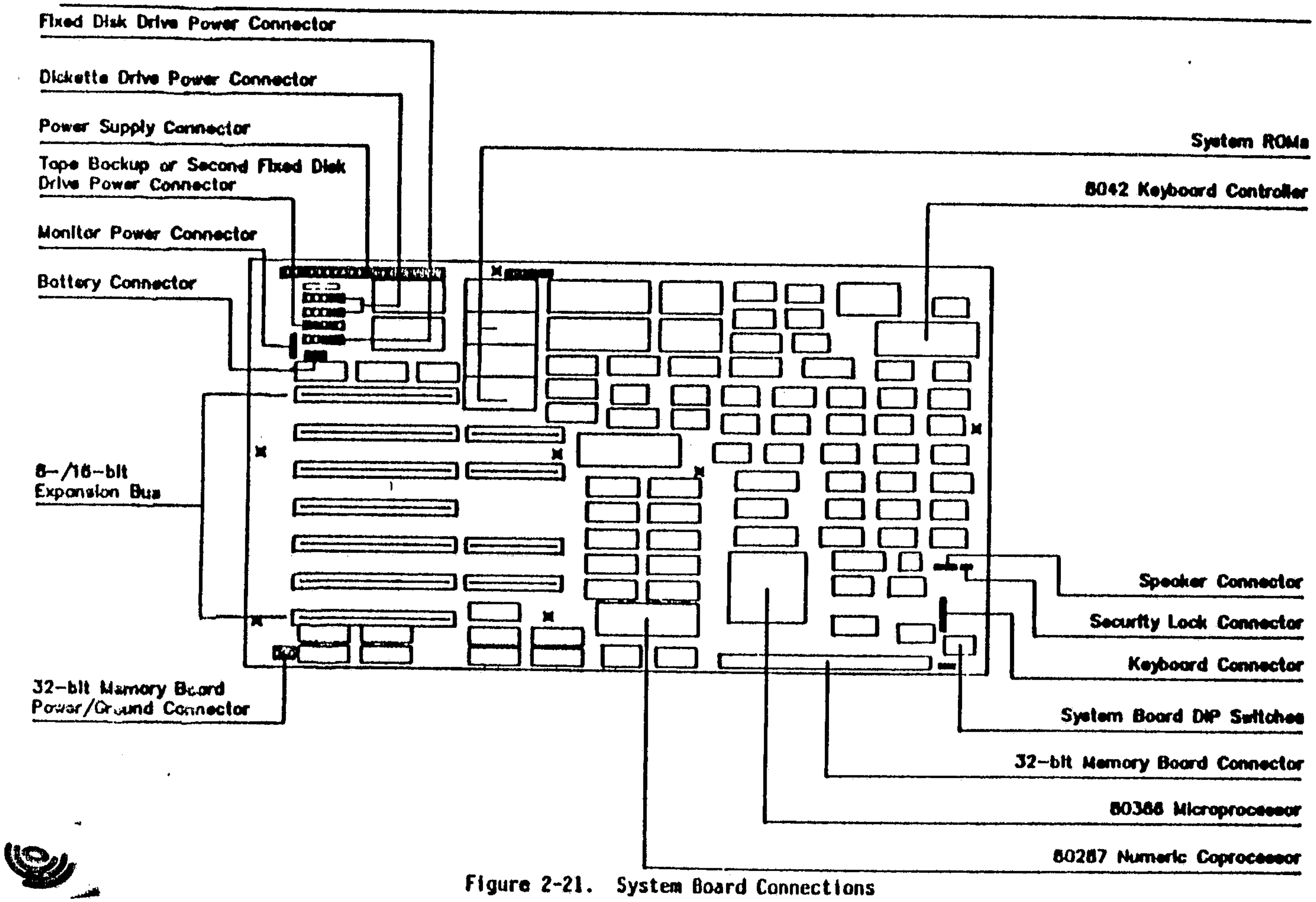


Figure 2-21. System Board Connections

The signal descriptions for connector J300 are described in Chapter 3, Memory.

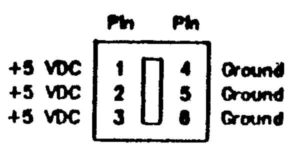


Figure 2-22. 32-Bit Memory Board Power/Ground Connector

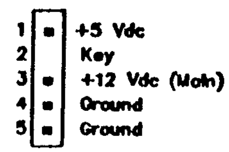


Figure 2-23. J111 and J112, Diskette Drive Power Connector

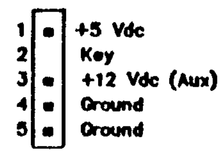


Figure 2-24. J109 and J110, Fixed Disk Drive Power Connectors

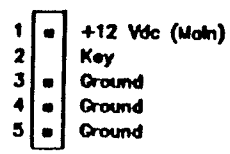


Figure 2-25. J113, Monitor Power Connector

| Pin | Signal |
|---|---|
| 1 | +5 Vdc |
| 2 | Ground |
| 3 | Key |
| 4 | SPK DRV |

Figure 2-26. J115, Speaker Connector

| Pin | Signal |
|---|---|
| 1 | +5 Vdc |
| 2 | +5 Vdc |
| 3 | Key |
| 4 | KBD DATA |
| 5 | Ground |
| 6 | Ground |
| 7 | KBD CLOCK |

Figure 2-27. J116, Keyboard Connector

| Pin | Signal |
|---|---|
| 1 | +5VRST (Not Used) |
| 2 | PWRGOOD |
| 3 | No Connection |
| 4 | Ground |
| 5 | −12 Vdc |
| 6 | Ground |
| 7 | Ground |
| 8 | Ground |
| 9 | Ground |
| 10 | −5 Vdc |
| 11 | +5 Vdc |
| 12 | +5 Vdc |
| 13 | +5 Vdc |
| 14 | +5VS |
| 15 | +12 Vdc (Main) |
| 16 | +12 Vdc (Aux) |
| 17 | +12 Vdc (Aux) |
| 18 | +12 Vdc (Main) |
| 19 | Ground |
| 20 | Ground |

Note: The maximum current for a single conductor (pin) must not exceed 5.0 A per line for +5 Vdc or 4.0 A for other lines.

Figure 2-28. J117, Main Power Connector

306

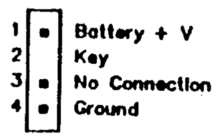


Figure 2-29. J118, Battery Connector

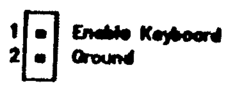


Figure 2-30. J119, Security Lock Connector

## 2.5 SCHEMATICS

Figure 2-31 shows the schematics for the COMPAQ DESKPRO 386 Personal Computer system board. COMPAQ Computer Corporation does not guarantee the accuracy of the schematics. They are provided to aid in a general understanding of the system operation.

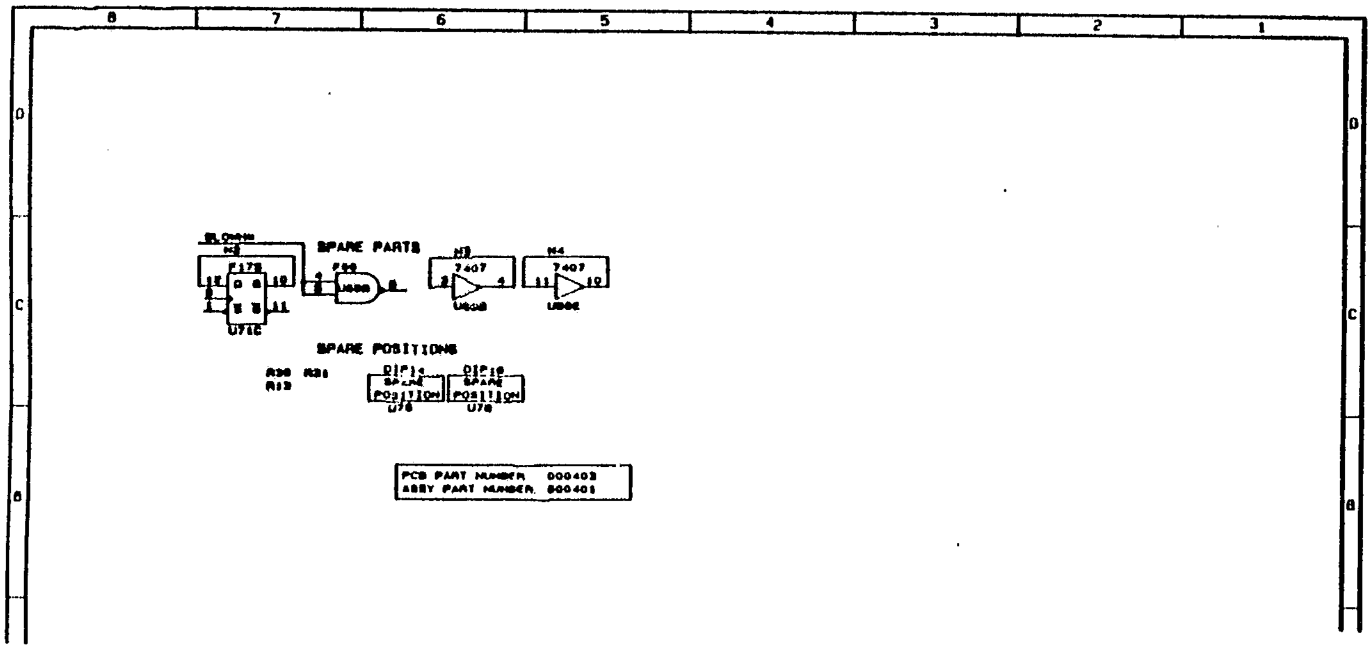


Figure 2-31. COMPAQ DESKPRO 386 Personal Computer System Board Schematics (Page 1 of 12)

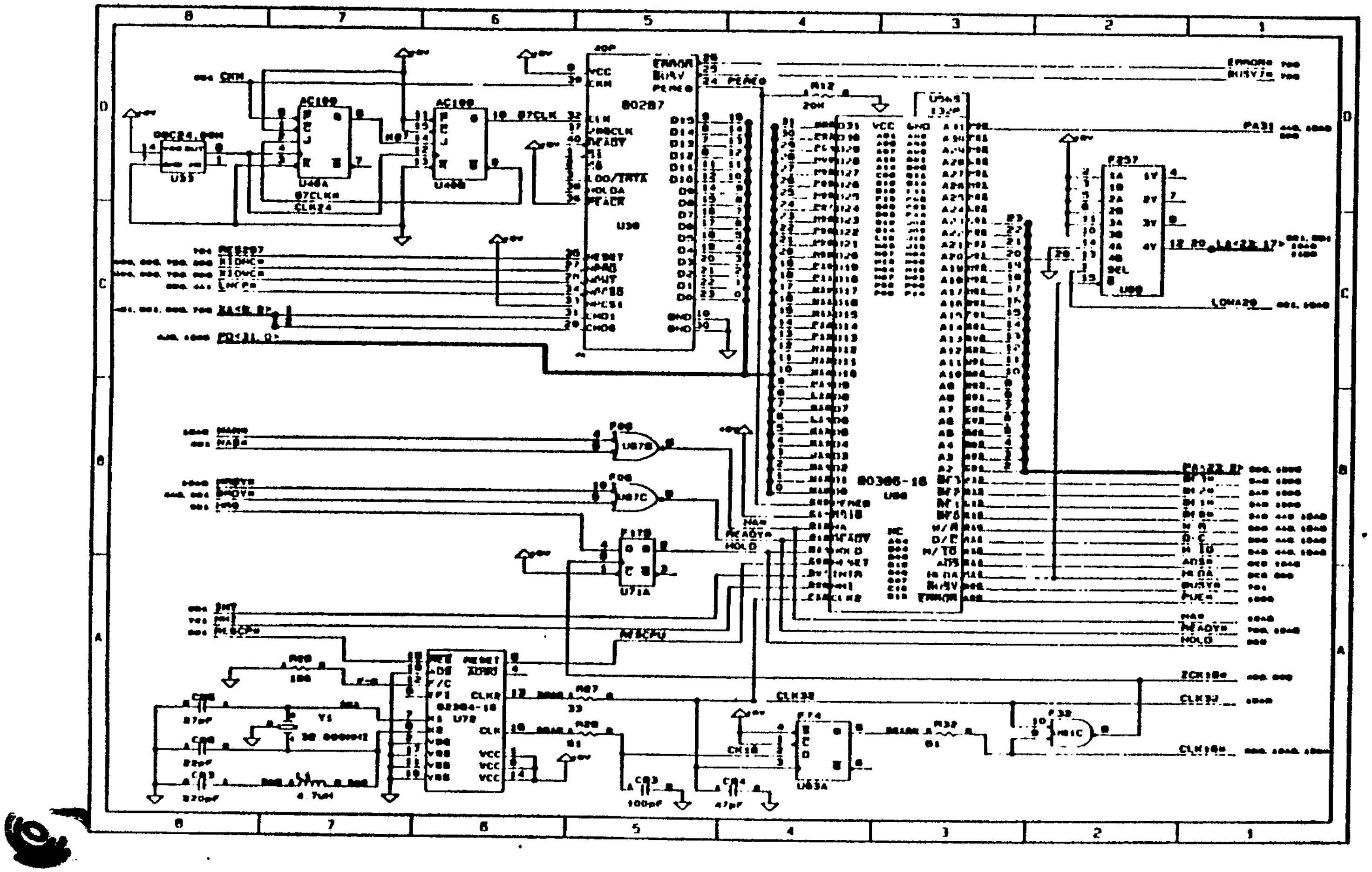


—Figure 2-31. COMPAQ DESKPRO 386 Personal Computer System Board Schematics (Page 2 of 12)

0 260 568

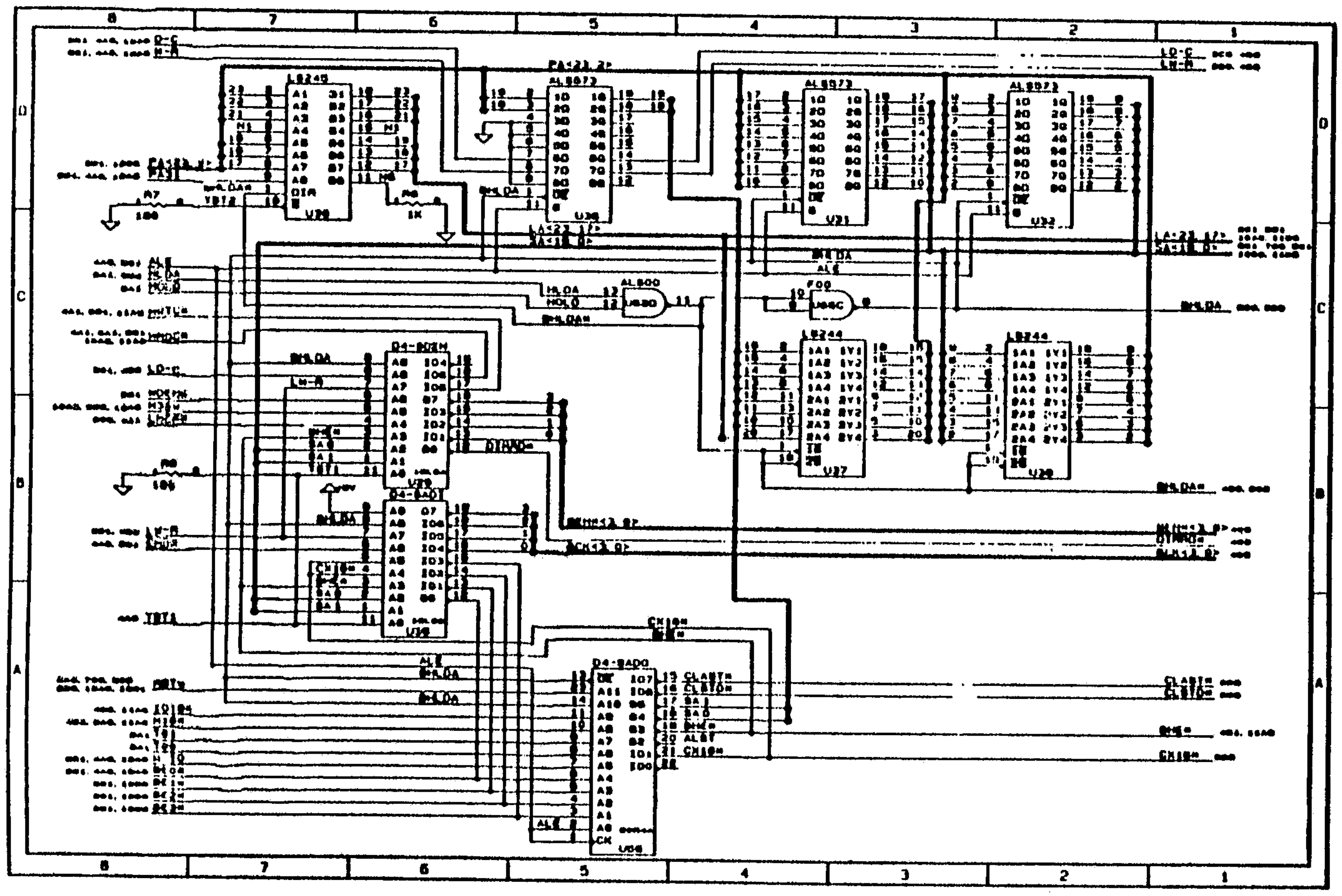

Figure 2-31. COMPAQ DESKPRO 386 Personal Computer System Board Schematics (Page 3 of 12)

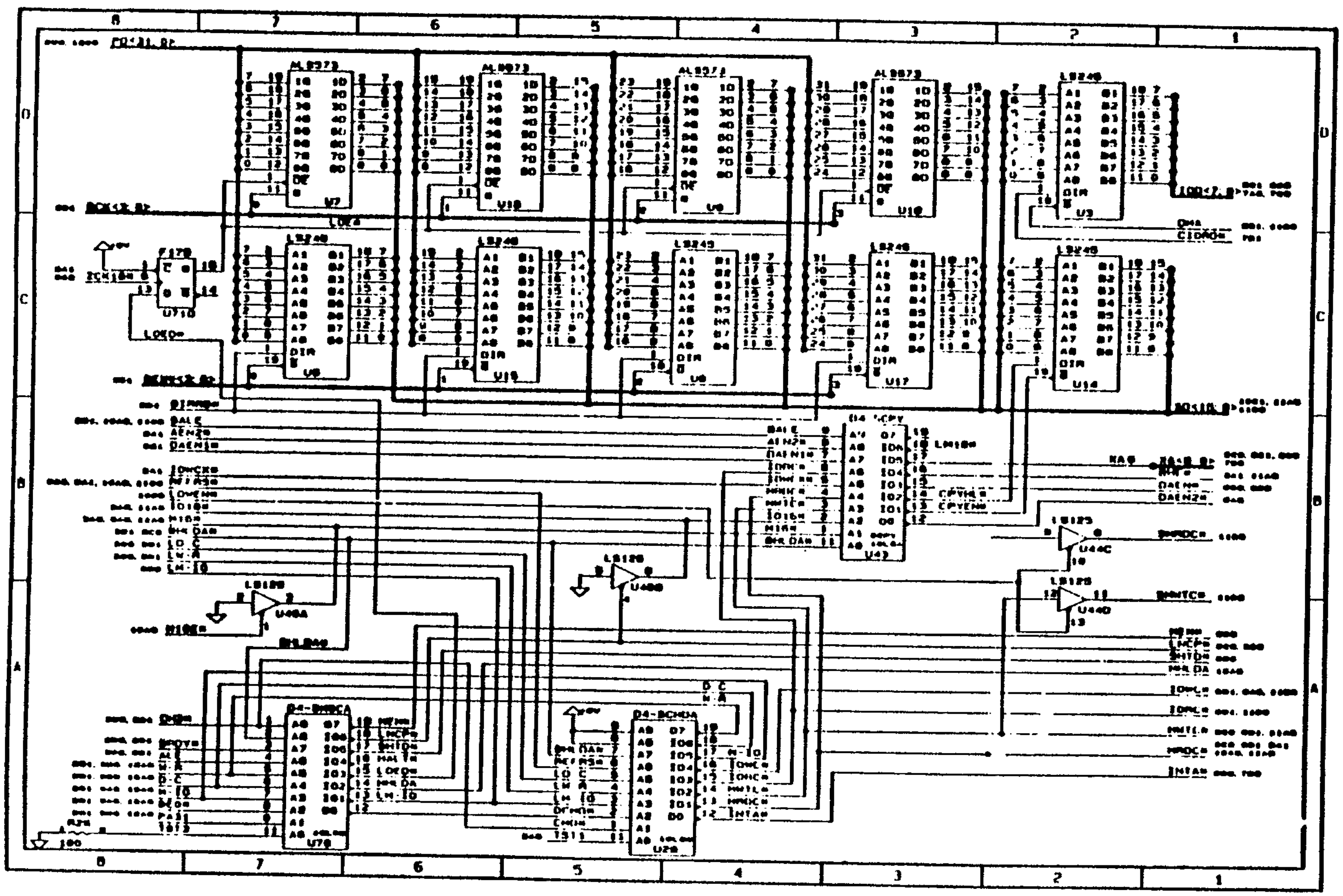

Figure 2-31. COMPAQ DESKPRO 386 Personal Computer System Board Schematics (Page 4 of 12)

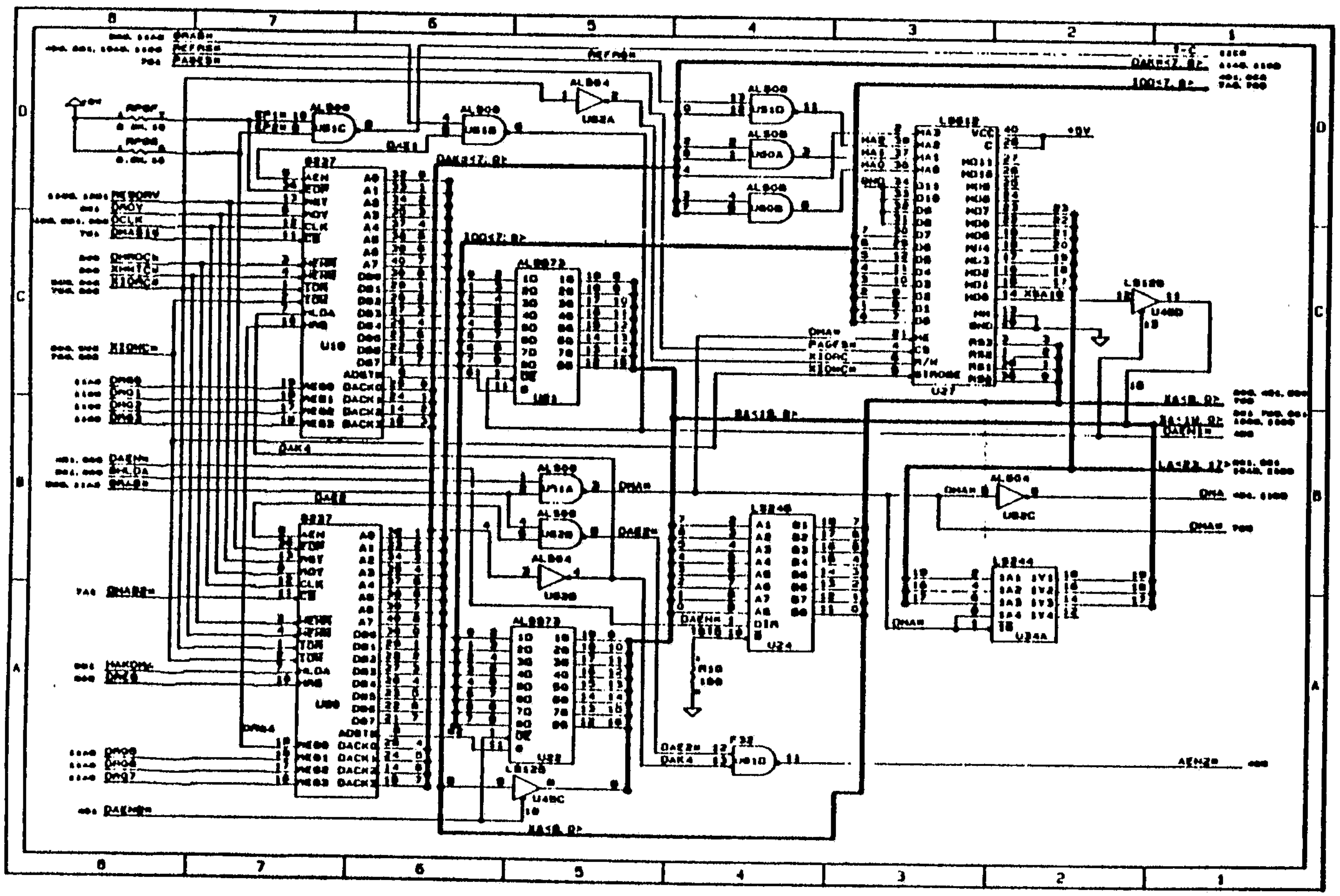

Figure 2-31. COMPAQ DESKPRO 386 Personal Computer System Board Schematics (Page 5 of 12)

312

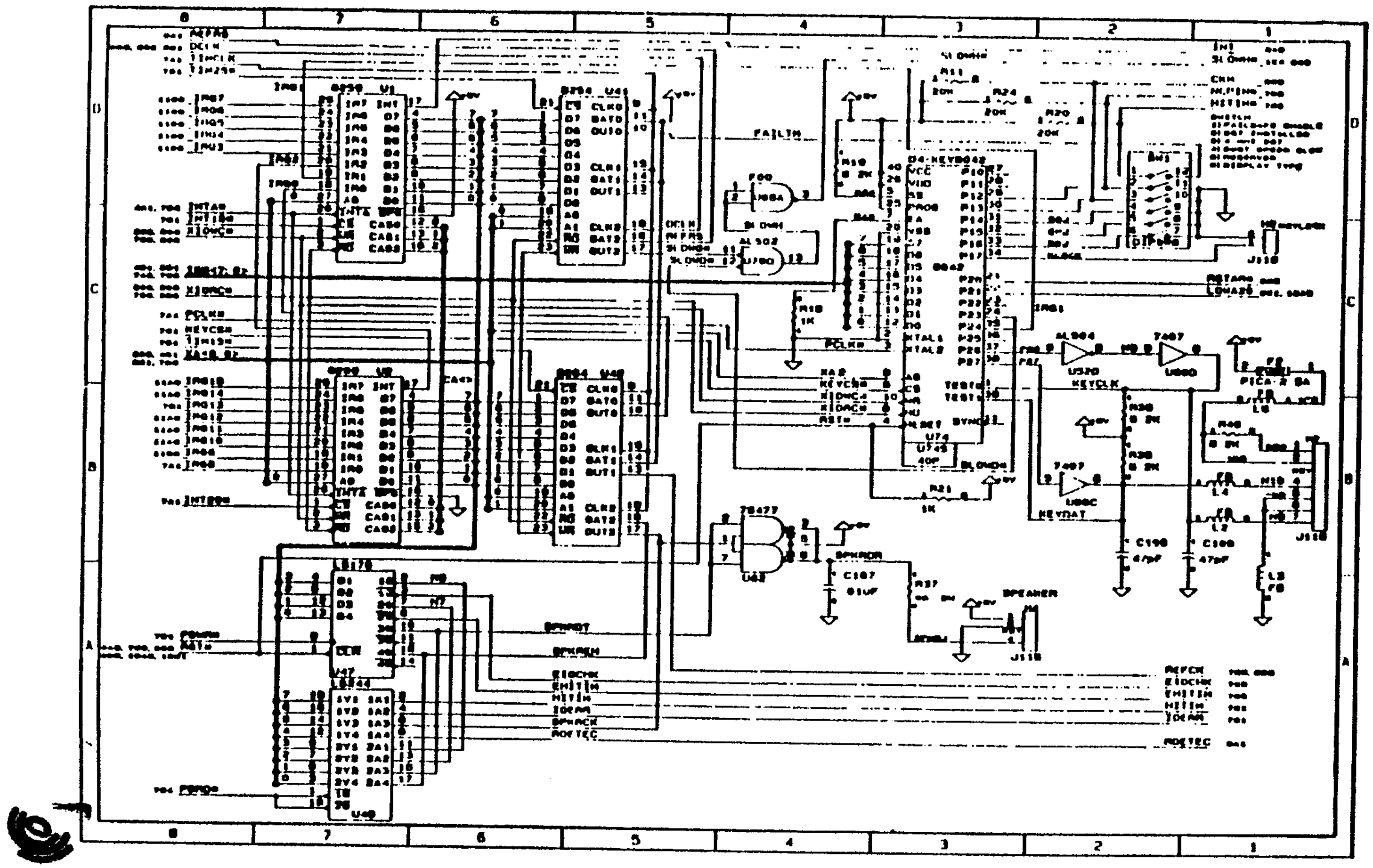

Figure 2-31. COMPAQ DESKPRO 386 Personal Computer System Board Schematics (Page 6 of 12)

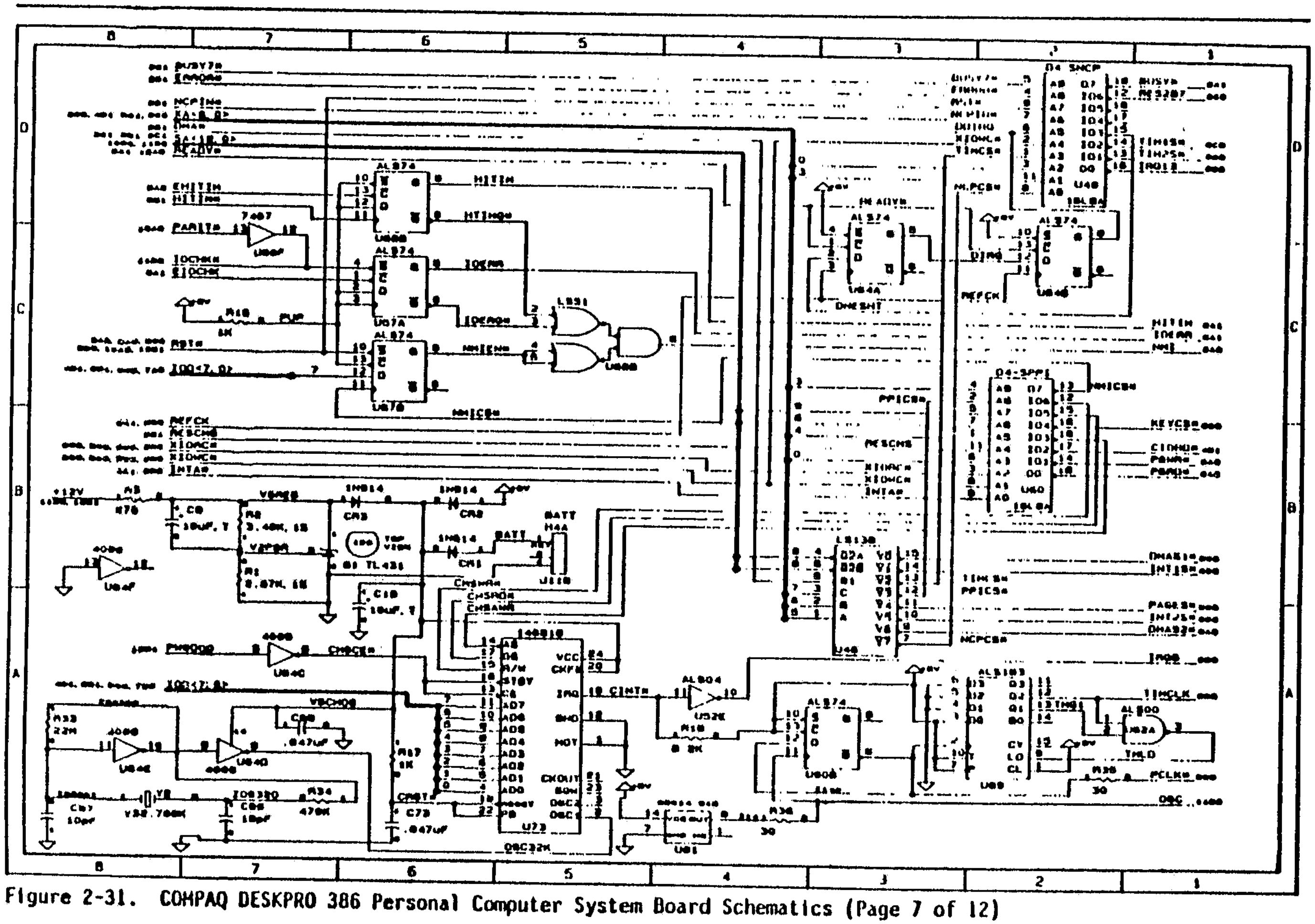

Figure 2-31. COMPAQ DESKPRO 386 Personal Computer System Board Schematics (Page 7 of 12)

BAD ORIGINAL

314

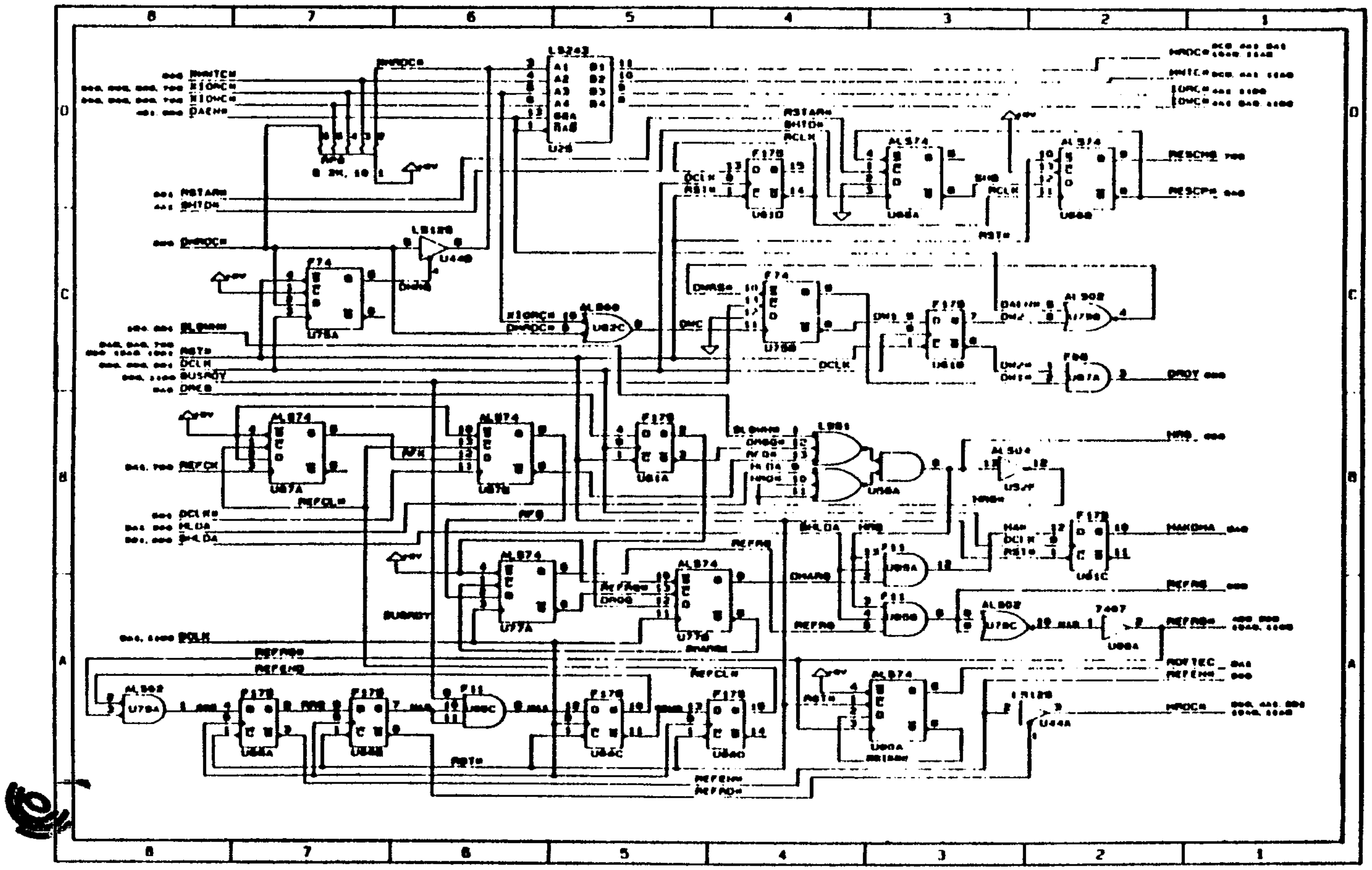

Figure 2-31. COMPAQ DESKPRO 386 Personal Computer System Board Schematics (Page 8 of 12)

BAD ORIGINAL

0 260 568

316

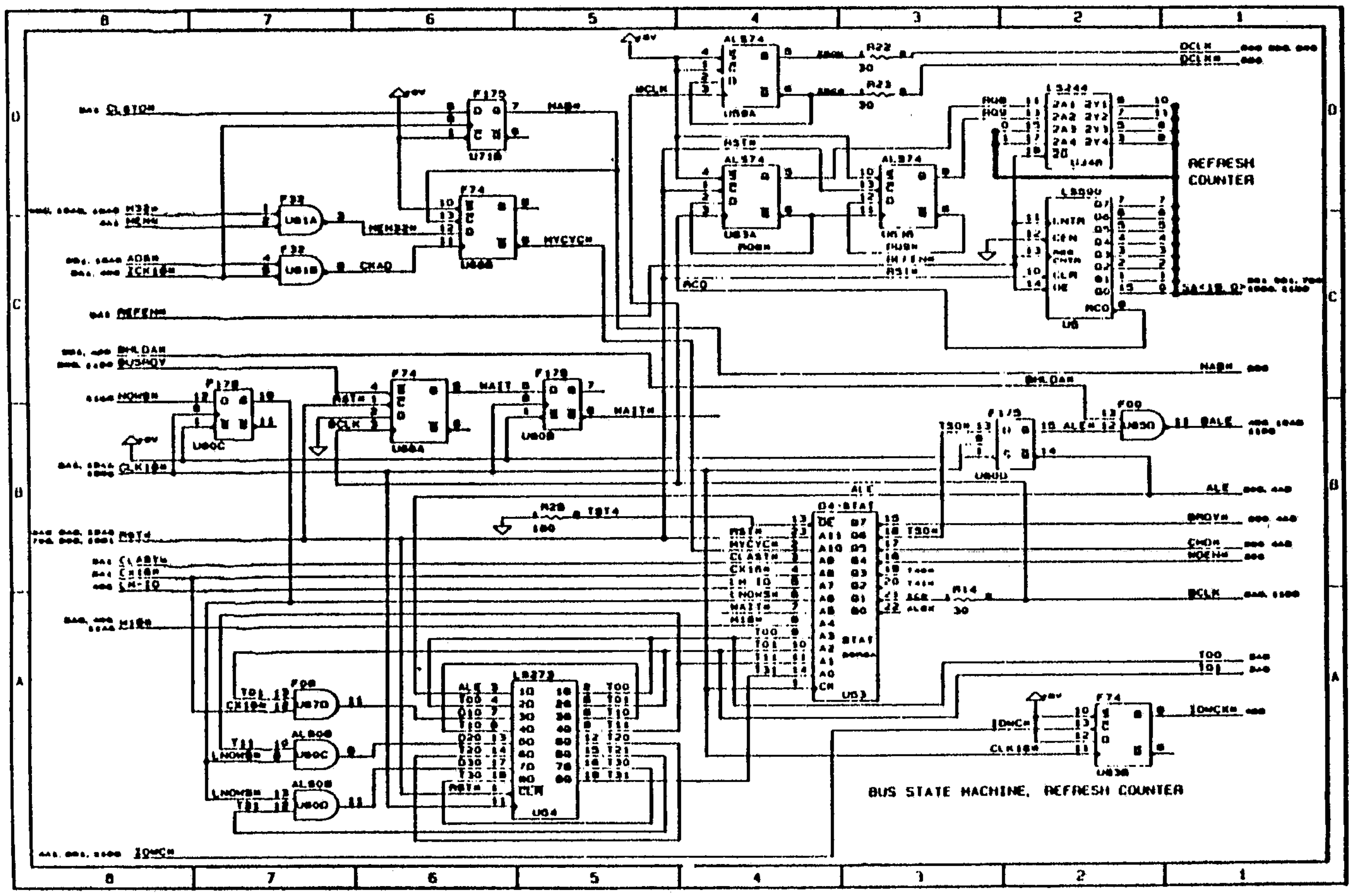


Figure 2-31. COMPAQ DESKPRO 386 Personal Computer System Board Schematics (Page 9 of 12)

BAD ORIGINAL

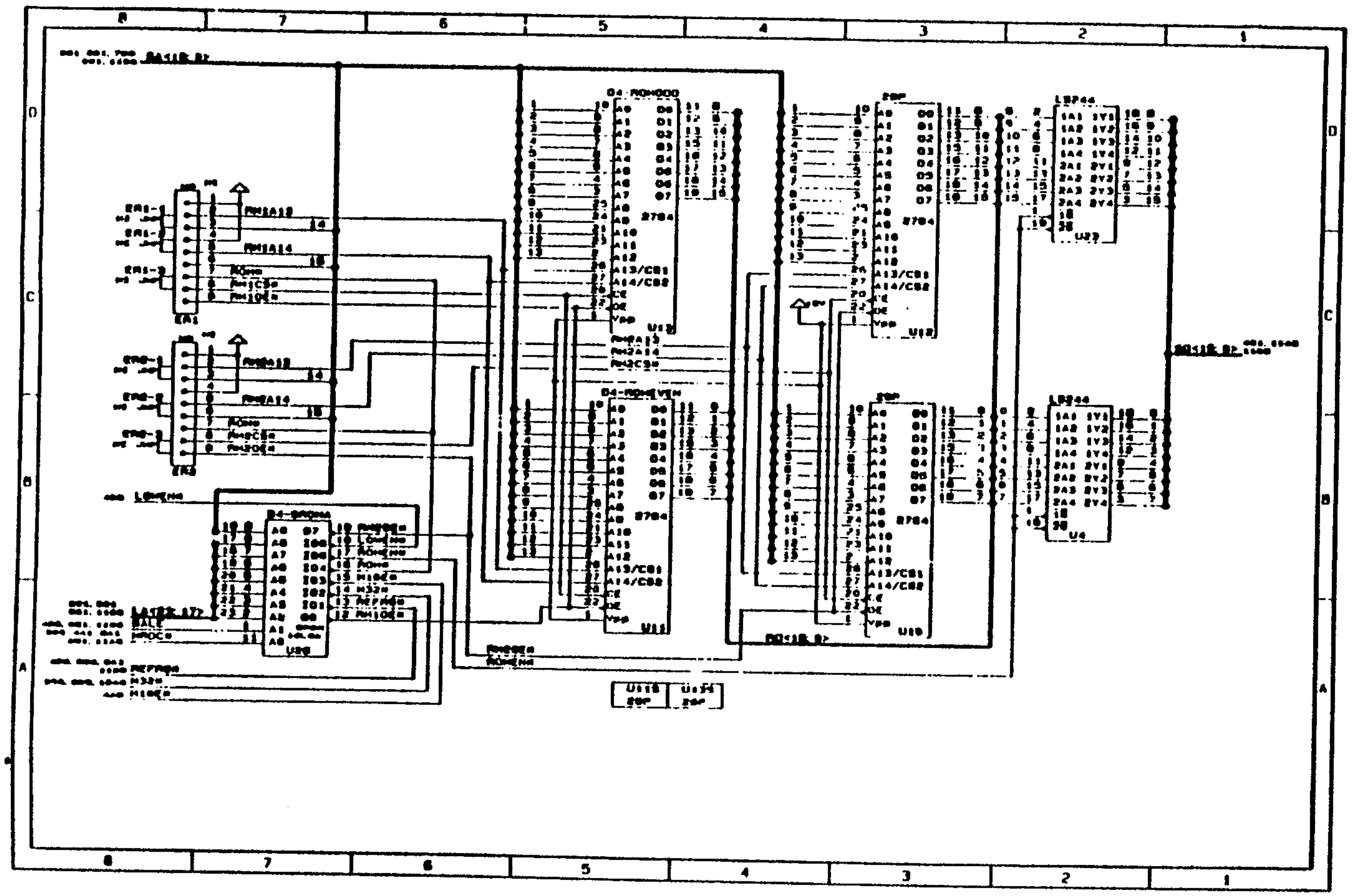

Figure 2-31. COMPAQ DESKPRO 386 Personal Computer System Board Schematics (Page 10 of 12)

BAD ORIGINAL

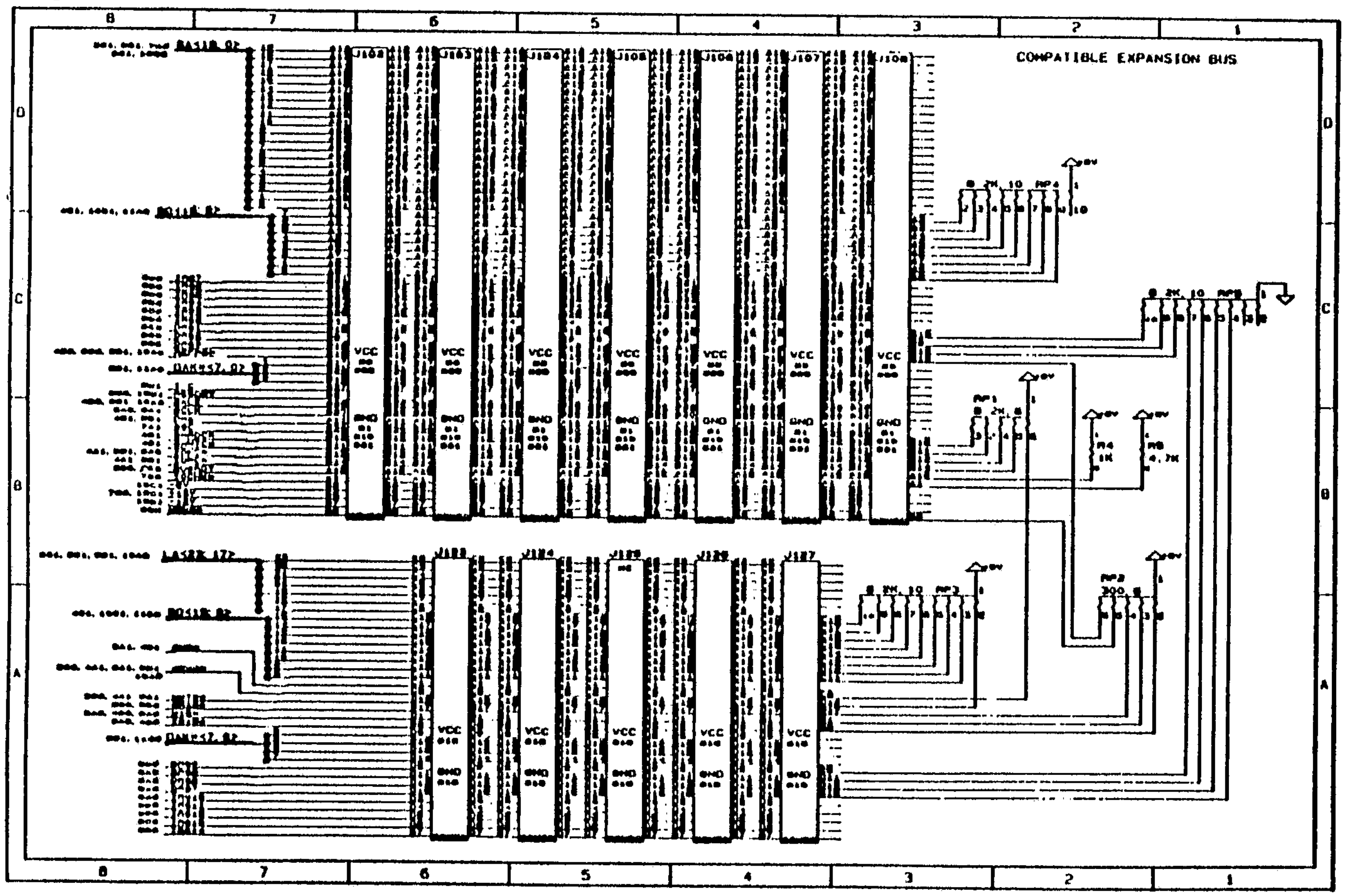


Figure 2-31. COMPAQ DESKPRO 386 Personal Computer System Board Schematics (Page 11 of 12)

BAD ORIGINAL

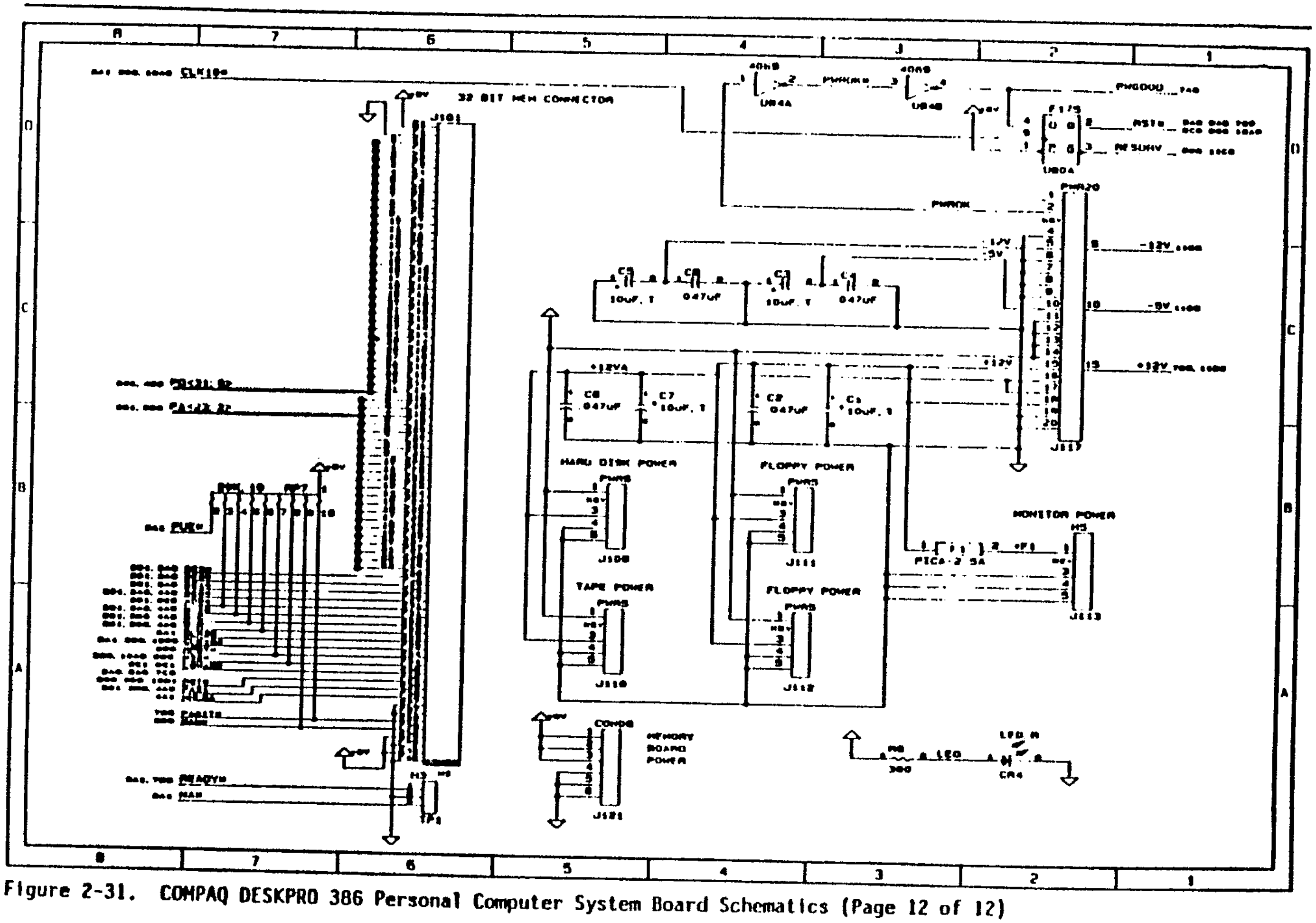


Figure 2-31. COMPAQ DESKPRO 386 Personal Computer System Board Schematics (Page 12 of 12)

BAD ORIGINAL

319

# TABLE OF CONTENTS

## CHAPTER 3
## MEMORY


3.1 INTRODUCTION 3-1
- Memory Devices 3-1
- Memory Architecture 3-2

3.2 MEMORY CONFIGURATION AND FUNCTIONS 3-3
- ROM Mapping 3-5
- System Memory Board Registers 3-6
- Physical Memory 3-8
- System Memory Board 3-10

3.3 32-BIT MEMORY EXPANSION BOARDS 3-10
- 32-Bit Memory Board Jumpers 3-13
- Static Column RAM Devices 3-15
- 16-Bit Memory Boards 3-15

3.4 POWER-ON TESTING 3-16

3.5 PERFORMANCE 3-16
- 32-Bit Memory Timing 3-17
- 16-Bit Memory Timing 3-18

3.6 SCHEMATICS 3-19

# Chapter 3
# MEMORY



## 3.1 INTRODUCTION

COMPAQ developed the COMPAQ DESKPRO 386 memory subsystem with the goal of optimizing the performance of the 80386 microprocessor. As a result, the memory subsystem uses innovative memory techniques to provide the 80386 with maximum bandwidth to the memory subsystem.

The most obvious aspect of the COMPAQ DESKPRO 386 memory system is that it is based on a 32-bit data path to complement the 32-bit architecture of the 80386. The memory subsystem interfaces to the COMPAQ DESKPRO 386 system via the 80-pin 16-MHz memory expansion bus, whose signals are generated directly by the microprocessor. This direct interface minimizes the signal delays between the microprocessor and the memory subsystem.

### Memory Devices

The memory is configured in a 36-bit-wide arrangement consisting of 32 bits of data and 4 bits of parity. Each parity bit is directly associated with one of the 4 bytes in the 32-bit double-word (dword). This arrangement, with 256K x 1 static column dynamic RAM (DRAM) devices, yields a memory bank size of 256K double-words, or 1 MB. Figure 3-1 shows the 32-bit arrangement using 256K x 1 devices.

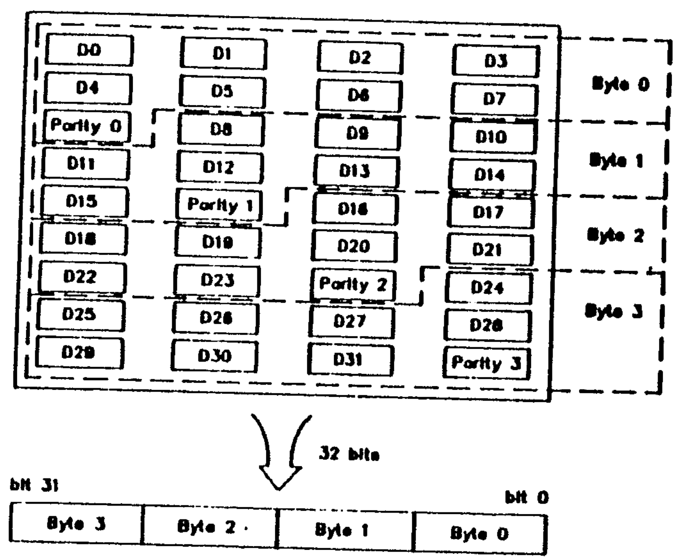


Figure 3-1. Memory Arrangement Using 256K x 1 RAMs

## Memory Architecture

The COMPAQ DESKPRO 386 memory subsystem has been specifically designed to complement the highly effective 32-bit prefetch mechanism of the 80386. This subsystem has a paged memory architecture using static-column RAM devices to minimize the number of wait states required during memory accesses. The 256K x 1 static-column RAM devices are particularly attractive for this purpose, because they can operate at high speeds in the paged mode.

Paged mode operations occur on the COMPAQ DESKPRO 386 memory subsystem by holding the row address of the static-column RAM devices for consecutive memory accesses within the same physical page. That is, for consecutive memory operations within a page, the row address of the devices is kept constant while the column address is modified according to the location in that page to be accessed. The 256K x 1 static-column devices used in COMPAQ DESKPRO 386 are configured in a 9 x 9 matrix with 9 bits of row and 9 bits of column address information. This RAM configuration yields a page size of 512 bits (2 to the ninth power) per device. Since memory is configured and accessed in 32-bit double-words, the effective page size for which the row address is constant is 2 KB (512 bits/device x 32 devices/double-word).

For consecutive operations within a page, the static-column RAM devices exhibit approximately a 50-ns access time. In non-paged operations where consecutive memory accesses are not within the same page, these devices typically operate at 100-ns access time. With these parameters, the COMPAQ DESKPRO 386 memory subsystem operates with 0 and 2 wait states during paged and non-paged memory accesses, respectively. This approach complements the 80386 prefetch mechanism so that, on the average, the memory subsystem operates with less than 1 wait state per 32-bit memory access.

The internal prefetch unit of the 80386 performs 32-bit prefetch operations from the memory subsystem. The prefetch unit's purpose is to keep the 12-byte prefetch queue as full as possible using CPU cycles that do not require bus activity. Typically, 80386 instructions contain a number of cycles that are performed through the internal registers of the microprocessor and that do not require bus activity.

Prefetch operations receive high-priority access to the bus, particularly after an instruction sequence that results in discarding the contents of the prefetch queue (for example, jumps and calls). Upon discarding the contents of the prefetch queue, the 80386 quickly refills the queue, typically during the execution of the first instruction after the queue contents are discarded. Refilling the queue causes a number of consecutive prefetches of sequential instructions to occur immediately after the

32

instruction being executed. The consecutive prefetches and the sequential nature of the instructions allow the memory subsystem to operate within a physical memory page (2 KB) and result in 0-wait-state memory accesses. In this mode, a 32-bit double-word is prefetched by the 80386 in 125 ns.

On the average, approximately 60 percent of the memory accesses in COMPAQ DESKPRO 386 occur in paged mode. (This percentage depends on the type of application being executed.) At this rate, the memory averages 0.8 wait states per double-word memory access. In certain applications using a localized set of instructions (for example, graphic drivers), the average number of wait states per memory access approaches 0. This level of performance can hardly be surpassed, even by expensive memory cache designs that utilize high-speed, static memory devices.

## 3.2 MEMORY CONFIGURATION AND FUNCTIONS

The COMPAQ DESKPRO 386 memory takes maximum advantage of the 1 MB of standard memory. In the standard COMPAQ DESKPRO 386 product, the 1 MB of memory is typically configured with 640 KB of base memory and 384 KB of memory addressed at the high end of the 16-MB address space. The 640 KB of base memory can execute existing MS-DOS applications developed for 80286-based products. The uses for the 384 KB of additional memory are described in Chapter 4. Figure 3-2 shows the base memory configuration of the COMPAQ DESKPRO 386.

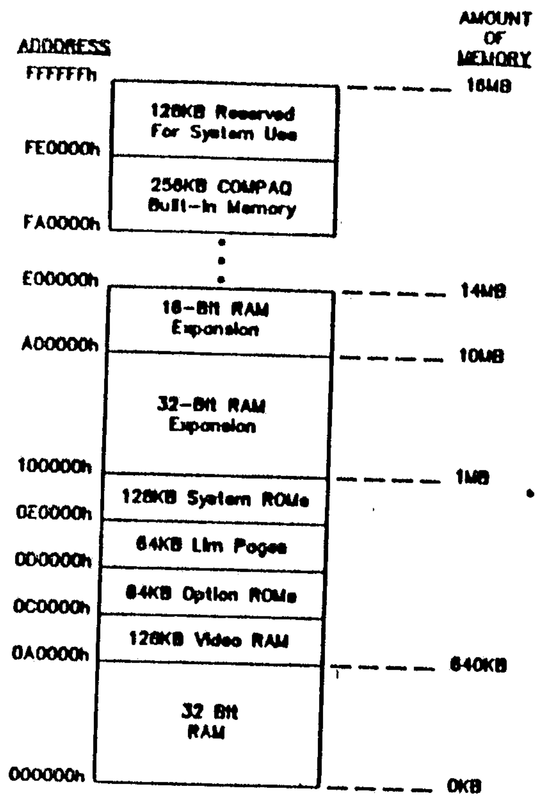


Figure 3-2. Memory Map for 640 KB of Base Memory

By using jumpers on the system memory board, the user can reduce the amount of base memory enabled on the 32-bit system memory board. Reducing the amount of base memory may be desirable, for example, for execution of certain applications that specifically require a 512-KB base memory configuration. The base memory can be configured to either 256, 512, or 640 KB. As base memory segments are disabled, the equivalent amount of memory is automatically added to the additional COMPAQ Built-in Memory at the high end of the address space. For example, a COMPAQ DESKPRO 386 system whose base memory has been configured for 512 KB contains 512 KB (384 KB + 128 KB) of COMPAQ Built-in Memory. When base memory is configured for 256 KB, there is 768 KB (512 KB + 256 KB) of COMPAQ Built-in Memory. Figure 3-3 shows the memory configuration for a system having 512 KB of base memory.

324

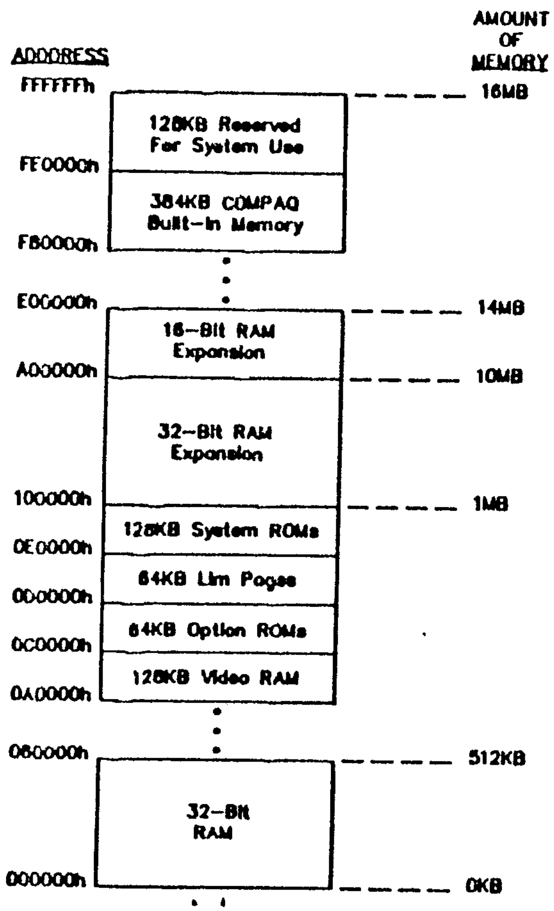


Figure 3-3. Memory Map for 512 KB of Base Memory

## ROM Mapping

The COMPAQ DESKPRO 386 memory system has a number of special features that optimize the use of the memory available beyond the base memory to improve system performance. Of the 384 KB of additional memory available in the standard memory configuration, the last 128 KB contain a number of special addressing features. This 128-KB block, starting at address FE0000, can be relocated (mapped) via special hardware map registers to replace the 128-KB area normally assigned to the system ROMs (0E0000 to 0FFFFF). When mapped, the 128-KB RAM block normally located at FE0000 can be addressed at either FE0000 or 0E0000. The ROM devices are not accessible while the RAM is mapped to the address space normally occupied by the ROMs.

325

In addition to its relocation capability, the 128-KB block of RAM beginning at address FE0000 can be write-protected by special hardware registers on the system memory board. The relocation and write-protection capabilities combine to allow the system ROM to be replaced with high-speed RAM having the same contents. This 128 KB of RAM is reserved for system use. This substitution significantly improves system performance during execution of the BIOS that normally resides in ROM. The performance increase results from the faster access time of the 32-bit static-column devices in comparison with the 250-ns ROM devices accessed through the 16-bit bus. If the COMPAQ Enhanced Color Graphics Board is installed, its 16-KB ROM is also copied to the 128-KB RAM area.

## System Memory Board Registers

Figure 3-4 shows the address and contents of the special, memory-mapped hardware register used in relocation of the RAM. This register is a write-only register; it cannot be read.

MEMORY-MAPPED ADDRESS 80C00000h

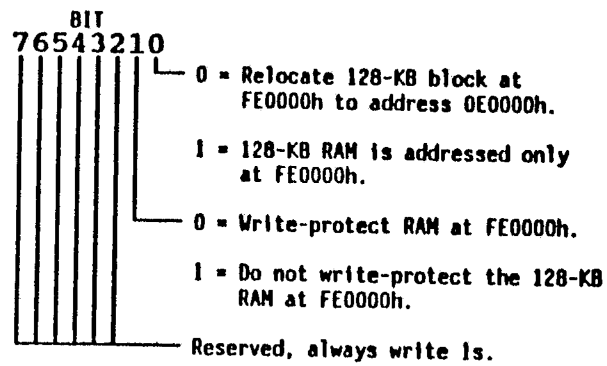


Figure 3-4. RAM Relocation Register Contents

326

The system memory board also contains a diagnostics register to help during tests of the memory subsystems. This register allows a diagnostics program to read the state of memory configuration jumpers on the system memory board. The register also contains the status of the parity bits for each of the four memory banks. RAM tests occur very quickly, because they are performed by reading and writing 32-bit data patterns. If a parity error is detected, a diagnostics program uses the diagnostics register to determine which byte in the 32-bit double-word caused the error.

Figure 3-5 shows the address and contents of the memory mapped diagnostics register. This register is a read-only register; it should not be written to. Writing to this register affects the contents of the RAM relocation register (see Figure 3-4).

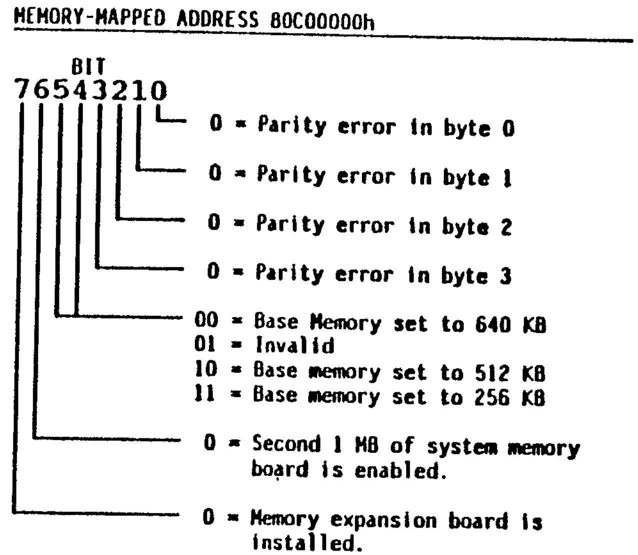


Figure 3-5. Diagnostics Register Contents

## Physical Memory

The 32-bit memory subsystem consists of a system memory board connected to the system board via the 80-pin connector at location J300. (The schematics for this board appear in the last section of this chapter). The system memory board, the layout of which is shown in Figure 3-6, does not occupy one of the expansion slots on the 8-/16-bit expansion bus. The 80-pin connector is shown in Figure 3-7. The system memory board contains 1 MB of RAM soldered on board and has sockets that can hold an additional 1 MB of memory. The system memory board also contains a connector (shown in Figure 3-7) for attaching one of two system expansion memory boards. This configuration allows the 80-pin connector to support all of the 32-bit memory. The system memory board also contains a bank of jumpers that control the memory configuration of the system memory board. The settings and purpose of these jumpers are described in a later section entitled "Switches."

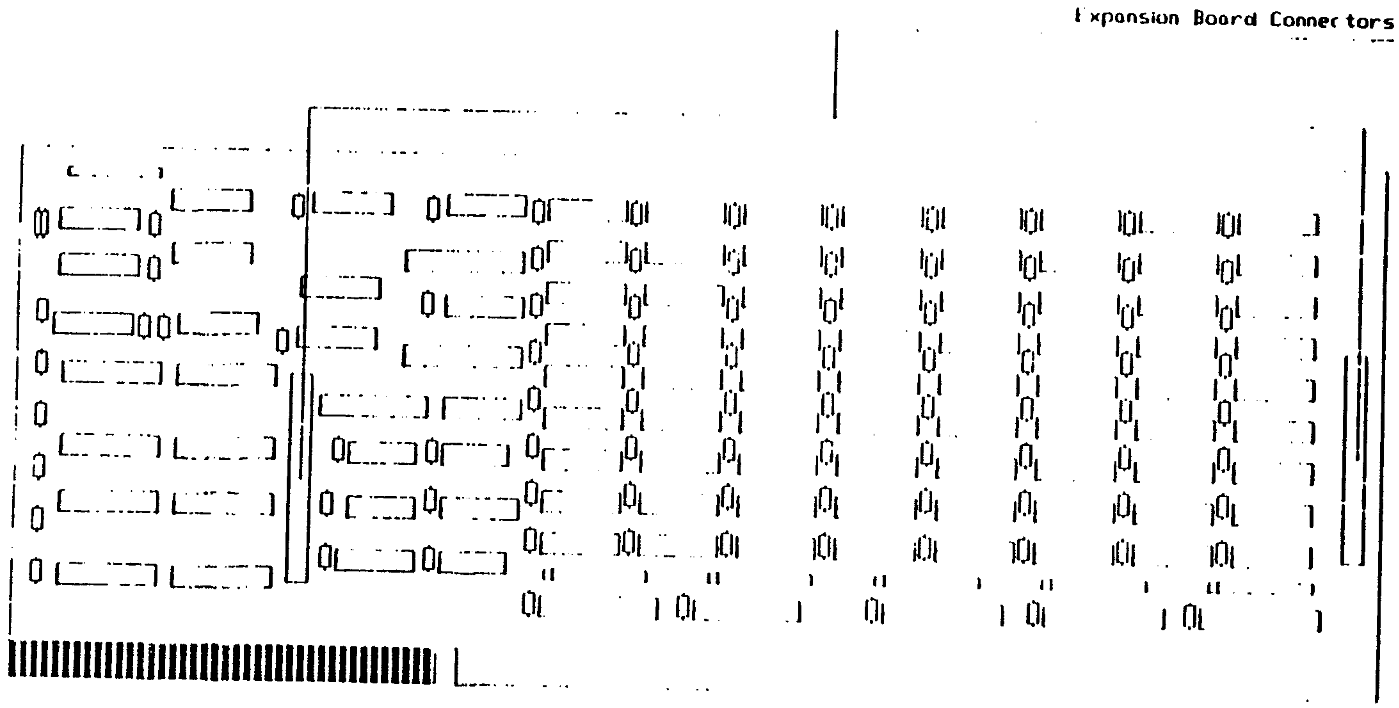


Figure 3-6. Layout of the System Memory Board

| Signal | Pin | Pin | Signal |
|---|---|---|---|
| GROUND | F01 | E01 | +5 Vdc |
| PD1 | F02 | E02 | PD0 |
| PD3 | F03 | E03 | PD2 |
| PD5 | F04 | E04 | PD4 |
| PD7 | F05 | E05 | PD6 |
| PD9 | F06 | E06 | PD8 |
| PD11 | F07 | E07 | PD10 |
| PD13 | F08 | E08 | PD12 |
| PD15 | F09 | E09 | PD14 |
| PD17 | F10 | E10 | PD16 |
| PD19 | F11 | E11 | PD18 |
| PD21 | F12 | E12 | PD20 |
| PD23 | F13 | E13 | PD22 |
| PD25 | F14 | E14 | PD24 |
| PD27 | F15 | E15 | PD26 |
| PD29 | F16 | E16 | PD28 |
| PD31 | F17 | E17 | PD30 |
| PA3 | F18 | E18 | PA2 |
| PA5 | F19 | E19 | PA4 |
| PA7 | F20 | E20 | PA6 |
| PA9 | F21 | E21 | PA8 |
| PA11 | F22 | E22 | PA10 |
| PA13 | F23 | E23 | PA12 |
| PA15 | F24 | E24 | PA14 |
| PA17 | F25 | E25 | PA16 |
| PA19 | F26 | E26 | PA18 |
| PA21 | F27 | E27 | PA20 |
| PA23 | F28 | E28 | PA22 |
| BE2– | F29 | E29 | BE3– |
| BE0– | F30 | E30 | BE1– |
| M/IO | F31 | E31 | ADS– |
| W/R | F32 | E32 | D/C |
| CLK16– | F33 | E33 | CLK32 |
| M32– | F34 | E34 | MRDY– |
| RST– | F35 | E35 | LOWA20 |
| BHLDA | F36 | E36 | PA31 |
| READY– | F37 | E37 | NA– |
| NAM– | F38 | E38 | PARIT– |
| GROUND | F39 | E39 | +5 Vdc |
| GROUND | F40 | E40 | +5 Vdc |

Figure 3-7. Pinout of the System Memory Board Connector

## System Memory Board

The system memory board uses 256K x 1 chips exclusively; and each bank of 36 chips contains 1 MB of memory complete with parity. Thus, the system memory board itself can be fully populated with as much as 2 MB of memory. This board utilizes 256K x 1 static-column RAM devices and contains 1 MB of memory soldered on board with the second megabyte socketed for expansion. Memory can be added to this expansion board only by using the 256K x 1 static-column RAM devices in 1-MB increments.

## 3.3 32-BIT MEMORY EXPANSION BOARDS

The 2-MB 32-bit memory expansion board has a component layout similar to that of the system memory board. This board utilizes 256K x 1 static-column DRAM devices and contains 1-MB of memory soldered on board with the second megabyte socketed for expansion. Memory can be added to this expansion board only by using 256K x 1 static-column RAM devices in 1-MB increments.

The 8-MB 32-bit memory expansion board uses 1 mb x 1 static-column RAM devices and contains 4 MB soldered on board and 4 MB socketed for expansion. Memory can be added to this expansion board only by using 1 mb x 1 static-column RAM devices in 4-MB increments. (The schematics for both the 2-MB and the 8-MB memory expansion boards appear in the last section of this chapter.)

Figure 3-8 shows the component layout of the 32-bit memory expansion boards.

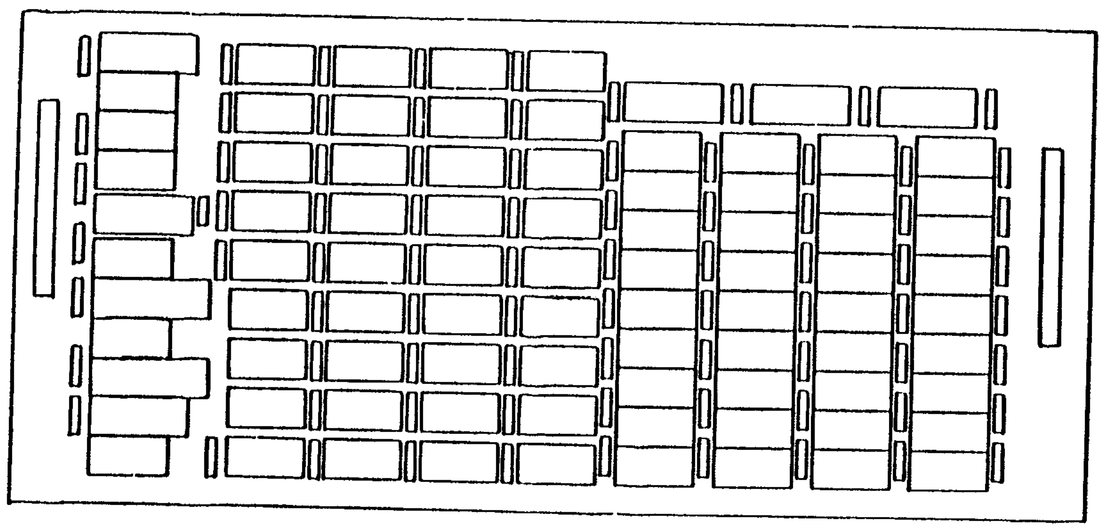

Figure 3-8. Component Layout of the 32-bit Memory Expansion Boards

The system memory board must be filled before a 32-bit memory expansion board can be added. Memory, beginning with the system board, must be added in the order given in Table 3-1.

Table 3-1. Memory Increments to Achieve either 4 MB or 10 MB of Memory.

| Memory Increments | Path 1 | Path 1 Total Memory (In Megabytes) | Path 2 | Path 2 Total Memory (In Megabytes) |
|---|---|---|---|---|
| 1 | System memory board - First 1 MB is soldered in. | 1 | System memory board - First 1 MB is soldered in. | 1 |
| 2 | System memory board - Second 1 MB added to sockets. Use the 1-MB Memory Upgrade Kit. | 2 | System memory board - Second 1 MB added to sockets. Use the 1-MB Memory Upgrade Kit. | 2 |
| 3 | 2-MB memory expansion board-First 1 MB soldered in. | 3 | 8-MB memory expansion board-First 4 MB is soldered in. | 6 |
| 4 | Second 1 MB added to sockets on the 2-MB memory expansion board. Use the 1-MB Memory Upgrade Kit. | 4 | Second 4 MB added to sockets on the 8-MB memory expansion board. Use the 4-MB Memory Upgrade Kit. | 10 |

## 32-Bit Memory Board Jumpers

Table 3-2 lists the jumper settings for the 32-bit System Memory Board. These 9-pin jumpers are on the system memory board, not the memory expansion boards. The 32-bit System Memory Board jumpers need to be modified to add a second 1 MB to the board or to install 16-bit Memory Expansion Boards as base memory. The 1-MB Memory Upgrade Kit should be used to add memory to the system memory board.

Table 3-2. Jumper Settings for the 32-Bit System Memory Board

| Setting | Description |
|---|---|
| 1 & 2 4 & 5 7 & 8 | 256K base, 1-MB extended memory disabled |
| 2 & 3 4 & 5 7 & 8 | 512K base, 1-MB extended memory disabled |
| 2 & 3 5 & 6 7 & 8 | 640K base, 1-MB extended memory disabled (standard) |
| 1 & 2 4 & 5 8 & 9 | 256K base, 1024K extended memory enabled |
| 2 & 3 4 & 5 8 & 9 | 512K base, 1024K extended memory enabled |
| 2 & 3 5 & 6 8 & 9 | 640K base, 1024K extended memory enabled |

Note: Parity errors may occur if jumper 8 & 9 is connected without memory installed in the second 1-MB bank of memory.

**WARNING**

**Jumpers 3 & 4 and 6 & 7 should never be connected.**
**The system board will be damaged if they were connected.**

333

## 3.4 POWER-ON TESTING

Because a stable memory system is vital to system operation, the RAM is tested early in the power-on self-test cycle. A serious error in the memory becomes a fatal error for the system. The RAM test uses 32-bit instructions to increase the speed of the memory test. Refer to Chapter 4, Software Aspects and BIOS, for specific power-on sequences.

The parity checking is done the same way as that for a standard expansion board memory. Any parity error shows up as an I/O check (parity check 2) with a testable bit (bit 6) on port 61h indicating the error. The system memory board uses special circuitry to test the RAM rapidly. Refer to Appendix A for descriptions of the error messages that appear for memory errors at power-up and during advanced diagnostics.

## 3.5 PERFORMANCE

The 32-bit memory of the COMPAQ DESKPRO 386 has been optimized for double-word (dword=32 bits) prefetching. This optimization reflects the 32-bit nature of the 80386 and the paged nature of the RAM. The following examples illustrate the access time difference between 32-bit and 8-/16-bit memory accesses.

0 260 568

12.87

334

## Static Column RAM Devices

The nature of the static-column devices allows these to work well with memory paging, described previously. The static column devices have much faster access time in the paged mode. In this mode, the row address remains constant.

The nature of the static-column devices precludes the use of standard 256K x 1 or 1-mb devices. It is highly recommended that COMPAQ-approved static column RAM devices be used to guarantee the successful operation of the memory boards.

Table 3-4 lists the primary performance characteristics that differentiate these static column RAM devices from standard dynamic RAM devices used in most personal computer products.

Table 3-4. RAM Device Specifications

| Parameter | Maximum Time (In Nanoseconds) |
|---|---|
| Access time from RAS | 100 |
| Access time from CAS | 25 |
| Access time from column address | 50 |

## 16-Bit Memory Boards

The user can add one or two 16-bit memory boards to a COMPAQ DESKPRO 386. These 0.5- to 2.0-MB boards can begin at 4-, 6-, 10-, or 12-MB boundaries. The 16-bit boards have jumpers to indicate the board's base address. Table 3-5 gives the jumper settings for each choice. No two boards should have the same base address. The user should not leave gaps in the memory space. The jumpers on each board must be correctly set.

Table 3-5. 16-Bit Memory Boards

| Jumpers | | Base Address (In Megabytes) |
|---|---|---|
| 1 & 2 | 4 & 5 | 4 |
| 1 & 2 | 5 & 6 | 6 |
| 2 & 3 | 4 & 5 | 10 |
| 2 & 3 | 5 & 6 | 12 |

The user can add 16-bit memory boards from other manufacturers in the base memory area, but the same expansion can be obtained by using the 32-bit expansion memory without the otherwise significant loss in speed.

Refer to a later section in this chapter entitled "Performance" for more information about the relative performance of 16-bit memory boards when compared to 32-bit memory boards.

355

Note that Figure 3-9 shows three CPU cycles for a 0-wait-state 32-bit memory operation. The first of the three CPU cycles is shared with the last cycle of the previous CPU operation. Thus, the 0-wait-state operation takes effectively two CPU cycles to complete. During the first CPU cycle, the processor asserts the address and status signals for the 32-bit memory operation to begin.

A memory access within the current 2-KB page (0-wait state) requires two CPU cycles, 125 ns.

(16 MHz = 62.5 ns/cycle; two cycles (62.5 ns/cycle) = 125-ns access time).

A memory access outside the current 2-KB page requires four CPU cycles, 250 ns (four cycles 62.5 ns/cycle = 250-ns access time).

The average access time depends on the number of cycles executed at 0 and 2 wait-states. Since typically 60 percent of CPU memory cycles to 32-bit memory are executed with 0-wait-states, the COMPAQ DESKPRO 386 provides an average memory access time of approximately 162.5 ns when using 32-bit memory.

## 16-Bit Memory Timing

Because any 16-bit memory by its very nature must be accessed across the expansion bus, the access time is limited by the number of CPU cycles required to access the bus. A typical double-word access via the 8-bit bus must be serialized to perform four consecutive byte accesses using the 8-MHz clock rate of the expansion bus. Performing these operations via the 8-bit expansion bus takes forty-eight 16-MHz 80386 cycles or 3 us as compared to 125 ns required to perform the equivalent 0-wait-state operation via the 32-bit bus. (Refer to Figure 3-9.)

# 3.6 SCHEMATICS

The remainder of this chapter shows the schematics for the 32-Bit System Memory Board, the 1-to 2-MB Memory Expansion Board, the 4- to 8-MB Memory Expansion Board, and the .5 to 2 MB 16-Bit Memory Expansion Board. The schematics are shown in Figures 3-10 through 3-13, respectively.

## 32-Bit Memory Timing

Figure 3-9 shows a typical memory cycle for 8-, 16-, and 32-bit memory.

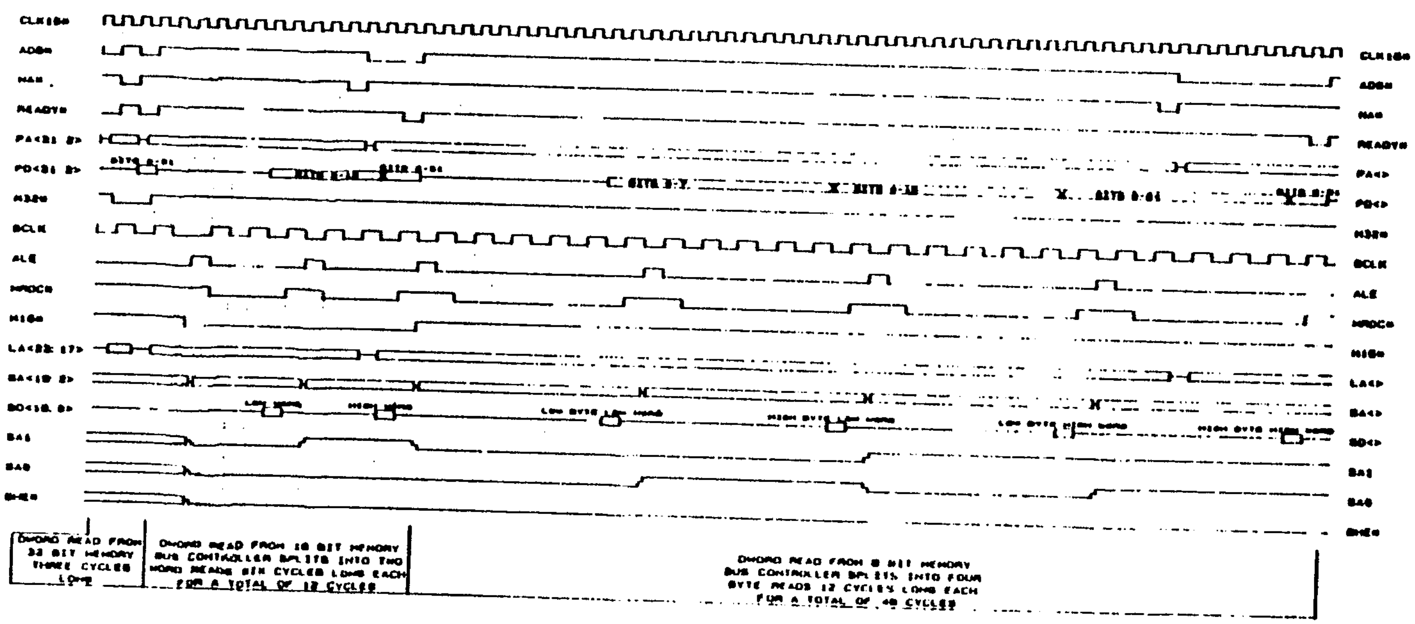


Figure 3-9. Typical Memory Timing for 8-, 16-, and 32-Bit Memory

BAD ORIGINAL

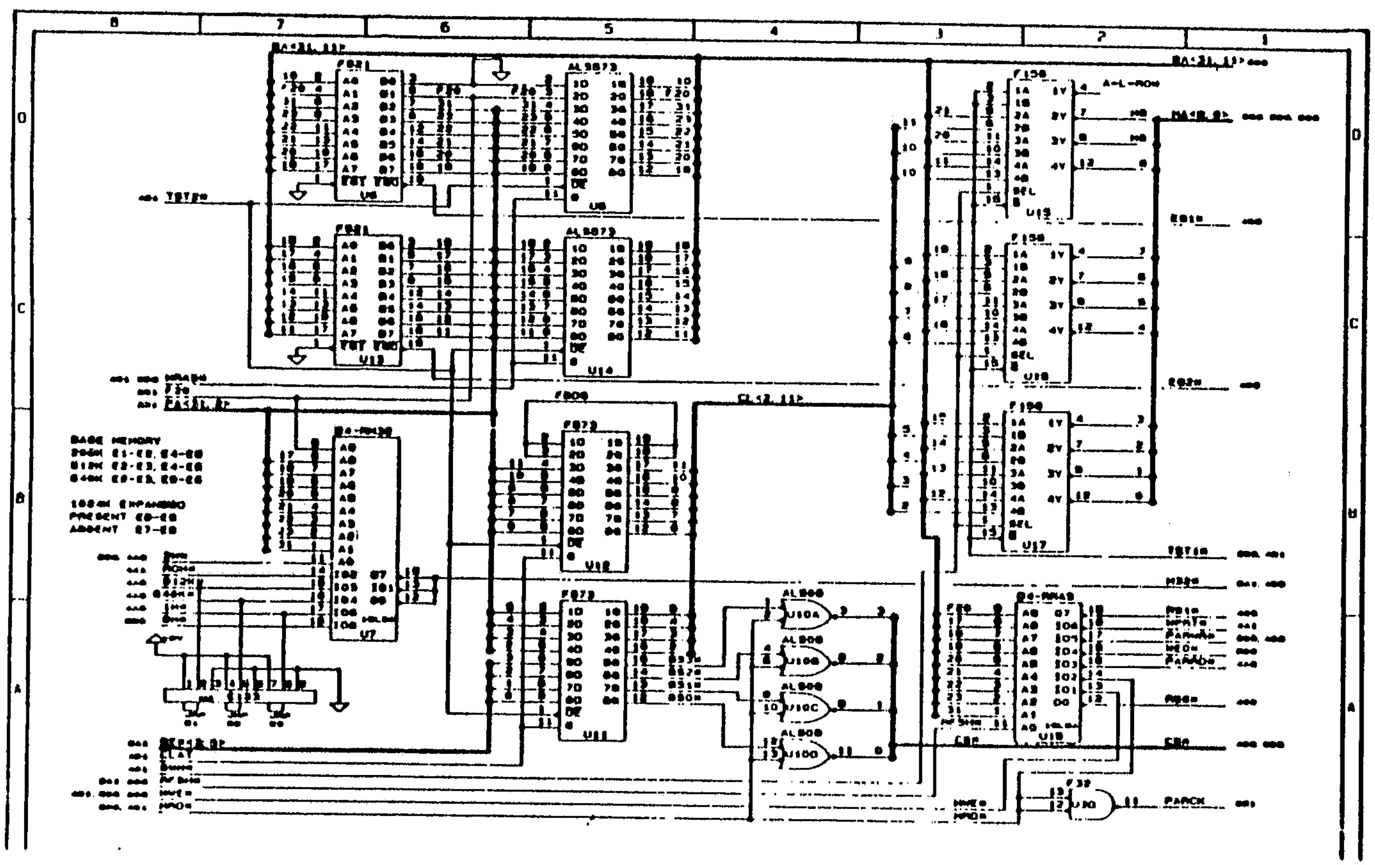

Figure 3-10. 32-Bit System Memory Board (Page 2 of 8)

0 260 568

BAD ORIGINAL

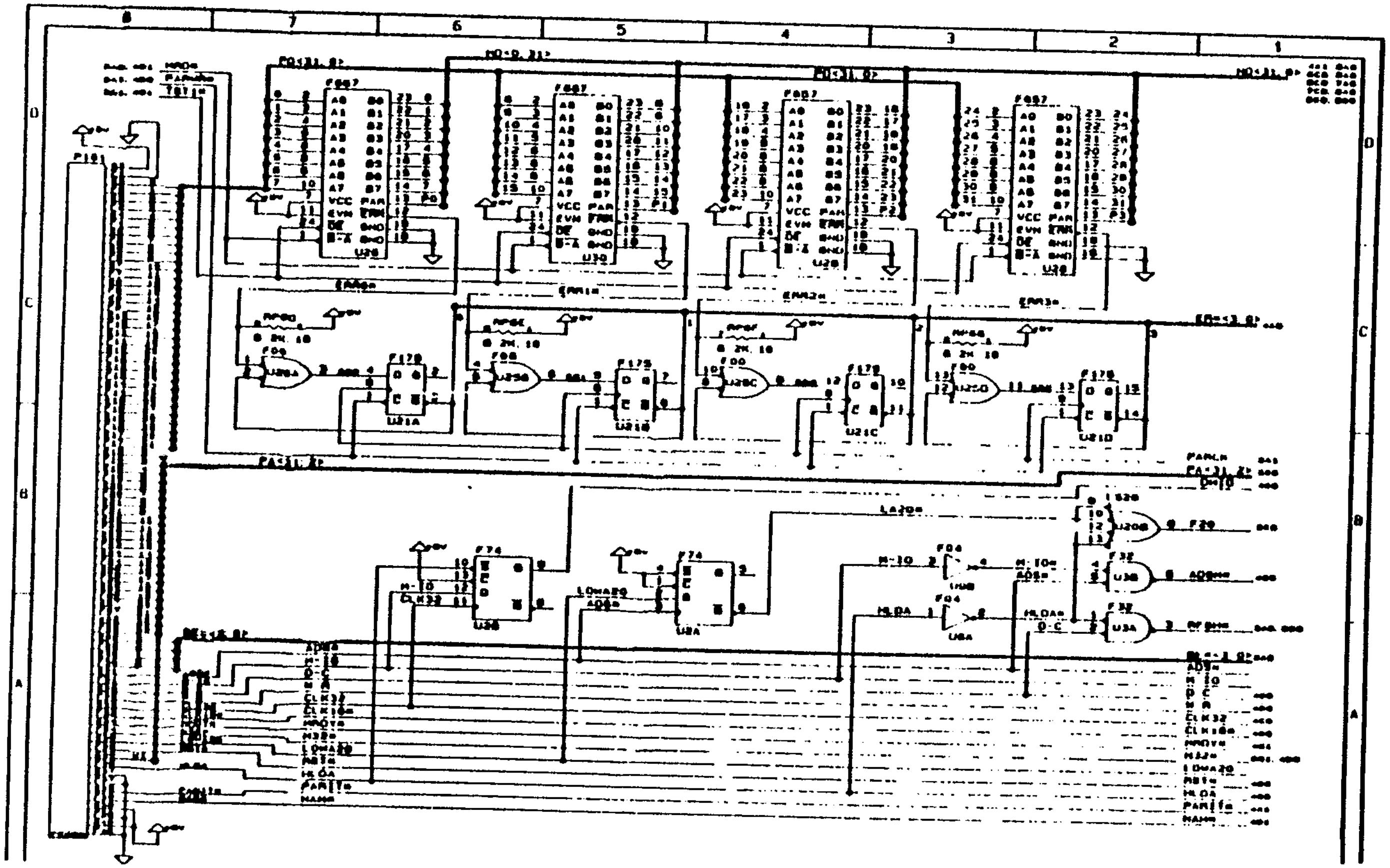

Figure 3-10. 32-Bit System Memory Board (Page 1 of 8)

BAD ORIGINAL

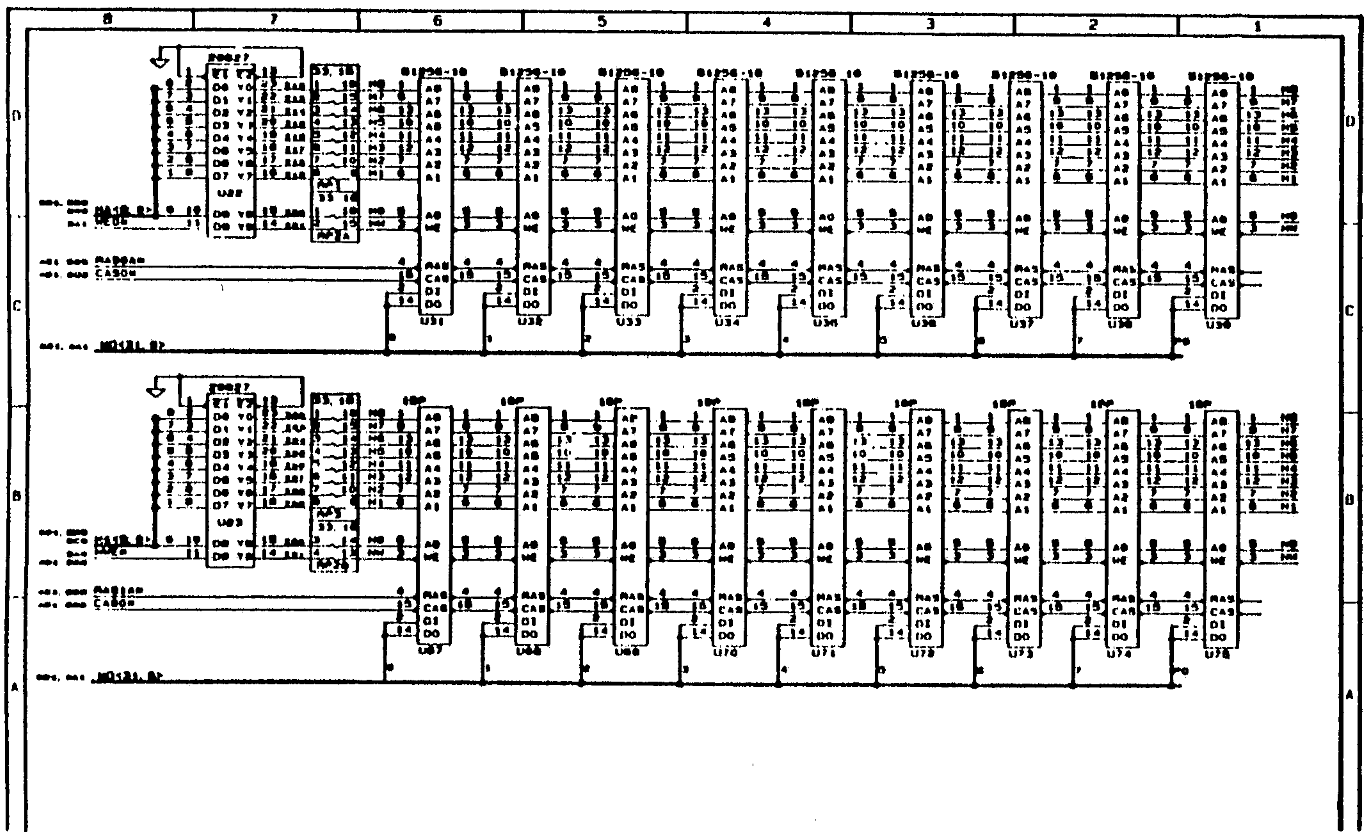

Figure 3-10. 32-Bit System Memory Board (Page 4 of 8)

0 260 568

BAD ORIGINAL

34

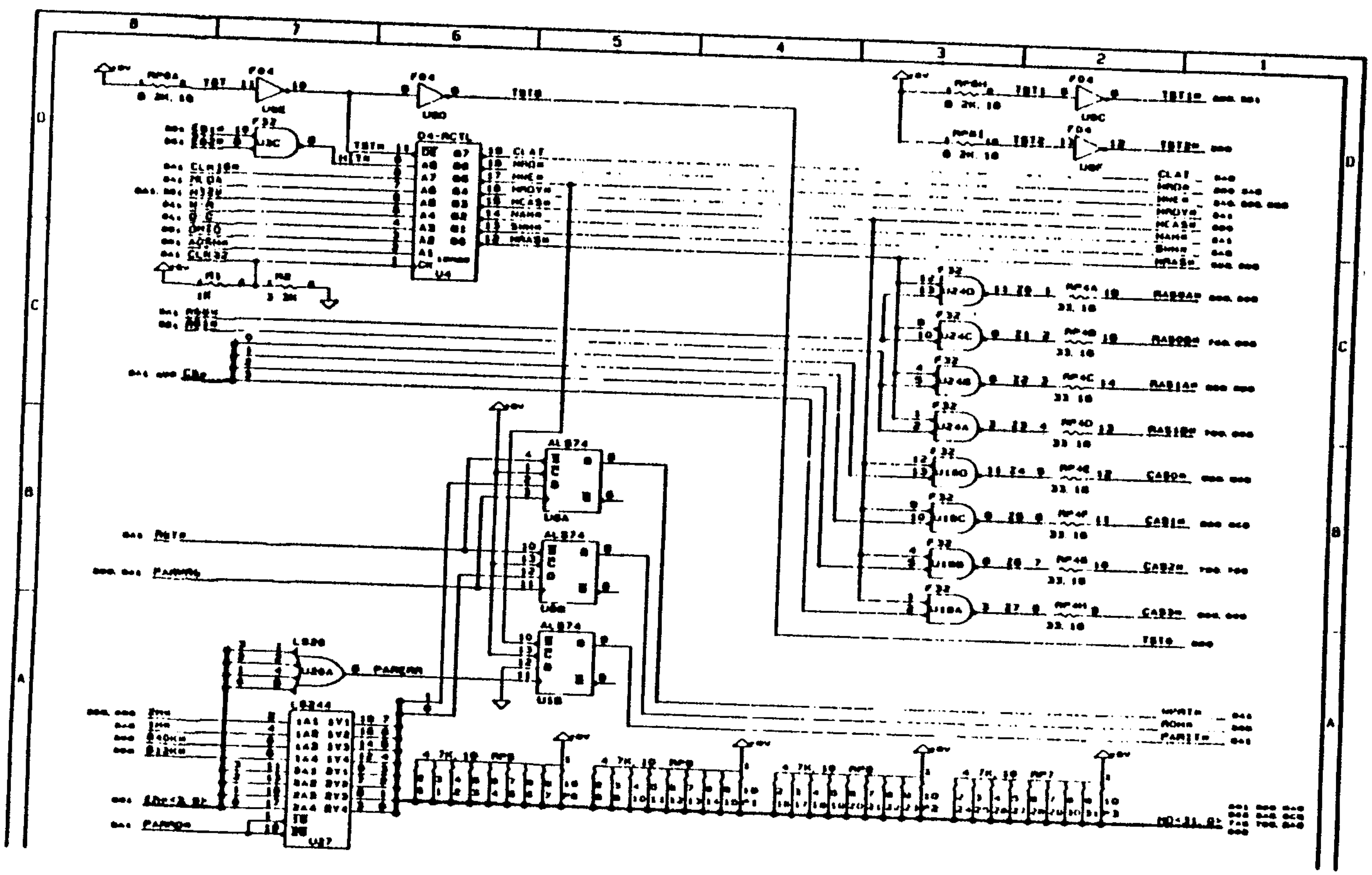

Figure 3-10. 32-Bit System Memory Board (Page 3 of 8)

BAD ORIGINAL

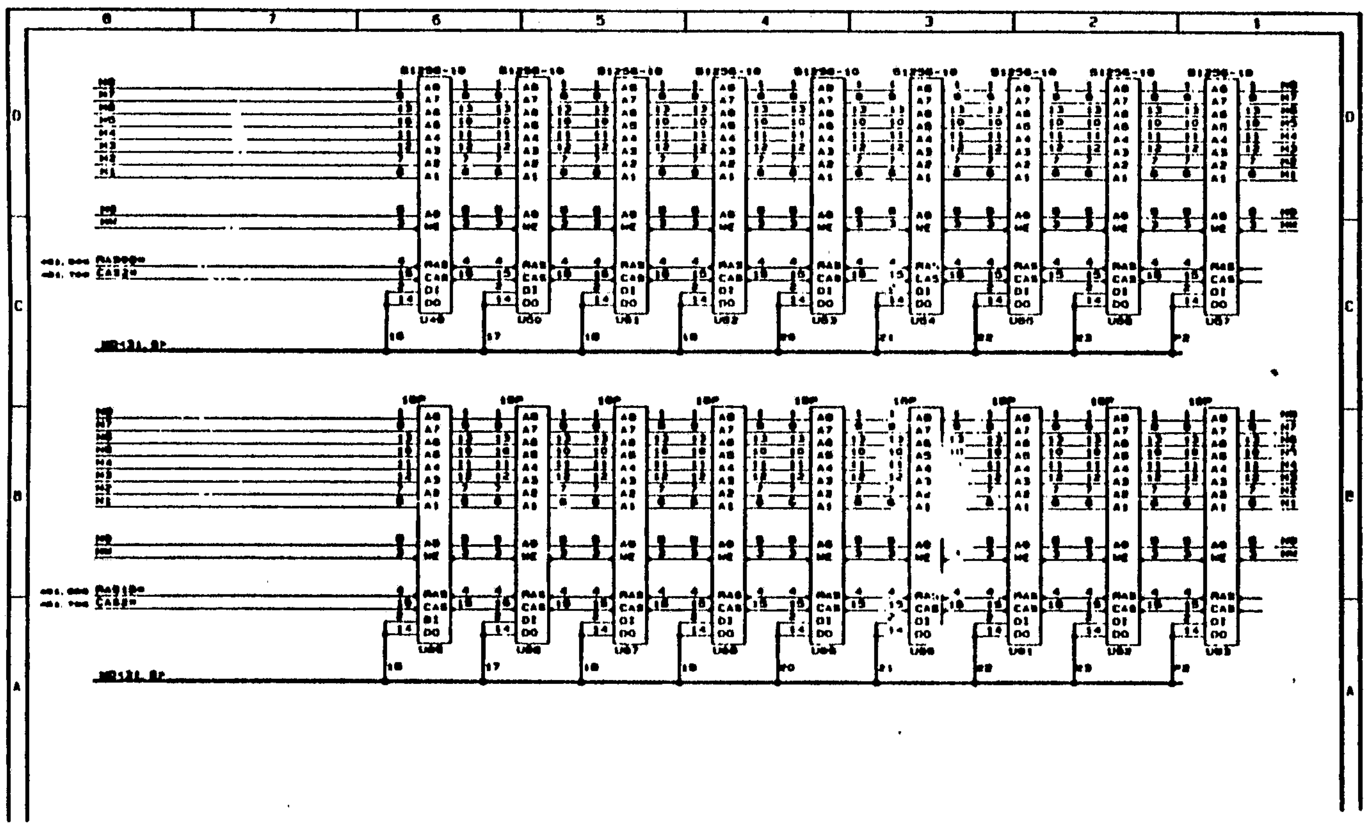

Figure 3-10. 32-Bit System Memory Board (Page 6 of 8)

BAD ORIGINAL

342

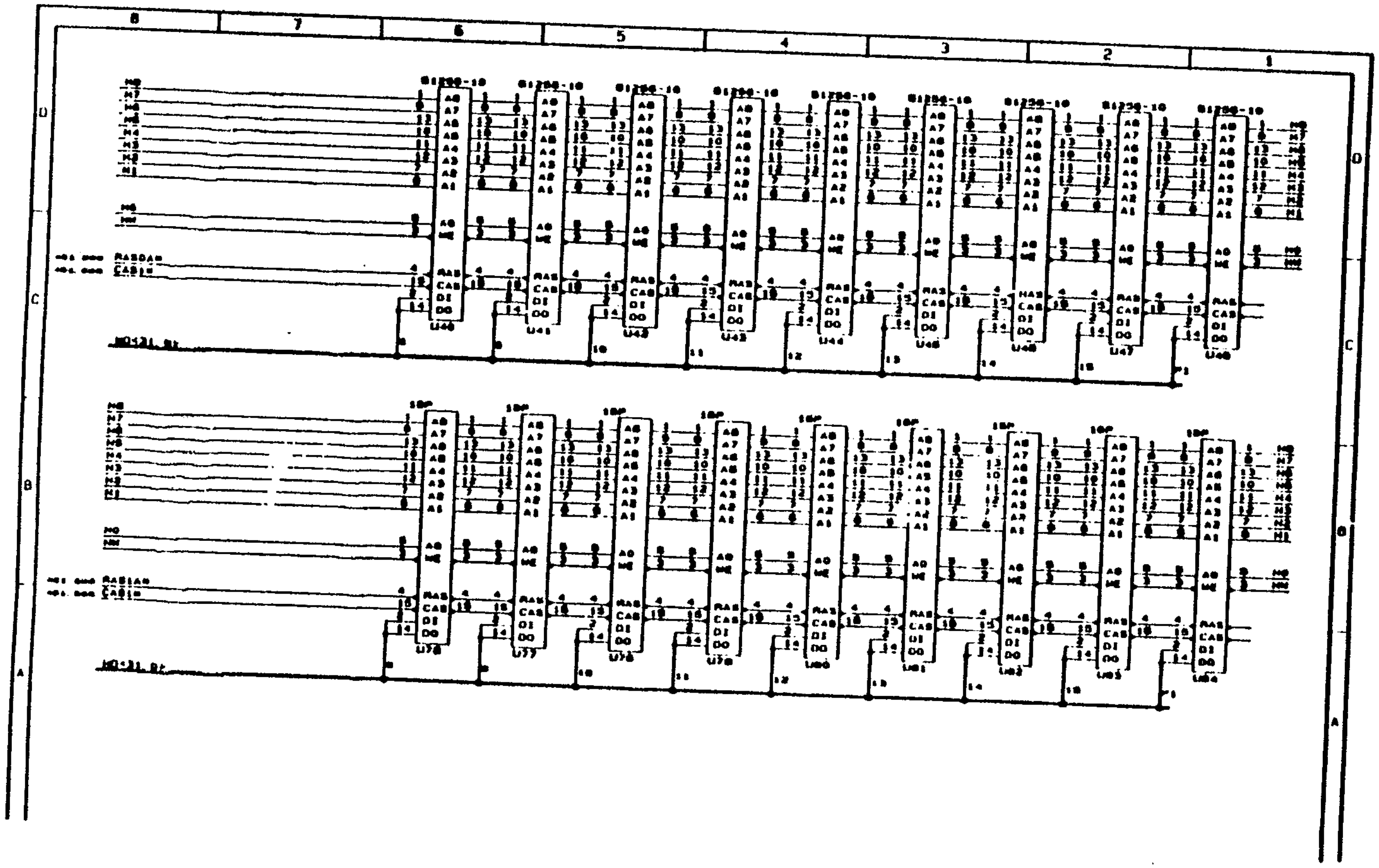

Figure 3-10. 32-Bit System Memory Board (Page 5 of 8)



843

BAD ORIGINAL

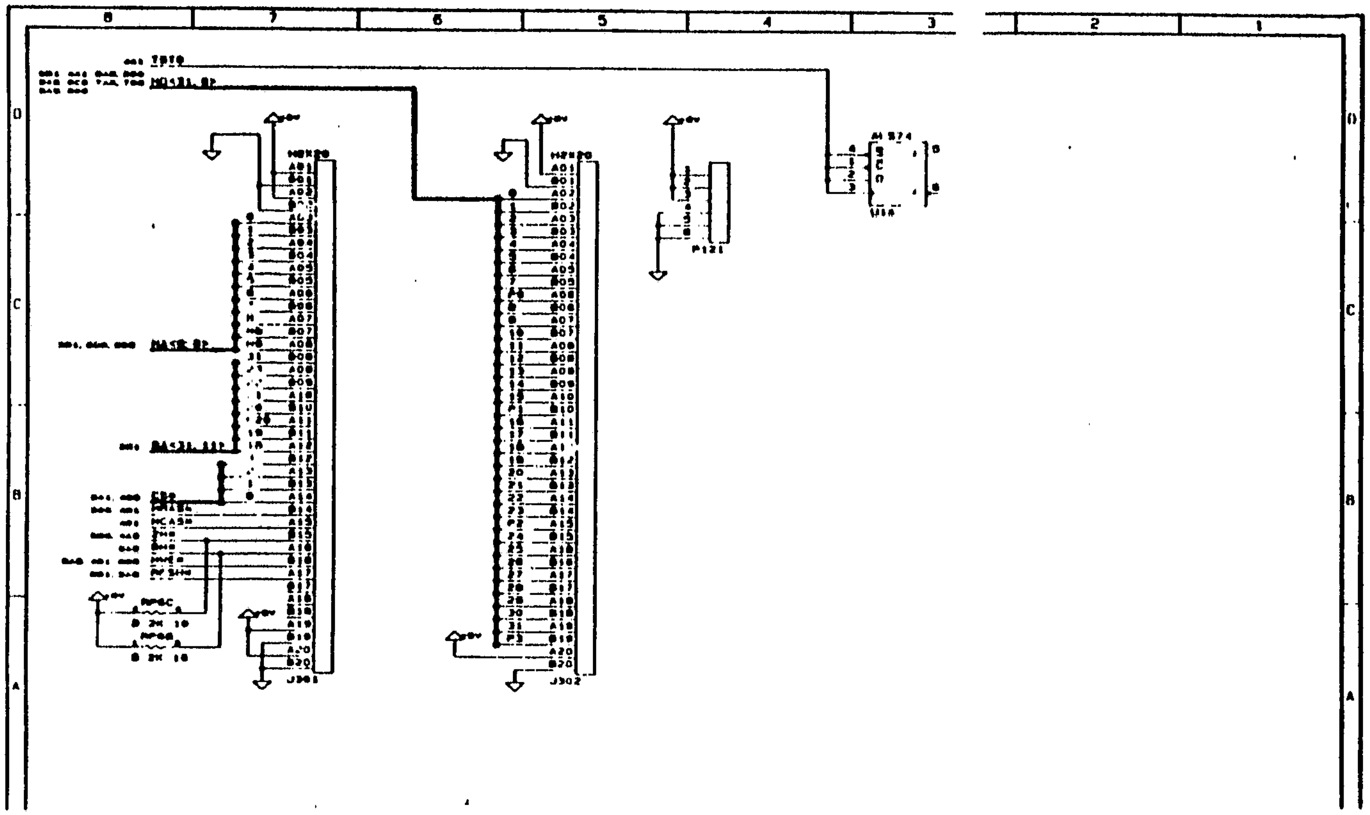

Figure 3-10. 32-Bit System Memory Board (Page 8 o 8)

BAD ORIGINAL

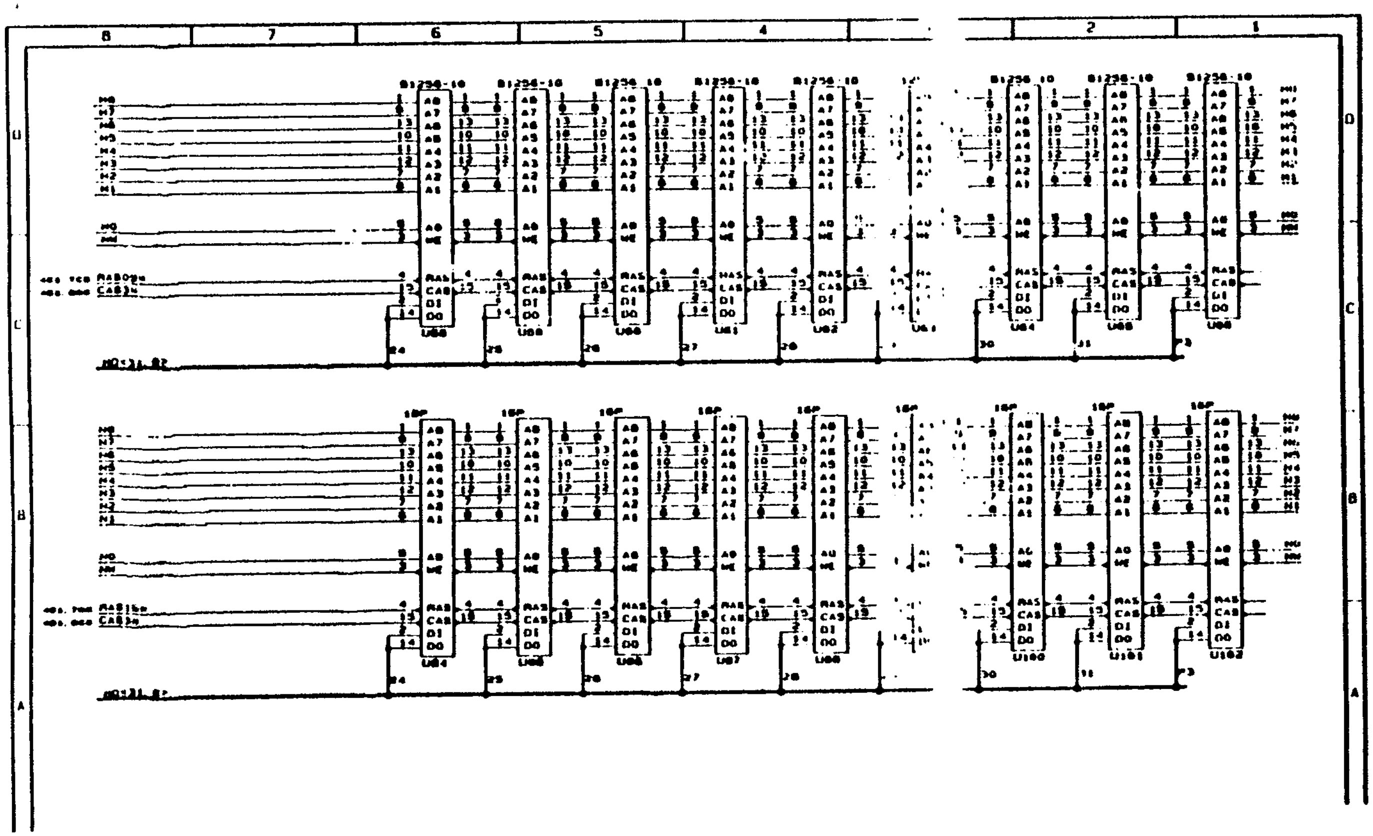

Figure 3-10. 32-Bit System Memory Board (Page ? of 8)

BAD ORIGINAL

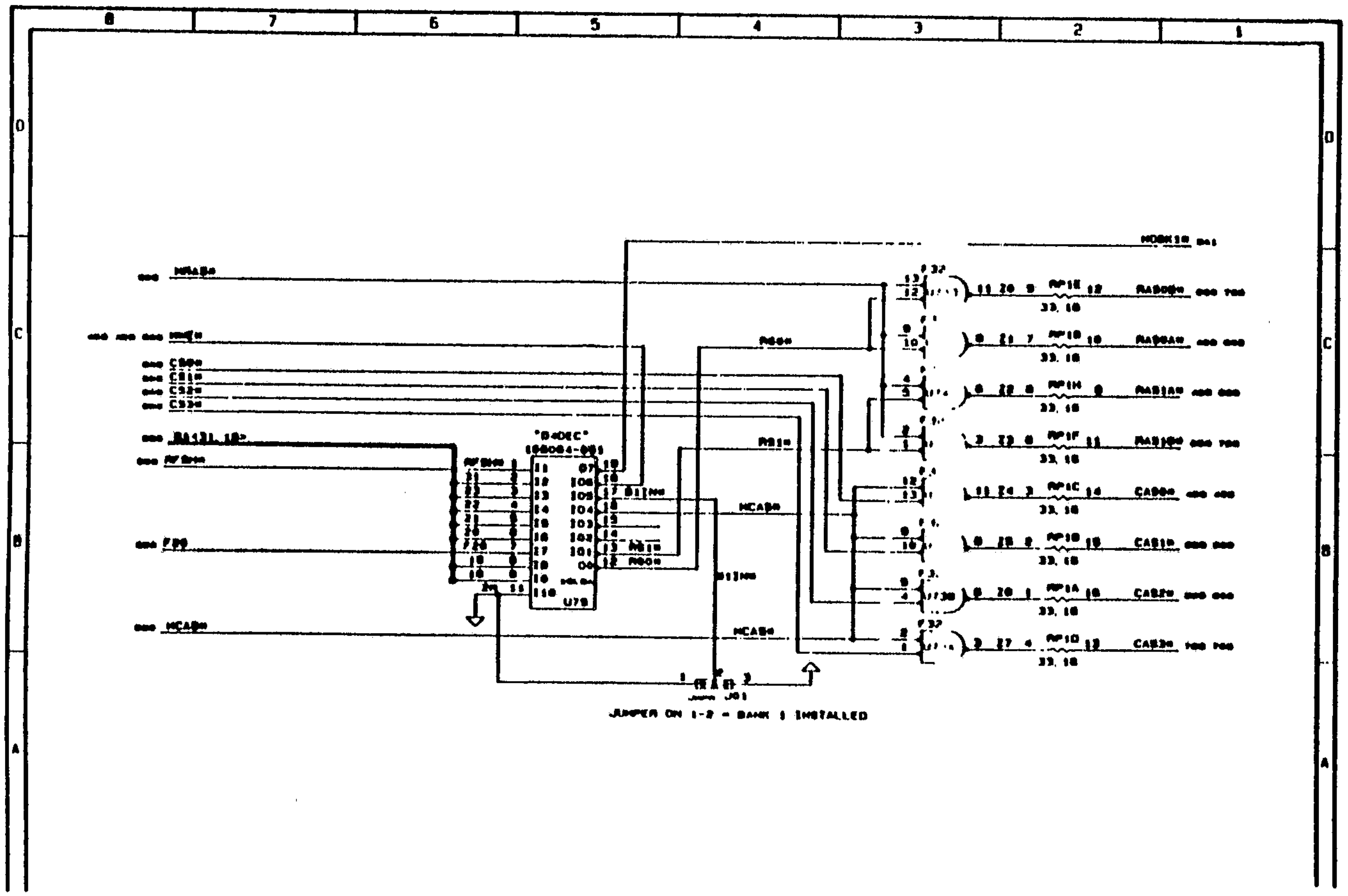


Figure 3-11. 1- to 2- MB 32-Bit Memory Expansion Board (P · 2 of 7)

BAD ORIGINAL

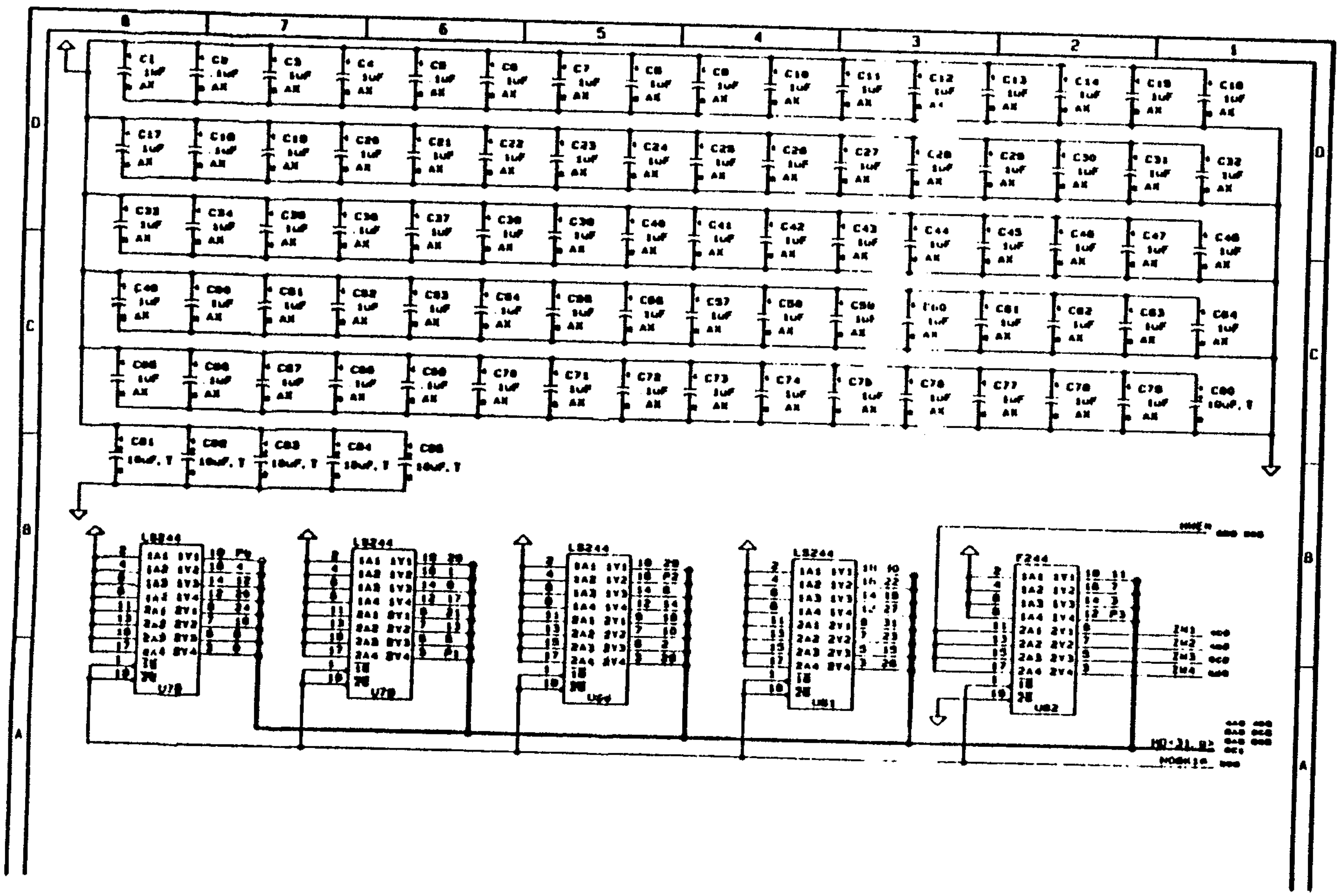

Figure 3-11. 1- to 2- MB 32-Bit Memory Expansion Board (Page 1 of 7)

BAD ORIGINAL

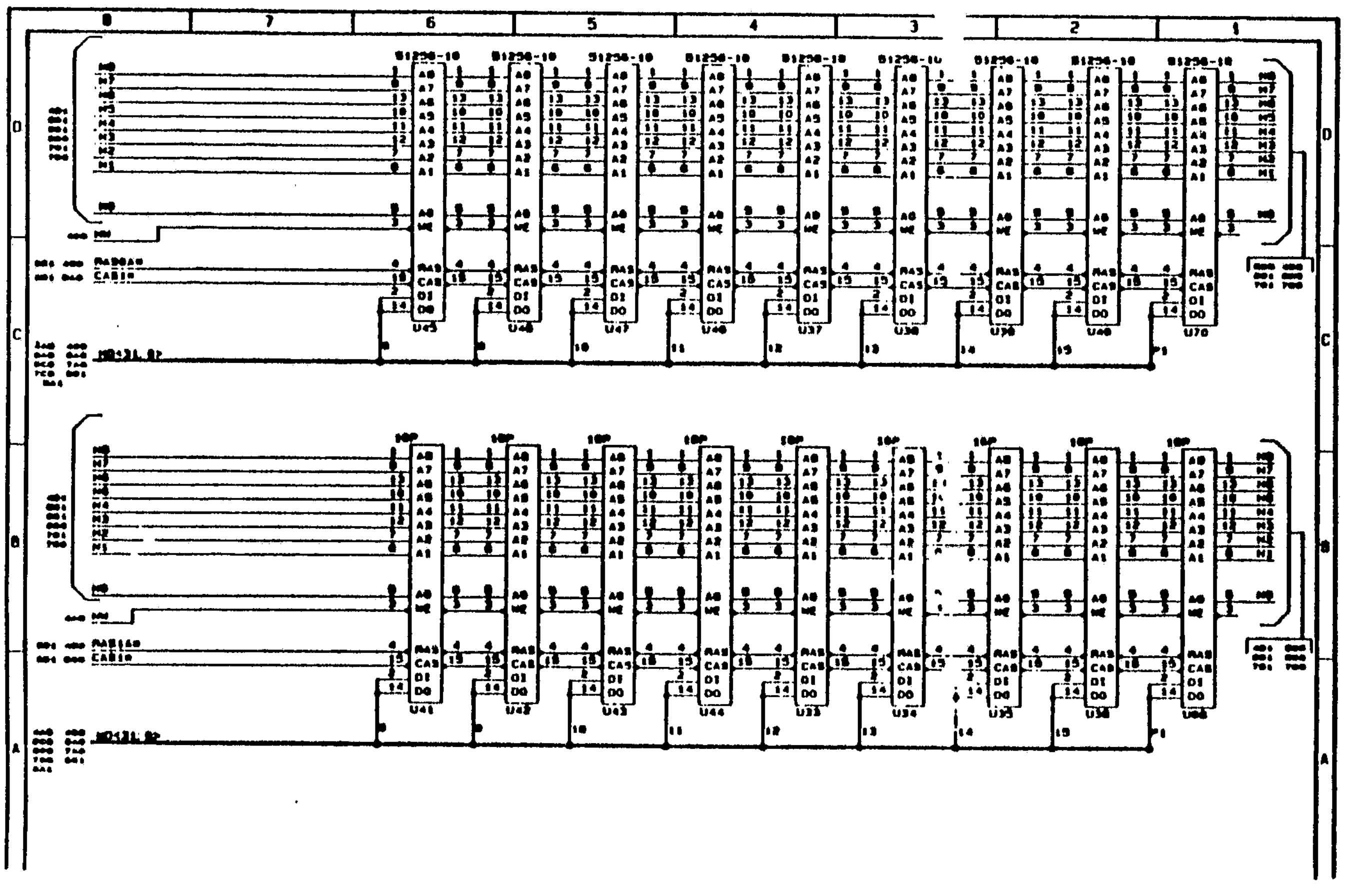

Figure 3-11. 1- to 2- MB 32-Bit Memory Expansion Board (Page 4 of 7)

0 260 568

BAD ORIGINAL

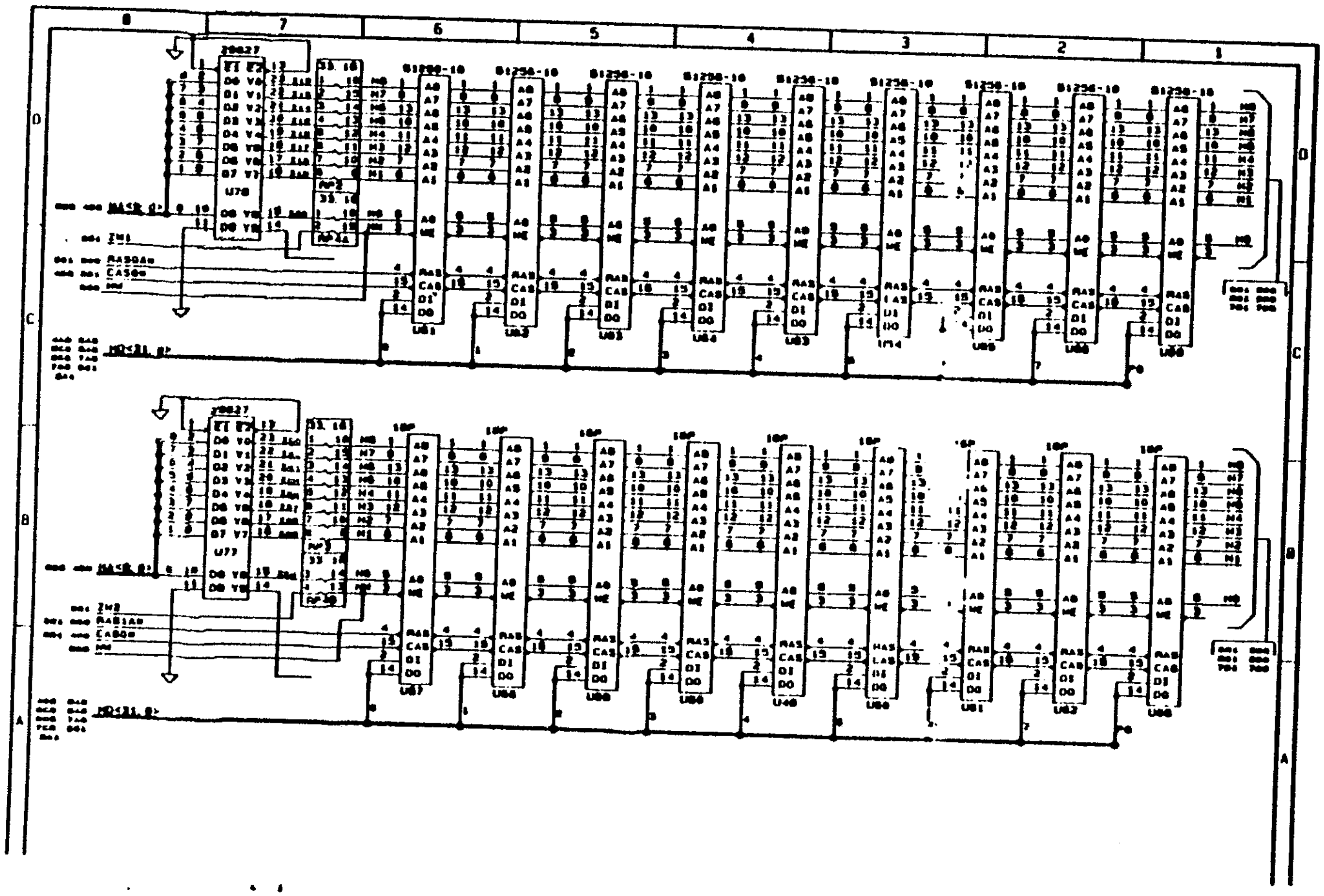

Figure 3-11. 1- to 2- MB 32-Bit Memory Expansion Board (Page 3 of 7)

BAD ORIGINAL

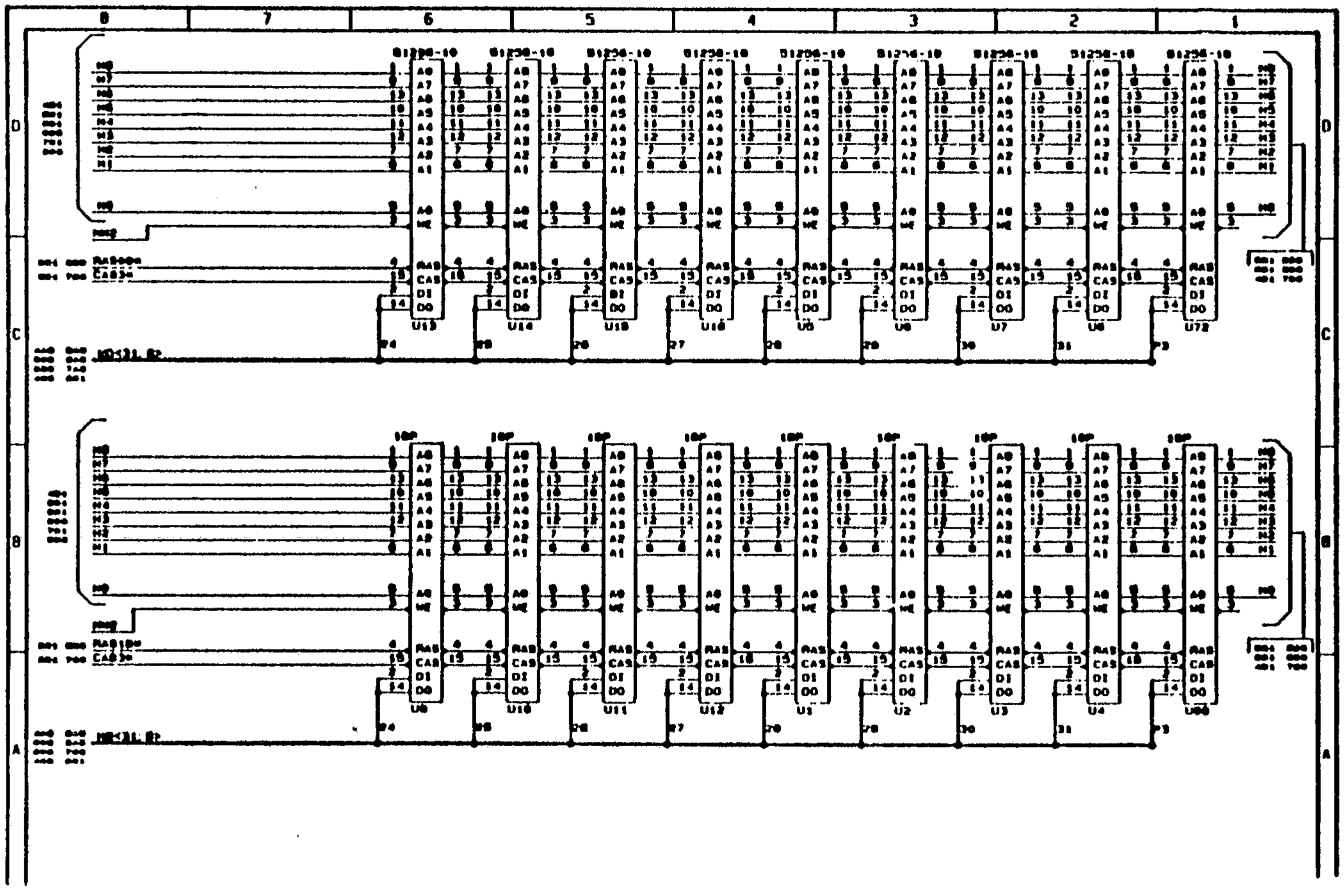

Figure 3-11. 1- to 2- MB 32-Bit Memory Expansion Board (Page 6 of 7)

BAD ORIGINAL

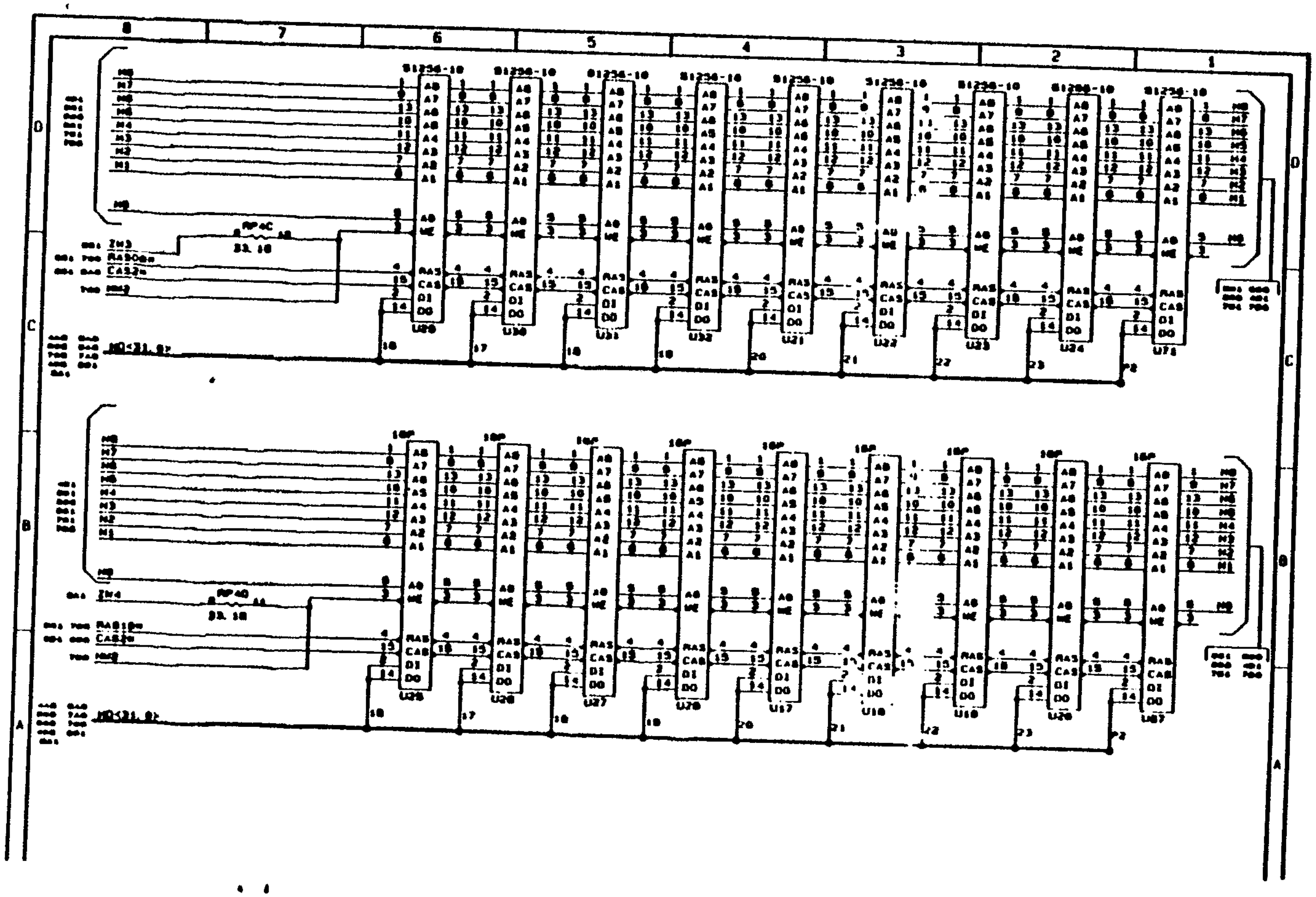

Figure 3-11. 1- to 2- MB 32-Bit Memory Expansion Board (Page 5 of 7)

0 260 568

BAD ORIGINAL

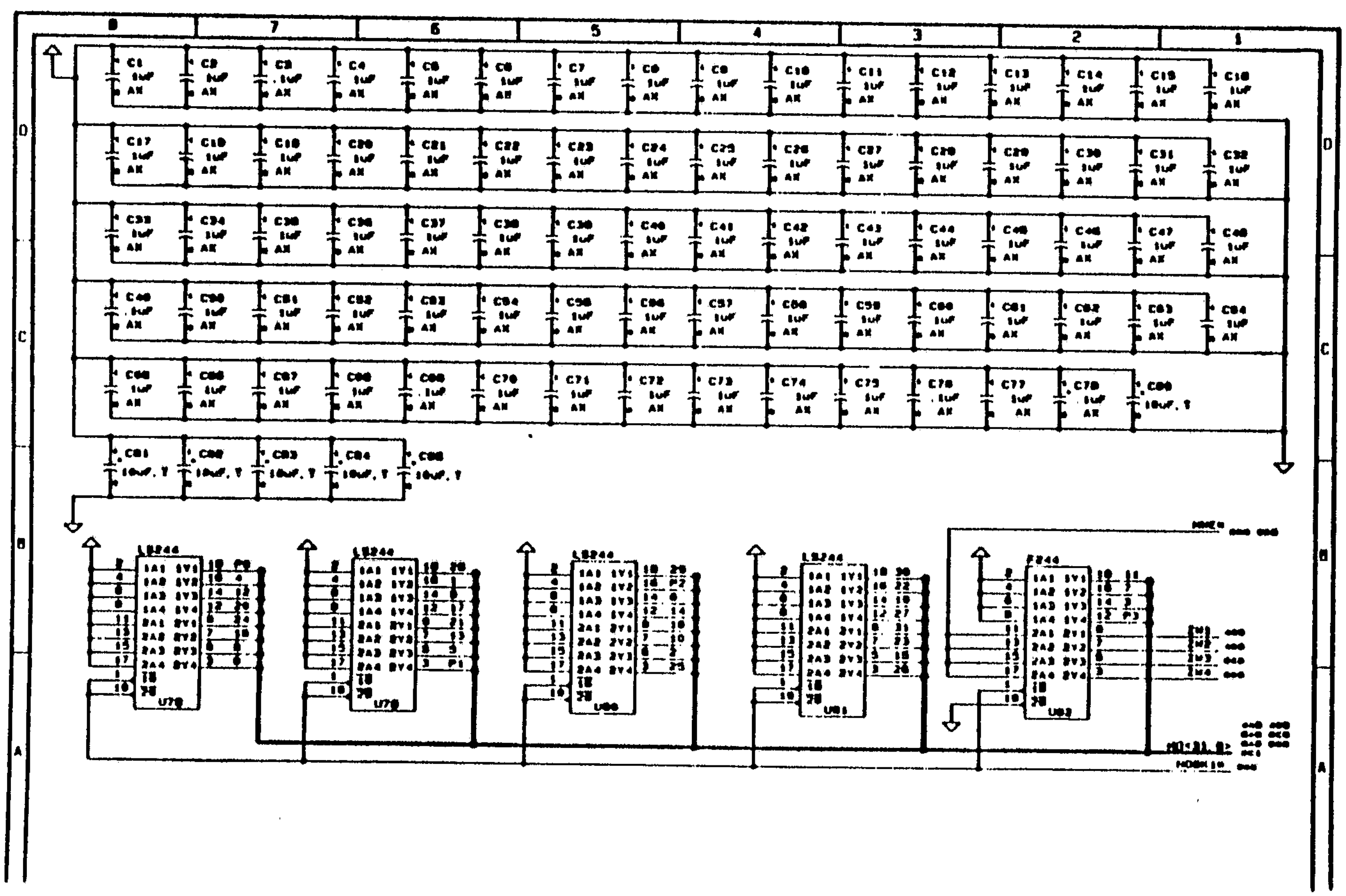

Figure 3-12. 4- to 8- MB 32-Bit Memory Expansion Board (Page 1 of 7)

BAD ORIGINAL

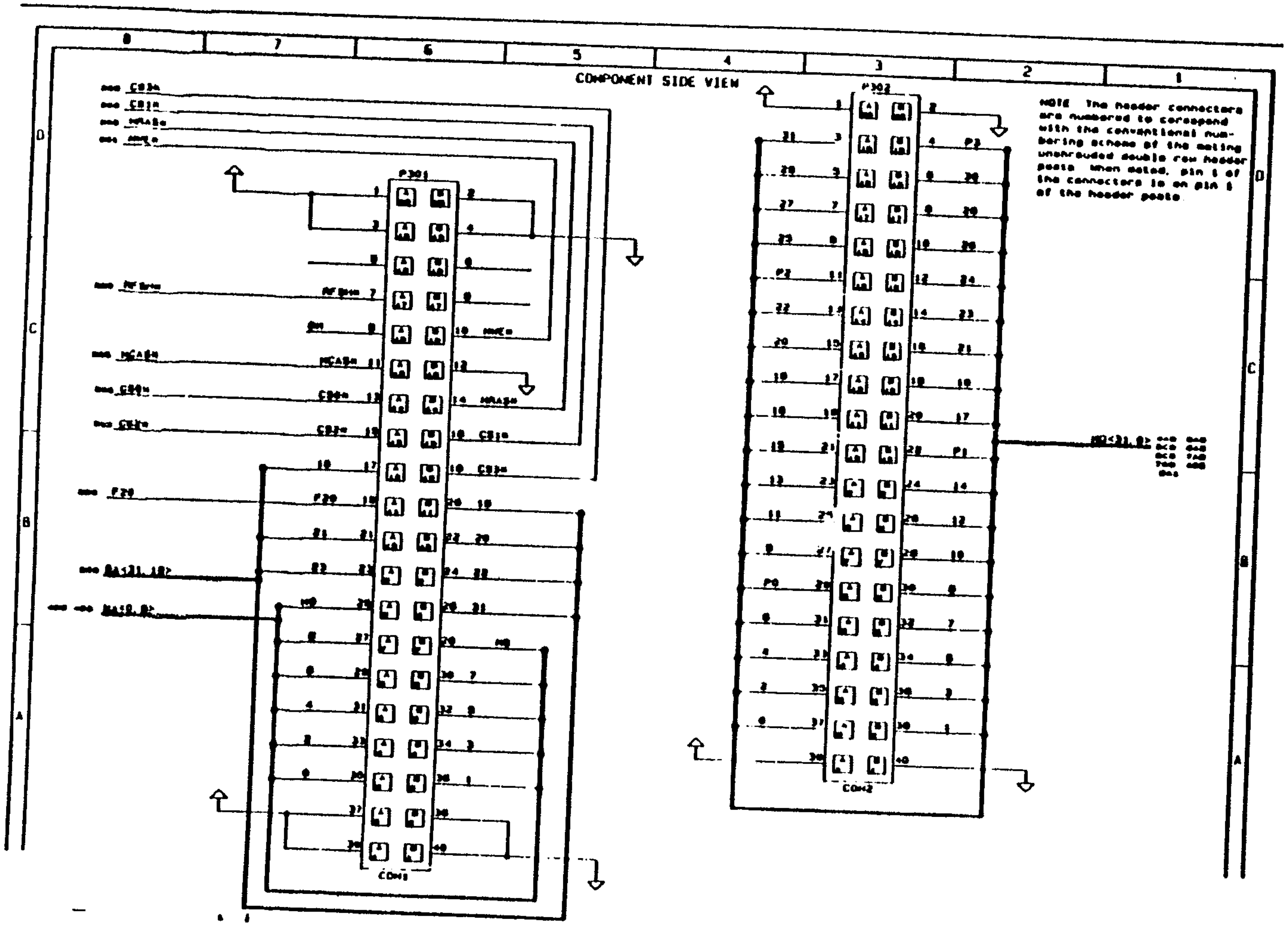


Figure 3-11. 1- to 2- MB 32-Bit Memory Expansion Board (Page 7 of 7)

BAD ORIGINAL

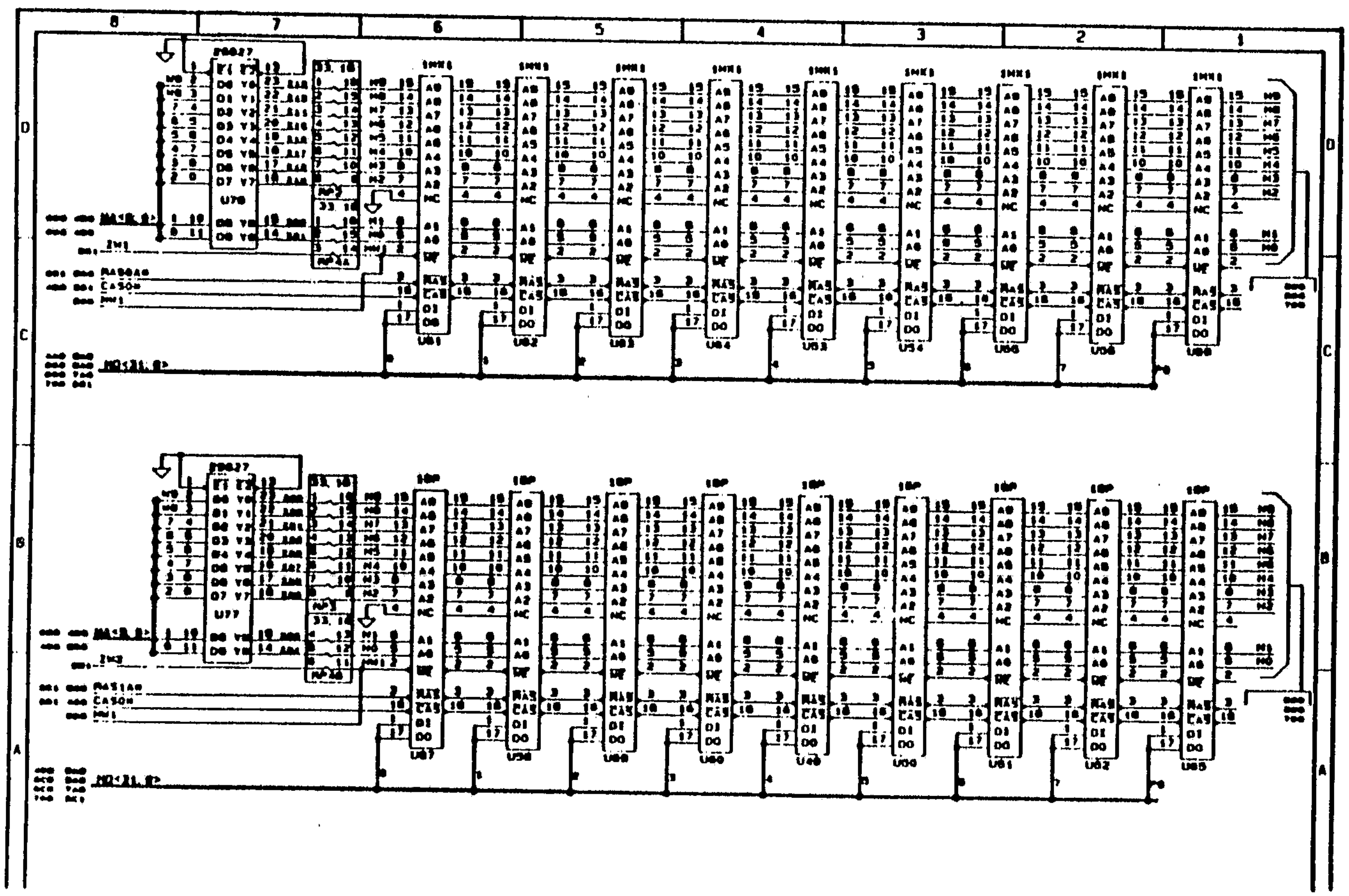

Figure 3-12. 4- to 8- MB 32-Bit Memory Expansion Board (Page 3 of 7)

0 260 568

BAD ORIGINAL

0 260 568



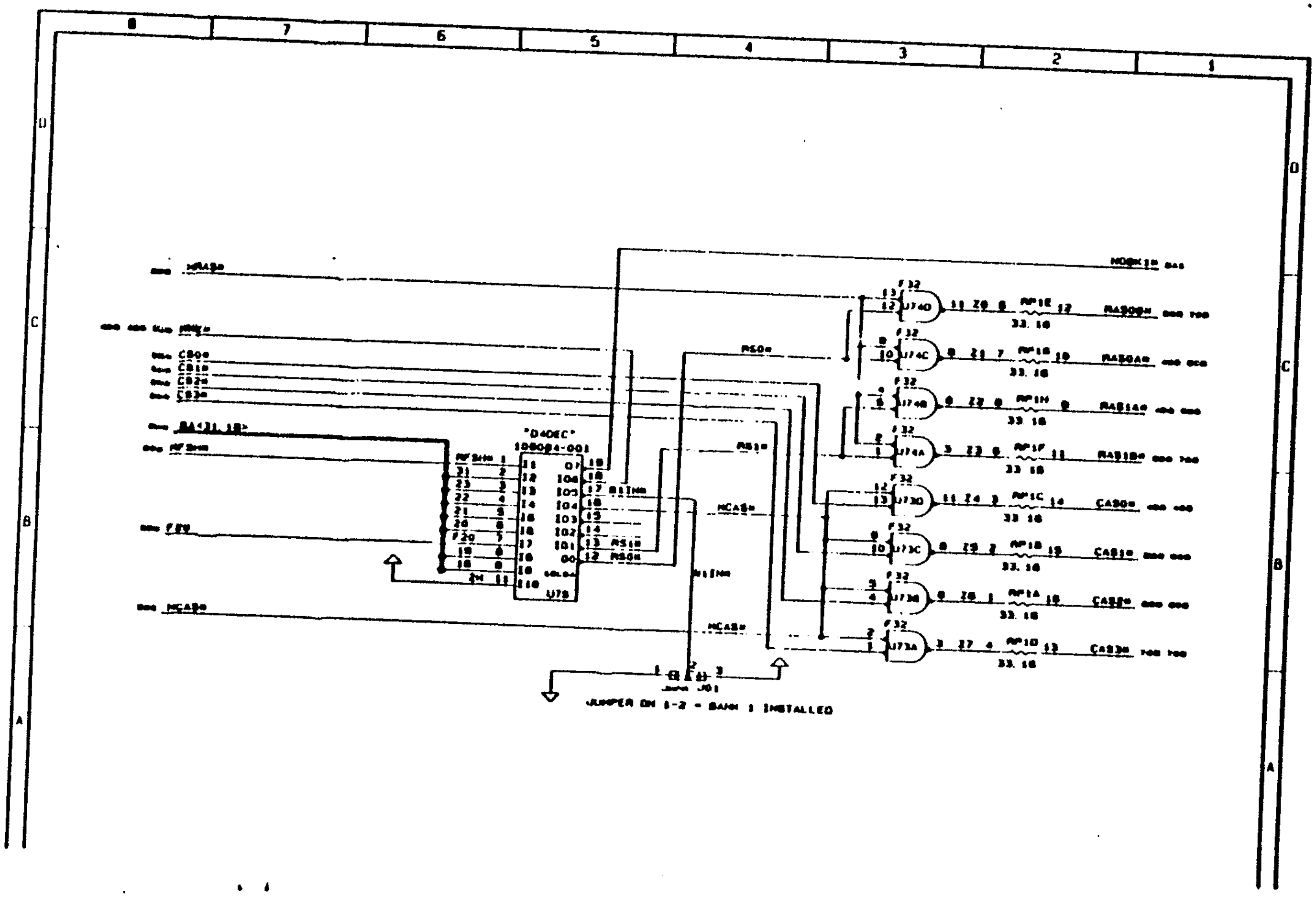


Figure 3-12. 4- to 8- MB 32-Bit Memory Expansion Board (Page 2 of 7)

BAD ORIGINAL

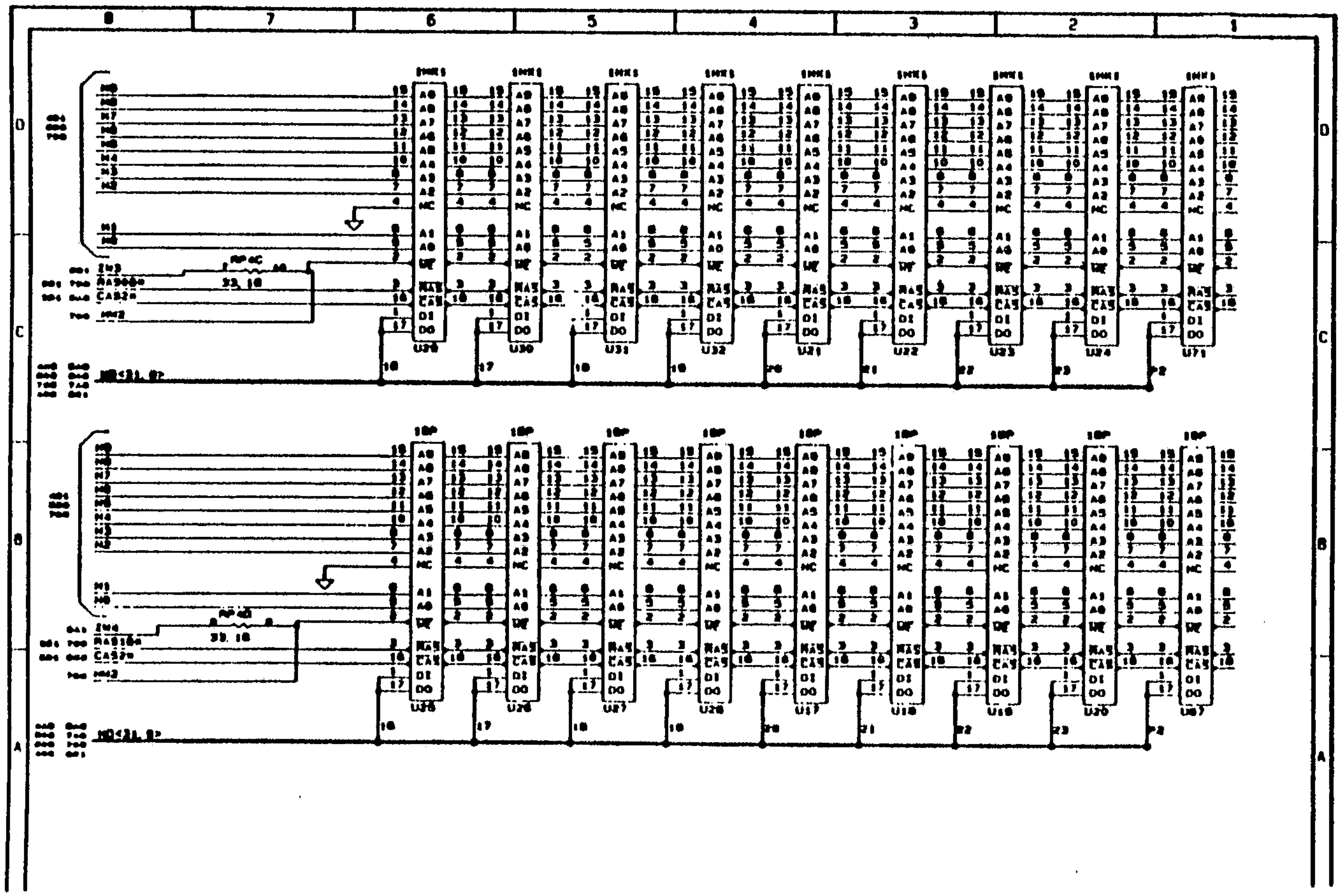

Figure 3-12. 4- to 8- MB 32-Bit Memory Expansion Board (Page 5 of 7)

0 260 568

BAD ORIGINAL

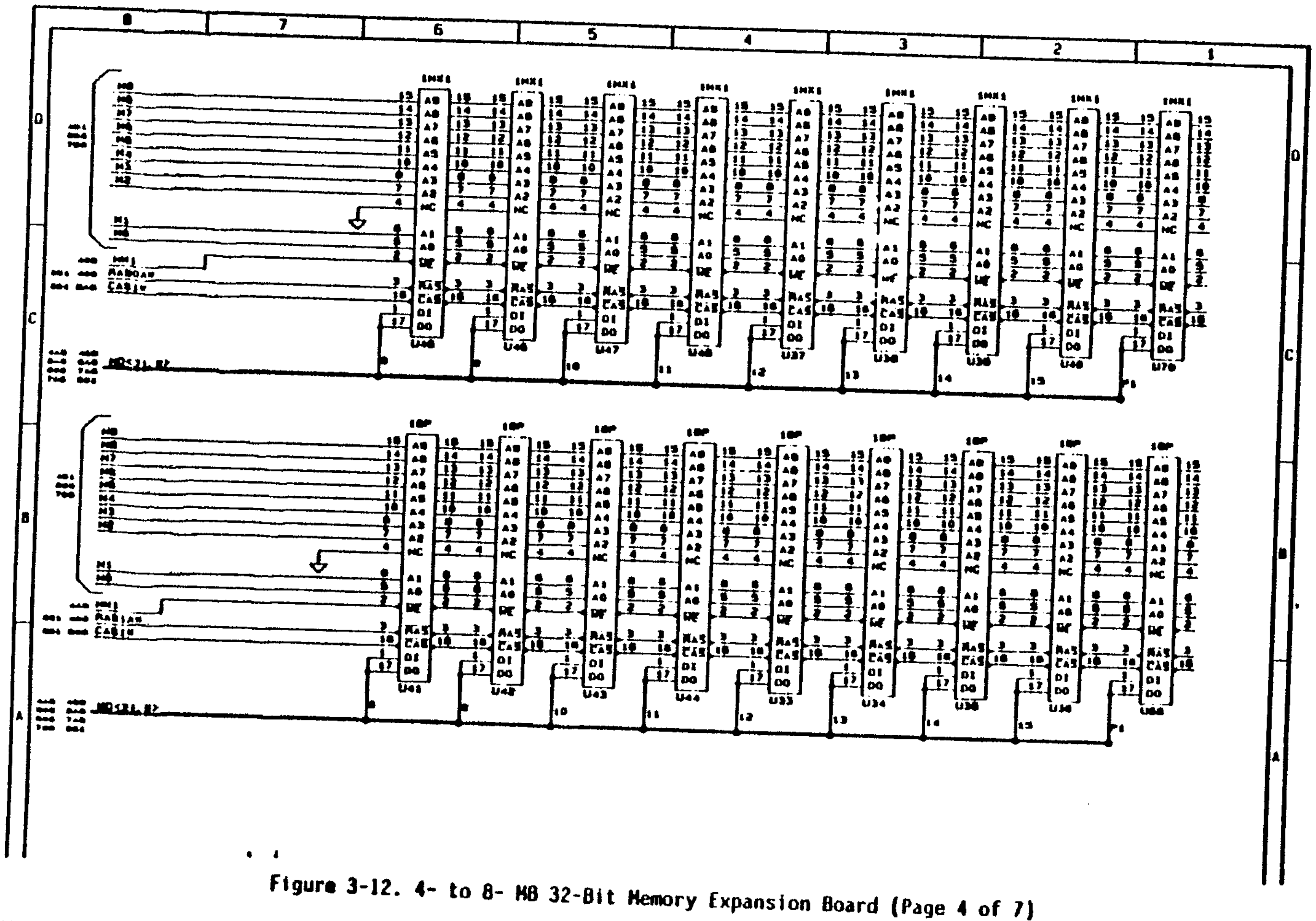

Figure 3-12. 4- to 8- MB 32-Bit Memory Expansion Board (Page 4 of 7)

BAD ORIGINAL

0 260 568

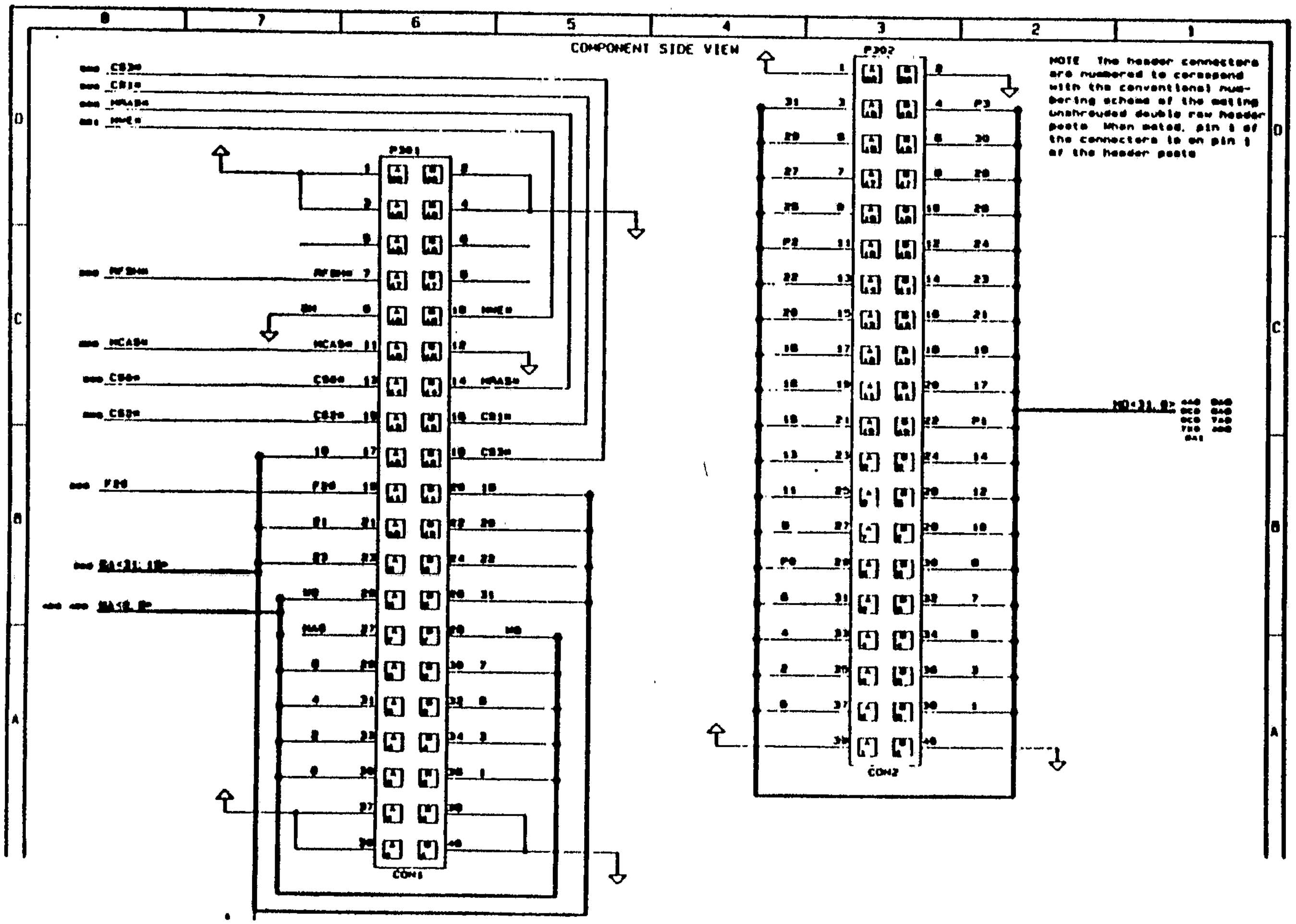


Figure 3-12. 4- to 8- MB 32-Bit Memory Expansion Board (Page 7 of 7)

BAD ORIGINAL

0 260 568

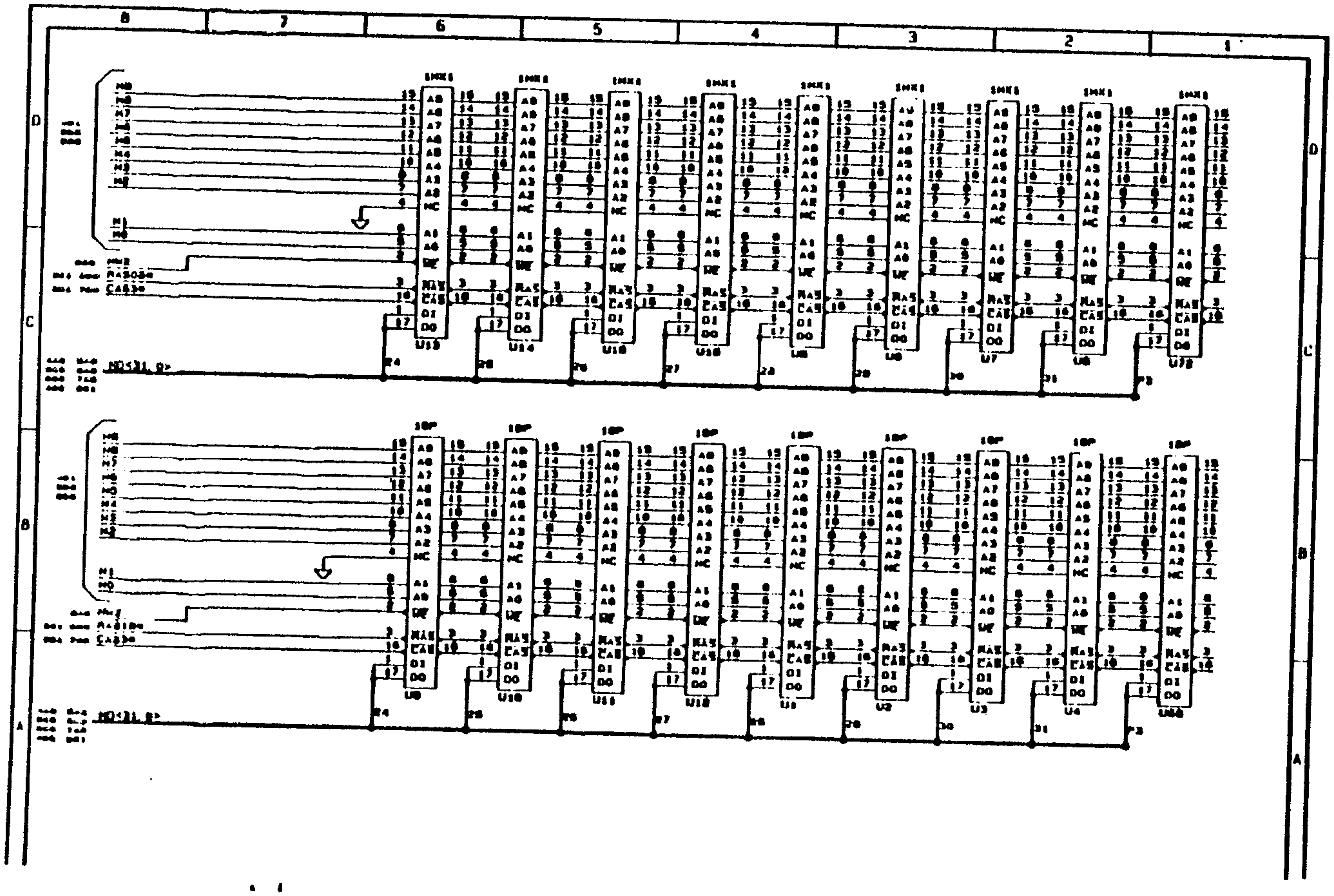

Figure 3-12. 4- to 8- MB 32-Bit Memory Expansion Board (Page 6 of 7)

BAD ORIGINAL

359

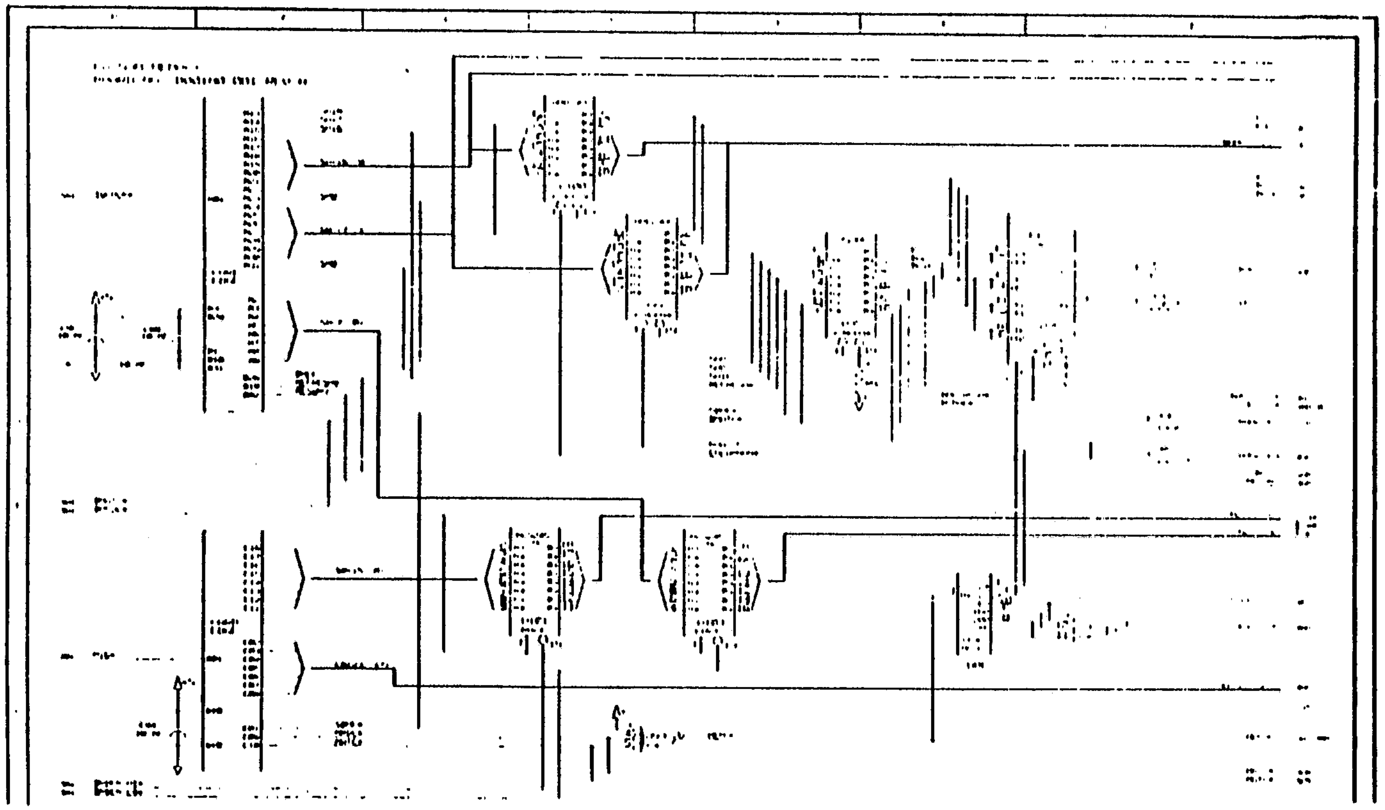

Figure 3-13. .5- to 2- MB 16-Bit Memory Expansion Board (Page 2 of 5)

0 260 568

BAD ORIGINAL

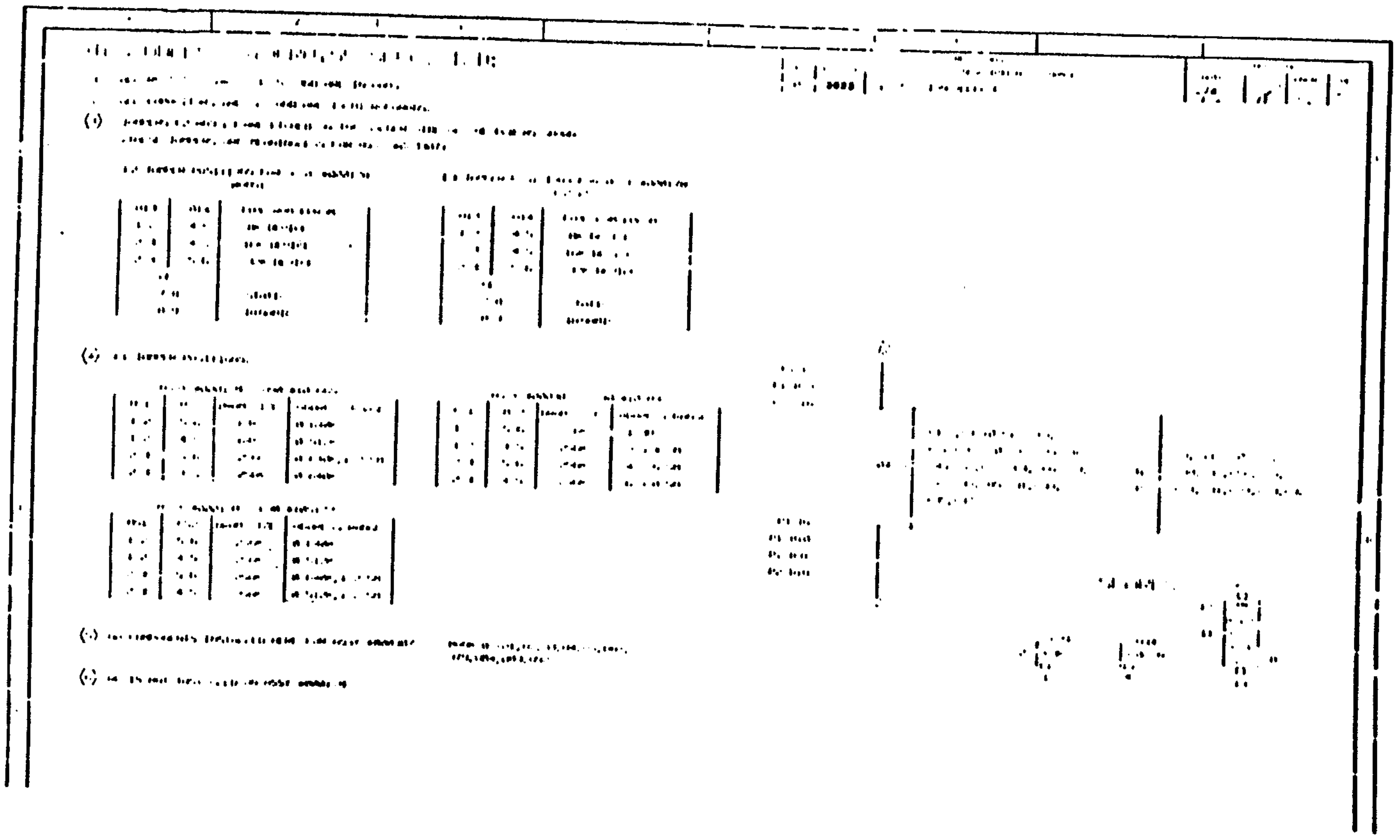

Figure 3-13. .5- to 2- MB 16-Bit Memory Expansion Board (Page 1 of 5)

BAD ORIGINAL

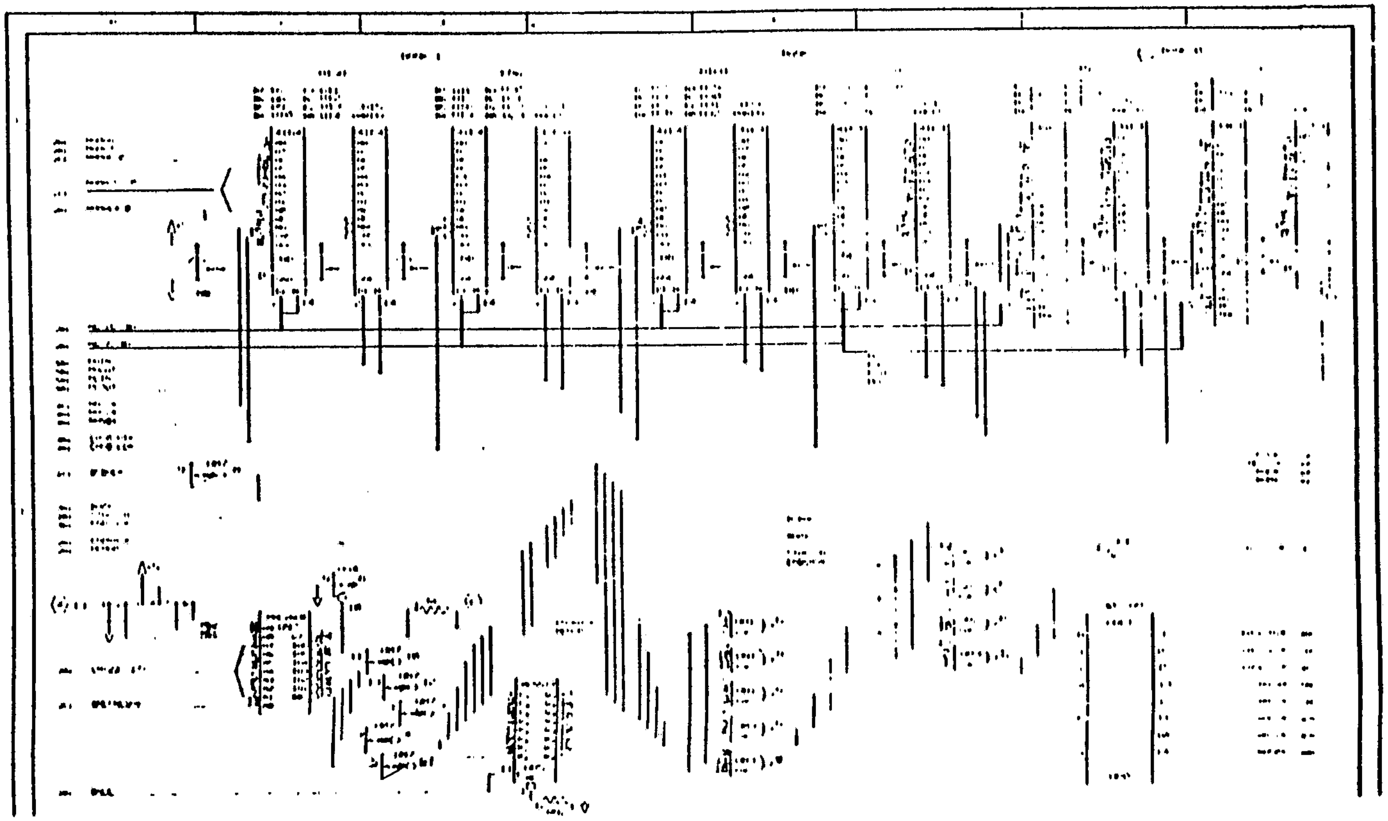

Figure 3-13. .5- to 2- MB 16-Bit Memory Expansion Board (Page 4 of 5)

BAD ORIGINAL

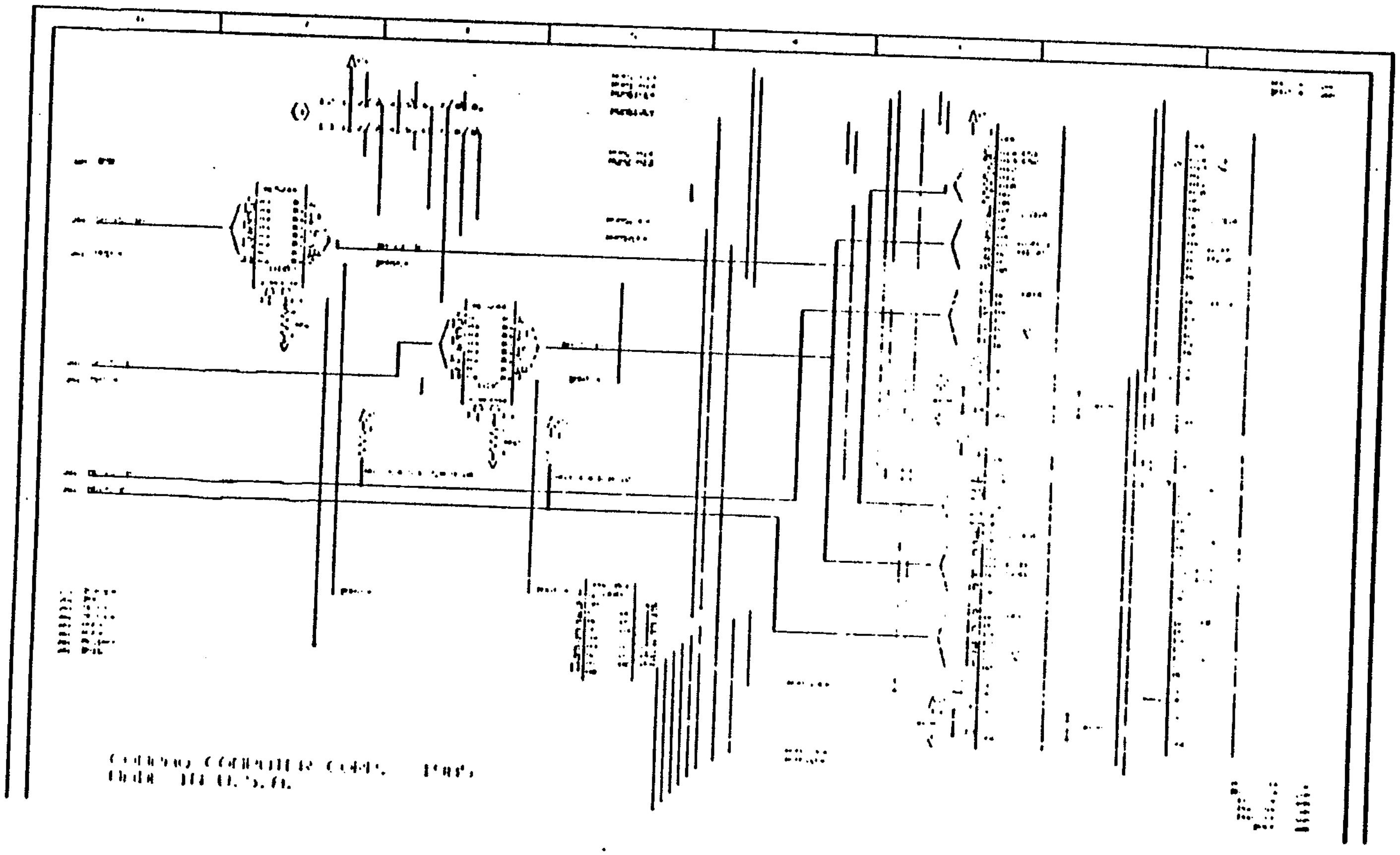

Figure 3-13. .5- to 2- MB 16-Bit Memory Expansion Board (Page 3 of 5)

BAD ORIGINAL

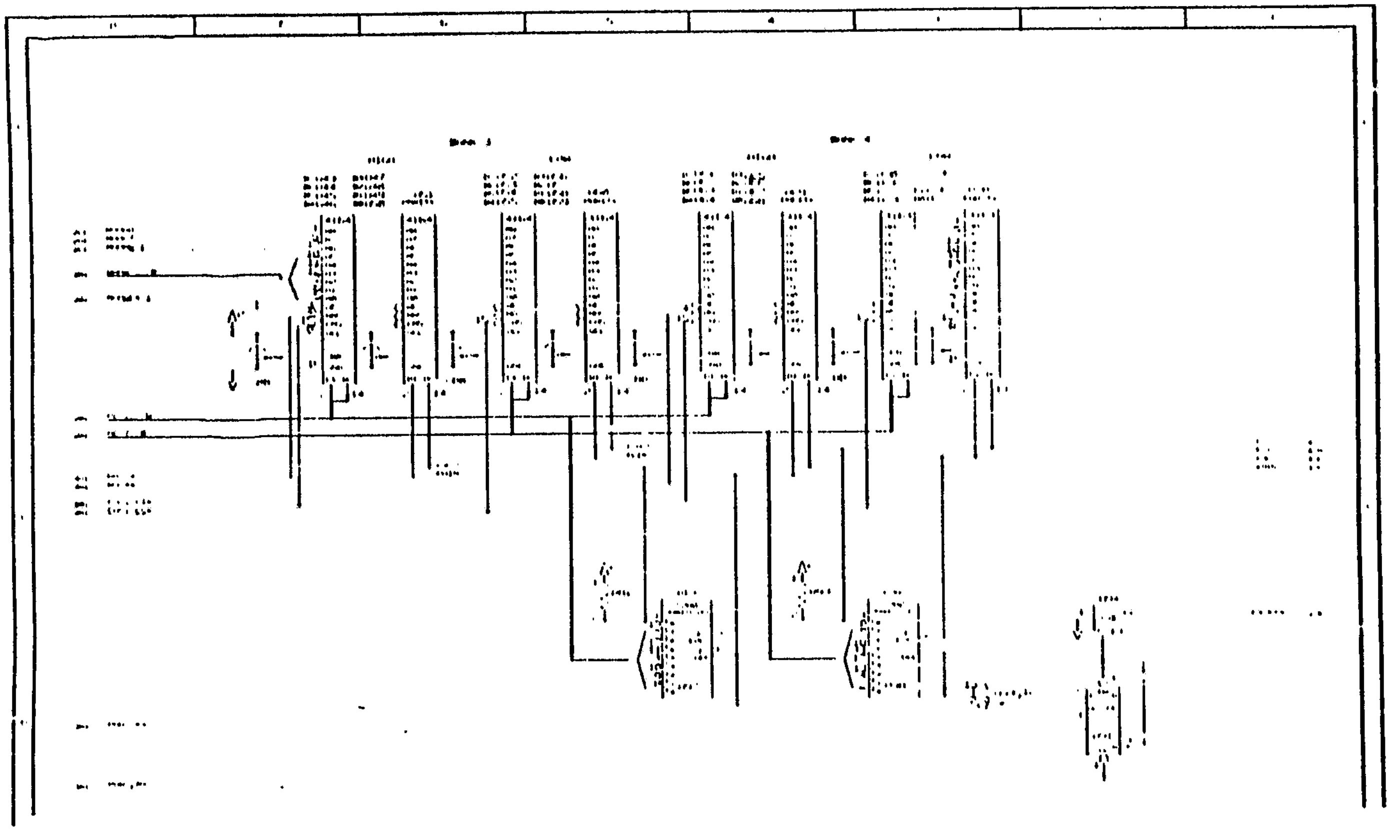

Figure 3-13. .5- to 2- MB 16-Bit Memory Expansion Board (Page 5 of 5)

BAD ORIGINAL

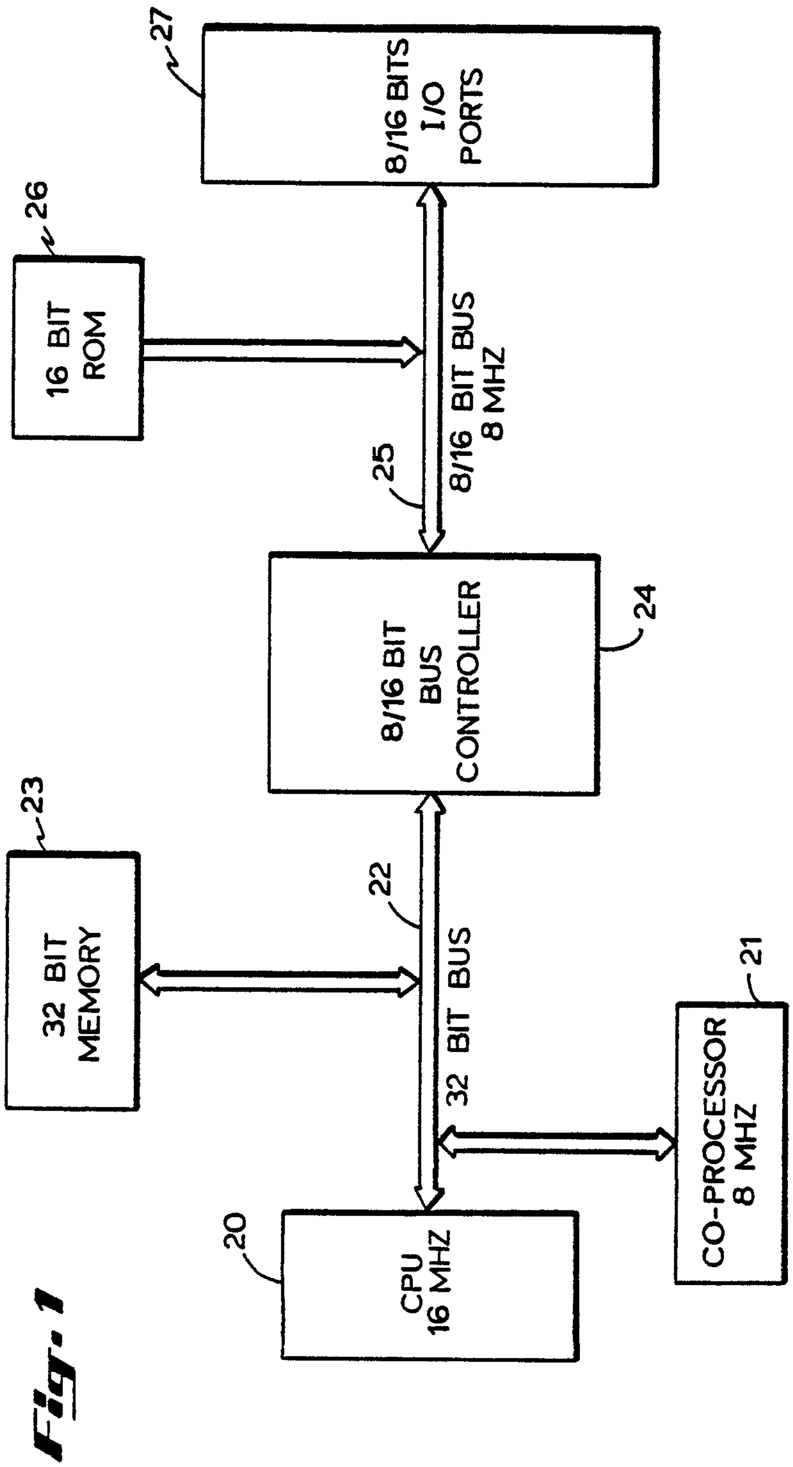


Fig. 1

BAD ORIGINAL

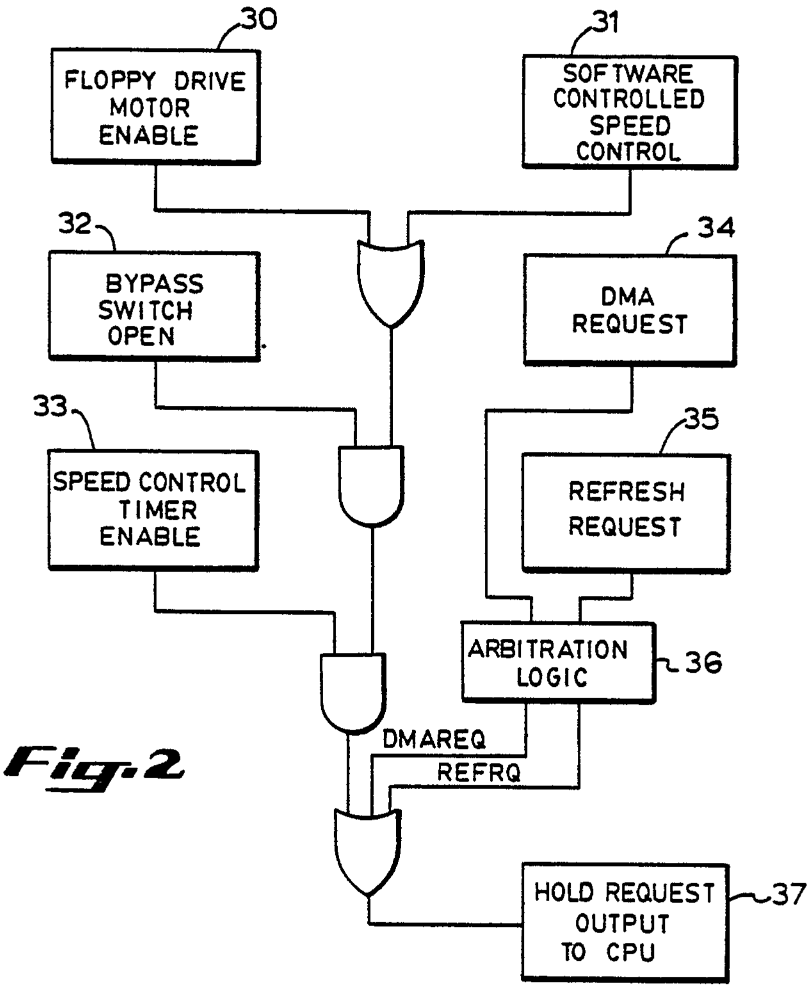
FLOPPY DRIVE MOTOR ENABLE
30
SOFTWARE CONTROLLED SPEED CONTROL
31
BYPASS SWITCH OPEN
32
DMA REQUEST
34
SPEED CONTROL TIMER ENABLE
33
REFRESH REQUEST
35
ARBITRATION LOGIC
36
DMAREQ
REFRQ
HOLD REQUEST OUTPUT TO CPU
37

Fig. 2

Fig. 3

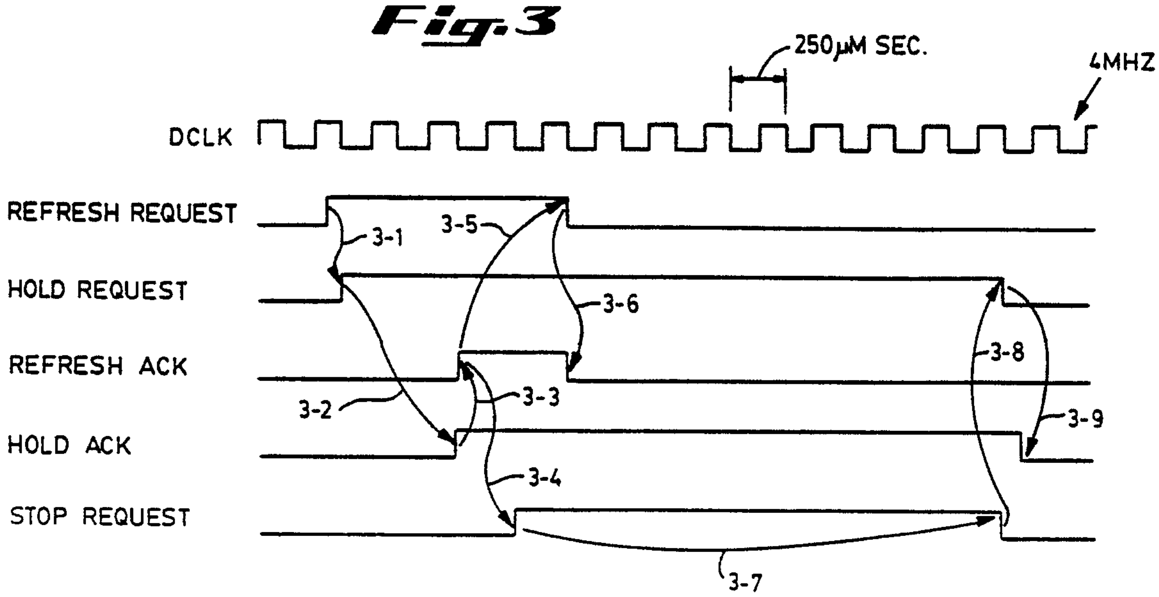
250µM SEC.
4MHZ
DCLK
REFRESH REQUEST
HOLD REQUEST
REFRESH ACK
HOLD ACK
STOP REQUEST
3-1
3-2
3-3
3-4
3-5
3-6
3-7
3-8
3-9

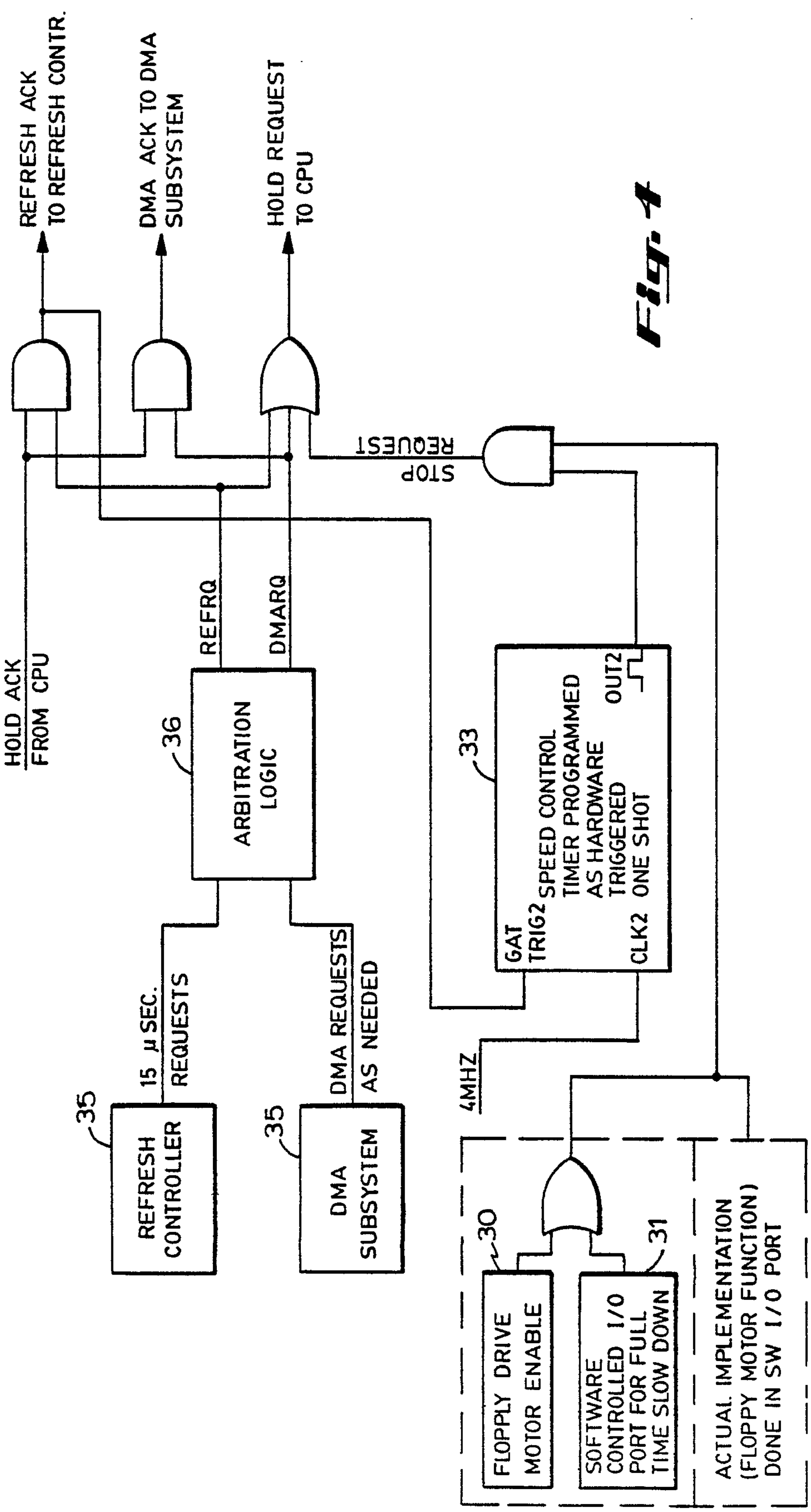
REFRESH ACK TO REFRESH CONTR.
DMA ACK TO DMA SUBSYSTEM
HOLD REQUEST TO CPU
HOLD ACK FROM CPU
STOP REQUEST
REFRQ
DMARQ
36
ARBITRATION LOGIC
33
SPEED CONTROL TIMER PROGRAMMED AS HARDWARE TRIGGERED ONE SHOT
GAT TRIG2
OUT2
CLK2
4MHZ
15 μSEC. REQUESTS
DMA REQUESTS AS NEEDED
35
REFRESH CONTROLLER
35
DMA SUBSYSTEM
30
31
FLOPPY DRIVE MOTOR ENABLE
SOFTWARE CONTROLLED I/O PORT FOR FULL TIME SLOW DOWN
ACTUAL IMPLEMENTATION (FLOPPY MOTOR FUNCTION) DONE IN SW I/O PORT

Fig. 4

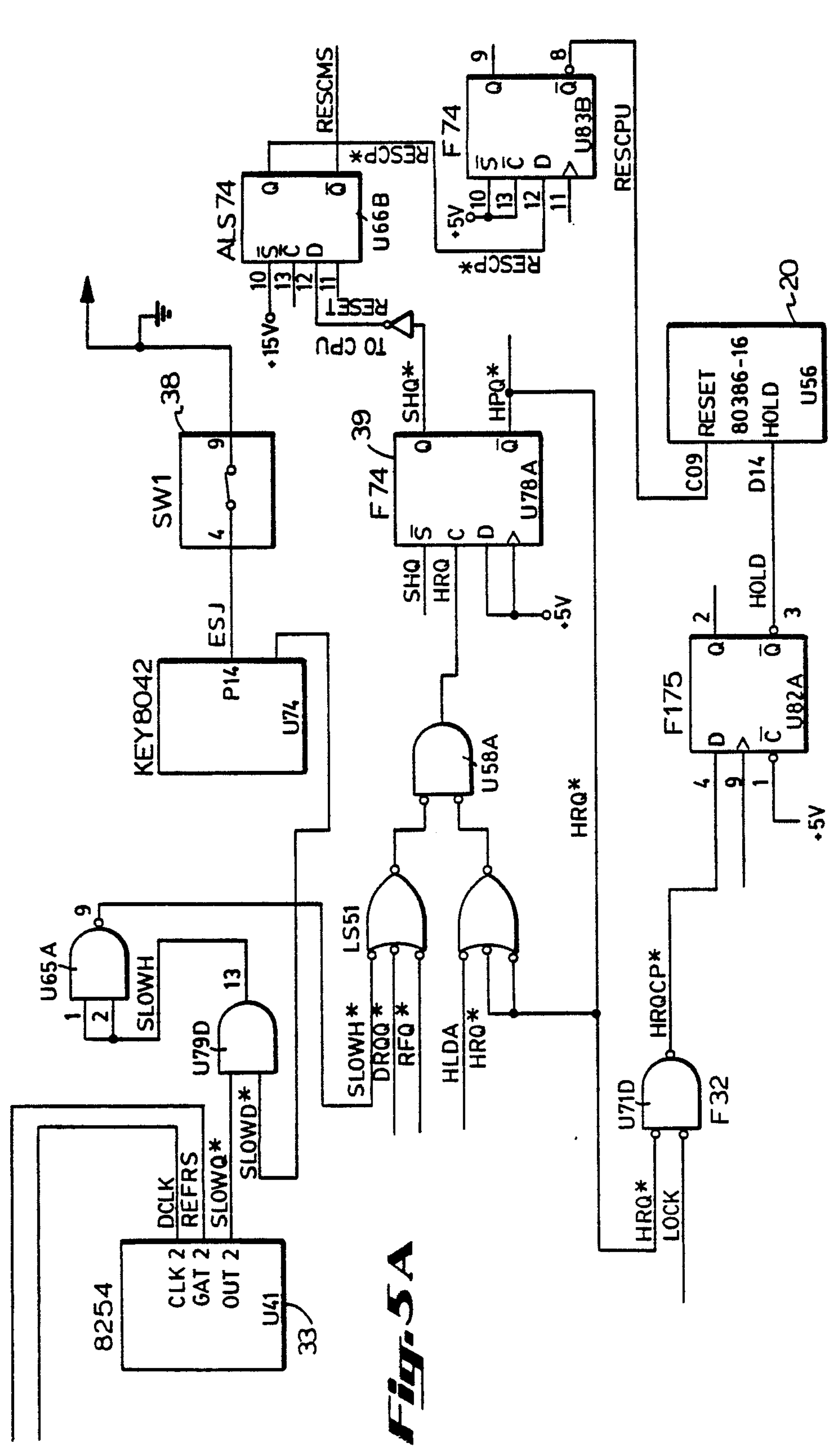

8254
CLK 2
GAT 2
OUT 2
U41
33
DCLK
REFRS
SLOWQ*
SLOWD*
U79D
13
U65A
1
2
9
SLOWH
KEY8042
P14
U74
ESJ
SW1
4
9
38
ALS74
U66B
10
13
12
11
+15V
RESET
TO CPU
RESCMS
RESCP*
RESCPU
F74
U83B
+5V
8
9
SHQ*
HPQ*
39
F74
U78A
SHQ
HRQ
+5V
U58A
LS51
SLOWH*
DRQQ*
RFQ*
HLDA
HRQ*
HRQ*
80386-16
RESET
HOLD
U56
C09
D14
20
HOLD
F175
U82A
2
3
4
9
1
+5V
HRQCP*
U71D
F32
HRQ*
LOCK
REFRS
DCLK


Fig.5A

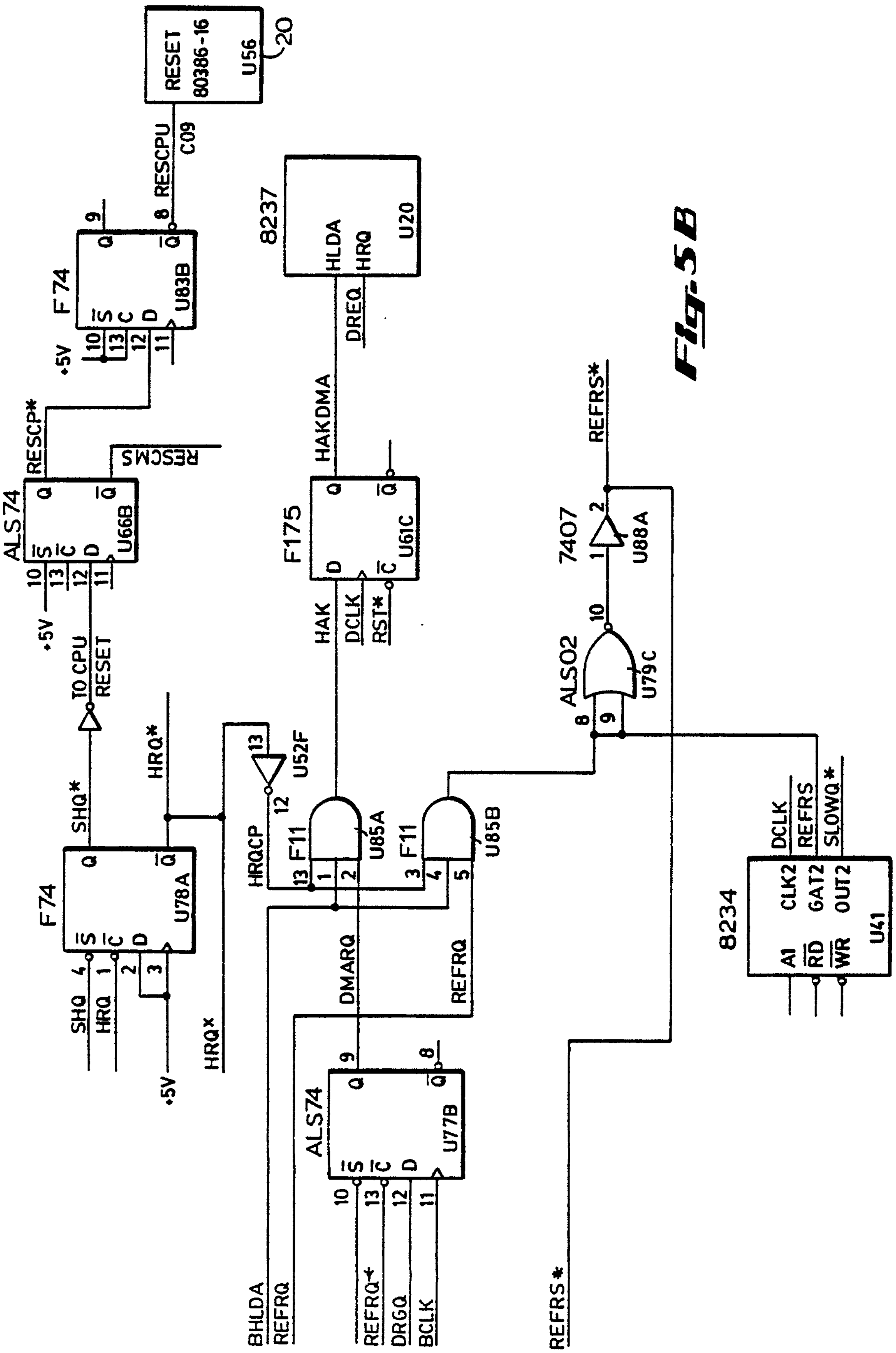

RESET
80386-16
U56
20
RESCPU
C09
F74
U83B
+5V
RESCP*
RESCMS
ALS74
U66B
TO CPU
RESET
8237
HLDA
HRQ
U20
DREQ
HAKDMA
F175
U61C
HAK
DCLK
RST*
REFRS*
7407
U88A
ALS02
U79C
SHQ*
HRQ*
U52F
HRQCP
F11
U85A
U85B
F74
U78A
SHQ
HRQ
HRQ*
DMARQ
REFRQ
8234
A1
RD
WR
CLK2
GAT2
OUT2
U41
DCLK
REFRS
SLOWQ*
ALS74
U77B
BHLDA
REFRQ
REFRQ*
DRGQ
BCLK
REFRS*


Fig-5B

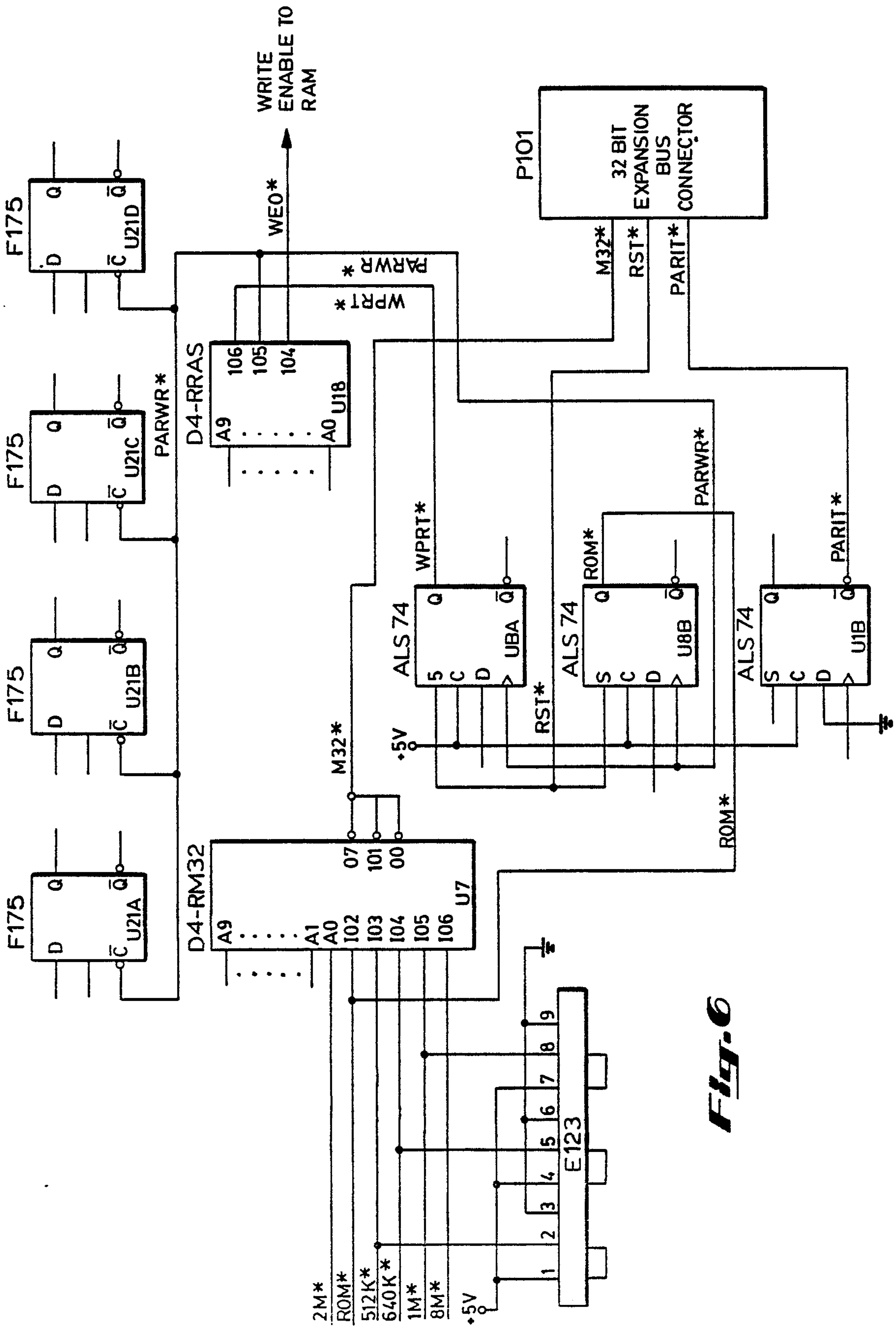
F175
U21A
F175
U21B
F175
U21C
F175
U21D
PARWR*
WE0*
WRITE ENABLE TO RAM
PARWR*
WPRT*
D4-RRAS
U18
D4-RM32
U7
P101
32 BIT EXPANSION BUS CONNECTOR
M32*
RST*
PARIT*
ALS 74
UBA
ALS 74
U8B
ALS 74
U1B
WPRT*
ROM*
PARWR*
PARIT*
+5V
RST*
M32*
ROM*
E123
2M*
ROM*
512K*
640K*
1M*
8M*
+5V

Fig. 6

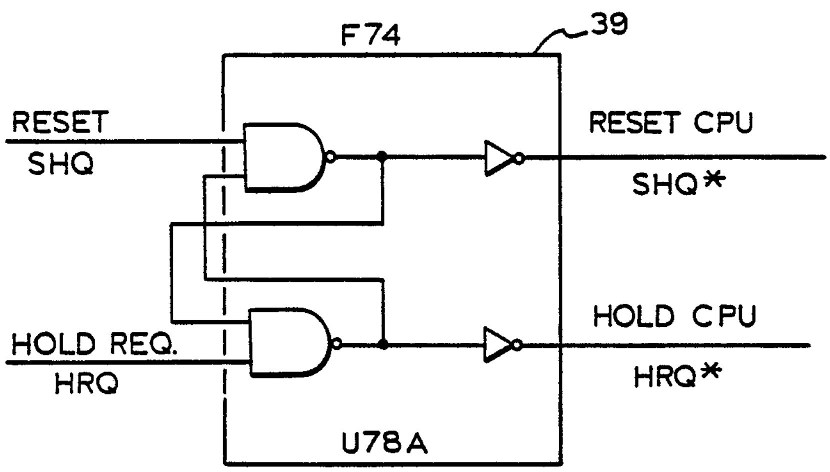


Fig. 7

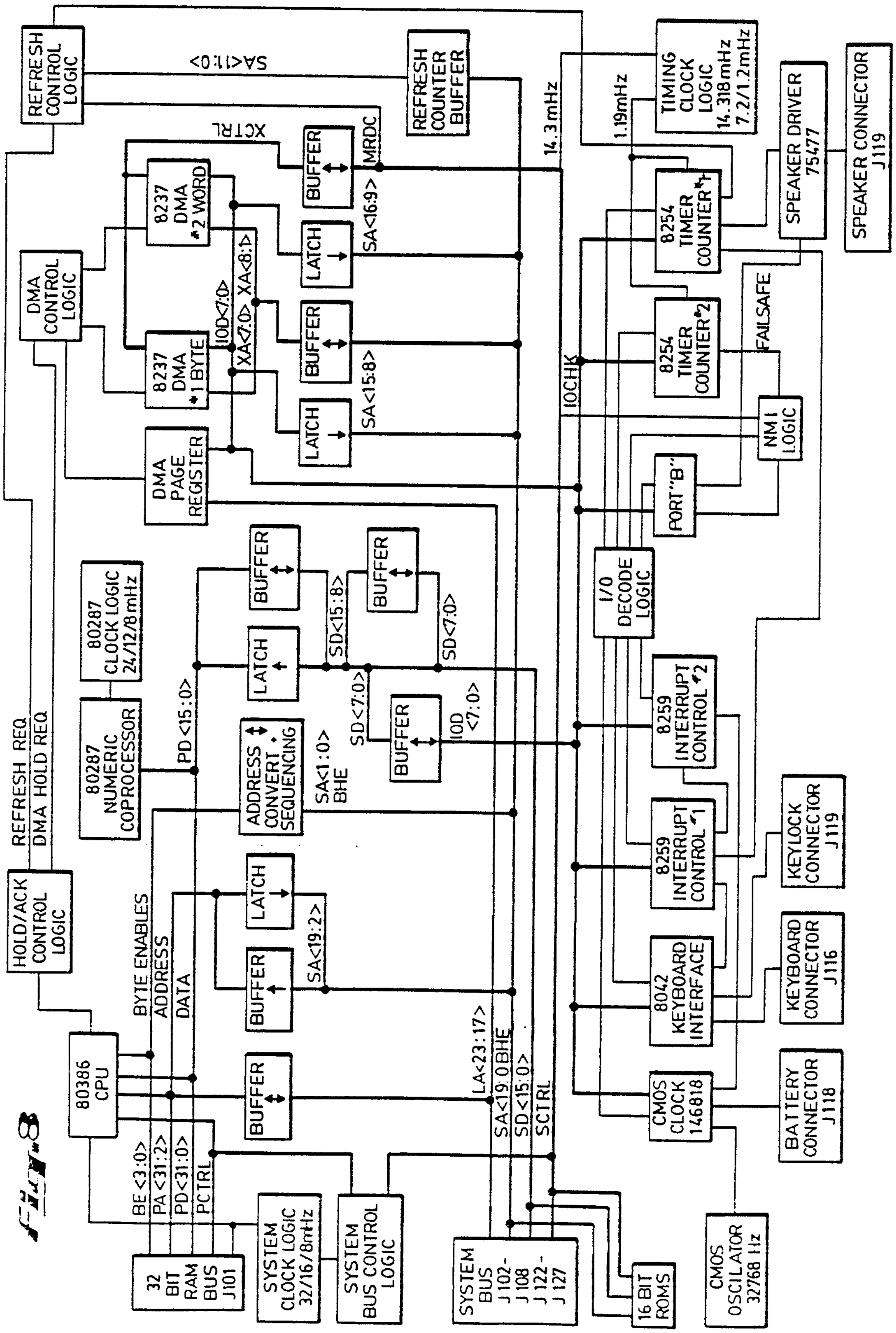
REFRESH CONTROL LOGIC
SA<11:0>
REFRESH COUNTER BUFFER
XCTRL
MRDC
BUFFER
8237 DMA #2 WORD
LATCH
SA<16:9>
DMA CONTROL LOGIC
IOD<7:0>
XA<8:1>
XA<7:0>
8237 DMA #1 BYTE
SA<15:8>
DMA PAGE REGISTER
14.3mHz
1.19mHz
TIMING CLOCK LOGIC 14.318mHz 7.2/1.2mHz
SPEAKER DRIVER 75477
SPEAKER CONNECTOR J119
8254 TIMER COUNTER #1
8254 TIMER COUNTER #2
FAILSAFE
IOCHK
NMI LOGIC
PORT "B"
I/O DECODE LOGIC
8259 INTERRUPT CONTROL #2
8259 INTERRUPT CONTROL #1
KEYLOCK CONNECTOR J119
8042 KEYBOARD INTERFACE
KEYBOARD CONNECTOR J116
CMOS CLOCK 146818
BATTERY CONNECTOR J118
CMOS OSCILATOR 32768 Hz
16 BIT ROMS
80287 CLOCK LOGIC 24/12/8mHz
80287 NUMERIC COPROCESSOR
PD<15:0>
SD<15:8>
SD<7:0>
IOD <7:0>
ADDRESS CONVERT + SEQUENCING
SA<1:0> BHE
REFRESH REQ
DMA HOLD REQ
HOLD/ACK CONTROL LOGIC
BYTE ENABLES
ADDRESS
DATA
SA<19:2>
80386 CPU
LA<23:17>
SA<19:0>BHE
SD<15:0>
SCTRL
BE<3:0>
PA<31:2>
PD<31:0>
PCTRL
32 BIT RAM BUS J101
SYSTEM CLOCK LOGIC 32/16/8mHz
SYSTEM BUS CONTROL LOGIC
SYSTEM BUS J102-J108 J122-J127

Fig. 8